# EUROPEAN PATENT APPLICATION

(11) **EP 4 691 704 A1**
(43) Date of publication of application: **11.02.2026**
(21) Application number: 23930676.4
(22) Date of filing: 31.03.2023
(51) Int. Cl.: B25J 9/22

(54) **COMPUTING DEVICE, ROBOT CONTROL METHOD, PROCESSING METHOD, DISPLAY METHOD, COMPUTER PROGRAM, RECORDING MEDIUM, PATH GENERATION METHOD, AND CONVEYANCE METHOD**

(71) Applicant: NIKON CORPORATION, Tokyo 140-8601 (JP)
(72) Inventor: WAKIMOTO, Kenta, Tokyo 140-8601 (JP)
(74) Representative: Hoffmann Eitle
(86) International application number: PCT/JP2023/013635
(87) International publication number: WO 2024/202042

(57) **Abstract**

A computing apparatus includes: a signal generation unit that generates a display signal for displaying, on a display apparatus, a movement trajectory of a movement point moving due to a driving of a robot in a case where the robot is driven, without moving the robot; and an output unit that outputs the display signal generated by the signal generation unit to the display apparatus.

## Description

### Technical Field

The present invention relates to a technical field of a computing apparatus, a display method, a path generation method, a computer program, a recording medium, a robot control method, and a transporting method, which are related to a robot, for example.

### Background Art

A Patent literature 1 discloses one example of a robot that performs a predetermined process on an object. In a technical field of the robot, it is required to properly perform a presetting so that the robot performs the predetermined process on the object.

### Citation List

### Patent Literature

Patent Literature 1: US2013/0311154A1

### Summary of Invention

A first aspect provides a computing apparatus including: a signal generation unit that generates a display signal for displaying, on a display apparatus, a movement trajectory of a movement point moving due to a driving of a robot in a case where the robot is driven, without moving the robot; and an output unit that outputs the display signal generated by the signal generation unit to the display apparatus.

A second aspect provides a computing apparatus that generates a movement path of a movement point moving due to a driving of a robot to which an end effector for performing a process on a target object is attached, wherein the computing apparatus generates a second movement path of the movement point moving due to the driving of the robot to which a second end effector is attached as the end effector based on a first movement path of the movement point moving due to the driving of the robot to which a first end effector is attached as the end effector and a three-dimensional model of the second end effector that is different from the first end effector.

A third aspect provides a computing apparatus that is used to set a process target position of an object by an end effector that performs a process on an object, wherein the computing apparatus includes: a signal generation unit that generates a display signal for a display on a display apparatus so that at least one of an object model, which is a three-dimensional model of the object, and an end effector model, which is a three-dimensional model of the end effector, moves based on instruction information related to an instruction from a user on a display screen including the object model and the end effector model in order to set the process target position; and an output unit that outputs the display signal generated by the signal generation unit to the display apparatus, and the signal generation unit generates the display signal for the display on the display apparatus so that at least one of the object model and the end effector model moves along at least both a first axis and a second axis that intersects the first axis based on the instruction information.

A fourth aspect provides a computing apparatus that is used for a calibration of an imaging apparatus attached to a robot, wherein the computing apparatus includes: a signal generation unit that generates a display signal for displaying, on a display apparatus, information related to an accuracy of the calibration of the imaging apparatus that is generated based on image data generated by the imaging apparatus attached to the robot imaging a reference member; and an output unit that outputs the display signal generated by the signal generation unit to the display apparatus.

A fifth aspect provides a computing apparatus that generates a movement path of a movement point moving due to a driving of a robot to which an end effector, which performs a process on a target object, and an imaging apparatus are attached, wherein the computing apparatus: generates a first partial path that is a part of the movement path based on a first end effector model, which is obtained by expanding at least a part of a three-dimensional model of the end effector, and a first surrounding object model, which is a three-dimensional model of a first surrounding object positioned around the robot; and generates a second partial path that is at least another part of the movement path based on a second end effector model, in which an expansion amount of the three-dimensional model of the end effector is different from that of the first end effector model, a second surrounding object model, which is a three-dimensional model of a second surrounding object positioned around the robot, and an imaged result by the imaging apparatus.

A sixth aspect provides a computing apparatus that generates a movement path of a movement point moving due to a driving of a robot to which an end effector, which is configured to hold a target object, is attached, wherein the computing apparatus generates at least a part of the movement path based on an end effector model, which is based on a three-dimensional model of the end effector, a target object model, which is based on a three-dimensional model of the target object held by the end effector, and a surrounding object model, which is a three-dimensional model of a surrounding object positioned around the robot.

A seventh aspect provides a computing apparatus that controls a robot to which an end effector, which performs a process on a target object, and an imaging apparatus are attached, wherein the computing apparatus: generates a partial model, which is a three-dimensional model of at least a part of the target object, from an original model, which is a three-dimensional model of the target object; calculates at least one of a position and a pose of the target object by performing a matching processing based on the partial model and target object image data that is acquired by the imaging apparatus imaging the target object; and generates the control signal based on a calculated result of at least one of the position and the pose of the target object.

An eighth aspect provides a display method including: generating a display signal for displaying, on a display apparatus, a movement trajectory of a movement point moving due to a driving of a robot in a case where the robot is driven, without moving the robot; and outputting the generated display signal to the display apparatus.

A ninth aspect provides a computer program that allows a computer to execute the display method provided by the eighth aspect.

A tenth aspect provides a recording medium recording thereon the computer program provided by the ninth aspect.

A eleventh aspect provides a path generation method that generates a movement path of a movement point moving due to a driving of a robot to which an end effector for performing a process on a target object is attached, wherein the path generation method includes generating a second movement path of the movement point moving due to the driving of the robot to which a second end effector is attached as the end effector based on a first movement path of the movement point moving due to the driving of the robot to which a first end effector is attached as the end effector and a three-dimensional model of the second end effector that is different from the first end effector.

A twelfth aspect provides a computer program that allows a computer to execute the display method provided by the eleventh aspect.

A thirteenth aspect provides a recording medium recording thereon the computer program provided by the twelfth aspect.

A fourteenth aspect provides a display method that is used to set a process target position of an object by an end effector that performs a process on an object, wherein the display method includes: generating a display signal for a display on a display apparatus so that at least one of an object model, which is a three-dimensional model of the object, and an end effector model, which is a three-dimensional model of the end effector, moves based on instruction information related to an instruction from a user on a display screen including the object model and the end effector model in order to set the process target position; and outputting the generated display signal to the display apparatus, and the generating includes generating the display signal for the display on the display apparatus so that at least one of the object model and the end effector model moves along at least both a first axis and a second axis that intersects the first axis based on the instruction information.

A fifteenth aspect provides a computer program that allows a computer to execute the display method provided by the fourteenth aspect.

A sixteenth aspect provides a recording medium recording thereon the computer program provided by the fifteenth aspect.

A seventeenth aspect provides a display method that is used for a calibration of an imaging apparatus attached to a robot, wherein the display method includes: generating a display signal for displaying, on a display apparatus, information related to an accuracy of the calibration of the imaging apparatus that is generated based on image data generated by the imaging apparatus attached to the robot imaging a reference member; and outputting the generated display signal to the display apparatus.

A eighteenth aspect provides a computer program that allows a computer to execute the display method provided by the seventeenth aspect.

A nineteenth aspect provides a recording medium recording thereon the computer program provided by the eighteenth aspect.

A twentieth aspect provides a path generation method that generates a movement path of a movement point moving due to a driving of a robot to which an end effector, which performs a process on a target object, and an imaging apparatus are attached, wherein the path generation method includes: generating a first partial path that is a part of the movement path based on a first end effector model, which is obtained by expanding at least a part of a three-dimensional model of the end effector, and a first surrounding object model, which is a three-dimensional model of a first surrounding object positioned around the robot; and generating a second partial path that is at least another part of the movement path based on a second end effector model, in which an expansion amount of the three-dimensional model of the end effector is different from that of the first end effector model, a second surrounding object model, which is a three-dimensional model of a second surrounding object positioned around the robot, and an imaged result by the imaging apparatus.

A twenty-first aspect provides a computer program that allows a computer to execute the display method provided by the twentieth aspect.

A twenty-second aspect provides a recording medium recording thereon the computer program provided by the twenty-first aspect.

A twenty-third aspect provides a robot control method that controls the robot based on at least a part of the movement path generated by the computing apparatus provided by the sixth aspect.

A twenty-fourth aspect provides a transportation method that transports the target object held by the end effector based on at least a part of the movement path generated by the computing apparatus provided by the sixth aspect.

A twenty-fifth aspect provides robot control method that controls a robot to which an end effector, which performs a process on a target object, and an imaging apparatus are attached, wherein the robot control method includes: generating a partial model, which is a three-dimensional model of at least a part of the target object, from an original model, which is a three-dimensional model of the target object; calculating at least one of a position and a pose of the target object by performing a matching processing based on the partial model and target object image data that is acquired by the imaging apparatus imaging the target object; and generating the control signal based on a calculated result of at least one of the position and the pose of the target object.

A twenty-sixth aspect provides a computer program that allows a computer to execute the display method provided by the twenty-fifth aspect.

A twenty-seventh aspect provides a recording medium recording thereon the computer program provided by the twenty-sixth aspect.

An operation and another advantage of the present invention will be apparent from an example embodiment described below.

### Brief Description of Drawings

[FIG. 1] FIG. 1 is a block diagram that illustrates a configuration of a robot system in a present example embodiment.
[FIG. 2] FIG. 2 is a side view that illustrates an exterior appearance of a robot in the present example embodiment.
[FIG. 3] Each of FIG. 3(a) to FIG. 3(d) is a side view that illustrates one example of an operation of the robot for holding a workpiece, which is contained in a container box that is one example of a placing apparatus, by using an end effector.
[FIG. 4] Each of FIG. 4(a) to FIG. 4(d) is a side view that illustrates one example of an operation of the robot for releasing the workpiece held by the end effector to place the workpiece held by the end effector on a pallet that is one example of the placing apparatus.
[FIG. 5] FIG. 5 is a block diagram that illustrates a configuration of a control apparatus in the present example embodiment.
[FIG. 6] FIG. 6 is a flowchart that illustrates a flow of a robot control processing.
[FIG. 7] FIG. 7 is a perspective view that illustrates one example of a calibration member.
[FIG. 8] FIG. 8 is a flowchart that illustrates a flow of an accuracy information display processing for displaying calibration accuracy information on a display apparatus.
[FIG. 9] FIG. 9 illustrates a first calibration image data group and a second calibration image data group.
[FIG. 10] FIG. 10 illustrates an example of a display of a calibration index value.
[FIG. 11] FIG. 11 illustrates a process position / pose setting screen.
[FIG. 12] FIG. 11 illustrates the process position / pose setting screen.
[FIG. 13] FIG. 13 illustrates a moving end effector model.
[FIG. 14] FIG. 14 illustrates the moving end effector model.
[FIG. 15] FIG. 15 illustrates the moving end effector model.
[FIG. 16] Each of FIG. 16(a) and FIG. 16(b) illustrates a relationship between the end effector model and an object model.
[FIG. 17] FIG. 17 illustrates the relationship between the end effector model and the object model.
[FIG. 18] FIG. 18 illustrates the relationship between the end effector model and the object model.
[FIG. 19] FIG. 19 is a flowchart that illustrates a flow of a path generation processing.
[FIG. 20] FIG. 20 illustrates a path generation screen.
[FIG. 21] FIG. 21 illustrates the path generation screen.
[FIG. 22] FIG. 22 illustrates the path generation screen.
[FIG. 23] FIG. 23 illustrates the path generation screen.
[FIG. 24] Each of FIG. 24(a) to FIG. 24(c) illustrates a movement path of a tool center point.
[FIG. 25] Each of FIG. 25(a) to FIG. 25(b) illustrates the movement path of the tool center point.
[FIG. 26] Each of FIG. 26(a) and FIG. 26(b) is a cross-sectional view that illustrates an expansion end effector model.
[FIG. 27] Each of FIG. 27(a) and FIG. 27(b) is a cross-sectional view that illustrates a positional relationship between the expansion end effector model and a surrounding object model together with a positional relationship between the end effector and a surrounding object.
[FIG. 28] Each of FIG. 28(a) to FIG. 28(c) is a cross-sectional view that illustrates the positional relationship between the expansion end effector model and the surrounding object model.
[FIG. 29] Each of FIG. 29(a) to FIG. 29(d) is a cross-sectional view that illustrates the expansion end effector model.
[FIG. 30] FIG. 30 illustrates an example of a display of a result of a matching processing.
[FIG. 31] FIG. 31(a) is a cross-sectional view that illustrates the movement path of the tool center point in a case where the end effector performs a holding process, FIG. 31(b) is a cross-sectional view that illustrates the end effector model and a held object model that are used to generate the movement path of the tool center point in a case where the end effector holds the object, and FIG. 31(c) is a cross-sectional view that illustrates the end effector model that is used to generate the movement path of the tool center point in a case where the end effector does not hold the object.

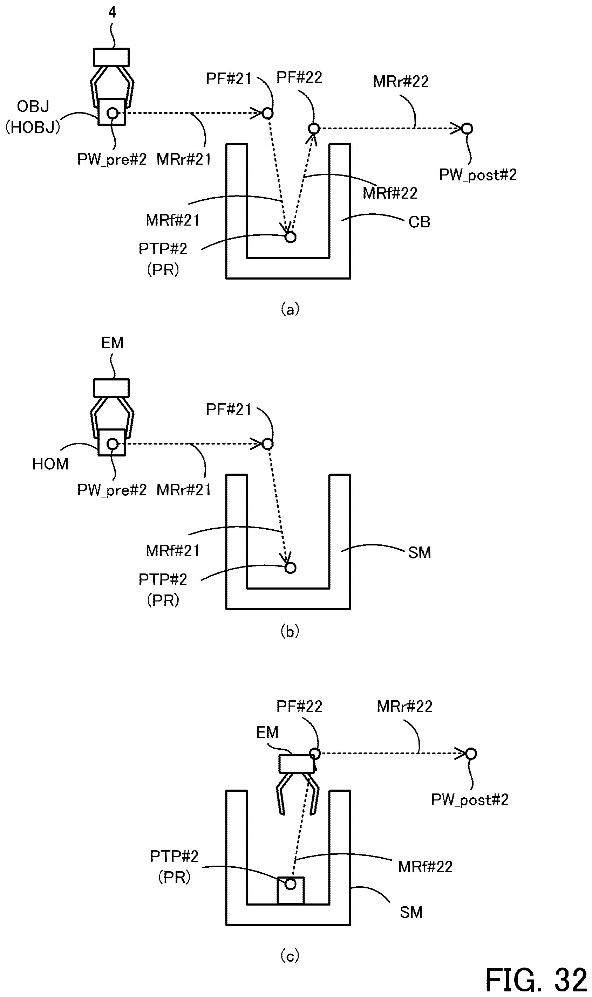

[FIG. 32] FIG. 32(a) is a cross-sectional view that illustrates the movement path of the tool center point in a case where the end effector performs a releasing process, FIG. 32(b) is a cross-sectional view that illustrates the end effector model and the held object model that are used to generate the movement path of the tool center point in a case where the end effector holds the object, and FIG. 32(c) is a cross-sectional view that illustrates the end effector model that is used to generate the movement path of the tool center point in a case where the end effector does not hold the object.
[FIG. 33] Each of FIG. 33(a) to FIG. 33(b) illustrates one example of a model generation screen.
[FIG. 34] FIG. 34 illustrates a plurality of partial models.
[FIG. 35] FIG. 35 is a flowchart that illustrates a flow of the matching processing that is used in a fifth modified example of a fine movement operation.

### Description of Example embodiments

Next, with reference to drawings, an example embodiment of a computing apparatus, a display method, a path generation method, a computer program, a recording medium, a robot control method, and a transporting method will be described. In the below described description, the example embodiment of the computing apparatus, the display method, the path generation method, the computer program, the recording medium, the robot control method, and the transporting method will be described by using a robot system SYS.

### (1) Configuration of Robot System SYS

Firstly, a configuration of the robot system SYS will be described.

### (1-1) Entire Configuration of Robot System SYS

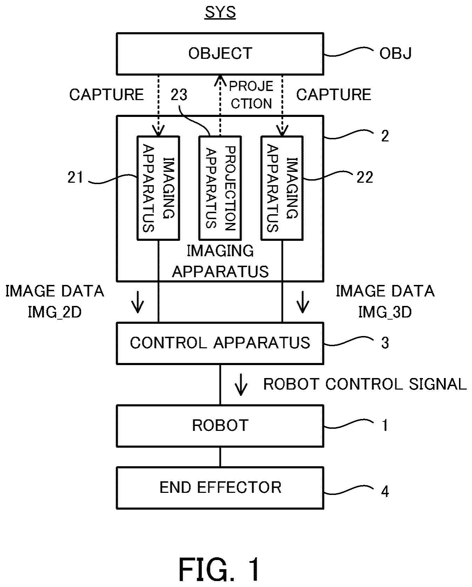

Firstly, with reference to FIG.1, an entire configuration of the robot system SYS will be described. FIG. 1 is a block diagram that illustrates the entire configuration of the robot system SYS.

As illustrated in FIG. 1, the robot system SYS includes: a robot 1; an imaging apparatus 2, a control apparatus 3, and an end effector 4.

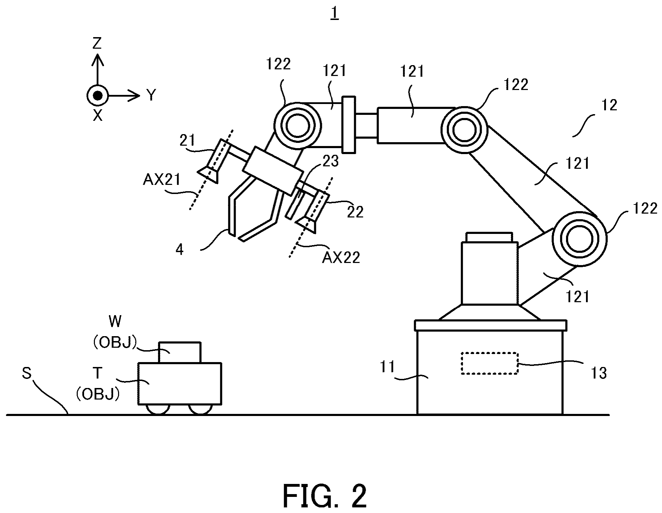

The robot 1 is an apparatus that is configured to perform a predetermined process on an object OBJ. One example of the robot 1 is illustrated in FIG. 2. FIG. 2 is a side view that illustrates an exterior appearance of the robot 1. As illustrated in FIG. 2, the robot 1 includes: a base 11; a robot arm 12, and a robot control apparatus 13, for example.

The base 11 is a member that is a foundation of the robot 1. The base 11 is placed on a support surface S such as a floor surface. The base 11 may be fixed to the support surface S. Alternatively, the base 11 may be movable relative to the support surface S. As one example, the base 11 may be configured to be self-propelled on the support surface S. In this case, the base 11 may be mounted on an Automatic Guided Vehicle (AGV). In a case where the base 11 is mounted on the Automatic Guided Vehicle, the Automatic Guided Vehicle may be regarded as a part of the robot 1. Alternatively, the Automatic Guided Vehicle (AGV) may be used as the base 11. Note that FIG. 2 illustrates an example in which the base 11 is fixed to the support surface S.

The robot arm 12 is attached to the base 11. The robot arm 12 is an apparatus in which a plurality of links 121 are connected through a joint 122. An actuator is built in the joint 122. The link 121 may be rotatable around an axis defined by the joint 122 by the actuator built in the joint 122. Note that at least one link 121 may be extendable and retractable along a direction along which the link 121 extends. Note that an apparatus including the base 11 and an apparatus in which the plurality of links 121 are connected through the joint 122 may be referred to as the robot arm 12.

The end effector 4 is attached to the robot arm 12. Namely, the end effector 4 is attached to the robot 1. In an example illustrated in FIG. 2, the end effector 4 is attached to an end of the robot arm 12. The end effector 4 is movable by a movement of the robot arm 12. Namely, the robot arm 12 moves the end effector 4. Namely, the robot 1 moves the end effector 4.

The end effector 4 is an apparatus that performs a predetermined process on the object OBJ. The end effector 4 may be referred to as a process apparatus because it performs the predetermined process on the object OBJ.

For example, the end effector 4 may perform a holding process (in other words, a holding operation) for holding the object OBJ as one example of the predetermined process.. In this case, the end effector 4 may be considered to perform the holding process on the object OBJ that should be held by the end effector 4. The end effector 4 that is configured to perform the holding process may be referred to as a holding apparatus.

Note that holding the object OBJ may include gripping the object OBJ. For example, holding the object OBJ may include gripping the object OBJ by using a hand gripper that is one example of the end effector 4 and that will be described later. Holding the object OBJ may include sucking the object OBJ. For example, holding the object OBJ may include sucking (vacuum sucking) the object OBJ by using a vacuum gripper that is one example of the end effector 4 and that will be described later. For example, holding the object OBJ may include sucking the object OBJ by using a magnetic suction gripper that is one example of the end effector 4 and that will be described later.

For example, the end effector 4 may perform a releasing process (in other words, a releasing operation) for releasing (in other words, letting off) the held object OBJ as one example of the predetermined process. In this case, the end effector 4 may be considered to perform the releasing process on the object OBJ held by the end effector 4. In a case where the end effector 4 is referred to as the holding apparatus, the holding apparatus may perform the releasing process on the object OBJ held by the holding apparatus. The end effector 4 that is configured to perform the releasing process may be referred to as a releasing apparatus.

For example, the end effector 4 may perform the releasing process for releasing (namely, letting off) a first object OBJ held by the end effector 4 on a second object OBJ so that the held first object OBJ is placed on the second object OBJ as one example of the predetermined process. In this case, the end effector 4 may be considered to perform the releasing process on the second object OBJ on which the end effector 4 should place the first object OBJ. Similarly, the end effector 4 may be considered to perform the releasing process on the first object OBJ that the end effector 4 should release.

A hand gripper is one example of the end effector 4 that is configured to perform the holding process and the releasing process. The hand gripper is an end effector 4 that is configured to hold the object OBJ by physically clamping the object OBJ using a plurality of (for example, two, three, or four) finger members or claw members. At least one of a vacuum gripper that is configured to hold the object OBJ by vacuum-sucking the object OBJ is another example of the end effector 4 that is configured to perform the holding process and the releasing process. The vacuum gripper is an end effector 4 that is configured to hold the object OBJ by vacuum sucking the object OBJ. The magnetic gripper is an end effector 4 that is configured to hold the object OBJ by using a magnetic force. FIG. 2 illustrates an example in which the end effector 4 is the hand gripper.

The robot 1 may perform a placing process (in other words, a placing operation) for placing the object OBJ at a desired position by using the end effector 4 that is configured to perform the holding process and the releasing process. For example, the robot 1 may hold the first object OBJ by using the end effector 4, and then perform the placing process for placing the first object OBJ held by the end effector 4 at a desired position of the second object OBJ that is different from the first object OBJ.

The robot 1 may perform an embedding process (in other words, an embedding operation) for embedding the first object OBJ into the second object OBJ that is different from the first object OBJ by using the end effector 4 that is configured to perform the holding process and the releasing process. For example, the robot 1 may hold the first object OBJ by using the end effector 4, and then perform the embedding process for embedding the first object OBJ held by the end effector 4 into the second object OBJ that is different from the first object OBJ. This embedding process may be regarded as the predetermined process on the first object OBJ by the end effect 4 and may be regarded as the predetermined process on the second object OBJ by the end effect 4.

The object OBJ on which the end effector 4 performs the predetermined process may include a workpiece W, as illustrated in FIG. 2. The workpiece W may include a component or a member that is used to manufacture a desired product, for example. The workpiece W may include a component or a member that is processed to manufacture the desired product, for example. The workpiece W may include a component or a member that is transported to manufacture the desired product, for example.

The object OBJ on which the end effector 4 performs the predetermined processing may include a placing apparatus T on which the workpiece W is placed, as illustrated in FIG. 2. A pallet is one example of the placing apparatus T. The placing apparatus T may be placed on the support surface S. The placing apparatus T may be fixed to the support surface S. Alternatively, the placing apparatus T may be movable relative to the support surface S. As one example, the placing apparatus T may be configured to be self-propelled on the support surface S. Note that FIG. 2 illustrates an example in which the placing apparatus T is configured to be self-propelled on the support surface S. In this case, the placing apparatus T may be referred to as an Automatic Guided Vehicle (AGV). In a case where the placing apparatus T is movable relative to the support surface S, the workpiece W placed on the placing apparatus T also moves relative to the support surface S due to a movement of the placing apparatus T. Therefore, the movable placing apparatus T may serve as a movement apparatus that moves the workpiece W. Note that a belt conveyer may be used as the placing apparatus T. Note that the placing apparatus T may be referred to as a placing member. Note that the placing apparatus T is not limited to the pallet, and may be a container in which the workpiece W is allowed to be contained. Note that the container may be a returnable box.

However, the object OBJ may not include the placing apparatus T. In a case where the placing apparatus T is configured to be self-propelled on the support surface S, a self-propelled apparatus configured to be self-propelled on the support surface S and the pallet may be separated units. In this case, the pallet may be mounted on the self-propelled apparatus. An apparatus including both of the self-propelled apparatus and the pallet may be referred to as the placing apparatus T. Alternatively, the object OBJ may not include at least one of the self-propelled apparatus and the pallet. The self-propelled apparatus may be referred to as an automated guided vehicle. Note that a member placed on the self-propelled apparatus may not be limited to the pallet, and may be a container in which the workpiece W is allowed to be contained.

Note that the placing apparatus T may be configured to fly over the support surface S. In this case, the placing apparatus T may be referred to as a flying apparatus. The flying apparatus that is configured to fly over the support surface S and the pallet may be separated units. The pallet may be mounted on the flying apparatus. An apparatus that includes the flying apparatus and the pallet may be referred to as the placing apparatus T. The flying apparatus nay be referred to as an unmanned aerial vehicle. Note that the workpiece W may not be placed on the placing apparatus T. For example, the workpiece W may be placed on the support surface S. Note that a member placed on the flying apparatus may not be limited to the pallet, and may be a container in which the workpiece W is allowed to be contained.

In a case where the object OBJ includes the workpiece W and the placing apparatus T, the above-described holding process may include a process for holding the workpiece W on the stationary or moving placing apparatus T. The above-described holding process may include a process for holding the workpiece W placed on the support surface S. The above-described releasing process may include a process for releasing the workpiece W held by the end effector 4 in order to place the workpiece W held by the end effector 4 at a desired position on the stationary or moving placing apparatus T. The above-described releasing process may include a process for releasing the workpiece W held by the end effector 4 in order to place the workpiece W held by the end effector 4 at a desired position on the support surface S. The above-described releasing process may include a process for releasing a first workpiece W held by the end effector 4 in order to embed the first workpiece W held by the end effector 4 into a second workpiece W placed on the stationary or moving placing apparatus T. The above-described releasing process may include a process for releasing the first workpiece W held by the end effector 4 in order to embed the first workpiece W held by the end effector 4 into the second workpiece W placed on the support surface S.

The robot control apparatus 13 controls an operation of the robot 1.

Specifically, the robot control apparatus 13 may control an operation of the robot arm 12. For example, the robot control apparatus 13 may control the operation of the robot arm 12 so that the desired link 121 rotates around an axis defined by the desired joint 122. For example, the robot control apparatus 13 may control the operation of the robot arm 12 so that the end effector 4 attached to the robot arm 12 is positioned at a desired position. For example, the robot control apparatus 13 may control the operation of the robot arm 12 so that the end effector 4 attached to the robot arm 12 moves to a desired position.

The robot control apparatus 13 may control an operation of the end effector 4 attached to the robot 1, in addition to or instead of controlling the operation of the robot 1. For example, the robot control apparatus 13 may control the operation of the end effector 4 so that the end effector 4 holds the object OBJ at a desired timing. Namely, the robot control apparatus 13 may control the operation of the end effector 4 so that the end effector 4 performs the holding process at the desired timing. For example, the robot control apparatus 13 may control the operation of the end effector 4 so that the end effector 4 releases the held object OBJ at a desired timing. Namely, the robot control apparatus 13 may control the operation of the end effector 4 so that the end effector 4 performs the releasing process at the desired timing. In a case where the end effector 4 is the hand gripper, the robot control apparatus 13 may control a timing at which the hand gripper opens and closes. In a case where the end effector 4 is the vacuum gripper, the robot control apparatus 13 may control a timing at which a vacuum apparatus of the vacuum gripper is turned on and turned off.

Note that FIG. 2 illustrates an example in which the robot 1 is the robot arm 12 (namely, a vertically articulated robot). However, the robot 1 may be a robot that is different from the vertically articulated of robot. For example, the robot 1 may be a SCARA robot (namely, a horizontally articulated robot). For example, the robot 1 may be a parallel link robot. For example, the robot 1 may be a dual-armed robot including two robot arms 12. For example, the robot 1 may be a Cartesian robot. For example, the robot 1 may be a cylindrical robot. The robot 1 may be referred to as a movable apparatus. The movable apparatus may include at least one of an Automatic Guided Vehicle and an unmanned aerial vehicle in addition to the robot 1. For example, the robot 1 may be mounted on at least one of the Automatic Guided Vehicle and the unmanned aerial vehicle.

Again in FIG. 1, the imaging apparatus 2 images the object OBJ. In order to image the object OBJ, the imaging apparatus 2 includes a camera 21, a camera 22, and a projection apparatus 23. However, as will be described in detail later, the imaging apparatus 2 may not include one of the cameras 21 and 22. The imaging apparatus 2 may not include the projection apparatus 23.

The camera 21 is configured to images the object OBJ. The camera 21 generates image data IMG_2D by imaging the object OBJ. The image data IMG_2D generated by the camera 21 is output from the camera 21 to the control apparatus 3. In the present example embodiment, the camera 21 is a monocular camera. Specifically, the camera 21 is configured to image the object OBJ by using the monocular camera (in other words, an imaging element). Note that the camera 21 is not limited to the monocular camera. The camera 21 may be a stereo camera that is configured to image the object OBJ by using two monocular cameras, or may include three or more monocular cameras. Note that the camera 21 may be at least one of a light field camera, a plenoptic camera, and a multispectral camera.

The camera 22 is configured to image the object OBJ, as with the camera 21. In the present example embodiment, the camera 22 is a stereo camera. Specifically, the camera 22 is the stereo camera that is configured to image the object OBJ by using two monocular cameras (in other words, two imaging elements). The camera 22 generates image data IMG_3D by imaging the object OBJ. Specifically, since the camera 22 is the stereo camera, the camera 22 generates the image data IMG_3D that includes two image data generated by the two monocular cameras, respectively. The image data IMG_3D generated by the camera 22 is output from the camera 22 to the control apparatus 3. Note that the camera 22 is not limited to the stereo camera. The camera 22 may be a monocular camera or may include three or more monocular cameras. Note that the camera 22 may be at least one of a light field camera, a plenoptic camera, and a multispectral camera.

The projection apparatus 23 is an apparatus that is configured to irradiate the object OBJ with projection light. Especially, the projection apparatus 23 is an apparatus that is configured to project a desired projection pattern on the object OBJ by irradiating the object OBJ with the projection light. Note that the projection pattern may be referred to as an intensity distribution of the light projected on the object OBJ. When the intensity distribution of the projection light is changed, the projection pattern is also changed. The desired projection pattern may include a random pattern, for example. The random pattern may be a projection pattern having different patterns in unit irradiation areas, respectively. The random pattern may include a random dot pattern. The desired projection pattern may include a one-dimensional or two-dimensional grid pattern. The desired projection pattern may include another projection pattern. The camera 22 images the object OBJ on which the projection pattern is projected. In this case, the object OBJ on which the projection pattern is projected is captured in the image indicated by the image data IMG_3D. On the other hand, the camera 21 may not image the object OBJ on which the projection pattern is projected. The camera 21 may image the object OBJ on which the projection pattern is not projected. In this case, the object OBJ on which the projection pattern is projected may not be captured in the image indicated by the image data IMG_2D. The object OBJ on which the projection pattern is not projected may be captured in the image indicated by the image data IMG_2D. Note that the projection light for projecting the desired projection pattern on the object OBJ may be referred to as pattern light or may be referred to as structure light. In this case, the projection light may include the pattern light or may include the structure light. Note that the projection light may be light having a uniform projection pattern (namely, a uniform intensity distribution).

Note that the projection apparatus 23 may be considered to illuminate the object OBJ with the projection light by irradiating the object OBJ with the projection light. In this case, the projection apparatus 23 may serve as an illumination apparatus that illuminates the object OBJ. In a case where the projection apparatus 23 serves as the illumination apparatus, the projection light may be referred to as illumination light. The projection light (the illumination light) used as the illumination apparatus may be light having a uniform intensity distribution. In a case where the projection apparatus 23 serves as the illumination apparatus, the projection light may not be light for projecting the desired projection pattern on the object OBJ. In a case where the projection apparatus 23 serves as the illumination apparatus, the projection light (namely, the illumination light) may be any light for illuminating the object OBJ.

The imaging apparatus 2 is attached to the robot arm 12, as with the end effector 4. Namely, the cameras 21 and 22 and the projection apparatus 23 are attached to the robot arm 12. For example, as illustrated in FIG. 2, the cameras 21 and 22 and the projection apparatus 23 may be attached to an end of the robot arm 12, as with the end effector 4. In this case, the cameras 21 and 22 and the projection apparatus 23 are movable by the movement of the robot arm 12. Namely, the robot arm 12 moves the cameras 21 and 22 and the projection apparatus 23.

However, the imaging apparatus 2 may not be attached to the robot arm 12. The imaging apparatus 2 may be attached to any position that allows the imaging apparatus 2 to irradiate the object OBJ with the projection light and to image the object OBJ. Note that at least one of the camera 21, the camera 22, and the projection apparatus 23 may be attached to the robot arm 12, and at least other one of the camera 21, the camera 22, and the projection apparatus 23 may be attached to a position that is different from the robot arm 12. For example, at least one of the camera 21 and the camera 22 may be attached to a structural object, such as a pillar, that is positioned at a position that allows at least one of the camera 21 and the camera 22 to image the object OBJ. For example, the projection apparatus 23 may be attached to a structural object, such as a pillar, that is positioned at a position that allows the projection apparatus 23 to irradiate the object OBJ with the projection light.

The cameras 21 and 22 may image the object OBJ in synchronization with each other. For example, the cameras 21 and 22 may image the object OBJ simultaneously. Namely, the cameras 21 and 22 may image the object OBJ so that a 2D imaging time at which the camera 21 images the object OBJ and a 3D imaging time at which the camera 22 images the object OBJ are the same time. The cameras 21 and 22 may image the object OBJ so that the 2D imaging time at which the camera 21 images the object OBJ to generate the image data IMG_2D and the 3D imaging time at which the camera 22 images the object OBJ to generate the image data IMG_3D are the same time.

The cameras 21 and 22 may image the object OBJ under the control of the control apparatus 3. In this case, a time (in other words, a timing) at which each of the cameras 21 and 22 images the object OBJ may be controlled by the control apparatus 3. For example, the control apparatus 3 may control the cameras 21 and 22 so that the cameras 21 and 22 image the object OBJ in synchronization with each other. For example, the control apparatus 3 may control the cameras 21 and 22 so that the cameras 21 and 22 image the object OBJ simultaneously. Namely, the control apparatus 3 may control the cameras 21 and 22 so that the 2D imaging time are the same as the 3D imaging time are the same time.

Here, a state in which "the 2D imaging time and the 3D imaging time are the same time" may include a state in which "the 2D imaging time and the 3D imaging time are exactly the same time literally". The state in which "the 2D imaging time and the 3D imaging time are the same time" may include a state in which "the 2D imaging time and the 3D imaging time are not exactly the same time, but the 2D imaging time and the 3D imaging time are allowed to be considered to be substantially the same time because a difference in time between the 2D imaging time and the 3D imaging time is smaller than a first allowable upper limit value". Here, the first allowable upper limit value may be a first allowable upper limit value based on a control error of the robot arm 12. For example, there is a possibility that the difference in time between the 2D imaging time and the 3D imaging time causes an error in a calculated result of at least one of a position and a pose of the object OBJ described below (namely, decreases an accuracy of at least one of the calculated position and pose of the object OBJ). In this case, there is a possibility that the error in the calculated result of at least one of the position and the pose of the object OBJ causes the control error of the robot arm 12. There is a possibility that the control error of the robot arm 12 results in a movement error of the end effector 4, and the end effector 4 cannot properly perform the predetermined process on the object OBJ. Note that the first allowable upper limit value may be considered to be equivalent to a first allowable upper limit value of the movement error of the end effector 4 by the robot arm 12. Moreover, for example, even in a case where a synchronization error in the imaging processing of the cameras 21 and 22 causes the difference in time between the 2D imaging time and the 3D imaging time, the 2D imaging time and the 3D imaging time may be considered to be substantially the same time. Note that the synchronization error in the imaging processing of the cameras 21 and 22 may be a synchronization control error in the imaging processing of the cameras 21 and 22 by the control apparatus 3.

However, the cameras 21 and 22 may not image the object OBJ simultaneously. Namely, the cameras 21 and 22 may image the object OBJ so that the 2D imaging time at which the camera 21 images the object OBJ and the 3D imaging time at which the camera 22 images the object OBJ are different times. Note that a state in which "the 2D imaging time and the 3D imaging time are the different times" may include a state in which "the 2D imaging time and the 3D imaging time are not allowed to be considered to be substantially the same time because the difference in time between the 2D imaging time and the 3D imaging time is larger than the first allowable upper limit value".

In the present example embodiment, in a case where the cameras 21 and 22 image the object OBJ in a period during which the object OBJ and each of the cameras 21 and 22 are being relatively displaced, the cameras 21 and 22 may image the object OBJ so that the 2D imaging time and the 3D imaging time are the same time. Namely, in a case where the cameras 21 and 22 image the object OBJ in the period during which the object OBJ and each of the cameras 21 and 22 are being relatively displaced, the control apparatus 3 may control the cameras 21 and 22 so that the 2D imaging time and the 3D imaging time are the same time. Note that a state in which the object OBJ and each of the cameras 21 and 22 are being relatively displaced may mean a state in which a relative positional relationship between the object OBJ and each of the cameras 21 and 22 is changing. The state in which the object OBJ and each of the cameras 21 and 22 are being relatively displaced may mean a state in which the object OBJ and each of the cameras 21 and 22 are relatively moved.

On the other hand, in a case where the cameras 21 and 22 image the object OBJ in a period during which the object OBJ and each of the cameras 21 and 22 are not being relatively displaced, the cameras 21 and 22 may not image the object OBJ so that the 2D imaging time and the 3D imaging time are the same time. Namely, the control apparatus 3 may not control the cameras 21 and 22 so that the 2D imaging time and the 3D imaging time are the same time. For example, the cameras 21 and 22 may image the object OBJ so that the 2D imaging time and the 3D imaging time are the different times. Namely, the control apparatus 3 may control the cameras 21 and 22 so that the 2D imaging time and the 3D imaging time are the different times. Note that a state in which the object OBJ and each of the cameras 21 and 22 are not being relatively displaced may include a state in which the relative positional relationship between the object OBJ and each of the cameras 21 and 22 is not changing. The state in which the object OBJ and each of the cameras 21 and 22 are not being relatively displaced may include a state in which the object OBJ and each of the cameras 21 and 22 are not relatively moved. The state in which the object OBJ and each of the cameras 21 and 22 are not being relatively displaced may include a state in which the object OBJ and each of the cameras 21 and 22 are stationary. Note that the cameras 21 and 22 may image the object OBJ so that the 2D imaging time and the 3D imaging time are the same time even in a case where the cameras 21 and 22 image the object OBJ in the period during which the object OBJ and each of the cameras 21 and 22 are not being relatively displaced. Namely, the control apparatus 3 may control the cameras 21 and 22 so that the 2D imaging time and the 3D imaging time are the same time.

The control apparatus 3 performs a robot control processing. The robot control processing includes a processing for generating a robot control signal for controlling the robot 1. The control apparatus 3 may perform and end effector processing, in addition to performing the robot control processing. The end effector control processing may include a processing for generating an end effector control signal for controlling the end effector 4. The end effector processing may be included in or may not be included in the robot control processing. Namely, the end effector control signal generated by the control apparatus 3 may be included in or may not be included in the robot control signal.

In the below-described description, for convenience of description, an example in which the end effector control processing is included in the robot control processing (namely, the end effector control signal is included in the robot control signal) will be described. Therefore, in the below-described description, the robot control processing may mean a processing for generating at least one of the robot control signal and the end effector control signal. Moreover, in the below-described description, the robot control signal may mean at least one of a signal for controlling the robot 1 and a signal for controlling the end effector 4. Note that the robot control signal may be referred to simply as a control signal.

The robot control signal may include a signal for controlling the robot 1 so as to move the robot 1. Namely, the robot control signal may include a signal for controlling the robot arm 12 so as to move the robot arm 12. Specifically, the robot control signal may include a signal for controlling the robot 1 so as to move a movement base point MBP, which moves due to the movement of the robot 1 (namely, a driving of the robot 1), to a desired position. Namely, the robot control signal may include a signal for controlling the robot arm 12 so as to move the movement base point MBP, which moves due to the movement of the robot arm 12, to the desired position. Since the end effector 4 moves due to the movement of the robot 1, the robot control signal may include a signal for controlling the robot 1 so as to move the movement base point MBP, which moves due to the movement of the end effector 4 due to the movement of the robot 1 (namely, a driving of the robot 1), to the desired position. Namely, the robot control signal may include a signal for controlling the robot arm 12 so as to move the movement base point MBP, which moves due to the movement of the end effector 4 due to the movement of the robot arm 12, to the desired position. Note that the movement base point MBP may simply be referred to as a movement point.

In the present example embodiment, an example in which a tool center point TCP of the end effector 4 is used as the movement base point MBP will be described. As one example, the tool center point TCP of the end effector 4 may mean a point at which the end effector 4 comes into contact with the object OBJ (for example, the workpiece W). In a case where the end effector 4 is the hand gripper as described above, the tool center point TCP may mean a point in the space between tips of the plurality of claw members of the hand gripper. In a case where the end effector 4 is the vacuum gripper as described above, the tool center point TCP may mean a point in a space between a plurality of suction ports that are formed on the vacuum gripper and each of which is configured to suck gas. The tool center point TCP may be set by a user of the robot system SYS. Alternatively, the tool center point TCP may be set in advance for each end effector 4. Note that the tool center point TCP may be at least a part of the robot arm 12. Note that the tool center point TCP may be at least a part of the end effector 4.

However, at least one point that is different from the tool center point TCP may be used as the movement base point MBP. For example, since at least a part of the robot 1 moves due to the movement of the robot 1, at least a part of the robot 1 may be used as the movement base point MBP. At least one point of the robot 1 included in at least a part of the robot 1 may be used as the movement base point MBP. As one example, any point on a surface of the robot 1 may be used as the movement base point MBP. As another example, any point inside the robot 1 may be used as the movement base point MBP. Specifically, since at least a part of the robot arm 12 moves due to the movement of the robot 1, at least a part of the robot arm 12 may be used as the movement base point MBP. At least one point of the robot arm 12 included in at least a part of the robot arm 12 may be used as the movement base point MBP. As one example, any point on a surface of the robot arm 12 may be used as the movement base point MBP. As another example, any point inside the robot arm 12 may be used as the movement base point MBP. Similarly, since at least a part of the end effector 4 attached to the robot 1 moves due to the movement of the robot 1, at least a part of the end effector 4 may be used as the movement base point MBP. At least one point of the end effector 4 included in at least a part of the end effector 4 may be used as the movement base point MBP. As one example, any point on a surface of the end effector 4 may be used as the movement base point MBP. As another example, any point inside the end effector 4 may be used as the movement base point MBP.

Note that the tool center point TCP may be regarded as a point that is determined with respect to the end effector 4 as one example. In this case, any point that is determined with respect to the end effector 4 may be used as the movement base point MBP. Furthermore, the tool center point TCP may be regarded as a point that is determined with respect to the robot 1 (especially, the robot arm 12) to which the end effector 4 is attached as one example. In this case, any point that is determined with respect to the robot 1 (especially, the robot arm 12) may be used as the movement base point MBP.

Furthermore, the robot control signal may include a signal for controlling the end effector 4 so as to perform the predetermined process, in addition to the signal for controlling the robot 1 so as to move the robot 1. For example, the robot control signal may include a signal for controlling the end effector 4 to perform the holding process for holding the workpiece W. For example, the robot control signal may include a signal for controlling the end effector 4 to perform the releasing process for releasing the held workpiece W.

The robot control signal generated by the control apparatus 3 is output to the robot control apparatus 13 of the robot 1. The robot control apparatus 13 controls the operation of the robot 1 based on the robot control signal generated by the control apparatus 3. Therefore, the robot control signal may include a signal for controlling the operation of the robot 1.

In a case where the robot control signal includes the signal for controlling the robot arm 12 as described above, the robot control apparatus 13 may control the robot arm 12 based on the robot control signal. For example, the robot control apparatus 13 may control the operation of the robot arm 12 by controlling an operation of the actuator built into the joint 122 based on the robot control signal.

In a case where the robot control signal includes the signal for controlling the end effector 4 as described above, the robot control apparatus 13 may control the end effector 4 based on the robot control signal. For example, the robot control apparatus 13 may control the operation of the end effector 4 by controlling an operation of the actuator that moves the hand gripper constituting the end effector 4 based on the robot control signal. For example, the robot control apparatus 13 may control the operation of the end effector 4 by controlling an operation of the vacuum apparatus of the vacuum gripper constituting the end effector 4 based on the robot control signal.

The robot control signal may include a signal that is usable as it is by the robot control apparatus 13 to control the operation of the robot 1. The robot control signal may include a signal that is usable as it is as a robot driving signal that is used by the robot control apparatus 13 to control the operation of the robot 1. In this case, the robot control apparatus 13 may use the robot control signal as it is to control the operation of the robot 1. Specifically, for example, the control apparatus 3 may generate a driving signal of the actuator built in the joint 122 of the robot arm 12 as the robot control signal, and the robot control apparatus 13 may use the robot control signal generated by the control apparatus 3 as it is to control the actuator built in the joint 122 of the robot arm 12. The robot control signal may include a signal that is usable as it is by the robot control apparatus 13 to control the operation of the end effector 4. The robot control signal may include a signal that is usable as it is as an end effector driving signal that is used by the robot control apparatus 13 to control the operation of the end effector 4. In this case, for example, the control apparatus 3 may generate a driving signal (the end effector driving signal) of the actuator that moves the hand gripper constituting the end effector 4 as the robot control signal, and the robot control apparatus 13 may use the robot control signal generated by the control apparatus 3 as it is to control the actuator of the end effector 4. For example, the control apparatus 3 may generate a driving signal (the end effector driving signal) of the vacuum apparatus of the vacuum gripper constituting the end effector 4 as the robot control signal, and the robot control apparatus 13 may use the robot control signal generated by the control apparatus 3 as it is to control the vacuum apparatus of the end effector 4.

Note that in a case where the robot control signal includes the signal that is usable as it is by the robot control apparatus 13 to control the operation of at least one of the robot 1 and the end effector 4 as described above, the robot 1 may not include the robot control apparatus 13.

Alternatively, the robot control signal may include a signal that is usable by the robot control apparatus 13 to generate the robot driving signal for controlling the operation of the robot 1. In this case, the robot control apparatus 13 may generate the robot driving signal for controlling the operation of the robot 1 based on the robot control signal, and control the operation of the robot 1 based on the generated robot driving signal. For example, the robot control apparatus 13 may generate the driving signal of the actuator built in the joint 122 of the robot arm 12 based on the robot control signal, and control the actuator built in the joint 122 of the robot arm 12 based on the generated signal.

The robot control signal may include a signal that is usable by the robot control apparatus 13 to generate the end effector driving signal for controlling the operation of the end effector 4. In this case, the robot control apparatus 13 may generate the end effector driving signal for controlling the operation of the end effector 4 based on the end effector control signal, and control the operation of the end effector based on the generated end effector driving signal. For example, the robot control apparatus 13 may generate the driving signal of the actuator of the end effector 4 based on the robot control signal, and control the actuator of the end effector 4 based on the generated signal.

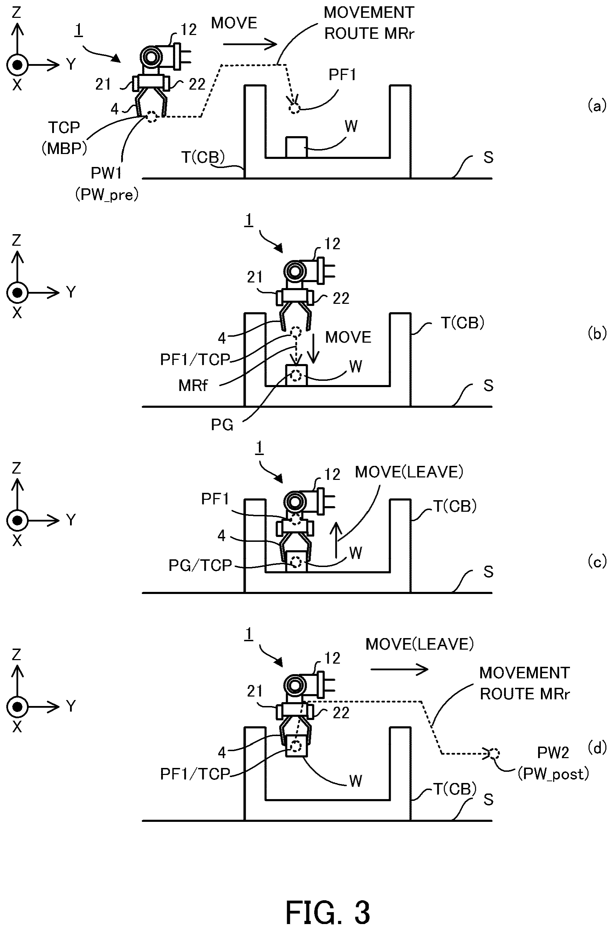

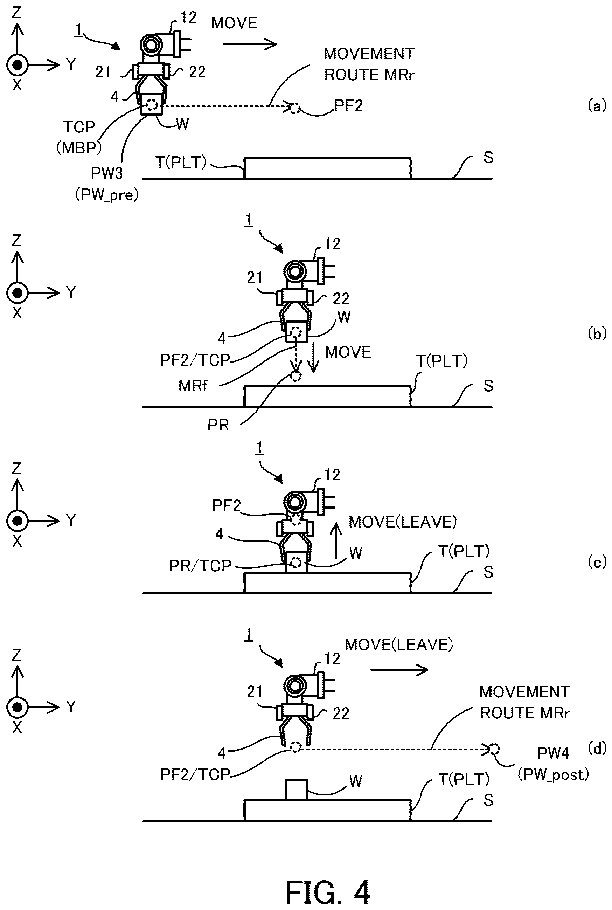

Here, with reference to FIG. 3(a) to FIG. 3(d) and FIG. 4(a) to FIG. 4(d), an example of the operation of the robot 1 in the present example embodiment will be described.

Each of FIG. 3(a) to FIG. 3(d) illustrates an example of the operation of the robot 1 for holding (namely, picking up) the workpiece W, which is contained in a container box CB that is one example of the placing apparatus T, by using the end effector 4. Namely, each of FIG. 3(a) to FIG. 3(d) illustrates an example of the operation of the robot 1 in a case where the end effector 4 performs the holding process. FIG. 3(a) to FIG. 3(d) illustrate an example in which a single workpiece W is contained in the container box CB. However, a plurality of workpieces W may be contained in the container box CB. Note that the container box CB may be referred to as a container.

In a case where the plurality of workpieces W are contained in the container box CB, the plurality of workpieces W may be contained in the container box CB in a regular manner. For example, the plurality of workpieces W may be positioned at regular positions in the container box CB. For example, the plurality of workpieces W may be positioned at predetermined regular positions in the container box CB. For example, the container box CB may contain plurality of workpieces W having predetermined regular poses.

Alternatively, in a case where the plurality of workpieces W are contained in the container box CB, the plurality of workpieces W may be contained in the container box CB in an irregular manner. For example, the plurality of workpieces W may be positioned at irregular positions in the container box CB. For example, the container box CB may contain the plurality of workpieces W having irregular poses. Note that a state in which the plurality of workpieces W are contained in the container box CB in the irregular manner may be considered to be equivalent to a state in which the plurality of workpieces W are randomly or haphazardly contained in the container box CB. In a case where the plurality of workpieces W are contained in the contained box CB in the irregular manner, an orientation of a first workpiece W of the plurality of workpieces W may be different from an orientation of a second workpiece W, which is different from the first workpiece W, of the plurality of workpieces W. In a case where the plurality of workpieces W are contained in the contained box CB in the irregular manner, a pose of the first workpiece W may be different from a pose of the second workpiece W. In a case where the plurality of workpieces W are contained in the contained box CB in the irregular manner, a third workpiece W, which is different from the first workpiece W, may be overlapped with the first workpiece W and a fourth workpiece W, which is different from the second workpiece W, may not be overlapped with the second workpiece W. In a case where the plurality of workpieces W are contained in the container box CB in the irregular manner, the third workpiece W may be overlapped with the first workpiece W, the fourth workpiece W may be overlapped with the second workpiece W, and a size of an area at which the first workpiece W and the third workpiece W are overlapped may be different from a size of an area at which the second workpiece W and the fourth workpiece W are overlapped.

On the other hand, each of FIG. 4(a) to FIG. 4(d) illustrates an example of the operation of the robot 1 for releasing the workpiece W held by the end effector 4 so as to place the workpiece W held by the end effector 4 on a pallet PLT that is one example of the placing apparatus T. Namely, each of FIG. 4(a) to FIG. 4(d) illustrates an example of the operation of the robot 1 in a case where the end effector 4 performs the releasing process.

As illustrated in FIG. 3(a), in order to hold the workpiece W, the robot 1 may move the tool center point TCP (namely, the movement base point MBP, the same applies in the below-described description) to a first fine approach position PF1. In this case, the control apparatus 3 may generate the robot control signal for moving the robot 1 so as to move the tool center point TCP to the first fine approach position PF1. The first fine approach position PF1 is a position that satisfies a condition that each of the cameras 21 and 22 can image the workpiece W in a situation where the tool center point TCP is positioned at the first fine approach position PF1. Namely, the first fine approach position PF1 is a position that satisfies a condition that the workpiece W (for example, the workpiece W that is a process target by the end effector 4) is positioned within an angle of view of each of the cameras 21 and 22 in a situation where the tool center point TCP is positioned at the first fine approach position PF1. Especially, the control apparatus 3 may generate the robot control signal for moving the robot 1 so as to move the tool center point TCP from a first waiting position PW1 to the first fine approach position PF1. The first waiting position PW1 may mean a position at which the tool center point TCP should be positioned in a situation where the robot 1 waits before the end effector 4 performs the predetermined process (in this case, the holding process) on the workpiece W. Namely, the first waiting position PW1 may mean a position at which the end effector 4 should wait before the end effector 4 performs the predetermined process (in this case, the holding process) on the workpiece W. The first waiting position PW1 may mean a position that is farther from the workpiece W (the container box CB) than the first fine approach position PF1 is.

In a situation where the tool center point TCP is positioned at the first waiting position PW1, each of the cameras 21 and 22 may not be able to image the workpiece W. In this case, an operation for moving the tool center point TCP from the first waiting position PW1 to the first fine approach position PF1 may be considered to be equivalent to an operation for moving the camera 21 and 22, which are positioned at positions that satisfy a condition that each of the cameras 21 and 22 cannot image the workpiece W, to positions at which that satisfy a condition that each of the cameras 21 and 22 can image the workpiece W. The operation for moving the tool center point TCP from the first waiting position PW1 to the first fine approach position PF1 may be considered equivalent to an operation for moving the tool center point TCP closer to the workpiece W until each of the cameras 21 and 22 can image the workpiece W.

However, in a situation where the tool center point TCP is positioned at the first waiting position PW1, at least one of the cameras 21 and 22 may be capable of imaging the workpiece W. Furthermore, in a situation where the tool center point TCP is positioned between the first waiting position PW1 and the first fine approach position PF1, each of the cameras 21 and 22 may be able to image the workpiece W or may not be able to image the workpiece W. Namely, before the tool center point TCP reaches the first fine approach position PF1, each of the cameras 21 and 22 may be able to image the workpiece W or may not be able to image the workpiece W.

Note that at least one of the cameras 21 and 22 may actually image the workpiece W before tool center point TCP reaches the first fine approach position PF1 in a case where at least one of the cameras 21 and 22 can image the workpiece W before the tool center point TCP reaches the first fine approach position PF1. Alternatively, at least one of the cameras 21 and 22 may not actually image the workpiece W before the tool center point TCP reaches the first fine approach position PF1 even in a case where at least one of the cameras 21 and 22 can image the workpiece W before the tool center point TCP reaches the first fine approach position PF1.

A movement path MRr of the tool center point TCP (alternatively, a movement path MRr of any movement base point MBP) from the first waiting position PW1 to the first fine approach position PF1 may be set in advance by a recipe file 321. The recipe file 321 includes information that specifies a detail of a series of operations that should be performed by the robot system SYS using at least one of the robot 1 and the end effector 4. Namely, the recipe file 321 includes information related to a detail of a setting of the robot system SYS for performing a series of operations by using at least one of the robot 1 and the end effector 4. In this case, the control apparatus 3 may generate the robot control signal for moving the robot 1 so as to move the tool center point TCP from the first waiting position PW1 to the first fine approach position PF1 based on the recipe file 321. Namely, the control apparatus 3 may generate the robot control signal for moving the robot 1 so as to move the tool center point TCP along the movement path MRr specified by the recipe file 321.

Then, as illustrated in FIG. 3(b), the robot 1 may move the tool center point TCP from the first fine approach position PF1 to a holding target position PG. In this case, the control apparatus 3 may generate the robot control signal for moving the robot 1 so as to move the tool center point TCP from the first fine approach position PF1 to the holding target position PG. The holding target position PG is a position that satisfies a condition that the end effector 4 holds the workpiece W in a situation where the tool center point TCP is positioned at the holding target position PG. Namely, the holding target position PG is a position at which the end effector 4 holds the workpiece W. The holding target position PG may typically be a relative position determined with respect to the workpiece W that should be held by the end effector 4. The holding target position PG is typically set in advance by the recipe file 321. The holding target position PG may be referred to as a position at which the end effector 4 can hold the workpiece W in a situation where the tool center point TCP is positioned at the holding target position PG.

As described above, in a situation where the tool center point TCP is positioned at the first fine approach position PF1, each of the cameras 21 and 22 can image the object OBJ (especially, the workpiece W). In this case, the control apparatus 3 may generate the robot control signal for moving the robot 1 so as to move the tool center point TCP from the first fine approach position PF1 to the holding target position PG based on at least one of the image data IMG_2D and IMG_3D output from the imaging apparatus 2. Specifically, the control apparatus 3 may calculate at least one of a position and a pose of the workpiece W in a global coordinate system of the robot system SYS based on at least one of the image data IMG_2D and IMG_3D. For example, the control apparatus 3 may calculate at least one of a position of the workpiece W along an X-axis of the global coordinate system, a position of the workpiece W along a Y-axis of the global coordinate system, and a position of the workpiece W along a Z-axis of the global coordinate system as the position of the workpiece W in the global coordinate system. For example, the control apparatus 3 may calculate at least one of a pose of the workpiece W around the X-axis of the global coordinate system, a pose of the workpiece W around the Y-axis of the global coordinate system, and a pose of the workpiece W around the Z-axis of the global coordinate system as the pose of the workpiece W in the global coordinate system. Note that an operation for calculating at least one of the position and the pose of the workpiece W based on at least one of the image data IMG_2D and IMG_3D will be described in detail later. Furthermore, the control apparatus 3 may generate the robot control signal for moving the robot 1 so as to move the tool center point TCP from the first fine approach position PF1 to the holding target position PG based on at least one of the calculated position and pose of the workpiece W.

Note that "a position of an object" may mean at least one of a position of the object along a first axis, a position of the object along a second axis that is orthogonal to the first axis, and perpendicular to along a third axis that is orthogonal to both the first and second axes in the present example embodiment. "a pose of an object" may mean at least one of a pose of the object around a first axis, a pose of the object around a second axis that is orthogonal to the first axis, and a pose of the object around a third axis orthogonal to both the first and second axes. Namely, "the pose of the object" may mean at least one of a rotational amount of the object around the first axis, a rotational amount of the object around the second axis that is orthogonal to the first axis, and a rotational amount of the object around the third axis that is orthogonal to both the first and second axes. In other words, "the pose of the object" may mean at least one of a position of the object along a rotational direction around the first axis, a position of the object along a rotational direction around the second axis that is orthogonal to the first axis, and the position of the object along a rotational direction around the third axis that is orthogonal to both the first and second axes.

The global coordinate system is a coordinate system that is a base for the robot system SYS. For example, the global coordinate system may be a coordinate system that is a base for robot 1. A robot coordinate system described below may be used as the global coordinate system, or a coordinate system that is different from the robot coordinate system may be used. Note that the global coordinate system may be referred to as a world coordinate system.

In this case, the control apparatus 3 may move the tool center point TCP closer to the workpiece W while sequentially calculating at least one of the position and the pose of the workpiece W based on at least one of the image data IMG_2D and IMG_3D in a period during which the tool center point TCP moves from the first fine approach position PF1 to the holding target position PG (namely, in a period during which the end effector 4 moves). Namely, the control apparatus 3 may move the end effector 4 closer to the workpiece W while sequentially calculating at least one of the position and the pose of the workpiece W based on at least one of the image data IMG_2D and IMG_3D in a period during which the tool center point TCP moves from the first fine approach position PF1 to the holding target position PG (namely, in a period during which the end effector 4 moves). Alternatively, the control apparatus 3 may calculate at least one of the position and the pose of the workpiece W based on at least one of the image data IMG_2D and IMG_3D, which are respectively generated by the cameras 21 and 22 when the tool center point TCP is positioned at the first fine approach position PF1, and may move the tool center point TCP closer to the workpiece W based on the calculated result of at least one of the position and the pose of the workpiece W. Specifically, the control apparatus 3 may calculate at least one of the position and the pose of the workpiece W based on at least one of the image data IMG_2D and IMG_3D, which are respectively generated by the cameras 21 and 22 when the tool center point TCP is positioned at the first fine approach position PF1, calculate a movement path MRf of the tool center point TCP from the first fine approach position PF1 to the holding target position PG based on the calculated result of at least one of the position and the pose of the workpiece W, and move the tool center point TCP along the calculated movement path MRf. Alternatively, the control apparatus 3 may calculate at least one of the position and the pose of the workpiece W based on at least one of the image data IMG_2D and IMG_3D, which are respectively generated by the cameras 21 and 22 when the tool center point TCP is positioned at the first waiting position PW1, calculate a movement path MRf of the tool center point TCP from the first waiting position PW1 to the holding target position PG based on the calculated result of at least one of the position and the pose of the workpiece W, and move the tool center point TCP along the calculated movement path MRf. Note that information related to the movement path MRf may be stored in the recipe file 321 in a case where the movement path MRf along which the tool center point TCP moves by a fine movement operation is generated. An operation for calculating at least one of the position and the pose of the workpiece W based on at least one of the image data IMG_2D and IMG_3D and moving the end effector 4 (typically, moving relative to the object OBJ) based on the calculated result of at least one of the position and the pose of the workpiece W may be referred to as the fine movement operation. The fine movement operation may be regarded as an operation for moving the tool center point TCP with higher accuracy (namely, moving the end effector 4 with higher accuracy) than a rough movement operation described below. However, a movement accuracy of the tool center point TCP by the fine movement operation may be the same as a movement accuracy of the tool center point TCP by the rough movement operation described below. On the other hand, as described above, the control apparatus 3 may not calculate at least one of the position and the pose of the workpiece W based on at least one of the image data IMG_2D and IMG_3D to move the tool center point TCP from the first waiting position PW1 to the first fine approach position PF1. An operation for moving the end effector 4 (typically, moving relative to the object OBJ) without calculating at least one of the position and the pose of the workpiece W based on at least one of the image data IMG_2D and IMG_3D may be referred to as the rough movement operation.

However, the control apparatus 3 may perform an operation for moving the end effector 4 based on at least one of the image data IMG_2D and IMG_3D as the rough movement operation.

For example, an operation for calculating the movement path MRr from the first waiting position PW1 (alternatively, a current position) to the first fine approach position PF1 based on at least one of the position and the pose of the workpiece W sequentially calculated while sequentially calculating at least one of the position and the pose of the workpiece W based on at least one of the image data IMG_2D and IMG_3D in a period during which the tool center point TCP moves from the first waiting position PW1 to the first fine approach position PF1 (namely, in a period during which the end effector 4 moves) and moving the tool center point TCP along the generated movement path MRr may be performed. For example, the control apparatus 3 may perform, as the rough movement operation, an operation for calculating at least one of the position and the pose of the workpiece W based on at least one of the image data IMG_2D and IMG_3D, which are respectively generated by the cameras 21 and 22 when the tool center point TCP is positioned at the first waiting position PW1, calculating the movement path MRr of the tool center point TCP from the first waiting position PW1 to the first fine approach position PF1 based on the calculated result of at least one of the position and the pose of the workpiece W, and moving the tool center point TCP along the calculated movement path MRr.

For example, the control apparatus 3 may perform, as the rough movement operation, an operation for calculating the movement path MRr from the first waiting position PW1 (alternatively, the current position) to the first fine approach position PF1 based on at least one of a position and a pose of the container box CB sequentially calculated while sequentially calculating at least one of the position and the pose of the container box CB in which the workpiece W is contained (alternatively, a surrounding object that is positioned around the workpiece W, the same applies in the below-described description) based on at least one of the image data IMG_2D and IMG_3D in a period during which the tool center point TCP moves from the first waiting position PW1 to the first fine approach position PF1 (namely, in a period during which the end effector 4 moves) and moving the tool center point TCP along the generated movement path MRr may be performed. For example, the control apparatus 3 may perform, as the rough movement operation, an operation for calculating at least one of the position and the pose of the container box CB in which the workpiece W is contained (alternatively, the surrounding object that is positioned around the workpiece W, the same applies in the below-described description) based on at least one of the image data IMG_2D and IMG_3D, which are respectively generated by the cameras 21 and 22 when the tool center point TCP is positioned at the first waiting position PW1, calculating the movement path MRr of the tool center point TCP from the first waiting position PW1 to the first fine approach position PF1 based on the calculated result of at least one of the position and the pose of the container box CB, and moving the tool center point TCP along the calculated movement path MRr.

For example, after the tool center point TCP is positioned at the first fine approach position PF1, the control apparatus 3 may perform, as the rough movement operation, an operation for calculating at least one of the position and the pose of the container box CB in which the workpiece W is contained based on at least one of the image data IMG_2D and IMG_3D, calculating the movement path MRr of the tool center point TCP from the first fine approach position PF1 to the holding target position PG based on the calculated result of at least one of the position and the pose of the container box CB, and moving the tool center point TCP along the calculated movement path MRr.

Note that the control apparatus 3 may calculate at least one of the position and the pose of the workpiece W in a coordinate system, which is different from the global coordinate system, based on at least one of the image data IMG_2D and IMG_3D, and generate the robot control signal based on at least one of the calculated position and pose of the workpiece W.

After the tool center point TCP is positioned at the holding target position PG, the end effector 4 may hold the workpiece W. In this case, the control apparatus 3 may generate the robot control signal for controlling the end effector 4 to hold the workpiece W.

After the end effector 4 holds the workpiece W, the robot 1 may move the end effector 4 so that the end effector 4 holding the workpiece W leave. Specifically, in order to allow the end effector 4 to leave, the robot 1 may move the tool center point TCP from the holding target position PG to the first fine approach position PF1, as illustrated in FIG. 3(c). In this case, the control apparatus 3 may generate the robot control signal for moving the robot 1 so as to move (namely, return) the tool center point TCP from the holding target position PG to the first fine approach position PF1. Especially, the control apparatus 3 may generate the robot control signal for moving the robot 1 so as to move the tool center point TCP from the holding target position PG to the first fine approach position PF1 based on at least one of the image data IMG_2D and IMG_3D output from the imaging apparatus 2. Note that the robot 1 may move the tool center point TCP along a path that is the same as the path along which the tool center point TCP has moved from the first fine approach position PF1 to the holding target position PG in a case where the tool center point TCP moves from the holding target position PG to the first fine approach position PF1. Note that the robot 1 may not move the tool center point TCP from the holding target position PG to the first fine approach position PF1. For example, the robot 1 may move the tool center point TCP to a position that is distant from the holding target position PG along the Z-axis by a predetermined distance.

Then, in order to allow the end effector 4 to leave, the robot 1 may move the tool center point TCP from the first fine approach position PF1 to a second waiting position PW2 as illustrated in FIG. 3(d). In this case, the control apparatus 3 may generate the robot control signal for moving the robot 1 so as to move the tool center point TCP from the first fine approach position PF1 to the second waiting position PW2. The second waiting position PW2 may mean a position at which the tool center point TCP should be positioned in a situation where the robot 1 waits after the end effector 4 has performed the predetermined process (in this case, the holding process) on the workpiece W. Namely, the second waiting position PW2 may mean a position at which the end effector 4 should wait after the end effector 4 has performed the predetermined process (in this case, the holding process) on the workpiece W. Note that the second waiting position PW2 may be a position that is the same as the first waiting position PW1, or may be a position that is different from the second waiting position PW2.

A movement path MRr of the tool center point TCP (alternatively, a movement path MRr of any movement base point MBP) from the first fine approach position PF1 to the second waiting position PW2 may be set in advance by the recipe file 321. In this case, the control apparatus 3 may generate the robot control signal for moving the robot 1 so as to move the tool center point TCP from the first fine approach position PF1 to the second waiting position PW2 based on the recipe file 321. Namely, the control apparatus 3 may generate the robot control signal for moving the robot 1 so as to move the tool center point TCP along the movement path MRr specified by the recipe file 321. Note that the control apparatus 3 may not calculate the position of the object OBJ (for example, the container box CB in the case of FIG. 3) based on at least one of the image data IMG_2D and IMG_3D in a case where the tool center point TCP moves from the first fine approach position PF1 to the second waiting position PW2.

Note that the movement path MRr of the tool center point TCP from the first fine approach position PF1 to the second waiting position PW2 and the movement path MRr of the tool center point TCP from the first waiting position PW1 to the first fine approach position PF1 are represented by a same reference symbol "MRr". This is because both the movement path MRr of the tool center point TCP from the first fine approach position PF1 to the second waiting position PW2 and the movement path MRr of the tool center point TCP from the first waiting position PW1 to the first fine approach position PF1 are common in that they are movement paths along which the tool center point TCP moves by the rough movement operation and are set in advance by the recipe file 321. In this case, the movement path MRr of the tool center point TCP from the first fine approach position PF1 to the second waiting position PW2 and the movement path MRr of the tool center point TCP from the first waiting position PW1 to the first fine approach position PF1 may be different from each other. Namely, the first waiting position PW1 and the second waiting position PW2 may be different from each other. Alternatively, the movement path MRr of the tool center point TCP from the first fine approach position PF1 to the second waiting position PW2 and the movement path MRr of the tool center point TCP from the first waiting position PW1 to the first fine approach position PF1 may be the same as each other. Namely, the first waiting position PW1 and the second waiting position PW2 may be the same as each other.

Moreover, the control apparatus 3 may perform, as the rough movement operation, an operation for calculating the movement path MRr from the first fine approach position PF1 (alternatively, the current position) to the second waiting position PW2 based on at least one of the position and the pose of the workpiece W sequentially calculated while sequentially calculating at least one of the position and the pose of the workpiece W based on at least one of the image data IMG_2D and IMG_3D in a period during which the tool center point TCP moves from the first fine approach position PF1 to the second waiting position PW2 (namely, in a period during which the end effector 4 moves) and moving the tool center point TCP along the generated movement path MRr. The control apparatus 3 may perform, as the rough movement operation, an operation for calculating the movement path MRr from the first fine approach position PF1

(alternatively, the current position) to the second waiting position PW2 based on at least one of the position and the pose of the container box CB sequentially calculated while sequentially calculating at least one of the position and the pose of the container box CB in which the workpiece W is contained (alternatively, the surrounding object that is positioned around the workpiece W, the same applies in the below-described description) based on at least one of the image data IMG_2D and IMG_3D in the period during which the tool center point TCP moves from the first fine approach position PF1 to the second waiting position PW2 (namely, in a period during which the end effector 4 moves) and moving the tool center point TCP along the generated movement path MRr. Alternatively, the control apparatus 3 may perform, as the rough movement operation, an operation for calculating at least one of the position and the pose of the workpiece W based on at least one of the image data IMG_2D and IMG_3D, which are respectively generated by the cameras 21 and 22 when the tool center point TCP is positioned at the first fine approach position PF1, calculating the movement path MRr of the tool center point TCP from the first fine approach position PF1 to the second waiting position PW2 based on the calculated result of at least one of the position and the pose of the workpiece W, and moving the tool center point TCP along the calculated movement path MRr. The control apparatus 3 may perform, as the rough movement operation, an operation for calculating at least one of the position and the pose of the container box CB in which workpiece W is contained (alternatively, the surrounding object that is positioned around the workpiece W, the same applies in the below-described description) based on at least one of the image data IMG_2D and IMG_3D, which are respectively generated by the cameras 21 and 22 when the tool center point TCP is positioned at the first fine approach position PF1, calculating the movement path MRr of the tool center point TCP from the first fine approach position PF1 to the second waiting position PW2 based on the calculated result of at least one of the position and the pose of the container box CB, and moving the tool center point TCP along the calculated movement path MRr.

After the tool center point TC moves to the second waiting position PW2, the end effector 4 may release the held workpiece W on another placing apparatus T (for example, the pallet PLT or the container box CB). In this case, the second waiting position PW2 may be referred to as a releasing target position at which the end effector 4 releases the workpiece W. After the tool center point TC moves to the second waiting position PW2, the end effector 4 may assemble the held workpiece W with another object (for example, another workpiece W). In this case, the second waiting position PW2 may be referred to as an assembly target position at which the end effector 4 assembles the workpiece W with another object.

In a case where the plurality of workpieces W are contained in the container box CB as described above, the robot 1 may move so that the end effector 4 holds the plurality of workpieces W in sequence. For example, the robot 1 may move so that the end effector 4 holds the plurality of workpieces W contained in the container box CB in the regular manner in sequence. For example, the robot 1 may move so that the end effector 4 holds the plurality of workpieces W contained in the container box CB in the irregular manner in sequence.

Next, as illustrated in FIG. 4(a), in order to release the held workpiece W, the robot 1 may move the tool center point TCP (namely, the movement base point MBP, the same applies in the below-described description) to a second fine approach position PF2. In this case, the control apparatus 3 may generate the robot control signal for moving the robot 1 so as to move the tool center point TCP to the second fine approach position PF2. The second fine approach position PF2 is a position that satisfies a condition that each of the cameras 21 and 22 can image the placing apparatus T (namely, the pallet PLT described above) in a situation where the tool center point TCP is positioned at the second fine approach position PF2. Namely, the second fine approach position PF2 is a position that satisfies a condition that the pallet PLT is positioned within the angle of view of each of the cameras 21 and 22 in a situation where the tool center point TCP is positioned at the second fine approach position PF2. Especially, the control apparatus 3 may generate the robot control signal for moving the robot 1 so as to move the tool center point TCP from a third waiting position PW3 to the second fine approach position PF2. The third waiting position PW3 may mean a position at which the tool center point TCP should be positioned in a situation where the robot 1 waits before the end effector 4 performs the predetermined process (here, the releasing process) on the workpiece W and the pallet PLT. Namely, the third waiting position PW3 may mean a position at which the end effector 4 should wait before the end effector 4 performs the predetermined process (here, the releasing process) on the workpiece W and the pallet PLT.

In a situation where the tool center point TCP is positioned at the third waiting position PW3, the cameras 21 and 22 may not be able to image the pallet PLT. In this case, an operation for moving the tool center point TCP from the third waiting position PW3 to the second fine approach position PF2 may be considered to be equivalent to an operation for moving the camera 21 and 22, which are positioned at positions that satisfy a condition that each of the cameras 21 and 22 cannot image the pallet PLT, to positions that satisfy a condition that each of the cameras 21 and 22 can image the pallet PLT. The operation for moving the tool center point TCP from the third waiting position PW3 to the second fine approach position PF2 may be considered equivalent to an operation for moving the tool center point TCP closer to the pallet PLT until each of cameras 21 and 22 can image the pallet PLT.

However, in a situation where the tool center point TCP is positioned at the third waiting position PW3, at least one of cameras 21 and 22 may be able to image the pallet PLT. Furthermore, in a situation where the tool center point TCP is positioned between the third waiting position PW3 and the second fine approach position PF2, each of cameras 21 and 22 may be able to image the pallet PLT or may not be able to image the pallet PLT. Namely, before the tool center point TCP reaches the second fine approach position PF2, each of the cameras 21 and 22 may be able to image the pallet PLT or may not be able to image the pallet PLT.

Note that at least one of the cameras 21 and 22 may actually image the pallet PLT before the tool center point TCP reaches the second fine approach position PF2 in a case where at least one of cameras 21 and 22 can image the pallet PLT before the tool center point TCP reaches the second fine approach position PF2. Alternatively, at least one of the cameras 21 and 22 may not actually image the pallet PLT before the tool center point TCP reaches the second fine approach position PF2 even in a case where at least one of the cameras 21 and 22 can image the pallet PLT before the tool center point TCP reaches the second fine approach position PF2.

A movement path MRr of the tool center point TCP (alternatively, a movement path MRr of any movement base point MBP) from the third waiting position PW3 to the second fine approach position PF2 may be set in advance by the recipe file 321. In this case, the control apparatus 3 may generate the robot control signal for moving the robot 1 so as to move the tool center point TCP from the third waiting position PW3 to the second fine approach position PF2 based on the recipe file 321. Namely, the control apparatus 3 may generate the robot control signal for moving the robot 1 so as to move the tool center point TCP along the movement path MRr specified by the recipe file 321.

Note that the robot 1 may perform the releasing process illustrated in FIG. 4(a) to FIG. 4(d) after performing the holding process illustrated in FIG. 3(a) to FIG. 3(d). In this case, the third waiting position PW3 illustrated in FIG. 4(a) may be a position that is the same as the first fine approach position PF1 or the second waiting position PW2 illustrated in FIG. 3(d). The third waiting position PW3 illustrated in FIG. 4(a) may be a position near the first fine approach position PF1 or the second waiting position PW2 illustrated in FIG. 3(d).

Then, as illustrated in FIG. 4(b), the robot 1 may move the tool center point TCP from the second fine approach position PF2 to a releasing target position PR. In this case, the control apparatus 3 may generate the robot control signal for moving the robot 1 so as to move the tool center point TCP from the second fine approach position PF2 to the releasing target position PR. The releasing target position PR is a position that satisfies a condition that the end effector 4 releases the workpiece W in a situation where the tool center point TCP is positioned at the releasing target position PR. Namely, the releasing target position PR is a position at which the end effector 4 releases the workpiece W. The releasing target position PR may typically be a relative position determined with respect to the pallet PLT on which the end effector 4 should release the workpiece W. The releasing target position PR is typically set in advance by the recipe file 321. The releasing target position PR may be referred to as a position at which the end effector 4 can properly release (place) the workpiece W on the pallet PLT (for example, without damaging the workpiece W by contact with the pallet PLT) in a situation where the tool center point TCP is positioned at the releasing target position PR.

As described above, in a situation where the tool center point TCP is positioned at the second fine approach position PF2, each of the cameras 21 and 22 can image the object OBJ (especially, the pallet PLT). In this case, the control apparatus 3 may generate the robot control signal for moving the robot 1 so as to move the tool center point TCP from the second fine approach position PF2 to the releasing target position PR based on at least one of the image data IMG_2D and IMG_3D output from the imaging apparatus 2. Specifically, the control apparatus 3 may calculate at least one of the position and the pose of the pallet PLT in the global coordinate system of the robot system SYS based on the image data IMG_2D and IMG_3D. For example, the control apparatus 3 may calculate at least one of a position of the pallet PLT along the X-axis of the global coordinate system, a position of the pallet PLT along the Y-axis of the global coordinate system, and a position of the pallet PLT along the Z-axis of the global coordinate system as the position of the pallet PLT in the global coordinate system. For example, the control apparatus 3 may calculate at least one of a pose of the pallet PLT around the X-axis of the global coordinate system, a pose of the pallet PLT around the Y-axis of the global coordinate system, and a pose of the pallet PLT around the Z-axis of the global coordinate system as the pose of the pallet PLT in the global coordinate system. Note that an operation for calculating at least one of the position and the pose of the pallet PLT based on at least one of the image data IMG_2D and IMG_3D will be described in detail later. Furthermore, the control apparatus 3 may generate the robot control signal for moving the robot 1 so as to move the tool center point TCP from the second fine approach position PF2 to the releasing target position PR based on at least one of the calculated position and pose of the pallet PLT.

In this case, the control apparatus 3 may move the tool center point TCP closer to the pallet PLT while sequentially calculating at least one of the position and the pose of the pallet PLT based on at least one of the image data IMG_2D and IMG_3D in a period during which the tool center point TCP moves from the second fine approach position PF2 to the releasing target position PR (namely, in a period during which the end effector 4 moves). Namely, the control apparatus 3 may move the end effector 4 closer to the pallet PLT while sequentially calculating at least one of the position and the pose of the pallet PLT based on at least one of the image data IMG_2D and IMG_3D in a period during which the tool center point TCP moves from the second fine approach position PF2 to the releasing target position PR (namely, in a period during which the end effector 4 moves). Alternatively, the control apparatus 3 may calculate at least one of the position and the pose of the pallet PLT based on at least one of the image data IMG_2D and IMG_3D, which are respectively generated by the cameras 21 and 22 when the tool center point TCP is positioned at the second fine approach position PF2, and may move the tool center point TCP closer to the pallet PLT based on the calculated result of at least one of the position and the pose of the pallet PLT. Specifically, the control apparatus 3 may calculate at least one of the position and the pose of the pallet PLT based on at least one of the image data IMG_2D and IMG_3D, which are respectively generated by the cameras 21 and 22 when the tool center point TCP is positioned at the second fine approach position PF2, calculate a movement path MRf of the tool center point TCP from the second fine approach position PF2 to the releasing target position PR based on the calculated result of at least one of the position and the pose of the pallet PLT, and move the tool center point TCP along the calculated movement path MRf. Alternatively, the control apparatus 3 may calculate at least one of the position and the pose of the pallet PLT based on at least one of the image data IMG_2D and IMG_3D, which are respectively generated by the cameras 21 and 22 when the tool center point TCP is positioned at the third waiting position PW3, calculate a movement path MRf of the tool center point TCP from the third waiting position PW3 to the releasing target position PR based on the calculated result of at least one of the position and the pose of the pallet PLT, and move the tool center point TCP along the calculated movement path MRf. Therefore, the operation for moving the tool center point TCP from the second fine approach position PF2 or the third waiting position PW3 to the releasing target position PR based on at least one of the image data IMG_2D and IMG_3D may be regarded as one example of the fine movement operation. Note that information related to the movement path MRf may be stored in the recipe file 321 in a case where the movement path MRf along which the tool center point TCP moves by the fine movement operation is generated. On the other hand, as described above, the control apparatus 3 may not calculate at least one of the position and the pose of the pallet PLT based on at least one of the image data IMG_2D and IMG_3D to move the tool center point TCP from the third waiting position PW3 to the second fine approach position PF2. Therefore, an operation for moving the tool center point TCP from the third waiting position PW3 to the second fine approach position PF2 without using at least one of the image data IMG_2D and IMG_3D may be regarded as one example of the rough movement operation.

However, the control apparatus 3 may perform an operation for moving the end effector 4 based on at least one of the image data IMG_2D and IMG_3D as the rough movement operation.

For example, the control apparatus 3 may perform, as the rough movement operation, an operation for calculating the movement path MRr from the third waiting position PW3 (alternatively, the current position) to the second fine approach position PF2 based on at least one of the position and the pose of the pallet PLT sequentially calculated while sequentially calculating at least one of the position and the pose of the pallet PLT based on at least one of the image data IMG_2D and IMG_3D in a period during which the tool center point TCP moves from the third waiting position PW3 to the second fine approach position PF2 (namely, in a period during which the end effector 4 moves) and moving the tool center point TCP along the generated movement path MRr. For example, alternatively, the control apparatus 3 may perform, as the rough movement operation, an operation for calculating at least one of the position and the pose of the pallet PLT based on at least one of the image data IMG_2D and IMG_3D, which are respectively generated by the cameras 21 and 22 when the tool center point TCP is positioned at the third waiting position PW3, calculating the movement path MRr of the tool center point TCP from the third waiting position PW3 to the second fine approach position PF2 based on the calculated result of at least one of the position and the pose of the pallet PLT, and moving the tool center point TCP along the calculated movement path MRr.

For example, the control apparatus 3 may perform, as the rough movement operation, an operation for calculating the movement path MRr from the third waiting position PW3 (alternatively, the current position) to the second fine approach position PF2 based on at least one of a position and a pose of a surrounding object sequentially calculated while sequentially calculating at least one of the position and the pose of the surrounding object, which is positioned around the pallet PLT, based on at least one of the image data IMG_2D and IMG_3D in a period during which the tool center point TCP moves from the third waiting position PW3 to the second fine approach position PF2 (namely, in a period during which the end effector 4 moves) and moving the tool center point TCP along the generated movement path MRr may be performed. For example, the control apparatus 3 may perform, as the rough movement operation, an operation for calculating at least one of the position and the pose of the surrounding object, which is positioned around the pallet PLT, based on at least one of the image data IMG_2D and IMG_3D, which are respectively generated by the cameras 21 and 22 when the tool center point TCP is positioned at the third waiting position PW3, calculating the movement path MRr of the tool center point TCP from the third waiting position PW3 to the second fine approach position PF2 based on the calculated result of at least one of the position and the pose of the surrounding object, and moving the tool center point TCP along the calculated movement path MRr.

For example, after the tool center point TCP is positioned at the second fine approach position PF2, the control apparatus 3 may perform, as the rough movement operation, an operation for calculating at least one of the position and the pose of the surrounding object, which is positioned around the pallet PLT, based on at least one of the image data IMG_2D and IMG_3D, calculating the movement path MRr of the tool center point TCP from the second fine approach position PF2 to the releasing target position PR based on the calculated result of at least one of the position and the pose of the surrounding object, and moving the tool center point TCP along the calculated movement path MRr.

Note that the control apparatus 3 may calculate at least one of the position and the pose of the pallet PLT in a coordinate system, which is different from the global coordinate system, based on at least one of the image data IMG_2D and IMG_3D, and generate the robot control signal based on at least one of the calculated position and pose of the pallet PLT.

After the tool center point TCP is positioned at the releasing target position PR, the end effector 4 may release the held workpiece W. In this case, the control apparatus 3 may generate the robot control signal for controlling the end effector 4 to release the held workpiece W. As a result, the end effector 4 places the held workpiece W on the pallet PLT.

After the end effector 4 releases the workpiece W, the robot 1 may move the end effector 4 so that the end effector 4 releasing the workpiece W leave. Specifically, in order to allow the end effector 4 to leave, the robot 1 may move the tool center point TCP from the releasing target position PR to the second fine approach position PF2, as illustrated in FIG. 4(c). In this case, the control apparatus 3 may generate the robot control signal for moving the robot 1 so as to move (namely, return) the tool center point TCP from the releasing target position PR to the second fine approach position PF2. Especially, the control apparatus 3 may generate the robot control signal for moving the robot 1 so as to move the tool center point TCP from the releasing target position PR to the second fine approach position PF2 based on at least one of the image data IMG_2D and IMG_3D output from the imaging apparatus 2. Note that the robot 1 may move the tool center point TCP along a path that is the same as the path along which the tool center point TCP has moved from the second fine approach position PF2 to the releasing target position PR in a case where the tool center point TCP moves from the releasing target position PR to the second fine approach position PF2. Note that the robot 1 may not move the tool center point TCP from the releasing target position PR to the second fine approach position PF2. For example, the robot 1 may move the tool center point TCP to a position that is distant from the releasing target position PR along the Z-axis by a predetermined distance.

Then, in order to allow the end effector 4 to leave, the robot 1 may move the tool center point TCP from the second fine approach position PF2 to a fourth waiting position PW4 as illustrated in FIG. 4(d). In this case, the control apparatus 3 may generate the robot control signal for moving the robot 1 so as to move the tool center point TCP from the second fine approach position PF2 to the fourth waiting position PW4. The fourth waiting position PW4 may mean a position at which the tool center point TCP should be positioned in a situation where the robot 1 waits after the end effector 4 has performed the predetermined process (in this case, the releasing process) on the workpiece W. Namely, the fourth waiting position PW4 may mean a position at which the end effector 4 should wait after the end effector 4 has performed the predetermined process (in this case, the releasing process) on the workpiece W. Note that the fourth waiting position PW4 may be a position that is the same as the third waiting position PW3, or may be a position that is different from the third waiting position PW3.

A movement path MRr of the tool center point TCP (alternatively, a movement path MRr of any movement base point MBP) from the second fine approach position PF2 to the fourth waiting position PW4 may be set in advance by the recipe file 321. In this case, the control apparatus 3 may generate the robot control signal for moving the robot 1 so as to move the tool center point TCP from the second fine approach position PF2 to the fourth waiting position PW4 based on the recipe file 321. Namely, the control apparatus 3 may generate the robot control signal for moving the robot 1 so as to move the tool center point TCP along the movement path MRr specified by the recipe file 321. Note that the control apparatus 3 may not calculate the position of the object OBJ based on at least one of the image data IMG_2D and IMG_3D in a case where the tool center point TCP moves from the second fine approach position PF2 to the fourth waiting position PW4.

Note that the movement path MRr of the tool center point TCP from the second fine approach position PF2 to the fourth waiting position PW4 and the movement path MRr of the tool center point TCP from the third waiting position PW3 to the second fine approach position PF2 are represented by the same reference symbol "MRr". This is because both the movement path MRr of the tool center point TCP from the second fine approach position PF2 to the fourth waiting position PW4 and the movement path MRr of the tool center point TCP from the third waiting position PW3 to the second fine approach position PF2 are common in that they are movement paths along which the tool center point TCP moves by the rough movement operation and are set in advance by the recipe file 321. In this case, the movement path MRr of the tool center point TCP from the second fine approach position PF2 to the fourth waiting position PW4 and the movement path MRr of the tool center point TCP from the third waiting position PW3 to the second fine approach position PF2 may be different from each other. Namely, the third waiting position PW3 and the fourth waiting position PW4 may be different from each other. Alternatively, the movement path MRr of the tool center point TCP from the second fine approach position PF2 to the fourth waiting position PW4 and the movement path MRr of the tool center point TCP from the third waiting position PW3 to the second fine approach position PF2 may be the same as each other. Namely, the third waiting position PW3 and the fourth waiting position PW4 may be the same as each other.

Moreover, the control apparatus 3 may perform, as the rough movement operation, an operation for calculating the movement path MRr from the second fine approach position PF2 (alternatively, the current position) to the fourth waiting position PW4 based on at least one of the position and the pose of the pallet PLT sequentially calculated while sequentially calculating at least one of the position and the pose of the pallet PLT based on at least one of the image data IMG_2D and IMG_3D in a period during which the tool center point TCP moves from the second fine approach position PF2 to the fourth waiting position PW4 (namely, in a period during which the end effector 4 moves) and moving the tool center point TCP along the generated movement path MRr. The control apparatus 3 may perform, as the rough movement operation, an operation for calculating the movement path MRr from the second fine approach position PF2 (alternatively, the current position) to the fourth waiting position PW4 based on at least one of the position and the pose of the surrounding object sequentially calculated while sequentially calculating at least one of the position and the pose of the surrounding object, which is positioned around the pallet PLT, based on at least one of the image data IMG_2D and IMG_3D in the period during which the tool center point TCP moves from the second fine approach position PF2 to the fourth waiting position PW4 (namely, in a period during which the end effector 4 moves) and moving the tool center point TCP along the generated movement path MRr. Alternatively, the control apparatus 3 may perform, as the rough movement operation, an operation for calculating at least one of the position and the pose of the pallet PLT based on at least one of the image data IMG_2D and IMG_3D, which are respectively generated by the cameras 21 and 22 when the tool center point TCP is positioned at the second fine approach position PF2, calculating the movement path MRr of the tool center point TCP from the second fine approach position PF2 to the fourth waiting position PW4 based on the calculated result of at least one of the position and the pose of the pallet PLT, and moving the tool center point TCP along the calculated movement path MRr. The control apparatus 3 may perform, as the rough movement operation, an operation for calculating at least one of the position and the pose of the surrounding object, which is positioned around the pallet PLT, based on at least one of the image data IMG_2D and IMG_3D, which are respectively generated by the cameras 21 and 22 when the tool center point TCP is positioned at the second fine approach position PF2, calculating the movement path MRr of the tool center point TCP from the second fine approach position PF2 to the fourth waiting position PW4 based on the calculated result of at least one of the position and the pose of the surrounding object, and moving the tool center point TCP along the calculated movement path MRr.

The robot 1 may move so that the end effector 4 releases the plurality of workpieces W on the pallet PLT in sequence. Namely, the robot 1 may move so that the end effector 4 places the plurality of workpieces W on the pallet PLT in sequence. For example, the robot 1 may move so that the end effector 4 places the plurality of workpieces W in a regular manner (namely, arranges and places the plurality of workpieces W) on the pallet PLT. For example, the robot 1 may move so that the end effector 4 places the plurality of workpieces W in an irregular manner (namely, places the plurality of workpieces W at random positions and / or with random poses) on the pallet PLT.

The robot 1 may move so that the end effector 4 holds and then releases the plurality of workpieces W in sequence. Namely, the robot 1 may alternately perform the holding process illustrated in FIG. 3(a) to FIG. 3(d) and the releasing process illustrated in FIG. 4(a) to FIG. 4(d). For example, the robot 1 may perform a first holding process for holding a first workpiece W, then perform a first releasing process for releasing the first workpiece W on the pallet PLT, then perform a holding process for holding a second workpiece W that is different from the first workpiece W, and then perform a releasing process for releasing the second workpiece W on the pallet PLT. In this case, the second waiting position PW2 in the first holding process may be the same as the third waiting position PW3 or the second fine approach position PF2 in the first releasing process. The fourth waiting position PW4 in the first releasing process may be the same as the first waiting position PW1 or the first fine approach position PF1 in the second holding process. The second waiting position PW2 in the second holding process may be the same as the third waiting position PW3 or the second fine approach position PF2 in the second releasing process.

Note that even in a case where the end effector 4 performs the predetermined process that is different from the holding process and the releasing process, the robot 1 may operate in an operation aspect that is similar to an operation aspect illustrated in FIG. 3(a) to FIG. 3(d) and FIG. 4(a) to FIG. 4(d). For example, the robot 1 may move the tool center point TCP from a pre-waiting position PW_pre to a fine approach position PF. The fine approach position PF is a position that satisfies a condition that each of the cameras 21 and 22 can image the object OBJ in a situation where the tool center point TCP is positioned at the fine approach position PF. Namely, the fine approach position PF is a position that satisfies a condition that the object OBJ (for example, the object OBJ that is the process target by the end effector 4) is positioned within the angle of view of each of the cameras 21 and 22 in a situation where the tool center point TCP is positioned at the fine approach position PF. The pre-waiting position PW_pre may mean a position at which the tool center point TCP should be positioned in a situation where the robot 1 waits before the end effector 4 performs the predetermined process on the object OBJ. Namely, the pre-waiting position PW_pre may mean a position at which the end effector 4 should wait before the end effector 4 performs the predetermined process on the object OBJ. Note that each of the first fine approach position PF1 and the second fine approach position PF2 described above is one example of the fine approach position PF. Each of the first waiting position PW1 and the third waiting position PW3 described above is one example of the pre-waiting position PW_pre.

In a situation where the tool center point TCP is positioned at the pre-waiting position PW_pre, the cameras 21 and 22 may not be able to image the object OBJ. In this case, an operation for moving the tool center point TCP from the pre-waiting position PW_pre to the fine approach position PF may be considered to be equivalent to an operation for moving the camera 21 and 22, which are positioned at positions that satisfy a condition that each of the cameras 21 and 22 cannot image the object OBJ, to positions that satisfy a condition that each of the cameras 21 and 22 can image the object OBJ. The operation for moving the tool center point TCP from the pre-waiting position PW_pre to the fine approach position PF may be considered equivalent to an operation for moving the tool center point TCP closer to the object OBJ until each of cameras 21 and 22 can image the object OBJ.

However, in a situation where the tool center point TCP is positioned at the pre-waiting position PW_pre, at least one of cameras 21 and 22 may be able to image the object OBJ. Furthermore, in a situation where the tool center point TCP is positioned between the pre-waiting position PW_pre and the fine approach position PF, each of cameras 21 and 22 may be able to image the object OBJ or may not be able to image the object OBJ. Namely, before the tool center point TCP reaches the fine approach position PF, each of the cameras 21 and 22 may be able to image the object OBJ or may not be able to image the object OBJ.

Note that at least one of the cameras 21 and 22 may actually image the object OBJ before the tool center point TCP reaches the fine approach position PF in a case where at least one of cameras 21 and 22 can image the object OBJ before the tool center point TCP reaches the fine approach position PF. Alternatively, at least one of the cameras 21 and 22 may not actually image the object OBJ before the tool center point TCP reaches the fine approach position PF even in a case where at least one of the cameras 21 and 22 can image the object OBJ before the tool center point TCP reaches the fine approach position PF.

A movement path MRr of the tool center point TCP from the pre-waiting position PW_pre to the fine approach position PF may be set in advance by the recipe file 321. In this case, the control apparatus 3 may generate the robot control signal for moving the robot 1 so as to move the tool center point TCP from the pre-waiting position PW_pre to the fine approach position PF based on the recipe file 321. Namely, the control apparatus 3 may generate the robot control signal for moving the robot 1 so as to move the tool center point TCP along the movement path MRr specified by the recipe file 321.

Then, the robot 1 may move the tool center point TCP from the fine approach position PF to a process target position PTP described below. The process target position PTP may mean a position at which the end effector 4 performs the predetermined process on the object OBJ. More specifically, the process target position PTP may mean a position of the tool center point TCP (namely, a position of the movement base point MBP) when the end effector 4 performs the predetermined process on the object OBJ. The process target position PTP may typically be a relative position determined with respect to the object OBJ on which the end effector 4 performs the predetermined process. The process target position PTP is typically set in advance by the recipe file 321. In this case, the control apparatus 3 may generate the robot control signal for moving the robot 1 so as to move the tool center point TCP from the fine approach position PF2 to the process target position PTP. Note that each of the holding target position PG and the releasing target position PR described above is one example of the process target position PTP. The process target position PTP may be referred to as a position at which the end effector 4 can perform the process on the object OBJ (for example, the workpiece W that is the process target by the end effector 4) in a situation where the tool center point TCP is positioned at the process target position PTP.

As described above, in a situation where the tool center point TCP is positioned at the fine approach position PF, each of the cameras 21 and 22 can image the object OBJ. In this case, the control apparatus 3 may generate the robot control signal for moving the robot 1 so as to move the tool center point TCP from the fine approach position PF to the process target position PTP based on at least one of the image data IMG_2D and IMG_3D output from the imaging apparatus 2. Specifically, the control apparatus 3 may calculate at least one of the position and the pose of the object OBJ in the global coordinate system of the robot system SYS based on the image data IMG_2D and IMG_3D. Note that an operation for calculating at least one of the position and the pose of the object OBJ based on at least one of the image data IMG_2D and IMG_3D will be described in detail later. Furthermore, the control apparatus 3 may generate the robot control signal for moving the robot 1 so as to move the tool center point TCP from the fine approach position PF to the process target position PTP based on at least one of the calculated position and pose of the object OBJ.

In this case, the control apparatus 3 may move the tool center point TCP closer to the object OBJ while sequentially calculating at least one of the position and the pose of the object OBJ based on at least one of the image data IMG_2D and IMG_3D in a period during which the tool center point TCP moves from the fine approach position PF to the process target position PTP (namely, in a period during which the end effector 4 moves). Namely, the control apparatus 3 may move the end effector 4 closer to the object OBJ while sequentially calculating at least one of the position and the pose of the object OBJ based on at least one of the image data IMG_2D and IMG_3D in a period during which the tool center point TCP moves from the fine approach position PF to the process target position PTP (namely, in a period during which the end effector 4 moves). Alternatively, the control apparatus 3 may calculate at least one of the position and the pose of the object OBJ based on at least one of the image data IMG_2D and IMG_3D, which are respectively generated by the cameras 21 and 22 when the tool center point TCP is positioned at the fine approach position PF, and may move the tool center point TCP closer to the object OBJ based on the calculated result of at least one of the position and the pose of the object OBJ. Specifically, the control apparatus 3 may calculate at least one of the position and the pose of the object OBJ based on at least one of the image data IMG_2D and IMG_3D, which are respectively generated by the cameras 21 and 22 when the tool center point TCP is positioned at the fine approach position PF, calculate a movement path MRf of the tool center point TCP from the first fine approach position PF to the holding target position PG based on the calculated result of at least one of the position and the pose of the object OBJ, and move the tool center point TCP along the calculated movement path MRf. Alternatively, the control apparatus 3 may calculate at least one of the position and the pose of the object OBJ based on at least one of the image data IMG_2D and IMG_3D, which are respectively generated by the cameras 21 and 22 when the tool center point TCP is positioned at the pre-waiting position PW_pre, calculate a movement path MRf of the tool center point TCP from the pre-waiting position PW_pre to the process target position PTP based on the calculated result of at least one of the position and the pose of the object OBJ, and move the tool center point TCP along the calculated movement path MRf. Therefore, the operation for moving the tool center point TCP from the fine approach position PF or the pre-waiting position PW_pre to the process target position PTP based on at least one of the image data IMG_2D and IMG_3D may be regarded as one example of the fine movement operation. Note that information related to the movement path MRf may be stored in the recipe file 321 in a case where the movement path MRf along which the tool center point TCP moves by the fine movement operation is generated. On the other hand, as described above, the control apparatus 3 may not calculate at least one of the position and the pose of the object OBJ based on at least one of the image data IMG_2D and IMG_3D to move the tool center point TCP from the pre-waiting position PW_pre to the fine approach position PF. Therefore, an operation for moving the tool center point TCP from the pre-waiting position PW_pre to the fine approach position PF without using at least one of the image data IMG_2D and IMG_3D may be regarded as one example of the rough movement operation.

However, the control apparatus 3 may perform an operation for moving the end effector 4 based on at least one of the image data IMG_2D and IMG_3D as the rough movement operation.

For example, the control apparatus 3 may perform, as the rough movement operation, an operation for calculating the movement path MRr from the pre-waiting position PW_pre (alternatively, the current position) to the fine approach position PF based on at least one of the position and the pose of the object OBJ sequentially calculated while sequentially calculating at least one of the position and the pose of the object OBJ based on at least one of the image data IMG_2D and IMG_3D in a period during which the tool center point TCP moves from the pre-waiting position PW_pre to the fine approach position PF (namely, in a period during which the end effector 4 moves) and moving the tool center point TCP along the generated movement path MRr. For example, the control apparatus 3 may perform, as the rough movement operation, an operation for calculating at least one of the position and the pose of the object OBJ based on at least one of the image data IMG_2D and IMG_3D, which are respectively generated by the cameras 21 and 22 when the tool center point TCP is positioned at the pre-waiting position PW_pre, calculating the movement path MRr of the tool center point TCP from the pre-waiting position PW_pre to the fine approach position PF based on the calculated result of at least one of the position and the pose of the object OBJ, and moving the tool center point TCP along the calculated movement path MRr.

For example, the control apparatus 3 may perform, as the rough movement operation, an operation for calculating the movement path MRr from the pre-waiting position PW_pre (alternatively, the current position) to the fine approach position PF based on at least one of a position and a pose of a surrounding object sequentially calculated while sequentially calculating at least one of the position and the pose of the surrounding object, which is positioned around the object OBJ, based on at least one of the image data IMG_2D and IMG_3D in a period during which the tool center point TCP moves from the pre-waiting position PW_pre to the fine approach position PF (namely, in a period during which the end effector 4 moves) and moving the tool center point TCP along the generated movement path MRr may be performed. For example, the control apparatus 3 may perform, as the rough movement operation, an operation for calculating at least one of the position and the pose of the surrounding object, which is positioned around the object OBJ, based on at least one of the image data IMG_2D and IMG_3D, which are respectively generated by the cameras 21 and 22 when the tool center point TCP is positioned at the pre-waiting position PW_pre, calculating the movement path MRr of the tool center point TCP from the pre-waiting position PW_pre to the fine approach position PF based on the calculated result of at least one of the position and the pose of the surrounding object, and moving the tool center point TCP along the calculated movement path MRr.

For example, after the tool center point TCP is positioned at the fine approach position PF, the control apparatus 3 may perform, as the rough movement operation, an operation for calculating at least one of the position and the pose of the surrounding object, which is positioned around the object OBJ, based on at least one of the image data IMG_2D and IMG_3D, calculating the movement path MRr of the tool center point TCP from the fine approach position PF to the process target position PTP based on the calculated result of at least one of the position and the pose of the surrounding object, and moving the tool center point TCP along the calculated movement path MRr.

Note that the control apparatus 3 may calculate at least one of the position and the pose of the object OBJ in a coordinate system, which is different from the global coordinate system, based on at least one of the image data IMG_2D and IMG_3D, and generate the robot control signal based on at least one of the calculated position and pose of the object OBJ.

After the tool center point TCP is positioned at the process target position PTP, the end effector 4 may perform the predetermined process on the object OBJ. In this case, the control apparatus 3 may generate the robot control signal for controlling the end effector 4 to perform the predetermined process on the object OBJ.

After the end effector 4 performs the predetermined process on the object OBJ, the robot 1 may move the end effector 4 so that the end effector 4 leave. Specifically, in order to allow the end effector 4 to leave, the robot 1 may move the tool center point TCP from the process target position PTP to the fine approach position PF, as illustrated in FIG. 4(c). In this case, the control apparatus 3 may generate the robot control signal for moving the robot 1 so as to move (namely, return) the tool center point TCP from the process target position PTP to the fine approach position PF. Especially, the control apparatus 3 may generate the robot control signal for moving the robot 1 so as to move the tool center point TCP from the process target position PTP to the fine approach position PF based on at least one of the image data IMG_2D and IMG_3D output from the imaging apparatus 2. Note that the robot 1 may move the tool center point TCP along a path that is the same as the path along which the tool center point TCP has moved from the fine approach position PF to the process target position PTP in a case where the tool center point TCP moves from the process target position PTP to the fine approach position PF. Note that the robot 1 may not move the tool center point TCP from the process target position PTP to the fine approach position PF. For example, the robot 1 may move the tool center point TCP to a position that is distant from the process target position PTP along the Z-axis by a predetermined distance.

Then, in order to allow the end effector 4 to leave, the robot 1 may move the tool center point TCP from the fine approach position PF to a post-waiting position PW_post. In this case, the control apparatus 3 may generate the robot control signal for moving the robot 1 so as to move the tool center point TCP from the fine approach position PF to the post-waiting position PW_post. The post-waiting position PW_post may mean a position at which the tool center point TCP should be positioned in a situation where the robot 1 waits after the end effector 4 has performed the predetermined process on the object OBJ. Namely, the post-waiting position PW_post may mean a position at which the end effector 4 should wait after the end effector 4 has performed the predetermined process on the object OBJ. Note that the post-waiting position PW_post may be a position that is the same as the pre-waiting position PW_pre, or may be a position that is different from the pre-waiting position PW_pre. Each of the second waiting position PW2 and the fourth waiting position PW4 described above is one example of the post-waiting position PW_post.

A movement path MRr of the tool center point TCP from the fine approach position PF to the post-waiting position PW_post may be set in advance by the recipe file 321. In this case, the control apparatus 3 may generate the robot control signal for moving the robot 1 so as to move the tool center point TCP from the fine approach position PF to the post-waiting position PW_post based on the recipe file 321. Namely, the control apparatus 3 may generate the robot control signal for moving the robot 1 so as to move the tool center point TCP along the movement path MRr specified by the recipe file 321. Note that the control apparatus 3 may not calculate the position of the object OBJ based on at least one of the image data IMG_2D and IMG_3D in a case where the tool center point TCP moves from the fine approach position PF to the post-waiting position PW_post.

Note that the movement path MRr of the tool center point TCP from the fine approach position PF to the post-waiting position PW_post and the movement path MRr of the tool center point TCP from the pre-waiting position PW_pre to the fine approach position PF are represented by the same reference symbol "MRr". This is because both the movement path MRr of the tool center point TCP from the fine approach position PF to the post-waiting position PW_post and the movement path MRr of the tool center point TCP from the pre-waiting position PW_pre to the fine approach position PF are common in that they are movement paths along which the tool center point TCP moves by the rough movement operation and are set in advance by the recipe file 321. In this case, the movement path MRr of the tool center point TCP from the fine approach position PF to the post-waiting position PW_post and the movement path MRr of the tool center point TCP from the pre-waiting position PW_pre to the fine approach position PF may be different from each other. Namely, the pre-waiting position PW_pre and the post-waiting position PW_post may be different from each other. Alternatively, the movement path MRr of the tool center point TCP from the fine approach position PF to the post-waiting position PW_post and the movement path MRr of the tool center point TCP from the pre-waiting position PW_pre to the fine approach position PF may be the same as each other. Namely, the pre-waiting position PW_pre and the post-waiting position PW_post may be the same as each other.

Moreover, the control apparatus 3 may perform, as the rough movement operation, an operation for calculating the movement path MRr from the fine approach position PF (alternatively, the current position) to the post-waiting position PW_post based on at least one of the position and the pose of the object OBJ sequentially calculated while sequentially calculating at least one of the position and the pose of the object OBJ based on at least one of the image data IMG_2D and IMG_3D in a period during which the tool center point TCP moves from the fine approach position PF to the post-waiting position PW_post (namely, in a period during which the end effector 4 moves) and moving the tool center point TCP along the generated movement path MRr. The control apparatus 3 may perform, as the rough movement operation, an operation for calculating the movement path MRr from the fine approach position PF (alternatively, the current position) to the post-waiting position PW_post based on at least one of the position and the pose of the surrounding object sequentially calculated while sequentially calculating at least one of the position and the pose of the surrounding object, which is positioned around the object OBJ, based on at least one of the image data IMG_2D and IMG_3D in the period during which the tool center point TCP moves from the fine approach position PF to the post-waiting position PW_post (namely, in a period during which the end effector 4 moves) and moving the tool center point TCP along the generated movement path MRr. Alternatively, the control apparatus 3 may perform, as the rough movement operation, an operation for calculating at least one of the position and the pose of the object OBJ based on at least one of the image data IMG_2D and IMG_3D, which are respectively generated by the cameras 21 and 22 when the tool center point TCP is positioned at the fine approach position PF, calculating the movement path MRr of the tool center point TCP from the fine approach position PF to the post-waiting position PW_post based on the calculated result of at least one of the position and the pose of the object OBJ, and moving the tool center point TCP along the calculated movement path MRr. The control apparatus 3 may perform, as the rough movement operation, an operation for calculating at least one of the position and the pose of the surrounding object, which is positioned around the object OBJ, based on at least one of the image data IMG_2D and IMG_3D, which are respectively generated by the cameras 21 and 22 when the tool center point TCP is positioned at the fine approach position PF, calculating the movement path MRr of the tool center point TCP from the fine approach position PF to the post-waiting position PW_post based on the calculated result of at least one of the position and the pose of the surrounding object, and moving the tool center point TCP along the calculated movement path MRr.

Note that the fine approach position PF may be regarded as a position that is closer to the object OBJ than both the pre-waiting position PW_pre, which is a movement start position of the tool center point TCP, and the post-waiting position PW_post, which is a movement end position of the tool center point TCP. In other words, the fine approach position PF may be regarded as a position that is closer to the object OBJ than both a movement start position of the end effector 4 and a movement end position of the end effector 4. Therefore, the fine approach position PF may be referred to as a first access position. Similarly, the process target position PTP may be regarded as a position that is closer to the object OBJ than the fine approach position PF. Therefore, the process target position PTP may be referred to as a second access position.

In this way, each of the control apparatus 3, the robot control apparatus 13, and the imaging apparatus 2 is used to control the robot 1. Therefore, a system including at least one of the control apparatus 3, the robot control apparatus 13, and the imaging apparatus 2 may be referred to as a robot control system, a control system, or an imaging system. A system including at least two of the control apparatus 3, the robot control apparatus 13, and the imaging apparatus 2 may be referred to as a robot control system, a control system, or an imaging system. A system including the control apparatus 3, the robot control apparatus 13, and the imaging apparatus 2 may be referred to as a robot control system, a control system, or an imaging system.

### (1-2) Configuration of Control Apparatus 3

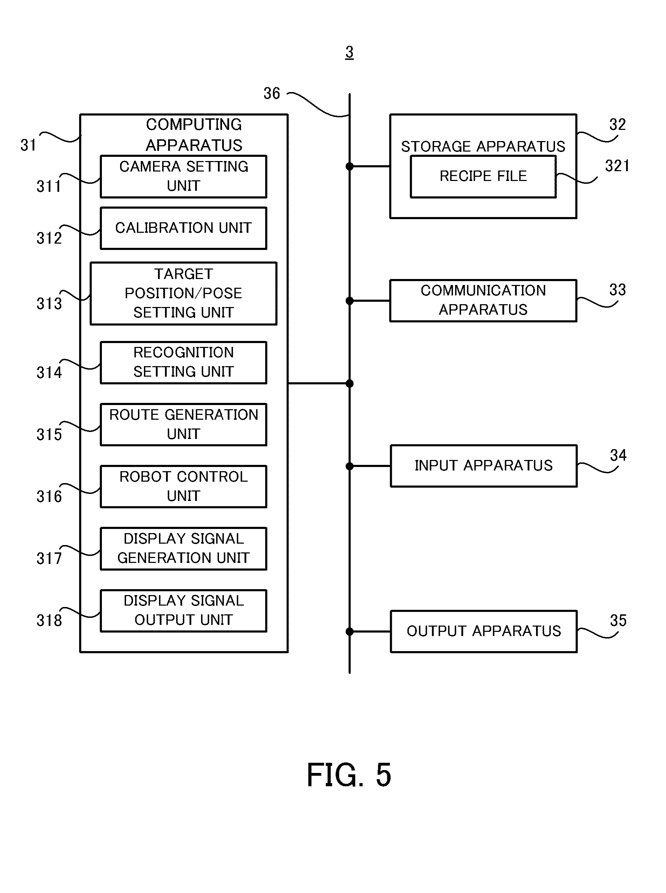

Next, with reference to FIG. 5, a configuration of the control apparatus 3 will be described. FIG. 5 is a block diagram that illustrates the configuration of the control apparatus 3.

As illustrated in FIG. 5, the control apparatus 3 includes a computing apparatus 31, a storage apparatus 32, and a communication apparatus 33. Furthermore, the control apparatus 3 may include an input apparatus 34 and a display apparatus 35. However, the control apparatus 3 may not include at least one of the input apparatus 34 and the display apparatus 35. The computing apparatus 31, the storage apparatus 32, the communication apparatus 33, the input apparatus 34, and the display apparatus 35 may be connected through a data bus 36.

The computing apparatus 31 may include at least one of a CPU (Central Processing Unit), a GPU (Graphic Processing Unit), and a FPGA (Field Programmable Gate Array), for example. The computing apparatus 31 reads a computer program. For example, the computing apparatus 31 may read the computer program recorded in the storage apparatus 32. For example, the computing apparatus 31 may read the computer program recorded in a non-transitory computerreadable recording medium by using a non-illustrated recording medium reading apparatus of the control apparatus 3. The computing apparatus 31 may acquire (namely, download or read) the computer program from a non-illustrated apparatus external to the control apparatus 3 through the communication apparatus 33 (alternatively, other communication apparatus). The computing apparatus 31 executes the read computer program. As a result, a logical functional block for performing a processing that should be performed by the control apparatus 3 (for example, the above-described robot control processing) is implemented in the computing apparatus 31. Namely, the computing apparatus 31 is configured to serve as a controller for implementing the logical functional block for performing the processing that should be performed by the control apparatus 3.

An arithmetic model that is buildable by machine learning may be implemented in the computing apparatus 31 by the computing apparatus 31 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The computing apparatus 31 may perform the robot control processing by using the arithmetic model. Namely, an operation for performing the robot control processing may include an operation for performing the robot control processing by using the arithmetic model. Note that the arithmetic model that has been built by off-line machine learning using training data may be implemented in the computing apparatus 31. Moreover, the arithmetic model implemented in the computing apparatus 31 may be updated by online machine learning on the computing apparatus 31. Alternatively, the computing apparatus 31 may perform the robot control processing by using the arithmetic model implemented in an apparatus external to the computing apparatus 31 (namely, an apparatus external to the control apparatus 3), in addition to or instead of the arithmetic model implemented in the computing apparatus 31.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the computing apparatus 31. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the computing apparatus 31 by means of the computing apparatus 31 (namely, a computer) executing the computer program, may be realized by a hardware such as a predetermined gate array (a FPGA (Field Programmable Gate Array), an ASIC (Application Specific Integrated Circuit) of the computing apparatus 31, or may be realized in a form in which the logical process block and a partial hardware module that realizes a partial element of the hardware are combined.

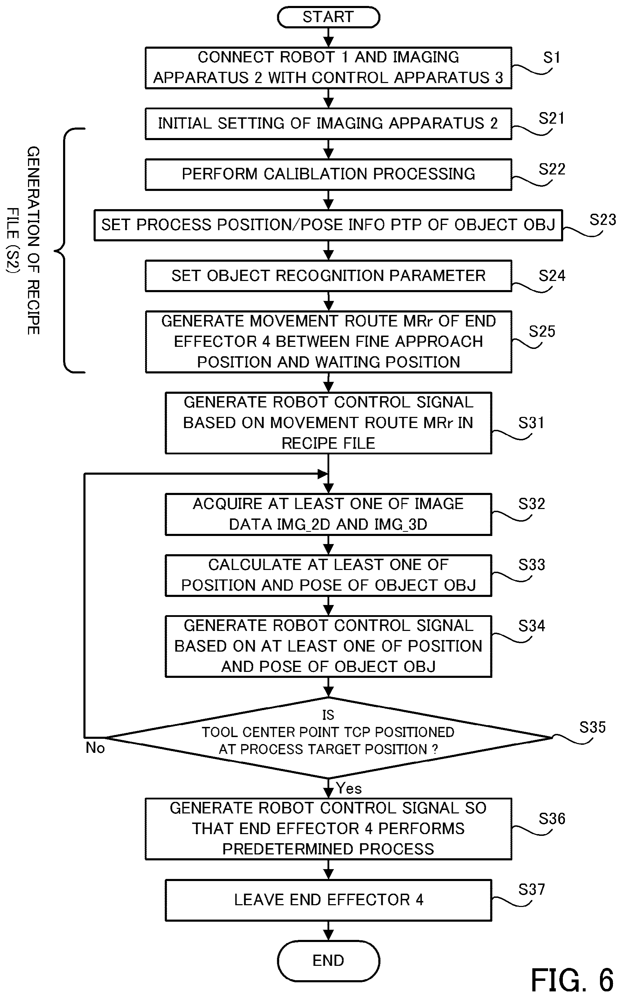

FIG. 5 illustrates an example of a logical functional block implemented in the computing apparatus 31 to perform the robot control processing. As illustrated in FIG. 5, a camera setting unit 311, a calibration unit 312 that may be referred to as a "computing unit", a process position / pose setting unit 313 that may be referred to as a "setting unit", a recognition setting unit 314, a path generation unit 315, a robot control unit 316, a display signal generation unit 317 that may be referred to as a "signal generation unit", and a display signal output unit 318 that may be referred to as a "display signal output unit". Note that a processing that is performed by each of the camera setting unit 311, the calibration unit 312, the process position / pose setting unit 313, the recognition setting unit 314, the path generation unit 315, the robot control unit 316, the display signal generation unit 317, and the display signal output unit 318 will be described in detail later with reference to FIG. 6 and so on, and a detailed description thereof is omitted here.

The storage apparatus 32 is configured to store desired data. For example, the storage apparatus 32 may temporarily store the computer program that is executed by the computing apparatus 31. The storage apparatus 32 may temporarily store data temporarily used by the computing apparatus 31 in a case where the computing apparatus 31 executes the computer program. The storage apparatus 32 may store data stored for a long term by the control apparatus 3. The storage apparatus 32 may include at least one of a RAM (Random Access Memory, a ROM (Read Only Memory), a hard disk apparatus, a magneto-optical disc, a SSD (Solid State Drive), and a disk array apparatus. Namely, the storage apparatus 32 may include a non-transitory recording medium.

In the present example embodiment, the storage apparatus 32 stores the recipe file 321. As described above, the recipe file 321 includes the information that specifies the detail of a series of operations that should be performed by the robot system SYS using at least one of the robot 1 and the end effector 4. In the present example embodiment, the control apparatus 3 generates the recipe file 321 before actually moving the robot 1 as described below. The recipe file 321 generated by the control apparatus 3 is stored in the storage apparatus 32.

The communication apparatus 33 is configured to communicate with each of the robot 1 and the imaging apparatus 2 through a no-illustrated communication network. Alternatively, the communication apparatus 33 may be configured to communicate with other apparatus that is different from the robot 1 and the imaging apparatus 2, in addition to or instead of at least one of the robot 1 and the imaging apparatus 2, through a non-illustrated communication network. In the present example embodiment, the communication apparatus 33 may receive (namely, acquire) the image data IMG_2D and IMG_3D from the imaging apparatus 2. Furthermore, the communication apparatus 33 may transmit (namely, output) the robot control signal to the robot 1.

The input apparatus 34 is an apparatus that is configured to receive an input of information from an outside of the control apparatus 3 to the control apparatus 3. For example, the input apparatus 34 may include an operating apparatus (for example, at least one of a keyboard, a mouse, and a touch panel) that is operable by a user of the control apparatus 3. For example, the input apparatus 34 may include a recording medium reading apparatus that is configured to read information recorded as data on a recording medium that is attachable to the control apparatus 3.

Note that information is allowed to be input to the control apparatus 3 as data from the apparatus external to the control apparatus 3 through the communication apparatus 33. In this case, the communication apparatus 33 may serve as an input apparatus that receives an input of information to the control apparatus 3 from outside of the control apparatus 3.

The display apparatus 35 is configured to output information as an image to an outside of the control apparatus 3. Namely, the display apparatus 35 is a display apparatus (a so-called display) that is configured to display the image.

Note that the control apparatus 3 is allowed to output the information as the data to the apparatus external to the control apparatus 3 through the communication apparatus 33. In this case, the communication apparatus 33 may serve as an output apparatus that outputs the information to the apparatus external to the control apparatus 3.

### (2) Robot Control Processing

Next, with reference to FIG. 6, the robot control processing (especially, a flow of the robot control processing) will be described. FIG. 5 is a flowchart that illustrates the flow of the robot control processing.

As illustrated in FIG. 6, first, the control apparatus 3 is activated and then the control apparatus 3 is connected to each of the robot 1 and the imaging apparatus 2 (a step S1). Specifically, an initial setting related to a connection between the control apparatus 3 and each of the robot 1 and the imaging apparatus 2 is performed so that the control apparatus 3 can communicate with each of the robot 1 and the imaging apparatus 2.

Then, the control apparatus 3 generates the recipe file 321 (a step S2). Namely, the control apparatus 3 generates the recipe file 321 before starting the predetermined process on the object OBJ by using the end effector 4. The control apparatus 3 generates the recipe file 321 before moving the robot 1.

In order to generate the recipe file 321, the control apparatus 3 (especially, the camera setting unit 311) may perform an initial setting of the imaging apparatus 2 (a step S21). For example, the camera setting unit 311 may set an imaging parameter that specifies a detail of an operation of the imaging apparatus 2. For example, the camera setting unit 311 may set the imaging parameter that specifies the detail of the operation of the imaging apparatus 2 so that the camera 21 can generate the image data IMG_2D properly. For example, the camera setting unit 311 may set the imaging parameter that specifies the detail of the operation of the imaging apparatus 2 so that the camera 22 can generate the image data IMG_3D properly. A parameter that specifies a detail of an operation of at least one of the cameras 21 and 22 is one example of the imaging parameter. At least one of an exposure time, a sensitivity, an aperture value, an exposure value, a gamma value, a shutter speed, and a white balance is one example of the parameter that specifies the detail of the operation of at least one of the cameras 21 and 22 include. A parameter that specifies a detail of an operation of the projection apparatus 23 is one example of the imaging parameter. At least one of an intensity of the projection light, the projection pattern of the projection light, a projection timing of the projection light, and a projection period of the projection light is one example of the parameter that specifies the detail of the operation of the projection apparatus 23.

The control apparatus 3 may perform the initial setting of the imaging apparatus 2 based on a characteristic of the object OBJ that should be imaged by the imaging apparatus 2. At least one of a size of the object OBJ, a shape of the object OBJ, and an optical characteristic (for example, an optical characteristic with respect to visible light) of the object OBJ is one example of the characteristic of the object OBJ. At least one of a reflectance, an absorptance, a scattering degree, and a diffusion degree is one example of the optical characteristic of the object OBJ. Alternatively, the control apparatus 3 may perform the initial setting of the imaging apparatus 2 based on a condition of an environment in which the object OBJ is positioned, in addition to or instead of the characteristic of the object OBJ that should be imaged by the imaging apparatus 2. A brightness of the environment (for example, the intensity of ambient light such as sunlight or an illumination) is one example of the condition of the environment in which the object OBJ is positioned.

Information related to a result of the initial setting of the imaging apparatus 2 (for example, information related to the set imaging parameter) may be stored in the storage apparatus 32 as at least a part of the recipe file 321.

However, the control apparatus 3 (especially, the camera setting unit 311) may not perform the initial setting of the imaging apparatus 2 in order to generate the recipe file 321. In this case, the control apparatus 3 (especially, the computing apparatus 31) may not include the camera setting unit 311.

In order to generate the recipe file 321, the control apparatus 3 (especially, the calibration unit 312) may perform a calibration processing of the imaging apparatus 2 (the step S21). The calibration processing is a processing for associating the robot coordinate system, which is a coordinate system of the robot 1, with an imaging coordinate system, which is a coordinate system of the imaging apparatus 2.

The robot coordinate system may be a three-dimensional coordinate system that is defined with respect to the robot 1. The robot coordinate system is typically a three-dimensional coordinate system set at the base 11 of the robot 1. Namely, the robot coordinate system is typically a three-dimensional coordinate system set at the base 11 that does not move even in a case where the robot 1 operates (namely, the robot arm 12 moves). However, the robot coordinate system may be a three-dimensional coordinate system that is different from the three-dimensional coordinate system set at the base 11 of the robot 1. For example, the robot coordinate system may be a three-dimensional coordinate system set at a tip (namely, an end) of the robot arm 12. For example, the robot coordinate system may be a three-dimensional coordinate system set at the end effector 4 attached to the robot arm 12. For example, the robot coordinate system may be a three-dimensional coordinate system whose origin point is the tool center point TCP of the end effector 4 attached to the robot arm 12.

The imaging coordinate system may be a three-dimensional coordinate system that is defined with respect to the imaging apparatus 2.

Note that the imaging coordinate system may include at least one of a three-dimensional coordinate system that is defined with respect to the camera 21 and a three-dimensional coordinate system that is defined with respect to the camera 22, because the imaging apparatus 2 includes the cameras 21 and 22 in the present example embodiment. Note that the three-dimensional coordinate system that is defined with respect to camera 21 is referred to as a 2D imaging coordinate system, and the three-dimensional coordinate system that is defined with respect to camera 22 is referred to as a 3D imaging coordinate system in the below-described description. In this case, the control apparatus 3 may perform, as the calibration processing, at least one of a processing for associating the robot coordinate system with the 2D imaging coordinate system and a processing for associating the robot coordinate system with the 3D imaging coordinate system. Note that the 2D imaging coordinate system is a coordinate system that is defined by an X-axis (2D), a Y-axis (2D), and a Z-axis (2D) that are orthogonal to one another.. At least one of the X-axis (2D), the Y-axis (2D), and the Z-axis (2D) may be an axis that is along an optical axis AX21 (see FIG. 2) of an optical system (especially, a terminal optical element such as an objective lens) of the camera 21. Furthermore, the 3D imaging coordinate system is a coordinate system that is defined by an X-axis (3D), a Y-axis (3D), and a Z-axis (3D) that are orthogonal to one another.. At least one of the X-axis (3D), the Y-axis (3D), and the Z-axis (3D) may be an axis that is along an optical axis AX22 (see FIG. 2) of an optical system (especially, a terminal optical element such as an objective lens) of the camera 22. For example, in a case where the camera 22 includes three or more monocular cameras as described above, the 3D imaging coordinate system may be a coordinate system that is defined with respect to one of the three or more monocular cameras of the camera 22. For example, in a case where the camera 22 includes two monocular cameras, the 3D image coordinate system may be a coordinate system that is defined with respect to one of the two monocular cameras of the camera 22. In this case, at least one of the X-axis (3D), the Y-axis (3D), and the Z-axis (3D) may be an axis that is along an optical axis of an optical system (especially, a terminal end optical element such as an objective lens) of the monocular camera.

The calibration processing for associating the robot coordinate system with the imaging coordinate system may include a processing for generating a calibration matrix for transforming a three-dimensional coordinate in one of the robot coordinate system and the imaging coordinate system to a three-dimensional coordinate in the other one of the robot coordinate system and the imaging coordinate system. The calibration matrix may include a translational transformation matrix that translates the three-dimensional coordinate in one of the robot coordinate system and the imaging coordinate system. Namely, the calibration matrix may include the translational transformation matrix that transforms a position of an object in one of the robot coordinate system and the imaging coordinate system to a position of the object in the other one of the robot coordinate system and the imaging coordinate system. The calibration matrix may include a rotational transformation matrix that rotationally moves the three-dimensional coordinate in one of the robot coordinate system and the imaging coordinate system. Namely, the calibration matrix may include the rotational transformation matrix that transforms a pose of an object in one of the robot coordinate system and the imaging coordinate system to a pose of the object in the other one of the robot coordinate system and the imaging coordinate system. In this case, the calibration unit 312 may generate the calibration matrix including at least one of the translational transformation matrix and the rotational transformation matrix by performing the calibration processing.

The calibration unit 312 may control the imaging apparatus 2 to image a predetermined calibration member CP, which is used for the calibration processing, and generate the calibration matrix described above based on calibration image data IMG_calib generated by the imaging apparatus 2. Note that the calibration member CP may be positioned at a known position in the robot coordinate system. For example, the calibration unit 312 may control the camera 21 to image the predetermined calibration member CP, which is used for calibration processing, and generate the calibration matrix for transforming the three-dimensional coordinate in one of the robot coordinate system and the 2D imaging coordinate system to the three-dimensional coordinate in the other one of the robot coordinate system and the 2D imaging coordinate system by using the image data IMG_2D generated by the camera 21 as the calibration image data IMG_calib. For example, the calibration unit 312 may control the camera 22 to image the predetermined calibration member CP, which is used for calibration processing, and generate the calibration matrix for transforming the three-dimensional coordinate in one of the robot coordinate system and the 3D imaging coordinate system to the three-dimensional coordinate in the other one of the robot coordinate system and the 3D imaging coordinate system by using the image data IMG_3D generated by the camera 22 as the calibration image data IMG_calib.

The calibration processing for associating the robot coordinate system with the imaging coordinate system may be considered to be equivalent to a processing for determining a relative positional relationship between the robot 1 (especially, the robot arm 12), which is the base for the robot coordinate system, and the imaging apparatus 2, which is the base for the imaging coordinate system. In other words, the calibration processing for associating the robot coordinate system with the imaging coordinate system may be considered to be equivalent to a processing for determining the relative position of the imaging apparatus 2 with respect to the robot 1 (especially, the robot arm 12). This is because the calibration matrix described above is a matrix that is specific to the relative positional relationship between the robot 1 (especially, the robot arm 12) and the imaging apparatus 2. As one example, the calibration processing for associating the robot coordinate system with the 2D imaging coordinate system may be considered to be equivalent to a processing for determining the relative positional relationship between the robot 1 (especially, the robot arm 12) and the camera 21. As another example, the calibration processing for associating the robot coordinate system with the 3D imaging coordinate system may be considered to be equivalent to a processing for determining the relative positional relationship between robot 1 (especially, the robot arm 12) and the camera 22.

Information related to a result of the calibration processing (for example, information related to the generated calibration matrix) may be stored in the storage apparatus 32 as at least a part of the recipe file 321.

However, the control apparatus 3 (especially, the calibration unit 312) may not perform the calibration processing of the imaging apparatus 2 in order to generate the recipe file 321. In this case, the control apparatus 3 (especially, the computing apparatus 31) may not include the calibration unit 312.

In order to generate the recipe file 321, the control apparatus 3 (especially, the process position / pose setting unit 313) may set a process position / pose information PAI (a step S23). The process position / pose information PAI is includes information that is usable to calculate at least one of a position at which the end effector 4 should be positioned when the end effector 4 performs the predetermined process on the object OBJ (namely, the process target position PTP described above) and a pose that should be taken by the end effector 4 when the end effector 4 performs the predetermined process on the object OBJ (it is referred to as a process target pose PTA in the below described description). The process target position PTP at which the end effector 4 performs the predetermined process on the object OBJ may be considered to mean a relative position of the end effector 4 with respect to the object OBJ. The process target position PTP at which the end effector 4 performs the predetermined process on the object OBJ may be considered to mean a relative position of the tool center point TCP with respect to the object OBJ. Moreover, the process target pose PTA with which the end effector 4 performs the predetermined process on the object OBJ may be considered to mean a relative pose of the end effector 4 with respect to the object OBJ. The process target pose PTA with which the end effector 4 performs the predetermined process on the object OBJ may be considered to mean a relative pose of the tool center point TCP with respect to the object OBJ.

The process position / pose information PAI may include information that indirectly indicates the process target position PTP by using the position of the end effector 4 with respect to the object OBJ when the end effector 4 performs the predetermined process on the object OBJ. Namely, the process position / pose information PAI may include, as the information for calculating the process target position PTP, information that indicates the position of the end effector 4 with respect to the object OBJ when the end effector 4 performs the predetermined process on the object OBJ. Similarly, the process position / pose information PAI may include information that indirectly indicates the process target pose PTA by using the pose of the end effector 4 with respect to the object OBJ when the end effector 4 performs the predetermined process on the object OBJ. Namely, the process position / pose information PAI may include, as the information for calculating the process target pose PTA, information that indicates the pose of the end effector 4 with respect to the object OBJ when the end effector 4 performs the predetermined process on the object OBJ.

Especially, although the process target position PTP at which the end effector 4 is actually positioned is a position in the global coordinate system and the process target pose PTA that is actually taken by the end effector 4 is a pose in the global coordinate system, the process position / pose information PAI may indicate at least one of the position and the pose of the end effector 4 with respect to on the object OBJ in a coordinate system that is different from the global coordinate system. For example, as will be described in detail later, the process position / pose setting unit 313 generates the process position / pose information PAI by using an object model OM, which is a three-dimensional model of the object OBJ, and an end effector model EM, which is a three-dimensional model of the end effector 4. In this case, the process position / pose information PAI may indicate at least one of the process target position PTP and the process target pose PTA by indicating at least one of the position and the pose of the end effector 4 with respect to the object OBJ when the end effector 4 performs the predetermined process on the object OBJ in a coordinate system that is defined with respect to the object model OM or the end effector model EM. Alternatively, the process position / pose information PAI may indicate at least one of the process target position PTP and the process target pose PTA by indicating at least one of the position and the pose of the end effector 4 with respect to the object OBJ when the end effector 4 performs the predetermined process on the object OBJ in a coordinate system that is defined separately from the global coordinate system and that is defined with respect to the object OBJ positioned in the global coordinate system. Alternatively, the process position / pose information PAI may indicate at least one of the process target position PTP and the process target pose PTA by indicating at least one of the position and the pose of the end effector 4 with respect to the object OBJ when the end effector 4 performs the predetermined process on the object OBJ in a coordinate system that is defined separately from the global coordinate system and that is defined with respect to the end effector 4 positioned in the global coordinate system. Alternatively, the process position / pose information PAI may indicate at least one of the process target position PTP and the process target pose PTA by indicating at least one of the position and the pose of the end effector 4 with respect to the object OBJ when the end effector 4 performs the predetermined process on the object OBJ in a coordinate system that is defined separately from the global coordinate system and that is defined with respect to the tool center point TCP positioned in the global coordinate system. Note that the position of the end effector 4 with respect to the object OBJ may mean the position of the tool center point TCP with respect to the object OBJ. The pose of the end effector 4 with respect to the object OBJ may mean the pose of the tool center point TCP with respect to the object OBJ.

Note that the process position / pose information PAI indicating the position of the end effector 4 with respect to the object OBJ may be considered to indicate a positional relationship between the object OBJ and the end effector 4. Furthermore, the process position / pose information PAI indicating the position of the end effector 4 with respect to the object OBJ may be considered to indicate a position of the object OBJ with respect to the end effector 4. Similarly, the process position / pose information PAI indicating the pose of the end effector 4 with respect to the object OBJ may be considered to indicate a postural relationship between the object OBJ and the end effector 4. Furthermore, the process position / pose information PAI indicating the pose of the end effector 4 with respect to the object OBJ may be considered to indicate a pose of the object OBJ with respect to the end effector 4.

In a case where the process position / pose information PAI indicates at least one of the position and the pose of the end effector 4 with respect to the object OBJ, the control apparatus 3 (especially, the robot control unit 316) may calculate at least one of the process target position PTP and the process target pose PTA in the global coordinate system based on the calculated result of at least one of the position and the pose of the object OBJ in the global coordinate system and the process position / pose information PAI generated by the process position / pose setting unit 313 when the fine movement operation is performed. For example, the robot control unit 316 may calculate the process target position PTP in the global coordinate system by changing the calculated result of the position of the object OBJ in the global coordinate system by a change amount corresponding to the relative position of the end effector 4 with respect to the object OBJ indicated by the process position / pose information PAI. For example, the robot control unit 316 may calculate the process target pose PTA in the global coordinate system by changing the calculated result of the pose of the object OBJ in the global coordinate system by a change amount corresponding to the relative pose of the end effector 4 with respect to the object OBJ indicated by the process position / pose information PAI. Then, the robot control unit 316 may control the robot 1 so that the end effector 4 moves toward the calculated process target position PTP and / or the end effector 4 takes the calculated process target pose PTA. Namely, the robot control unit 316 may generate the movement path MRf along which the end effector 4 moves toward the calculated process target position PTP, and control the robot 1 so that the end effector 4 moves along the generated movement path MRf and / or so that the pose of the end effector 4 that has finished moving along the movement path MRf becomes the process target pose PTA.

As one example, in a case where the end effector 4 performs the holding process for holding the workpiece W as described above, the process position / pose setting unit 313 may set the process position / pose information PAI that is usable to calculate, as the process target position PTP, the above-described holding target position PG (see FIG. 3(b) to FIG. 3(c)) at which the end effector 4 holds the workpiece W. Furthermore, the process position / pose setting unit 313 may set the process position / pose information PAI that is usable to calculate, as the process target pose PTA, the pose of the end effector 4 holding the workpiece W. As another example, in a case where the end effector 4 performs the releasing process for releasing the workpiece W as described above, the process position / pose setting unit 313 may set the process position / pose information PAI that is usable to calculate, as the process target position PTA, the releasing target position PR (see FIG. 4(b) to FIG. 4(c)) at which the end effector 4 releases the workpiece W. Furthermore, the process position / pose setting unit 313 may set the process position / pose information PAI that is usable to calculate, as the process target pose PTA, the pose of the end effector 4 releasing the workpiece W.

The process position / pose setting unit 313 may set the process position / pose information PAI that is usable to calculate, as the process target position PTP, at least one of the position of the end effector 4 along the X-axis of the global coordinate system, the position of the end effector 4 along the Y-axis of the global coordinate system, and the position of the end effector 4 along the Z-axis of the global coordinate system. The process position / pose setting unit 313 may set the process position / pose information PAI that is usable to calculate, as the process target pose PTA, at least one of the pose of the end effector 4 around the X-axis of the global coordinate system, the pose of the end effector 4 around the Y-axis of the global coordinate system, and the pose of the end effector 4 around the Z-axis of the global coordinate system. In other words, the process position / pose setting unit 313 may set process position / pose information PAI that is usable to calculate, as the process target pose PTA, at least one of the position of the end effector 4 along the rotational direction around the X-axis of the global coordinate system, the position of the end effector 4 along the rotational direction around the Y-axis of the global coordinate system, and the position of the end effector 4 along the rotational direction around the Z-axis of the global coordinate system.

The process position / pose setting unit 313 may set the process target position PTP by setting a relative positional relationship between the end effector 4 and the object OBJ when the end effector 4 performs the predetermined process on the object OBJ. In other words, the process position / pose setting unit 313 may set the process target position PTP by setting a relative position of the end effector 4 with respect to the object OBJ on which the end effector 4 performs the predetermined process. In this case, the process target position PTP at which the end effector 4 performs the predetermined process on the object OBJ may be considered to mean the relative position of the end effector 4 with respect to the object OBJ. Note that the process target position PTP at which the end effector 4 performs the predetermined process on the object OBJ may be considered to mean a relative position of the tool center point TCP with respect to the object OBJ.

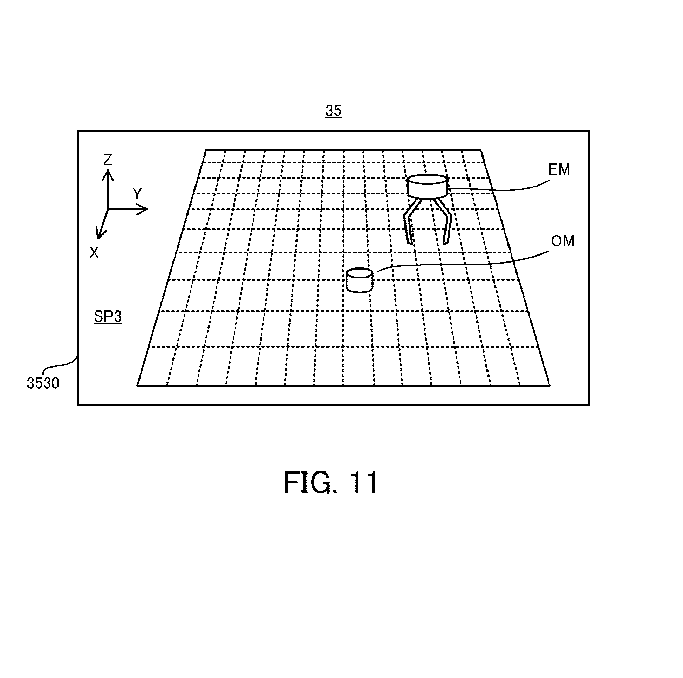

Note that a detail of a processing for setting the process target position PTP will be described in detail with reference to FIG. 11 and so on.

Information related to the set process target position PTP may be stored in the storage apparatus 32 as at least a part of the recipe file 321.

However, the control apparatus 3 (especially, the process position / pose setting unit 313) may not set the process position / pose information PAI in order to generate the recipe file 321. In this case, the control apparatus 3 (especially, the computing apparatus 31) may not include the process position / pose setting unit 313.

In order to generate the recipe file 321, the control apparatus 3 (especially, the recognition setting unit 314) may set an object recognition parameter that is used to calculate at least one of the position and the pose of the object OBJ based on at least one of the image data IMG_2D and IMG_3D (a step S24). A matching determination threshold value described later is one example of the object recognition parameter. Note that the matching determination threshold value will be described later together with a processing at a step S33 in FIG. 6 for calculating at least one of the position and the pose of the object OBJ.

Information related to the set object recognition parameter may be stored in the storage apparatus 32 as at least a part of the recipe file 321.

However, the control apparatus 3 (especially, the recognition setting unit 314) may not set the object recognition parameter in order to generate the recipe file 321. In this case, the control apparatus 3 (especially, the computing apparatus 31) may not include the recognition setting unit 314.

In order to generate the recipe file 321, the control apparatus 3 (especially, the path generation unit 315) may generate the movement path MRr of the end effector 4 between the fine approach position PF and the pre-waiting position PW_pre or the post-waiting position PW_post (a step S25). Note that each of the pre-waiting position PW_pre and the post-waiting position PW_post is collectively referred to as a waiting position PW in the below-described description. In the present example embodiment, as described above, the path generation unit 315 may generate the movement path MRr of the tool center point TCP (alternatively, the movement path MRr of any movement base point MBP) as the movement path MRr of the end effector 4. Note that the movement path MRr may be referred to as a target movement path, because the movement path MRr generated by the path generation unit 315 indicates a target of the movement path along which the end effector 4 (the tool center point TCP) should move at the fine approach position PF and the waiting position PW.

However, the path generation unit 315 may generate, as the movement path MRr, a series of path that includes not only the movement path of the end effector 4 between the fine approach position PF and the pre-waiting position PW_pre or the post-waiting position PW_post but also a movement path of the end effector 4 between the fine approach position PF and the process target position PTP at step S25. Namely, the path generation unit 315 may generate the movement path MRf of the end effector 4 between the fine approach position PF and the process target position PTP, which is generated by the robot control unit 316 based on at least one of the image data IMG_2D and IMG_3D, without using the image data IMG_2D and IMG_3D. In this case, the robot control unit 316 may not generate the movement path MRf of the end effector 4 between the fine approach position PF and the process target position PTP when the fine movement operation described above is performed. The robot control unit 316 may control the robot 1 so that the end effector 4 moves between the fine approach position PF and the process target position PTP along the movement path generated in advance by the path generation unit 315.

For example, in a case where the end effector 4 performs the holding process for holding the workpiece W as illustrated in FIG. 3(a) to FIG. 3(d), the path generation unit 315 may generate at least one of the movement path MRr of the tool center point TCP from the first waiting position PW1 to the first fine approach position PF1 and the movement path MRr of the tool center point TCP from the first fine approach position PF1 to the second waiting position PW2. For example, in a case where the end effector 4 performs the releasing process for releasing the workpiece W as illustrated in FIG. 4(a) to FIG. 4(d), the path generation unit 315 may generate the movement path MRr of the tool center point TCP from the third waiting position PW3 to the second fine approach position PF2 and the movement path MRr of the tool center point TCP from the second fine approach position PF2 to the fourth waiting position PW4.

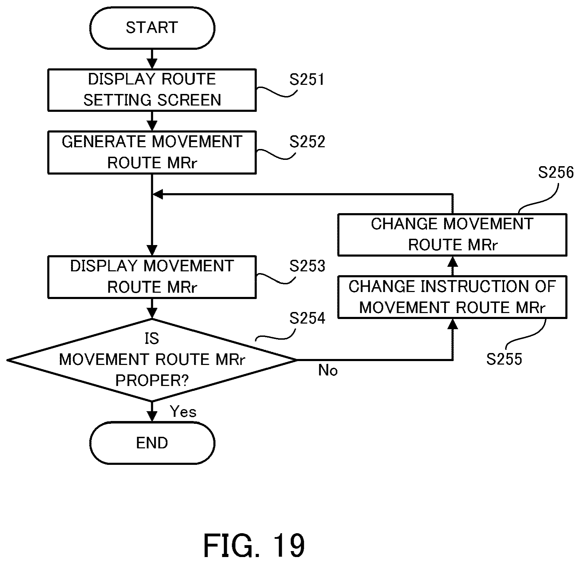

Note that a detail of a processing for generating the movement path MRr will be described in detail later with reference to FIG. 19 and so on.

Information related to the generated movement path MRr may be stored in the storage apparatus 32 as at least a part of the recipe file 321.

However, the control apparatus 3 (especially, the path generation unit 315) may not generate the movement path MRr in order to generate the recipe file 321. In this case, the control apparatus 3 (especially, the computing apparatus 31) may not include the path generation unit 315.

Then, the control apparatus 3 (especially, the robot control unit 316) controls the operations of the robot 1 and the end effector 4 so that the end effector 4 performs the predetermined process (a step S31 to a step S37). Namely, the control apparatus 3 starts the movement of the robot 1 based on the recipe file 321 after generating the recipe file 321.

Specifically, first, the robot control unit 316 generates the robot control signal for controlling the robot 1 so that the tool center point TCP moves from the pre-waiting position PW_pre to the fine approach position PF based on the recipe file 321 generated in advance at the step S2 (the step S31). For example, in a case where the end effector 4 performs the holding process for holding the workpiece W as illustrated in FIG. 3(a) to FIG. 3(d), the robot control unit 316 may generate the robot control signal for controlling the robot 1 so that the tool center point TCP moves along the movement path MRr that is indicated by the recipe file 321 and that reaches the first fine approach position PF1 from the first waiting position PW1. For example, in a case where the end effector 4 performs the releasing process for releasing the workpiece W as illustrated in FIG. 4(a) to FIG. 4(d), the robot control unit 316 may generate the robot control signal for controlling the robot 1 so that the tool center point TCP moves along the movement path MRr that is indicated by the recipe file 321 and that reaches the second fine approach position PF2 from the second waiting position PW2. As a result, the robot 1 moves the tool center point TCP along the movement path MRr that is indicated by the recipe file 321 and that reaches the fine approach position PF from the pre-waiting position PW_pre.

After the tool center point TCP starts moving along the movement path MRr, the robot control unit 316 generates the robot control signal for controlling the robot 1 so that the tool center point TCP moves from the fine approach position PF to the process target position PTP (the step S32 to the step S34).

Specifically, the robot control unit 316 acquires the image data IMG_2D from the camera 21 by using the communication apparatus 33 (the step S32). Specifically, the camera 21 images the object OBJ at a predetermined 2D imaging rate. For example, the camera 21 may image the object OBJ at the 2D imaging rate, at which the object OBJ is imaged tens of times to hundreds of times (as one example, 500 times) per second. As a result, the camera 21 generates the image data IMG_2D in a cycle based on the predetermined 2D imaging rate. For example, the camera 21 may generate tens to hundreds of (as one example, 500) image data IMG_2D per second. The control apparatus 3 acquires the image data IMG_2D each time the camera 21 generates the image data IMG_2D. Namely, the control apparatus 3 may acquire tens to hundreds of (as one example, 500) image data IMG_2D per second. Note that the camera 21 may not image the object OBJ at the predetermined 2D imaging rate. For example, after the tool center point TCP starts moving along the movement path MRr, the camera 21 may image the object OBJ one or more times and generate the image data IMG_2D. Then, the control apparatus 3 may acquire the generated image data IMG_2D.

Note that the image data IMG_2D may be referred to as two-dimensional position data indicating a two-dimensional position of the object OBJ captured in the image data IMG_2D. The image data IMG_2D (the two-dimensional position data) may be data indicating the two-dimensional position of at least a part of a surface of the object OBJ. Especially, the image data IMG_2D (the two-dimensional position data) is data indicating the two-dimensional position of each of a plurality of points of the object OBJ. For example, the image data IMG_2D (the two-dimensional position data) may be data indicating the two-dimensional position of each of the plurality of points on the surface of the object OBJ. For example, the image data IMG_2D (the two-dimensional position data) may be data indicating the two-dimensional position of each of the plurality of points that corresponding to a plurality of parts of the surface of the object OBJ, respectively.

The robot control unit 316 acquires the image data IMG_3D from the camera 22 by using the communication apparatus 33, in addition to or instead of acquiring image data IMG_2D (the step S32). Specifically, the camera 22 images the object OBJ at a predetermined 3D imaging rate. The 3D imaging rate is the same as the 2D imaging rate. However, the 3D imaging rate may be different from the 2D imaging rate. For example, the camera 22 may image the object OBJ at the 3D imaging rate, at which the object OBJ is imaged tens of times to hundreds of times (as one example, 500 times) per second. As a result, the camera 22 generates the image data IMG_3D in a cycle based on the predetermined 3D imaging rate. For example, the camera 22 may generate tens to hundreds of (as one example, 500) image data IMG_3D per second. The control apparatus 3 acquires the image data IMG_3D each time the camera 22 generates the image data IMG_3D. Namely, the control apparatus 3 may acquire tens to hundreds of (as one example, 500) image data IMG_3D per second. Note that the camera 22 may not image the object OBJ at the predetermined 3D imaging rate. For example, after the tool center point TCP starts moving along the movement path MRr, the camera 22 may image the object OBJ one or more times and generate the image data IMG_3D. Then, the control apparatus 3 may acquire the generated image data IMG_3D.

Each time the robot control unit 316 acquires the image data IMG_3D, the robot control unit 316 generates three-dimensional position data WSD based on the acquired image data IMG_3D. The three-dimensional position data WSD is data indicating a three-dimensional position of the object OBJ captured in the image data IMG_3D. For example, the three-dimensional position data WSD may be data indicating the three-dimensional position of at least a part of a surface of the object OBJ. Especially, the three-dimensional position data WSD is data indicating the three-dimensional position of each of a plurality of points of the object OBJ. For example, the three-dimensional position data WSD may be data indicating the three-dimensional position of each of the plurality of points on the surface of the object OBJ. For example, the three-dimensional position data WSD may be data indicating the three-dimensional position of each of the plurality of points that correspond to a plurality of parts of the surface of the object OBJ, respectively.

Specifically, as described above, the object OBJ on which the projection pattern is projected is captured in the image indicated by the image data IMG_3D. In this case, the projection pattern captured in the image indicated by the image data IMG_3D reflects the three-dimensional shape of at least a part of the surface of the object OBJ on which the projection pattern is projected. A shape of the projection pattern captured in the image indicated by the image data IMG_3D reflects the three-dimensional shape of at least a part of the surface of the object OBJ on which the projection pattern is projected. Therefore, the robot control unit 316 may calculate the three-dimensional shape of at least a part of the surface of the object OBJ based on the projection pattern captured in the image indicated by the image data IMG_3D. The three-dimensional shape of at least part of the surface of object OBJ substantially indicates the three-dimensional position of each of the plurality of points of the object OBJ. This is because each of the plurality of points of the object OBJ is included in the surface of the object OBJ. Therefore, a processing for calculating the three-dimensional shape of at least part of the surface of the object OBJ may be considered to be substantially equivalent to a processing for calculating the three-dimensional position of each of the plurality of points of the object OBJ. Therefore, the robot control unit 316 can generate three-dimensional position data WSD based on the image data IMG_3D.

Depth image data is one example of the three-dimensional position data WSD. The depth image data is an image data in which not only brightness information but also depth information is associated with each pixel of a depth image indicated by the depth image data. The depth information is information that indicates a distance between each part of the object OBJ captured in each pixel and the camera 22 (namely, a depth). Note that the depth image data may be image data in which the brightness information of each pixel indicates the depth of each part of the object OBJ (namely, the distance between each part of the object OBJ and the camera 22). The robot control unit 316 may calculate the distance between the camera 22 and each part of the object OBJ captured in the image indicated by the image data IMG_3D based on the projection pattern captured in the image indicated by the image data IMG_3D, and generate the depth image by associating the calculated distance as the depth information to each pixel of the image indicated by the image data IMG_3D.

Point cloud date is another example of the three-dimensional position data WSD. The point cloud data is data indicating a set of points, each of which corresponds to each part of the object OBJ captured in the image indicated by the image data IMG_3D, in a three-dimensional space. The point cloud data may be referred to as data indicating the three-dimensional position of each point corresponding to each part of the object OBJ. The robot control unit 316 may generate the point cloud data by a known method. For example, the robot control unit 316 may generate the point cloud data based on the depth image data and a camera parameters of the camera 22.

Note that the imaging apparatus 2 (the robot system SYS) may not include the projection apparatus 23, and the projection apparatus 23 may not project the projection pattern. In this case, the robot control unit 316 may generate the three-dimensional position data WSD based on the image data IMG_3D, which is generated by the camera 22 imaging the object OBJ on which the projection pattern is not projected, by a known method.

Note that the robot control unit 316 may acquire the image data IMG_2D from the camera 21 before the tool center point TCP reaches the fine approach position PF in a case where the camera 21 can image the object OBJ before the tool center point TCP reaches the fine approach position PF (the step S32). Namely, the robot control unit 316 may acquire the image data IMG_2D from the camera 21 in a period during which the tool center point TCP moves along the movement path MRr. In other words, the robot control unit 316 may acquire the image data IMG_2D from the camera 21 in a period during which the camera 21 moves relative to the object OBJ due to a driving of the robot 1 for moving the tool center point TCP along the movement path MRr. However, the robot control unit 316 may acquire the image data IMG_2D from the camera 21 after the tool center point TCP reaches the fine approach position PF. The robot control unit 316 may acquire the image data IMG_2D from the camera 21 in a state in which the tool center point TCP has reached the fine approach position PF and the robot 1 is stopped (namely, the camera 21 is stopped).

Similarly, the robot control unit 316 may acquire the image data IMG_3D from the camera 22 before the tool center point TCP reaches the fine approach position PF in a case where the camera 22 can image the object OBJ before the tool center point TCP reaches the fine approach position PF (the step S32). Namely, the robot control unit 316 may acquire the image data IMG_3D from the camera 22 in a period during which the tool center point TCP moves along the movement path MRr. In other words, the robot control unit 316 may acquire the image data IMG_3D from the camera 22 in a period during which the camera 22 moves relative to the object OBJ due to a driving of the robot 1 for moving the tool center point TCP along the movement path MRr. However, the robot control unit 316 may acquire the image data IMG_3D from the camera 22 after the tool center point TCP reaches the fine approach position PF. The robot control unit 316 may acquire the image data IMG_3D from the camera 22 in a state in which the tool center point TCP has reached the fine approach position PF and the robot 1 is stopped (namely, the camera 22 is stopped).

Moreover, the robot control unit 316 may generate the three-dimensional position data WSD before the tool center point TCP reaches the fine approach position PF. Namely, the robot control unit 316 may generate the three-dimensional position data WSD in a period during which the tool center point TCP moves along the movement path MRr. In other words, the robot control unit 316 may generate the three-dimensional position data WSD in a period during which the camera 22 moves relative to the object OBJ due to a driving of the robot 1 for moving the tool center point TCP along the movement path MRr. However, the robot control unit 316 may generate the three-dimensional position data WSD after the tool center point TCP reaches the fine approach position PF. The robot control unit 316 may generate the three-dimensional position data WSD in a state in which the tool center point TCP has reached the fine approach position PF and the robot 1 is stopped (namely, the camera 22 is stopped).

Then, the robot control unit 316 calculates at least one of the position and the pose of the object OBJ based on at least one of the image data IMG_2D and the three-dimensional position data WSD (the step S33). In the present example embodiment, the robot control unit 316 may calculate the position and the pose of the object OBJ by performing a matching processing using at least one of the image data IMG_2D and the three-dimensional position data WSD.

As a first example of the matching processing, the robot control unit 316 may perform a 2D matching processing using the image data IMG_2D (the two-dimensional position data) and two-dimensional model data indicating a two-dimensional model that is a reference for the object OBJ. Specifically, the robot control unit 316 may perform, as the 2D matching processing, an object detection processing for detecting the object OBJ indicated by a template image in the image indicated by the image data IMG_2D by using a two-dimensional model indicated by the two-dimensional model data as the template image. In other words, the robot control unit 316 may perform, as the matching processing, the object detection processing for detecting the object OBJ in the image indicated by the image data IMG_2D by detecting a similar image part, which is similar to the template image, in the image indicated by the image data IMG_2D. Note that the 2D matching processing (in this case, the object detection processing) itself may be the same as an existing matching processing. For example, the robot control unit 316 may perform the 2D matching processing by using a known method such as a SIFT (Scale-Invariant Feature Transform) or a SURF (Speed-Upped Robust Feature).

The two-dimensional model data may be data based on three-dimensional model data of the object OBJ. Here, the two-dimensional model data may be CAD (Computer Aided Design) model data of the object OBJ, or may be model data of the object OBJ (data indicating a polygon model or a mesh model) generated based on a pre-measured result using a known three-dimensional shape measurement apparatus or the camera 22. For example, the two-dimensional model data may be two-dimensional image data indicating at least a part of a plurality of two-dimensional models of the object OBJ, which are generated by virtually projecting at least a part of the three-dimensional model indicated by the three-dimensional model data of the object OBJ on a virtual planes that are orthogonal to a plurality of different directions, respectively, from the plurality of different directions. Note that the two-dimensional model data may not be data based on the three-dimensional model data of the object OBJ. For example, the two-dimensional model data may be a feature part on the image indicated by the image data IMG_2D generated by the camera 21 imaging the object OBJ in advance. For example, the feature part on the image indicated by the image data IMG_2D may be at least one of a feature point and an edge of the object OBJ captured in the image indicated by the image data IMG_2D. Note that, the two-dimensional model may be regarded as a model of at least a part of the edge (an edge model) of the object OBJ in a case where the feature part of the object OBJ includes the edge of the object OBJ. The feature part on the image indicated by the image data IMG_2D may be at least one of a plurality of feature points of the object OBJ and the at least partial edge of the edge the object OBJ, which are captured in the image indicated by the image data IMG_2D. Note that the feature part on the image indicated by the image data IMG_2D may be detected by a known image processing.

The robot control unit 316 may perform at least one of a translation, a scaling and / or a rotation of the two-dimensional model of the object OBJ captured in the template image so that a feature part (for example, at least one of a feature point and an edge) of the entire two-dimensional model of the object OBJ included in the template image is closer to (typically, matches) the feature part of the entire object OBJ captured in the image indicated by the image data IMG_2D. As a result, the robot control unit 316 may determine a positional relationship between a coordinate system of the two-dimensional model data and the 2D imaging coordinate system. Then, the robot control unit 316 may calculate at least one of the position and the pose of the object OBJ in the 2D imaging coordinate system from at least one of the position and the pose of the object OBJ in the coordinate system of the two-dimensional model data based on the positional relationship between the coordinate system of the two-dimensional model data and the 2D imaging coordinate system.

Then, the robot control unit 316 transforms at least one of the position and the pose of the object OBJ in the 2D imaging coordinate system to at least one of the position and the pose of the object OBJ in the robot coordinate system based on the calibration matrix indicated by the recipe file 321. In a case where the robot coordinate system is used as the global coordinate system, at least one of the position and the pose of the object OBJ in the robot coordinate system corresponds to at least one of the position and the pose of the object OBJ in the global coordinate system. However, in a case where a coordinate system different from the robot coordinate system is used as the global coordinate system, the robot control unit 316 may calculate at least one of the position and the pose of the object OBJ in the global coordinate system from at least one of the position and the pose of the object OBJ in the robot coordinate system by using a transformation matrix for transforming the three-dimensional coordinate in one of the global coordinate system and the robot coordinate system to the three-dimensional coordinate in the other one of the global coordinate system and the robot coordinate system.

In making the feature part of the entire two-dimensional model of the object OBJ included in the template image be closer to the feature part of the entire object OBJ captured in the image indicated by the image data IMG_2D, the robot control unit 316 may calculates a matching similarity that is a degree of similarity between the template image (namely, the two-dimensional model of the object OBJ) and the image indicated by the image data IMG_2D (especially, an image part to which the object OBJ of the template image is aligned). The robot control unit 316 may perform at least one of the translation, the scaling and / or the rotation of the two-dimensional model of the object OBJ included in the template image so that the matching similarly is maximum. As a result, the image part of the image indicated by the image data IMG_2D to which the two-dimensional model of the object OBJ of the template image is aligned in a situation where the matching similarity is maximum is detected as a similar image part that is similar to the template image in the image indicated by the image data IMG_2D. Namely, the object OBJ indicated by the similar image part is detected. Note that the matching similarity may be considered to be equivalent to a degree of correlation that indicates a correlation between the template image and the image indicated by the image data IMG_2D. Note that it can be said that the degree of correlation is an index that indicates a correlation between the two-dimensional model of the object OBJ included in the template image and the object OBJ captured in the image indicated by the image data IMG_2D. Note that the matching similarity may be referred to as a matching score.

In a case where the 2D matching processing detects the object OBJ whose calculated matching similarity is higher than the matching determination threshold value indicated by the recipe file 321 described above, the robot control unit 316 may select this object OBJ as one object OBJ on which the end effector 4 should perform the predetermined process. On the other hand, in a case where the 2D matching processing detects the object OBJ whose calculated matching similarity is lower than the matching determination threshold value indicated by the recipe file 321 described above, the robot control unit 316 may not select this object OBJ as one object OBJ on which the end effector 4 should perform the predetermined process.

Depending on the image indicated by the image data IMG_2D, there is a possibility that the plurality of objects OBJ, each of which is indicated by the template image, are captured in the image. For example, in a case where the plurality of workpieces W are placed on the placing apparatus T (for example, in a case where the plurality of workpieces W are placed on the placing apparatus T in the irregular manner or the regular manner), there is a possibility that the camera 21 images the plurality of workpieces W and generates the image data IMG_2D in which the plurality of workpieces W are captured as the plurality of objects OBJ. For example, in a case where the plurality of workpieces W are contained in the container box CB that is one example of the placing apparatus T (for example, in a case where the plurality of workpieces W are contained in the container box CB in the irregular manner or the regular manner), there is a possibility that the camera 21 images the plurality of workpieces W and generates the image data IMG_2D in which the plurality of workpieces W are captured as the plurality of objects OBJ. In this case, the robot control unit 316 may perform a processing (the 2D matching processing) for making the feature part of the object OBJ included in the template image be closer to the feature part of the object OBJ captured in the image indicated by the image data IMG_2D in sequence for the plurality of objects OBJ captured in the image indicated by the image data IMG_2D. Then, the robot control unit 316 may select, as one object OBJ on which the end effector 4 should perform the predetermined process among the plurality of objects OBJ, one object OBJ whose matching similarity is maximum. Alternatively, the robot control unit 316 may select, as one object OBJ on which the end effector 4 should perform the predetermined process among the plurality of objects OBJ, one object OBJ corresponding to the matching similarity that is higher than the matching determination threshold value indicated by the recipe file 321. Alternatively, the robot control unit 316 may select, as one object OBJ on which the end effector 4 should perform the predetermined process among the plurality of objects OBJ, one object OBJ that corresponds to the matching similarity higher than the matching determination threshold value and that is the closest to the end effector 4. Alternatively, for example, in a case where the plurality of objects OBJ are contained in the container box CB (the placing apparatus T) illustrated in FIG. 3 (for example, in a case where the plurality of objects OBJ are randomly stacked), the robot control unit 316 may select, as one object OBJ on which the end effector 4 should perform the predetermined process among the plurality of objects OBJ, one object OBJ that corresponds to the matching similarity higher than the matching determination threshold value and whose Z coordinate along the Z-axis is the largest (which is positioned at the highest position). Note that the Z coordinate of each of the plurality of objects OBJ may be the Z position along the Z-axis of the global coordinate system of the robot 1 calculated by the above-described 2D matching processing. Alternatively, the robot control unit 316 may select, as one object OBJ on which the end effector 4 should perform the predetermined process among the plurality of objects OBJ, one object OBJ that corresponds to the matching similarity higher than the matching determination threshold value and on which the end effect 4 can perform the predetermined process. Alternatively, the robot control unit 316 may select, as one object OBJ on which the end effector 4 should perform the predetermined process, one object OBJ whose area captured in the image indicated by the image data IMG_2D is the widest amount the plurality of objects OBJ captured in the image indicated by the image data IMG_2D. Note that the robot control unit 316 may not perform the 2D matching processing in sequence for the plurality of objects OBJ captured in the image indicated by the image data IMG_2D. For example, the robot control unit 316 may perform the 2D matching processing in parallel for each of the plurality of objects OBJ captured in the image indicated by the image data IMG_2D.

However, in a case where the end effector 4 can perform the predetermined process on two or more objects OBJ simultaneously, the robot control unit 316 may select each of at least two of the plurality of objects OBJ as one object OBJ on which the end effector 4 should perform the predetermined process. Namely, the robot control unit 316 may select at least two objects OBJ on which the end effector 4 should perform the predetermined process simultaneously. Note that an example in which the robot control unit 316 selects one of the plurality of objects OBJ as the one object OBJ on which the end effector 4 should perform the predetermined process will be described in the below-described description for convenience of description.

Note that the robot control unit 316 may calculate the matching similarities of the plurality of objects OBJ, then select one object OBJ, on which the end effector 4 should perform the predetermined process, based on the matching similarities of the plurality of objects OBJ, and then calculate at least one of the position and the pose of the selected one object OBJ. In this case, the robot control unit 316 may not calculate the position and the pose of the other object OBJ that is not selected as the one object OBJ on which the end effector 4 should perform the predetermined process. Alternatively, since at least one of the position and the pose of the object OBJ is calculated as a result of the 2D matching processing described above, the robot control unit 316 may be considered to calculate the matching similarity described above together with at least one of the position and the pose of the object OBJ. In this case, the robot control unit 316 may calculate the matching similarities of the plurality of objects OBJ together with at least one of the position and the pose of each of the plurality of objects OBJ, and then select one object OBJ, on which the end effector 4 should perform the predetermined process, based on the matching similarities of the plurality of objects OBJ.

As a second example of the matching processing, the robot control unit 316 may perform a 3D matching processing using three-dimensional position data WSD and three-dimensional model data indicating a three-dimensional model that is a reference for the object OBJ. The 3D matching processing is a matching processing using a three-dimensional model based on the three-dimensional position data WSD and the three-dimensional model indicated by the three-dimensional model data, for example. The three-dimensional model based on the three-dimensional position data WSD may include a point cloud model that is a three-dimensional model indicating the three-dimensional shape of the object OBJ by using the point cloud indicated by the three-dimensional position data WSD. The three-dimensional model based on the three-dimensional position data WSD may include a polygon model or a mesh model that is generated by connecting the plurality of points, which are included in the point cloud indicated by the three-dimensional position data WSD, with surfaces (especially, polygonal surfaces in which each point is a vertex thereof). The three-dimensional model based on the three-dimensional position data WSD may include a solid model that is generated by connecting the plurality of points, which are included in the point cloud indicated by the three-dimensional position data WSD, with smooth surfaces. Note that the 3D matching processing itself may be the same as an existing matching processing. For example, the robot control unit 316 may perform the 3D matching processing by using a known method including at least one of an ICP (Iterative Closest Point) and a DSO (Direct Sparse Odometry). The three-dimensional model data may be CAD model data of the object OBJ, or may be model data of the object OBJ (data indicating a polygon model or a mesh model) generated based on a pre-measured result using a known three-dimensional shape measurement apparatus or the camera 22. For example, the three-dimensional model data may be at least a part of the CAD model indicated by the CAD model data of the object OBJ, or may be at least a part of the model indicated by the model data of the object OBJ generated in advance (for example, data indicating a polygon model, a mesh model, or a solid model).

The robot control unit 316 may perform at least one of a translation, a scaling and / or a rotation of the three-dimensional model indicated by the three-dimensional model data in the 3D imaging coordinate system so that a feature part of the three-dimensional model indicated by the three-dimensional model data is closer to (typically, matches) the feature part of the object OBJ whose three-dimensional position is indicated by the three-dimensional position data WSD. Namely, the robot control unit 316 may change a positional relationship between the coordinate system of the three-dimensional model data (for example, a coordinate system of the CAD model) and the 3D imaging coordinate system so that the feature part of the object OBJ whose three-dimensional position is indicated by the three-dimensional position data WSD is closer to (typically, matches) the feature part of the three-dimensional model indicated by the three-dimensional model data. As a result, the robot control unit 316 may determine the positional relationship between the coordinate system of the three-dimensional model data and the 3D imaging coordinate system. Then, the robot control unit 316 may calculate at least one of the position and the pose of the object OBJ in the 3D imaging coordinate system from at least one of the position and the pose of the three-dimensional model in the coordinate system of the three-dimensional model data based on the positional relationship between the coordinate system of the three-dimensional model data and the 3D imaging coordinate system.

Then, the robot control unit 316 transforms at least one of the position and the pose of the object OBJ in the 3D imaging coordinate system to at least one of the position and the pose of the object OBJ in the robot coordinate system based on the calibration matrix indicated by the recipe file 321. In a case where the robot coordinate system is used as the global coordinate system, at least one of the position and the pose of the object OBJ in the robot coordinate system corresponds to at least one of the position and the pose of the object OBJ in the global coordinate system. However, in a case where a coordinate system different from the robot coordinate system is used as the global coordinate system, the robot control unit 316 may calculate at least one of the position and the pose of the object OBJ in the global coordinate system from at least one of the position and the pose of the object OBJ in the robot coordinate system by using the transformation matrix for transforming the three-dimensional coordinate in one of the global coordinate system and the robot coordinate system to the three-dimensional coordinate in the other one of the global coordinate system and the robot coordinate system.

In making the feature part of the three-dimensional model indicated by the three-dimensional model data be closer to the feature part of the object OBJ whose three-dimensional position is indicated by the three-dimensional position data WSD, the robot control unit 316 may calculates a matching similarity that is a degree of similarity between the three-dimensional model of the object OBJ indicated by the three-dimensional model data and the object OBJ whose three-dimensional position is indicated by the three-dimensional position data WSD. The robot control unit 316 may perform at least one of the translation, the scaling and / or the rotation of the three-dimensional model indicated by the three-dimensional model data so that the matching similarly is maximum. Note that the matching similarity may be considered to be equivalent to a degree of correlation that indicates a correlation between the three-dimensional model of the object OBJ indicated by the three-dimensional model data and the object OBJ whose three-dimensional position is indicated by the three-dimensional position data WSD. Note that the matching similarity may be referred to as a matching score.

In a case where the 3D matching processing detects the object OBJ whose calculated matching similarity is higher than the matching determination threshold value indicated by the recipe file 321 described above, the robot control unit 316 may select this object OBJ as one object OBJ on which the end effector 4 should perform the predetermined process. On the other hand, in a case where the 3D matching processing detects the object OBJ whose calculated matching similarity is lower than the matching determination threshold value indicated by the recipe file 321 described above, the robot control unit 316 may not select this object OBJ as one object OBJ on which the end effector 4 should perform the predetermined process.

Depending on the three-dimensional position data WSD, there is a possibility that the three-dimensional position data WSD indicates the position of each of the plurality of objects OBJ. For example, in a case where the plurality of workpieces W are placed on the placing apparatus T in the irregular manner or the regular manner, there is a possibility that the camera 22 images the plurality of workpieces W and generates the image data IMG_3D in which the plurality of workpieces W are captured as the plurality of objects OBJ. For example, in a case where the plurality of workpieces W are contained in the container box CB, which is one example of the placing apparatus T, in the irregular manner or the regular manner, there is a possibility that the camera 22 images the plurality of workpieces W and generates the image data IMG_3D in which the plurality of workpieces W are captured as the plurality of objects OBJ. As a result, there is a possibility that the robot control unit 316 generates the three-dimensional position data WSD indicating the position of each of the plurality of objects OBJ. In this case, the robot control unit 316 may perform the 3D matching processing described above for the plurality of objects OBJ. Then, the robot control unit 316 may select, as one object OBJ on which the end effector 4 should perform the predetermined process among the plurality of objects OBJ, one object OBJ whose matching similarity is maximum. Alternatively, the robot control unit 316 may select, as one object OBJ on which the end effector 4 should perform the predetermined process among the plurality of objects OBJ, one object OBJ corresponding to the matching similarity that is higher than the matching determination threshold value indicated by the recipe file 321. Alternatively, the robot control unit 316 may select, as one object OBJ on which the end effector 4 should perform the predetermined process among the plurality of objects OBJ, one object OBJ that corresponds to the matching similarity higher than the matching determination threshold value and that is the closest to the end effector 4. Alternatively, for example, in a case where the plurality of objects OBJ are contained in the container box CB (the placing apparatus T) illustrated in FIG. 3 (for example, in a case where the plurality of objects OBJ are randomly stacked), the robot control unit 316 may select, as one object OBJ on which the end effector 4 should perform the predetermined process among the plurality of objects OBJ, one object OBJ that corresponds to the matching similarity higher than the matching determination threshold value and whose Z coordinate along the Z-axis is the largest (which is positioned at the highest position). Note that the Z coordinate of each of the plurality of objects OBJ may be the Z position along the Z-axis of the global coordinate system of the robot 1 calculated by the above-described 3D matching processing. Alternatively, the robot control unit 316 may select, as one object OBJ on which the end effector 4 should perform the predetermined process among the plurality of objects OBJ, one object OBJ that corresponds to the matching similarity higher than the matching determination threshold value and on which the end effect 4 can perform the predetermined process.

However, in a case where the end effector 4 can perform the predetermined process on two or more objects OBJ simultaneously, the robot control unit 316 may select each of at least two of the plurality of objects OBJ as one object OBJ on which the end effector 4 should perform the predetermined process. Namely, the robot control unit 316 may select at least two objects OBJ on which the end effector 4 should perform the predetermined process simultaneously. Note that an example in which the robot control unit 316 selects one of the plurality of objects OBJ as the one object OBJ on which the end effector 4 should perform the predetermined process will be described in the below-described description for convenience of description.

Note that the robot control unit 316 may calculate the matching similarities of the plurality of objects OBJ, then select one object OBJ, on which the end effector 4 should perform the predetermined process, based on the matching similarities of the plurality of objects OBJ, and then calculate at least one of the position and the pose of the selected one object OBJ. In this case, the robot control unit 316 may not calculate the position and the pose of the other object OBJ that is not selected as the one object OBJ on which the end effector 4 should perform the predetermined process. Alternatively, since at least one of the position and the pose of the object OBJ is calculated as a result of the 3D matching processing described above, the robot control unit 316 may be considered to calculate the matching similarity described above together with at least one of the position and the pose of the object OBJ. In this case, the robot control unit 316 may calculate the matching similarities of the plurality of objects OBJ together with at least one of the position and the pose of each of the plurality of objects OBJ, and then select one object OBJ, on which the end effector 4 should perform the predetermined process, based on the matching similarities of the plurality of objects OBJ.

The robot control unit 316 may calculate at least one of the position and the pose of the object OBJ by using the image data IMG_2D without using the three-dimensional position data WSD. In this case, the robot control unit 316 may calculate at least one of the position and the pose of the object OBJ in the global coordinate system from at least one of the position and the pose of the object OBJ in the 2D imaging coordinate system calculated based on the image data IMG_2D. In this case, the camera 22 may not image the object OBJ. The robot control unit 316 may not acquire the image data IMG_3D and may not generate the three-dimensional position data WSD at the step S32.

The robot control unit 316 may calculate at least one of the position and the pose of the object OBJ by using the three-dimensional position data WSD without using the image data IMG_2D. In this case, the robot control unit 316 may calculate at least one of the position and the pose of the object OBJ in the global coordinate system from at least one of the position and the pose of the object OBJ in the 3D imaging coordinate system calculated based on the image data IMG_3D. In this case, the camera 21 may not image the object OBJ. The robot control unit 316 may not acquire the image data IMG_2D at the step S32.

The robot control unit 316 may calculate at least one of the position and the pose of the object OBJ by using both the image data IMG_2D and the three-dimensional position data WSD. In this case, the robot control unit 316 may calculate at least one of the position and the pose of the object OBJ in the global coordinate system from a part of the position and the pose of the object OBJ in the 2D imaging coordinate system calculated based on the image data IMG_2D and a part of the position and the pose of the object OBJ in the 3D imaging coordinate system calculated based on the image data IMG_3D. Alternatively, the robot control unit 316 may set at least one of an initial position and an initial pose of the three-dimensional model, which is used to perform the 3D matching processing, based on at least one of the position and the pose of the object OBJ in the 2D imaging coordinate system calculated based on the image data IMG_2D, then calculate at least one of the position and pose of the object OBJ in the 3D imaging coordinate system by performing the 3D matching processing by using the three-dimensional model placed at the set initial position and / or placed with the set initial pose, and then calculate at least one of the position and pose of the object OBJ in the global coordinate system from at least one of the position and pose of the object OBJ in the 3D imaging coordinate system.

In a case where at least one of the position and the pose of the object OBJ is calculated by using both the image data IMG_2D and the three-dimensional position data WSD, the robot control unit 316 may select, as one object OBJ on which the end effector 4 should perform the predetermined process, one object OBJ satisfying a condition that a sum or a product of the matching similarity calculated by the 2D matching processing (it is referred to as a 2D matching similarity in the below-described description) and the matching similarity calculated by the 3D matching processing (it is referred to as a 3D matching similarity in the below-described description) is maximum. The robot control unit 316 may select, as one object OBJ on which the end effector 4 should perform the predetermined process, one object OBJ satisfying a condition that the 2D matching similarity is maximum. The robot control unit 316 may select, as one object OBJ on which the end effector 4 should perform the predetermined process, one object OBJ satisfying a condition that the 3D matching similarity is maximum. The robot control unit 316 may select, as one object OBJ on which the end effector 4 should perform the predetermined process, one object OBJ satisfying a condition that both the 2D matching similarity and the 3D matching similarity are higher than the matching determination threshold value. The robot control unit 316 may select, as one object OBJ on which the end effector 4 should perform the predetermined process, one object OBJ which satisfies a condition that both the 2D matching similarity and the 3D matching similarity are higher than the matching determination threshold value and which is the closest to the end effector 4. The robot control unit 316 may select, as one object OBJ on which the end effector 4 should perform the predetermined process, one object OBJ which satisfies a condition that both the 2D matching similarity and the 3D matching similarity are higher than the matching determination threshold value and whose Z coordinate along the Z-axis is the largest (which is positioned at the highest position).

Note that the robot control unit 316 may calculate at least one of the position and the pose of the object OBJ before the tool center point TCP reaches the fine approach position PF (the step S33) in a case where the robot control unit 316 acquires at least one of the image data IMG_2D and IMG_3D before the tool center point TCP reaches the fine approach position PF. Namely, the robot control unit 316 may calculate at least one of the position and the pose of the object OBJ in a period during which the tool center point TCP moves along the movement path MRr. In other words, the robot control unit 316 may calculate at least one of the position and the pose of the object OBJ in a period during which the cameras 21 and 22 move relative to the object OBJ due to a driving of the robot 1 for moving the tool center point TCP along the movement path MRr. However, the robot control unit 316 may calculate at least one of the position and the pose of the object OBJ after the tool center point TCP reaches the fine approach position PF. The robot control unit 316 may calculate at least one of the position and the pose of the object OBJ in a state in which the tool center point TCP has reached the fine approach position PF and the robot 1 is stopped (namely, the camera 22 is stopped).

Then, the robot control unit 316 generates the robot control signal for controlling the robot 1 to move the tool center point TCP from the fine approach position PF to the process target position PTP based on at least one of the position and the pose of the object OBJ calculated at the step S33 (the step S34). Namely, the robot control unit 316 generates the robot control signal for controlling the robot 1 based on at least one of the position and the pose of the object OBJ so that the tool center point TCP approaches the object OBJ (namely, the end effector 4 approaches the object OBJ), and as a result, is positioned at the process target position PTP indicated by the recipe file 321 (the step S34).

Specifically, the robot control unit 316 may generate the movement path MRf of the tool center point TCP between the fine approach position PF and the process target position PTP based on at least one of the position and the pose of the object OBJ. Specifically, as described above, the process target position PTP means the position with respect to the object OBJ. Therefore, the robot control unit 316 calculates the process target position PTP with respect to the object OBJ based on at least one of the position and the pose of the object OBJ. Then, the robot control unit 316 generates the movement path MRf along which the tool center point TCP moves to approach the process target position PTP.

The robot control unit 316 may generate the movement path MRf based on at least one of the position and the pose of the object OBJ so that an interference of at least one of the end effector 4, the robot 1, and the surrounding object does not occur. Then, the robot control unit 316 may generate the robot control signal for controlling the robot 1 so that the tool center point TCP moves along the generated movement path MRf.

The surrounding object is an object that is positioned around the robot 1. The placing apparatus T (for example, the pallet) on which the workpiece W is placed is one example of the surrounding object. A frame on which the placing apparatus T is placed is one example of the surrounding object. An object (for example, at least one of a pipe, a shelve, a wall, and a ceiling) that exists in a factory in which the robot system SYS is positioned is one example of the surrounding object. An object (for example, a conveyor such as a belt conveyor) that constitutes a production line into which the robot system SYS is installed is one example of the surrounding object. The imaging apparatus 2 that is attached to the robot 1 is one example of the surrounding object. At least one of the cameras 21 and 22 that are attached to the robot 1 is one example of the surrounding object.

In a case where the plurality of objects OBJ are captured in the image indicated by each of the image data IMG_2D and IMG_3D as described above, other object OBJ that is not selected as the one object OBJ on which the end effector 4 should perform the predetermined process may be regarded as the surrounding object. However, in a case where the end effector 4 performs the predetermined process on the plurality of objects OBJ in sequence, other object OBJ that is not selected as the one object OBJ on which the end effector 4 should perform the predetermined process in a first period may be selected as the one object OBJ on which the end effector 4 should perform the predetermined process in a second period that is different from the first period. Similarly, the one object OBJ on which the end effector 4 should perform the predetermined process in the first period may be regarded as the surrounding object in the second period that is different from the first period.

The interference of at least one of the end effector 4, the robot 1, and the surrounding object may include an interference between at least a part of the end effector 4 and at least a part of the robot 1. The interference of at least one of the end effector 4, the robot 1, and the surrounding object may include an interference between at least a part of the end effector 4 and at least a part of the surrounding object. The interference of at least one of the end effector 4, the robot 1, and the surrounding object may include an interference between at least a part of the robot 1 and at least a part of the surrounding object. The interference of at least one of the end effector 4, the robot 1, and the surrounding object may include an interference between a first part of the robot 1 and a second part of the robot 1. An interference between two objects may include a state in which the two objects are in contact. The interference between two objects may include a state in which a distance between the two objects is equal to or shorter than an allowable distance AD1.

In order to generate the movement path MRf, the robot control unit 316 may use the end effector model EM, a robot model RM, a surrounding object model SM, and the object model OM. However, the robot control unit 316 may generate the movement path MRf without using at least one of the end effector model EM, the robot model RM, the surrounding object model SM, and the object model OM.

The end effector model EM is a three-dimensional model of the end effector 4 that is attached to the robot arm 12. The end effector model EM may be a CAD model of the end effector 4. The end effector model EM may be a three-dimensional model (for example, a point cloud model) obtained by actually measuring a three-dimensional shape of the end effector 4. The end effector model EM may be a polygon model or a mesh model that is generated by connecting a plurality of points, which are included in the point cloud model of the end effector 4, with (especially, polygonal faces in which each point is a vertex thereof). Note that the three-dimensional model obtained by actually measuring the three-dimensional shape of the end effector 4 may be a model generated by measuring the end effector 4 with a known three-dimensional shape measurement apparatus, or a may be a model generated based on image data obtained by the camera 22 imaging the end effector 4.

The robot model RM is a three-dimensional model of the robot 1. The robot model RM may include a three-dimensional model of the base 11 of the robot 1. The robot model RM may include a three-dimensional model of the robot arm 12 of the robot 1. The robot model RM may be a CAD model of the robot 1. The robot model RM may be a three-dimensional model (for example, a point cloud model) obtained by actually measuring a three-dimensional shape of the robot 1. The robot model RM may be a polygon model or a mesh model that is generated by connecting a plurality of points, which are included in the point cloud model of the robot 1, with (especially, polygonal faces in which each point is a vertex thereof). Note that the three-dimensional model obtained by actually measuring the three-dimensional shape of the robot 1 may be a model generated by measuring the robot 1 with a known three-dimensional shape measurement apparatus, or a may be a model generated based on image data obtained by the camera 22 imaging the robot 1.

The surrounding object model SM is a three-dimensional model of the surrounding object. The surrounding object model SM may be a CAD model of the surrounding object. The surrounding object model SM may be a three-dimensional model (for example, a point cloud model) obtained by actually measuring a three-dimensional shape of the surrounding object. The surrounding object model SM may be a polygon model or a mesh model that is generated by connecting a plurality of points, which are included in the point cloud model of the surrounding object, with (especially, polygonal faces in which each point is a vertex thereof). Note that the three-dimensional model obtained by actually measuring the three-dimensional shape of the surrounding object may be a model generated by measuring the surrounding object with a known three-dimensional shape measurement apparatus, or a may be a model generated based on image data obtained by the camera 22 imaging the surrounding object.

The object model OM is a three-dimensional model of the object OBJ that is a target object on which the end effector 4 performs the predetermined process. The object model OM may be a CAD model of the object OBJ. The object model OM may be a three-dimensional model (for example, a point cloud model) obtained by actually measuring a three-dimensional shape of the object OBJ. The object model OM may be a polygon model or a mesh model that is generated by connecting a plurality of points, which are included in the point cloud model of the object OBJ, with (especially, polygonal faces in which each point is a vertex thereof). Note that the three-dimensional model that is used in the above-described 3D matching processing and that is the reference for the object OBJ may be used as the object model OM. Alternatively, a three-dimensional model, which is different from the three-dimensional model that is used in the above-described 3D matching processing and that is the reference for the object OBJ, may be used as the object model OM. Note that the three-dimensional model obtained by actually measuring the three-dimensional shape of the object OBJ may be a model generated by measuring the object OBJ with a known three-dimensional shape measurement apparatus, or a may be a model generated based on image data obtained by the camera 22 imaging the object OBJ.

The object OBJ on which the end effector 4 performs the predetermined process is an object that is positioned around the robot 1, and therefore may be regarded as one example of the surrounding object. Therefore, the object model OM may be regarded as one example of the surrounding object model SM.

In this case, the robot control unit 316 may generate, as the movement path MRf that does not cause the interference of at least one of the end effector 4, the robot 1, and the surrounding object (including the object OBJ on which the end effector 4 performs the predetermined process, the same applies in the below-described description), a movement path of the tool center point TCP that does not cause an interference of at least one of the end effector model EM, the robot model RM, and the surrounding object model SM (note that the surrounding object model SM includes the object model OM, the same applies in the below-described description). Specifically, the robot control unit 316 may generate the movement path MRf that does not cause an interference of at least one of the end effector model EM, the robot model RM, and the surrounding object model SM by positioning the end effector model EM, the robot model RM, and the surrounding object model SM in a predetermined virtual space and moving the end effector model EM and the robot model RM in the virtual space in accordance with a movement of the end effector 4 and the robot 1 assuming that the robot 1 is driven.

Specifically, the robot control unit 316 may generate a path candidate from the fine approach position PF to the process target position PTP (alternatively, a path candidate from the process target position PTP to the fine approach position PF, the same applies in the below-described description), and determine whether or not the interference of at least one of the end effector model EM, the robot model RM, and the surrounding object model SM occurs assuming that the tool center point TCP moves along the path candidate. In a case where it is determined that the interference of at least one of the end effector model EM, the robot model RM, and the surrounding object model SM does not occur, the robot control unit 316 may set the generated path candidate to the movement path MRf. In a case where it is determined that the interference of at least one of the end effector model EM, the robot model RM, and the surrounding object model SM, the robot control unit 316 may update (namely, newly generate) the path candidate, and determine whether or not the interference of at least one of the end effector model EM, the robot model RM, and the surrounding object model SM occurs assuming that the tool center point TCP moves along the updated path candidate. In other words, the robot control unit 316 may generate whole of the movement path MRf.

Alternatively, the robot control unit 316 may repeat an operation for generating a part of the path candidate in order to generate the path candidate from the fine approach position PF to the process target position PTP, determine whether or not the interference of at least one of the end effector model EM, the robot model RM, and the surrounding object model SM occurs assuming that the tool center point TCP moves along the generated part of the path candidate, and an operation for updating the part of the path candidate in a case where it is determined that the interference of at least one of the end effector model EM, the robot model RM, and the surrounding object model SM occurs. Namely, the robot control unit 316 may generate the movement path MRf that gradually extends from the fine approach position PF toward the process target position PTP. Namely, the robot control unit 316 may generate the movement path MRf little by little.

The interference of at least one of the end effector model EM, the robot model RM, and the surrounding object model SM may include an interference between at least a part of the end effector model EM and at least a part of the robot model RM. The interference of at least one of the end effector model EM, the robot model RM, and the surrounding object model SM may include an interference between at least a part of the end effector model EM and at least a part of the surrounding object model SM. The interference of at least one of the end effector model EM, the robot model RM, and the surrounding object model SM may include an interference between at least a part of the robot model RM and at least a part of the surrounding object model SM. The interference of at least one of the end effector model EM, the robot model RM, and the surrounding object model SM may include an interference between a first part of the robot model RM and a second part of the robot model RM. An interference between two models may include a state in which the two models are in contact. The interference between two models may include a state in which a distance between the two models is equal to or shorter than an allowable distance AD2.

Note that the allowable distance AD2 may be a distance that is determined based on the allowable distance AD1 described above. For example, the allowable distance AD2 may be set to a distance satisfying a condition that the distance between two models is equal to or shorter than the allowable distance AD2 in a situation where the two models corresponding to two objects are positioned in the virtual space so that a positional relationship between the two models is the same as a positional relationship between the two objects and a postural relationship between the two models is the same as a postural relationship between the two objects, and thereby the distance between the two objects is equal to or shorter than the allowable distance AD1. The allowable distance AD2 may be the same as or may be different from the allowable distance AD1 described above.

Note that the three-dimensional position data WSD (especially, the point cloud data), which is generated based on the image data IMG_3D generated by the camera 22 imaging the object OBJ, may be used as the object model OM at the step S34. In this case, the robot control unit 316 may transform the coordinate of each point indicated by the point cloud data of the object OBJ from the coordinate in the 3D imaging coordinate system to the coordinate in the virtual space, and position each point whose coordinate has been transformed in the virtual space.

Note that a polygon model or a mesh model that is generated by connecting the plurality of points, which are included in the point cloud indicated by the three-dimensional position data WSD, with surfaces (especially, polygonal surfaces in which each point is a vertex thereof) may be used as the object model OM, or a solid model that is generated by connecting the plurality of points, which are included in the point cloud indicated by the three-dimensional position data WSD, with smooth surfaces may be used. In this case, the robot control unit 316 may position the polygon model, the mesh model, or the solid model in the virtual space.

Moreover, in a case where the robot control unit 316 calculates at least one of the position and the pose of the object OBJ before the tool center point TCP reaches the fine approach position PF, the robot control unit 316 may generate the movement path MRf before the tool center point TCP reaches the fine approach position PF (the step S34). Namely, the robot control unit 316 may generate the movement path MRf in a period during which the tool center point TCP moves along the movement path MRr. In other words, the robot control unit 316 may generate the movement path MRf in a period during which the cameras 21 and 22 move relative to the object OBJ due to a driving of the robot 1 for moving the tool center point TCP along the movement path MRr. However, the robot control unit 316 may generate the movement path MRf after the tool center point TCP has reached the fine approach position PF. The robot control unit 316 may generate the movement path MRf in a state in which the tool center point TCP has reached the fine approach position PF and the robot 1 is stopped (namely, the camera 22 is stopped).

Moreover, in a case where the robot control unit 316 calculates at least one of the position and the pose of the object OBJ before the tool center point TCP reaches the fine approach position PF, the robot control unit 316 may generate the robot control signal before the tool center point TCP reaches the fine approach position PF (the step S34). Namely, the robot control unit 316 may generate the robot control signal in a period during which the tool center point TCP moves along the movement path MRr. In other words, the robot control unit 316 may generate the robot control signal in a period during which the cameras 21 and 22 move relative to the object OBJ due to a driving of the robot 1 for moving the tool center point TCP along the movement path MRr. However, the robot control unit 316 may generate the robot control signal after the tool center point TCP reaches the fine approach position PF. The robot control unit 316 may generate the robot control signal in a state in which the tool center point TCP has reached the fine approach position PF and the robot 1 is stopped (namely, the camera 22 is stopped).

Then, the processing from the step S32 to the step S34 is repeated until the tool center point TCP is positioned at the process target position PTP (the step S35). Therefore, after robot 1 starts to be driven so that the tool center point TCP moves along the movement path MRf from the fine approach position PF, the camera 21 may image the object OBJ in a period during which the camera 21 moves relative to the object OBJ due to the driving of the robot 1 for moving the tool center point TCP along the movement path MRf. The robot control unit 316 may acquire the image data IMG_2D from the camera 21 in a period during which the camera 21 moves relative to the object OBJ due to the driving of the robot 1 for moving the tool center point TCP along the movement path MRf. The camera 22 may image the object OBJ in a period during which the camera 22 moves relative to the object OBJ due to the driving of the robot 1 for moving the tool center point TCP along the movement path MRf. The robot control unit 316 may acquire the image data IMG_3D from the camera 22 in a period during which the camera 22 moves relative to the object OBJ due to the driving of the robot 1 for moving the tool center point TCP along the movement path MRf. The robot control unit 316 may calculate at least one of the position and the pose of the object OBJ in a period during which the cameras 21 and 22 move relative to the object OBJ due to a driving of the robot 1 for moving the tool center point TCP along the movement path MRf. The robot control unit 316 may generate (in this case, substantially update) the movement path MRf in a period during which the cameras 21 and 22 move relative to the object OBJ due to a driving of the robot 1 for moving the tool center point TCP along the movement path MRf.

However, after robot 1 starts to be driven so that the tool center point TCP moves along the movement path MRf from the fine approach position PF, the camera 21 may image the object OBJ in a period during which the camera 21 is stationary relative to the object OBJ. The robot control unit 316 may acquire the image data IMG_2D from camera 21 in a period during which the camera 21 is stationary relative to the object OBJ. The camera 22 may image the object OBJ in a period during which the camera 22 is stationary relative to the object OBJ. The robot control unit 316 may acquire the image data IMG_3D from camera 22 in a period during which the camera 22 is stationary relative to the object OBJ. The robot control unit 316 may calculate at least one of the position and the pose of object OBJ in a period during which at least one of the cameras 21 and 22 is stationary relative to the object OBJ. The robot control unit 316 may generate (in this case, substantially update) the movement path MRf in a period during which at least one of the cameras 21 and 22 is stationary relative to the object OBJ.

A scene in which the object OBJ moves in a period during which the robot 1 moves so that the tool center point TCP moves along the movement path MRf is one example of a scene in which the processing from the step S32 to the step S34 is repeated. In this case, at least one of the position and the pose of the object OBJ in the global coordinate system changes sequentially. In this case, the robot control unit 316 may sequentially calculate (namely, repeatedly calculate) at least one of the position and the pose of the object OBJ based on at least one of the image data IMG_2D and IMG_3D. Then, the robot control unit 316 may sequentially generate (in other words, repeatedly calculate) the movement path MRf based on the end effector model EM, the robot model RM, the surrounding object model SM, and at least one of the position and the pose of the object OBJ calculated sequentially (namely, calculated repeatedly).

Note that the processing from the step S32 to the step S34 may not be repeated. For example, in a case where the tool center point TCP reaches the process target position PTP as a result of the robot 1 moving the tool center point TCP based on the robot control signal generated at the step S34, the robot control unit 316 may not perform the processing from the step S32 to the step S34 again.

After the tool center point TCP is positioned at the process target position PTP, the robot control unit 316 generates the robot control signal for controlling the end effector 4 to perform the predetermined process on the object OBJ (the step S36). As a result, the end effector 4 performs the predetermined process on the object OBJ (the step S36). For example, the end effector 4 may perform the holding process for holding the workpiece W that is one example of the object OBJ. For example, the end effector 4 may perform the releasing process for releasing the workpiece W, which is an example of the object OBJ, on the pallet PLT, which is one example of the object OBJ.

After the end effector 4 performs the predetermined process on the object OBJ, the robot control unit 316 generates the robot control signal for controlling the robot 1 to allow the end effector 4 to leave (the step S37).

For example, the robot control unit 316 may generate the robot control signal for controlling the robot 1 so as to move the end effector 4 (namely, to allow it to leave) from the process target position PTP to the fine approach position PF. In this case, the robot control unit 316 may generate the robot control signal by performing an operation that is the same as an operation from the step S32 to the step S35. Specifically, the robot control unit 316 may repeat a processing for acquiring at least one of the image data IMG_2D and IMG_3D, calculating at least one of the position and the pose of the object OBJ based on at least one of the image data IMG_2D and IMG_3D, and generating the robot control signal for controlling the robot 1 so that end effector 4 moves (namely, leaves) from the process target position PTP to the fine approach position PF based on at least one of the position and the pose of object OBJ until the end effector 4 moves from the process target position PTP to the fine approach position PF. Alternatively, the robot control unit 316 may generate, by using the generated movement path MRf, the robot control signal for controlling the robot 1 so that the end effector 4 moves (namely, leaves) along the generated movement path MRf using the generated movement path MRf. In this case, the robot control unit 316 may generate the robot control signal at the step S34 by using the generated movement path MRf without performing the operation from the step S32 to the step S33.

For example, the robot control unit 316 may generate the robot control signal for controlling the robot 1 so that the end effector 4 moves (namely, leave) from the fine approach position PF to the post-waiting position PW_post. In this case, the robot control unit 316 may generate the robot control signal by performing an operation that is the same as an operation at the step S31. Specifically, the robot control unit 316 may generate, based on recipe file 321, the robot control signal for controlling the robot 1 so that the end effector 4 moves from the fine approach position PF to the post-wait position PW_post.

### (3) Calibration Processing

Next, the calibration processing performed by the calibration unit 312 at the step S22 in FIG. 6 will be described.

### (3-1) Overview of Calibration Processing

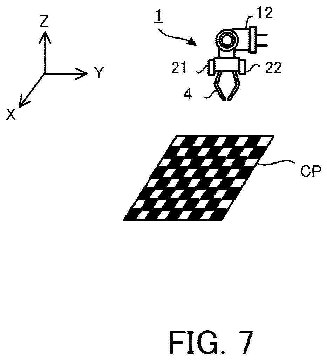

First, with reference to FIG. 7, an overview of the calibration processing will be described. As illustrated in FIG. 7, the calibration unit 312 may control the imaging apparatus 2 (namely, at least one of the cameras 21 and 22) to image the predetermined calibration member CP in order to perform the calibration processing. The calibration member CP may be a member on which a predetermined calibration pattern is formed. Note that the calibration pattern of the calibration member CP may be a known pattern. The calibration pattern may be a pattern for defining a reference point of the calibration member CP. In this case, the calibration member CP may be regarded as a reference member on which the reference point is formed. FIG. 7 illustrates an example in which a checker pattern, in which white rectangular patterns and black rectangular patterns are arranged in a matrix pattern, is formed on the calibration member CP as the predetermined calibration pattern. In this case, a vertex of at least one white rectangular pattern may be used as the reference point, a vertex of at least one black rectangular pattern may be used as the reference point, or a boundary line between the white rectangular pattern and the black rectangular pattern may be used as the reference point.

The calibration unit 312 acquires calibration image data IMG_calib generated by the imaging apparatus 2 imaging the calibration member CP. Then, the calibration unit 312 generates the calibration matrix for the transforming three-dimensional coordinate in one of the robot coordinate system and the imaging coordinate system to the three-dimensional coordinate in the other one of the robot coordinate system and the imaging coordinate system based on the calibration image data IMG_calib.

For example, the calibration unit 312 may generate the calibration matrix for transforming the three-dimensional coordinate in one of the robot coordinate system and the 2D imaging coordinate system to the three-dimensional coordinate in the other one of the robot coordinate system and the 2D imaging coordinate system based on the calibration image data IMG_calib generated by the camera 21 imaging the calibration member CP. Note that the calibration matrix for transforming the three-dimensional coordinate in one of the robot coordinate system and the 2D imaging coordinate system to the three-dimensional coordinate in the other one of the robot coordinate system and the 2D imaging coordinate system is referred to as a "2D calibration matrix" as necessary in the below-described description.

For example, the calibration unit 312 may generate the calibration matrix for transforming the three-dimensional coordinate in one of the robot coordinate system and the 3D imaging coordinate system to the three-dimensional coordinate in the other one of the robot coordinate system and the 3D imaging coordinate system based on the calibration image data IMG_calib generated by the camera 22 imaging the calibration member CP. Note that the calibration matrix for transforming the three-dimensional coordinate in one of the robot coordinate system and the 3D imaging coordinate system to the three-dimensional coordinate in the other one of the robot coordinate system and the 3D imaging coordinate system is referred to as a "3D calibration matrix" as necessary in the below-described description.

In the below-described description, an example in which the calibration unit 312 generates the calibration matrix for transforming the three-dimensional coordinate in one of the robot coordinate system and the 2D imaging coordinate system to the three-dimensional coordinate in the other one of the robot coordinate system and the 2D imaging coordinate system based on the calibration image data IMG_calib generated by the camera 21 imaging the calibration member CP will be described for convenience of description. However, the below-described description may be used as a description of an operation of the calibration unit 312 for generating the calibration matrix for transforming the three-dimensional coordinate in one of the robot coordinate system and the 3D imaging coordinate system to the three-dimensional coordinate in the other one of the robot coordinate system and the 3D imaging coordinate system based on the calibration image data IMG_calib generated by the camera 22 imaging the calibration member CP by replacing terms "camera 21", "2D imaging coordinate system", and "2D calibration matrix" with terms "camera 22","3D imaging coordinate system" and "3D calibration matrix", respectively.

The calibration unit 312 may generate the 2D calibration matrix by solving a PnP (Perspective n Point) problem based on the calibration image data IMG_calib. The PnP problem in the present example embodiment is equivalent to a problem for estimating at least one of a relative position and a relative pose of the camera 21 with respect to the robot 1 based on a relationship between positions (three-dimensional positions) of n reference points of the calibration member CP positioned in the robot coordinate system and positions (two-dimensional positions) of the n reference points of the calibration member CP on a two-dimensional image indicated by the calibration image data IMG_calib. Note that n is a variable number representing an integer that is equal to or larger than 1. Note that the relative position of the camera 21 with respect to the robot 1 may be considered to include the relative pose of the camera 21 with respect to the robot 1.

The calibration unit 312 may calculate, as the relative position of the camera 21 with respect to the robot 1, the relative position of the camera 21 with respect to the robot 1 in a direction that is along a predetermined translational axis. Especially, the calibration unit 312 may calculate, as the relative position of the camera 21 with respect to the robot 1, the relative position of the camera 21 with respect to the robot 1 in a direction that is along each of three translational axes that are orthogonal to one another. In this case, the calibration unit 312 may calculate, as the relative position of the camera 21 with respect to the robot 1, a translational transformation matrix for translating to thereby transforming the three-dimensional coordinate in one of the robot coordinate system, which is defined with respect to the robot 1, and the 2D imaging coordinate system, which is defined with respect to the camera 21, to the three-dimensional coordinate of the other one of the robot coordinate system and the imaging coordinate system.

The calibration unit 312 may calculate, as the relative pose of the camera 21 with respect to the robot 1, the relative pose of the camera 21 with respect to the robot 1 in a rotational direction that is around a predetermined rotational axis. In other words, the calibration unit 312 may calculate, as the relative pose of the camera 21 with respect to the robot 1, a relative rotational amount (in other words, the relative pose) of the camera 21 with respect to the robot 1 around the predetermined rotational axis. Especially, the calibration unit 312 may calculate, as the relative pose of the camera 21 with respect to the robot 1, the relative pose of the camera 21 with respect to the robot 1 in a rotational direction that is around each of three rotational axes that are orthogonal to one another. Especially, the calibration unit 312 may calculate, as the relative pose of the camera 21 with respect to the robot 1, the relative rotational amount (in other words, the relative pose) of the camera 21 with respect to the robot 1 around each of the three rotational axes that are orthogonal to one another. In this case, the calibration unit 312 may calculate, as the relative pose of the camera 21 with respect to the robot 1, a rotational transformation matrix for rotationally moving to thereby converting the three-dimensional coordinate in one of the robot coordinate system, which is defined with respect to the robot 1, and the 2D imaging coordinate system, which is defined with respect to the camera 21, to the three-dimensional coordinate of the other one of the robot coordinate system and the imaging coordinate system.

As a result, the calibration unit 312 may generate the 2D calibration matrix including at least one of the calculated translational transformation matrix and the calculated rotational transformation matrix.

In a case where the positions of the n reference points in the robot coordinate system are known to the calibration unit 312, the calibration unit 312 may generate the 2D calibration matrix based on a single calibration image data IMG_calib generated by the camera 21 imaging the calibration member CP once. In this case, the calibration unit 312 may calculate the positions of the n reference points in the two-dimensional image indicated by the calibration image data IMG_calib, and calculate at least one of the relative position and the relative pose of the camera 21 with respect to the robot 1 (namely, the 2D calibration matrix) based on the relationship between the positions of the n reference points in the two-dimensional image and the positions of the n reference points of the calibration member CP in the robot coordinate system that is known information.

On the other hand, in a case where the positions of the n reference points in the robot coordinate system are not known to the calibration unit 312, the calibration unit 312 may generate the 2D calibration matrix based on a plurality of calibration image data IMG_calib generated by the camera 21 imaging the calibration member CP a plurality of times, respectively. Especially, the camera 21 may image the same calibration member CP from a plurality of different positions. Alternatively, the camera 21 may image the same calibration member CP with a plurality of different poses, in addition to or instead of imaging the same calibration member CP from the plurality of different positions. Namely, the calibration unit 312 may alternately repeat an operation for controlling the camera 21 to image the calibration member CP and an operation for changing at least one of the position and the pose of the camera 21 that has imaged the calibration member CP. Namely, the calibration unit 312 may alternately repeat the operation for controlling the camera 21 to image the calibration member CP and an operation for generating the robot control signal for controlling the robot 1 to change at least one of the position and the pose of the camera 21 that has imaged the calibration member CP. In other words, the calibration unit 312 may alternately repeat the operation for controlling the camera 21 to image the calibration member CP and an operation for changing at least one of a relative positional relationship and a relative postural relationship between the calibration member CP and the camera 21 that has imaged the calibration member CP. In other words, the calibration unit 312 may alternately repeat the operation for controlling the camera 21 to image the calibration member CP and the operation for generating the robot control signal for controlling the robot 1 to change at least one of the relative positional relationship and the relative postural relationship between the calibration member CP and the camera 21 that has imaged the calibration member CP. Note that the relative postural relationship between the camera 21 and the calibration member CP may be included in the relative positional relationship between the camera 21 and the calibration member CP. In this case, the calibration unit 312 may calculate the positions of the n reference points in each of a plurality of two-dimensional images, which are indicated by the plurality of calibration image data IMG_calib, respectively, and calculate at least one of the relative position and the relative pose of the camera 21 with respect to the robot 1 (namely, the 2D calibration matrix) based on the relationship between the positions of the n reference points in each of the plurality of two-dimensional images and a movement distance of the camera 21 (namely, a movement distance of the robot 1). More specifically, the calibration unit 312 may calculate the relative position of the camera 21 with respect to the based on the relationship between the positions of the n reference points in each of the plurality of two-dimensional images and the movement distance of the camera 21 (namely, the movement distance of the robot 1) by using a fact that one reference point in a first two-dimensional image indicated by first two-dimensional image data and the one reference point in a second two-dimensional image indicated by second two-dimensional image data correspond to a position of the one reference point in the robot coordinate system.

Note that the camera 21 may image the same calibration member CP from the plurality of different positions in order to improve an accuracy of the calibration processing. The camera 21 may image the same calibration member CP with the plurality of different poses in order to improve the accuracy of the calibration processing.

The plurality of different positions at which the camera 21 images the calibration member CP may be a plurality of different positions that are randomly set in a predetermined position range, or may be a plurality of different positions that are set in advance. The predetermined position range may be set by the user or may be fixed. The plurality of different positions that are set in advance may be set in advance so that the plurality of imaging positions at which the camera 21 images the calibration member CP are not biased. The plurality of different poses with which the camera 21 images the calibration member CP may be a plurality of different poses that are randomly set in a predetermined pose range, or may be a plurality of different poses that are set in advance. The predetermined pose range may be set by the user or may be fixed. The plurality of different poses that are set in advance may be set in advance so that the plurality of imaging poses with which the camera 21 images the calibration member CP are not biased.

Note that the calibration unit 312 generates the robot control signal in the calibration processing, however, the robot control unit 316 may generate the robot control signal in the calibration processing. In this case, the robot system SYS may alternately repeat the operation for controlling the camera 21 to image the calibration member CP by using the calibration unit 312 and the operation for generating the robot control signal for controlling the robot 1 to change at least one of the position and the pose of the camera 21 that has imaged the calibration member CP by using the robot control unit 316. The robot system SYS may alternately repeat the operation for controlling the camera 21 to image the calibration member CP by using the calibration unit 312 and the operation for generating the robot control signal for controlling the robot 1 to change the relative positional relationship between the calibration member CP the camera 21 that has imaged the calibration member CP by using the robot control unit 316.

Note that the calibration unit 312 may generate the 2D calibration matrix based on the plurality of calibration image data IMG_calib generated by the camera 21 imaging the calibration member CP the plurality of times, respectively, even in a case where the positions of the n reference points in the robot coordinate system are known to the calibration unit 312. In this case, the camera 21 may generate the plurality of calibration image data IMG_calib by imaging the same calibration member CP from the plurality of different positions. The camera 21 may generate the plurality of calibration image data IMG_calib by imaging the same calibration member CP with the plurality of different poses in order to improve the accuracy of the calibration processing. Note that the camera 21 may image the same calibration member CP from the plurality of different positions in order to improve an accuracy of the calibration processing. The camera 21 may image the same calibration member CP with the plurality of different poses in order to improve the accuracy of the calibration processing.

The calibration processing described above may be considered to be equivalent to a so-called hand-eye calibration processing. Namely, the calibration unit 312 may generate the calibration matrix by performing the hand-eye calibration processing. Note that the hand-eye calibration processing is an existing processing for calculating a positional relationship between a tool center point of a multi-joint robot and a camera used with the multi-joint robot, and a detailed description thereof is omitted here, however, its outline has been already substantially described. Note that the end effector 4 is attached to the robot 1 (the robot arm 12) in FIG. 7, however, the end effector 4 may not be attached to the robot 1 during the calibration processing.

The calibration unit 312 may perform an operation for generating the 2D calibration matrix based on the calibration image data IMG_calib generated by the camera 21 and an operation for generating the 3D calibration matrix based on the calibration image data IMG_calib generated by the camera 22 in parallel. Alternatively, the calibration unit 312 may perform the operation for generating the 3D calibration matrix based on the calibration image data IMG_calib generated by the camera 22 after or before performing the operation for generating the 2D calibration matrix based on the calibration image data IMG_calib generated by the camera 21. However, in the present example embodiment, since both cameras 21 and 22 are attached to the same robot 1, the cameras 21 and 22 can image the same calibration member CP simultaneously. Therefore, in a case where the operation for generating the 2D calibration matrix and the operation for generating the 3D calibration matrix are performed in parallel, a time required to generate the 2D calibration matrix and the 3D calibration matrix is reduced, compared to a case where the operation for generating the 2D calibration matrix and the operation for generating the 3D calibration matrix are not performed in parallel.

### (3-2) Display of Information Related To Accuracy of Calibration Processing

In the present example embodiment, the calibration unit 312 may display information related to the accuracy (in other words, a correctness) of the calibration processing on the display apparatus 35. Note that the information related to the accuracy of the calibration processing is referred to as calibration accuracy information in the below-described description. The calibration accuracy information may include information related to an accuracy (in other words, a correctness) of a coordinate transformation based on the calibration matrix generated by the calibration processing. For example, the calibration accuracy information may include information related to the accuracy of the coordinate transformation based on the 2D calibration matrix. For example, the calibration accuracy information may include information related to the accuracy of the coordinate transformation based on the 3D calibration matrix.

The information related to the accuracy of the coordinate transformation based on the calibration matrix may include information related to the accuracy of the coordinate transformation for transforming the three-dimensional coordinate in one of the robot coordinate system and the imaging coordinate system to the three-dimensional coordinate in the other one of the robot coordinate system and the imaging coordinate system by using the calibration matrix. The information related to the accuracy of the coordinate transformation based on the calibration matrix may include information related to the accuracy of the coordinate transformation based on the translational transformation matrix included in the calibration matrix. The information related to the accuracy of the coordinate transformation based on the translational transformation matrix may include information related to the accuracy of the coordinate transformation for transforming the three-dimensional coordinate in one of the robot coordinate system and the imaging coordinate system to the three-dimensional coordinate in the other one of the robot coordinate system and the imaging coordinate system by using the translational transformation matrix. The information related to the accuracy of the coordinate transformation based on the calibration matrix may include information related to the accuracy of the coordinate transformation based on the rotational transformation matrix included in the calibration matrix. The information related to the accuracy of the coordinate transformation based on the rotational transformation matrix may include information related to the accuracy of the coordinate transformation for transforming the three-dimensional coordinate in one of the robot coordinate system and the imaging coordinate system to the three-dimensional coordinate in the other one of the robot coordinate system and the imaging coordinate system by using the rotational transformation matrix.

The calibration unit 312 may perform the calibration processing by using the calibration image data IMG_calib and display the calibration accuracy information on the display apparatus 35 based on a result of the calibration processing. For example, the calibration unit 312 may perform the calibration processing by using a single calibration image data IMG_calib and display the calibration accuracy information on the display apparatus 35 based on the result of the calibration processing. For example, the calibration unit 312 may perform the calibration processing by using a plurality of calibration image data IMG_calib and display the calibration accuracy information on the display apparatus 35 based on the result of the calibration processing.

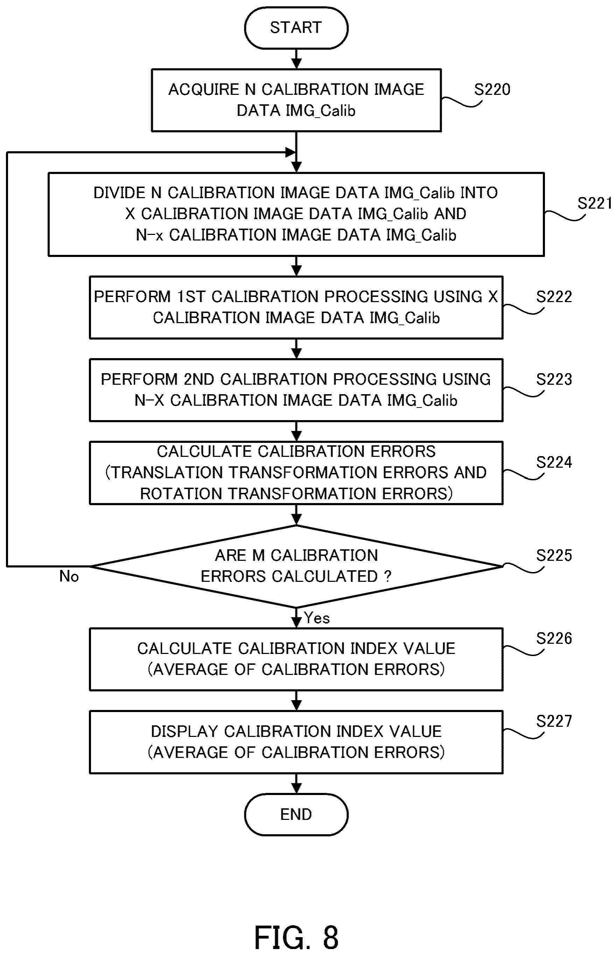

Next, an accuracy information display processing for displaying the calibration accuracy information on the display apparatus 35 will be described with reference to FIG. 8. FIG. 8 is a flowchart that illustrates a flow of the accuracy information display processing for displaying the calibration accuracy information on the display apparatus 35. Note that FIG. 8 illustrates an example of an operation for performing the calibration processing by using the plurality of calibration image data IMG_calib and displaying the calibration accuracy information based on the result of the calibration processing.

Note that the accuracy information display processing for displaying the calibration accuracy information related to the accuracy of the coordinate transformation based on the 2D calibration matrix will be described in the below-described description. However, the below-described description may be used as a description of the accuracy information display processing for displaying the calibration accuracy information related to the accuracy of the coordinate transformation based on the 3D calibration matrix by replacing terms "camera 21", "2D imaging coordinate system", and "2D calibration matrix" with terms "camera 22", "3D imaging coordinate system", and "3D calibration matrix", respectively.

As illustrated in FIG. 8, in order to display the calibration accuracy information, the calibration unit 312 acquires N calibration image data IMG_calib from the camera 21 (a step S220). Note that N is a variable number representing an integer that is equal to or larger than 2. Specifically, the calibration unit 312 may control the camera 21 to image the calibration member CP N times to generate the N calibration image data IMG_calib by. Especially, the calibration unit 312 may change at least one of the position and the pose of the camera 21 each time the camera 21 images the calibration member CP. Namely, the calibration unit 312 may change the relative positional relationship between the camera 21 and the calibration member CP each time the camera 21 images the calibration member CP. Therefore, the N calibration image data IMG_calib may include the calibration image data IMG_calib that is generated by the camera 21 imaging the calibration member CP from a first position and the calibration image data IMG_calib that is generated by the camera 21 imaging the calibration member CP from a second position different from the first position. The N calibration image data IMG_calib may include the calibration image data IMG_calib that is generated by the camera 21 imaging the calibration member CP with a first pose and the calibration image data IMG_calib that is generated by the camera 21 imaging the calibration member CP with a second pose different from the first pose. The N calibration image data IMG_calib may include the calibration image data IMG_calib that is generated by the camera 21 imaging the calibration member CP in a situation where the relative positional relationship between the camera 21 and the calibration member CP is a first positional relationship and the calibration image data IMG_calib that is generated by the camera 21 imaging the calibration member CP in a situation where the relative positional relationship between the camera 21 and the calibration member CP is a second positional relationship different from the first positional relationship.

Then, the calibration unit 312 divides the N calibration image data IMG_calib acquired at the step S220 into a first calibration image data group that includes X calibration image data IMG_calib and a second calibration image data group that included N-X calibration image data IMG_calib and excludes the X calibration image data IMG_calib (a step S221). Note that X is a variable number representing an integer that is equal to or larger than 1 and that is equal to or smaller than N.

The number of calibration image data IMG_calib included in the first calibration image data group is smaller than the number of calibration image data IMG_calib included in the second calibration image data group. Namely, the calibration unit 312 divides the N calibration image data IMG_calib into the first calibration image data group and the second calibration image data group so that a relationship "X < N-X" is satisfied. As one example, the calibration unit 312 may classify 10% to 20% of the N calibration image data IMG_calib acquired at the step S220 into the first calibration image data group. However, the number of calibration image data IMG_calib included in the first calibration image data group may be the same as or larger than the number of calibration image data IMG_calib included in the second calibration image data group.

Then, the calibration unit 312 performs the calibration processing based on the X calibration image data IMG_calib included in the first calibration image data group (a step S222). Namely, the calibration unit 312 calculates the 2D calibration matrix by performing the calibration processing described above based on the X calibration image data IMG_calib included in the first calibration image data group (the step S222). Note that the calibration processing performed at the step S222 based on the X calibration image data IMG_calib included in the first calibration image data group is referred to as a first calibration processing in the below-described description. Furthermore, the 2D calibration matrix generated by the first calibration processing at the step S222 is referred to as a first calibration matrix.

In parallel with, before or after the processing at the step S222, the calibration unit 312 performs a calibration processing based on the N-X calibration image data IMG_calib included in the second calibration image data group (a step S223). Namely, the calibration unit 312 calculates the 2D calibration matrix by performing the above calibration processing based on the N-X calibration image data IMG_calib included in the second calibration image data group (the step S223). Note that the calibration processing performed at the step S223 based on the N-X calibration image data IMG_calib included in the second calibration image data group is referred to as a second calibration processing in the below-described description. Furthermore, the 2D calibration matrix generated by the second calibration processing at the step S223 is referred to as a second calibration matrix.

Note that the calibration processing performed at each of the step S222 and the step S223 is typically a provisional calibration processing performed to display the calibration accuracy information. Therefore, as will be described in detail later, the calibration unit 312 may perform a final calibration processing for generate the 2D calibration matrix that is actually used to control the robot 1 after performing the accuracy information display processing illustrated in FIG. 8.

Then, the calibration unit 312 calculates a calibration error indicating an error between the first calibration matrix and the second calibration matrix (a step S224). Namely, the calibration unit 312 calculates the calibration error indicating an error between a result of the first calibration processing and a result of the second calibration processing (the step S224).

The calibration unit 312 may calculate, as the calibration error, an error between a result of the coordinate transformation based on the first calibration matrix and a result of the coordinate transformation based on the second calibration matrix. Specifically, the calibration unit 312 may calculate, as the calibration error, an error between a result of the coordinate transformation of one three-dimensional coordinate based on the first calibration matrix and a result of coordinate transformation of the same one three-dimensional coordinate based on the second calibration matrix.

As described above, the 2D calibration matrix may include the translational transformation matrix. In this case, the calibration unit 312 may calculate, as the calibration error, a translation transformation error corresponding to an error between the result of the coordinate transformation based on the translational transformation matrix included in the first calibration matrix and the result of coordinate transformation based on the translational transformation matrix included in the second calibration matrix. Specifically, the calibration unit 312 may calculate, as the calibration error, the translation transformation error corresponding to an error between a result of the coordinate transformation of one three-dimensional coordinate based on the translational transformation matrix included in the first calibration matrix and a result of coordinate transformation of the same one three-dimensional coordinate based on the translational transformation matrix included in the second calibration matrix. Note that the translational transformation matrix included in the first calibration matrix is referred to as a first translational transformation matrix, and the translational transformation matrix included in the second calibration matrix is referred to as a second translational transformation matrix in the below-described description.

In a case where the result of the coordinate transformation of one three-dimensional coordinate based on the first translational transformation matrix is the same as the result of the coordinate transformation of the same one three-dimensional coordinate based on the second translational transformation matrix, the translation transformation error is zero. On the other hand, in a case where the result of the coordinate transformation of one three-dimensional coordinate based on the first translational transformation matrix is not the same as the result of the coordinate transformation of the same one three-dimensional coordinate based on the second translational transformation matrix, a difference between two results corresponds to the translation transformation error. The translation transformation error may include a transformation error in a translation direction that is along the X-axis in at least one of the robot coordinate system and the 2D imaging coordinate system. The translation transformation error may include a transformation error in a translation direction that is along the Y-axis (namely, an axis orthogonal to the X-axis) in at least one of the robot coordinate system and the 2D imaging coordinate system. The translation transformation error may include a transformation error in a translation direction that is along the Z-axis (namely, an axis orthogonal to the X-axis and the Y-axis) in at least one of the robot coordinate system and the 2D imaging coordinate system.

As described above, the 2D calibration matrix may include the rotational transformation matrix. In this case, the calibration unit 312 may calculate, as the calibration error, a rotation transformation error corresponding to an error between the result of the coordinate transformation based on the rotational transformation matrix included in the first calibration matrix and the result of coordinate transformation based on the rotational transformation matrix included in the second calibration matrix. Specifically, the calibration unit 312 may calculate, as the calibration error, the rotation transformation error corresponding to an error between a result of the coordinate transformation of one three-dimensional coordinate based on the rotational transformation matrix included in the first calibration matrix and a result of coordinate transformation of the same one three-dimensional coordinate based on the rotational transformation matrix included in the second calibration matrix. Note that the rotational transformation matrix included in the first calibration matrix is referred to as a first rotational transformation matrix, and the rotational transformation matrix included in the second calibration matrix is referred to as a second rotational transformation matrix in the below-described description.

In a case where the result of the coordinate transformation of one three-dimensional coordinate based on the first rotational transformation matrix is the same as the result of the coordinate transformation of the same one three-dimensional coordinate based on the second rotational transformation matrix, the rotation transformation error is zero. On the other hand, in a case where the result of the coordinate transformation of one three-dimensional coordinate based on the first rotational transformation matrix is not the same as the result of the coordinate transformation of the same one three-dimensional coordinate based on the second rotational transformation matrix, a difference between two results corresponds to the rotation transformation error. The rotation transformation error may include a transformation error in a rotation direction around the X-axis in at least one of the robot coordinate system and the 2D imaging coordinate system. The rotation transformation error may include a transformation error in a rotation direction around the Y-axis in at least one of the robot coordinate system and the 2D imaging coordinate system. The rotation transformation error may include a transformation error in a rotation direction around the Z-axis in at least one of the robot coordinate system and the 2D imaging coordinate system.

Then, the calibration unit 312 repeats the processing from the step S211 to the step S224 until the calibration error including at least one of the translation transformation error and the rotation transformation error is calculated M times (a step S225). Note that M is a variable number representing an integer that is equal to or larger than 1. Since the calibration error is calculated once at step S224 each time each of the first calibration processing at step S222 and the second calibration processing at step S223 is performed once, the calibration unit 312 repeats the processing from the step S221 to the step S224 until each of the first calibration processing at step S222 and the second calibration processing at step S223 is performed M times (the step S225). Namely, the calibration unit 312 repeats the processing from the step S221 to the step S224 until a unit calibration processing including the first calibration processing at the step S222 and the second calibration processing at the step S223 is performed M times (the step S225). As a result, the calibration unit 312 calculates M calibration errors. Note that the M calibration errors are values that quantitatively indicate the accuracy of the calibration processing. Therefore, the M calibration errors may be regarded as one example of the calibration accuracy information.

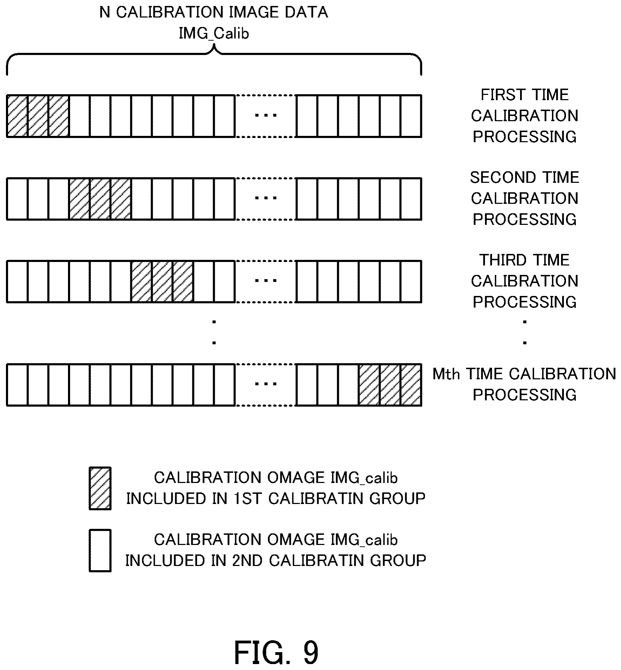

Here, the calibration unit 312 re-divides the N calibration image data IMG_cal acquired at the step S220 into the first calibration image data group and the second calibration image data group (the step S221) each time the calibration error is calculated. In this case, as illustrated in FIG. 9 that illustrates the first calibration image data group and the second calibration image data group, the calibration unit 312 may re-divides the N calibration image data IMG_cal into the first calibration image data group and the second calibration image data group so as to change at least one of the X calibration image data IMG_calib included in the first calibration image data group and change at least one of the N-X calibration image data IMG_calib included in the second calibration image data group. Namely, the calibration unit 312 may re-divides the N calibration image data IMG_cal into the first calibration image data group and the second calibration image data group so that at least one calibration image data IMG_calib, which is different from the X calibration image data IMG_calib already selected as the calibration image data IMG_calib included in the first calibration image data group, is newly selected as the calibration image data IMG_calib included in the first calibration image data group. The calibration unit 312 may re-divides the N calibration image data IMG_cal into the first calibration image data group and the second calibration image data group so that at least one calibration image data IMG_calib, which is different from the N-X calibration image data IMG_calib already selected as the calibration image data IMG_calib included in the second calibration image data group, is newly selected as the calibration image data IMG_calib included in the second calibration image data group. Note that the two-dimensional image indicated by at least one of the N calibration image data IMG_calib may be regarded as one example of the calibration accuracy information.

Then, the calibration unit 312 calculates a calibration index value based on the M calibration errors calculated at the step S224 (a step S226). The calibration index value is an index value that quantitatively indicates the accuracy of the calibration processing and that is calculated from the M calibration errors calculated at the step S224. Therefore, the calibration index value may be regarded as one example of the calibration accuracy information.

For example, the calibration unit 312 may calculate, as the calibration index value, an average value of the M calibration errors calculated at the step S224. For example, the calibration unit 312 may calculate, as the calibration index value, an average value of the M translation transformation errors respectively included in the M calibration errors calculated at the step S224. For example, the calibration unit 312 may calculate, as the calibration index value, an average value of the M rotation transformation errors respectively included in the M calibration errors calculated at the step S224.

Note that the calibration unit 312 may use the single calibration error calculated at the step S224 as the calibration index value itself in a case where the variable number M is 1.

Then, the calibration unit 312 may display the calibration index value calculated at the step S226 as the calibration accuracy information on the display apparatus 35 (a step S227). Note that the calibration unit 312 may calculate the average value of the M calibration errors as the calibration index value. For example, the calibration unit 312 may calculate a median of the M calibration errors as the calibration index value, or may calculate a deviation of the M calibration errors as the calibration index value. Namely, the calibration unit 312 may calculate a statistical value of the M calibration errors as the calibration index value.

In the present example embodiment, the display of the calibration accuracy information is displayed under the control of the display signal generation unit 317 and the display signal output unit 318. Alternatively, a display of desired information including the calibration information (specifically, a desired image indicating the desired information) is also displayed under the control of the display signal generation unit 317 and the display signal output unit 318. Specifically, the display signal generation unit 317 generates a display signal for displaying the desired information on the display apparatus 35. Then, the display signal output unit 318 outputs the display signal generated by the display signal generation unit 317 to the display apparatus 35. As a result, the display apparatus 35 displays the desired information based on the display signal acquired from the display signal output unit 318. Note that outputting the display signal to the display apparatus 35 may be considered to be substantially equivalent to displaying the desired information based on the display signal on the display apparatus 35, because the desired information based on the display signal is displayed on the display apparatus 35 by outputting the display signal to the display apparatus 35.

Therefore, at the step S227, the display signal generation unit 317 generates the display signal for displaying the calibration index value calculated at the step S226 on the display apparatus 35 under the control of the calibration unit 312. Then, the display signal output unit 318 outputs the display signal generated by the display signal generation unit 317 to the display apparatus 35. As a result, the display apparatus 35 displays the calibration index value based on the display signal acquired from the display signal output unit 318.

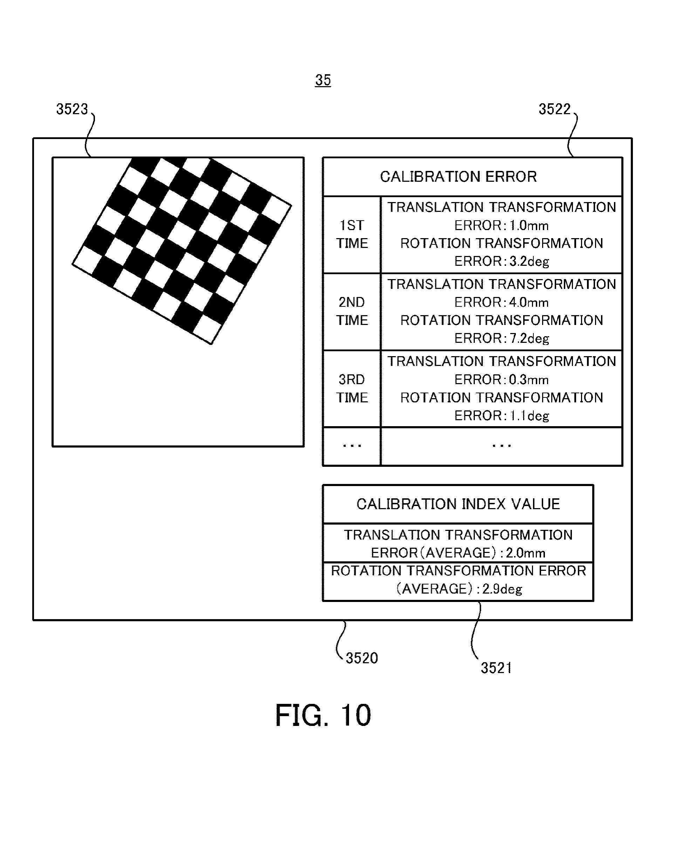

One example of the display of the calibration index value is illustrated in FIG. 10. As illustrated in FIG. 10, the calibration unit 312 may display a display screen 3520, which includes a display field 3521 for displaying the calibration index value, on the display apparatus 35. As a result, the user of the robot system SYS can properly recognize the calibration index value.

The calibration unit 312 may display the M calibration errors calculated at the step S224 in FIG. 8 on the display apparatus 35 in addition to (alternatively, instead of) the calibration index value. For example, as illustrated in FIG. 10, the calibration unit 312 may display the display screen 3520, which includes a display field 3522 for displaying the M calibration errors, on the display apparatus 35. As a result, the user of the robot system SYS can properly recognize the M calibration errors in addition to (alternatively, instead of) the calibration index value. Note that the calibration unit 312 may be considered to display the calibration accuracy information on the display apparatus 35 at the step S227. Note that the calibration unit 312 may not calculate the calibration index value in a case where the calibration unit 312 displays the M calibration errors on the display apparatus 35 instead of the calibration index value.

The calibration unit 312 may display a two-dimensional image indicated by at least one of the N calibration image data IMG_calib acquired at the step S221 on the display apparatus 35 in addition to (alternatively, instead of) the calibration index value. For example, as illustrated in FIG. 10, the calibration unit 312 may display the display screen 3520, which includes a display field 3523 for displaying a calibration image that is the two-dimensional image indicated by the calibration image data IMG_calib, on the display apparatus 35. As a result, the user of the robot system SYS can properly recognize the calibration image that is used as the basis for generating the calibration indicator value. Note that the calibration unit 312 may display the two-dimensional image indicated by at least one of the N calibration image data IMG_calib acquired at the step S221 and the M calibration errors calculated at the step S224 in FIG. 8 on the display apparatus 35 as calibration accuracy information.

### (3-3) Evaluation of Quality of Calibration Image Data IMG calib

The user or the calibration unit 312 may evaluate a quality of the N calibration image data IMG_calib based on the calibration accuracy information (for example, at least one of the calibration index value and the calibration error) generated by the accuracy information display processing. Especially, the user or the calibration unit 312 may evaluate the quality of the N calibration image data IMG_calib based on the calibration accuracy information (for example, at least one of the calibration index value and the calibration error) in the process of generating the recipe file 321 (the step S2 in FIG. 6) before actually starting to move the robot 1 by performing the processing from the step S31 to the step S37 in FIG. 6. Then, the calibration unit 312 may perform necessary processing based on an evaluated result of the quality of the N calibration image data IMG_calib. Especially, the calibration unit 312 may perform the necessary processing based on the evaluated result of the quality of the N calibration image data IMG_calib in the process of generating the recipe file 321 (the step S2 in FIG. 6) before actually starting to move the robot 1 by performing the processing from the step S31 to the step S37 in FIG. 6.

Next, an example of an evaluation of the quality of the calibration image data IMG_calib will be described.

### (3-3-1) First Specific Example of Evaluation of Quality of Calibration Image Data IMG_calib

In a case where the calibration index value does not exceed a predetermined first allowable threshold value, the user or the calibration unit 312 may evaluate that it is likely that the quality of all N calibration image data IMG_calib acquired at the step S220 reach an allowable quality. Namely, the user or the calibration unit 312 may evaluate that it is unlikely that the N calibration image data IMG_calib include at least one calibration image data IMG_calib whose quality does not reach the allowable quality. Note that a state in which the quality of the calibration image data IMG_calib does not reach the allowable quality may mean a state in which it is not possible to calculate the calibration matrix whose transformation accuracy is sufficiently high by the calibration processing using the calibration image data IMG_calib.

Therefore, in a case where the calibration index value does not exceed the predetermined first allowable threshold value, the calibration unit 312 may perform the final calibration processing using all of the N calibration image data IMG_calib acquired at the step S220. Namely, the calibration unit 312 may perform the calibration processing without dividing the N calibration image data IMG_calib into the first and second calibration image data groups.

The calibration matrix generated by the final calibration processing may actually be used by the control apparatus 3 to control the robot 1. For example, the robot control unit 316 may calculate at least one of the position and the pose of the object OBJ in the global coordinate system by using the calibration matrix generated by the final calibration processing. For example, the robot control unit 316 may generate the robot control signal by using the calibration matrix generated by the final calibration processing.

The calibration unit 312 may perform the final calibration based on an instruction from the user received by using the input apparatus 34. For example, the user who has recognized the display screen 3520 illustrated in FIG. 10 may determine whether or not the calibration index value displayed on the display screen 3520 exceeds the predetermined first allowable threshold value. Note that the calibration unit 312 may display information related to the first allowable threshold value as the calibration accuracy information on the display apparatus 35 so that the user can properly determine whether or not the calibration index value exceeds the predetermined first allowable threshold value. In a case where the user determines that the calibration index value does not exceed the predetermined first allowable threshold value, the user may use the input apparatus 34 to input, to the control apparatus 3, an instruction for performing the final calibration processing using all of the N calibration image data IMG_calib acquired at the step S220. Alternatively, the calibration unit 312 may determine whether or not the calibration index value exceeds the predetermined first allowable threshold value regardless of whether or not the instruction is input from the user. In a case where the calibration unit 312 determines that the calibration index value does not exceed the predetermined first allowable threshold value, the calibration unit 312 may perform the final calibration processing using all of the N calibration image data IMG_calib acquired at the step S220.

Note that the first allowable threshold value may be set to an proper value that can distinguish, based on the calibration index value, a state in which the calibration matrix whose transformation accuracy is sufficiently high can be calculated by the calibration processing and a state in which the calibration matrix whose transformation accuracy is sufficiently high cannot be calculated by the calibration processing. The first allowable threshold value may be a fixed value that cannot be changed, or may be a variable value that can be changed. The first allowable threshold value may be set by the user, may be set in advance, or may be set properly by the calibration unit 312.

The calibration matrix whose transformation accuracy is sufficiently high may mean the calibration matrix satisfying a condition that a difference between a transformation result acquired by transforming the three-dimensional coordinate in one of the robot coordinate system and the imaging coordinate system by using the calibration matrix and a correct value (in other words, an ideal value) of the transformation result of the three-dimensional coordinate of one of the robot coordinate system and the imaging coordinate system is equal to or smaller than an allowable value.

Alternatively, the calibration unit 312 may select one of the M calibration matrices calculated at the step S222 to the step S223 as the calibration matrix that is actually used by the control apparatus 3 to control the robot 1, in addition to or instead of performing the final calibration processing. For example, the calibration unit 312 may select one calibration matrix whose calibration error is the smallest as the calibration matrix that is actually used by the control apparatus 3 to control the robot 1 among the M calibration matrices.

Note that the user or the calibration unit 312 may evaluate the quality of the N calibration image data IMG_cal by using the M calibration errors in addition to or instead of the calibration index value. For example, in a case where at least one of the M calibration errors does not exceed the predetermined first tolerance threshold value, the user or the calibration unit 312 may evaluate that it is unlikely that the N calibration image data IMG_calib include at least one calibration image data IMG_calib whose quality does not reach the allowable quality. In this case, the calibration unit 312 may perform the final calibration processing using all of the N calibration image data IMG_calib acquired at the step S220. Note that the calibration unit 312 may not calculate the calibration index value based on the M calibration errors in a case where the quality of N calibration image data IMG_calib is evaluated by using the M calibration errors.

### (3-3-2) Second Specific Example of Evaluation of Quality of Calibration Image Data IMG_calib

On the other hand, in a case where the calibration index value exceeds the predetermined first allowable threshold value, the user or the calibration unit 312 may evaluate that there is a possibility that the quality of all of the N calibration image data IMG_calib acquired at the step S220 does not reach the allowable quality.

Note that the calibration image data IMG_calib whose quality does not reach the allowable quality may include the calibration image data IMG_calib that causes a situation where the calibration index value exceeds the first allowable threshold value. One example of a reason why the calibration image data IMG_calib whose quality does not reach the allowable quality is acquired is that a part of the calibration member CP (especially, a part of the calibration pattern) is not included in the angle of view of the camera 21. Therefore, the calibration image data IMG_ calib whose quality does not reach the allowable quality may include the calibration image data IMG_calib indicating an image in which a part of the calibration member CP (especially, a part of the calibration pattern) is not captured. One example of the reason why the calibration image data IMG_calib whose quality does not reach the allowable quality is acquired is that a brightness of a part of the calibration member CP lower than a lower limit of a dynamic range of the camera 21, and as a result, a part of the image indicated by the calibration image data IMG_calib is blocked up shadows. Therefore, the calibration image data IMG_calib whose quality does not reach the allowable quality may include the calibration image data IMG_calib indicating the image a part of which is blocked up shadows. One example of the reason why the calibration image data IMG_calib whose quality does not reach the allowable quality is acquired is that the brightness of a part of calibration member CP exceeds an upper limit of the dynamic range of the camera 21, and as a result, a part of the image indicated by the calibration image data IMG_calib is blown out to white. Therefore, the calibration image data IMG_calib whose quality does not reach the allowable quality may include the calibration image data IMG_calib indicating the image a part of which is blown out to white.

Therefore, in a case where the calibration index value exceeds the predetermined first allowable threshold value, the calibration unit 312 may newly re-acquire N calibration image data IMG_calib. Namely, the calibration unit 312 may control the camera 21 to generate N calibration image data IMG_calib by imaging the calibration member CP N times again, respectively. In a case where the N calibration image data IMG_calib are newly re-acquired, the calibration unit 312 may perform the accuracy information display processing illustrated in FIG. 8 (especially, the processing after the step S221) again.

The calibration unit 312 may re-acquire the N calibration image data IMG_calib based on an instruction from the user received by using the input apparatus 34. For example, the user who has recognized the display screen 3520 illustrated in FIG. 10 may determine whether or not the calibration index value displayed on the display screen 3520 exceeds the predetermined first allowable threshold value. Note that the calibration unit 312 may display the information related to the first allowable threshold value as the calibration accuracy information on the display apparatus 35 so that the user can properly determine whether or not the calibration index value exceeds the predetermined first allowable threshold value. In a case where the user determines that the calibration index value exceeds the predetermined first allowable threshold value, the user may input an instruction for newly re-acquiring the N calibration image data IMG_calib by using the input apparatus 34 to the control apparatus 3. Alternatively, the calibration unit 312 may determine whether or not the calibration index value exceeds the predetermined first allowable threshold value regardless of whether or not the instruction is input from the user. In a case where the calibration unit 312 determines that the calibration index value exceeds the predetermined first allowable threshold value, the calibration unit 312 may newly re-acquire N calibration image data IMG_calib.

In a case where the N calibration image data IMG_calib are newly re-acquired, the calibration unit 312 may calculate a position that is suitable for the camera 21 to image the calibration member CP based on the N calibration image data IMG_calib that have been already acquired. For example, the calibration unit 312 may calculate the position that is suitable for the camera 21 to image the calibration member CP so that the calibration matrix whose transformation accuracy is sufficiently high can be calculated from the newly re-acquired N calibration image data IMG_calib. In this case, the robot control unit 316 may move the robot 1 (especially, the robot arm 12) so that the camera 21 moves to the position calculated by the calibration unit 312, and then the calibration unit 312 may control the camera 21 to image the calibration member CP.

The calibration unit 312 may display, on the display apparatus 35, the position that is suitable for the camera 21 to image the calibration member CP. In this case, the user may manually move the camera 21 so that the camera 21 moves to the calculated position.

In a case where the N calibration image data IMG_calib are newly re-acquired, the calibration unit 312 may calculate a pose that is suitable for the camera 21 to image the calibration member CP based on the N calibration image data IMG_calib that have been already acquired. For example, the calibration unit 312 may calculate the pose that is suitable for the camera 21 to image the calibration member CP so that the calibration matrix whose transformation accuracy is sufficiently high can be calculated from the newly re-acquired N calibration image data IMG_calib. In this case, the robot control unit 316 may move the robot 1 (especially, the robot arm 12) so that the pose of the camera 21 becomes the calculated pose, and then the calibration unit 312 may control the camera 21 to image the calibration member CP.

The calibration unit 312 may display, on the display apparatus 35, the pose that is suitable for the camera 21 to image the calibration member CP. In this case, the user may manually move the camera 21 so that the pose of the camera 21 becomes the calculated pose.

In a case where the N calibration image data IMG_calib are newly re-acquired, the calibration unit 312 may calculate a positional relationship between the camera 21 and the calibration member CP that is suitable for the camera 21 to image the calibration member CP based on the N calibration image data IMG_calib that have been already acquired. For example, the calibration unit 312 may calculate the positional relationship between the camera 21 and the calibration member CP that is suitable for the camera 21 to image the calibration member CP so that the calibration matrix whose transformation accuracy is sufficiently high can be calculated from the newly re-acquired N calibration image data IMG_calib. In this case, the robot control unit 316 may move the robot 1 (especially, the robot arm 12) so that the positional relationship between the camera 21 and the calibration member CP becomes the calculated positional relationship, and then the calibration unit 312 may control the camera 21 to image the calibration member CP.

The calibration unit 312 may display, on the display apparatus 35, the positional relationship between the camera 21 and the calibration member CP that is suitable for the camera 21 to image the calibration member CP. In this case, the user may manually move the camera 21 so that the positional relationship between the camera 21 and the calibration member CP becomes the calculated positional relationship.

Note that the user or the calibration unit 312 may evaluate the quality of the N calibration image data IMG_cal by using the M calibration errors in addition to or instead of the calibration index value. For example, in a case where all of the M calibration errors exceed the predetermined first tolerance threshold value, the user or the calibration unit 312 may evaluate that there is a possibility that the quality of all of the N calibration image data IMG_calib do not reach the allowable quality. In this case, the calibration unit 312 may newly re- acquire the N calibration image data IMG_calib. Note that the calibration unit 312 may not calculate the calibration index value based on the M calibration errors in a case where the quality of N calibration image data IMG_calib is evaluated by using M calibration errors.

### (3-3-3) Third Specific Example of Evaluation of Quality of Calibration Image Data IMG_calib

In a case where one calibration error of the M calibration errors exceeds a predetermined second allowable threshold value while the calibration index value exceeds the predetermined first allowable threshold value, the user or the calibration unit 312 may evaluate that there is a possibility that at least one of the first and second calibration image data groups used to calculate the one calibration error includes at least one calibration image data IMG_calib whose quality does not reach the allowable quality.

Note that the calibration image data IMG_calib whose quality does not reach the allowable quality may include the calibration image data IMG_calib that causes a situation where the calibration error exceeds the second allowable threshold value. Note that one example of the calibration image data IMG_calib whose quality does not reach the allowable quality has been already described.

Furthermore, the second allowable threshold value may be set to a proper value that can distinguish, based on calibration error, the calibration matrix whose transformation accuracy is sufficiently high can be calculated by the calibration processing and a state in which the calibration matrix whose transformation accuracy is sufficiently high cannot be calculated by the calibration processing. The second allowable threshold value may be a fixed value that cannot be changed, or may be a variable value that can be changed. The second allowable threshold value may be set by the user, may be set in advance, or may be set properly by the calibration unit 312.

Therefore, in a case where the calibration index value does not exceed the predetermined first allowable threshold value, but one calibration error of the M calibration errors exceeds the predetermined second allowable threshold value, the calibration unit 312 may exclude at least one calibration image data IMG_calib from at least one of the first and second calibration image data groups used to calculate the one calibration error. Namely, the calibration unit 312 may exclude at least one calibration image data IMG_calib included in at least one of the first and second calibration image data groups as at least one calibration image data IMG_calib whose quality is assumed not to reach the allowable quality.

The calibration unit 312 may exclude at least one calibration image data IMG_calib based on an instruction from the user received by using the input apparatus 34. For example, the user who has recognized the display screen 3520 illustrated in FIG. 10 may determine whether or not one calibration error displayed on the display screen 3520 exceeds the predetermined second allowable threshold value. Note that the calibration unit 312 may display information related to the second allowable threshold value as the calibration accuracy information on the display apparatus 35 so that the user can properly determine whether or not one calibration error displayed on the display screen 3520 exceeds the predetermined second allowable threshold value. In a case where the user determines that one calibration error exceeds the predetermined second allowable threshold value, the user may input, by using the input apparatus 34 to the control apparatus 3, an instruction for excluding at least one calibration image data IMG_calib from at least one of the first and second calibration image data groups used to calculate the one calibration error. Alternatively, the calibration unit 312 may determine whether or not one calibration error exceeds the predetermined second allowable threshold value regardless of whether or not the instruction is input from the user. In a case where the calibration unit 312 determines that one calibration error exceeds the predetermined second allowable threshold value, the calibration unit 312 may exclude at least one calibration image data IMG_calib from at least one of the first and second calibration image data groups used to calculate the one calibration error.

Then, the calibration unit 312 may re-perform each of the first and second calibration processing at the steps S222 and S223 in FIG. 8 by using the first and second calibration image data groups from which at least one calibration image data IMG_calib has been excluded. Then, the calibration unit 312 may re-calculate the calibration error.

In a case where one calibration error of the M calibration errors exceeds the predetermined second allowable threshold value, it is estimated that a possibility that at least one calibration image data IMG_calib whose quality does not reach the allowable quality is included in the first calibration image data group used to calculate the calibration error is higher than a possibility that at least one calibration image data IMG_calib whose quality does not reach the allowable quality is included in the second calibration image data group used to calculate the calibration error This is because a possibility that the quality of all X calibration image data IMG_calib, which correspond to a smaller number of samples used to calculate the one calibration error, is bad is higher than a possibility that the quality of all N-X calibration image data IMG_calib, which correspond to a larger number of samples used to calculate the one calibration error, is bad. Therefore, in a case where the calibration index value does not exceed the predetermined first allowable threshold value but one calibration error of the M calibration errors exceeds the predetermined second allowable threshold value, the calibration unit 312 excludes at least one calibration image data IMG_calib from the first calibration image data group used to calculate the one calibration error. Namely, the calibration unit 312 may exclude at least one calibration image data IMG_calib included in the first calibration image data group as at least one calibration image data IMG_calib whose quality is assumed not to reach the allowable quality. In this case, it is more likely that the calibration unit 312 can exclude at least one calibration image data IMG_calib whose quality is assumed not to reach the allowable quality, compared to a case where at least one calibration image data IMG_calib included in the second calibration image data group is excluded.

Then, the calibration unit 312 may re-perform each of the first and second calibration processing at the steps S222 and S223 in FIG. 8 by using the first calibration image data group from which at least one calibration image data IMG_calib has been excluded and the second calibration image data group from which at least one calibration image data IMG_calib has not been excluded. Then, the calibration unit 312 may re-calculate the calibration error.

In this case, compared to the second specific example of the evaluation of the quality of the calibration image data IMG_calib described above, the calibration unit 312 can reduce the number of times the first and second calibration processing are re-performed. This is because, it is enough to exclude at least one calibration image data IMG_calib whose quality is assumed not to reach the allowable quality, in the third specific example, compared to the second specific example in which all calibration image data IMG_calib are re-acquired. Therefore, the calibration unit 312 can reduce a time required to perform the calibration processing.

Alternatively, the calibration unit 312 may exclude at least one calibration image data IMG_calib included in at least one of the first and second calibration image data group used to calculate the one calibration error, and perform the final calibration processing by using the remaining calibration image data IMG_calib, in addition to or instead of re-performing the first and second calibration processing. In this case, the calibration unit 312 can generate the calibration matrix whose transformation accuracy is sufficiently high by the final calibration processing, because at least one calibration image data IMG_calib whose quality is assumed not to reach the allowable quality is not used for the final calibration processing.

Note that the calibration unit 312 excludes at least one calibration image data IMG_calib from at least one of the first and second calibration image data groups used to calculate the one calibration error after calculating the M calibration errors in the above-described description. However, the calibration unit 312 may perform a processing for excluding at least one calibration image data IMG_calib from at least one of the first and second calibration image data groups used to calculate the calibration error each time the calibration error is calculated. Namely, the calibration unit 312 may determine whether or not the calculated calibration error exceeds the second allowable threshold value each time the calibration error is calculated. Alternatively, the calibration unit 312 may display the calculated calibration error on the display apparatus 35 and the user may determine whether or not the displayed calibration error exceeds the second allowable threshold value each time the calibration error is calculated. In a case where it is determined that the calculated calibration error exceeds the second allowable threshold value, the calibration unit 312 may exclude at least one calibration image data IMG_calib from at least one of the first and second calibration image data groups. Then, the calibration unit 312 may re-perform the first and second calibration processing to re-calculate the calibration error.

Moreover, the calibration unit 312 may repeat the calibration accuracy information display processing illustrated in FIG. 8 while excluding at least one calibration image data IMG_calib from at least one of the first and second calibration image data groups used to calculate the calibration error that exceeds the second allowable threshold value. For example, the calibration unit 312 may acquire N calibration image data IMG_calib generated in a first period at the step S220, and perform the processing from the step S221 to the step S227 by using the N calibration image data IMG_calib. Furthermore, the calibration unit 312 may exclude at least one calibration image data IMG_calib whose quality is assumed not to reach the allowable quality based on the calibration index value and the calibration error. Then, the calibration unit 312 may acquire new N calibration image data IMG_calib generated in a second period that is after the first period, and perform the processing from the step S221 to the step S227 by using the N calibration image data IMG_calib. Then, the calibration unit 312 may repeat the same operation. As a result, the calibration unit 312 may perform the final calibration processing by using the calibration image data IMG_calib whose number is larger than N and which remain as a result of the plurality of calibration accuracy information display processing.

Moreover, in the above-described description, in a case where one calibration error of the M calibration errors exceeds the predetermined second allowable threshold value, the calibration unit 312 excludes at least one calibration image data IMG_calib from at least one of the first and second calibration image data groups used to calculate the one calibration error. However, the calibration unit 312 may replace at least one calibration image data IMG_calib included in at least one of the first and second calibration image data groups used to calculate the calibration error with another calibration image data IMG_calib. Namely, the calibration unit 312 excludes at least one calibration image data IMG_calib from at least one of the first and second calibration image data groups used to calculate the one calibration error, and newly add another calibration image data IMG_calib, which is different from the excluded calibration image data IMG_calib, to at least one of the first and second calibration image data groups used to calculate the one calibration error. Note that another calibration image data IMG_calib that is different from the excluded calibration image data IMG_calib may be the calibration image data IMG_calib acquired separately from the step S220.

### (3-4) Technical Effect of Accuracy Information Display Processing

As described above, in the present example embodiment, the calibration unit 312 may calculate the calibration accuracy information (for example, at least one of the calibration index value and the calibration error) that substantially indicates the accuracy of the calibration processing in the process of generating the recipe file 321 before actually starting to move the robot 1 by performing the processing from the step S31 to the step S37 in FIG. 6. As a result, the user or the calibration unit 312 may evaluate the quality of the calibration image data IMG_calib used to perform the calibration processing in the process of generating the recipe file 321 before actually starting to move the robot 1 by performing the processing from the step S31 to the step S37 in FIG. 6. Therefore, the calibration unit 312 may generate the calibration matrix by using the calibration image data IMG_calib whose quality reaches the allowable quality without using the calibration image data IMG_calib whose quality does not reach the allowable quality. Therefore, the calibration unit 312 can generate the calibration matrix whose transformation accuracy is higher, compared to a case where the calibration matrix is generated by using calibration image data IMG_calib whose quality does not reach the allowable quality. As a result, the robot control unit 316 can accurately calculate at least one of the position and the pose of the object OBJ in the robot coordinate system from at least one of the image data IMG_2D and IMG_3D by using the calibration matrix whose transformation accuracy is higher. Therefore, the robot control unit 316 can accurately move the robot 1 (especially, the robot arm 12, which is substantially the end effector 4 and the tool center point TCP) based on at least one of the position and the pose of the object OBJ.

Especially, since the calibration processing can be re-performed before actually starting to move the robot 1, the robot control unit 316 may not move the robot 1 by using the calibration matrix whose transformation accuracy is not sufficiently high. As a result, it is less likely that an error in the movement of the robot 1 occurs due to a low transformation accuracy of the calibration matrix, and as a result, it is less likely that a collision between the robot 1 and the object OBJ (alternatively, any other object) occurs due to the low transformation accuracy of the calibration matrix. Furthermore, it is less likely that an error in the calculated result of the position and the pose of the object OBJ occurs due to the low transformation accuracy of the calibration matrix, and as a result, it is less likely that the collision between the robot 1 and the object OBJ (alternatively, any other object) occurs due to the low transformation accuracy of the calibration matrix, and that the end effector 4 is not positioned at a desired position relative to the object OBJ due to the operation of the robot 1 based on the calculated result of the position and the pose of the object OBJ and the end effector 4 fails to perform the predetermined operation on the object OBJ.

Note that the calibration unit 312 performs the accuracy information display processing illustrated in FIG. 8 in the process of generating the recipe file 321 before actually starting to move the robot 1 by performing the processing from the step S31 to the step S37 in FIG. 6 in the above-described description. However, the calibration unit 312 may perform the accuracy information display processing illustrated in FIG. 8 after actually starting to move the robot 1 by performing the processing from the step S31 to the step S37 in FIG. 6. For example, there is a possibility that an attached position of at least one of the cameras 21 and 22 with respect to the robot 1 (the robot arm 12) is shifted due to the movement of the robot 1 (especially, the movement of the robot arm 12) after actually starting to move the robot 1 by performing the processing from the step S31 to the step S37 in FIG. 6. For example, there is a possibility that the attached position of at least one of the cameras 21 and 22 with respect to the robot 1 (the robot arm 12) is shifted due to a vibration of the robot 1 (especially, a vibration of the robot arm 12) after actually starting to move the robot 1 by performing the processing from the step S31 to the step S37 in FIG. 6. For example, there is a possibility that the attached position of at least one of the cameras 21 and 22 with respect to the robot 1 (the robot arm 12) is shifted due to a collision between the object OBJ and at least one of the cameras 21 and 22 moving due to the movement of the robot arm 12 after actually starting to move the robot 1 by performing the processing from the step S31 to the step S37 in FIG. 6. In such cases, the calibration unit 312 may perform the accuracy information display processing illustrated in FIG. 8.

### (3-5) Modified Example of Calibration Accuracy Information

The calibration unit 312 may display, as the calibration accuracy information on the display apparatus 35, information that is different from at least one of the calibration index value and the calibration error described above.

For example, the calibration unit 312 may display, as the calibration accuracy information on the display apparatus 35, information for notifying the user whether or not the calibration processing has been successful. For example, the calibration unit 312 may display, as the calibration accuracy information on the display apparatus 35, a text message for notifying the user whether or not the calibration processing has been successful.

As one example, the calibration unit 312 may display, on the display apparatus 35, the information for notifying the user whether or not the calibration processing performed at the step S222 to the S223 in FIG. 8 described above has been successful each time the calibration error is calculated at the step S224 of the above-described FIG. 8. Specifically, in a case where the calibration error exceeds the second allowable threshold value described above, the calibration unit 312 may determine that the calibration processing has not been successful. In this case, the calibration unit 312 may display, on the display apparatus 35, the information for notifying the user that the calibration processing has not been successful. On the other hand, in a case where the calibration error does not exceed the second allowable threshold value described above, the calibration unit 312 may determine that the calibration processing has been successful. In this case, the calibration unit 312 may display, on the display apparatus 35, the information for notifying the user that the calibration processing has been successful.

In a case where it is determined that the calibration processing has not been successful in a period during which the accuracy information display processing illustrated in FIG. 8 is performed, the calibration unit 312 may display, as the calibration accuracy information on the display apparatus 35, information for prompting the user to re-perform the calibration processing. As one example, the calibration unit 312 may display, on the display apparatus 35, a text message for prompting the user to re-perform the calibration processing. In a case where it is determined that the calibration processing has not been successful, the calibration unit 312 may display, as the calibration accuracy information on the display apparatus 35, information for notifying the user that there is a possibility that the final calibration processing is not successful even if the calibration processing is repeated as it is. As one example, the calibration unit 312 may display, on the display apparatus 35, a text message for notifying the user that there is a possibility that the final calibration processing is not successful even if the calibration processing is repeated as it is. In a case where it is determined that the calibration processing has not been successful, the calibration unit 312 may display, as the calibration accuracy information on the display apparatus 35, the image indicated by the calibration image data IMG_calib that causes the unsuccessful calibration processing. As one example, the calibration unit 312 may display, on the display apparatus 35, the image indicated by at least one calibration image data IMG_calib included in the first calibration image data group that is the smaller number of samples. Furthermore, the calibration unit 312 may display, as the calibration accuracy information on the display apparatus 35, information for prompting the user to exclude the calibration image data IMG_calib that causes the unsuccessful calibration processing. As one example, the calibration unit 312 may display, on the display apparatus 35, a text message for prompting the user to exclude the calibration image data IMG_calib that causes the unsuccessful calibration processing.

In this case, the user may input, by using the input apparatus 34 to the control apparatus 3, an instruction for requesting an re-acquisition of the N calibration image data IMG_calib, an exclusion of the calibration image data IMG_calib whose quality does not reach the allowable quality, or a replacement of the calibration image data IMG_calib whose quality does not reach the allowable quality before the accuracy information display processing is completed. As a result, the calibration unit 312 may re-acquire the N calibration image data IMG_calib, exclude the calibration image data IMG_calib whose quality does not reach the allowable quality, or replace the calibration image data IMG_calib whose quality does not reach the allowable quality before the accuracy information display processing is completed. Alternatively, the calibration unit 312 may re-acquire the N calibration image data IMG_calib, exclude the calibration image data IMG_calib whose quality does not reach the allowable quality, or replace the calibration image data IMG_calib whose quality does not reach the allowable quality before the accuracy information display processing is completed regardless of whether or not the instruction is input from the user.

As another example, the calibration unit 312 may display, on the display apparatus 35, information for notifying the user whether or not a series of calibration processing performed at the step S222 to the step S223 in FIG. 8 described above has been successful after the calibration index value is calculated at the step S226 in FIG. 8 described above. Specifically, in a case where the calibration index value exceeds the first allowable threshold value described above, the calibration unit 312 may display, on the display apparatus 35, the information for notifying the user that the series of calibration processing has not been successful. On the other hand, in a case where the calibration index value does not exceed the first allowable threshold value (furthermore, the calibration error does not exceed the second allowable threshold value), the calibration unit 312 may display, on the display apparatus 35, the information for notifying the user that the series of calibration processing has been successful.

### (4) Processing For Setting Process Position / Pose Information PAI

### (4-1) Base of Processing For Setting Process Position / Pose Information PAI

Next, a process position / pose setting processing performed by the process position / pose setting unit 313 to set the process position / pose information PAI at the step S23 in FIG. 6 will be described.

In order to perform the process position / pose setting processing, the process position / pose setting unit 313 may display a process position / pose setting screen 3530 for setting the process position / pose information PAI on the display apparatus 35. Specifically, the display signal generation unit 317 may generate a display signal for displaying the process position / pose setting screen 3530 on the display apparatus 35 under the control of the process position / pose setting unit 313. Then, the display signal output unit 318 may output the display signal generated by the display signal generation unit 317 to the display apparatus 35. As a result, the display apparatus 35 may display the process position / pose setting screen 3530 based on the display signal acquired from the display signal output unit 318.

One example of the process position / pose setting screen 3530 is illustrated in FIG. 11. As illustrated in FIG. 11, the process position / pose setting screen 3530 is a screen on which the end effector model EM and the object model OM are positioned. Especially, a three-dimensional space SP3 that is usable as a virtual space is virtually formed in the process position / pose setting screen 3530. The end effector model EM and the object model OM are positioned in this three-dimensional space SP3.

A position in the three-dimensional space SP3 may be indicated by using a position / pose setting coordinate system that is a three-dimensional coordinate system used to indicate the position in the three-dimensional space SP3. The position / pose setting coordinate system may be a three-dimensional coordinate system defined by an X-axis (SP3), a Y-axis (SP3) that is orthogonal to the X-axis (SP3), and a Z-axis (SP3) that is orthogonal to both the X-axis (SP3) and the Y-axis (SP3).

Note that the X-axis (SP3) may be set to be an axis corresponding to the X-axis of the global coordinate system. The X-axis (SP3) may be set to be an axis corresponding to the X-axis of the robot coordinate system. However, the X-axis (SP3) may be an axis set independently of the X-axis of the global coordinate system and the robot coordinate system. Similarly, the Y-axis (SP3) may be set to be an axis corresponding to the Y-axis of the global coordinate system. The Y-axis (SP3) may be set to be an axis corresponding to the Y-axis of the robot coordinate system. However, the Y-axis (SP3) may be an axis set independently of the Y-axis of the global coordinate system and the robot coordinate system. Similarly, the Z-axis (SP3) may be set to be an axis corresponding to the Z-axis of the global coordinate system. The Z-axis (SP3) may be set to be an axis corresponding to the Z-axis of the robot coordinate system. However, the Z-axis (SP3) may be an axis set independently of the Z-axis of the global coordinate system and the robot coordinate system.

Note that a transformation matrix for transforming a three-dimensional coordinate in one of the global coordinate system (alternatively, the robot coordinate system, the same applies in this paragraph) and the position / pose setting coordinate system to a three-dimensional coordinate in the other one of the global coordinate system and the position / pose setting coordinate system may be calculated in advance. Namely, the transformation matrix for transforming the three-dimensional coordinate in one of the global coordinate system and the position / pose setting coordinate system to the three-dimensional coordinate in the other of the global coordinate system and the position / pose setting coordinate system may be known information for the process position / pose setting unit 313. The transformation matrix may include a translational transformation matrix for translating the three-dimensional coordinate in one of the global coordinate system and the position / pose setting coordinate system. Namely, the transformation matrix may include the translational transformation matrix that transforms a position of an object in one of the global coordinate system and the position / pose setting coordinate system to a position of the object in the other one of the global coordinate system and the position / pose setting coordinate system. The transformation matrix may include a rotational transformation matrix that rotationally moves the three-dimensional coordinate in one of the global coordinate system and the position / pose setting coordinate system. Namely, the transformation matrix may include the rotational transformation matrix that transforms a pose of an object in one of the global coordinate system and the position / pose setting coordinate system to a pose of the object in the other one of the global coordinate system and the position / pose setting coordinate system. In this case, the process position / pose setting unit 313 may transform the three-dimensional coordinate in one of the global coordinate system and the position / pose setting coordinate system to the three-dimensional coordinate in the other one of the global coordinate system and the position / pose setting coordinate system by using the transformation matrix, regardless of a relationship between the X-axis (SP3), Y-axis (SP3), and Z-axis (SP3) in the position / pose setting coordinate system and the X-axis, Y-axis, and Z-axis in the global coordinate system.

The end effector model EM is the three-dimensional model of the end effector 4 attached to the robot arm 12. Note that a detailed description of the end effector model EM is omitted because it has been already described.

The object model OM is the three-dimensional model of the object OBJ that is the target object on which the end effector 4 performs the predetermined process. Note that a detailed description of the object model OM is omitted because it has been already described.

In order to display the process position / pose setting screen 3530 including the end effector model EM and the object model OM, end effector model information indicating the end effector model EM and object model information indicating the object model OM may be input to the control apparatus 3. For example, the user may input the end effector model information and the object model information to the control apparatus 3 by using the input apparatus 34. For example, the process position / pose setting unit 313 may read the end effector model information and object model information from a recording medium on which the end effector model information and object model information are recorded. For example, the process position / pose setting unit 313 may download the end effector model information and object model information from an external server in which the end effector model information and object model information are stored.

The process position / pose setting unit 313 may set the process position / pose information PAI based on a positional relationship between the object model OM and the end effector model EM in the three-dimensional space SP3. Specifically, the user inputs, by using the input apparatus 34 to the control apparatus 3, an instruction for moving at least one of the object model OM and the end effector model EM in the process position / pose setting screen 3530 (namely, in the three-dimensional space SP3 in the process position / pose setting screen 3530). Namely, the user inputs, by using the input apparatus 34 to the control apparatus 3, an instruction for changing the relative positional relationship between the object model OM and the end effector model EM in the process position / pose setting screen 3530 (namely, in the three-dimensional space SP3 in the process position / pose setting screen 3530).

The user may input the instruction for moving the end effector model EM relative to the object model OM. In this case, the position / pose setting coordinate system used to indicate the position in the three-dimensional space SP3 may be a coordinate system that is defined with respect to the object model OM. For example, the position / pose setting coordinate system used to indicate the position in the three-dimensional space SP3 may be a coordinate system whose origin point is positioned on a surface or inside the object model OM.

The user may move the object model OM relative to the end effector model EM. In this case, the position / pose setting coordinate system used to indicate the position in the three-dimensional space SP3 may be a coordinate system that is defined with respect to the end effector model EM. For example, the position / pose setting coordinate system used to indicate the position in the three-dimensional space SP3 may be a coordinate system whose origin point is positioned on a surface or inside the end effector model EM.

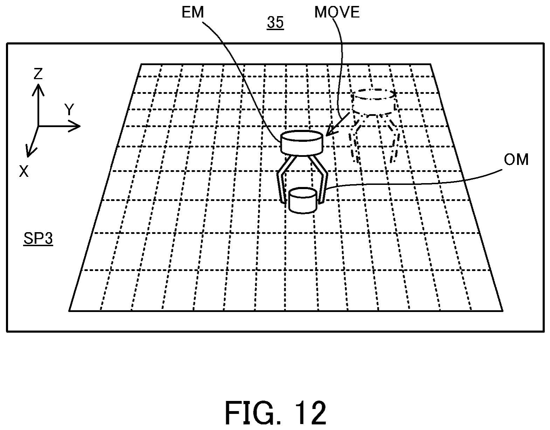

Note that FIG. 11 illustrates an example in which the coordinate system defined with respect to the object model OM is used as the position / pose setting coordinate system. However, the origin point of the position / pose setting coordinate system (namely, an intersecting point of the X-axis (SP3), the Y-axis (SP3), and the Z-axis (SP3) is distant from the object model OM in the example illustrated in FIG. 11 for clarity of the drawing, however, the origin point of the position / pose setting coordinate system may be set at a position that is defined with respect to the object model OM (for example, a position on the surface or inside the end effector model EM). The same applies in FIG. 12 to FIG. 15 described below.

In a case where the user inputs the instruction for moving at least one of the object model OM and the end effector model EM, the process position / pose setting unit 313 updates the process position / pose setting screen 3530 so that at least one of the object model OM and the end effector model EM moves in the process position / pose setting screen 3530 (namely, in the three-dimensional space SP3) based on the instruction from the user. Specifically, the display signal generation unit 317 generates the display signal for displaying the process position / pose setting screen 3530, in which at least one of the object model OM and the end effector model EM moves based on the instruction from the user, on the display apparatus 35 under the control of the process position / pose setting unit 313. Then, the display signal output unit 318 outputs the display signal generated by the display signal generation unit 317 to the display apparatus 35. As a result, as illustrated in FIG. 12, the display apparatus 35 displays the process position / pose setting screen 3530 in which at least one of the object model OM and the end effector model EM moves based on the instruction from the user, based on the display signal acquired from the display signal output unit 318.

The user may move at least one of the object model OM and the end effector model EM so that the positional relationship between the object model OM and the end effector model EM is the same as an ideal positional relationship between the object OBJ and the end effector 4 that should be realized when the end effector 4 performs the predetermined process on the object OBJ. Namely, the user may move at least one of the object model OM and the end effector model EM so that the positional relationship between the object model OM and the end effector model EM is the same as the ideal positional relationship between the object OBJ and the end effector 4 desired by the user when the end effector 4 performs the predetermined process on the object OBJ. In this case, moving at least one of the object model OM and the end effector model EM may be considered to be equivalent to aligning the object model OM and the end effector model EM.

As one example, in a case where the end effector 4 performs the holding process for holding the workpiece W as described above, the object model OM indicating the three-dimensional shape of the workpiece W and the end effector model EM are displayed on the process position / pose setting screen 3530. The user may move at least one of the object model OM and the end effector model EM so that the positional relationship between the object model OM and the end effector model EM is the same as the ideal positional relationship between the workpiece W and the end effector 4 that should be realized when the end effector 4 performs the holding process for the workpiece W.

As another example, in a case where the end effector 4 performs the releasing process for releasing the workpiece W as described above, the object model OM indicating the three-dimensional shape of the placing apparatus T, on which the workpiece W is placed, and the end effector model EM are displayed on the process position / pose setting screen 3530. Note that a three-dimensional model that is obtained by adding the three-dimensional model of the workpiece W held by the end effector 4 to the end effector model EM may be used as the end effector model EM in a case where the releasing process is performed. The user may move at least one of the object model OM and the end effector model EM so that the positional relationship between the object model OM and the end effector model EM is the same as the ideal positional relationship between the placing apparatus T and the end effector 4 that should be realized when the end effector 4 performs the releasing process for releasing the workpiece W on the placing apparatus T.

The user may move at least one of the object model OM and the end effector model EM so that a postural relationship between the object model OM and the end effector model EM is the same as an ideal postural relationship between the object OBJ and the end effector 4 that should be realized when the end effector 4 performs the predetermined process on the object OBJ. Namely, the user may move at least one of the object model OM and the end effector model EM so that the postural relationship between the object model OM and the end effector model EM is the same as the ideal postural relationship between the object OBJ and the end effector 4 desired by the user when the end effector 4 performs the predetermined process on the object OBJ. In this case, moving at least one of the object model OM and the end effector model EM may be considered to be equivalent to aligning (adjusting the poses of) the object model OM and the end effector model EM.

As one example, in a case where the end effector 4 performs the holding process for holding the workpiece W as described above, the object model OM indicating the three-dimensional shape of the workpiece W and the end effector model EM are displayed on the process position / pose setting screen 3530. The user may move at least one of the object model OM and the end effector model EM so that the postural relationship between the object model OM and the end effector model EM is the same as the ideal postural relationship between the workpiece W and the end effector 4 that should be realized when the end effector 4 performs the holding process for the workpiece W.

As another example, in a case where the end effector 4 performs the releasing process for releasing the workpiece W as described above, the object model OM indicating the three-dimensional shape of the placing apparatus T, on which the workpiece W is placed, and the end effector model EM are displayed on the process position / pose setting screen 3530. Note that a three-dimensional model that is obtained by adding the three-dimensional model of the workpiece W held by the end effector 4 to the end effector model EM may be used as the end effector model EM in a case where the releasing process is performed. The user may move at least one of the object model OM and the end effector model EM so that the postural relationship between the object model OM and the end effector model EM is the same as the ideal postural relationship between the placing apparatus T and the end effector 4 that should be realized when the end effector 4 performs the releasing process for releasing the workpiece W on the placing apparatus T.

Then, the process position / pose setting unit 313 may set the process position / pose information PAI based on at least one of the positional relationship and the postural relationship between the object model OM and the end effector model EM changed by the user.

For example, the process position / pose setting unit 313 may set the process position / pose information PAI that includes, as information for calculating the process target position PTP at which the end effector 4 performs the predetermined process on the object OBJ, information related to a relative position of the end effector model EM with respect to the object model OM. Namely, in the present example embodiment, the process position / pose setting unit 313 may set the process position / pose information PAI that includes, as the information for calculating the process target position PTP, information related to a relative position of the end effector 4 with respect to the object OBJ. In other words, the process position / pose setting unit 313 may set the process position / pose information PAI that includes, as the information for calculating the process target position PTP, information related to a relative position of the end effector 4 based on the object OBJ.

For example, the process position / pose setting unit 313 may set the process position / pose information PAI that includes, as information for calculating the process target pose PTA with which the end effector 4 performs the predetermined process on the object OBJ, information related to a relative pose of the end effector model EM with respect to the object model OM. Namely, in the present example embodiment, the process position / pose setting unit 313 may set the process position / pose information PAI that includes, as the information for calculating the process target pose PTA, information related to a relative pose of the end effector 4 with respect to the object OBJ. In other words, the process position / pose setting unit 313 may set the process position / pose information PAI that includes, as the information for calculating the process target pose PTA, information related to a relative pose of the end effector 4 based on the object OBJ.

As described above, the robot control unit 316 moves the robot arm 12 so that the tool center point TCP (alternatively, any movement base point MBP) moves to the process target position PTP. In this case, the process position / pose setting unit 313 may calculate a position of the tool center point TCP based on the end effector model EM moved by the user, and set the process position / pose information PAI that includes, as the information for calculating the process target position PTP at which the end effector 4 performs the predetermined process on the object OBJ, information related to a relative position of the tool center point TCP with respect to the object model OM. Alternatively, the process position / pose setting unit 313 may calculate a position of any movement base point MBP, which is different from the tool center point TCP, based on the end effector model EM moved by the user, and set the process position / pose information PAI that includes, as the information for calculating the process target position PTP at which the end effector 4 performs the predetermined process on the object OBJ, information related to a relative position of any movement base point MBP with respect to the object model OM.

Note that the process position / pose setting unit 313 may display the process position / pose setting screen 3530 including the tool center point TCP that is determined with respect to the end effector model EM on the display apparatus 35, in addition to or instead of displaying the process position / pose setting screen 3530 including the end effector model EM on the display apparatus 35. In this case, the user may input an instruction for moving the tool center point TCP in addition to or instead of inputting the instruction for moving the end effector model EM. In a case where the user inputs the instruction for moving the tool center point TCP, the process position / pose setting unit 313 may update the process position / pose setting screen 3530 so that the tool center point TCP moves in the process position / pose setting screen 3530 (namely, in the three-dimensional space SP3) based on the instruction from the user. Then, the process position / pose setting unit 313 may set the process position / pose information PAI based on at least one of the positional relationship and the postural relationship between the object model OM and the tool center point TCP changed by the user. In this case, the process position / pose setting unit 313 may set the process position / pose information PAI to include, as the information for calculating the process target position PTP, information related to a relative position of the tool center point TCP moved by the user.

As described above, the process target position PTP may include at least one of the position of the end effector 4 along the X-axis of the global coordinate system, the position of the end effector 4 along the Y-axis of the global coordinate system, and the position of the end effector 4 along the Z-axis of the global coordinate system. In this case, the process position / pose setting unit 313 may set, based on the positional relationship between the object model OM and the end effector model EM, the process position / pose information PAI that includes, as the information for calculating the process target position PTP, information related to at least one of the position of the end effector model EM along the X-axis (SP3), the position of the end effector model EM along the Y-axis (SP3), and the position of the end effector model EM along the Z-axis (SP3). In this case, the robot control unit 316 may calculate, as the process target position PTP, at least one of the position of the end effector 4 along the X-axis of the global coordinate system, the position of the end effector 4 along the Y-axis of the global coordinate system, and the position of the end effector 4 along the Z-axis of the global coordinate system based on the process position / pose information PAI and the calculated result of at least one of the position and the poser of the object OBJ in the global coordinate system based on at least one of the image data IMG_2D and IMG_3D in performing the fine movement operation. Then, the robot control unit 316 may control the robot 1 so that the end effector 4 moves toward the calculated process target position PTP.

As described above, the process target pose PTA may include at least one of the pose of the end effector 4 along the rotational direction around the X-axis of the global coordinate system, the pose of the end effector 4 along the rotational direction around the Y-axis of the global coordinate system, and the pose of the end effector 4 along the rotational direction around the Z-axis of the global coordinate system. In this case, the process position / pose setting unit 313 may set, based on the postural relationship between the object model OM and the end effector model EM, the process position / pose information PAI that includes, as the information for calculating the process target position PTP, information related to at least one of the pose of the end effector model EM along the rotational direction around the X-axis (SP3), the pose of the end effector model EM along the rotational direction around the Y-axis (SP3), and the pose of the end effector model EM along the rotational direction around the Z-axis (SP3). In this case, the robot control unit 316 may calculate, as the process target pose PTA, at least one of the pose of the end effector 4 along the rotational direction around the X-axis of the global coordinate system, the pose of the end effector 4 along the rotational direction around the Y-axis of the global coordinate system, and the pose of the end effector 4 along the rotational direction around the Z-axis of the global coordinate system (namely, the poser of the end effector 4) based on the process position / pose information PAI and the calculated result of at least one of the position and the poser of the object OBJ in the global coordinate system based on at least one of the image data IMG_2D and IMG_3D in performing the fine movement operation. The robot control unit 316 may control the robot 1 so that the poser of the end effector 4 becomes the calculated process target pose PTA.

The user may move (translates) at least one of the object model OM and the end effector model EM along at least one of the three axes defining the position / pose setting coordinate system that is the three-dimensional coordinate system used to indicate the position in the three-dimensional space SP3. Namely, the user may move at least one of the object model OM and the end effector model EM along at least one of the X-axis (SP3), the Y-axis (SP3), and the Z-axis (SP3).

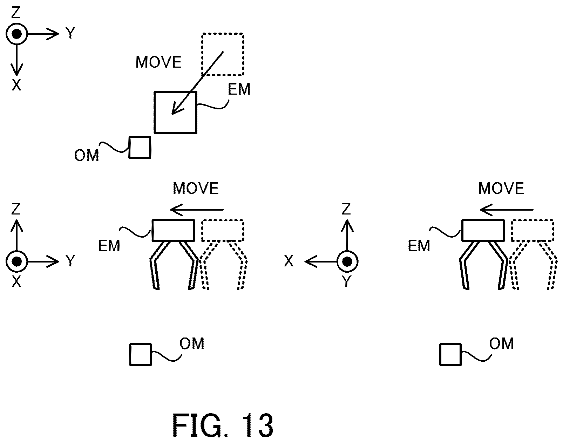

As an example, as illustrated in FIG. 13, the user may move at least one of the object model OM and the end effector model EM along two of the X-axis (SP3), Y-axis (SP3), and Z-axis (SP3). Note that moving at least one of the object model OM and the end effector model EM along both of two of the X-axis (SP3), the Y-axis (SP3), and the Z-axis (SP3) may be considered to be equivalent to moving at least one of the object model OM and the end effector model EM along an inclination direction that is inclined with respect to the two of the X-axis (SP3), the Y-axis (SP3), and the Z-axis (SP3) as illustrated in FIG. 13. In the example illustrated in FIG. 13, the user moves the end effector model EM along both the X-axis (SP3) and the Y-axis (SP3). Namely, in the example illustrated in FIG. 13, the user moves the end effector model EM along an inclination direction that is inclined with respect to both the X-axis (SP3) and the Y-axis (SP3). Note that the X-axis (SP3), the Y-axis (SP3), and the Z-axis (SP3) are represented by "X", "Y", and "Z", respectively, in FIG. 13 for simplicity of the drawing.

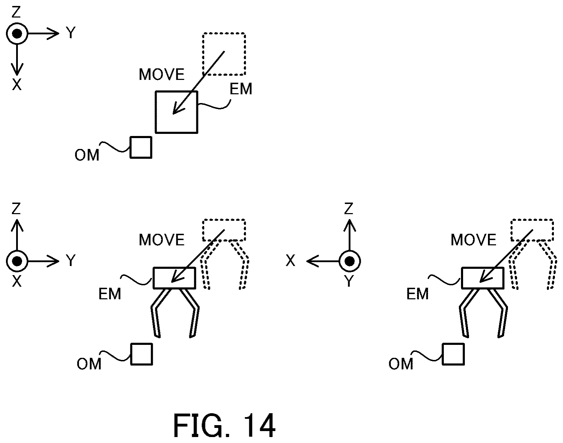

As an example, as illustrated in FIG. 14, the user may move at least one of the object model OM and the end effector model EM along all of the X-axis (SP3), Y-axis (SP3), and Z-axis (SP3). Note that moving at least one of the object model OM and the end effector model EM along all of two of the X-axis (SP3), the Y-axis (SP3), and the Z-axis (SP3) may be considered to be equivalent to moving at least one of the object model OM and the end effector model EM along an inclination direction that is inclined with respect to all of the X-axis (SP3), the Y-axis (SP3), and the Z-axis (SP3) as illustrated in FIG. 13. Note that the X-axis (SP3), the Y-axis (SP3), and the Z-axis (SP3) are represented by "X", "Y", and "Z", respectively, in FIG. 14 for simplicity of the drawing.

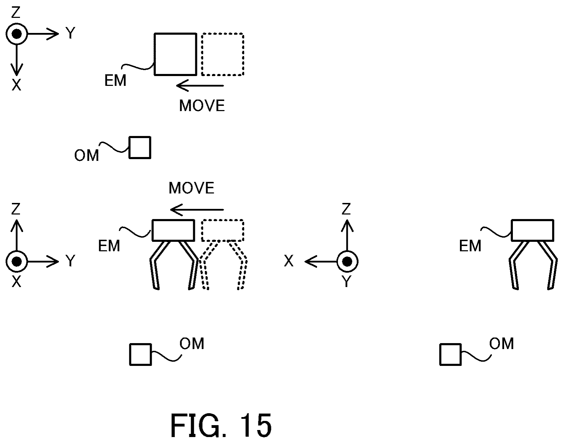

As another example, as illustrated in FIG. 15, the user may move at least one of the object model OM and the end effector model EM along one of the X-axis (SP3), Y-axis (SP3), and Z-axis (SP3). In the example illustrated in FIG. 15, the user moves the end effector model EM along the Y-axis (SP3). Note that the X-axis (SP3), the Y-axis (SP3), and the Z-axis (SP3) are represented by "X", "Y", and "Z", respectively, in FIG. 15 for simplicity of the drawing.

In a case where the user performs a multi-axis movement for moving at least one of the object model OM and the end effector model EM along at least two of the X-axis (SP3), the Y-axis (SP3), and the Z-axis (SP3), the user can reduce a time required to align the object model OM and the end effector model EM, compared to a case where the user performs a single-axis movement for moving at least one of the object model OM and the end effector model EM along one of the X-axis (SP3), the Y-axis (SP3), and the Z-axis (SP3). This is because, the user needs to perform the single-axis movement for moving at least one of the object model OM and the end effector model EM along one of the X-axis (SP3), the Y-axis (SP3), and the Z-axis (SP3), and then perform the single -axis movement for moving at least one of the object model OM and the end effector model EM along other one of the X-axis (SP3), the Y-axis (SP3), and the Z-axis (SP3), in order to perform the single-axis movement to move at least one of the object model OM and the end effector model EM in the same manner as the multi-axis movement. In other words, the user needs to perform the single-axis movement a plurality of times. On the other hand, in order to perform the multi-axis movement to move at least one of the object model OM and the end effector model EM in the same manner as the plurality of single-axis movements, it is sufficient for the user to perform the multi-axis movement at least once. Therefore, the process position / pose setting unit 313 can set the process position / pose information PAI more quickly in a case where the user performs the multi-axis movement in addition to or instead of the single-axis movement, compared to a case where the user performs the single-axis movement without performing the multi-axis movement.

The user may perform the single-axis movement after performing the multi-axis movement. Specifically, the user may first perform the multi-axis movement to roughly change the positional relationship between the object model OM and the end effector model EM. Namely, the user may input, to the control apparatus 3, an instruction for performing the multi-axis movement so as to roughly change the positional relationship between the object model OM and the end effector model EM. As a result, the process position / pose setting unit 313 may display the process position / pose setting screen 3530 in which at least one of the object model OM and the end effector model EM moves along at least two of the X-axis (SP3), Y-axis (SP3), and Z-axis (SP3). Namely, the display signal generation unit 317 may generate a display signal for displaying the process position / pose setting screen 3530 in which at least one of the object model OM and the end effector model EM moves along at least two of the X-axis (SP3), the Y-axis (SP3), and the Z-axis (SP3). Furthermore, the display apparatus 35 may display the process position / pose setting screen 3530 in which at least one of the object model OM and the end effector model EM moves along at least two of the X-axis (SP3), the Y-axis (SP3), and the Z-axis (SP3) based on the display signal. Then, the user may change the positional relationship between the object model OM and the end effector model EM with high accuracy by performing the single-axis movement. Namely, the user may input, to the control apparatus 3, an instruction for performing the single-axis movement so as to change the positional relationship between the object model OM and the end effector model EM with high accuracy. As a result, the process position / pose setting unit 313 may display the process position / pose setting screen 3530 in which at least one of the object model OM and the end effector model EM moves along one of the X-axis (SP3), the Y-axis (SP3), and the Z-axis (SP3). Namely, the display signal generation unit 317 may generate a display signal for displaying the process position / pose setting screen 3530 in which at least one of the object model OM and the end effector model EM moves along one of the X-axis (SP3), the Y-axis (SP3), and the Z-axis (SP3). Furthermore, the display apparatus 35 may display the process position / pose setting screen 3530 in which at least one of the object model OM and the end effector model EM moves along one of the X-axis (SP3), the Y-axis (SP3), and the Z-axis (SP3) based on the display signal.

In a case where the user performs the single-axis movement after performing the multi-axis movement, a movement distance (translational movement distance) of at least one of the object model OM and the end effector model EM due to the single-axis movement may be smaller than the movement distance (translational movement distance) of at least one of the object model OM and the end effector model EM due to the multi-axis movement. Namely, the user may perform the single-axis movement after performing the multi-axis movement so that the movement distance (the translational movement distance) of at least one of the object model OM and the end effector model EM due to the single-axis movement is smaller than the movement distance (the translational movement distance) of at least one of the object model OM and the end effector model EM due to the multi-axis movement. In this case, the user can roughly change the positional relationship between the object model OM and the end effector model EM by performing the multi-axis movement, and then change the positional relationship between the object model OM and the end effector model EM with high accuracy by performing the single-axis movement. Namely, the user can roughly align the object model OM and the end effector model EM by performing the multi-axis movement, and then align the object model OM and the end effector model EM with high accuracy by performing the single-axis movement. Therefore, the process position / pose setting unit 313 can set the process position / pose information PAI that is usable to calculate at least one of the process target position PTP and the process target pose PTA with high accuracy while quickly setting the process position / pose information PAI.

Note that the user may input an instruction for specifying a position of at least one of the object model OM and the end effector model EM in addition to or instead of performing the single-axis movement after performing the multi-axis movement,. For example, the user may input the instruction for specifying the position at which at least one of the object model OM and the end effector model EM should be positioned assuming that the single-axis movement is performed after performing multi-axis movement.

The user may rotate (rotationally move) at least one of the object model OM and the end effector model EM around a rotational axis that is along at least one of the three axes defining the position / pose setting coordinate system. Namely, the user may rotate at least one of the object model OM and the end effector model EM around a rotational axis along at least one of the X-axis (SP3), the Y-axis (SP3), and the Z-axis (SP3).

As one example, the user may rotate at least one of the object model OM and the end effector model EM around two rotational axes that are along two of the X-axis (SP3), the Y-axis (SP3), and the Z-axis (SP3), respectively. Note that rotating at least one of the object model OM and the end effector model EM around the two rotational axes that are along two of the X-axis (SP3), the Y-axis (SP3) and the Z-axis (SP3), respectively, may be considered to be equivalent to rotating at least one of the object model OM and the end effector model EM around a rotational axis that is along an inclination direction inclined with respect to all of the X-axis (SP3), the Y-axis (SP3), and the Z-axis (SP3).

As another example, the user may rotate at least one of the object model OM and the end effector model EM around three rotational axes that are along all of the X-axis (SP3), the Y-axis (SP3), and the Z-axis (SP3), respectively. Note that rotating at least one of the object model OM and the end effector model EM around the three rotational axes that are along two of the X-axis (SP3), the Y-axis (SP3) and the Z-axis (SP3), respectively, may be considered to be equivalent to rotating at least one of the object model OM and the end effector model EM around a rotational axis that is along an inclination direction inclined with respect to the two of the X-axis (SP3), the Y-axis (SP3), and the Z-axis (SP3).

As another example, the user may rotate at least one of the object model OM and the end effector model EM around two rotational axes that are along one of the X-axis (SP3), the Y-axis (SP3) and the Z-axis (SP3).

In a case where the user performs a multi-axis movement for rotating at least one of the object model OM and the end effector model EM around at least two rotational axes that are along at least two of the X-axis (SP3), the Y-axis (SP3), and the Z-axis (SP3), respectively, the user can reduce a time required to align (adjust poses of) the object model OM and the end effector model EM, compared to a case where the user performs a rotational movement, a single-axis movement for rotating at least one of the object model OM and the end effector model EM around the rotational axis that is along one of the X-axis (SP3), the Y-axis (SP3), and the Z-axis (SP3). This is because, the user needs to perform the single-axis movement for rotating at least one of the object model OM and the end effector model EM around the rotational axis along one of the X-axis (SP3), the Y-axis (SP3), and the Z-axis (SP3), and then perform the single -axis movement for rotating at least one of the object model OM and the end effector model EM around the rotational axis along other one of the X-axis (SP3), the Y-axis (SP3), and the Z-axis (SP3), in order to perform the single-axis movement to rotate at least one of the object model OM and the end effector model EM in the same manner as the multi-axis movement. In other words, the user needs to perform the single-axis movement a plurality of times. On the other hand, in order to perform the multi-axis movement to rotate at least one of the object model OM and the end effector model EM in the same manner as the plurality of single-axis movements, it is sufficient for the user to perform the multi-axis movement at least once. Therefore, the process position / pose setting unit 313 can set the process position / pose information PAI more quickly in a case where the user performs the multi-axis movement in addition to or instead of the single-axis movement, compared to a case where the user performs the single-axis movement without performing the multi-axis movement.

The user may perform the single-axis movement after performing the multi-axis movement. Specifically, the user may first perform the multi-axis movement to roughly change the postural relationship between the object model OM and the end effector model EM. Namely, the user may input, to the control apparatus 3, an instruction for performing the multi-axis movement so as to roughly change the postural relationship between the object model OM and the end effector model EM. As a result, the process position / pose setting unit 313 may display the process position / pose setting screen 3530 in which at least one of the object model OM and the end effector model EM rotates around at least two rotational axes that are along at least two of the X-axis (SP3), Y-axis (SP3), and Z-axis (SP3), respectively. Namely, the display signal generation unit 317 may generate a display signal for displaying the process position / pose setting screen 3530 in which at least one of the object model OM and the end effector model EM rotates around at least two rotational axes that are along at least two of the X-axis (SP3), Y-axis (SP3), and Z-axis (SP3), respectively. Furthermore, the display apparatus 35 may display the process position / pose setting screen 3530 in which at least one of the object model OM and the end effector model EM rotates around at least two rotational axes that are along at least two of the X-axis (SP3), Y-axis (SP3), and Z-axis (SP3), respectively, based on the display signal. Then, the user may change the postural relationship between the object model OM and the end effector model EM with high accuracy by performing the single-axis movement. Namely, the user may input, to the control apparatus 3, an instruction for performing the single-axis movement so as to change the postural relationship between the object model OM and the end effector model EM with high accuracy. As a result, the process position / pose setting unit 313 may display the process position / pose setting screen 3530 in which at least one of the object model OM and the end effector model EM rotates around the rotational axes that is along one of the X-axis (SP3), Y-axis (SP3), and Z-axis (SP3). Namely, the display signal generation unit 317 may generate a display signal for displaying the process position / pose setting screen 3530 in which at least one of the object model OM and the end effector model EM rotates around the rotational axes that is along one of the X-axis (SP3), Y-axis (SP3), and Z-axis (SP3). Furthermore, the display apparatus 35 may display the process position / pose setting screen 3530 in which at least one of the object model OM and the end effector model EM rotates around the rotational axes that is along one of the X-axis (SP3), Y-axis (SP3), and Z-axis (SP3) based on the display signal.

In a case where the user performs the single-axis movement after performing the multi-axis movement, a movement distance (rotational movement distance) of at least one of the object model OM and the end effector model EM due to the single-axis movement may be smaller than the movement distance (rotational movement distance) of at least one of the object model OM and the end effector model EM due to the multi-axis movement. Namely, the user may perform the single-axis movement after performing the multi-axis movement so that the movement distance (the rotational movement distance) of at least one of the object model OM and the end effector model EM due to the single-axis movement is smaller than the movement distance (the rotational movement distance) of at least one of the object model OM and the end effector model EM due to the multi-axis movement. In this case, the user can roughly change the postural relationship between the object model OM and the end effector model EM by performing the multi-axis movement, and then change the postural relationship between the object model OM and the end effector model EM with high accuracy by performing the single-axis movement. Namely, the user can roughly align (change the poses of) the object model OM and the end effector model EM by performing the multi-axis movement, and then align (change the poses of) the object model OM and the end effector model EM with high accuracy by performing the single-axis movement. Therefore, the process position / pose setting unit 313 can set the process position / pose information PAI that is usable to calculate at least one of the process target position PTP and the process target pose PTA with high accuracy while quickly setting the process position / pose information PAI.

Note that the user may input an instruction for specifying a pose of at least one of the object model OM and the end effector model EM in addition to or instead of performing the single-axis movement after performing the multi-axis movement,. For example, the user may input the instruction for specifying the pose which should be taken by at least one of the object model OM and the end effector model EM assuming that the single-axis movement is performed after performing multi-axis movement.

### (4-2) Modified Example of Process Position / Pose Setting Processing

Next, a modified example of the process position / pose setting processing will be described. Note that one modified example described below may be combined with another modified example that is different from the one modified example.

### (4-2-1) First Modified Example of Process Position / Pose Setting Processing

One end effector 4 may perform the predetermined process on one object OBJ in a situation where a relative positional relationship between the one end effector 4 and the one object OBJ is a first positional relationship and the one end effector 4 may perform the predetermined process on the one object OBJ in a situation where the relative positional relationship between the one end effector 4 and the one object OBJ is a second positional relationship that is different from the first positional relationship. Namely, one end effector 4 may perform the predetermined process on one object OBJ from different positions. In this case, the process position / pose setting unit 313 may set a plurality of process position / pose information PAI that are usable to calculate a plurality of different process target positions PTP for each combination of the object OBJ and the end effector 4.

Similarly, one end effector 4 may perform the predetermined process on one object OBJ in a situation where a relative postural relationship between the one end effector 4 and the one object OBJ is a first postural relationship and the one end effector 4 may perform the predetermined process on the one object OBJ in a situation where the relative postural relationship between the one end effector 4 and the one object OBJ is a second postural relationship that is different from the first postural relationship. Namely, one end effector 4 may perform the predetermined process on one object OBJ with different poses. In this case, the process position / pose setting unit 313 may set a plurality of process position / pose information PAI that are usable to calculate a plurality of different process target poses PTA for each combination of the object OBJ and the end effector 4.

Note that the process position / pose information PAI indicates at least one of the position of the end effector model EM relative to the object model OM and the pose of the end effector model EM relative to the object model OM as described above. In the modified example, the position of the end effector model EM relative to the object model OM indicated by the process position / pose information PAI is referred to as a set position STP, and the pose of the end effector model EM relative to the object model OM indicated by the process position / pose information PAI is referred to as a set pose STA.

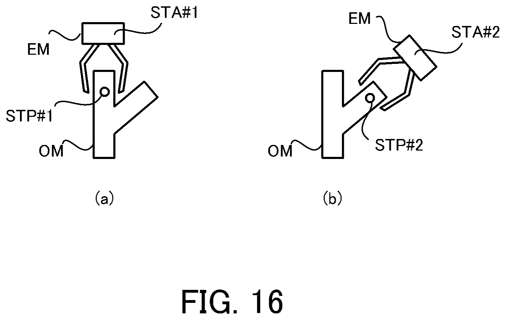

For example, as illustrated in FIG. 16(a), the user may move at least one of the object model OM and the end effector model EM so that the positional relationship between the object model OM and the end effector model EM is the same as an ideal first positional relationship between the object OBJ and the end effector 4 that should be realized when the end effector 4 performs the predetermined process on the object OBJ. Then, the process position / pose setting unit 313 may set, as first process position / pose information PAI that is usable to calculate a first process target position PTP, the process position / pose information PAI that includes information related to a first set position STP#1 indicated by the positional relationship between the object model OM and the end effector model EM (namely, the first positional relationship).

Similarly, as illustrated in FIG. 16(a), the user may move at least one of the object model OM and the end effector model EM so that the postural relationship between the object model OM and the end effector model EM is the same as an ideal first postural relationship between the object OBJ and the end effector 4 that should be realized when the end effector 4 performs the predetermined process on the object OBJ. Then, the process position / pose setting unit 313 may set, as first process position / pose information PAI that is usable to calculate a first process target pose PTA, the process position / pose information PAI that includes information related to a first set pose STA#1 indicated by the postural relationship between the object model OM and the end effector model EM (namely, the first postural relationship).

Then, as illustrated in FIG. 16(b), the user may move at least one of the object model OM and the end effector model EM so that the positional relationship between the object model OM and the end effector model EM is the same as an ideal second positional relationship between the object OBJ and the end effector 4 that should be realized when the end effector 4 performs the predetermined process on the object OBJ. Then, the process position / pose setting unit 313 may set, as second process position / pose information PAI that is usable to calculate a second process target position PTP, the process position / pose information PAI that includes information related to a second set position STP#2 indicated by the positional relationship between the object model OM and the end effector model EM (namely, the second positional relationship).

Similarly, as illustrated in FIG. 16(b), the user may move at least one of the object model OM and the end effector model EM so that the postural relationship between the object model OM and the end effector model EM is the same as an ideal second postural relationship between the object OBJ and the end effector 4 that should be realized when the end effector 4 performs the predetermined process on the object OBJ. Then, the process position / pose setting unit 313 may set, as second process position / pose information PAI that is usable to calculate a second process target pose PTA, the process position / pose information PAI that includes information related to a second set pose STA#2 indicated by the postural relationship between the object model OM and the end effector model EM (namely, the second postural relationship).

In a case where the interference between the end effector 4 (alternatively, the robot arm 12) and the object OBJ occurs (as a result, the end effector 4 cannot perform the predetermined process on the object OBJ) in a situation where the relative positional relationship between the end effector 4 and the object OBJ is the first positional relationship, the process position / pose setting unit 313 may set another process position / pose information PAI in order to determine whether or not the end effector 4 can perform the predetermined process on the object OBJ in a situation where the relative positional relationship between the end effector 4 and the object OBJ is the second positional relationship. Similarly, in a case where the interference between the end effector 4 (alternatively, the robot arm 12) and the object OBJ occurs (as a result, the end effector 4 cannot perform the predetermined process on the object OBJ) in a situation where the relative postural relationship between the end effector 4 and the object OBJ is the first postural relationship, the process position / pose setting unit 313 may set another process position / pose information PAI in order to determine whether or not the end effector 4 can perform the predetermined process on the object OBJ in a situation where the relative postural relationship between the end effector 4 and the object OBJ is the second postural relationship. For example, in a case where the interference between the end effector 4 (alternatively, the robot arm 12) and the object OBJ occurs (as a result, the end effector 4 cannot perform the predetermined process on the object OBJ) by using the first process position / pose information PAI, the process position / pose setting unit 313 may set the second process position / pose information PAI in order to determine whether or not the end effector 4 can perform the predetermined process on the object OBJ by using the second process position / pose information PAI.

As a result, the process position / pose setting unit 313 can set the plurality of process position / pose information PAI relatively easily and quickly. This effect becomes more useful as the number of process position / pose information PAI set for a combination of the same object OBJ and the same end effector 4 increases.

### (4-2-2) Second Modified Example of Process Position / Pose Setting Processing

The end effector 4 attached to the robot arm 12 may be replaced. For example, the robot 1 may perform a first process on the object OBJ by using a first end effector 4#1 attached to the robot arm 12, and perform a second process on the object OBJ by using a second end effector 4#2 attached to the robot arm 12.

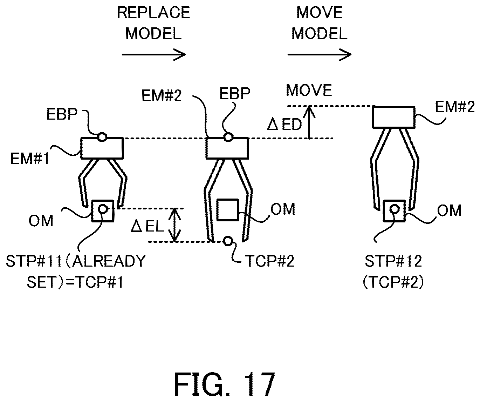

In this case, in order to set first process position / pose information PAI that is usable to calculate a first process target position PTP#11 at which the first end effector 4#1 performs the predetermined process (the first process) on the object OBJ, the user may move at least one of a first end effector model EM#1, which is a three-dimensional model of the first end effector 4#1, and the object model OM, which is a three-dimensional model of the object OBJ, on the process position / pose setting screen 3530. For example, as illustrated in FIG. 17, the user may move the first end effector model EM#1 to a first set position STP#11. Then, the process position / pose setting unit 313 may set the first process position / pose information PAI, which is usable to calculate the first process target position PTP#11 at which the first end effector 4#1 performs the predetermined process on the object OBJ, based on the first set position STP#11 indicated by the positional relationship between the first end effector model EM#1 and the object model OM.

On the other hand, in order to set second process position / pose information PAI that is usable to calculate a second process target position PTP#12 at which the second end effector 4#2 performs the predetermined process (the second process) on the object OBJ, the user may not move at least one of a second end effector model EM#2, which is a three-dimensional model of the second end effector 4#2, and the object model OM on the process position / pose setting screen 3530. Namely, the user may not input an instruction for moving at least one of the second end effector model EM#2 and the object model OM to the control apparatus 3. In this case, the process position / pose setting unit 313 may set the second process position / pose information PAI, which is usable to calculate the second process target position PTP#12 at which the second end effector 4#2 performs the predetermined process on the object OBJ, based on the first set position STP#11 that has been already set and end effector shape difference information related to a difference between a shape of the first end effector model EM#1 and a shape of the second end effector model EM#2.

For example, a left part of FIG. 17 illustrates the first set position STP#11, which has been set based on the instruction from the user, together with the positional relationship between the first end effector model EM#1 and the object model OM. Note that the positional relationship between the first end effector model EM#1 and the object model OM is determined by the first set position STP#11. In this case, in order to set the second process position / pose information PAI that is usable to calculate the second process target position PTP#12, the process position / pose setting unit 313 may replace the first end effector model EM#1, which has been aligned with respect to the object model OM based on the first set position STP#11 that has been already set, with the second end effector model EM#2 in the three-dimensional space SP3 as illustrated in a center part of FIG. 17. For example, the process position / pose setting unit 313 may replace the first end effector model EM#1 with the second end effector model EM#2 so that a corresponding predetermined part EBP of the second end effector model EM#2 is positioned at a position that is the same as the predetermined part EBP (as one example, a part connected to the robot arm 12) of the first end effector model EM#1.

Then, the process position / pose setting unit 313 may move the second end effector model EM#2 in the three-dimensional space SP3 based on the end effector shape difference information. Namely, the process position / pose setting unit 313 may change the positional relationship between the object model OM and the second end effector model EM#2 in the three-dimensional space SP3 based on the end effector shape difference information. In this case, the user may not input an instruction for changing the positional relationship between the object model OM and the second end effector model EM#2 to the control apparatus 3. Specifically, as illustrated on a right part of FIG. 17, the process position / pose setting unit 313 may move the second end effector model EM#2 by a movement distance ΔED that is determined based on the end effector shape difference information. However, although it is not illustrated, the process position / pose setting unit 313 may move the object model OM by a movement distance that is determined based on the end effector shape difference information, in addition to or instead of moving the second end effector model EM#2. This is because, the positional relationship between the object model OM and the second end effector model EM#2 is changed in a case where the object model OM is moved in the same manner as in a case where the second end effector model EM#2 is moved. Note that an example in which the second end effector model EM#2 is move will be described in the below-described description for convenience of description.

Note that the process position / pose setting unit 313 may perform an internal calculation to change the positional relationship between the object model OM and the second end effector model EM#2 in the three-dimensional space SP3 based on the end effector shape difference information but may not update the positional relationship between the object model OM and the second end effector model EM#2 in the process position / pose setting screen 3530 in a case where the positional relationship between the object model OM and the second end effector model EM#2 is changed based on the end effector shape difference information. Namely, the process position / pose setting unit 313 may not move at least one of the object model OM and the second end effector model EM#2 on the process position / pose setting screen 3530.

The end effector shape difference information may be input by the user using the input apparatus 34. Alternatively, the end effector shape difference information may be generated by the process position / pose setting unit 313 based on information input by the user using the input apparatus 34 to generate the end effector shape difference information. Alternatively, the end effector shape difference information may be generated by the process position / pose setting unit 313 based on the first end effector model EM#1 and the second end effector model EM#2.

The end effector shape difference information may include information related to a difference ΔEL between a total length of the first end effector model EM#1 and a total length of the second end effector model EM#2, as illustrated in FIG. 17. In this case, the process position / pose setting unit 313 may calculate the movement distance ΔED of the second end effector model EM#2 described above based on the difference ΔEL between the total length of the first end effector model EM#1 and the total length of the second end effector model EM#2. As one example, the process position / pose setting unit 313 may set the difference ΔEL between the total length of the first end effector model EM#1 and the total length of the second end effector model EM#2 itself to be the movement distance ΔED of the second end effector model EM#2 described above.

In this case, the user may input information related to the difference ΔEL between the total length of the first end effector model EM#1 and the total length of the second end effector model EM#2 to the control apparatus 3 by using the input apparatus 34. Alternatively, the user may input information related to the total length of the first end effector model EM#1 and the total length of the second end effector model EM#2 to the control apparatus 3 by using the input apparatus 34. In this case, the process position / pose setting unit 313 may calculate the difference ΔEL between the total length of the first end effector model EM#1 and the total length of the second end effector model EM#2 based on the information related to the total length of the first end effector model EM#1 and the total length of the second end effector model EM#2 input by the user. Alternatively, the process position / pose setting unit 313 may calculate the difference ΔEL between the total length of the first end effector model EM#1 and the total length of the second end effector model EM#2 based on the first end effector model EM#1 and the second end effector model EM#2.

The end effector shape difference information may include information related to a difference between a width of the first end effector model EM#1 and a width of the second end effector model EM#2. In this case, the process position / pose setting unit 313 may calculate the movement distance ΔED of the second end effector model EM#2 described above based on the difference between the width of the first end effector model EM#1 and the width of the second end effector model EM#2. As one example, the process position / pose setting unit 313 may set the difference between the width of the first end effector model EM#1 and the width of the second end effector model EM#2 itself to be the movement distance ΔED of the second end effector model EM#2 described above.

In this case, the user may input information related to the difference between the width of the first end effector model EM#1 and the width of the second end effector model EM#2 to the control apparatus 3 by using the input apparatus 34. Alternatively, the user may input information related to the width of the first end effector model EM#1 and the width of the second end effector model EM#2 to the control apparatus 3 by using the input apparatus 34. In this case, the process position / pose setting unit 313 may calculate the difference between the width of the first end effector model EM#1 and the width of the second end effector model EM#2 based on the information related to the width of the first end effector model EM#1 and the width of the second end effector model EM#2. Alternatively, the process position / pose setting unit 313 may calculate the difference between the width of the first end effector model EM#1 and the width of the second end effector model EM#2 based on the first end effector model EM#1 and the second end effector model EM#2.

When the shape of the end effector 4 changes, there is a possibility that the position of the tool center point TCP, which is defined with respect to the end effector 4, changes. Namely, there is a possibility that the position of the tool center point TCP is determined depending on the shape of the end effector 4. Therefore, the end effector shape difference information may include information related to a difference between the position of the tool center point TCP of the first end effector model EM#1 and the position of the tool center point TCP of the second end effector model EM#2. In this case, the process position / pose setting unit 313 may calculate the movement distance ΔED of the second end effector model EM#2 described above based on the difference between the position of the tool center point TCP of the first end effector model EM#1 and the position of the tool center point TCP of the second end effector model EM#2. As one example, the process position / pose setting unit 313 may set the difference between the position of the tool center point TCP of the first end effector model EM#1 and the position of the tool center point TCP of the second end effector model EM#2 itself to be the movement distance ΔED of the second end effector model EM#2 described above.

In this case, the user may input information related to the difference between the position of the tool center point TCP of the first end effector model EM#1 and the position of the tool center point TCP of the second end effector model EM#2 to the control apparatus 3 by using the input apparatus 34. Alternatively, the user may input information related to the position of the tool center point TCP of the first end effector model EM#1 and the position of the tool center point TCP of the second end effector model EM#2 to the control apparatus 3 by using the input apparatus 34. In this case, the process position / pose setting unit 313 may calculates the difference between the position of the tool center point TCP of the first end effector model EM#1 and the position of the tool center point TCP of the second end effector model EM#2 based on the information related to the position of the tool center point TCP of the first end effector model EM#1 and the position of the tool center point TCP of the second end effector model EM#2. Alternatively, the process position / pose setting unit 313 may calculate the difference between the position of the tool center point TCP of the first end effector model EM#1 and the position of the tool center point TCP of the second end effector model EM#2 based on the first end effector model EM#1 and the second end effector model EM#2.

Note that the end effector shape difference information indicating the difference between the shape of the first end effector model EM#1 and the shape of the second end effector model EM#2 may be regarded as information related to a difference between a shape of the first end effector 4#1 and a shape of the second end effector 4#2. This is because the first end effector model EM#1 is the three-dimensional model indicating the three-dimensional shape of the first end effector 4#1, and the second end effector model EM#2 is the three-dimensional model indicating the three-dimensional shape of the second end effector 4#2.

After moving the second end effector model EM#2 based on the end effector shape difference information, the process position / pose setting unit 313 may set the second process position / pose information PAI, which is usable to calculate the second process target position PTP#12, based on the positional relationship between the object model OM and the second end effector model EM#2 in the three-dimensional space SP3. For example, the process position / pose setting unit 313 may set, as the second process position / pose information PAI that is usable to calculate the second process target position PTP#12, the process position / pose information PAI including information that indicates, as the second set position STP#12, the position of the tool center point TCP indicated by the positional relationship between the object model OM and the second end effector model EM#2, which has been changed based on the end effector shape difference information. Namely, the process position / pose setting unit 313 may set, as the second process position / pose information PAI that is usable to calculate the second process target position PTP#12, the process position / pose information PAI including information related to the second set position STP#12 (see FIG. 17) indicated by the positional relationship between the object model OM and the second end effector model EM#2, which has been changed based on the end effector shape difference information.

In this way, in the second modified example, the user may input, to the control apparatus 3, the instruction for changing the positional relationship between the end effector model EM, which corresponds to one of the plurality of end effectors 4 attached to the robot arm 12, and the object model OM but may not input, to the control apparatus 3, the instruction for changing the positional relationship between the end effector model EM, which corresponds to the remaining one of the plurality of end effectors 4 attached to the robot arm 12, and the object model OM in a case where the end effector 4 attached to the robot arm 12 is replaced. Therefore, the user's work is reduced in a case where the plurality of process position / pose information PAI, which correspond to the plurality of end effectors 4, respectively, are set. Furthermore, since the user may not input, to the control apparatus 3, the instruction for changing the positional relationship between the end effector model EM, which corresponds to the remaining one of the plurality of end effectors 4, and the object model OM, a time required to set the plurality of process position / pose information PAI, which correspond to the plurality of end effectors 4, respectively, is also reduced. This effect is more useful in a case where the plurality of different process position / pose information PAI are set for a combination of the same object OBJ and the same end effector 4, as described in the first modified example. Namely, this effect becomes more useful as the number of process position / pose information PAI that should be set by the process position / pose setting unit 313 increases.

### (4-2-3) Third Modified Example of Process Position / Pose Setting Processing

The end effector 4 may perform the predetermined process on the plurality of different objects OBJ. As one example, the robot 1 may perform a predetermined first process on a first object OBJ#1 by using the end effector 4, and perform a predetermined second process on a second object OBJ#1 by using the end effector 4.

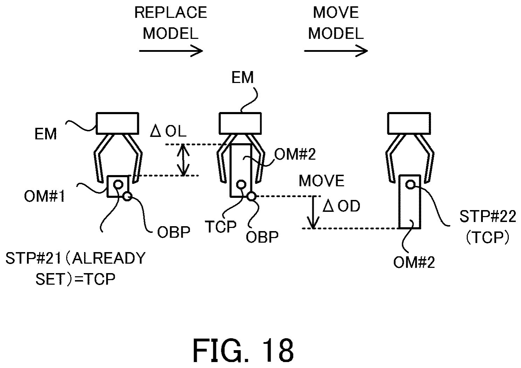

In this case, in order to set a plurality of process position / pose information PAI each of which is usable to calculate a first process target position PTP#21 at which the end effector 4 performs the predetermined process on the first object OBJ#1, the user may move at least one of the end effector model EM, which is the three-dimensional model of the end effector 4, and a first object model OM#1, which is a three-dimensional model of the first object OBJ#1, on the process position / pose setting screen 3530. For example, as illustrated in FIG. 18, the user may move the end effector model EM to a first set position STP#21. Then, the process position / pose setting unit 313 may set the plurality of process position / pose information PAI, each of which is usable to calculate the first process target position PTP#21 at which the end effector 4 performs the predetermined process on the first object OBJ#1, based on the positional relationship between the end effector model EM and the first object model OM#1.

On the other hand, in order to set second process position / pose information PAI that is usable to calculate a second process target position PTP#22 at which the end effector 4 performs the predetermined process on the second object OBJ#2, the user may not move at least one of the end effector model EM and the second object model OM#2, which is a three-dimensional model of the second object OBJ#2, on the process position / pose setting screen 3530. Namely, the user may not input an instruction for moving at least one of the end effector model EM and the second object model OM#2 to the control apparatus 3. In this case, the process position / pose setting unit 313 may set the second process position / pose information PAI, which is usable to calculate the second process target position PTP#22 at which the end effector 4 performs the predetermined process on the second object OBJ#2, based on the first set position STP#21 and object shape difference information related to a difference between a shape of the first object model OM#1 and a shape of the second object model OM#2.

For example, a left part of FIG. 18 illustrates the first set position STP#21, which has been set based on the instruction from the user, together with the positional relationship between the end effector model EM and the first object model OM#1. Note that the positional relationship between the end effector model EM and the first object model OM#1 is determined by the first set position STP#21. In this case, in order to set the second process position / pose information PAI that is usable to calculate the second process target position PTP#22, the process position / pose setting unit 313 may replace the first object model OM#1, which has been aligned with respect to the end effector model EM based on the first set position STP#21 that has been already set, with the second object model OM#2 in the three-dimensional space SP3 as illustrated in a center part of FIG. 18. For example, the process position / pose setting unit 313 may replace the first object model OM#1 with the second object model OM#2 so that a corresponding predetermined part OBP of the second object model OM#2 is positioned at a position that is the same as the predetermined part OBP of the first object model OM#1.

Then, the process position / pose setting unit 313 may move the second object model OM#2 in the three-dimensional space SP3 based on the object shape difference information. Namely, the process position / pose setting unit 313 may change the positional relationship between the end effector model EM and the second object model OM#2 in the three-dimensional space SP3 based on the object shape difference information. In this case, the user may not input an instruction for changing the positional relationship between the end effector model EM and the second object model OM#2 to the control apparatus 3. Specifically, as illustrated on a right part of FIG. 18, the process position / pose setting unit 313 may move the second object model OM#2 by a movement distance ΔOD that is determined based on the object shape difference information. However, although it is not illustrated, the process position / pose setting unit 313 may move the end effector model EM by a movement distance that is determined based on the object shape difference information, in addition to or instead of moving the second object model OM#2. This is because the positional relationship between the end effector model EM and the second object model OM#2 is changed in a case where the end effector model EM is moved in the same manner as in a case where the second object model OM#2 is moved. Note that an example in which the second object model OM#2 is move will be described in the below-described description for convenience of description.

Note that the process position / pose setting unit 313 may perform an internal calculation to change the positional relationship between the second object model OM#2 and the end effector model EM in the three-dimensional space SP3 based on the object shape difference information but may not update the positional relationship between the second object model OM#2 and the end effector model EM in the process position / pose setting screen 3530 in a case where the positional relationship between the second object model OM#2 and the end effector model EM is changed based on the object shape difference information. Namely, the process position / pose setting unit 313 may not move at least one of the second object model OM#2 and the end effector model EM on the process position / pose setting screen 3530.

The object shape difference information may be input by the user by using the input apparatus 34. Alternatively, the object shape difference information may be generated by the process position / pose setting unit 313 based on information input by the user using the input apparatus 34 to generate the object shape difference information. Alternatively, the object shape difference information may be generated by the process position / pose setting unit 313 based on the first object model OM#1 and the second object model OM#2.

The object shape difference information may include information related to a difference ΔOL between a total length of the first object model OM#1 and a total length of the second object model OM#2, as illustrated in FIG. 17. In this case, the process position / pose setting unit 313 may calculate the movement distance ΔED of the second object model OM#2 described above based on the difference ΔOL between the total length of the first object model OM#1 and the total length of the second object model OM#2. As one example, the process position / pose setting unit 313 may set the difference ΔOL between the total length of the first object model OM#1 and the total length of the second object model OM#2 itself to be the movement distance ΔOD of the second object model OM#2 described above.

In this case, the user may input information related to the difference ΔOL between the total length of the first object model OM#1 and the total length of the second object model OM#2 to the control apparatus 3 by using the input apparatus 34. Alternatively, the user may input information related to the total length of the first object model OM#1 and the total length of the second object model OM#2 to the control apparatus 3 by using the input apparatus 34. In this case, the process position / pose setting unit 313 may calculate the difference ΔOL between the total length of the first object model OM#1 and the total length of the second object model OM#2 based on the information related to the total length of the first object model OM#1 and the total length of the second object model OM#2 input by the user. Alternatively, the process position / pose setting unit 313 may calculate the difference ΔOL between the total length of the first object model OM#1 and the total length of the second object model OM#2 based on the first object model OM#1 and the second object model OM#2.

The object shape difference information may include information related to a difference between a width of the first object model OM#1 and a width of the second object model OM#2. In this case, the process position / pose setting unit 313 may calculate the movement distance ΔOD of the second object model OM#2 described above based on the difference between the width of the first object model OM#1 and the width of the second object model OM#2. As one example, the process position / pose setting unit 313 may set the difference between the width of the first object model OM#1 and the width of the second object model OM#2 itself to be the movement distance ΔOD of the second object model OM#2 described above.

In this case, the user may input information related to the difference between the width of the first object model OM#1 and the width of the second object model OM#2 to the control apparatus 3 by using the input apparatus 34. Alternatively, the user may input information related to the width of the first object model OM#1 and the width of the second object model OM#2 to the control apparatus 3 by using the input apparatus 34. In this case, the process position / pose setting unit 313 may calculate the difference between the width of the first object model OM#1 and the width of the second object model OM#2 based on the information related to the width of the first object model OM#1 and the width of the second object model OM#2. Alternatively, the process position / pose setting unit 313 may calculate the difference between the width of the first object model OM#1 and the width of the second object model OM#2 based on the first object model OM#1 and the second object model OM#2.

When the shape of the object OBJ changes, there is a possibility that a reference position of the object OBJ change. Namely, there is a possibility that the reference position of the object OBJ is determined depending on the shape of the object OBJ. Note that the reference position of the object OBJ may include a position of a datum of the object OBJ. The datum of the object OBJ may include at least one of a datum point and a datum surface of the object OBJ. The reference position of the object OBJ may include a reference position at which the end effector 4 performs the predetermined process. Therefore, the object shape difference information may include information related to a difference between the reference position of the first object model OM#1 and the reference position of the second object model OM#2. In this case, the process position / pose setting unit 313 may calculate the movement distance ΔED of the second object model OM#2 described above based on the difference between the reference position of the first object model OM#1 and the reference position of the second object model OM#2. As one example, the process position / pose setting unit 313 may set the difference between the reference position of the first object model OM#1 and the reference position of the second object model OM#2 itself to be the movement distance ΔED of the second object model OM#2 described above.

In this case, the user may input information related to the difference between the reference position of the first object model OM#1 and the reference position of the second object model OM#2 to the control apparatus 3 by using the input apparatus 34. Alternatively, the user may input information related to the reference position of the first object model OM#1 and the reference position of the second object model OM#2 to the control apparatus 3 by using the input apparatus 34. In this case, the process position / pose setting unit 313 may calculate the difference between the reference position of the first object model OM#1 and the reference position of the second object model OM#2 based on the information related to the reference position of the first object model OM#1 and the reference position of the second object model OM#2. Alternatively, the process position / pose setting unit 313 may calculate the difference between the reference position of the first object model OM#1 and the reference position of the second object model OM#2 based on the first object model OM#1 and the second object model OM#2.

Note that the object shape difference information indicating the difference between the shape of the first object model OM#1 and the shape of the second object model OM#2 may be regarded as information related to a difference between a shape of the first object OBJ#1 and a shape of the second object OBJ#2. This is because the first object model OM#1 is the three-dimensional model indicating the three-dimensional shape of the first object OBJ#1, and the second object model OM#2 is the three-dimensional model indicating the three-dimensional shape of the second object OBJ#2.

After moving the second object OBJ#2 based on the object shape difference information, the process position / pose setting unit 313 may set the second process position / pose information PAI, which is usable to calculate the second process target position PTP#22, based on the positional relationship between the second object model OM#2 and the end effector model EM in the three-dimensional space SP3. For example, the process position / pose setting unit 313 may set, the second process position / pose information PAI that is usable to calculate the second process target position PTP#22, the processing position / pose information PAI including information that indicates, as the second set position STP#22, the position of the tool center point TCP indicated by the positional relationship between the second object model OM#2 and the end effector model EM, which has been changed based on the object shape difference information. Namely, the process position / pose setting unit 313 may set, as the second process position / pose information PAI that is usable to calculate the second process target position PTP#22, the process position / pose information PAI including information related to the second set position STP#22 (see FIG. 18) indicated by the positional relationship between the second object model OM#2 and the end effector model EM, which has been changed based on the end effector shape difference information.

In this way, in the third modified example, the user may input, to the control apparatus 3, the instruction for changing the positional relationship between the object model OM, which corresponds to one of the plurality of objects OBJ, and the end effector model EM but may not input, to the control apparatus 3, the instruction for changing the positional relationship between the object model OM, which corresponds to the remaining one of the plurality of objects OBJ, and the end effector model EM in a case where the end effector 4 performs the predetermined process on the plurality of different objects OBJ. Therefore, the user's work is reduced in a case where the plurality of process position / pose information PAI, which correspond to the plurality of objects OBJ, respectively, are set. Furthermore, since the user may not input, to the control apparatus 3, the instruction for changing the positional relationship between the object model OM, which corresponds to the remaining one of the plurality of objects OBJ, and the end effector model EM, a time required to set the plurality of process position / pose information PAI, which correspond to the plurality of objects OBJ, respectively, is also reduced. This effect is more useful in a case where the plurality of different process position / pose information PAI are set for a combination of the same object OBJ and the same end effector 4, as described in the first modified example. Namely, this effect becomes more useful as the number of process position / pose information PAI that should be set by the process position / pose setting unit 313 increases.

### (5) Processing For Generating Movement Path MRr

### (5-1) Base of Processing For Generating Movement Path MRr

Next, with reference to FIG. 19, a path generation processing performed by the path generation unit 315 at the step S25 in FIG. 6 to generate the movement path MRr of the tool center point TCP between the fine approach position PF and the pre-waiting position PW_pre or the post-waiting position PW_post will be described. FIG. 19 is a flowchart that illustrates a flow of the path generation processing. Note that the waiting position PW indicates at least one of the pre-waiting position PW_pre and the post-waiting position PW_post in the below-described description for convenience of description.

Note that the path generation unit 315 may generate any movement path of the tool center point TCP in addition to or instead of the movement path MRr of the tool center point TCP between the fine approach position PF and the pre-waiting position PW_pre or the post-waiting position PW_post by performing the path generation processing described below.

As illustrated in FIG. 19, the path generation unit 315 may display a path generation screen 3550, which is used to generate the movement path MRr, on the display apparatus 35 (a step S251). Specifically, the display signal generation unit 317 may generate a display signal for displaying the path generation screen 3550 on the display apparatus 35 under the control of the path generation unit 315. Then, the display signal output unit 318 may output the display signal generated by the display signal generation unit 317 to the display apparatus 35. As a result, the display apparatus 35 may display the path generation screen 3550 based on the display signal acquired from the display signal output unit 318.

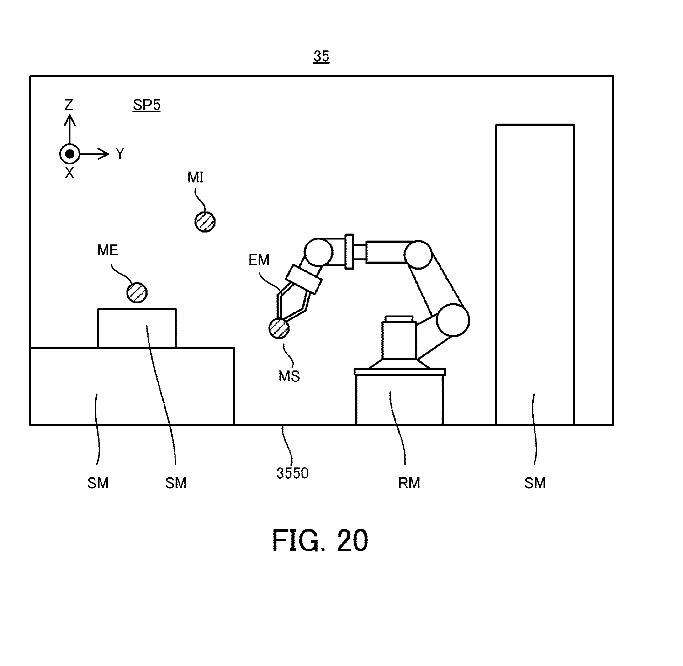

One example of the path generation screen 3550 is illustrated in FIG. 20. As illustrated in FIG. 20, the path generation screen 3550 is a screen on which the end effector model EM, the robot model RM, and the surrounding object model SM are positioned. Especially, a three-dimensional space SP5 that is usable as a virtual space is virtually formed in the path generation screen 3550. The end effector model EM, the robot model RM, and the surrounding object model SM are positioned in this three-dimensional space SP5. However, at least one of the end effector model EM, the robot model RM, and the surrounding object model SM may not be positioned in the path generation screen 3550.

The position in the three-dimensional space SP5 may be indicated by using a path generation coordinate system that is a three-dimensional coordinate system used to indicate the position in the three-dimensional space SP5. The path generation coordinate system may be a three-dimensional coordinate system defined by an X-axis (SP5), a Y-axis (SP5) that is orthogonal to the X-axis (SP5), and a Z-axis (SP5) that is orthogonal to both the X-axis (SP5) and the Y-axis (SP5).

Note that the X-axis (SP5) may be set to be an axis corresponding to the X-axis of the global coordinate system. The X-axis (SP5) may be set to be an axis corresponding to the X-axis of the robot coordinate system. However, the X-axis (SP5) may be an axis set independently of the X-axis of the global coordinate system and the robot coordinate system. Similarly, the Y-axis (SP5) may be set to be an axis corresponding to the Y-axis of the global coordinate system. The Y-axis (SP5) may be set to be an axis corresponding to the Y-axis of the robot coordinate system. However, the Y-axis (SP5) may be an axis set independently of the Y-axis of the global coordinate system and the robot coordinate system. Similarly, the Z-axis (SP5) may be set to be an axis corresponding to the Z-axis of the global coordinate system. The Z-axis (SP5) may be set to be an axis corresponding to the Z-axis of the robot coordinate system. However, the Z-axis (SP5) may be an axis set independently of the Z-axis of the global coordinate system and the robot coordinate system.

Note that a transformation matrix for transforming a three-dimensional coordinate in one of the global coordinate system (alternatively, the robot coordinate system, the same applies in this paragraph) and the path generation coordinate system to a three-dimensional coordinate in the other one of the global coordinate system and the path generation coordinate system may be calculated in advance. Namely, the transformation matrix for transforming the three-dimensional coordinate in one of the global coordinate system and the path generation coordinate system to the three-dimensional coordinate in the other of the global coordinate system and the path generation coordinate system may be known information for the path generation unit 315. The transformation matrix may include a translational transformation matrix for translating the three-dimensional coordinate in one of the global coordinate system and the path generation coordinate system. Namely, the transformation matrix may include the translational transformation matrix that transforms a position of an object in one of the global coordinate system and the path generation coordinate system to a position of the object in the other one of the global coordinate system and the path generation coordinate system. The transformation matrix may include a rotational transformation matrix that rotationally moves the three-dimensional coordinate in one of the global coordinate system and the path generation coordinate system. Namely, the transformation matrix may include the rotational transformation matrix that transforms a pose of an object in one of the global coordinate system and the path generation coordinate system to a pose of the object in the other one of the global coordinate system and the path generation coordinate system. In this case, the path generation unit 315 may transform the three-dimensional coordinate in one of the global coordinate system and the path generation coordinate system to the three-dimensional coordinate in the other one of the global coordinate system and the path generation coordinate system by using the transformation matrix, regardless of a relationship between the X-axis (SP5), Y-axis (SP5), and Z-axis (SP5) in the path generation coordinate system and the X-axis, Y-axis, and Z-axis in the global coordinate system.

The end effector model EM is the three-dimensional model of the end effector 4 attached to the robot arm 12. Note that a detailed description of the end effector model EM is omitted because it has been already described.

The robot model RM is the three-dimensional model of the robot 1. Note that a detailed description of the robot model RM is omitted because it has been already described.

The surrounding object model SM is the three-dimensional model of the surrounding object that is positioned around the robot 1. Note that a detailed description of the surrounding object model SM is omitted because it has been already described.

In the example illustrated in FIG. 20, three surrounding objects are positioned around the robot 1, and three surrounding object models SM, which correspond to the three surrounding objects, respectively, are positioned on the path generation screen 3550. Note that a plurality of surrounding object models SM, which correspond to a plurality of surrounding objects, may be positioned on the path generation screen 3550 in a case where the plurality of surrounding objects are positioned around the robot 1. Alternatively, in a case where the plurality of surrounding objects are positioned around the robot 1, a combined model that is generated by combining at least two of the plurality of surrounding object models SM, which correspond to the plurality of surrounding objects, respectively, may be positioned as the surrounding object model SM on the path generation screen 3550. A single combined model that is generated by combining all of the plurality of surrounding object models SM, which correspond to the plurality of surrounding objects, respectively, may be positioned as the surrounding object model SM on the path generation screen 3550.

Arranged positions of the end effector model EM, the robot model RM, and the surrounding object model SM in the virtual three-dimensional space SP5 formed in the path generation screen 3550 may correspond to actual arranged positions of the end effector 4, the robot 1, and the surrounding object, respectively. Namely, a relative positional relationship among the end effector model EM, the robot model RM, and the surrounding object model SM in the virtual three-dimensional space SP5 may correspond to an actual relative positional relationship among the end effector 4, the robot 1, and the surrounding object. The relative positional relationship among the end effector model EM, the robot model RM, and the surrounding object model SM in the virtual three-dimensional space SP5 may be substantially the same as the actual relative positional relationship among the end effector 4, the robot 1, and the surrounding object. Therefore, the end effector model EM, the robot model RM, and the surrounding object model SM may be positioned in the three-dimensional space SP5 based on information related to the actual arranged positions of the end effector 4, the robot 1, and the surrounding object. In other words, the end effector model EM, the robot model RM, and the surrounding object model SM may be positioned in the three-dimensional space SP5 based on information related to the relative positional relationship among the end effector 4, the robot 1, and the surrounding object.

The end effector model EM, the robot model RM, and the surrounding object model SM may be positioned in the three-dimensional space SP5 based on an instruction from the user that is input to the control apparatus 3 by using the input apparatus 34. Namely, the user may input the instruction for specifying the arrangement positions of the end effector model EM, the robot model RM, and the surrounding object model SM in the three-dimensional space SP5 to the control apparatus 3 by using the input apparatus 34. In this case, the path generation unit 315 may position the end effector model EM, the robot model RM, and the surrounding object model SM at the positions specified by the user in the three-dimensional space SP5 based on the instruction from the user.

The end effector model EM, the robot model RM, and the surrounding object model SM may be positioned in the three-dimensional space SP5 by the path generation unit 315 regardless of whether or not the instruction is input from the user. In this case, the path generation unit 315 may acquire information related to the actual arranged positions of the end effector 4, the robot 1, and the surrounding object. For example, the path generation unit 315 may acquire, as the information related to the arranged positions of the end effector 4, the robot 1, and the surrounding object, image data generated by a camera from the camera that is configured to image the end effector 4, the robot 1, and the surrounding object. At least one of the cameras 21 and 22 may be used or a camera different from the cameras 21 and 22 may be used as the camera that is configured to image the end effector 4, the robot 1, and the surrounding object. Then, the path generation unit 315 may calculate, based on the acquired information, positions at which the end effector model EM, the robot model RM, and the surrounding object model SM should be positioned in the three-dimensional space SP5. Then, the path generation unit 315 may position the end effector model EM, the robot model RM, and the surrounding object model SM at the calculated positions.

In order to display the path generation screen 3550 including the end effector model EM, the robot model RM, and the surrounding object model SM, the end effector model information indicating the end effector model EM displayed on the path generation screen 3550, robot model information indicating the robot model RM displayed on the path generation screen 3550, and surrounding object model information indicating the surrounding object model SM displayed on the path generation screen 3550 may be input to the control apparatus 3. For example, the user may input the end effector model information, the robot model information, and the surrounding object model information to the control apparatus 3 by using the input apparatus 34. For example, the path generation unit 315 may read the end effector model information, the robot model information, and the surrounding object model information from a recording medium on which the end effector model information, the robot model information, and the surrounding object model information are recorded. For example, the process position / pose setting unit 313 may download the end effector model information, the robot model information, and the surrounding object model information from an external server in which the end effector model information, the robot model information, and the surrounding object model information are stored.

The end effector model information may include information related to a type of the end effector model EM. The information related to the type of the end effector model EM may include information related to at least one of an identification number and a model number of the end effector model EM. The end effector model information may include information related to a position of the end effector model EM. The information related to the position of the end effector model EM may include information related to a position of the end effector model EM in a direction along a predetermined translational axis. The end effector model information may include information related to a pose of the end effector model EM. The information related to the pose of the end effector model EM may include information related to a position of the end effector model EM in a rotational direction around a predetermined rotational axis (namely, a pose of the end effector model EM around the predetermined rotational axis). Note that the information related to the pose of the end effector model EM may be considered to be included in the information related to the position of the end effector model EM. The end effector model information may include information related to at least one of a magnification ratio and a reduction ratio of the end effector model EM.

The path generation unit 315 may position the end effector model EM in the virtual three-dimensional space SP5 in the path generation screen 3550 based on the end effector model information. For example, the path generation unit 315 may position the end effector model EM whose type is indicated by the end effector model information in the three-dimensional space SP5. For example, the path generation unit 315 may position the end effector model EM at the position indicated by the end effector model information in the three-dimensional space SP5. For example, the path generation unit 315 may position the end effector model EM with the pose indicated by the end effector model information in the three-dimensional space SP5. For example, the path generation unit 315 may position the end effector model EM whose size is based on the magnification ratio or the reduction ratio indicated by the end effector model information in the three-dimensional space SP5.

The robot model information may include information related to a type of the robot model RM. The information related to the type of the robot model RM may include information related to at least one of an identification number and a model number of the robot model RM. The robot model information may include information related to a position of the robot model RM. The information related to the position of the robot model RM may include information related to a position of the robot model RM in a direction along a predetermined translational axis. The robot model information may include information related to a pose of the robot model RM. The information related to the pose of the robot model RM may include information related to a position of the robot model RM in a rotational direction around a predetermined rotational axis (namely, a pose of the robot model RM around the predetermined rotational axis). Note that the information related to the pose of the robot model RM may be considered to be included in the information related to the position of the robot model RM. The robot model information may include information related to at least one of a magnification ratio and a reduction ratio of the robot model RM.

The path generation unit 315 may position the robot model RM in the virtual three-dimensional space SP5 in the path generation screen 3550 based on the robot model information. For example, the path generation unit 315 may position the robot model RM whose type is indicated by the robot model information in the three-dimensional space SP5. For example, the path generation unit 315 may position the robot model RM at the position indicated by the robot model information in the three-dimensional space SP5. For example, the path generation unit 315 may position the robot model RM with the pose indicated by the robot model information in the three-dimensional space SP5. For example, the path generation unit 315 may position the robot model RM whose size is based on the magnification ratio or the reduction ratio indicated by the robot model information in the three-dimensional space SP5.

The surrounding object model information may include information related to a type of the surrounding object model SM. The information related to the type of the surrounding object model SM may include information related to at least one of an identification number and a model number of the surrounding object model SM. The surrounding object model information may include information related to a position of the surrounding object model SM. The information related to the position of the surrounding object model SM may include information related to a position of the surrounding object model SM in a direction along a predetermined translational axis. The surrounding object model information may include information related to a pose of the surrounding object model SM. The information related to the pose of the surrounding object model SM may include information related to a position of the surrounding object model SM in a rotational direction around a predetermined rotational axis (namely, a pose of the surrounding object model SM around the predetermined rotational axis). Note that the information related to the pose of the surrounding object model SM may be considered to be included in the information related to the position of the surrounding object model SM. The surrounding object model information may include information related to at least one of a magnification ratio and a reduction ratio of the surrounding object model SM.

The path generation unit 315 may position the surrounding object model SM in the virtual three-dimensional space SP5 in the path generation screen 3550 based on the surrounding object model information. For example, the path generation unit 315 may position the surrounding object model SM whose type is indicated by the surrounding object model information in the three-dimensional space SP5. For example, the path generation unit 315 may position the surrounding object model SM at the position indicated by the surrounding object model information in the three-dimensional space SP5. For example, the path generation unit 315 may position the surrounding object model SM with the pose indicated by the surrounding object model information in the three-dimensional space SP5. For example, the path generation unit 315 may position the surrounding object model SM whose size is based on the magnification ratio or the reduction ratio indicated by the surrounding object model information in the three-dimensional space SP5.

A movement start point MS may be further positioned in the virtual three-dimensional space SP5 formed in the path generation screen 3550. The movement start point MS indicates a start point of the movement path MRr. Namely, the movement start point MS indicates a position at which the tool center point TCP starts moving. Alternatively, the movement start point MS may indicate a position at which any movement base point MBP, which is different from the tool center point TCP, starts moving. As one example, the movement start point MS may indicate at least one of the waiting position PW and the fine approach position PF described above. The user may specify an initial position of the movement start point MS by using the input apparatus 34. Namely, the user may input an instruction for specifying the initial position of the movement start point MS to the control apparatus 3 by using the input apparatus 34. In this case, the path generation unit 315 may position the movement start point MS at the position specified by the user in the three-dimensional space SP5 based on the instruction from the user. Alternatively, the path generation unit 315 may specify the initial position of the movement start point MS. For example, the path generation unit 315 may set the initial position of the movement start point MS based on a default value of at least one of the waiting position PW and the fine approach position PF described above. For example, the path generation unit 315 may set the position of the tool center point TCP in a situation where the robot arm 12 is in an initial state to be the initial position of the movement start point MS. The path generation unit 315 may position the movement start point MS at the position specified by the path generation unit 315 in the three-dimensional space SP5.

The user or the path generation unit 315 may set an initial pose of the end effector model EM at the movement start point MS in addition to setting the initial position of movement start point MS. Namely, the user or the path generation unit 315 may set the initial pose of the end effector model EM when the tool center point TCP is positioned at the movement start point MS. Note that setting the initial pose of the end effector model EM at the movement start point MS may be considered to be equivalent to setting the initial pose of the end effector 4 at a start of a movement.

A movement end point ME may be further positioned in the virtual three-dimensional space SP5 formed in the path generation screen 3550. The movement end point ME indicates an end point of the movement path MRr. Namely, the movement end point ME indicates a position at which the tool center point TCP completes moving. Alternatively, the movement end point ME may indicate a position at which any movement base point MBP, which is different from the tool center point TCP, completes moving. As one example, the movement end point ME may indicate at least one of the waiting position PW and the fine approach position PF described above. The user may specify an initial position of the movement end point ME by using the input apparatus 34. Namely, the user may input an instruction for specifying the initial position of the movement end point ME to the control apparatus 3 by using the input apparatus 34. In this case, the path generation unit 315 may position the movement end point ME at the position specified by the user in the three-dimensional space SP5 based on the instruction from the user. Alternatively, the path generation unit 315 may specify the initial position of the movement end point ME. For example, the path generation unit 315 may set the initial position of the movement end point ME based on a default value of at least one of the waiting position PW and the fine approach position PF described above. For example, in a case where the holding process described above is performed, the path generation unit 315 may set a position near the workpiece W held by the holding process to be the initial position of the movement end point ME. For example, in a case where the releasing process described above is performed, the path generation unit 315 may set a position near the placing apparatus T on which the workpiece W is released by the releasing process to be the initial position of the movement end point ME. The path generation unit 315 may position the movement end point ME at the position specified by the path generation unit 315 in the three-dimensional space SP5.

The user or the path generation unit 315 may set an initial pose of the end effector model EM at the movement end point ME in addition to setting the initial position of movement start point MS. Namely, the user or the path generation unit 315 may set the initial pose of the end effector model EM when the tool center point TCP is positioned at the movement end point ME. Note that setting the initial pose of the end effector model EM at the movement end point ME may be considered to be equivalent to setting the initial pose of the end effector 4 at an end of a movement.

A movement waypoint MI may be further positioned in the virtual three-dimensional space SP5 formed in the path generation screen 3550. The movement waypoint MI indicates a position on the movement path MRr between the start point of the movement path MRr and the end point of the movement path MRr. Namely, the movement waypoint MI indicates a position through which the tool center point TCP passes. Alternatively, the movement start point MS may indicate a position through which any movement base point MBP, which is different from the tool center point TCP, passes. As one example, the user may specify an initial position of the movement waypoint MI by using the input apparatus 34. Namely, the user may input an instruction for specifying the initial position of the movement waypoint MI to the control apparatus 3 by using the input apparatus 34. In this case, the path generation unit 315 may position the movement waypoint MI at the position specified by the user in the three-dimensional space SP5 based on the instruction from the user. Alternatively, the path generation unit 315 may specify the initial position of the movement waypoint MI. The path generation unit 315 may position the movement waypoint MI at the position specified by the path generation unit 315 in the three-dimensional space SP5.

The movement waypoint MI may typically be a point at which a movement direction of the tool center point TCP changes. For example, the movement waypoint MI may be a point satisfying a condition that the movement direction of the tool center point TCP moving closer to the movement waypoint MI is different from the movement direction of the tool center point TCP moving away from the movement waypoint MI.

The user or the path generation unit 315 may set an initial pose of the end effector model EM at the movement waypoint MI in addition to setting the initial position of movement start point MS. Namely, the user or the path generation unit 315 may set the initial pose of the end effector model EM when the tool center point TCP is positioned at the movement waypoint MI. Note that setting the initial pose of the end effector model EM at the movement waypoint MI may be considered to be equivalent to setting the initial pose of the end effector 4 during an movement.

A single movement waypoint MI may be positioned in the three-dimensional space SP5. A plurality of movement waypoints MI may be positioned in the three-dimensional space SP5. FIG. 20 illustrates an example in which a single movement waypoint MI is positioned in the three-dimensional space SP5.

Again in FIG. 19, then, the path generation unit 315 generates the movement path MRr (a step S252). Specifically, the path generation unit 315 generates the movement path MRr along which the tool center point TCP moves from the movement start point MS to the movement end point ME through the movement waypoint MI. Especially, the path generation unit 315 may generate the movement path MRr that does not cause the interference of at least one of the end effector model EM, the robot model RM, and the surrounding object model SM based on the relative positional relationship among the end effector model EM, the robot model RM, and the surrounding object model SM in the three-dimensional space SP5. Note that a description of the interference of at least one of the end effector model EM, the robot model RM, and the surrounding object model SM is omitted because it has been already described in describing the method of generating the above-described movement path MRf. For example, the path generation unit 315 may generate the movement path MRf that does not cause the interference of at least one of the end effector model EM, the robot model RM, and the surrounding object model SM by positioning the end effector model EM, the robot model RM, and the surrounding object model SM in a predetermined virtual space (for example, three-dimensional space SP5) and moving the end effector model EM and the robot model RM in the virtual space in accordance with the movement of the end effector 4 and the robot 1 assuming that the robot 1 is driven. Namely, the path generation unit 315 may generate the movement path MRf that does not cause the interference of at least one of the end effector model EM, the robot model RM, and the surrounding object model SM.

Note that the path generation unit 315 may perform an internal calculation to move the end effector model EM and the robot model RM in the three-dimensional space SP5 but may not update the end effector model EM and the robot model RM in the path generation screen 3550 at the step S252. Namely, the path generation unit 315 may not move the end effector model EM and the robot model RM in the path generation screen 3550.

However, the surrounding object model SM used to generate the movement path MRr may be different from the surrounding object model SM used to generate the movement path MRf. At least one of the plurality of surrounding object models SM used to generate the movement path MRr may be different from at least one of the plurality of surrounding object models SM used to generate the movement path MRf. This is because the position of the robot 1 in the global coordinate system when the robot 1 moves along the movement path MRr is typically different from the position of the robot 1 in the global coordinate system when the robot 1 moves along the movement path MRf. Therefore, there is a possibility that the surrounding object positioned around the robot 1 when the robot 1 moves along the movement path MRr is different from the surrounding object positioned around the robot 1 when the robot 1 moves along the movement path MRf. There is a possibility that at least one of the plurality of surrounding objects positioned around the robot 1 when the robot 1 moves along the movement path MRr is different from least one of the plurality of surrounding objects positioned around the robot 1 when the robot 1 moves along the movement path MRf. Therefore, the surrounding object model SM used to generate the movement path MRr may be different from the surrounding object model SM used to generate the movement path MRf. For example, in a case where the surrounding object positioned around the robot 1 when the robot 1 moves along the movement path MRr is different from the surrounding object positioned around the robot 1 when the robot 1 moves along the movement path MRf, the surrounding object model SM used to generate the movement path MRr may be different from the surrounding object model SM used to generate the movement path MRf. For example, in a case where at least one of the plurality of surrounding objects positioned around the robot 1 when the robot 1 moves along the movement path MRr is different from at least one of the plurality of surrounding objects positioned around the robot 1 when the robot 1 moves along the movement path MRf, at least one of the plurality of surrounding object models SM used to generate the movement path MRr may be different from at least one of the plurality of surrounding object models SM used to generate the movement path MRf.

However, the surrounding object model SM used to generate the movement path MRr may be the same as the surrounding object model SM used to generate the movement path MRf. At least one of the plurality of surrounding object models SM used to generate the movement path MRr may be the same as at least one of the plurality of surrounding object models SM used to generate the movement path MRf. For example, in a case where the surrounding object positioned around the robot 1 when the robot 1 moves along the movement path MRr is the same as the surrounding object positioned around the robot 1 when the robot 1 moves along the movement path MRf, the surrounding object model SM used to generate the movement path MRr may be is the same as the surrounding object model SM used to generate the movement path MRf. For example, in a case where at least one of the plurality of surrounding objects positioned around the robot 1 when the robot 1 moves along the movement path MRr is the same as at least one of the plurality of surrounding objects positioned around the robot 1 when the robot 1 moves along the movement path MRf, at least one of the plurality of surrounding object models SM used to generate the movement path MRr may be is the same as at least one of the plurality of surrounding object models SM used to generate the movement path MRf.

As one example, the path generation unit 315 may generate the movement path MRr along which the tool center point TCP moves from the movement start point MS to the movement end point ME through the movement waypoint MI by using a path planning method. A random sampling-based path planning method that generates a movement path by randomly setting a node through which the tool center point TCP should pass is one example of the path planning method. In this case, the path generation unit 315 may first randomly set a plurality of nodes through which the tool center point TCP passes. Note that setting each node may be considered to be equivalent to setting the position of the end effector model EM when the tool center point TCP is positioned at each node. Furthermore, the path generation unit 315 may calculate the pose of the end effector model EM when the tool center point TCP is positioned at each node. Furthermore, the path generation unit 315 may calculate the position and the pose of the robot model RM when the tool center point TCP is positioned at each node by performing a back-calculation from the pose of the end effector model EM when the tool center point TCP is positioned at each node. This is because the position and the pose of the end effector 4 are determined depending on a driving amount of each link 121 of the robot 1 (especially, the robot arm 12) to which the end effector 4 is attached, and the position and the pose of the robot 1 (especially, the robot arm 12) are also determined depending on the drive amount of each link 121 of the robot 1 (especially, the robot arm 12). Therefore, in a case where the position and the pose of end effector 4 are determined, the position and the pose of the robot model RM can be calculated by performing a back-calculation from the position and the pose of the end effector 4. Then, the path generation unit 315 determines whether or not the interference of at least one of the end effector model EM, the robot model RM, and the surrounding object model SM occurs in a period during which the tool center point TCP passes through the plurality of nodes in sequence. In a case where the interference of at least one of the end effector model EM, the robot model RM, and the surrounding object model SM occurs, the path generation unit 315 may change the position of at least one of the plurality of nodes, may delete at least one of the plurality of nodes, or may add at least one new node. Then, the path generation unit 315 may repeat a calculations based on the path planning method so that the movement path through which the tool center point TCP passes through the plurality of nodes in sequence is the shortest while satisfying a condition that the interference of at least one of the end effector model EM, the robot model RM, and the surrounding object model SM does not occur. As a result, the movement path MRr is generated.

However, in a case where the condition that the interference of at least one of the end effector model EM, the robot model RM, and the surrounding object model SM does not occur cannot be satisfied the change or the like of the position of at least one of the plurality of nodes, the path generation unit 315 may generate the movement path MRr that does not satisfy the condition that interference of at least one of the end effector model EM, the robot model RM, and the surrounding object model SM does not occur.

Note that the path generation unit 315 may generate, as the movement path MRr, a series of movement path including not only the movement path MRr of the end effector 4 between the fine approach position PF and the pre-waiting position PW_pre or the post-waiting position PW_post but also the movement path MRf of the end effector 4 between the fine approach position PF and the process target position PTP at the step S252. Namely, the path generation unit 315 may generate the movement path MRf of the end effector 4 between the fine approach position PF and the process target position PTP, which is generated by the robot control unit 316 based on at least one of the image data IMG_2D and IMG_3D, without using the image data IMG_2D and IMG_3D. For example, the path generation unit 315 may generate the movement path MRr including the movement path MRr that does not cause the interference of at least one of the end effector model EM, the robot model RM, and the surrounding object model SM, by using the path planning method.

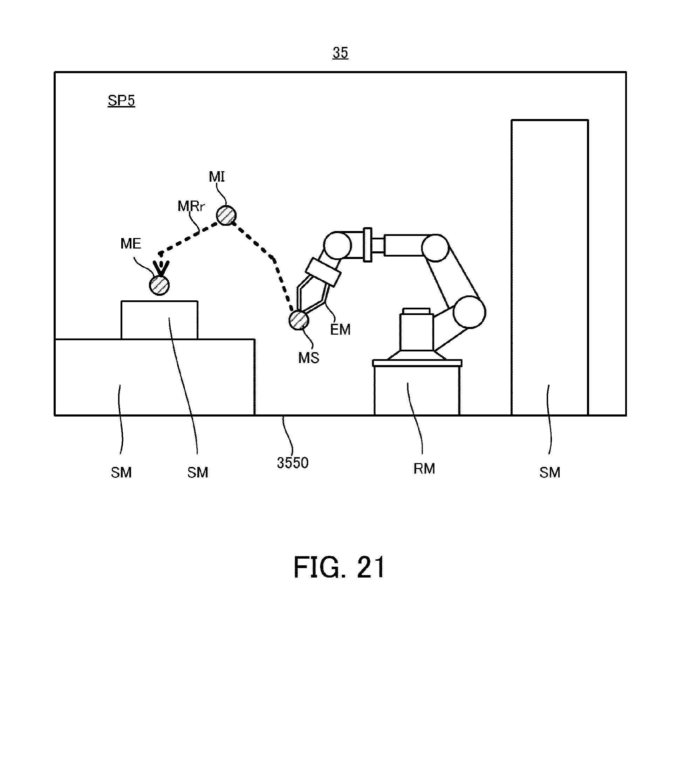

After the movement path MRr is generated, the path generation unit 315 displays the movement path MRr generated at the step S252 on the display apparatus 35 (a step S253). Namely, the path generation unit 315 displays the path generation screen 3550 including the movement path MRr generated at the step S252 on the display apparatus 35 (the step S253). Specifically, the display signal generation unit 317 generates a display signal for displaying the path generation screen 3550 including the movement path MRr generated at the step S252 on the display apparatus 35 under the control of the path generation unit 315. Then, the display signal output unit 318 outputs the display signal generated by the display signal generation unit 317 to the display apparatus 35. As a result, as illustrated in FIG. 21, the display apparatus 35 displays the path generation screen 3550 including the movement path MRr generated at the step S252 based on the display signal acquired from the display signal output unit 318.

Note that the path generation unit 315 may display the path generation screen 3550 including the movement path MRf of the end effector 4 between the fine approach position PF and the process target position PTP at the step S253 in a case where the path generation unit 315 generates a series of movement path including the movement path MRf of the end effector 4 between the fine approach position PF and the process target position PTP as the movement path MRr at the step S252 as described above.

Note that FIG. 21 illustrates an example in which the movement path MRr is displayed together with the end effector model EM, the robot model RM, and the surrounding object model SM on the path generation screen 3550. The movement path MRr may be displayed but at least one of the end effector model EM, the robot model RM, and the surrounding object model SM may not be displayed on the path generation screen 3550.

The path generation processing illustrated in FIG. 19 is performed before the robot 1 actually starts moving by performing the processing from the step S31 to the step S37 in FIG. 6. Namely, the path generation processing illustrated in FIG. 19 is performed without actually moving the robot 1. In other words, the path generation processing illustrated in FIG. 19 is performed without actually moving the robot 1 based on the movement path MRr generated in advance by the path generation processing illustrated in FIG. 19 before actually moving the robot 1. Therefore, the movement path MRr displayed on the path generation screen 3550 may be considered to indicate a movement trajectory of the tool center point TCP (alternatively, any movement base point MBP) that moves due to the driving of the robot 1 assuming that the robot 1 is driven so that the tool center point TCP (alternatively, any movement base point MBP) moves along the generated movement path MRr. Namely, the movement path MRr displayed on the path generation screen 3550 may be considered to indicate a movement trajectory of the tool center point TCP (alternatively, any movement base point MBP) that moves due to the driving of the robot 1 by a simulation in a case of performing the simulation for driving the robot 1 so that the tool center point TCP (alternatively, any movement base point MBP) moves along the generated movement path MRr. Therefore, the movement path MRr displayed on the path generation screen 3550 may not indicate the movement trajectory of the tool center point TCP (alternatively, any movement base point MBP) along which has actually moved along the generated movement path MRr. Note that the movement path of the tool center point TCP may be read as the movement path of any movement base point MBP in the below-described description, if there is no notation.

Here, FIG. 21 illustrates an example in which the path generation unit 315 displays the movement path MRr of the tool center point TCP, which is generated at the step S252 in FIG. 19, at the step S253 in FIG. 19. Namely, FIG. 21 illustrates an example in which the path generation unit 315 displays, at the step S253 in FIG. 19, the movement trajectory of the tool center point TCP that moves due to the driving of the robot 1 in a case where the robot 1 is driven so that the tool center point TCP moves along the movement path MRr generated at the step S252 in FIG. 19. However, the path generation unit 315 may display, on the display apparatus 35 at the step S253 in FIG. 19, the movement trajectory of any movement point MP that moves due to the driving of the robot 1 in a case where the robot 1 is driven so that the tool center point TCP moves along the movement path MRr generated at the step S252 in FIG. 19, in addition to or instead of the movement path MRr generated at the step S252 in FIG. 19 (namely, the movement path of the tool center point). Namely, the path generation unit 315 may display, on the display apparatus 35, the movement trajectory of any movement point MP that moves due to the driving of the robot 1 assuming that the robot 1 is driven so that the tool center point TCP moves along the generated movement path MRr. The path generation unit 315 may display, on the display apparatus 35, the movement trajectory of any movement point MP that moves due to the driving of the robot 1 by the simulation in a case of performing the simulation for driving the robot 1 so that the tool center point TCP moves along the generated movement path MRr. Note that the movement trajectory of the movement point MP displayed on the path generation screen 3550 may not indicate the movement trajectory along which the movement point MP has actually moved.

Since at least a part of the robot 1 moves due to the driving of the robot 1, at least a part of the robot 1 may be used as the movement point MP. At least one point of the robot 1 included in at least a part of the robot 1 may be used as the movement point MP. As one example, any point on the surface of the robot 1 may be used as the movement point MP. As another example, any point inside the robot 1 may be used as the movement point MP. Specifically, since at least a part of the robot arm 12 moves due to the driving of the robot 1, at least a part of the robot arm 12 may be used as the movement point MP. At least one point of the robot arm 12 included in at least a part of the robot arm 12 may be used as the movement point MP. As one example, any point on the surface of the robot arm 12 may be used as the movement point MP. As another example, any point inside the robot arm 12 may be used as the movement point MP. Similarly, since at least a part of end effector 4 attached to robot 1 moves due to the driving of the robot 1, at least a part of the end effector 4 may be used as the movement point MP. At least one point of the end effector 4 that is included in at least a part of the end effector 4 may be used as the movement point MP. As one example, any point on the surface of the end effector 4 may be used as the movement point MP. As another example, any point inside the end effector 4 may be used as the movement point MP.

The tool center point TCP also moves due to the driving of the robot 1. Therefore, the tool center point TCP may be regarded as one example of the movement point MP. Moreover, the tool center point TCP may be regarded as a point that is determined with respect to the end effector 4. In a case where the tool center point TCP is regarded as the point that is determined with respect to the end effector 4, any point that is determined with respect to the end effector 4 may be used as the movement point MP. Furthermore, the tool center point TCP may be regarded as a point that is determined with respect to the robot 1 (especially, the robot arm 12) to which the end effector 4 is attached. In this case, any point that is determined with respect to the robot 1 (especially, the robot arm 12) may be used as the movement point MP.

Ina case where the movement trajectory of any movement point MP is displayed on the path generation screen 3550, the movement start point MS described above may indicate a start point of the movement trajectory of any movement point MP. In this case, the pose of the end effector 4 at the movement start point MS may mean the pose of the end effector 4 when any movement point MP is positioned at the movement start point MS. In a case where the movement trajectory of any movement point MP is displayed on the path generation screen 3550, the movement end point ME described above may indicate an end point of the movement trajectory of any movement point MP. In this case, the pose of the end effector 4 at the movement end point ME may mean the pose of the end effector 4 when any movement point MP is positioned at the movement end point ME. In a case where the movement trajectory of any movement point MP is displayed on the path generation screen 3550, the movement waypoint MI described above may indicate a position through which any movement point MP passes. In this case, the pose of the end effector 4 at the movement waypoint MI may mean the pose of the end effector 4 when any movement point MP is positioned at the movement waypoint MI.

Note that the above-described movement base point MBP is a term that is similar to the movement point MP whose movement trajectory is displayed on the path generation screen 3550. Here, the movement base point MBP is mainly used as a movement target (namely, a control target) in a case where the driving of the robot 1 is controlled. Therefore, the movement base point MBP may be regarded as an element that is different from the movement point MP which is a display target and whose movement trajectory is displayed on the path generation screen 3550. However, the movement base point MBP is a point that moves due to the driving of the robot 1. Therefore, the movement base point MBP may be regarded as one example of the movement point MP. Therefore, as illustrated in FIG. 21, displaying the movement path MRr (the movement trajectory) of the tool center point TCP that is used as the movement base point MBP may be considered to be equivalent to displaying the movement trajectory of the movement point that is the same as the movement base point MBP. Displaying the movement trajectory of the movement point different from the tool center point TCP that is used as the movement base point MBP may be considered to equivalent to displaying the movement trajectory of the movement point different from the movement base point MBP.

In a case where the movement trajectory of any movement point MP is be displayed, the path generation unit 315 may calculate the movement trajectory of any movement point MP based on the generated movement path MRr and display the calculated movement trajectory. Alternatively, the path generation unit 315 may calculate the movement trajectory of any movement point MP without using the generated movement path MRr and display the calculated movement trajectory.

The path generation unit 315 may display the movement point MP that moves along the movement trajectory in addition to or instead of the movement trajectory of any movement point MP. Namely, the path generation unit 315 may perform an animation display for moving the movement point MP along the movement trajectory in the path generation screen 3550. Namely, the path generation unit 315 may display the movement trajectory of any movement point MP by using the movement of any movement point MP.

The path generation unit 315 may display movement trajectories of the plurality of different movement points MP. For example, the path generation unit 315 may display the path generation screen 3550 including a movement trajectory of a first movement point MP and a movement trajectory of a second movement point MP that is different from the first movement point MP.

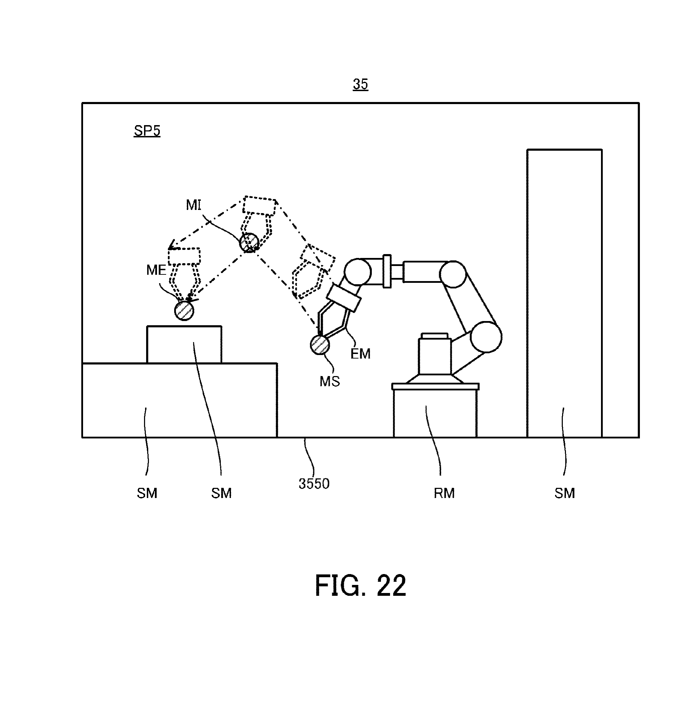

The path generation unit 315 may display at least a part of a movement trajectory of a movable body (specifically, a movable body having a size) that moves due to the driving of the robot 1. For example, the path generation unit 315 may display a part of the movement trajectory of the movable body that moves due to the driving of the robot 1. For example, the path generation unit 315 may display the movement trajectory of whose of the movable body that moves due to the driving of the robot 1. As one example, as illustrated in FIG. 22, the path generation unit 315 may display at least a part of a movement trajectory of at least a part of the end effector 4 that moves due to the driving of the robot 1. As another example, the path generation unit 315 may display at least a part of a movement trajectory of at least a part of the robot 1 that moves due to the driving of the robot 1. The path generation unit 315 may display a movement trajectory of at least a part of the robot arm 12 that moves due to the driving of the robot 1. The path generation unit 315 may display a movement trajectory of at least a part of link 121 that moves due to the driving of the robot 1.

Note that, a set of a plurality of movement points MP may be considered to constitute at least a part of the movable body in a case where the plurality of movement points MP are set on the surface or inside of the movable body. In this case, the path generation unit 315 may display the movement trajectory of at least a part of the movable body that includes the plurality of different movement points MP as the movement trajectory of the plurality of different movement points MP. In other words, the path generation unit 315 may display the movement trajectories of the plurality of different movement points MP included in at least a part of the movable body as the movement trajectories of the plurality of different movement points MP.

The path generation unit 315 may display at least a part of the movable body that moves along the movement trajectory in addition to or instead of the movement trajectory of at least a part of the movable body. Namely, the path generation unit 315 may perform an animation display for moving at least a part of the movable body along the movement trajectory in the path generation screen 3550. Namely, the path generation unit 315 may display the movement trajectory of at least a part of the movable body by using the movement of at least a part of the movable body. As one example, as illustrated in FIG. 22, the path generation unit 315 may perform the animation display for moving at least a part of the end effector 4 that moves due to the driving of the robot 1. May display the movement trajectory. As another example, the path generation unit 315 may perform the animation display for moving at least a part of the robot 1 that moves due to the driving of the robot 1. The path generation unit 315 may perform the animation display for moving at least a part of the robot arm 12 that moves due to the driving of the robot 1. The path generation unit 315 may perform the animation display for moving at least a part of the link 121 that moves due to the driving of the robot 1.

Note that, a set of a plurality of movement points MP may be considered to constitute at least a part of the movable body in a case where the plurality of movement points MP are set on the surface or inside of the movable body. In this case, the path generation unit 315 may display at least a part of the movable body that includes the plurality of different movement points MP as the movement trajectory of the plurality of different movement points MP. In other words, the path generation unit 315 may display the plurality of different movement points MP included in at least a part of the movable body as the movement trajectories of the plurality of different movement points MP. For example, the path generation unit 315 may perform the animation display for moving at least a part of the movable body that includes the plurality of different movement points MP. For example, the path generation unit 315 may perform the animation display for moving the plurality of different movement points MP included in at least a part of the movable body.

In a case of performing the animation display for moving at least a part of the movable body that moves along the movement trajectory, the path generation unit 315 may display at least a part of the movable body that moves along the movement trajectory by using afterimages of at least a part of the moving movable body. For example, FIG. 22 illustrates an example in which the path generation unit 315 displays the end effector 4 (specifically, the end effector model EM) that moves due to the driving of the robot 1 by using the afterimage of the moving end effector 4 (specifically, the end effector model EM). In this case, a visibility of the movement trajectory of at least a part of the movable body is improved.

Note that the movement trajectory may mean a series of continuous movement trajectory. Namely, the path generation unit 315 may display the path generation screen 3550 that includes the movement trajectory of the movement point MP as a series of continuous movement trajectory. The movement trajectory may mean a discrete movement trajectory that includes a plurality of partial trajectories each of which indicates a part of the movement trajectory. Namely, the path generation unit 315 may display the path generation screen 3550 that includes the movement trajectory of the movement point MP as the discrete movement trajectory that includes the plurality of partial trajectories each of which indicates a part of the movement trajectory.

Again in FIG. 19, after the movement path MRr (alternatively, the movement trajectory of any movement point MP) is displayed, the path generation unit 315 determines whether or not the movement path MRr generated at the step S252 is proper (a step S254). Namely, the path generation unit 315 determines whether or not the movement path MRr displayed on the path generation screen 3550 at the step S253 is proper (the step S254).

For example, the path generation unit 315 may determine whether or not the movement path MRr generated at the step S252 is proper based on an instruction from the user that is input to the control apparatus 3 by using the input apparatus 34. In this case, the instruction from the user that is input to the control apparatus 3 by using the input apparatus 34 may include information related to a user's determined result related to whether or not the movement path MRr generated at the step S252 is proper. Alternatively, the path generation unit 315 may determine whether or not the movement path MRr generated at the step S252 is proper without using the instruction from the user.

For example, the user or the path generation unit 315 may determine that the generated movement path MRr is not proper in a case where a length of the generated movement path MRr is longer than a predetermined allowable length. For example, the user or the path generation unit 315 may determine that the generated movement path MRr is proper in a case where the length of the generated movement path MRr is shorter than the predetermined allowable length. For example, the user or the path generation unit 315 may determine that the generated movement path MRr is not proper in a case where the generated movement path MRr is excessively far away from the surrounding object model SM. This is because, in a case where the generated movement path MRr is excessively far away from the surrounding object model SM, there is a possibility that the end effector 4 interferes with an unknown surrounding object, whose corresponding surrounding object model SM is not positioned, when the tool center point TCP actually moves along the generated movement path MRr. Note that a state in which the movement path MRr is excessively distant from the surrounding object model SM may mean a state in which a distance between the movement path MRr and the surrounding object model SM (typically, a distance between the movement path MRr and the surrounding object model SM in a case where the movement path MRr and the surrounding object model SM are most distant from each other) is longer than a predetermined distance threshold value.

The user or the path generation unit 315 may determine whether or not the generated movement path MRr is proper based on a degree of the interference of at least one of the end effector 4, the robot 1, and the surrounding object assuming that the tool center point TCP moves along the generated movement path MRr.

Here, as described above, when the movement path MRr is generated at the step S252, the path generation unit 315 generates the movement path MRr satisfying the condition that the interference of at least one of the end effector model EM, the robot model RM, and the surrounding object model SM does not occur. Namely, the path generation unit 315 generates the movement path MRr satisfying the condition that the interference of at least one of the end effector 4, the robot 1, and the surrounding object does not occur assuming that the tool center point TCP moves along the generated movement path MRr. However, as described above, there is a possibility that the path generation unit 315 cannot generate the movement path MRr satisfying the condition that the interference does not occur. In this case, the user or the path generation unit 315 may determine whether or not the generated movement path MRr is proper based on the degree of the interference of at least one of the end effector 4, the robot 1, and the surrounding object assuming that the tool center point TCP moves along the generated movement path MRr.

In this case, the path generation unit 315 may display, on the display apparatus 35, interference information related to the interference of at least one of the end effector 4, the robot 1, and the surrounding object in order to assist the user to determine whether or not the generated movement path MRr is proper. Specifically, the path generation unit 315 may display, on the display apparatus 35, the path generation screen 3550 that includes the interference information related to the interference of at least one of the end effector 4, the robot 1, and the surrounding object.

However, at a timing at which the path generation processing illustrated in FIG. 19 is performed, the robot 1 is not actually driven. Therefore, in the path generation processing illustrated in FIG. 19, the interference of at least one of end effector 4, the surrounding object, and the robot 1 may mean the interference of at least one of the end effector model EM, the robot model RM, and the surrounding object model SM. In this case, the interference between at least a part of the end effector 4 and at least a part of the robot 1 may mean the interference between at least a part of the end effector model EM and at least a part of the robot model RM. Namely, in the below-described description, the interference between at least a part of the end effector model EM and at least a part of the robot model RM may be considered to be equivalent to the interference between at least a part of the end effector 4 and at least a part of the robot 1. Similarly, the interference between at least a part of end effector 4 and at least a part of the surrounding object may mean interference between at least a part of the end effector model EM and at least a part of the surrounding object model SM. Namely, in the below-described description, the interference between at least a part of the end effector model EM and at least a part of the surrounding object model SM may be considered to be equivalent to the interference between at least a part of the end effector 4 and at least a part of the surrounding object. Similarly, the interference between at least a part of the robot 1 and at least a part of the surrounding object may mean the interference between at least a part of the robot model RM and at least a part of the surrounding object model SM. Namely, in the below-described description, the interference between at least a part of the robot model RM and at least a part of the surrounding object model SM may be considered to be equivalent to the interference between at least a part of the robot 1 and at least a part of the surrounding object. Similarly, the interference between the first part of the robot 1 and the second part of the robot 1 may mean the interference between the first part of the robot model RM and the second part of the robot model RM. Namely, in the below-described description, the interference between the first part of the robot model RM and the second part of the robot model RM may be considered to be equivalent to the interference between the first part of the robot 1 and the second part of the robot 1.

In this case, in order to generate the interference information, the path generation unit 315 may perform, by using the end effector model EM, the robot model RM, and the surrounding object model SM, a simulation for driving the robot 1 so that the tool center point TCP moves along the generated movement path MRr. Namely, the path generation unit 315 may perform, by using the end effector model EM, the robot model RM, and the surrounding object model SM, a simulation for moving the robot 1 and the end effector 4 in accordance with (in other words, based on) the generated movement path MRr. In other words, the path generation unit 315 may perform a simulation for moving the end effector model EM, the robot model RM, and the surrounding object model SM in accordance with (in other words, based on) the generated movement path MRr. Then, the path generation unit 315 may generate the interference information related to the interference of at least one of the end effector 4, the robot 1, and the surrounding object based on a result of the simulation.

For example, the path generation unit 315 may determine whether or not the interference of at least one of the end effector model EM, the robot model RM, and the surrounding object model SM occurs based on the result of the simulation. Namely, the path generation unit 315 may determine whether or not the interference of at least one of the end effector 4, the robot 1, and the surrounding object occurs assuming that the robot 1 and the end effector 4 are moved in accordance with (in other words, based on) the generated movement path MRr. In other words, the path generation unit 315 may determine whether or not the interference at least one of the robot 1 that moves in accordance with (alternatively, based on) the generated movement path MRr, the end effector 4 that moves in accordance with (alternatively, based on) the generated movement path MRr, and the surrounding object. Then, the path generation unit 315 may generate the interference information based on a determined result of whether or not the interference of at least one of the end effector model EM, the robot model RM, and the surrounding object model SM occurs.

Note that the path generation unit 315 may perform the simulation for driving the robot 1 so that the tool center point TCP moves along the generated movement path MRr after displaying the path generation screen 3550 including the generated movement path MRr on the display apparatus 35. Alternatively, the path generation unit 315 may perform the simulation for driving the robot 1 so that the tool center point TCP moves along the generated movement path MRr before displaying the path generation screen 3550 including the generated movement path MRr on the display apparatus 35. Namely, the path generation unit 315 may generate the interference information related to the interference of at least one of the end effector 4, the robot 1, and the surrounding object before displaying the path generation screen 3550 including the generated movement path MRr on the display apparatus 35. In this case, the path generation unit 315 may display the path generation screen 3550 including the generated movement path MRr and the generated interference information on the display apparatus 35.

Alternatively, in a case where the movement trajectory of the movement point MP different from the tool center point TCP is displayed on the path generation screen 3550 as described above, the path generation unit 315 may perform, by using the end effector model EM, the robot model RM, and the surrounding object model SM, a simulation for driving the robot 1 so that the movement point MP moves along the movement trajectory displayed on the path generation screen 3550 in order to generate the interference information. Namely, the path generation unit 315 may perform, by using the end effector model EM, the robot model RM, and the surrounding object model SM, a simulation for moving the robot 1 and the end effector 4 in accordance with (in other words, based on) the movement trajectory displayed on the path generation screen 3550. In other words, the path generation unit 315 may perform a simulation for moving the end effector model EM, the robot model RM, and the surrounding object model SM in accordance with (in other words, based on) the movement trajectory displayed on the path generation screen 3550. Then, the path generation unit 315 may generate the interference information related to the interference of at least one of the end effector 4, the robot 1, and the surrounding object based on a result of the simulation.

For example, the path generation unit 315 may determine whether or not the interference of at least one of the end effector model EM, the robot model RM, and the surrounding object model SM occurs based on the result of the simulation. Namely, the path generation unit 315 may determine whether or not the interference of at least one of the end effector 4, the robot 1, and the surrounding object occurs assuming that the robot 1 and the end effector 4 are moved in accordance with (in other words, based on) the movement trajectory displayed on the path generation screen 3550. In other words, the path generation unit 315 may determine whether or not the interference at least one of the robot 1 that moves in accordance with (alternatively, based on) the movement trajectory displayed on the path generation screen 3550, the end effector 4 that moves in accordance with (alternatively, based on) the movement trajectory displayed on the path generation screen 3550, and the surrounding object. Then, the path generation unit 315 may generate the interference information based on a determined result of whether or not the interference of at least one of the end effector model EM, the robot model RM, and the surrounding object model SM occurs.

Note that the path generation unit 315 may perform the simulation for driving the robot 1 so that the movement point MP moves along the movement trajectory displayed on the path generation screen 3550 after displaying the path generation screen 3550 including the movement trajectory of the movement point MP on the display apparatus 35. Alternatively, the path generation unit 315 may perform the simulation for driving the robot 1 so that the movement point MP moves along the movement trajectory displayed on the path generation screen 3550 before displaying the path generation screen 3550 including the movement trajectory of the movement point MP on the display apparatus 35. Namely, the path generation unit 315 may generate the interference information related to the interference of at least one of the end effector 4, the robot 1, and the surrounding object before displaying the path generation screen 3550 including the movement trajectory of the movement point MP on the display apparatus 35. In this case, the path generation unit 315 may display the path generation screen 3550 including the generated movement trajectory of the movement point MP and the generated interference information on the display apparatus 35.

The path generation unit 315 may display the interference information in any manner as long as the user can understand the interference information. For example, the path generation unit 315 may display the interference information by using a text message. For example, the path generation unit 315 may display the interference information by using an icon. For example, the path generation unit 315 may display the interference information by using an illustration.

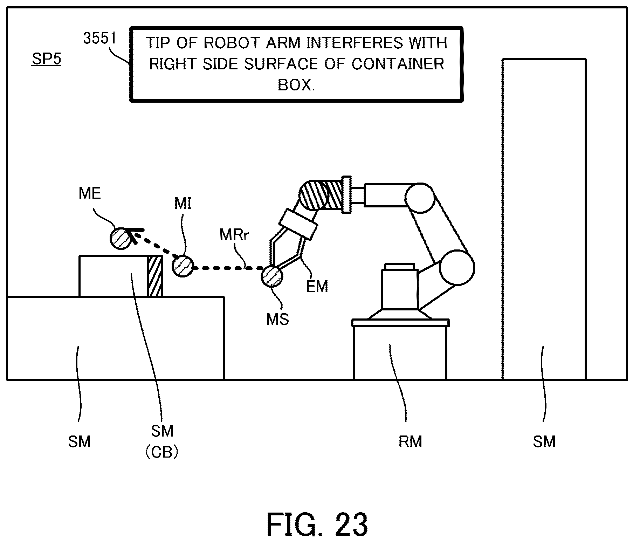

The interference information may include information indicating whether or not the interference of at least one of the end effector model EM, the robot model RM, and the surrounding object model SM occurs. Namely, the interference information may include information indicating whether or not the interference of at least one of the end effector 4, the robot 1, and the surrounding object occurs. In this case, as illustrated in FIG. 23, the path generation unit 315 may display, as the interference information, a display object 3551 indicating the information indicating whether or not the interference of at least one of the end effector model EM, the robot model RM, and the surrounding object model SM occurs. Namely, as illustrated in FIG. 23, the path generation unit 315 may display, as the interference information, the display object 3551 indicating the information indicating whether interference of the end effector 4, the robot 1, and the surrounding object occurs as interference information.

The interference information may include information related to an interference model. The interference model means a model which is at least one of the end effector model EM, the robot model RM, and the surrounding object model SM, and whose interference occurs. For example, in a case where the interference between at least a part of the end effector model EM and at least a part of the robot model RM occurs, each of the end effector model EM and the robot model RM is the interference model, and the interference information may include at least one of information related to the end effector model EM that interferes with at least a part of the robot model RM and information related to the robot model RM that interferes with at least a part of the end effector model EM. Namely, in a case where the interference between at least a part of the end effector 4 and at least a part of the robot 1 occurs, the interference information may include at least one of information related to the end effector 4 that interferes with at least a part of the robot 1 and information related to the robot 1 that interferes with at least a part of the end effector 4. For example, in a case where the interference between at least a part of the end effector model EM and at least a part of the surrounding object model SM occurs, each of the end effector model EM and the surrounding object model SM is the interference model, and the interference information may include at least one of information related to the end effector model EM that interferes with at least a part of the surrounding object model SM and information related to the surrounding object model SM that interferes with at least a part of the end effector model EM. Namely, in a case where the interference between at least a part of the end effector 4 and at least a part of the surrounding object occurs, the interference information may include at least one of information related to the end effector 4 that interferes with at least a part of the surrounding object and information related to the surrounding object that interferes with at least a part of the end effector 4. For example, in a case where interference between at least a part of the robot model RM and at least a part of the surrounding object model SM occurs, each of the robot model RM and the surrounding object model SM is the interference model, and the interference information may include at least one of information related to the robot model RM that interferes with at least a part of the surrounding object model SM and information related to the surrounding object model SM that interferes with at least a part of the robot model RM. Namely, in a case where the interference between at least a part of the robot 1 and at least a part of a surrounding object occurs, the interference information may include at least one of information related to robot 1 that interferes with at least a part of the surrounding object and information related to the surrounding object that interferes with at least a part of the robot 1. For example, in a case where interference between the first part of the robot model RM and the second part of the robot model RM, the robot model RM is the interference model, and the interference information may include at least one of information related to the first part of the robot model RM that interferes with the second part of the robot model RM and information related to the second part of the robot model RM that interferes with the first part of the robot model RM. Namely, it may include at least one of information related to the first part of the robot 1 that interferes with the second part of the robot 1 and information related to the second part of the robot 1 that interferes with the first part of the robot 1.

In this case, as illustrated in FIG. 23, the path generation unit 315 may display, as the interference information, the display object 3551 indicating the interference model. Namely, as illustrated in FIG. 23, the path generation unit 315 may display, as the interference information, the display object 3551 indicating an interference object that is at least one of the end effector 4, the robot 1, and the surrounding object with which interference occurs. In the example illustrated in FIG. 23, the path generation unit 315 displays, as interference information, the display object 3551 that indicates, as the interference objects, the robot arm 12 interfering with the container box CB of the workpiece W, which is one example of the surrounding object, and the surrounding object (the container box CB) that interfering with the robot arm 12. Namely, in the example illustrated in FIG. 23, the path generation unit 315 displays, as the interference information, the display object 3551 that indicates, as the interference models, the robot model RM interfering with the surrounding object model SM of the container box CB and the surrounding object model SM interfering with the robot model RM.

In FIG. 23, the path generation unit 315 displays a name of the interference model as information related to the interference model. Namely, the path generation unit 315 displays a name of the interference object as information related to the interference object. However, the path generation unit 315 may display the information related to the interference model in any manner as long as the user can identify the interference model. Namely, the path generation unit 315 may display the information related to the interference object in any manner as long as the user can identify the interference object. For example, the path generation unit 315 may display the information related to the interference model by using an identification information (for example, a model number) of the interference model. For example, the path generation unit 315 may display the information related to the interference object by using an identification information (for example, a model number) of the interference object.

The interference information may include information related to a position of the interference model. Namely, the interference information may include information related to a position of the interference object. Especially, the interference information may include information related to a position of a part of the interference model at which the interference occurs. Namely, the interference information may include information related to a position of a part of the interference object at which the interference occurs. For example, FIG. 23 illustrates an example for displaying the interference information indicating that a tip of the robot arm 12, which is a first interference object, interferes with the container box CB, which is a second interference object, and that a right side surface of the container box CB, which is the second interference object, interferes with the robot arm 12, which is the first interference object. In other words, FIG. 23 illustrates an example for displaying the interference information indicating that a model part of the robot model RM, which corresponds to the tip of the robot arm 12 that is a first interference model, interferes with the surrounding object model SM (the surrounding object model SM indicating the container box CB), which is a second interference model, and that a model part of the surrounding object model SM, which corresponds to the right side surface of the container box CB that is the second interference model, interferes with the robot model RM, which is the first interference model.

The path generation unit 315 may display the interference model so that a display aspect of a part of the interference model at which the interference occurs is different from a display aspect of another part of the interference model. For example, in a case where the interference between at least a part of the end effector model EM and at least a part of the robot model RM occurs, the path generation unit 315 may display the end effector model EM so that the display aspect of a model part of the end effector model EM that interferes with the robot model RM is different from the display aspect of other model part of the end effector model EM that does not interfere with the robot model RM. For example, in a case where the interference between at least a part of the end effector model EM and at least a part of the robot model RM occurs, the path generation unit 315 may display the robot model RM so that the display aspect of a model part of the robot model RM that interferes with the end effector model EM is different from the display aspect of other model part of the robot model RM that does not interfere with the end effector model EM. For example, in a case where the interference between at least a part of the end effector model EM and at least a part of the surrounding object model SM occurs, the path generation unit 315 may display the end effector model EM so that the display aspect of a model part of the end effector model EM that interferes with the surrounding object model SM is different from the display aspect of other model part of the end effector model EM that does not interfere with the surrounding object model SM. For example, in a case where the interference between at least a part of the end effector model EM and at least a part of the surrounding object model SM occurs, the path generation unit 315 may display the surrounding object model SM so that the display aspect of a model part of the surrounding object model SM that interferes with the end effector model EM is different from the display aspect of other model part of the surrounding object model SM that does not interfere with the end effector model EM. For example, in a case where the interference between at least a part of the robot model RM and at least a part of the surrounding object model SM occurs, the path generation unit 315 may display the robot model RM so that the display aspect of a model part of the robot model RM that interferes with the surrounding object model SM is different from the display aspect of other model part of the robot model RM that does not interfere with the surrounding object model SM. For example, in a case where the interference between at least a part of the robot model RM and at least a part of the surrounding object model SM occurs, the path generation unit 315 may display the surrounding object model SM so that the display aspect of a model part of the surrounding object model SM that interferes with the robot model RM is different from the display aspect of other model part of the surrounding object model SM that does not interfere with the robot model RM. For example, in a case where the interference between the first part of the robot model RM and the second part of the robot model RM occurs, the robot model RM may be displayed so that the display aspect of the first and second parts of the robot model RM is different from the display aspect of other model part of the robot model RM.

The display aspect may include a display color. In this case, the path generation unit 315 may display the interference model so that the display color of a part of the interference model at which the interference occurs is different from the display color of other part of the interference model. For example, as illustrated in FIG. 23, the path generation unit 315 may display the end effector model EM so that the display color of the model part of the end effector model EM, which corresponds to the tip of the robot arm 12, is different from the display color of other model part of the end effector model EM. For example, as illustrated in FIG. 23, the path generation unit 315 may display the surrounding object model SM so that the display color of the model part of the surrounding object model SM, which corresponds to the right side surface of the container box CB, is different from the display color of other model part of the surrounding object model SM. In this case, the user can intuitively identify which part of the interference model causes the interference.

Again in FIG. 19, in a case where it is determined as a result of the determination at the step S254 that the generated movement path MRr is not proper (the step S254: No), the user inputs an instruction for changing the movement path MRr to the control apparatus 3 by using the input apparatus 34 (a step S255). Typically, the user may perform, on the path generation screen 3550, an operation for inputting the instruction for changing the movement path MRr. Namely, the user may input the instruction for changing the movement path MRr through the path generation screen 3550. As a result, the path generation unit 315 acquires the instruction from the user for changing the movement path MRr by using the input apparatus 34 (the step

S255).

The user may input, as the instruction for changing the movement path MRr, an instruction for changing the position of the movement start point MS in the virtual three-dimensional space SP5 formed in the path generation screen 3550. For example, the user may input the instruction for changing the position of the movement start point MS by using the input apparatus 34 to perform an operation for moving (for example, dragging) the movement start point MS on the path generation screen 3550.

Note that the movement start point MS indicates the movement start point of the movement trajectory of the movement point MP that is different from the tool center point TCP in a case where the movement trajectory of the movement point MP that is different from the tool center point TCP (namely, the movement base point MBP) is displayed on the path generation screen 3550 as described above. In this case, the user may input an instruction for changing the position of the movement start point MS (namely, the position of the movement start point of movement trajectory of the movement point MP that is different from the tool center point TCP), or may input an instruction for changing the position of the movement start point of the movement path MRr of the tool center point TCP. Namely, in some cases, the user may input an instruction for changing the position of the movement start point of a desired movement path, which is different from the movement start point MS displayed on the path generation screen 3550.

The user may input, as the instruction for changing the movement path MRr, an instruction for changing the position of the movement end point ME in the three-dimensional space SP5. For example, the user may input the instruction for changing the position of the movement end point ME by using the input apparatus 34 to perform an operation for moving (for example, dragging) the movement end point ME on the path generation screen 3550.

Note that the movement end point ME indicates the movement end point of the movement trajectory of the movement point MP that is different from the tool center point TCP in a case where the movement trajectory of the movement point MP that is different from the tool center point TCP (namely, the movement base point MBP) is displayed on the path generation screen 3550 as described above. In this case, the user may input an instruction for changing the position of the movement end point ME (namely, the position of the movement end point of movement trajectory of the movement point MP that is different from the tool center point TCP), or may input an instruction for changing the position of the movement end point of the movement path MRr of the tool center point TCP. Namely, in some cases, the user may input an instruction for changing the position of the movement end point of a desired movement path, which is different from the movement end point ME displayed on the path generation screen 3550.

The user may input, as the instruction for changing the movement path MRr, an instruction for changing the position of the movement waypoint MI in the three-dimensional space SP5. For example, the user may input the instruction for changing the position of the movement waypoint MI by using the input apparatus 34 to perform an operation for moving (for example, dragging) the movement waypoint MI on the path generation screen 3550.

Note that the movement waypoint MI indicates the movement waypoint of the movement trajectory of the movement point MP that is different from the tool center point TCP in a case where the movement trajectory of the movement point MP that is different from the tool center point TCP (namely, the movement base point MBP) is displayed on the path generation screen 3550 as described above. In this case, the user may input an instruction for changing the position of the movement waypoint MI (namely, the position of the movement waypoint of movement trajectory of the movement point MP that is different from the tool center point TCP), or may input an instruction for changing the position of the movement waypoint of the movement path MRr of the tool center point TCP. Namely, in some cases, the user may input an instruction for changing the position of the movement waypoint of a desired movement path, which is different from the movement waypoint MI displayed on the path generation screen 3550.

The user may input, as the instruction for changing the movement path MRr, an instruction for adding at least one movement waypoint MI in the three-dimensional space SP5. The user may input, as the instruction for changing the movement path MRr, an instruction for deleting at least one movement waypoint MI in the three-dimensional space SP5.

The user may input, as the instruction for changing the movement path MRr, an instruction for changing the position of the end effector model EM in the three-dimensional space SP5. For example, the user may input the instruction for changing the position of the end effector model EM by using the input apparatus 34 to perform an operation for moving (for example, dragging) the end effector model EM on the path generation screen 3550. Note that the above-described instruction for changing the position of at least one of the movement start point MS, the movement end point ME, and the movement waypoint MI may be considered to be substantially equivalent to the instruction for changing the position of the end effector model EM in the three-dimensional space SP5. This is because the movement path MRr of the tool center point TCP is changed when the position of at least one of the movement start point MS, the movement end point ME, and the movement waypoint MI is changed, and therefore the position (typically, the movement path) of the end effector model EM is also changed.

The user may input, as the instruction for changing the movement path MRr, an instruction for changing the pose of the end effector model EM in the three-dimensional space SP5. For example, the user may input the instruction for changing the pose of the end effector model EM by using the input apparatus 34 to perform an operation for moving (for example, rotating) the end effector model EM on the path generation screen 3550. As one example, the user may input, as the instruction for changing the movement path MRr, the instruction for changing the pose of end effector 4 at the movement start point MS in three-dimensional space SP5. As another example, the user may input, as the instruction for changing the movement path MRr, the instruction for changing the pose of end effector 4 at the movement end point ME in three-dimensional space SP5. As another example, the user may input, as the instruction for changing the movement path MRr, the instruction for changing the pose of end effector 4 at the movement waypoint MI in three-dimensional space SP5.

The user may input, as the instruction for changing the movement path MRr, an instruction for changing the position of the robot model RM in the three-dimensional space SP5. For example, the user may input the instruction for changing the position of the robot model RM by using the input apparatus 34 to perform an operation for moving (for example, dragging) the robot model RM on the path generation screen 3550. Note that the above-described instruction for changing the position of at least one of the movement start point MS, the movement end point ME, and the movement waypoint MI may be considered to be substantially equivalent to the instruction for changing the position of the robot model RM in the three-dimensional space SP5. This is because the movement path MRr of the tool center point TCP is changed when the position of at least one of the movement start point MS, the movement end point ME, and the movement waypoint MI is changed, and therefore the position (typically, the movement path) of the robot model RM is also changed.

The user may input, as the instruction for changing the movement path MRr, an instruction for changing the pose of the robot model RM in the three-dimensional space SP5. For example, the user may input the instruction for changing the pose of the robot model RM by using the input apparatus 34 to perform an operation for moving (for example, rotating) the robot model RM on the path generation screen 3550.

The user may input, as the instruction for changing the movement path MRr, an instruction for changing the position of the surrounding object model SM in the three-dimensional space SP5. For example, the user may input the instruction for changing the position of the surrounding object model SM by using the input apparatus 34 to perform an operation for moving (for example, dragging) the surrounding object model SM on the path generation screen 3550. Note that the arrangement position of the surrounding object model SM in the three-dimensional space SP5 may correspond to the actual position of the surrounding object as described above. Therefore, in a case where the position of the surrounding object model SM is changed, the user may change the position of the actual surrounding object accordingly.

The user may input, as the instruction for changing the movement path MRr, an instruction for changing the pose of the surrounding object model SM in the three-dimensional space SP5. For example, the user may input the instruction for changing the pose of the surrounding object model SM by using the input apparatus 34 to perform an operation for moving (for example, rotating) the surrounding object model SM on the path generation screen 3550. Note that the pose of the surrounding object model SM in the three-dimensional space SP5 may correspond to the actual pose of the surrounding object as described above. Therefore, in a case where the pose of the surrounding object model SM is changed, the user may change the pose of the actual surrounding object accordingly.

The user may input, as the instruction for changing the movement path MRr, an instruction for changing the type of the end effector model EM. Namely, the user may input, as the instruction for changing the movement path MRr, an instructions for changing the end effector model EM that is used to generate the movement path MRr from a first type of end effector model EM corresponding to a first type of end effector 4 to a second type of end effector model EM corresponding to a second type of end effector 4 different from the first type. In this case, at least one of the size, the shape, and the like of the end effector model EM is changed due to the change of the type of the end effector model EM, and as a result, there is a possibility that the movement path MRr is changed. Alternatively, there is a possibility that the movement path MRr, which cannot not satisfy the condition that the interference of at least one of the end effector model EM, the robot model RM, and the surrounding object model SM does not occur before changing at least one of the size, the shape, and the like of the end effector model EM, can satisfy the condition that the interference of at least one of the end effector model EM, the robot model RM, and the surrounding object model SM does not occur after changing at least one of the size, the shape, and the like of the end effector model EM. Note that the user may change the type of the end effector 4 attached to the robot 1 in a case where the type of the end effector model EM is changed.

The user may input, as the instruction for changing the movement path MRr, an instruction for changing the type of the robot model RM. Namely, the user may input, as the instruction for changing the movement path MRr, an instructions for changing the robot model RM that is used to generate the movement path MRr from a first type of robot model RM corresponding to a first type of robot 1 to a second type of robot model RM corresponding to a second type of robot 1 different from the first type. In this case, at least one of the size, the shape, and the like of the robot model RM is changed due to the change of the type of the robot model RM, and as a result, there is a possibility that the movement path MRr is changed. Alternatively, there is a possibility that the movement path MRr, which cannot not satisfy the condition that the interference of at least one of the end effector model EM, the robot model RM, and the surrounding object model SM does not occur before changing at least one of the size, the shape, and the like of the robot model RM, can satisfy the condition that the interference of at least one of the end effector model EM, the robot model RM, and the surrounding object model SM does not occur after changing at least one of the size, the shape, and the like of the robot model RM. Note that the user may change the type of the robot 1 to which the end effector 4 is attached in a case where the type of the robot model RM is changed.

The user may input, as the instruction for changing the movement path MRr, an instruction for changing the type of the surrounding object model SM. Namely, the user may input, as the instruction for changing the movement path MRr, an instructions for changing the surrounding object model SM that is used to generate the movement path MRr from a first type of surrounding object model SM corresponding to a first type of surrounding object to a second type of surrounding object model SM corresponding to a second type of surrounding object different from the first type. In this case, at least one of the size, the shape, and the like of the surrounding object model SM is changed due to the change of the type of the surrounding object model SM, and as a result, there is a possibility that the movement path MRr is changed. Alternatively, there is a possibility that the movement path MRr, which cannot not satisfy the condition that the interference of at least one of the end effector model EM, the robot model RM, and the surrounding object model SM does not occur before changing at least one of the size, the shape, and the like of the surrounding object model SM, can satisfy the condition that the interference of at least one of the end effector model EM, the robot model RM, and the surrounding object model SM does not occur after changing at least one of the size, the shape, and the like of the surrounding object model SM. Note that the user may change the type of the actual surrounding object that is positioned around the robot 1 in a case where the type of the surrounding object model SM is changed.

The user may input the instruction for changing the movement path MRr based on the interference information displayed on the path generation screen 3550. For example, the user may input the instruction for changing the movement path MRr based on the interference information displayed on the path generation screen 3550 so that the interference of at least one of the end effector model EM, the robot model RM, and the surrounding object model SM does not occur. Namely, the user may input the instruction for changing the movement path MRr based on the interference information displayed on the path generation screen 3550 so that the interference of at least one of the end effector 4, the robot 1, and the surrounding object does not occur assuming that the robot 1 is driven so that the tool center point TCP moves based on the movement path MRr.

Then, the path generation unit 315 changes the movement path MRr based on the instruction from the user acquired at the step S255 (a step S256). For example, the path generation unit 315 may change the generated movement path MRr. In this case, the path generation unit 315 may change at least a part of the movement path MRr so that a change based on the instruction from the user is reflected in the generated movement path MRr. Even in this case, the path generation unit 315 may change the movement path MRr by performing a processing that is the same as in a case where the movement path MRr is generated at the step S252 (for example, by performing the processing based on a random-based path planning method). Alternatively, the path generation unit 315 may newly generate a new movement path MRr corresponding to the changed movement path MRr. Namely, the processing for changing the movement path MRr at the step S256 may mean at least one of the processing for changing the generated movement path MRr and the processing for newly generating the new movement path MRr corresponding to the changed movement path MRr. Note that the processing for generating the new movement path MRr corresponding to the changed movement path MRr may be the same as the processing for generating the movement path MRr at the step S252.

Then, the path generation unit 315 may repeat the processing after the step S253. Namely, the path generation unit 315 may display the movement path MRr changed at the step S256 (the step S253), determine whether or not the movement path MRr changed at the step S256 is proper (the step S254), and re-change the movement path MRr in a case where the movement path MRr changed at the step S256 is not proper (the step S256).

On the other hand, in a case where it is determined as a result of the determination at the step S254 that the generated movement path MRr is proper (the step S254: Yes), it is estimated that there is little need to change the movement path MRr. In this case, the path generation unit 315 may end the path generation processing illustrated in FIG. 19.

As described above, the path generation unit 315 performs the path generation processing illustrated in FIG. 19 before the robot 1 actually starts moving by performing the processing from the step S31 to the step S37 in FIG. 6. Namely, the path generation unit 315 performs the path generation processing illustrated in FIG. 19 without actually moving the robot 1 to generate the movement path MRr. In other words, the path generation unit 315 starts and ends the path generation processing illustrated in FIG. 19 without moving the robot 1. Note that moving the robot 1 may include moving at least a part of the robot arm 12. Moving the robot 1 may include moving at least one link 121 included in the robot arm 12. Moving robot 1 may include moving base 11. In a case where the base 11 serves as the Automatic Guided Vehicle or the base 11 is mounted on the Automatic Guided Vehicle, moving the robot 1 may include moving the Automatic Guided Vehicle.

Therefore, the path generation unit 315 may generate the movement path MRr of the tool center point TCP and display the movement path MRr of the tool center point TCP on the display apparatus 35 before the robot 1 actually starts move by performing the processing from the step S31 to the step S37 in FIG. 6. Therefore, the user may determine whether or not the generated movement path MRr is proper before the robot 1 actually starts moving by performing the processing from the step S31 to the step S37 in FIG. 6. As a result, in a case where it is determined that the generated movement path MRr is not proper, the path generation unit 315 may re-generate the movement path MRr. Therefore, the path generation unit 315 can generate the proper movement path MRr without moving the tool center point TCP along the non-proper movement path MRr (namely, without moving the robot 1). As a result, the path generation unit 315 can generate the proper movement path MRr without causing the interference between the end effector 4 and a part of the surrounding object or the robot 1 due to the movement of the tool center point TCP along the non-proper movement path MRr.

However, the path generation unit 315 may not perform the steps S254, S255, and S256 in FIG. 19. Namely, the path generation unit 315 may display the movement path MRr generated at the step S252, but may not determine whether or not the movement path MRr is proper, may not determine whether or not the movement path MRr is proper, and may not change the movement path MRr. The user may not input the instruction for changing the movement path MRr to the control apparatus 3 by using the input apparatus 34.

Note that performing the path generation processing illustrated in FIG. 19 without moving the robot 1 may be considered to be equivalent to performing the path generation processing illustrated in FIG. 19 in a state in which the robot 1 is stopped.

The state in which the robot 1 is stopped may include a state in which the robot 1 is stopped before the robot 1 actually starts moving by performing the processing from the step S31 to the step S37 in FIG. 6.

The state in which robot 1 is stopped may include a state in which the robot 1 is stopped after the robot 1 actually starts moving by performing the processing from the step S31 to the step S37 in FIG. 6 is performed. In this case, the robot control unit 316 may control the robot 1 so that the tool center point TCP moves along the movement path MRr generated by the path generation unit 315 by performing the processing from the step S31 to the step S37 in FIG. 6. Then, the robot control unit 316 may stop the robot 1 after the tool center point TCP finishes moving along the movement path MRr. Alternatively, the robot control unit 316 may stop the robot 1 in the process of moving the tool center point TCP along the movement path MRr. Then, the path generation unit 315 may start the path generation processing illustrated in FIG. 19. Namely, the path generation unit 315 may start the path generation processing illustrated in FIG. 19 in order to generate a new movement path MRr.

### (5-2) Modified Example of Path Generation Processing

Next, a modified example of the path generation processing will be described. Note that one modified example described below may be combined with another modified example that is different from the one modified example.

### (5-2-1) First Modified Example of Path Generation Processing

The end effector 4 attached to the robot arm 12 may be replaced as needed. For example, the robot 1 may perform a predetermined first process on the object OBJ by using a first end effector 4#11 attached to the robot arm 12. Then, the end effector 4 attached to the robot arm 12 may be replaced from the first end effector 4#11 to a second end effector 4#12. Then, the robot 1 may perform a predetermined second process on the object OBJ by using the second end effector 4#12 attached to the robot arm 12.

In this case, in the first modified example, the path generation unit 315 may generate the movement path MRr (a first movement path MRr#1) of the tool center point TCP in a case where the first end effector 4#11 is attached to the robot arm 12 by performing the path generation processing illustrated in FIG. 19. On the other hand, the path generation unit 315 may generate the movement path MRr (a second movement path MRr#2) of the tool center point TCP in a case where the second end effector 4#12 is attached to the robot arm 12 without performing the path generation processing illustrated in FIG. 19.

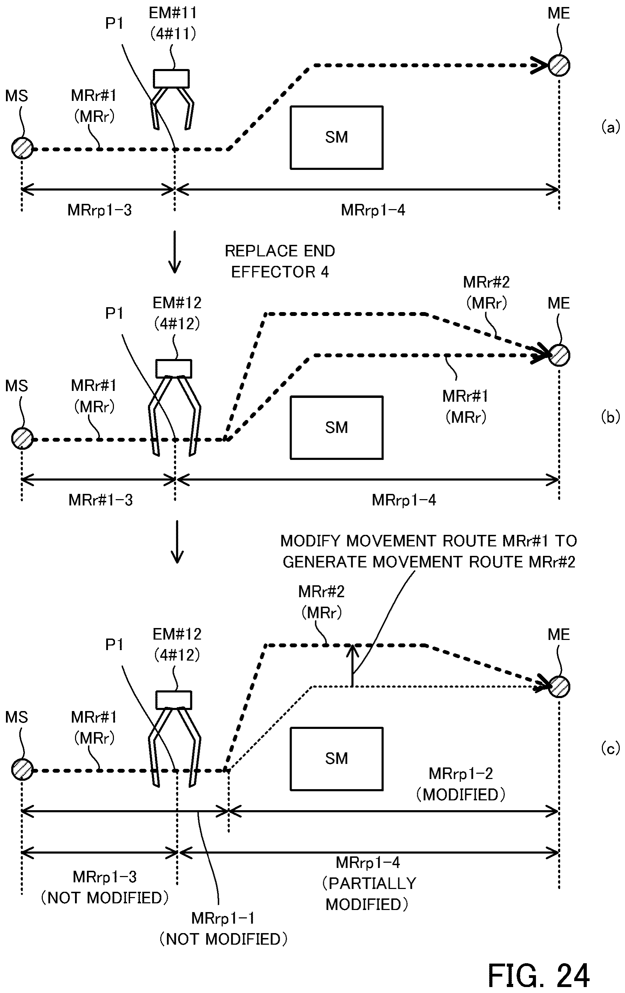

For example, FIG. 24(a) illustrates the first end effector 4#11 attached to the robot arm 12 in a situation where the tool center point TCP moves along the first movement path MRr#1, by using a first end effector model EM#11 that is a three-dimensional model of the first end effector 4#11. Here, as illustrated in FIG. 24(b), an example in which the end effector attached to the robot arm 12 is replaced from the first end effector 4#11 to the second end effector 4#12 in a case where the tool center point TCP reaches a position P1 on the first movement path MRr#1 will be described. Namely, an example in which the second end effector 4#12 is newly attached to the robot arm 12 in a case where the tool center point TCP reaches the position P1 on the first movement path MRr#1 will be described. In other words, an example in which the end effector 4 attached to the robot arm 12 is replaced from the first end effector 4#11 to the second end effector 4#12 in the process of moving the first end effector 4#11 in accordance with (alternatively, based on) the first movement path MRr#1 will be described. Namely, an example in which the second end effector 4#12 is newly attached to the robot arm 12 in the process of moving the first end effector 4#11 along the first movement path MRr#1 will be described.

In this case, the path generation unit 315 may generate the second movement path MRr#2 based on the generated first movement path MRr#1 and a second end effector model EM#12 that is a three-dimensional model of the second end effector 4#12. For example, the path generation unit 315 may perform a simulation for driving the robot 1 so that the tool center point TCP of the second end effector 4#12 moves along the generated first movement path MRr#1, and may generate the second movement path MRr#2 from the movement start point MS of the first movement path MRr#1 to the movement end point ME of the first movement path MRr#1 based on a result of the simulation. As one example, the path generation unit 315 may perform a simulation for moving the second end effector model EM#12 so that the tool center point TCP of the second end effector 4#12 moves along the generated first movement path MRr#1, and may generate the second movement path MRr#2 from the movement start point MS of the first movement path MRr#1 to the movement end point ME of the first movement path MRr#1 based on a result of the simulation.

Alternatively, in the example illustrated in FIG. 24(a), the tool center point TCP corresponding to the first end effector 4#11 has already moved along a part of the first movement path MRr#1. In this case, the path generation unit 315 may generate the second movement path MRr#2 based on not whole of the generated first movement path MRr#1 but a part of the generated first movement path MRr#1 and the second end effector model EM#12. Specifically, the tool center point TCP corresponding to the first end effector 4#11 has already moved along an already moved path part MRrp1-3 that is a part of the first movement path MRr#1 and that is from the movement start point MS to the position P1, and has not yet moved along a non-moved path part MRrp1-4 that is another part of the first movement path MRr#1 and that is from the position P1 to the movement end point ME. In this case, the path generation unit 315 may generate the second movement path MRr#2 based on the non-moved path part MRrp1-4 and the second end effector model EM#12. For example, the path generation unit 315 may perform a simulation for driving the robot 1 so that the tool center point TCP of the second end effector 4#12 moves along the non-moved path part MRrp1-4, and generate the second movement path MRr#2 from the position P1 on the first movement path MRr#1 to the movement end point ME of the first movement path MRr#1 based on a result of the simulation. As one example, the path generation unit 315 may perform a simulation for moving the second end effector model EM#12 so that the tool center point TCP of the second end effector 4#12 moves along the non-moved path part MRrp1-4, and generate the second movement path MRr#2 from the position P1 on the first movement path MRr#1 to the movement end point ME of the first movement path MRr#1 based on a result of the simulation

One example of the second movement path MRr#2 from the position P1 on the first movement path MRr#1 to the movement end point ME of the first movement path MRr#1 is illustrated in FIG. 24(b). In the example illustrated in FIG. 24(b), the second movement path MRr#2 from the position P1 to the movement end point ME is different from the first movement path MRr#1 from the position P1 to the movement end point ME. However, a part of the second movement path MRr#2 from the position P1 to the movement end point ME may be the same as a part the first movement path MRr#1 from the position P1 to the movement end point ME. The entire second movement path MRr#2 from the position P1 to the movement end point ME may be the same as the entire first movement path MRr#1 from the position P1 to the movement end point ME. Furthermore, FIG. 24(b) illustrates an example of generating the second movement path MRr#2 from the position P1 to the movement end point ME of the first movement path MRr#1, however, the same applies in a case where the second movement path MRr#2 from the movement start point MS of the first movement path MRr#1 to the movement end point ME of the first movement path MRr#1.

In a case where the first movement path MRr#1 is generated, the path generation unit 315 may calculate a non-interference space in which the interference of at least one of the first end effector model EM#11, the robot model RM, and the surrounding object model SM does not occur. Alternatively, the path generation unit 315 may calculate the non-interference space in which the interference of at least one of the first end effector model EM#11, the robot model RM, and the surrounding object model SM does not occur based on the first movement path MRr#1. The non-interference space may be a partial space in the virtual space. The non-interference space may be a space satisfying a condition that the interference of at least one of the first end effector model EM#11, the robot model RM, and the surrounding object model SM does not occur in a case where the end effector model EM (in this example, the first end effector model EM#11) moves in the non-interference space. In a case where the first movement path MRr#1 is generated, the path generation unit 315 may calculate the non-interference space by repeating, at a plurality of positions in the virtual space, an operation for positioning the first end effector model EM#11 at each position in the virtual space and determining whether or not the interference of at least one of the first end effector model EM#11, the robot model RM, and the surrounding object model SM occurs. Note that the path generation unit 315 may calculate the non-interference space in parallel with the generation of the first movement path MRr#1, may calculate the non-interference space before the generation of the first movement path MRr#1, or may calculate the non-interference space after the generation of the first movement path MRr#1. In this case, the path generation unit 315 may generate the second movement path MRr#2 based on the second end effector 4#12 so that the second end effector model EM#12 moves in the non-interference space.

The path generation unit 315 may generate the second movement path MRr#2 based on not only the first movement path MRr#1 and the second end effector model EM#12 but also the first end effector model EM#11. For example, the path generation unit 315 may generate the second movement path MRr#2 so that the second end effector model EM#12 moves in the non-interference space in which the interference of at least one of the first end effector model EM#11, the robot model RM, and the surrounding object model SM does not occur while considering a difference between a shape of the first end effector model EM#11 and a shape of the second end effector model EM#12. For example, the path generation unit 315 may change (in other words, convert) a first non-interference space in which the interference of at least one of the first end effector model EM#11, the robot model RM, and the surrounding object model SM does not occur to a second non-interference space in which the interference of at least one of the second end effector model EM#12, the robot model RM, and the surrounding object model SM does not occur, based on the difference between the shape of the first end effector model EM#11 and the shape of the second end effector model EM#12, and generate the second movement path MRr#2 so that the second end effector model EM#12 moves in the second non-interference space. For example, the path generation unit 315 may displace the generated first movement path MRr#1 based on the difference between the shape of the first end effector model EM#11 and the shape of the second end effector model EM#12 to generate the displaced first movement path MRr#1 as the second movement path MRr#2. As one example, the path generation unit 315 may displaced the generated first movement path MRr#1 by a difference between a total length of the first end effector model EM#11 and a total length of the second end effector model EM#12 to generate the displaced first movement path MRr#1 as the second movement path MRr#2.

The path generation unit 315 may generate the second movement path MRr#2 based on not only the first movement path MRr#1 and the second end effector model EM#12 but also the surrounding object model SM. The path generation unit 315 may generate the second movement path MRr#2 based on not only the first movement path MRr#1 and the second end effector model EM#12 but also the robot model RM. Namely, the path generation unit 315 may generate the second movement path MRr#2 based on the first movement path MRr#1 and the second end effector model EM#12 but also at least one of the robot model RM and the surrounding object model SM.

In a case where the path generation unit 315 generates the second movement path MRr#2 based on at least one of the robot model RM and the surrounding object model SM, the path generation unit 315 may determine whether or not the interference of at least one of the second end effector model EM#12, the robot model RM and the surrounding object model SM occurs in order to generate the second movement path MRr#2. Specifically, the path generation unit 315 may performs a simulation for driving the robot 1 so that the tool center point TCP of the second end effector 4#12 moves along the generated first movement path MRr#1, and determine whether or not the interference of at least one of the second end effector model EM#12, the robot model RM, and the surrounding object model SM occurs based on a result of the simulation. Namely, the path generation unit 315 may perform a simulation for moving the second end effector model EM#12 and the robot model RM so that the tool center point TCP of the second end effector 4#12 moves along the generated first movement path MRr#1, and determine whether or not the interference of at least one of the second end effector model EM#12, the robot model RM, and the surrounding object model SM occurs based on a result of the simulation.

In a case where it is determined that the interference of at least one of the second end effector model EM#12, the robot model RM, and the surrounding object model SM does not occur, the path generation unit 315 may use the first movement path MRr#1 as the second movement path MRr#2 as it is.

On the other hand, in a case where it is determined that the interference of at least one of the second end effector model EM#12, the robot model RM, and the surrounding object model SM occurs, the path generation unit 315 may generate the second movement path MRr#2 so that the interference between the second end effector model EM#12 and the surrounding object model SM does not occur. For example, as illustrated in FIG. 24(c), the path generation unit 315 may modify (in other words, changes) at least a part of the first movement path MRr#1 so that the interference between the second end effector model EM#12 and the surrounding object model SM does not occur to generate, as the second movement path MRr#2, a movement path including the modified first movement path MRr#1.

In this way, in the first modified example, the path generation unit 315 may generate the second movement path MRr#2 based on the generated first movement path MRr#1. For example, the path generation unit 315 may generate the second movement path MRr#2 by modifying the generated first movement path MRr#1. Alternatively, the path generation unit 315 may use the generated first movement path MRr#1 as the second movement path MRr#2 as it is. Therefore, the path generation unit 315 can reduce a processing load for generating the second movement path MRr#2, compared to a case where the second movement path MRr#2 is newly generated from scratch without using the first movement path MRr#1. Furthermore, the path generation unit 315 can shorten a time required to generate the second movement path MRr#2, compared to a case where the second movement path MRr#2 is newly generated from scratch without using the first movement path MRr#1.

When at least a part of the first movement path MRr#1 is modified, the path generation unit 315 may modify an interference path part MRrp1-2 that is a path part of the first movement path MRr#1 causing the interference of at least one of the second end effector model EM#12, the robot model RM, and the surrounding object model SM. The interference path part MRp1-2 is a path satisfying a condition that the interference of at least one of the second end effector model EM#12, the robot model RM, and the surrounding object model SM occurs in a case where the tool center point TCP of the second end effector 4#12 moves along the interference path part MRp1-2. On the other hand, the path generation unit 315 may modify a non-interference path part MRrp1-1 that is a path part of the first movement path MRr#1 not causing the interference of at least one of the second end effector model EM#12, the robot model RM, and the surrounding object model SM. The non-interference path part MRp1-1 is a path satisfying a condition that the interference of at least one of the second end effector model EM#12, the robot model RM, and the surrounding object model SM does not occur in a case where the tool center point TCP of the second end effector 4#12 moves along the non-interference path part MRp1-1. In this case, the second movement path MRr#2 may include the unmodified non-interference path part MRrp1-1 and the modified interference path part MRrp1-2. As a result, the path generation unit 315 can reduce the processing load for generating the second movement path MRr#2, compared to a case where the second movement path MRr#2 is generated by changing the entire first movement path MRr#1. Furthermore, the path generation unit 315 can reduce the time required to generate the second movement path MRr#2, compared to a case where the second movement path MRr#2 is generated by changing the entire first movement path MRr#1.

In a case where the end effector 4 attached to the robot arm 12 is replaced from the first end effector 4#11 to the second end effector 4#12 in the process of moving the first end effector 4#11 in accordance with (in other words, based on) the first movement path MRr#1, the second end effector 4#12 moves in accordance with (in other words, based on) the non-moved path part MRrp1-4 of the first movement path MRr#1 along which the tool center point TCP corresponding to the first end effector 4#11 has not yet moved. Namely, the second end effector 4#12 moves so that the tool center point TCP corresponding to the second end effector 4#12 moves along the non-moved path part MRrp1-4. In the example illustrated in FIG. 24(c), the second end effector 4#12 moves so that the tool center point TCP corresponding to the second end effector 4#12 moves from the position P1 to the movement end point ME. On the other hand, the second end effector 4#12 may not move in accordance with (in other words, based on) the already moved path part MRrp1-3 of the first movement path MRr#1 along which the tool center point TCP corresponding to the first end effector 4#11 has already moved. Namely, the second end effector 4#12 may not move so that the tool center point TCP corresponding to the second end effector 4#12 moves along the already moved path part MRrp1-3. In the example illustrated in FIG. 24(c), the second end effector 4#12 may not move so that the tool center point TCP corresponding to the second end effector 4#12 moves from the movement start point MS to the position P1. In this case, the path generation unit 315 may modify at least a part of the non-moved path part MRrp1-4 but may not modify the already moved path part MRrp1-3. For example, the path generation unit 315 may modify at least partial path part of the non-moved path part MRrp1-4 corresponding to the above-described interference movement path part MRrp1-2. In this case, the second movement path MR#2 may include the already moved path part MRrp1-3 that has not been modified and the non-moved path part MRrp1-4 at least a part of which has been modified. As a result, the path generation unit 315 can reduce the processing load for generating the second movement path MR#2, compared to a case where the second movement path MR#2 is generated by changing the entire first movement path MR#1. Furthermore, the path generation unit 315 can reduce the time required to generate the second movement path MRr#2, compared to a case where the second movement path MRr#2 is generated by changing the entire first movement path MRr#1.

The path generation unit 315 may generate the second movement path MRr#2 after the end effector 4 attached to the robot arm 12 is replaced from the first end effector 4#11 to the second end effector 4#12. Namely, the path generation unit 315 may generate the second movement path MRr#2 after the second end effector 4#12 is attached to the robot arm 12.

Alternatively, the path generation unit 315 may generate the second movement path MRr#2 in advance before the end effector 4 attached to the robot arm 12 is replaced from the first end effector 4#11 to the second end effector 4#12. Namely, the path generation unit 315 may generate the second movement path MRr#2 in advance before the second end effector 4#12 is attached to the robot arm 12. In this case, the path generation unit 315 may generate the second movement path MRr#2 after the first end effector 4#11 attached to the robot arm 12 starts moving in accordance with the first movement path MRr#1. Alternatively, the path generation unit 315 may generate the second movement path MRr#2 before the first end effector 4#11 attached to the robot arm 12 starts moving in accordance with the first movement path MRr#1. Note that the first movement path MRr#1 may be usually generated before the first end effector 4#11 attached to the robot arm 12 starts moving. This is because the first end effector 4#11 cannot start moving unless the first movement path MRr#1 has been already generated.

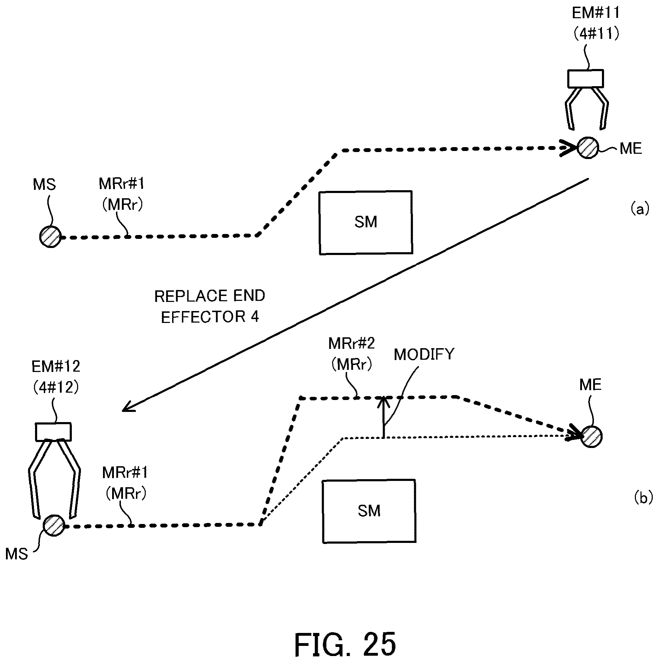

Note that the path generation unit 315 may generate the second movement path MRr#2 by using the above-described method even in a case where the end effector 4 attached to the robot arm 12 is replaced after the tool center point TCP has finished moving along the first movement path MRr#1 as illustrated in FIG. 25. For example, even in a case where the end effector 4 attached to the robot arm 12 is replaced after the tool center point TCP has finished moving along the first movement path MRr#1, the path generation unit 315 may generate the second movement path MRr#2 based on the generated first movement path MRr#1 and the second end effector model EM#12 in the same manner as in a case where the end effector 4 attached to the robot arm 12 is replaced after the tool center point TCP has reached the position P1 on the first movement path MRr#1. For example, even in a case where the end effector 4 attached to the robot arm 12 is replaced after the tool center point TCP has finished moving along the first movement path MRr#1, the path generation unit 315 may generate the second movement path MRr#2 by using the non-interference space described above. For example, even in a case where the end effector 4 attached to the robot arm 12 is replaced after the tool center point TCP has finished moving along the first movement path MRr#1, the path generation unit 315 may generate the second movement path MRr#2 based on the difference between the shape of the first end effector model EM#11 and the shape of the second end effector model EM#12, as described above. For example, even in a case where the end effector 4 attached to the robot arm 12 is replaced after the tool center point TCP has finished moving along the first movement path MRr#1, the path generation unit 315 the path generation unit 315 may generate the second movement path MRr#2 based on the generated first movement path MRr#1, the second end effector model EM#12, and at least one of the robot model RM and the surrounding object model SM in the same manner as in a case where the attached end effector 4 is replaced.

Moreover, in the above-described description, both the first movement path MRr#1 and the second movement path MRr#2 indicate the movement path of the tool center point TCP that is used as the movement base point MBP. However, the first movement path MRr#1 may indicate the movement path of a first movement base point MBP, and the second movement path MRr#2 may indicate the movement path of a second movement base point MBP that is different from the first movement base point MBP. Namely, the path generation unit 315 may generate the first movement path MRr#1, which is the movement path of the first movement base point MBP in a case where the first end effector 4#11 is attached to the robot arm 12, by performing the path generation processing illustrated in FIG. 19. On the other hand, the path generation unit 315 may generate the second movement path MRr#2, which is the movement path of the second movement base point MBP different from the first movement base point MBP in a case where the second end effector 4#12 is attached to the robot arm 12, based on the generated first movement path MRr#1 and the second end effector model EM#12 without performing the path generation processing illustrated in FIG. 19.

In the above-described description, the path generation unit 315 generates the second movement path MRr#2 based on the generated first movement path MRr#1 in a case where the end effector 4 attached to the robot arm 12 is replaced. However, in addition to or instead of the end effector 4 attached to the robot arm 12 being replaced, the robot 1 to which the end effector 4 is attached may be replaced. As one example, a first robot 1#1 to which the end effector 4 is attached may perform the predetermined process on the object OBJ. Then, the end effector 4 may be detached from the first robot 1#1 and attached to a second robot 1#2. Then, the second robot 1#2 to which the end effector 4 is attached may perform the predetermined process on the object OBJ. In this case, the path generation unit 315 may generate the movement path MRr (a first movement path MRr#11) of the tool center point TCP of the end effector 4 attached to the first robot 1#1 by performing the path generation processing illustrated in FIG. 19. On the other hand, the path generation unit 315 may generate the movement path MRr (a second movement path MRr#12) of the tool center point TCP of the end effector 4 attached to the second robot 1#2 without performing the path generation processing illustrated in FIG. 19. In this case, the path generation unit 315 may generate the second movement path MRr#12 based on the generated first movement path MRr#11 and a second robot model RM#2 that is a three-dimensional model of the second robot model #2. Note that an operation for generating the second movement path MRr#12 based on the generated first movement path MRr#11 and the second robot model RM#2 may be the same as the operation for generating the second movement path MRr#2 based on the generated first movement path MRr#1 and the second end effector model EM#12. Namely, the operation for generating the second movement path MRr#12 based on the generated first movement path MRr#11 and the second robot model RM#2 may be the same as the operation for generating the second movement path MRr#2 based on the generated first movement path MRr#1 and the second end effector model EM#12, except that a replaced target is not the end effector 4 but the robot 1. Even in this case, the path generation unit 315 can reduce the processing load for generating the second movement path MR#12, compared to a case where the second movement path MR#12 is newly generated from scratch without using the first movement path MR#11. Furthermore, the path generation unit 315 can reduce the time required to generate the second movement path MRr#12, compared to a case where the second movement path MRr#12 is newly generated from scratch without using the first movement path MR#11

### (5-2-2) Second Modified Example of Path Generation Processing

As described above, the control apparatus 3 generates the movement path MRr of the tool center point TCP that moves by the rough movement operation by using the path generation unit 315 to perform the path generation processing illustrated in FIG. 19 at the step S25 in FIG. 6. Especially, the control apparatus 3 generates the movement path MRr by using the end effector model EM, the robot model RM, and the surrounding object model SM so that the interference of at least one of the end effector model EM, the robot model RM, and the surrounding object model SM does not occur. Namely, the control apparatus 3 generates the movement path MRr so that the interference of at least one of the end effector 4, the robot 1, and the surrounding object does not occur assuming that the robot 1 is actually driven.

On the other hand, as described above, the control apparatus 3 generates the movement path MRf of the tool center point TCP that moves by the fine movement operation by using the robot control unit 316 at the step S34 in FIG. 6. Especially, as described above, even in a case where the movement path MRf is generated, the control apparatus 3 generates the movement path MRf so that the interference of at least one of the end effector 4, the robot 1, and the surrounding object does not occur, in the same manner as in a case where the movement path MRr is generated. Specifically, as described above, the control apparatus 3 generates the movement path MRf by using the end effector model EM, the robot model RM, and the surrounding object model SM so that interference of at least one of the end effector model EM, the robot model RM, and the surrounding object model SM does not occur.

Note that the tool center point TCP moves along the movement path MRr from the waiting position PW to the fine approach position PF, and then moves along the movement path MRf from the fine approach position PF to the process target position PTP in a case where the tool center point TCP moves from the waiting position PW to the process target position PTP. Therefore, each of the movement paths MRr and MRf may be regarded as a part of the movement path from the waiting position PW to the process target position PTP. Each of the movement paths MRr and MRf may be regarded as a part of the entire movement path that the end effector 4 should move to perform the predetermined process on the object OBJ (for example, the workpiece W). The movement path MRr may be regarded as a movement path that is farther from the object OBJ than the movement path MRf is. The movement path MRr may be regarded as a movement path that is farther from the process target position PTP than the movement path MRf is. It may be regarded as a movement path that is farther from the object OBJ than the movement path MRf is. The movement path MRf may be regarded as a movement path that is closer to the process target position PTP than the movement path MRr is.

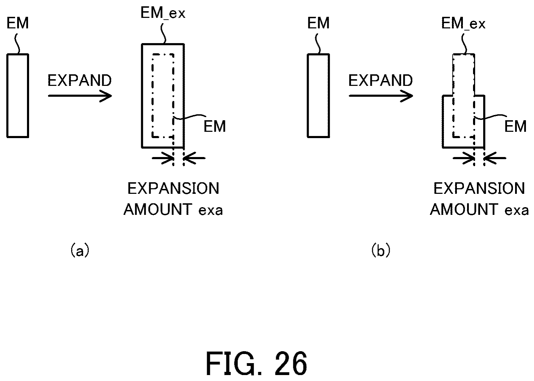

In a second modified example, the control apparatus 3 may use an expansion end effector model EM_ex instead of the end effector model EM to generate the movement paths MRr and MRf. The expansion end effector model EM_ex is a three-dimensional model that is obtained by expanding (in other words, enlarging) the end effector model EM. For example, as illustrated in FIG. 26(a), the expansion end effector model EM_ex may be a three-dimensional model that is obtained by expanding the entire end effector model EM. For example, as illustrated in FIG. 26(b), the expansion end effector model EM_ex may be a three-dimensional model that is obtained by expanding a part of the end effector model EM. Namely, the expansion end effector model EM_ex may be a three-dimensional model that is obtained by expanding at least a part of the end effector model EM. Note that each of the end effector model EM and the expansion end effector model EM_ex may be regarded as a three-dimensional model based on the three-dimensional model of the end effector 4.

The expansion of the end effector model EM may mean an increase of a volume of at least a part of the end effector model EM. In this case, the expansion end effector model EM_ex may be regarded as a three-dimensional model that is obtained by increasing the volume of at least a part of the end effector model EM. Note that the three-dimensional model that is obtained by increasing the volume of at least a part of the end effector model EM may be considered to be equivalent to a three-dimensional model of the end effector 4 whose volume has been increased at least partially.

Note that the volume of the end effector model EM may literally mean the volume of the end effector model EM whose interior is filled in a case where the end effector model EM is a solid model that is a three-dimensional model representing the end effector 4 as an object whose interior is filled. On the other hand, in a case where the end effector model EM is a surface model that is a three-dimensional model representing the end effector 4 by using surfaces corresponding to at least a part of the surface of the end effector 4, the volume of the end effector model EM may mean a volume of a space surrounded by the surfaces represented by the end effector model EM. In this case, "moving each part of the surface along a desired expansion direction" as described in the next paragraph may be considered to be equivalent to increasing the volume of the end effector model EM that is the surface model.

The expansion of the end effector model EM may mean moving each part of the surface of the end effector model EM along the desired expansion direction. For example, the expansion of the end effector model EM may mean moving each part of the surface of the end effector model EM along a normal line of the surface of the end effector model EM at each part. In this case, the expansion end effector model EM_ex may mean a three-dimensional model defined by using each moved part.

The expansion of the end effector model EM may mean moving each part of the surface of the end effector model EM by a desired expansion amount exa. In this case, the expansion end effector model EM_ex may mean a three-dimensional model defined by using each moved part. The expansion amount exa may be a fixed value. The expansion amount exa may be a variable value that is changeable.

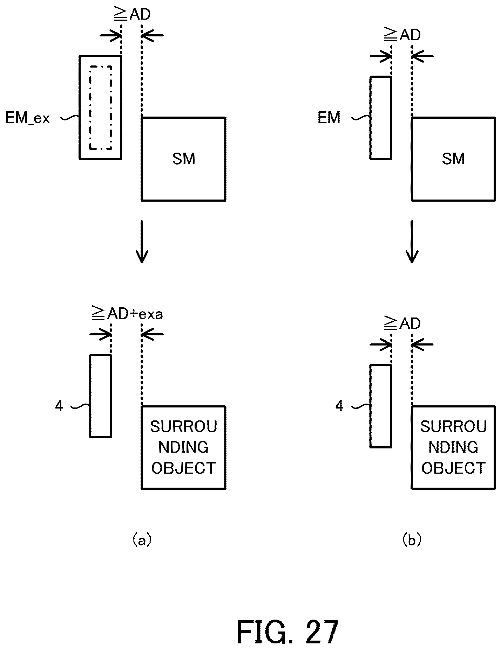

In a case where the expansion end effector model EM_ex is used, the control apparatus 3 may generate each of the movement paths MRr and MRf satisfying a condition that the interference of at least one of the expansion end effector model EM_ex, the robot model RM, and the surrounding object model SM does not occur. In this case, the control apparatus 3 can more properly prevent the occurrence of the interference (especially, an actual contact) of the end effector 4 in a period during which the robot 1 actually moves, compared to a case where the expansion end effector model EM_ex is not used. Specifically, as illustrated in an upper part in FIG. 27(a), in a case where the expansion end effector model EM_ex is used, the control apparatus 3 may generate each of the movement paths MRr and MRf so that a distance between the expansion end effector model EM_ex and each of the robot model RM and the surrounding object model SM is longer than the predetermined allowable distance AD2. As a result, as illustrated in a lower part in FIG. 27(a), the end effector 4 moves in the period during which the robot 1 actually moves so that the distance between the end effector 4 and each of the robot 1 and the surrounding object is longer than a total sum of the predetermined allowable distance AD1 and the expansion amount exa. On the other hand, as illustrated in an upper part in FIG. 27(b), the control apparatus 3 may generate each of the movement paths MRr and MRf so that the distance between the end effector model EM and each of the robot model RM and the surrounding object model SM is longer than the predetermined allowable distance AD2, compared to a case where the expansion end effector model EM_ex is not used. As a result, as illustrated in a lower part in FIG. 27(b), the end effector 4 moves in the period during which the robot 1 actually moves so that the distance between the end effector 4 and each of the robot 1 and the surrounding object is longer than the predetermined allowable distance AD1. In this way, in a case where the expansion end effector model EM_ex is used, the distance between the robot 1 and the end effector 4 and each of the surrounding object is expected to be extended by the expansion amount exa in the period during which the robot 1 actually moves, compared to a case where the end effector model EM is used. Therefore, in a case where the expansion end effector model EM_ex is used, the control apparatus 3 can prevent the occurrence of the interference of the end effector 4 more properly, compared to a case where the expansion end effector model EM_ex is not used. Namely, the control apparatus 3 can prevent the occurrence of the interference between end effector 4 and each of the robot 1 and the surrounding object more properly.

Especially, in a case where an actual position of the surrounding object is different from the position of the surrounding object estimated by the control apparatus 3, the control apparatus 3 can reduce the possibility of the interference (especially, the actual contact) between the surrounding object and the end effector 4. Specifically, as described above, the control apparatus 3 positions the surrounding object model SM at the position corresponding to the actual position of the surrounding object (in this case, the position estimated by the control apparatus 3 as the actual position of the surrounding object) in the virtual space, and then generates each of the movement paths MRr and MRf satisfying the condition that the interference of at least one of the end effector model EM, the robot model RM, and the surrounding object model SM does not occur. However, in a case where the surrounding object is positioned at a position that is different from the position of the surrounding object estimated by the control apparatus 3 (namely, the actual position of the surrounding object is different from the position estimated by the control apparatus 3), there is a possibility that the surrounding object model SM is positioned at a position that is different from the position corresponding to the actual position of the surrounding object in the virtual space. As a result, in a case where the expansion end effector model EM_ex is not used, there is a possibility that the interference of at least one of the end effector 4, the robot 1, and the surrounding object occurs by actually moving the end effector 4 in accordance with each of the generated movement paths MRr and MRf even in a case where each of the movement paths MRr and MRf is generated so as to satisfy the condition that the interference of at least one of the end effector model EM, the robot model RM, and the surrounding object model SM does not occur. However, in a case where the expansion end effector model EM_ex is used, the distance between the end effector 4 and the surrounding object is longer, compared to a case where the expansion end effector model EM_ex is not used. Therefore, even in a case where the actual position of the surrounding object is different from the position of the surrounding object estimated by the control apparatus 3, it is less likely that the interference of at least one of the end effector 4, the robot 1, and the surrounding object occurs.

The expansion amount exa may be set by the user. In this case, the control apparatus 3 may control the display apparatus 35 to display a display screen that is operable by the user to set the expansion amount exa. For example, the control apparatus 3 may control the display apparatus 35 to display the path generation screen 3550 including a display object that is operable by the user to set the expansion amount exa. In this case, the user may input an instruction for setting the expansion amount exa to the control apparatus 3 by using the input apparatus 34 through the display screen (for example, the path generation screen 3550) displayed on the display apparatus 35.

The expansion amount exa may be set by the control apparatus 3 (for example, at least one of the path generation unit 315 and the robot control unit 316). For example, the control apparatus 3 may set the expansion amount exa, which can prevent the occurrence of the interference between the end effector 4 and surrounding object, based on a characteristic (for example, at least one of a size and a shape) of the surrounding object that may interfere with the end effector 4. For example, the control apparatus 3 may set the expansion amount exa, which can prevent the occurrence of the interference between the end effector 4 and surrounding object, based on a characteristic (for example, at least one of a size and a shape) of the surrounding object model SM that may interfere with the end effector model EM. For example, the control apparatus 3 may set the expansion amount exa, which can prevent the occurrence of interference between the end effector 4 and the robot 1, based on a characteristic (for example, at least one of a size and a shape) of the robot 1 that may interfere with the end effector 4. For example, the control apparatus 3 may set the expansion amount exa, which can prevent interference between the end effector 4 and the robot 1, based on a characteristic (for example, at least one of a size and a shape) of the robot model RM that may interfere with the end effector 4.

Especially in the second modified example, the expansion amount exa that is used to generate the movement path MRr is different from the expansion amount exa that is used to generate the movement path MRf. Namely, the control apparatus 3 may use a first expansion amount exa1 as the expansion amount exa that is used to generate the movement path MRr, and use a second expansion amount exa2, which is different from the first expansion amount exa1, as the expansion amount exa that is used to generate the movement path MRf. However, the expansion amount exa that is used to generate the movement path MRr may be the same as the expansion amount exa that is used to generate the movement path MRf. Namely, the control apparatus 3 may use the first expansion amount exa1 as the expansion amount exa that is used to generate the movement path MRr, and may use the second expansion amount exa2, which is the same as the first expansion amount exa1, as the expansion amount exa that is used to generate the movement path MRf.

The expansion amount exa that is used to generate the movement path MRr may be larger than the expansion amount exa that is used to generate the movement path MRf. The expansion amount exa that is used to generate the movement path MRf may be smaller than the expansion amount exa that is used to generate the movement path MRr. Namely, the control apparatus 3 may use the first expansion amount exa1, which is larger than the second expansion amount exa2, as the expansion amount exa that is used to generate the movement path MRr, and use the second expansion amount exa2, which is less than the first expansion amount exa1, as the expansion amount exa that is used to generate the movement path MRf.

As one example, in a case where the end effector 4 performs the holding process for holding the workpiece W (see FIG. 3(a) to FIG. 3(d)), the control apparatus 3 may use the first expansion amount exa1, which is larger than the second expansion amount exa2 described below, to generate the movement path MRr for moving the end effector 4 closer to the container box CB in which the workpiece W is contained. On the other hand, the control apparatus 3 may use the second expansion amount exa2, which is smaller than the first expansion amount exa1 described above, to generate the movement path MRf for moving the end effector 4 closer to the workpiece W so as to actually hold the workpiece W.

As another example, in a case where the end effector 4 performs the releasing process for releasing the workpiece W on the pallet PLT (see FIG. 4(a) to FIG. 4(d)), the control apparatus 3 may use the relatively large first expansion amount exa1 to generate the movement path MRr for moving the end effector 4 closer to the pallet PLT on which the workpiece W should be positioned (released) to a certain distance. On the other hand, the control apparatus 3 may use the relatively small second expansion amount exa2 to generate the movement path MRf for moving the end effector 4 closer to a vicinity of the pallet PLT more so as to actually position the workpiece W.

As another example, in a case where the end effector 4 performs the embedding process for embedding (in other words, assembling) a first workpiece W into a second workpiece W, the control apparatus 3 may use the relatively large first expansion amount exa1 to generate the movement path MRr for moving the end effector 4 closer to the second workpiece W to a certain distance into which the first workpiece W should be embedded. On the other hand, the control apparatus 3 may use the relatively small second expansion amount exa2 to generate the movement path MRf for moving the end effector 4 closer to a vicinity of the second workpiece W more so as to actually embed the first workpiece W into the second workpiece W.

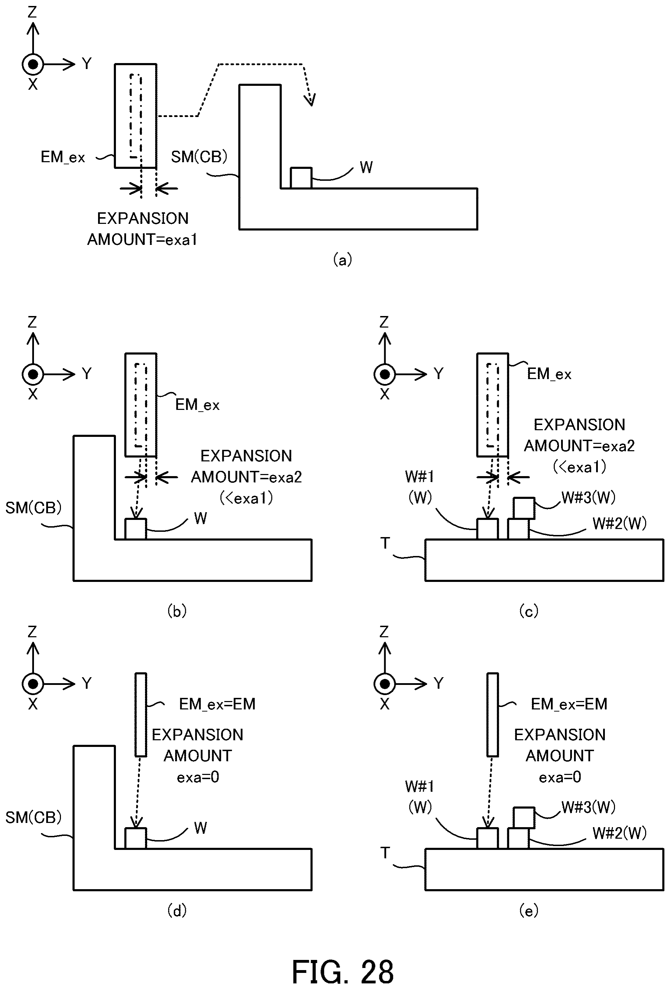

In this case, since the first expansion amount exa1 is larger than the second expansion amount exa2, the control apparatus 3 generates the movement path MRr by using the expansion end effector model EM_ex whose expansion amount exa is large, as illustrated in FIG. 28(a). As a result, in a case where the movement path MRr is generated based on the expansion end effector model EM_ex, a distance between the end effector model EM and at least one of the robot model RM and the surrounding object model SM increases by the expansion amount exa, compared to a case where the movement path MRr is generated based on the normal end effector model EM. As a result, in a case where the tool center point TCP moves along the movement path MRr generated based on the expansion end effector model EM_ex, the distance between the end effector 4 and at least one of the robot 1 and the surrounding object increases by an amount corresponding to the expansion amount exa, compared to a case where the tool center point TCP moves along the movement path MRr generated based on the normal end effector model EM. Namely, in a case where the tool center point TCP moves along the movement path MRr generated based on the expansion end effector model EM_ex, the end effector 4 moves at a position that is farther from at least one of the robot 1 and the surrounding object, compared to a case where the tool center point TCP moves along the movement path MRr generated based on the normal end effector model EM. Therefore, the control apparatus 3 can properly prevent the occurrence of the interference of the end effector 4 moving along the movement path MRr.

Conversely, it can be said that the control apparatus 3 generates the movement path MRr by using the expansion end effector model EM_ex whose expansion amount exa is large in order to preferentially prevent the occurrence of the interference of the end effector 4 moving along the movement path MRr in a case where the movement path MRr is generated,. As one example, FIG. 28(a) illustrates an example in which the movement path MRr is a movement path from an outside of the container box CB to an inside of the container box CB. In this case, the control apparatus 3 may generate the movement path MRr by using the expansion end effector model EM_ex whose expansion amount exa is larger in order to preferentially prevent the occurrence of the interference between the container box CB and the end effector 4 moving in accordance with the movement path MRr. For example, as illustrated in FIG. 28(a), in a case where the movement path MRr is a movement path that crosses a side wall of the container box CB, the control apparatus 3 may generate the movement path MRr by using the expansion end effector model EM_ex whose expansion amount exa is large in order to preferentially prevent the occurrence of the interference between the side wall of the container box CB and the end effector 4 moving in accordance with the movement path MRr. For example, as illustrated in FIG. 28(a), in a case where the movement path MRr is a movement path that crosses over the side wall of the container box CB, the control apparatus 3 may generate the movement path MRr by using the expansion end effector model EM_ex whose expansion amount exa is larger in order to preferentially prevent the occurrence of the interference between the side wall of the container box CB the end effector 4 moving in accordance with the movement path MRr. For example, as illustrated in FIG. 28(a), in a case where the movement path MRr is a movement path from a space adjacent to the side wall of the container box CB outside the container box CB to a space adjacent to the side wall of the container box CB inside the container box CB through a space above the side wall of the container box CB, the control apparatus 3 may generate the movement path MRr by using the expansion end effector model EM_ex whose expansion amount exa is larger in order to preferentially prevent the occurrence of the interference between the side wall of the container box CB the end effector 4 moving in accordance with the movement path MRr.

On the other hand, since the second expansion amount exa2 is smaller than the first expansion amount exa1, the control apparatus 3 generates the movement path MRf by using the expansion end effector model EM_ex whose expansion amount exa is small as illustrated in FIG. 28(b). Here, as illustrated in FIG. 28(b), the movement path MRf is a movement path for moving the tool center point TCP to the process target position PTP at which the end effector 4 performs the predetermined process on the object OBJ. Therefore, it is likely that the surrounding object is positioned near the end effector 4 in a period during which the end effector 4 moves in accordance with the movement path MRf. In this case, depending on the expansion amount exa, there is a possibility that the control apparatus 3 cannot generate the movement path MRf satisfying the condition that the interference of at least one of the expansion end effector model EM_ex, the robot model RM, and the surrounding object model SM does not occur. For example, as illustrated in FIG. 28(b), in a case where the movement path MRf for performing the holding process in which the end effector 4 holds the workpiece W positioned at a corner of the container box CB that is one example of the surrounding object, there is a possibility that the control apparatus 3 cannot generate the movement path MRf satisfying the condition that the distance between the expansion end effector model EM_ex and the surrounding object model SM, which is a three-dimensional model of the container box CB, is longer than the predetermined allowable distance AD2. For example, as illustrated in FIG. 28(c), in a situation where the plurality of workpieces W are placed (especially, irregularly placed) on the placing apparatus T as described above, one workpiece W (for example, each of a second workpiece W#2 and a third workpiece W#3) of a plurality of workpieces W on which the end effector 4 does not perform the holding process may be regarded as the surrounding object in a case where the end effector 4 performs the holding process for holding one workpiece W (for example, a first workpiece W#1) of the plurality of workpieces W, as described above. In this case, in a case where the movement path MRf for performing the holding process for holding the first workpiece W#1 by the end effector 4, there is a possibility that the control apparatus 3 cannot generate the movement path MRf satisfying the condition that the distance between the expansion end effector model EM_ex and two surrounding object models SM, which are respectively the three-dimensional models of the second workpiece W#2 and the third workpiece W#3 that are regarded as the surrounding objects, is longer than the predetermined allowable distance AD2. As a result, there is a possibility that the end effector 4 cannot perform the predetermined process on the object OBJ. Therefore, in a case where the movement path MRf is generated, the second expansion amount exa2 that is smaller than the first expansion amount exa1 is used in order to prevent the occurrence of the interference of the end effector 4 and to ensure an opportunity that the movement path MRf can be generated. It is more likely that it is determined that the distance between the expansion end effector model EM_ex and the surrounding object model SM is longer than the predetermined allowable distance AD2 as the expansion amount exp is smaller. Therefore, the control apparatus 3 can properly ensure the opportunity that the movement path MRf, which satisfies the condition that the interference of the expansion end effector model EM_ex does not occur, can be generated.

As illustrated in FIG. 28(d) and FIG. 28(e), the second expansion amount exa2 may be zero. In this case, the end effector model EM is used as the expansion end effector model EM_ex, and therefore, the control apparatus 3 can ensure, to the maximum possible extent, the opportunity that the movement path MRf, which satisfies the condition that the interference of the expansion end effector model EM_ex does not occur, can be generated. On the other hand, even in a case where the second expansion amount exa2 is zero, the fact remains that the distance between the end effector model EM and the surrounding object model SM is longer than the predetermined allowable distance AD2 in a case where the condition that the interference of the expansion end effector model EM_ex does not occur is satisfied. Therefore, the control apparatus 3 can properly generate the movement path MRf that can properly prevent the occurrence of the interference of the end effector 4.

Note that the control apparatus 3 may change the allowable distance AD2, which is used as a threshold value, in addition to or instead of changing the expansion amount exa. Specifically, the control apparatus 3 may change the allowable distance AD2 so that the allowable distance AD2 that is used to generate the movement path MRr is different from the allowable distance AD2 that is used to generate the movement path MRf. As one example, the control apparatus 3 may change the allowable distance AD2 so that the allowable distance AD2 that is used to generate the movement path MRr is larger than the allowable distance AD2 that is used to generate the movement path MRf. Namely, the control apparatus 3 may change the allowable distance AD2 so that the allowable distance AD2 that is used to generate the movement path MRf is smaller than the allowable distance AD2 that is used to generate the movement path MRr. As a result, an effect, which is the same as an effect achievable in a case where the expansion amount exa is changed, is achievable.

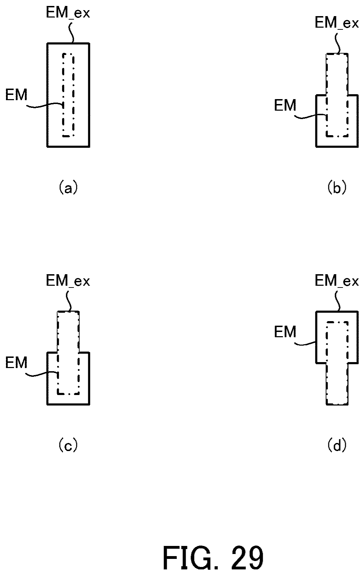

A part of the end effector model EM that is expanded to generate the movement path MRr may be different from a part of the end effector model EM that is expanded to generate the movement path MRf. For example, the control apparatus 3 may use the expansion end effector model EM_ex obtained by expanding the entire end effector model EM in order to generate one of the movement paths MRr and MRf as illustrated in FIG. 29(a), and use the expansion end effector model EM_ex obtained by expanding a part of the end effector model EM in order to generate the other one of the movement paths MRr and MRf as illustrated in FIG. 29(b). For example, the control apparatus 3 may use the expansion end effector model EM_ex obtained by expanding a first model part of the end effector model EM in order to generate one of the movement paths MRr and MRf as illustrated in FIG. 29(c), and use the expansion end effector model EM_ex obtained by expanding a second model part, which is different from the first model part, of the end effector model EM in order to generate the other one of the movement paths MRr and MRf as illustrated in FIG. 29(d).

In this way, in the second modified example, the control apparatus 3 may change the path generation conditions, which is used to generate a part of the entire movement path along which the tool center point TCP should move in a case where the end effector 4 performs the predetermined process on the workpiece W, for each of a plurality of movement paths acquired by dividing the entire movement path. Namely, the control apparatus 3 may change the path generation conditions as necessary in a case where the entire movement path defined by a single recipe file 321 is generated. For example, the control apparatus 3 may change the path generation conditions so that the path generation condition that is used to generate the movement path MRr is different from the path generation condition that is used to generate the movement path MRf. Note that each of the plurality of movement paths acquired by dividing the entire movement path may be referred to as a partial movement path. As one example, each of the movement paths MRr and MRf may be referred to as the partial movement path. In this case, the control apparatus 3 can flexibly generate the movement path that is optimal for each position of the entire movement path, compared to a case where the path generation condition is not changeable in a case where the entire movement path is generated.

At least one of the expansion amount exa and a part of the end effector model EM that should be expanded described above is one example of the path generation condition. However, the path generation condition may include a condition that is different from at least one of the expansion amount exa and a part of the end effector model EM that should be expanded described above. For example, the path generation condition may include the position of the robot model RM in the virtual space. For example, the path generation condition may include the pose of the robot model RM in the virtual space. For example, the path generation condition may include the position of the surrounding object model SM in the virtual space. For example, the path generation condition may include the pose of the surrounding object model SM in the virtual space. For example, the path generation condition may include an initial position of the end effector model EM in the virtual space. For example, the path generation condition may include an initial pose of the end effector model EM in the virtual space. For example, the path generation condition may include the movement start point MS. For example, the path generation condition may include the movement end point ME. For example, the path generation condition may include the movement waypoint MI. Incidentally, in a case where a first type of path generation condition for a first partial movement path of the entire movement path is the same as the same first type of path generation condition for a second partial movement path of the entire movement path, the first type of path generation condition may be regarded as the path generation condition for the entire movement path.

Note that the control apparatus 3 uses the expansion end effector model EM_ex generated by expanding the end effector model EM to generate each of the movement paths MRr and MRf in the above-described description. However, the control apparatus 3 may use an expansion robot model generated by expanding the robot model RM in addition to or instead of the expansion end effector model EM_ex to generate each of the movement paths MRr and MRf. Note that a processing for expanding the robot model RM may be the same as a processing for expanding the end effector model EM. As one example, the expansion amount exa of the expansion robot model that is used to generate the movement path MRr may be different from the expansion amount exa of the expansion robot model that is used to generate the movement path MRf. The expansion amount exa of the expansion robot model that is used to generate the movement path MRr may be larger than the expansion amount exa of the expansion robot model that is used to generate the movement path MRf. A part of the robot model RM that is expanded to generate the movement path MRr may be different from a part of the robot model RM that is expanded to generate the movement path MRf. As a result, an effect, which is the same as an effect achieved in a case where the expansion end effector model EM_ex is used, is achievable even in a case where the expansion robot model is used. Note that each of the robot model RM and the expansion robot model may be regarded as a three-dimensional model based on a three-dimensional model of the robot 1.

Moreover, the control apparatus 3 may use an expansion surrounding object model generated by expanding the surrounding object model SM in addition to or instead of at least one of the expansion end effector model EM_ex and the expansion robot model to generate each of the movement paths MRr and MRf. Note that a processing for expanding the surrounding object model SM may be the same as a processing for expanding the end effector model EM. As one example, the expansion amount exa of the expansion surrounding object model that is used to generate the movement path MRr may be different from the expansion amount exa of the expansion surrounding object model that is used to generate the movement path MRf. The expansion amount exa of the expansion surrounding object model that is used to generate the movement path MRr may be larger than the expansion amount exa of the expansion surrounding object model that is used to generate the movement path MRf. A part of the surrounding object model SM that is expanded to generate the movement path MRr may be different from a part of the surrounding object model SM that is expanded to generate the movement path MRf. As a result, an effect, which is the same as an effect achieved in a case where the expansion end effector model EM_ex is used, is achievable even in a case where the expansion surrounding object model is used. Note that each of the surrounding object model SM and the expansion surrounding object model may be regarded as a three-dimensional model based on a three-dimensional model of the surrounding object.

Moreover, in the above-described description, the control apparatus 3 uses the expansion end effector model EM_ex that is generated by expanding the end effector model EM. Here, expanding the end effector model EM may be considered to be one example of changing the end effector model EM. Therefore, the control apparatus 3 may use a changed end effector model that is generated by changing the end effector model EM in addition to or instead of the expansion end effector model EM_ex. For example, the control apparatus 3 may use the changed end effector model that is generated by changing the size of the end effector model EM. For example, the control apparatus 3 may use the changed end effector model that is generated by changing the shape of the end effector model EM.

For the same reason, expanding the robot model RM may be considered to be one example of changing generated by changing the robot model RM. Therefore, the control apparatus 3 may use a changed robot model that is generated by changing the robot model RM in addition to or instead of the expansion robot model. For example, the control apparatus 3 may use the changed robot model that is generated by changing the size of the robot model RM. For example, the control apparatus 3 may use the changed robot model that is generated by changing the shape of the robot model RM.

For the same reason, expanding the surrounding object model SM may be considered to be one example of changing generated by changing the surrounding object model SM. Therefore, the control apparatus 3 may use a changed surrounding object model that is generated by changing the surrounding object model SM in addition to or instead of the expansion surrounding object model. For example, the control apparatus 3 may use the changed surrounding object model that is generated by changing the size of the surrounding object model SM. For example, the control apparatus 3 may use the changed surrounding object model that is generated by changing the shape of the surrounding object model SM.

In the above-described description, the control apparatus 3 generates the two movement paths MRr and MRf as at least a part of the entire movement path along which the tool center point TCP should move in a case where the end effector 4 performs the predetermined process on the workpiece W. Namely, the control apparatus 3 divides the entire movement path, along which the tool center point TCP should move in a case where the end effector 4 performs the predetermined process on the workpiece W, into the two movement paths (specifically, the movement paths MRr and MRf) and generates the two movement paths. However, the control apparatus 3 may divide the entire movement path, along which the tool center point TCP should move in a case where the end effector 4 performs the predetermined process on the workpiece W, into three or more movement paths (specifically, the movement paths MRr and MRf) and generates the three or more movement paths. For example, the control apparatus 3 may divide the movement path MRr into two or more movement paths and generate the two or more movement paths and the movement path MRf. For example, the control apparatus 3 may divide the movement path MRf into two or more movement paths and generate the two or more movement paths MRf and the movement path MRr. For example, the control apparatus 3 may divide the entire transfer movement path, along which the tool center point TCP should move in a case where the end effector 4 performs the predetermined process on the workpiece W, into three movement path including: a movement path from the waiting position PW to a first approach position that is closer to the object OBJ than the waiting position PW is; a movement path from the first approach position to a second approach position that is closer to the object OBJ than the first approach position is; and a movement path from the second approach position to the process target position PTP that is closer to the object OBJ than the second approach position, and generate the three movement paths and the movement path MRf.

The control apparatus 3 may divide the entire movement path, along which the tool center point TCP should move in a case where the end effector 4 performs the predetermined process on the workpiece W, into three or more movement paths and generate the three or more movement paths, not only in a case where the second modified example of the path generation processing is performed, but also in a case where any movement path of the tool center point TCP is generated.

Moreover, in the above-described description, the control apparatus 3 generates the movement path MRr of the tool center point TCP that moves by the rough movement operation by using the path generation unit 315 to perform the path generation processing illustrated in FIG. 19 at the step S25 in FIG. 6. However, the control apparatus 3 may generate the movement path MRr by using a method that is different from a method of performing the path generation processing illustrated in FIG. 19. For example, the control apparatus 3 may generate the movement path MRr by using a method based on a teaching using a teaching pendant. For example, the control apparatus 3 may generate the movement path MRr by using a method based on a direct teaching. For example, the control apparatus 3 may generate the movement path MRr by using a method based on image data acquired from an imaging apparatus that images the robot 1 from a position at which the robot 1 can be viewed from above.

The control apparatus 3 may generate the movement path MRr by using a method that is different from a method of performing the path generation processing illustrated in FIG. 19, not only in a case where the second modified example of the path generation processing is performed, but also in a case where any movement path of the tool center point TCP is generated.

### (5-2-3) Third Modified Example of Path Generation Processing

### (5-2-3-1) Base of Third Modified Example of Path Generation Processing

**In** the above-described description, the path generation unit 315 performs the path generation processing illustrated in FIG. 19 before the robot 1 actually starts moving by performing the processing from the step S31 to the step S37 in FIG. 6. Namely, the path generation unit 315 generates the entire movement path MRr before the robot 1 actually starts moving by performing the processing from the step S31 to the step S37 in FIG. 6.

On the other hand, in a third modified example, the path generation unit 315 may generate a part of the movement path MRr in advance by performing at least a part of the path generation processing illustrated in FIG. 19 (for example, the processing of the step S252) at the step S25 in FIG. 6 before the robot 1 actually starts moving by performing the processing from the step S31 to the step S37 in FIG. 6. Then, after the robot 1 starts moving in accordance with the generated part of the movement path MRr by performing the processing of the step S31 in FIG. 6, the path generation unit 315 may generate another part of the movement path MRr by performing at least a part of the path generation processing illustrated in FIG. 19 (for example, the processing of the step S252). After the robot 1 actually starts moving along the generated part of the movement path MRr, not the path generation unit 315 but the robot control unit 316 may perform at least a part of the path generation processing illustrated in FIG. 19 to generate another part of the movement path MRr.

As one example, as described above, the robot 1 moves a first tool center point TCP along the movement path MRr from the pre-waiting position PW_pre to the fine approach position PF, then moves the tool center point TCP along the movement path MRf from the first fine approach position PF to the process target position PTP, then the end effector 4 performs the predetermined process at the process target position PTP, then moves the tool center point TCP along the movement path MRf from the process target position PTP to the second fine approach position PF, which is the same as or different from the first fine approach position PF, and then moves along the movement path MRr from the second fine approach position PF to the post-waiting position PW_post. In this case, the path generation unit 315 may generate in advance the movement path MRr from the pre-waiting position PW_pre to the first fine approach position PF by performing at least a part of the path generation processing illustrated in FIG. 19 at the step S25 in FIG. 6 before the robot 1 actually starts moving by performing the processing from the step S31 to the step S37 in FIG. 6. On the other hand, the path generation unit 315 may not generate in advance the movement path MRr from the second fine approach position PF to the post-waiting position PW_post before the robot 1 actually starts moving so that the tool center point TCP moves along the movement path MRr from the pre-waiting position PW_pre to the first fine approach position PF. Then, after the robot 1 starts moving so that the tool center point TCP moves along the movement path MRr from the pre-waiting position PW_pre to the first fine approach position PF by performing the processing of the step S31 in FIG. 6, the path generation unit 315 may generate the movement path MRr from the second fine approach position PF to the post-waiting position PW_post by performing at least a part of the path generation processing illustrated in FIG. 19. For example, the path generation unit 315 may generate the movement path MRr from the second fine approach position PF to the post-waiting position PW_post in a period during which the robot 1 moves so that the tool center point TCP moves along the movement path MRr from the pre-waiting position PW_pre to the first fine approach position PF. For example, the path generation unit 315 may generate the movement path MRr from the second fine approach position PF to the post-processing waiting position PW_post in a period during which the robot control unit 316 generates the movement path MRf from the first fine approach position PF to the process target position PTP. For example, the path generation unit 315 may generate the movement path MRr from the second fine approach position PF to the post-operation waiting position PW_post in a period during which the robot 1 moves so that the tool center point TCP moves along the movement path MRf from the first fine approach position PF to the process target position PTP.

In a case where a part of the movement path MRr is generated after the robot 1 actually starts moving, the path generation unit 315 (alternatively, the robot control unit 316, the same applies in the third modified example) may acquire at least one of the image data IMG_2D and IMG_3D from the imaging apparatus 2, calculate at least one of the position and the pose of the surrounding object based on at least one of the image data IMG_2D and IMG_3D, and generate a part of the movement path MRr based on not only the end effector model EM, the robot model RM, the surrounding object model SM, but also at least one of the position and the pose of the surrounding object. Specifically, at least one of the cameras 21 and 22 may image the surrounding object. In this case, since the robot 1 has started moving, at least one of the cameras 21 and 22, which moves due to the movement of the robot 1, may image the surrounding object. As a result, at least one of the image data IMG_2D and IMG_3D indicates the image in which the surrounding object is captured. Therefore, the path generation unit 315 can calculate at least one of the position and the pose of the surrounding object based on at least one of image data IMG_2D and IMG_3D. Note that a processing for calculating at least one of the position and the pose of the surrounding object based on at least one of the image data IMG_2D and IMG_3D may be the same as a processing for calculating at least one of the position and the pose of the object OBJ based on at least one of the image data IMG_2D and IMG_3D, so a detailed description thereof is omitted. Then, the path generation unit 315 may set at least one the position and the pose of the surrounding object model SM in the predetermined virtual space based on a calculated result of at least one of the position and the pose of the surrounding object. As one example, the path generation unit 315 may set at least one of the position and the pose of the surrounding object model SM in the predetermined virtual space by adjusting at least one of the position and the pose of the surrounding object model SM in the predetermined virtual space based on the calculated result of at least one of the position and the pose of the surrounding object. As a result, at least one of the position and the pose of the surrounding object model SM in the predetermined virtual space is close to at least one of the actual position and the actual pose of the surrounding object. Ideally, at least one of the position and the pose of the surrounding object model SM in the predetermined virtual space may be the same as at least one of the actual position and the actual pose of the surrounding object. Then, the path generation unit 315 may generate a part of the movement path MRr based on the end effector model EM, the robot model RM, and the surrounding object model SM at least one of the position and the pose of which has been adjusted based on the calculated result of at least one of the position and the pose of the surrounding object. As a result, at least one of the actual position and the actual pose of the surrounding object is reflected in the surrounding object model SM, and therefore, the path generation unit 315 can properly generate the movement path MRr satisfying the condition that the interference of at least one of the end effector 4, the robot 1, and the surrounding object does not occur.

In a case where a part of the movement path MRr is generated after the robot 1 actually starts moving, the path generation unit 315 may acquire the image data IMG_3D from the imaging apparatus 2 and generate a point cloud model (alternatively, another type of three-dimensional model such as a polygon model, a mesh model, a solid model, or the like, the same applies in the third modified example of the path generation processing) of the surrounding object based on the image data IMG_3D. For example, the path generation unit 315 may generate the three-dimensional position data WSD described above based on the image data IMG_3D, and generate the point cloud model of the surrounding object based on the three-dimensional position data WSD. Incidentally, in a case where other object different from the surrounding object is captured in the image indicated by the image data IMG_3D, the path generation unit 315 may perform, on the image data IMG_3D, a cropping processing for extracting an image part including the surrounding object from the image indicated by the image data IMG_3D, and generate the point cloud model of the surrounding object based on the image data IMG_3D on which the cropping processing has been performed. In this case, the path generation unit 315 may use the generated point cloud model of the surrounding object as the surrounding object model SM. Namely, the path generation unit 315 may use the three-dimensional model based on the three-dimensional position data WSD as the surrounding object model SM. In this case, the path generation unit 315 may position the surrounding object model SM, which is the point cloud model of surrounding object generated based on the image data IMG_3D, in the predetermined virtual space. Specifically, the point cloud model includes a plurality of points each of which associated with the three-dimensional coordinate in the global coordinate system. The path generation unit 315 may position the surrounding object model SM that is the point cloud model in the virtual space by transforming the three-dimensional coordinate of each of the plurality of points included in the point cloud model to a three-dimensional coordinate in the virtual space, and then positioning each of the plurality of points included in the point cloud model at the position indicated by the three-dimensional coordinate acquired by the transformation in the virtual space. As a result, at least one of the position and the pose of the surrounding object model SM in the predetermined virtual space is close to at least one of the actual position and actual pose of the surrounding object. Ideally, at least one of the position and the pose of the surrounding object model SM in the predetermined virtual space may be the same as at least one of the actual position and actual pose of the surrounding object. Then, the path generation unit 315 may generate a part of the movement path MRr based on the end effector model EM, the robot model RM, and the surrounding object model SM that is the point cloud model of the surrounding object generated based on the image data IMG_3D. As a result, at least one of the actual position and the actual pose of the surrounding object is reflected in the surrounding object model SM, and therefore, the path generation unit 315 can properly generate the movement path MRr satisfying the condition that the interference of at least one of the end effector 4, the robot 1, and the surrounding object does not occur.

Note that the path generation unit 315 may acquire at least one of the image data IMG_2D and IMG_3D from the imaging apparatus 2, calculate at least one of the position and the pose of the surrounding object based on at least one of the image data IMG_2D and IMG_3D, and generate a part of the movement path MRr based on not only the end effector model EM, the robot model RM, the surrounding object model SM, but also at least one of the position and the pose of the surrounding object even in a case where at least a part of the movement path MRr is generated before the robot 1 actually starts moving. robot model RM, and surrounding object model SM, and at least one of the position and the pose of surrounding object. Alternatively, the path generation unit 315 may acquire the image data IMG_3D from the imaging apparatus 2 and generate the point cloud model of the surrounding object based on the image data IMG_3D as the surrounding object model SM, generate a part of the movement path MRr based on the end effector model EM, the robot model RM, and the surrounding object model SM that is the point cloud model of the surrounding object generated based on the image data IMG_3D.

### (5-2-3-2) Application of Third Modified Example of Path Generation Processing For Generating Movement Path MRr to Processing For Generating Movement path MRf

Even in a case where the movement path MRf is generated at the step S34 in FIG. 6, the robot control unit 316 may calculate at least one of the position and the pose of the surrounding object based on at least one of the image data IMG_2D and IMG_3D, as in the case where the movement path MRr is generated described above. Especially, the robot control unit 316 may calculate at least one of the position and the pose of the surrounding object based on at least one of the image data IMG_2D and IMG_3D generated by imaging the surrounding object with at least one of the cameras 21 and 22 that moves due to the movement of the robot 1. Then, the robot control unit 316 may generate the movement path MRf based on not only the end effector model EM, the robot model RM, the surrounding object model SM, and at least one of the position and the pose of the object OBJ, but also at least one of the position and the pose of the surrounding object. Specifically, the robot control unit 316 may determine the process target position PTP with respect to the object OBJ in the global coordinate system based on the calculated result of at least one of the position and the pose of the object OBJ in the global coordinate system and the process position / pose information PAI generated by the process position / pose setting unit 313 described above (namely, the position of the end effector 4 with respect to the object OBJ in the coordinate system different from the global coordinate system when the end effector 4 performs the predetermined process on the object OBJ). Then, the robot control unit 316 may generate the movement path MRf along which the tool center point TCP moves so that the tool center point TCP approaches the process target position PTP. Especially, the robot control unit 316 may generate the movement path MRf satisfying the condition that the interference of at least one of the end effector model EM, the robot model RM, and the surrounding object model SM, at least one of the position and the pose has been adjusted based on the calculated result of at least one of the position and the pose of the surrounding object, does not occur. Even in this case, at least one of the actual position and the actual pose of the surrounding object is reflected in the surrounding object model SM, and therefore, the path generation unit 315 can properly generate the movement path MRf satisfying the condition that the interference of at least one of the end effector 4, the robot 1, and the surrounding object does not occur.

Note that at least one of the position and the pose of the surrounding object in the global coordinate system changes sequentially in a case where the surrounding object moves in a period during which the robot 1 moves so that the tool center point TCP moves along the movement path MRf. In this case, the robot control unit 316 may sequentially calculate at least one of the position and the pose of the surrounding object based on at least one of the image data IMG_2D and IMG_3D. Then, the robot control unit 316 may sequentially generate (in other words, sequentially update) the movement path MRf based on not only the end effector model EM, the robot model RM, and the surrounding object model SM, and at least one of the position and the pose of the object OBJ, but also at least one of the position and the pose of the surrounding object calculated sequentially.

Alternatively, even in a case where the movement path MRf is generated at the step S34 in FIG. 6, the robot control unit 316 may generate the point cloud model of the surrounding object based on the image data IMG_3D, and use the generated point cloud model of the surrounding object as the surrounding object model SM as in a case where the movement path MRr described above is generated. Especially, the robot control unit 316 may generate the point cloud model of the surrounding object based on the image data IMG_3D generated by imaging the surrounding object with the camera 22 moving due to the movement of the robot 1, and use the generated point cloud model of surrounding object as the surrounding object model SM. In this case, the path generation unit 315 may position the surrounding object model SM, which is the point cloud model of the surrounding object generated based on the image data IMG_3D, in the predetermined virtual space. Specifically, the point cloud model includes the plurality of points each of which is associated with the three-dimensional coordinate in the global coordinate system. The path generation unit 315 may position the surrounding object model SM that is the point cloud model in the virtual space by transforming the three-dimensional coordinate of each of the plurality of points included in the point cloud model to the three-dimensional coordinate in the virtual space, and then positioning each of the plurality of points included in the point cloud model at the position indicated by the three-dimensional coordinate acquired by the transformation in the virtual space. Then, the robot control unit 316 may generate the movement path MRf based on the end effector model EM, the robot model RM, the surrounding object model SM that is the point cloud model of the surrounding object generated based on the image data IMG_3D, and based on at least one of the position and the pose of the object OBJ. Specifically, the robot control unit 316 may determine the process target position PTP with respect to the object OBJ in the global coordinate system based on the calculated result of at least one of the position and the pose of the object OBJ in the global coordinate system and the process position / pose information PAI generated by the process position / pose setting unit 313 described above (namely, the position of the end effector 4 with respect to the object OBJ in the coordinate system different from the global coordinate system when the end effector 4 performs the predetermined process on the object OBJ). Then, the robot control unit 316 may generate the movement path MRf along which the tool center point TCP moves so that the tool center point TCP approaches the process target position PTP. Especially, the robot control unit 316 may generate the movement path MRf satisfying the condition that the interference of at least one of the end effector model EM, the robot model RM, and the surrounding object model SM, at least one of the position and the pose has been adjusted based on the calculated result of at least one of the position and the pose of the surrounding object, does not occur. Even in this case, at least one of the actual position and the actual pose of the surrounding object is reflected in the surrounding object model SM, and therefore, the path generation unit 315 can properly generate the movement path MRf satisfying the condition that the interference of at least one of the end effector 4, the robot 1, and the surrounding object does not occur.

Note that at least one of the position and the pose of the surrounding object in the global coordinate system changes sequentially in a case where the surrounding object moves in a period during which the robot 1 moves so that the tool center point TCP moves along the movement path MRf. In this case, the robot control unit 316 may sequentially generate (update) the point cloud model of the surrounding object based on the image data IMG_3D, and sequentially use the sequentially generated point cloud model of the surrounding object as the surrounding object model SM. Then, the robot control unit 316 may sequentially generate (update) the movement path MRf based on the end effector model EM, the robot model RM, and the surrounding object model SM that is the point cloud model of the surrounding object sequentially generated (updated) based on the image data IMG_3D.

Note that the robot control unit 316 may acquire a plurality of image data IMG_3D generated by the imaging apparatus 2 imaging the surrounding object a plurality of times, and generate the point cloud model of the surrounding object based on the plurality of image data IMG_3D in a case where the point cloud model of surrounding object is generated based on image data IMG_3D. Namely, the robot control unit 316 may generate the movement path MRf satisfying the condition that the interference of at least one of the end effector model EM, the robot model RM, and the surrounding object model SM does not occur by using the point cloud model of the surrounding object generated based on the plurality of image data IMG_3D as the surrounding object model SM. Note that an operation for generating the point cloud model of the surrounding object based on the plurality of image data IMG_3D will be described later as a first modified example of the fine movement operation.

Here, it is likely that the end effector 4 moves in the vicinity of the surrounding object in at least a part of a period during which the tool center point TCP moves along the movement path MRf as described above. For example, in a case where the end effector 4 performs the holding process for holding the workpiece W described above, it is likely that the end effector 4 moves in the vicinity of the container box CB in which the workpiece W is contained in at least a part of the period during which the tool center point TCP moves along the movement path MRf. As one example, it is likely that the end effector 4 moves in the vicinity of the inner wall of the container box CB (see FIG. 3(c) described above) that defines a containing space in which the workpiece W is contained. In this case, at least one of the actual position and the actual pose of the surrounding object (for example, the container box CB) is reflected in the surrounding object model SM in the third modified example, and therefore, the robot control unit 316 can properly generate the movement path MRf satisfying the condition that the interference of at least one of the end effector 4, the robot 1, and the surrounding object (for example, the container box CB) does not occur.

Note that the robot control unit 316 may not use the expansion end effector model EM_ex described in the second modified example of the path generation processing to generate the movement path MRf in this case. Namely, the robot control unit 316 may generate the movement path MRf by using the end effector model EM (namely, the expansion end effector model EM_ex whose expansion amount is set to zero). Even in this case, at least one of the actual position and the actual pose of the surrounding object (for example, the container box CB) is reflected in the surrounding object model SM in the third modified example, and therefore, the robot control unit 316 can properly generate the movement path MRf satisfying the condition that the interference of at least one of the end effector 4, the robot 1, and the surrounding object (for example, the container box CB) does not occur.

As described above, the plurality of objects OBJ may be captured in the image indicated by each of the image data IMG_2D and IMG_3D. In this case, the imaging apparatus 2 may generate the image data IMG_2D and IMG_3D, which indicate images in which the plurality of objects OBJ are captured, respectively, by imaging at least the plurality of objects OBJ. Note that an object different from the plurality of objects OBJ (for example, the surrounding object, which is different from the objects OBJ, such as the container box CB) may be captured in the image indicated by each of the image data IMG_2D and IMG_3D in a case where the plurality of objects OBJ are captured in the image indicated by each of the image data IMG_2D and IMG_3D. Namely, the imaging apparatus 2 may image the object that is different from the plurality of objects OBJ in addition to the plurality of objects OBJ. In a case where the plurality of objects OBJ are captured in the image indicated by each of the image data IMG_2D and IMG_3D, one object OBJ of the plurality of objects OBJ may be selected as the object OBJ on which the end effector 4 should perform the predetermined process, and at least one object OBJ, which is different from the one object OBJ, of the plurality of objects OBJ may be regarded as the surrounding object as described above. Note that the one object OBJ selected as the object OBJ on which the end effector 4 should perform the predetermined process is referred to as a target object (a process performed object) OBJ_tgt, and at least one object OBJ that is regarded as the surrounding object is referred to as a non-target object OBJ_ntgt in the below-described description. However, in a case where the end effector 4 performs the predetermined process on the plurality of objects OBJ in sequence, the non-target object OBJ_ntgt that is not selected as the target object OBJ_tgt in a first period may be selected as the target object OBJ_tgt on which the end effector 4 should perform the predetermined process in a second period different from the first period. Therefore, the non-target object OBJ_ntgt may be regarded as the object OBJ that is a candidate on which the end effector 4 performs the predetermined process. Similarly, the target object OBJ_tgt on which the end effector 4 should perform the predetermined process on the first period may be regarded as the non-target object OBJ_ntgt in the second period different from the first period. Then, after the target object OBJ_tgt is selected, the robot control unit 316 generates the movement path MRf directed to the process target position PTP at which the end effector 4 performs the predetermined process on the target object OBJ_tgt.

Note that each of the target object OBJ_tgt and the non-target object OBJ_ntgt is the object OBJ on which the end effector 4 performs the predetermined process at a desired timing. Therefore, the shape of the target object OBJ_tgt may be the same as the shape of the non-target object OBJ_ntgt. The size of the target object OBJ_tgt and the size of the non-target object OBJ_ntgt may be the same. Note that a state in which "the shape of the target object OBJ_tgt is the same as the shape of the non-target object OBJ_ntgt" may include a state in which "the shape of the target object OBJ _tgt is completely the same as the shape of the non-target object OBJ_ntgt". The state in which "the shape of the target object OBJ_tgt is the same as the shape of the non-target object OBJ_ntgt" may include a state in which "the shape of the target object OBJ_tgt is not completely the same as the shape of the non-target object OBJ_ntgt, but a difference between them is so small that they may be considered to be substantially the same as each other". Similarly, a state in which "the size of the target object OBJ_tgt is the same as the size of the non-target object OBJ_ntgt" may include a state in which "the size of the target object OBJ_tgt is completely the same as the size of the non-target object OBJ_ntgt". The state in which "the size of the target object OBJ_tgt is the same as the size of the non-target object OBJ_ntgt" may include a state in which "the size of the target object OBJ_tgt is not completely the same as the size of the non-target object OBJ_ntgt, but a difference between them is so small that they may be considered to be substantially the same as each other".

In a case where the movement path MRf directed to the process target position PTP, at which the end effector 4 performs the predetermined process on the target object OBJ_tgt, is generated, the robot control unit 316 may adjust at least one of the position and the pose of the surrounding object model SM (specifically, a non-target object model OM_ntgt that is a three-dimensional model of at least one non-target object OBJ_ntgt) in the predetermined virtual space based on the calculated result of at least one of the position and the pose of at least one non-target object OBJ_ntgt (namely, the surrounding object). Specifically, the robot control unit 316 may calculate at least one of the position and the pose of the non-target object OBJ_ntgt together with at least one of the position and the pose of the target object OBJ_tgt in selecting the target object OBJ_tgt. Alternatively, the robot control unit 316 may newly acquire at least one of the image data IMG_2D and IMG_3D generated by the imaging apparatus 2 imaging at least one non-target object OBJ_ntgt, and calculate at least one of the position and the pose of the non-target object OBJ_ntgt based on at least one of the image data IMG_2D and IMG_3D newly acquired after selecting the target object OBJ_tgt and calculating at least one of the position and the pose of the target object OBJ_tgt. Note that the target object OBJ_tgt may be captured or may not be captured in the image indicated by at least one of the image data IMG_2D and IMG_3D that is used to calculate at least one of the position and the pose of the non-target object OBJ_ntgt. All of one or more non-target objects OBJ_ntgt that are not selected as the target object OBJ_tgt may be captured or a part of the plurality of non-target objects OBJ_ntgt that are not selected as the target objects OBJ_tgt may be captured in the image indicated by at least one of the image data IMG_2D and IMG_3D that is used to calculate at least one of the position and the pose of the non-target object OBJ_ntgt. Then, the robot control unit 316 may adjust at least one of the position and the pose of the non-target object model OM_ntgt in the predetermined virtual space based on at least one of the position and the pose of at least one non-target object OBJ_ntgt. For example, the control apparatus 3 may adjust the position of the non-target object model OM_ntgt in the predetermined virtual space so that the position of the non-target object model OM_ntgt in the predetermined virtual space becomes a position that is set based on the position of at least one non-target object OBJ_ntgt. For example, the control apparatus 3 may adjust the position of the non-target object model OM_ntgt in the predetermined virtual space so that the position of the non-target object model OM_ntgt in the predetermined virtual space becomes a position that is calculated by transforming the position of at least one non-target object OBJ_ntgt to a position in the predetermined virtual space. Namely, the control apparatus 3 may position the non-target object model OM_ntgt in the predetermined virtual space at a position that is set based on the position of at least one non-target object OBJ_ntgt. For example, the control apparatus 3 may adjust the pose of the non-target object model OM_ntgt in the predetermined virtual space so that the pose of the non-target object model OM_ntgt in the predetermined virtual space becomes a pose that is set based on the position of at least one non-target object OBJ_ntgt. For example, the control apparatus 3 may adjust the pose of the non-target object model OM_ntgt in the predetermined virtual space so that the pose of the non-target object model OM_ntgt in the predetermined virtual space becomes a pose that is calculated by transforming the pose of at least one non-target object OBJ_ntgt to a pose in the predetermined virtual space. Namely, the control apparatus 3 may position the non-target object model OM_ntgt in the predetermined virtual space in a pose that is set based on the pose of at least one non-target object OBJ_ntgt. In a case where there are a plurality of non-target objects OBJ_ntgt, the robot control unit 316 may adjust at least one of the positions and the poses of the plurality of non-target object models OM_ntgt in the predetermined virtual space based on at least one of the positions and the poses of the plurality of non-target objects OBJ_ntgt, respectively. Then, as described above, the robot control unit 316 may generate the movement path MRf so that the interference of at least one of the end effector model EM, the robot model RM, and at least one non-target object model OM_ntgt does not occur. As a result, the robot control unit 316 can generate the movement path MRf satisfying the condition that the interference of at least one of the end effector 4, the robot 1, and the non-target object OBJ_ntgt does not occur.

Alternatively, in a case where the movement path MRf directed to the process target position PTP, at which the end effector 4 performs the predetermined process on the target object OBJ_tgt, is generated, the robot control unit 316 may generate a point cloud model of at least one non-target object OBJ_ntgt based on the image data IMG_3D generated by imaging at least one non-target object OBJ_ntgt. Note that the target object OBJ_tgt may be captured or may not be captured in the image indicated by the image data IMG_3D that is used to generate the point cloud model of the non-target object OBJ_ntgt. Whole of one or more non-target objects OBJ_ntgt that are not selected as the target object OBJ_tgt may be captured or a part of the plurality of non-target objects OBJ_ntgt that are not selected as the target objects OBJ_tgt may be captured in the image indicated by the image data IMG_3D that is used to generate the point cloud model of the non-target object OBJ_ntgt. In a case where the target object OBJ_tgt is captured in the image indicated by the image data IMG_3D, the robot control unit 316 may generate the point cloud model of the target object OBJ_tgt and the non-target objects OBJ_ntgt based on the image data IMG_3D, and remove a model part corresponding to the target object OBJ _tgt from the generated point cloud model. Alternatively, the robot control unit 316 may perform, on the image data IMG_3D, a cropping processing for extracting an image part in which the non-target objects OBJ_ntgt is captured from the image indicated by the image data IMG_3D, and generate the point cloud model of the non-target object OBJ_ntgt based on the image data IMG_3D on which the cropping processing has been performed. Then, the robot control unit 316 may use the generated point cloud model of at least one non-target object OBJ_ntgt as at least one non-target object model OM_ntgt. Then, as described above, the robot control unit 316 may generate the movement path MRf so that the interference of at least one of the end effector model EM, the robot model RM, and at least one non-target object model OM_ntgt does not occur. As a result, the robot control unit 316 can generate the movement path MRf satisfying the condition that the interference of at least one of the end effector 4, the robot 1, and the non-target object OBJ_ntgt does not occur.

In a case where the surrounding object (for example, the container box CB) different from the non-target object OBJ_ntgt is positioned around the robot 1, the robot control unit 316 may generate the movement path MRf based on a first surrounding object model SM corresponding to the non-target object OBJ_ntgt (namely, the non-target object model OM_ntgt) and a second surrounding object model SM corresponding to the surrounding object different from the non-target object OBJ_ntgt. Namely, the robot control unit 316 may generate the movement path MRf satisfying a condition that the interference with respect to the first surrounding object model SM and the second surrounding object model SM does not occur.

Note that the robot control unit 316 may acquire a plurality of image data IMG_3D generated by the imaging apparatus 2 imaging the non-target object OBJ_ntgt a plurality of times, and generate the point cloud model of the non-target object OBJ_ntgt based on the plurality of image data IMG_3D in a case where the point cloud model of the non-target object OBJ_ntgt is generated based on the image data IMG_3D. Namely, the robot control unit 316 may generate the movement path MRf satisfying the condition that the interference of at least one of the end effector model EM, the robot model RM, and the surrounding object model SM (the non-target object model OM_ntgt) does not occur by using the point cloud model of the non-target object OBJ_ntgt generated based on the plurality of image data IMG_3D as the non-target object model OM_ntgt. Note that an operation for generating the point cloud model of the non-target object OBJ_ntgt (the surrounding object) based on the plurality of image data IMG_3D will be described later as a first modified example of the fine movement operation.

### (5-2-4) Fourth Modified Example of Path Generation Processing

In a fourth modified example, the path generation unit 315 may acquire at least one of the image data IMG_2D and IMG_3D from the imaging apparatus 2 in order to perform the path generation processing illustrated in FIG. 19 to generate the movement path MRr. Then, the path generation unit 315 may perform the above-described matching processing (for example, at least one of the 2D matching processing and the 3D matching processing) based on at least one of the image data IMG_2D and IMG_3D. Then, the path generation unit 315 may display information related to a result of the matching processing on the display apparatus 35. Namely, the path generation unit 315 may display the information related to the result of the matching processing on the path generation screen 3550 that is used to generate the movement path MRr.

For example, as described above, one object OBJ (namely, the target object OBJ_tgt) on which the end effector 4 should perform the predetermined process is selected by the matching processing. In this case, the path generation unit 315 may display information related to the target object OBJ_tgt on the path generation screen 3550. However, in this case, it is preferable that the imaging apparatus 2 be positioned at a position at which it can image the target object OBJ_tgt in a period during which the path generation processing illustrated in FIG. 19 is performed. Namely, it is preferable that the target object OBJ_tgt is included in the angle of view of the imaging apparatus 2 (namely, the angle of view of at least one of the cameras 21 and 22) in the period during which the path generation processing illustrated in FIG. 19 is performed.

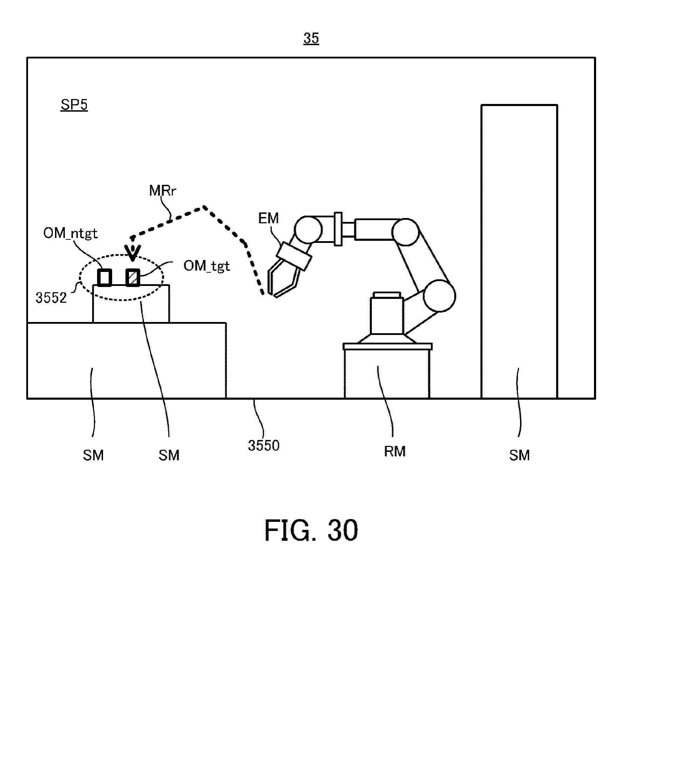

As one example, as illustrated in FIG. 30, the path generation unit 315 may display a target object model OM_tgt (namely, the object model OM described above), which is a three-dimensional model indicating the target object OBJ_tgt, as the information related to the target object OBJ_tgt. In this case, the path generation unit 315 may position the target object model OM_tgt at a position, which corresponds to the position of the target object OBJ_tgt calculated by the matching processing, in the virtual three-dimensional space SP5 formed in the path generation screen 3550. The path generation unit 315 may position the target object model OM_tgt with a pose, which corresponds to the pose of the target object OBJ_tgt calculated by the matching processing, in the virtual three-dimensional space SP5 formed in the path generation screen 3550. In this case, the user can properly recognize at least one of the actual position and pose of the target object OBJ_tgt. As a result, the user can input the instruction for changing the movement path MRr to the control apparatus 3 while considering at least one of the actual position and pose of the target object OBJ_tgt.

Note that the path generation screen 3550 displayed in the fourth modified example of the path generation processing includes at least one of the end effector model EM, the robot model RM, and the surrounding object model SM, in addition to the target object model OM_tgt in the example illustrated in FIG. 30. However, the path generation screen 3550 displayed in the fourth modified example of the path generation processing may not include at least one of the end effector model EM, the robot model RM, and the surrounding object model SM.

The target object model OM_tgt may be a CAD model of the target object OBJ_tgt. For example, the path generation unit 315 may use, as the target object model OM_tgt, the three-dimensional model that is used as the template in the matching processing described above.

The path generation unit 315 may generate a point cloud model (alternatively, another type of three-dimensional model such as a polygon model, a mesh model, a solid model, or the like, the same applies in the fourth modified example of the path generation processing) of the target object OBJ_tgt based on the image data IMG_3D generated by imaging the target object OBJ_tgt. Specifically, the path generation unit 315 may generate the three-dimensional position data WSD based on the image data IMG_3D. In this case, the three-dimensional position data WSD may be data indicating a three-dimensional position of each of a plurality of points of the target object OBJ_tgt. The path generation unit 315 may generate, as the three-dimensional position data WSD, data indicating the point cloud model of the target object OBJ_tgt. Alternatively, the path generation unit 315 may generate the three-dimensional position data WSD (for example, depth image data) that is different from the data indicating the point cloud model of the target object OBJ_tgt, and generate the point cloud model of the target object OBJ_tgt based on the three-dimensional position data WSD. Even in both cases, the point cloud model of the target object OBJ_tgt may be regarded as information based on the three-dimensional position data WSD. Then, the path generation unit 315 may display the point cloud model of the target object OBJ_tgt together with the target object model OM_tgt in the virtual three-dimensional space SP5 formed in the path generation screen 3550. Specifically, the point cloud model includes a plurality of points each of associated with a three-dimensional coordinate in the global coordinate system. The path generation unit 315 may position the point cloud model of the target object OBJ_tgt in the three-dimensional space SP5 by transforming the three-dimensional coordinate of each of the plurality of points included in the point cloud model to a three-dimensional coordinate in the virtual three-dimensional space SP5 in the path generation screen 3550, and positioning each of the plurality of points included in the point cloud model at the position indicated by the three-dimensional coordinate acquired by the transformation in the three-dimensional space SP5.

Note that the path generation screen 3550 may display the target object model OM_tgt, which is positioned at the position calculated by the 2D matching processing based on the image data IMG_2D with the pose calculated by the 2D matching processing based on the image data IMG_2D, and the point cloud data of the target object OBJ_tgt, which is generated based on the image data IMG_3D in a case where the 2D matching processing described above is performed as the matching processing. In this case, the path generation unit 315 may evaluate a reliability of the result of the 2D matching processing (especially, the calculated result of at least one of the position and the pose of the target object OBJ_tgt) based on a difference between the target object model OM_tgt and the point cloud model of the target object OBJ_tgt in the virtual three-dimensional space SP5. For example, the path generation unit 315 may evaluate that the reliability of the result of the 2D matching processing is lower as the difference between the target object model OM_tgt and the point cloud model of the target object OBJ_tgt in the virtual three-dimensional space SP5 is larger.

Furthermore, the user may check the difference between the target object model OM_tgt and the point cloud model of the target object OBJ _tgt in the virtual three-dimensional space SP5 before the processing system SYS starts the above-described operation. In this case, the user may evaluate the reliability of the result of the 2D matching processing before the processing system SYS starts the above-described operation. Alternatively, the user may check the difference between the point cloud model of the target object model OM_tgt and the point cloud model of the targe object OBJ_tgt in the virtual three-dimensional space SP5 at a timing at which any trouble occurs after the processing system SYS starts the above operation. Even in this case, the user may evaluate the reliability of the result of the 2D matching processing. Note that the user may set the non-target object OBJ_ntgt to be new target object OBJ_tgt in a case where the difference between the target object model OM_tgt and the point cloud model of the target object OBJ_tgt is large (for example, larger than a predetermined difference threshold value). This is because it is likely that a difference between the non-target object model OM_ntgt and the point cloud model of the target object OBJ_tgt is small in a case where the difference between the target object model OM_tgt and the point cloud model of the target object OBJ_tgt is large.

For example, as described above, the object OBJ, which is other than the target object OBJ_tgt, of the plurality of objects OBJ captured in the image indicated by each of the image data IMG_2D and IMG_3D is used as the non-target object OBJ_ntgt, on which the end effector 4 does not perform the predetermined process at the present time, by the matching processing. In this case, the path generation unit 315 may display information related to the non-target objects OBJ_ntgt on the path generation screen 3550. However, in this case, the imaging apparatus 2 may be positioned at a position at which it can image the non-target objects OBJ_ntgt in a period during which the path generation processing illustrated in FIG. 19 is performed. Namely, it is preferable that the non-target objects OBJ_ntgt is included in the angle of view of the imaging apparatus 2 (namely, the angle of view of at least one of the cameras 21 and 22) in the period during which the path generation processing illustrated in FIG. 19 is performed.

For example, as illustrated in FIG. 30, the path generation unit 315 may display the non-target object model OM_ntgt, which is the three-dimensional model indicating the non-target object OBJ_ntgt, as the information related to the non-target object OBJ_ntgt. In this case, the path generation unit 315 may position the non-target object model OM_ntgt at a position, which corresponds to the position of the non-target object OBJ_ntgt calculated by the matching processing, in the virtual three-dimensional space SP5 formed in the path generation screen 3550. The path generation unit 315 may position the non-target object model OM_ntgt with a pose, which corresponds to the pose of the non-target object OBJ_ntgt calculated by the matching processing, in the virtual three-dimensional space SP5 formed in the path generation screen 3550. In this case, the user can properly recognize at least one of the actual position and pose of the non-target object OBJ_ntgt. As a result, the user can input the instruction for changing the movement path MRr to the control apparatus 3 while considering at least one of the actual position and pose of the non-target object OBJ_ntgt.

The non-target object model OM_ntgt may be a CAD model of the non-target object OBJ_ntgt. For example, the path generation unit 315 may use, as the non-target object model OM _ntgt, the three-dimensional model that is used as the template in the matching processing described above.

The path generation unit 315 may generate the point cloud model of the non-target object OBJ_ntgt based on the image data IMG_3D generated by imaging the non-target object OBJ_ntgt. Specifically, the path generation unit 315 may generate the three-dimensional position data WSD based on the image data IMG_3D. In this case, the three-dimensional position data WSD may be data indicating a three-dimensional position of each of a plurality of points of the non-target object OBJ_ntgt. The path generation unit 315 may generate, as the three-dimensional position data WSD, data indicating the point cloud model of the non-target object OBJ_ntgt. Alternatively, the path generation unit 315 may generate the three-dimensional position data WSD (for example, depth image data) that is different from the data indicating the point cloud model of the non-target object OBJ_ntgt, and generate the point cloud model of the non-target object OBJ_ntgt based on the three-dimensional position data WSD. Even in both cases, the point cloud model of the non-target object OBJ_ntgt may be regarded as information based on the three-dimensional position data WSD. Then, the path generation unit 315 may display the point cloud model of the non-target object OBJ_ntgt together with the non-target object model OM_ntgt in the virtual three-dimensional space SP5 formed in the path generation screen 3550. Specifically, the point cloud model includes a plurality of points each of associated with a three-dimensional coordinate in the global coordinate system. The path generation unit 315 may position the point cloud model of the non-target object OBJ_ntgt in the three-dimensional space SP5 by transforming the three-dimensional coordinate of each of the plurality of points included in the point cloud model to a three-dimensional coordinate in the virtual three-dimensional space SP5 in the path generation screen 3550, and positioning each of the plurality of points included in the point cloud model at the position indicated by the three-dimensional coordinate acquired by the transformation in the three-dimensional space SP5.

Note that the path generation screen 3550 may display the non-target object model OM_ntgt, which is positioned at the position calculated by the 2D matching processing based on the image data IMG_2D with the pose calculated by the 2D matching processing based on the image data IMG_2D, and the point cloud data of the non-target object OBJ_ntgt, which is generated based on the image data IMG_3D in a case where the 2D matching processing described above is performed as the matching processing. In this case, the path generation unit 315 may evaluate the reliability of the result of the 2D matching processing (especially, the calculated result of at least one of the position and the pose of the non-target object OBJ_ntgt) based on a difference between the non-target object model OM_ntgt and the point cloud model of the non-target object OBJ_ntgt in the virtual three-dimensional space SP5. For example, the path generation unit 315 may evaluate that the reliability of the result of the 2D matching processing is lower as the difference between the non-target object model OM_ntgt and the point cloud model of the non-target object OBJ_ntgt in the virtual three-dimensional space SP5 is larger.

Furthermore, the user may check the difference between the non-target object model OM_ntgt and the point cloud model of the non-target object OBJ_ntgt in the virtual three-dimensional space SP5 before the processing system SYS starts the above-described operation. In this case, the user may evaluate the reliability of the result of the 2D matching processing before the processing system SYS starts the above-described operation. Alternatively, the user may check the difference between the point cloud model of the non-target object model OM_ntgt and the point cloud model of the targe object OBJ_tgt in the virtual three-dimensional space SP5 at a timing at which any trouble occurs after the processing system SYS starts the above operation. Even in this case, the user may evaluate the reliability of the result of the 2D matching processing. Note that the user may set the non-target object OBJ_ntgt to be new target object OBJ_tgt in a case where the difference between the target object model OM_tgt and the point cloud model of the target object OBJ _tgt is large (for example, larger than the predetermined difference threshold value). This is because it is likely that a difference between the non-target object model OM_ntgt and the point cloud model of the target object OBJ_tgt is small in a case where the difference between the target object model OM_tgt and the point cloud model of the target object OBJ_tgt is large.

After the target object OBJ_tgt is selected, the path generation unit 315 may generate the movement path MRr along which the tool center point TCP moves so that the end effector 4 performs the predetermined process on the selected target object OBJ_tgt. For example, as described above, the path generation unit 315 may generate the movement path MRr so that the interference of at least one of the end effector model EM, the robot model RM, and the surrounding object model SM (including the non-target object model OM_ntgt, the same applies in the fourth modified example of the path generation processing) does not occur.

However, in a case where it is not possible to generate the movement path MRr so that the interference of at least one of the end effector model EM, the robot model RM, and the surrounding object model SM does not occur, the path generation unit 315 may re-select the target object OBJ_tgt. For example, the path generation unit 315 may re-select, as the target object OBJ_tgt, one object OBJ whose similarity is the next highest from the plurality of objects OBJ. Note that the path generation unit 315 may re-select the target object OBJ_tgt based on a determined result of the interference of at least one of the end effector model EM, the robot model RM, and the surrounding object model SM not only not in the fourth modified example of the path generation processing but also in any case where the movement path MRr is generated.

The path generation unit 315 may display the target object model OM_tgt and the non-target object model OM_ntgt so that a display aspects of the target object model OM_tgt is different from a display aspect of the non-target object model OM_ntgt, as illustrated in FIG. 30. A display color is one example of the display aspect. In this case, the user can easily distinguish the target object OBJ_tgt from the non-target object OBJ_ntgt.

In a case where the information related to the result of the matching processing is displayed in this manner, the user can determine a cause of a failure of the predetermined process performed by the end effector 4 in a case where the predetermined process performed by the end effector 4 fails later. For example, in a case where the information related to target object OBJ_tgt is displayed on the path generation screen 3550, a fact that the target object OBJ_tgt exists in the actual space at the position calculated by the matching processing with the pose calculated by the matching processing is confirmed by the imaged result (namely, the measured result) acquired by the imaging apparatus 2. In a case where the end effector 4 cannot perform the predetermined process on the target object OBJ_tgt in this situation, the user can determine that the cause of the failure of the predetermined process performed by the end effector 4 is a problem in the actual space. One example of a malfunction of the end effector 4 and the like is one example of the problem in the actual space. A malfunction in the holding process performed by the end effector 4 (for example, a malfunction of the claw used to hold the object OBJ) is one example of the malfunction of the end effector 4 and the like. A difference between the shape of the end effector 4 and the originally expected shape (for example, an attachment of the end effector 4, which is different from the end effector 4 that should be attached to the robot 1, to the robot 1) is one example of the malfunction of the end effector 4 and the like. A difference between the shape of the robot 1 and the originally expected shape (for example, an attachment of the end effector 4 to the robot 1 that is different from the robot 1 to which the end effector 4 should be attached) is one example of the malfunction of the end effector 4 and the like. A difference between the shape of the container box CB in which the workpiece W is contained and the originally expected shape (for example, the workpiece W is contained in the container box CB that is different from the container box CB in which the workpiece W should be contained) is one example of the malfunction of the end effector 4 and the like.

Note that the control apparatus 3 may display the information related to the result of the matching processing on the display apparatus 35 not only in a case where the movement path MRr is generated but also in any case where the matching processing is performed. For example, as described above, the robot control unit 316 performs the matching processing in a case where the movement path MRf is generated at the step S34 of FIG. 6 described above. Namely, as described above, the robot control unit 316 performs the matching processing in a period during which the tool center point TCP moves between the fine approach position PF and the process target position PTP. Even in this case, the control apparatus 3 may display the information related to the result of the matching processing in the same manner as in a case where the movement path MRr is generated. Alternatively, the control apparatus 3 may acquire at least one of the image data IMG_2D and IMG_3D from the imaging apparatus 2, perform the matching processing based on at least one of the image data IMG_2D and IMG_3D, and display the information related to the result of the matching processing in any period during which the imaging apparatus 2 can image at least one of the target object OBJ_tgt and the non-target object OBJ_ntgt.

In a case where the information related to the result of the matching processing is displayed in the period during which the tool center point TCP moves between the fine approach position PF and the process target position PTP, it is likely that the target object OBJ_tgt changes over time. For example, in a case where the end effector 4 holds the plurality of workpieces W in sequence as described above, each time the end effector 4 holds the workpiece W, new target object OBJ_tgt is selected sequentially from the remaining object(s) OBJ. In this case, the control apparatus 3 may update a display content of the information related to the result of the matching processing each time the result of the matching processing changes. As a result, the user can check a progress of the process by the end effector 4.

### (6) Modified Example

Next, a modified example of the robot system SYS will be described.

### (6-1) Modified Example of Fine Movement Operation

First, a modified example of the fine movement operation will be described. Note that the fine movement operation is the operation for moving the end effector 4 so that the tool center point TCP moves from the fine approach position PF to the process target position PTP, as described above. Especially, the fine movement operation is the operation for calculating at least one of the position and the poser of the object OBJ based on at least one of the image data IMG_2D and IMG_3D generated by the imaging apparatus 2 imaging the object OBJ, and moving the end effector 4 based on the calculated result of at least one of the position and the pose of the object OBJ, as described above.

### (6-1-1) First Modified Example of Fine Movement Operation

In a first modified example, in order to generate the movement path MRf along which the tool center point TCP should move by the fine movement operation, the camera 22 may generate a plurality of image data IMG_3D by imaging at least a plurality of objects OBJ a plurality of times. Typically, the camera 22 may generate the plurality of image data IMG_3D by imaging at least one other object OBJ, which is positioned around one object OBJ that is selected as the target object OBJ_tgt on which the end effector 4 performs the predetermined process by the fine movement operation (especially, the matching processing), the plurality of times. Namely, the camera 22 may generate the plurality of image data IMG_3D by imaging the non-target object OBJ_ntgt, which is not selected as the target object OBJ_tgt on which the end effector 4 performs the predetermined process by the fine movement operation (especially, the matching processing), the plurality of times. Especially, the camera 22 may generate the plurality of image data IMG_3D by imaging a plurality of other objects OBJ, which are positioned around one object OBJ that is selected as the target object OBJ_tgt on which the end effector 4 performs the predetermined process by the fine movement operation (especially, the matching processing), the plurality of times. Namely, the camera 22 may generate the plurality of image data IMG_3D by imaging a plurality of non-target objects OBJ_ntgt, which are not selected as the target object OBJ_tgt on which the end effector 4 performs the predetermined process by the fine movement operation (especially, the matching processing), the plurality of times. In this case, the camera 22 may image or may not image one object OBJ that is selected as the target object OBJ_tgt on which the end effector 4 performs the predetermined process by the fine movement operation (especially, the matching processing). Namely, the camera 22 may image or may not image the target object OBJ_tgt.

The camera 22 may image the plurality of objects OBJ the plurality of times in at least a part of a period during which the robot 1 is stopped. Namely, the camera 22 may image a plurality of objects OBJ the plurality of times in at least a part of a period during which the camera 22 is stopped with respect to the plurality of objects OBJ. Alternatively, camera 22 may image the plurality of objects OBJ the plurality of times in at least a part of a period during which robot 1 moves. Namely, camera 22 may image the plurality of objects OBJ the plurality of times in at least a part of a period during which the camera 22 moves relative to the plurality of objects OBJ. As one example, the camera 22 may image the plurality of objects OBJ the plurality of times in at least a part of a period during which the tool center point TCP moves along the movement path MRf that has been generated.

Then, the robot control unit 316 may generate the non-target object model OM_ntgt, which is the three-dimensional model of the non-target object OBJ_ntgt of the plurality of objects OBJ that is not selected as the target object OBJ_tgt, as the surrounding object model SM based on the plurality of image data IMG_3D.

Specifically, the robot control unit 316 may generate a plurality of three-dimensional position data WSD (typically, point cloud data) based on the plurality of image data IMG_3D. Then, the robot control unit 316 may generate a single merged three-dimensional position data WSDc (typically, point cloud data) by merging the plurality of three-dimensional position data WSD (typically, point cloud data). Note that merging the plurality of three-dimensional position data WSD may be considered to be equivalent to combining the plurality of three-dimensional position data WSD. In this case, the merged three-dimensional position data WSDc may be referred to as combined three-dimensional position data. The robot control unit 316 may generate the merged three-dimensional position data WSDc (typically, point cloud data) by merging (in other words, combining) each point of the non-target objects OBJ_ntgt indicated by each of the plurality of three-dimensional position data WSD. In other words, the robot control unit 316 may generate the merged three-dimensional position data WSDc (typically, point cloud data) by merging (in other words, combining) three-dimensional position information of each point of the non-target objects OBJ_ntgt indicated by each of the plurality of three-dimensional position data WSD. In this case, the number of points included in the merged three-dimensional position data WSDc may typically be larger than the number of points included in each three-dimensional position data WSD. In other words, a density of points included in the merged three-dimensional position data WSDc may typically be higher than a density of points included in each three-dimensional position data WSD. As a result, even in a case where one point of the non-target object OBJ_ntgt is accidentally missing in one three-dimensional position data WSD, the merged three-dimensional position data WSDc include the one point of the one non-target object OBJ_ntgt in a case where the same one point of the same one non-target object OBJ_ntgt is included in other three-dimensional position data WSD. Therefore, the robot control unit 316 can supplement missing information (namely, missing point of the non-target object OBJ_ntgt) related to the non-target object OBJ_ntgt by merging the plurality of three-dimensional position data WSD to generate the merged three-dimensional position data WSDc.

Furthermore, there is a possibility that each three-dimensional position data WSD include, as a noise point, a point that is different from the point of the non-target object OBJ_ntgt. However, an appearance aspect of each point of the non-target object OBJ_ntgt is different from an appearance aspect of the point (in the below-described description, it is referred to as the noise point) different from each point of the non-target object OBJ_ntgt in the point cloud indicated by each three-dimensional position data WSD. For example, the number of three-dimensional position data WSD in which each point of the non-target object OBJ_ntgt is included is much larger than the number of three-dimensional position data WSD in which the noise point is included. Therefore, the robot control unit 316 may remove the noise point from the point cloud indicated by the merged three-dimensional position data WSDc while leaving the point of the non-target object OBJ_ntgt based on a difference between the appearance aspect of each point of the non-target object OBJ_ntgt and the appearance aspect of the noise point. As a result, the robot control unit 316 can remove the noise point that is different from the point of the non-target object OBJ_ntgt by merging the plurality of three-dimensional position data WSD to generate the merged three-dimensional position data WSDc.

Then, the robot control unit 316 may generate the three-dimensional model of the non-target object OBJ_ntgt as the surrounding object model SM based on the merged three-dimensional position data WSDc. In this case, since the missing information (namely, the missing point of the non-target object OBJ _ntgt) is supplemented as described above, the robot control unit 316 can generate the surrounding object model SM that indicates the three-dimensional shape of the non-target object OBJ_ntgt with high accuracy. Furthermore, since the noise point described above is removed, the robot control unit 316 can generate the surrounding object model SM that indicates the three-dimensional shape of the non-target object OBJ_ntgt with high accuracy.

Then, the robot control unit 316 generates the movement path MRf. Specifically, as already described above, the robot control unit 316 may acquire at least one of the image data IMG_2D and the three-dimensional position data WSD (the step S32 in FIG. 6), calculate at least one of the position and the pose of the object OBJ (especially, the target object OBJ_tgt) based on at least one of the image data IMG_2D and the three-dimensional position data WSD (the step S33 in FIG. 6), and generate the movement path MRf based on at least one of the position and the pose of the object OBJ (especially, the target object OBJ_tgt), the end effector model EM, the robot model RM, and the surrounding object model SM (the non-target object model OM_ntgt) (the step S34 in FIG. 6). For example, the robot control unit 316 may generate the movement path MRf satisfying the condition that the interference of at least one of the end effector model EM, the robot model RM, and the surrounding object model SM (the non-target object model OM_ntgt) does not occur. Namely, the robot control unit 316 may generate the movement path MRf by using the surrounding object model SM (the non-target object model OM_ntgt), which is generated based on the plurality of image data IMG_3D, to determine whether or not the interference of the end effector model EM and the like occurs. In this case, generating the movement path MRf by using the surrounding object model SM (the non-target object model OM_ntgt) generated based on the plurality of image data IMG_3D may be considered to be equivalent to generating the movement path MRf based on the plurality of image data IMG_3D used to generate the surrounding object model SM (the non-target object model OM_ntgt).

Here, in the first modified example, since the surrounding object model SM indicates the three-dimensional shape of the non-target object OBJ_ntgt with high accuracy as described above, the robot control unit 316 can determine with high accuracy whether or not the interference of at least one of the end effector 4, the robot 1, and the surrounding object (especially, the non-target object OBJ_ntgt) occurs by generating the movement path MRf based on determined result of whether or not the interference of at least one of the end effector model EM, the robot model RM, and the surrounding object model SM (the non-target object model OM_ntgt) occurs. As a result, the robot control unit 316 can generates the movement path MRf satisfying the condition that the interference of at least one of the end effector 4, the robot 1, and the surrounding object (especially, the non-target object OBJ_ntgt) does not occur by generating the movement path MRf based on determined result of whether or not the interference of at least one of the end effector model EM, the robot model RM, and the surrounding object model SM (the non-target object model OM_ntgt) occurs.

Note that the robot control unit 316 may perform the matching processing using the image data IMG_3D to generate the movement path MRf (especially, to calculate at least one of the position and the pose of the object OBJ (especially, the target object OBJ_tgt)) as described above. Here, in a case where the object OBJ selected as the target object OBJ_tgt is captured in the image indicated by at least one of the plurality of image data IMG_3D that are used to generate the merged three-dimensional position data WSDc described above, the robot control unit 316 may perform the matching processing by using at least one of the plurality of image data IMG_3D that are used to generate the merged three-dimensional position data WSDc. Namely, at least one of the plurality of image data IMG_3D that are used to generate the merged three-dimensional position data WSDc may be the same as the image data IMG_3D that is used for the matching processing.

However, the imaging apparatus 2 may newly generates at least one of the image data IMG_2D and IMG_3D, which is different from the plurality of image data IMG_3D that are used to generate the merged three-dimensional position data WSDc, by newly imaging the one object OBJ selected as the target object OBJ_tgt, and the robot control unit 316 may perform the matching processing by using at least one of the new image data IMG_2D and IMG_3D, which are different from the plurality of image data IMG_3D that are used to generate the merged three-dimensional position data WSDc. Namely, the plurality of image data IMG_3D that are used to generate the merged three-dimensional position data WSDc may be different from at least one of the image data IMG_2D and IMG_3D that is used for the matching processing. Note that the surrounding object, which includes or does not include the non-target object OBJ_ntgt, may be captured in the image indicated by at least one of the image data IMG_2D and IMG_3D that is used for the matching processing as described above.

Alternatively, the robot control unit 316 may perform the matching processing by using at least one of the plurality of image data IMG_3D, which are used to generate the merged three-dimensional position data WSDc ,and at least one of the new image data IMG_2D and IMG_3D, which are different from the plurality of image data IMG_3D that are used to generate the merged three-dimensional position data WSDc. Namely, the robot control unit 316 may perform the matching processing by using the three-dimensional position data WSD, which is generated based on at least one of the plurality of image data IMG_3D that are used to generate the merged three-dimensional position data WSDc, and at least one of the new image data IMG_2D and IMG_3D, which are different from the plurality of image data IMG_3D that are used to generate the merged three-dimensional position data WSDc.

Especially, the robot control unit 316 may perform the matching processing by using at least one of the plurality of image data IMG_3D, which are used to generate the merged three-dimensional position data WSDc, and new image data IMG_2D, which is different from the plurality of image data IMG_3D that are used to generate the merged three-dimensional position data WSDc. Namely, the robot control unit 316 may perform both the 3D matching processing using the three-dimensional position data WSD, which are generated based on at least one of the plurality of image data IMG_3D that are used to generate the merged three-dimensional position data WSDc, and the 2D matching processing using new image data IMG_2D, which is different from the plurality of image data IMG_3D that are used to generate the merged three-dimensional position data WSDc. Note that the operation for calculating at least one of the position and the pose of the object OBJ (especially, the target object OBJ_tgt) by performing both the 3D matching processing and the 2D matching processing has been already described in describing the step S33 in FIG. 6 as the operation for calculating at least one of the position and the pose of the object OBJ using both the image data IMG_2D and the three-dimensional position data WSD, so the detailed thereof is omitted.

Note that the camera 22 may may image the non-target object OBJ_ntgt included in the plurality of objects OBJ the plurality of times in a case where the three-dimensional model of the non-target object OBJ_ntgt is generated as the surrounding object model SM based on the plurality of image data IMG_3D. Alternatively, the camera 22 may image the target object OBJ_tgt and the non-target object OBJ_ntgt included in the plurality of objects OBJ the plurality of times.

The robot control unit 316 may control the projection apparatus 23 so that a light intensity of the projection light projected from the projection apparatus 23, which is used as the illumination light, changes each time the camera 22 images the plurality of objects OBJ. For example, the robot control unit 316 may control the projection apparatus 23 so that the camera 22 images the plurality of objects OBJ, on which the projection light having a first light intensity is projected, at least once, and images the plurality of objects OBJ, on which the projection light having a second light intensity different from the first light intensity is projected, at least once. For example, the robot control unit 316 may control the projection apparatus 23 so that the camera 22 images the plurality of objects OBJ, on which the projection light having the first light intensity is projected, once. For example, the robot control unit 316 may control the projection apparatus 23 so that the camera 22 images the plurality of objects OBJ, on which the projection light having the first light intensity is projected, the plurality of times. For example, the robot control unit 316 may control the projection apparatus 23 so that the camera 22 images the plurality of objects OBJ, on which the projection light having the second light intensity is projected, once. For example, the robot control unit 316 may control the projection apparatus 23 so that the camera 22 images the plurality of objects OBJ, on which the projection light having the second light intensity is projected, the plurality of times. As a result, the robot control unit 316 may acquire the plurality of image data IMG_3D that includes: the image data IMG_3D generated by the camera 22 imaging the plurality of objects OBJ on which the projection light having the first light intensity is projected at least once; and the image data IMG_3D generated by the camera 22 imaging the plurality of objects OBJ on which the projection light having the second light intensity is projected at least once. In this case, compared to a case where the light intensity of the projection light is fixed (namely, is not changed), the missing information (namely, the missing point of the non-target objects OBJ_ntgt) can be supplemented more properly. This is because the plurality of objects OBJ are imaged under a plurality of different imaging environments.

The first light intensity may be lower than the second light intensity. In this case, the first light intensity may be a minimum light intensity of the projection light projected by the projection apparatus 23, or may be a light intensity higher than the minimum light intensity of the projection light projected by the projection apparatus 23. The second light intensity may be a maximum light intensity of the projection light projected by the projection apparatus 23, or may be lower than the maximum light intensity of the projection light projected by the projection apparatus 23.

The robot control unit 316 may change the light intensity of the projection light among three or more light intensities instead of changing the light intensity of the projection light between the first and second light intensities. For example, the robot control unit 316 may control the projection apparatus 23 so that the camera 22 images the plurality of objects OBJ, on which the projection light having the first light intensity is projected, at least once, images the plurality of objects OBJ, on which the projection light having the second light intensity is projected, at least once, and images the plurality of objects OBJ, on which the projection light having a third light intensity different from the first and second light intensities is projected, at least once. For example, the robot control unit 316 may control the projection apparatus 23 so that the camera 22 images the plurality of objects OBJ, on which the projection light having the first light intensity is projected, at least once, images the plurality of objects OBJ, on which the projection light having the second light intensity is projected, at least once, images the plurality of objects OBJ, on which the projection light having the third light intensity, at least once, and images the plurality of objects OBJ, on which the projection light having a fourth light intensity different from the first to third light intensities is projected, at least once.

Note that the light intensity of the projection light may mean a minimum light intensity of the pattern light in a case where the projection light is the pattern light for projecting the desired projection pattern on the object OBJ as described above. Namely, changing the light intensity of the projection light may be considered to be equivalent to changing the minimum light intensity of the pattern light. In this case, the projection light having the first light intensity may mean the pattern light whose minimum light intensity is a first minimum light intensity, and the projection light having the second light intensity may mean the pattern light whose minimum light intensity is a second minimum light intensity, which is different from the first minimum light intensity. Alternatively, the light intensity of the projection light may mean a maximum light intensity of the pattern light in a case where the projection light is the pattern light for projecting the desired projection pattern on the object OBJ as described above. Namely, changing the light intensity of the projection light may be considered to be equivalent to changing the maximum light intensity of the pattern light. In this case, the projection light having the first light intensity may mean the pattern light whose maximum light intensity is a first maximum light intensity, and the projection light having the second light intensity may mean the pattern light whose maximum light intensity is a second maximum light intensity, which is different from the first maximum light intensity. Alternatively, the light intensity of the projection light may mean both the minimum light intensity and the maximum light intensity of the pattern light in a case where the projection light is the pattern light for projecting the desired projection pattern on the object OBJ as described above. Namely, changing the light intensity of the projection light may be considered to be equivalent to changing both the minimum light intensity and the maximum light intensity of the pattern light. In this case, the projection light having the first light intensity may mean the pattern light whose minimum light intensity is a first minimum light intensity and whose maximum light intensity is a first maximum light intensity, and the projection light having the second light intensity may mean the pattern light whose minimum light intensity is a second minimum light intensity, which is different from the first minimum light intensity, and whose maximum light intensity is a second maximum light intensity, which is different from the first maximum light intensity. Alternatively, the light intensity of the projection light may mean an average light intensity of the pattern light in a case where the projection light is the pattern light for projecting the desired projection pattern on the object OBJ as described above. Namely, changing the light intensity of the projection light may be considered to be equivalent to changing the average light intensity of the pattern light. In this case, the projection light having the first light intensity may mean the pattern light whose average light intensity is a first average light intensity, and the projection light having the second light intensity may mean the pattern light whose average light intensity is a second average light intensity, which is different from the first average light intensity. Alternatively, the light intensity of the projection light may mean a center value of the light intensity of the pattern light in a case where the projection light is the pattern light for projecting the desired projection pattern on the object OBJ as described above. Namely, changing the light intensity of the projection light may be considered to be equivalent to changing the center value of the light intensity of the pattern light. In this case, the projection light having the first light intensity may mean the pattern light whose center value of the light intensity is a first center value, and the projection light having the second light intensity may mean the pattern light whose center value of the light intensity is a second center value, which is different from the first center value. Alternatively, the light intensity of the projection light may mean an offset value (namely, a DC component) of the light intensity of the pattern light in a case where the projection light is the pattern light for projecting the desired projection pattern on the object OBJ as described above. Namely, changing the light intensity of the projection light may be considered to be equivalent to changing the offset value of the light intensity of the pattern light. In this case, the projection light having the first light intensity may mean the pattern light whose offset value of the light intensity is a first offset value, and the projection light having the second light intensity may mean the pattern light whose offset value of the light intensity is a second offset value, which is different from the first offset value.

In a case where the light intensity of the projection light is changed, the robot control unit 316 may change a gain of the camera 22 accordingly. For example, the robot control unit 316 may decrease the gain of the camera 22 as the light intensity of the projection light increases. For example, the robot control unit 316 may increase the gain of the camera 22 as the light intensity of the projection light decreases. In this case, the camera 22 can properly image the plurality of objects OBJ even in a case where the light intensity of the projection light is changed.

The robot control unit 316 may control the camera 22 so that an exposure time of the camera 22 changes each time the camera 22 images the plurality of objects OBJ, in addition to or instead of controlling the projection apparatus 23 so that the light intensity of the projection light from the projection apparatus 23 changes each time the camera 22 images the plurality of objects OBJ. For example, the robot control unit 316 may control the projection apparatus 23 so that the camera 22 whose exposure time is set to a first exposure time images the plurality of objects OBJ at least once, and the camera 22 whose exposure time is set to a second exposure time, which is different from the first exposure time, images the plurality of objects OBJ at least once. As a result, the robot control unit 316 may acquire the plurality of image data IMG_3D that includes: the image data IMG_3D generated by the camera 22 whose exposure time is set to the first exposure time imaging the plurality of objects OBJ at least once; and the image data IMG_3D generated by the camera 22 whose exposure time is set to the first exposure time imaging the plurality of objects OBJ at least once. In this case, compared to a case where the exposure time of the camera 22 is fixed (namely, is not changed), the missing information (namely, the missing point of the non-target objects OBJ_ntgt) can be supplemented more properly. This is because the plurality of objects OBJ are imaged under a plurality of different imaging environments.

The robot control unit 316 may change the exposure time of camera 22 among three or more exposure times instead of changing the exposure time between the first and second exposure times. For example, the robot control unit 316 may control the projection apparatus 23 so that the camera 22, whose exposure time is set to the first exposure time, images the plurality of objects OBJ at least once, the camera 22, whose exposure time is set to the second exposure time, images the plurality of objects OBJ at least once, and the camera 22 whose exposure time is set to a third exposure time, which is different from the first and second exposure times, images the plurality of objects OBJ at least once. For example, the robot control unit 316 may control the projection apparatus 23 so that the camera 22, whose exposure time is set to the first exposure time, images the plurality of objects OBJ at least once, the camera 22, whose exposure time is set to the second exposure time, images the plurality of objects OBJ at least once, the camera 22 whose exposure time is set to the third exposure time images the plurality of objects OBJ at least once, and the camera 22 whose exposure time is set to a fourth exposure time, which is different from the first to third exposure times, images the plurality of objects OBJ at least once.

Note that the robot control unit 316 determines whether or not the interference of the end effector model EM and the like occurs by using the surrounding object model SM (the non-target object model OM_ntgt) generated based on the plurality of image data IMG_3D in order to generate the movement path MRf in the above-described description. Namely, the robot control unit 316 determines whether or not the interference of the end effector model EM and the like occurs based on the plurality of image data IMG_3D. However, the robot control unit 316 may perform the 3D matching processing based on the plurality of image data IMG_3D. Specifically, the robot control unit 316 may generate the merged three-dimensional position data WSDc (typically, the point cloud data in which the number and density of points are increases) based on the plurality of image data IMG_3D, and perform the 3D matching processing based on the generated merged three-dimensional position data WSDc. Namely, the robot control unit 316 may perform the 3D matching processing by using the merged three-dimensional position data WSDc as the three-dimensional position data WSD. For example, the robot control unit 316 may select one of the plurality of objects OBJ as the target object OBJ_tgt based on the merged three-dimensional position data WSDc, and calculate at least one of the position and the pose of the target object OBJ_tgt based on the merged three-dimensional position data WSDc.

The robot control unit 316 may determine whether or not the interference of the end effector model EM and the like occurs based on the plurality of image data IMG_3D, and may perform the 3D matching processing based on the plurality of image data IMG_3D. Namely, the robot control unit 316 may determine whether or not the interference of the end effector model EM and the like occurs based on the merged three-dimensional position data WSDc, and perform the 3D matching processing based on the merged three-dimensional position data WSDc. Alternatively, the robot control unit 316 may determine whether or not the interference of the end effector model EM and the like occurs based on single image data IMG_3D, and perform the 3D matching processing based on the plurality of image data IMG_3D. Namely, the robot control unit 316 may determine whether or not the interference of the end effector model EM and the like occurs based on the three-dimensional position data WSD, and perform the 3D matching processing based on the merged three-dimensional position data WSDc. Alternatively, the robot control unit 316 may determine whether or not the interference of the end effector model EM and the like occurs based on the plurality of image data IMG_3D, and perform the 3D matching processing based on single image data IMG_3D. Namely, the robot control unit 316 may determine whether or not the interference of the end effector model EM and the like occurs based on the merged three-dimensional position data WSDc, and perform the 3D matching processing based on the three-dimensional position data WSD.

Moreover, the camera 22 may generate the plurality of image data IMG_3D by imaging the surrounding object the plurality of times in addition to or instead of the plurality of objects OBJ. In this case, the robot control unit 316 may generate the merged three-dimensional position data WSDc (typically, the point cloud data) based on the plurality of image data IMG_3D, calculate at least one of the position and the pose of the surrounding object based on the merged three-dimensional position data WSDc, and set at least one of the position and the pose of the surrounding object model SM in the predetermined virtual space based on the calculated result of at least one of the position and the pose of the surrounding object. Then, the robot control unit 316 may generate the movement path MRf based on the end effector model EM, the robot model RM, and the surrounding object model SM at least one of the position and the pose of which is set based on at least one of the calculated result of the position and the pose of the surrounding object. As a result, at least one of the actual position and the actual pose of the surrounding object is reflected in the surrounding object model SM, and therefore, the robot control unit 316 can properly generate the movement path MRf satisfying the condition that the interference of the end effector 4, the robot 1, and the surrounding object does not occur.

Moreover, the path generation unit 315, which generates the movement path MRr that is farther from the target object OBJ_tgt than the movement path MRf is, may generate the movement path MRr based on the plurality of image data IMG_3D generated by the camera 22 imaging the plurality of objects OBJ the plurality of times. Namely, the path generation unit 315 may generate the movement path MRr based on the plurality of image data IMG_3D by performing an operation that is the same as the operation for generating the movement path MRf based on the plurality of image data IMG_3D in the first modified example of the fine movement operation. However, in this case, it is preferable that the camera 22 be positioned at a position at which it can image the plurality of objects OBJ in a period during which the path generation processing illustrated in FIG. 19 is performed to generate the movement path MRr. Namely, it is preferable that the plurality of objects OBJ are included in the angle of view of the camera 22 in the period during which the path generation processing illustrated in FIG. 19 is performed to generate the movement path MRr.

Alternatively, the path generation unit 315 or the robot control unit 316 may generate at least a part of a series of movement path including the movement paths MRr and MRf based on the plurality of image data IMG_3D generated by the camera 22 imaging the plurality of objects OBJ the plurality of times. Namely, the path generation unit 315 or the robot control unit 316 may generate at least a part of a series of movement path including movement paths MRr and MRf based on the plurality of image data IMG_3D by performing an operation that is the same as the operation for generating the movement path MRf based on the plurality of image data IMG_3D in the first modified example of the fine movement operation. Especially, the path generation unit 315 or the robot control unit 316 may generate the movement path to the process target position PTP based on the plurality of image data IMG_3D generated by the camera 22 imaging the plurality of objects OBJ the plurality of times. Namely, the path generation unit 315 or the robot control unit 316 may generate the movement path to the process target position PTP based on the plurality of image data IMG_3D by performing an operation that is the same as the operation for generating the movement path MRf based on the plurality of image data IMG_3D in the first modified example of the fine movement operation. For example, the path generation unit 315 or the robot control unit 316 may generate the movement path from a position, which is between the fine approach position PF and the process target position PTP, to the process target position PTP based on the plurality of image data IMG_3D. For example, the path generation unit 315 or the robot control unit 316 may generate the movement path from a position, which is between the fine approach position PF and the pre-waiting position PW_pre, to the process target position PTP based on the plurality of image data IMG_3D.

Moreover, in the first modified example, the imaging apparatus 2 (especially, the camera 22) may not be attached to the robot 1. The imaging apparatus 2 (especially, the camera 22) may be attached to a member that is different from the robot 1. Even in this case, the robot control unit 316 may generate the movement path MRf (alternatively, any movement path including the movement path MRr) based on the plurality of image data IMG_3D generated by the camera 22 imaging the plurality of objects OBJ the plurality of times.

Note that the control apparatus 3 may generate the movement path MRr by performing an operation that is the same as the first modified example of the fine movement operation even in a case where the rough movement operation is performed. Specifically, in a case where the rough movement operation is performed (namely, the movement path MRr is generated) by using at least one of the image data IMG_2D and IMG_3D, the control apparatus 3 may generate the movement path MRr by performing the operation that is the same as the first modified example of the fine movement operation.

### (6-1-2) Second Modified Example of Fine Movement Operation

In a second modified example, the robot control unit 316 may determine, based on the image data IMG_3D acquired from the camera 22 to generate the movement path MRf, whether or not the camera 22 should re-image the object OBJ.

The object OBJ (especially, the target object OBJ_tgt) is typically captured in the image indicated by the image data IMG_3D that is used to determine whether or not the camera 22 should re-image the object OBJ. Therefore, the robot control unit 316 may determine, based on the image data IMG_3D generated by the camera 22 imaging the object OBJ (especially, the target object OBJ_tgt), whether or not the camera 22 should re-image the object OBJ. However, at least one object positioned around the target object OBJ_tgt may be captured in the image indicated by the image data IMG_3D that is used to determine whether or not the camera 22 should re-image the object OBJ, , in addition to or instead of the target object OBJ_tgt,. Therefore, the robot control unit 316 may determine, based on the image data IMG_3D generated by the camera 22 imaging at least one object positioned around the target object OBJ_tgt, whether or not the camera 22 should re-image the object OBJ. At least one of the non-target object OBJ_ntgt and the surrounding object is one example of at least one object positioned around the target object OBJ_tgt. Note that an example in which the object OBJ (especially, the target object OBJ_tgt) is captured in the image indicated by the image data IMG_3D will be described.

The camera 22 may generate the image data IMG_3D by imaging the object OBJ on which the projection light from the projection apparatus 23 is projected. In this case, the robot control unit 316 may determine, based on the image data IMG_3D indicating the image in which the object OBJ on which the projection light is projected is captured, whether or not the camera 22 should re-image the object OBJ. Alternatively, the camera 22 may generate the image data IMG_3D by imaging then object OBJ on which the projection light from the projection apparatus 23 is not projected. In this case, the robot control unit 316 may determine, based on the image data IMG_3D indicating the image in which the object OBJ on which the projection light is not projected is captured, whether or not the camera 22 should re-image the object OBJ.

The robot control unit 316 may determine, based on the image (namely, the two-dimensional image) indicated by the image data IMG_3D, whether or not the camera 22 should re-image the object OBJ. As described above, since the camera 22 is the stereo camera, the camera 22 generates the image data IMG_3D indicating two two-dimensional images. In this case, the robot control unit 316 may use at least one of the two two-dimensional images indicated by the image data IMG_3D as the image indicated by the image data IMG_3D. Namely, the robot control unit 316 may use the image generated by at least one of the two monocular cameras of the camera 22 as the image indicated by the image data IMG_3D.

Note that the camera 22 may generate the image data IMG_3D by imaging the object OBJ on which the projection pattern is projected even in a case where the camera 22 is the monocular camera (is not the stereo camera) as described in detail later. Even in this case, the robot control unit 316 may determine, based on the image (namely, a single two-dimensional image) indicated by the image data IMG_3D generated by the camera 22 that is the monocular camera, whether or not the camera 22 re-images the object OBJ.

For example, the robot control unit 316 may extract an object image area, in which the object OBJ is captured, from the image indicated by the image data IMG_3D. Typically, the robot control unit 316 may extract the object image area, in which the target object OBJ_tgt is captured, from the image indicated by the image data IMG_3D. However, the robot control unit 316 may extract the object image area, in which an object (for example, the non-target object OBJ_ntgt or another surrounding object) positioned around the target object OBJ_tgt is captured, from the image indicated by the image data IMG_3D. Then, the robot control unit 316 may determine that the camera 22 should re-image the object OBJ in a case where a re-imaging condition that a ratio of the number of pixels whose brightness values are higher than a predetermined brightness range to a total number of pixels included in the object image area is equal to or larger than a predetermined ratio is satisfied.

Note that the robot control unit 316 may calculate at least one of the position and the pose of the object OBJ (especially, it is the target object OBJ_tgt but it may be an object that is not the target object OBJ_tgt) by performing the matching processing described above before extracting the object image area. Then, the robot control unit 316 may extract the object extraction area based on the calculated result of at least one of the position and the pose of the object OBJ (especially, it is the target object OBJ_tgt but it may be an object that is not the target object OBJ_tgt).

The re-imaging condition may include a condition based on the number of pixels, whose brightness values fall outside a predetermined brightness threshold value, of the plurality of pixels included in the object image area. For example, the re-imaging condition may include a condition based on the number of pixels, whose brightness values are higher than (namely, fall outside) an upper brightness value that is one example of the predetermined brightness threshold value, of the plurality of pixels included in the object image area. For example, the re-imaging condition may include a condition based on the number of pixels, whose brightness values are lower than (namely, fall outside) an lower brightness value that is one example of the predetermined brightness threshold value, of the plurality of pixels included in the object image area.

A first re-imaging condition that the ratio of the number of pixels whose brightness values are higher than the predetermined upper brightness value to the total number of pixels included in the object image area is equal to or larger than the predetermined ratio is one example of the re-imaging condition. The predetermined upper brightness value may be set based on an upper limit of a dynamic range of the camera 22. For example, the predetermined upper brightness value may be set to the upper limit of the dynamic range of the camera 22. In this case, in a case where the first re-imaging condition is satisfied, there is a possibility that the brightness of the object image area is high, and as a result, the object image area is an area that is blown out to white. Namely, there is a possibility that the brightness value of the pixel in which the object OBJ should be captured is saturated. In this case, even if the merged three-dimensional position data WSDc is generated based on the plurality of image data IMG_3D including such image data IMG_3D as described in the first modified example of the fine movement operation, there is a possibility that the number of points included in the merged three-dimensional position data WSDc is not sufficiently large. Namely, even if the merged three-dimensional position data WSDc is generated, there is a possibility that the missing information related to the non-target object OBJ_ntgt (namely, the missing point of the non-target object OBJ_ntgt) cannot be supplemented by the merged three-dimensional position data WSDc. As a result, there is a possibility that the surrounding object model SM generated based on the merged three-dimensional position data WSDc does not accurately indicate the three-dimensional model of the non-target object OBJ_ntgt. Namely, there is a possibility that an accuracy of the surrounding object model SM deteriorates. In this case, there is a possibility that an accuracy of a determination (it is referred to as an "interference determination" in the below-described description) whether or not the interference of at least one of the end effector model EM, the robot model RM, and the surrounding object model SM (the non-target object model OM_ntgt) deteriorates. As a result, there is a possibility that the interference if at least one of the end effector 4, the robot 1, and the surrounding object (especially, the interference of the surrounding object) occurs in a case where the tool center point TCP moves along the movement path MRf generated so as to satisfy the condition that the interference of at least one of the end effector model EM, the robot model RM, and the surrounding object model SM (the non-target object model OM_ntgt) does not occur. Therefore, in this case, the robot control unit 316 may determine that the camera 22 should re-image the object OBJ in order to newly acquire the image data IMG_3D that can prevent a deterioration of the accuracy of the surrounding object model SM to prevent a deterioration of the accuracy of the interference determination.

A second re-imaging condition that the ratio of the number of pixels whose brightness values are lower than the predetermined lower brightness value to the total number of pixels included in the object image area is equal to or larger than the predetermined ratio is another example of the re-imaging condition. The predetermined lower brightness value may be set based on a lower limit of the dynamic range of the camera 22. For example, the predetermined lower brightness value may be set to the lower limit of the dynamic range of the camera 22. In this case, in a case where the second re-imaging condition is satisfied, there is a possibility that the brightness of the object image area is low, and as a result, the object image area is an area that is blocked up shadows. Namely, there is a possibility that the object OBJ is not captured in the image indicated by the image data IMG_3D. In this case, even if the merged three-dimensional position data WSDc is generated based on the plurality of image data IMG_3D including such image data IMG_3D as described in the first modified example of the fine movement operation, there is a possibility that the number of points included in the merged three-dimensional position data WSDc is not sufficiently large. Namely, even if the merged three-dimensional position data WSDc is generated, there is a possibility that the missing information related to the non-target object OBJ_ntgt (namely, the missing point of the non-target object OBJ_ntgt) cannot be supplemented by the merged three-dimensional position data WSDc. As a result, there is a possibility that the surrounding object model SM generated based on the merged three-dimensional position data WSDc does not accurately indicate the three-dimensional model of the non-target object OBJ_ntgt. Namely, there is a possibility that the accuracy of the surrounding object model SM deteriorates. In this case, there is a possibility that the accuracy of the interference determination deteriorates. As a result, there is a possibility that the interference if at least one of the end effector 4, the robot 1, and the surrounding object (especially, the interference of the surrounding object) occurs in a case where the tool center point TCP moves along the movement path MRf generated so as to satisfy the condition that the interference of at least one of the end effector model EM, the robot model RM, and the surrounding object model SM (the non-target object model OM_ntgt) does not occur. Therefore, in this case, the robot control unit 316 may determine that the camera 22 should re-image the object OBJ in order to newly acquire the image data IMG_3D that can prevent the deterioration of the accuracy of the surrounding object model SM to prevent the deterioration of the accuracy of the interference determination.

In this way, considering that one of a purposes of an operation for determining whether or not the camera 22 should re-image the object OBJ is to prevent the deterioration of the accuracy of the interference determination by preventing the deterioration of the accuracy of the surrounding object model SM generated based on the merged three-dimensional position data WSDc, the robot control unit 316 may perform the second modified example of the fine movement operation in combination with the first modified example of the fine movement operation described above. However, the robot control unit 316 may perform the second modified example of the fine movement operation without performing the first modified example of the fine movement operation described above.

In a case where it is determined that the camera 22 should re-image the object OBJ, the robot control unit 316 may control the camera 22 to re-image the object OBJ. However, in order to newly acquire the image data IMG_3D that can prevent the deterioration of the accuracy of the surrounding object model SM to prevent the deterioration of the accuracy of the interference determination, the robot control unit 316 may change the relative positional relationship between the object OBJ and the camera 22 and then control the camera 22 to re-image the object OBJ. Namely, the robot control unit 316 may generate the control signal for controlling the robot 1 to change the relative positional relationship between the object OBJ and the camera 22, and then control the camera 22 to re-image the object OBJ. As a result, at least one of the position and the pose of the camera 22 that images the object OBJ is changed, and therefore, it is expected that a ratio of the area that is blown out to white or is blocked up shadows in the image indicated by the image data IMG_3D is reduced, compared to a case where the position and the pose of the camera 22 that images the object OBJ are not changed. Therefore, it is expected that the deterioration of the accuracy of the surrounding object model SM is prevented, and as a result, the deterioration of the accuracy of the interference determination is prevented.

Therefore, the camera 22 may newly generate the image data IMG_3D by re-imaging the object OBJ after the relative positional relationship between the object OBJ and the camera 22 is changed. Here, since the relative positional relationship between the object OBJ and the camera 22 is changed, the camera 22 may image or may not image the object OBJ, which has been imaged by the camera 22 before the relative positional relationship between the object OBJ and the camera 22 is changed, after the relative positional relationship between the object OBJ and the camera 22 is changed. The camera 22 may image or may not image the object OBJ, which has not been imaged by the camera 22 before the relative positional relationship between the object OBJ and the camera 22 is changed, after the relative positional relationship between the object OBJ and the camera 22 is changed.

Then, the robot control unit 316 may generate the movement path MRf based on the newly generated image data IMG_3D. For example, the robot control unit 316 may calculate at least one of the position and the pose of the target object OBJ_tgt based on the image data IMG_3D newly generated after the relative positional relationship between the object OBJ and the camera 22 is changed. Alternatively, the robot control unit 316 may calculate at least one of the position and the pose of the target object OBJ_tgt based on the image data IMG_2D newly generated after the relative positional relationship between the object OBJ and the camera 22 is changed. Alternatively, the robot control unit 316 may calculate at least one of the position and the pose of the target object OBJ_tgt based on at least one of the image data IMG_2D and IMG_3D that has been already generated before the relative positional relationship between the object OBJ and the camera 22 is changed. Then, the robot control unit 316 may generate the movement path MRf based on the calculated result of at least one of the position and the pose of the target object OBJ_tgt, the image data IMG_3D newly generated after the relative positional relationship between the object OBJ and the camera 22 is changed, and at least one of the end effector model EM, the robot model RM, and the surrounding object model SM. Namely, the robot control unit 316 may generate the movement path MRf satisfying the condition that the interference of at least one of the end effector model EM, the robot model RM, and the surrounding object model SM does not occur. As one example, as described in the third modified example of the path generation processing, the robot control unit 316 may calculate at least one of the position and the pose of the surrounding object based on the newly generated image data IMG_3D, and generate the movement path MRf based on not only at least one of the end effector model EM, the robot model RM, and the surrounding object model SM, and the calculated result of at least one of the position and the pose of the target object OBJ_tgt but also the calculated result of at least one of the position and the pose of the surrounding object. Specifically, the robot control unit 316 may set at least one of the position and the pose of the surrounding object model SM based on the calculated result of at least one of the position and the pose of the surrounding object, and generate the movement path MRf satisfying the condition that the interference of at least one of the end effector model EM, the robot model RM, and the surrounding object model SM does not occur. For example, as described in the third modified example of the path generation processing, the robot control unit 316 may generate the point cloud model of surrounding object based on the newly generated image data IMG_3D, and generate the movement path MRf by using the generated point cloud model of the surrounding object as the surrounding object model SM. As a result, the robot control unit 316 can determine with high accuracy whether the interference of at least one of the end effector 4, the robot 1, and the surrounding object occurs by determining whether or not the interference of at least one of the end effector model EM, the robot model RM, and the surrounding object model SM occurs. Therefore, the robot control unit 316 can properly generate the movement path MRf that does not cause the interference of at least one of the end effector 4, the robot 1, and the surrounding object (especially, interference of the surrounding object).

Note that determining whether or not the camera 22 should re-image the object OBJ may be considered to be equivalent to determining whether or not the relative positional relationship between the object OBJ and the camera 22 should be changed, because the relative positional relationship between the object OBJ and the camera 22 is changed in a case where it is determined that the camera 22 should re-image the object OBJ.

On the other hand, in a case where it is determined that the camera 22 may not re-image the object OBJ, the camera 22 may not re-image the object OBJ, and the relative positional relationship between the object OBJ and the camera 22 may not be changed. In this case, the robot control unit 316 may generate the movement path MRf based on the image data IMG_3D that is used to determine whether or not the camera 22 should re-image the object OBJ. Alternatively, the robot control unit 316 may generate the movement path MRf based on at least one of the image data IMG_2D and IMG_3D, which is different from the image data IMG_3D that is used to determine whether or not the camera 22 should re-image the object OBJ. Note that the operation for generating the movement path MRf based on the image data IMG_3D in a case where it is determined that the camera 22 may not re-image the object OBJ may be the same as the operation for generating the movement path MRf based on image data IMG_3D in a case where it is determined that the camera 22 should re-image the object OBJ, and therefore, a detailed description thereof is omitted.

In a case where the merged three-dimensional position data WSDc is generated based on the plurality of image data IMG_3D as described in the first modified example of the fine movement operation described above, the robot control unit 316 may determine whether or not the camera 22 should re-image the object OBJ after generating the merged three-dimensional position data WSDc (especially, after performing the interference determination using the surrounding object model SM generated based on the merged three-dimensional position data WSDc). Specifically, first, the camera 22 may generates the plurality of image data IMG_3D by imaging the object OBJ the plurality of times, respectively, and the robot control unit 316 may generate the merged three-dimensional position data WSDc based on the plurality of generated image data IMG_3D, and perform the interference determination using the surrounding object model SM generated based on the generated merged three-dimensional position data WSDc. After or in parallel with the interference determination, the robot control unit 316 may determine whether or not the camera 22 should re-image the object OBJ based on at least one of the plurality of image data IMG_3D that are used to generate the merged three-dimensional position data WSDc. In a case where it is determined that the camera 22 should re-image the object OBJ, the robot control unit 316 may change the relative positional relationship between the object OBJ and the camera 22. Then, the camera 22 may generate the plurality of image data IMG_3D by imagining the object OBJ the plurality of times, respectively. Then, the robot control unit 316 may newly generate the merged three-dimensional position data WSDc based on the plurality of newly generated image data IMG_3D, and newly perform the interference determination using the surrounding object model SM generated based on the newly generated merged three-dimensional position data WSDc. Namely, the robot control unit 316 may generate the movement path MRf.

As described above, the light intensity of the projection light may change in a case where the camera 22 images the plurality of objects OBJ to generate the merged three-dimensional position data WSDc. Therefore, the robot control unit 316 may control the projection apparatus 23 so that the light intensity of the projection light from the projection apparatus 23 changes each time the camera 22 images the object OBJ before determining whether or not the camera 22 should re-image the object OBJ (especially before changing the relative positional relationship between the object OBJ and the camera 22 as a result of the determination that the camera 22 should re-image the object OBJ). Specifically, the robot control unit 316 may control the projection apparatus 23 so that the camera 22 images the plurality of objects OBJ, on which the projection light having the first light intensity is projected, at least once, and the camera 22 images the plurality of objects OBJ, on which the projection light having the second light intensity higher than the first light intensity is projected, at least once.

Here, in a case where the first re-imaging condition that "the ratio of the number of pixels whose brightness values are higher than the predetermined upper brightness value to the total number of pixels included in the object image area is equal to or larger than the predetermined ratio" is used as the re-imaging condition as described above, the robot control unit 316 may determine whether or not the camera 22 should re-image the object OBJ based on the image data IMG_3D, which is generated by the camera 22 imaging the object OBJ on which the projection light having the first light intensity is projected, of the plurality of image data IMG_3D that are used to generate the merged three-dimensional position data WSDc before changing the relative positional relationship between the object OBJ and the camera 22. Namely, the robot control unit 316 may determine whether or not the camera 22 should re-image the object OBJ based on the image data IMG_3D, which is generated by the camera 22 imaging the object OBJ on which the projection light having a lower light intensity (preferably, the projection light having the lowest light intensity) is projected, of the plurality of image data IMG_3D that are used to generate the merged three-dimensional position data WSDc before changing the relative positional relationship between the object OBJ and the camera 22. Here, the image indicated by the image data IMG_3D, which is generated by the camera 22 imaging the object OBJ on which the projection light having the first light intensity is projected, is darker overall than the image indicated by the image data IMG_3D, which is generated by the camera 22 imaging the object OBJ on which the projection light having the second light intensity is projected. As a result, in a case where the re-imaging condition is satisfied in the image indicated by the image data IMG_3D, which is generated by the camera 22 imaging the object OBJ on which the projection light having the first light intensity is projected, it is likely that the re-imaging condition is also satisfied in the image indicated by the image data IMG_3D, which is generated by the camera 22 imaging the object OBJ on which the projection light having the second light intensity is projected. This is because it is likely that a bright image is also blown out to white in a case where a dark image is blown out to white. Therefore, in a case where the first re-imaging condition is used, the robot control unit 316 can determine whether or not the camera 22 should re-image the object OBJ so as to surely generate the image data IMG_3D that can prevent the deterioration of the accuracy of the surrounding object model SM to prevent the deterioration of the accuracy of the interference determination by determining whether or not the camera 22 should re-image the object OBJ based on the image data IMG_3D indicating the darker (preferably, the darkest) image.

Alternatively, in a case where the second re-imaging condition that "the ratio of the number of pixels whose brightness values are lower than the predetermined lower brightness value to the total number of pixels included in the object image area is equal to or larger than the predetermined ratio" is used as the re-imaging condition as described above, the robot control unit 316 may determine whether or not the camera 22 should re-image the object OBJ based on the image data IMG_3D, which is generated by the camera 22 imaging the object OBJ on which the projection light having the second light intensity is projected, of the plurality of image data IMG_3D that are used to generate the merged three-dimensional position data WSDc before changing the relative positional relationship between the object OBJ and the camera 22. Namely, the robot control unit 316 may determine whether or not the camera 22 should re-image the object OBJ based on the image data IMG_3D, which is generated by the camera 22 imaging the object OBJ on which the projection light having a higher light intensity (preferably, the projection light having the highest light intensity) is projected, of the plurality of image data IMG_3D that are used to generate the merged three-dimensional position data WSDc before changing the relative positional relationship between the object OBJ and the camera 22. Here, the image indicated by the image data IMG_3D, which is generated by the camera 22 imaging the object OBJ on which the projection light having the second light intensity is projected, is brighter overall than the image indicated by the image data IMG_3D, which is generated by the camera 22 imaging the object OBJ on which the projection light having the first light intensity is projected. As a result, in a case where the re-imaging condition is satisfied in the image indicated by the image data IMG_3D, which is generated by the camera 22 imaging the object OBJ on which the projection light having the second light intensity is projected, it is likely that the re-imaging condition is also satisfied in the image indicated by the image data IMG_3D, which is generated by the camera 22 imaging the object OBJ on which the projection light having the first light intensity is projected. This is because it is likely that a dark image is also blocked up shadow in a case where a bright image is blocked up shadow. Therefore, in a case where the second re-imaging condition is used, the robot control unit 316 can determine whether or not the camera 22 should re-image the object OBJ so as to surely generate the image data IMG_3D that can prevent the deterioration of the accuracy of the surrounding object model SM to prevent the deterioration of the accuracy of the interference determination by determining whether or not the camera 22 should re-image the object OBJ based on the image data IMG_3D indicating the brighter (preferably, the brightest) image.

As described above, the exposure time of the camera 22 may change in a case where the camera 22 images the plurality of objects OBJ to generate the merged three-dimensional position data WSDc. Therefore, the robot control unit 316 may control the projection apparatus 23 so that the exposure time of the camera 22 changes each time the camera 22 images the object OBJ before determining whether or not the camera 22 should re-image the object OBJ (especially before changing the relative positional relationship between the object OBJ and the camera 22 as a result of the determination that the camera 22 should re-image the object OBJ). Specifically, the robot control unit 316 may control the projection apparatus 23 so that the camera 22, whose exposure time is set to the first exposure time, images the plurality of objects OBJ at least once, and the camera 22, whose exposure time is set to the second exposure time longer than the first exposure time, images the plurality of objects OBJ at least once.

Here, in a case where the first re-imaging condition that "the ratio of the number of pixels whose brightness values are higher than the predetermined upper brightness value to the total number of pixels included in the object image area is equal to or larger than the predetermined ratio" is used as the re-imaging condition as described above, the robot control unit 316 may determine whether or not the camera 22 should re-image the object OBJ based on the image data IMG_3D, which is generated by the camera 22 whose exposure time is set to the first exposure time, of the plurality of image data IMG_3D that are used to generate the merged three-dimensional position data WSDc before changing the relative positional relationship between the object OBJ and the camera 22. Namely, the robot control unit 316 may determine whether or not the camera 22 should re-image the object OBJ based on the image data IMG_3D, which is generated by the camera 22 whose exposure time is set to a shorter exposure time (preferably, the shortest exposure time), of the plurality of image data IMG_3D that are used to generate the merged three-dimensional position data WSDc before changing the relative positional relationship between the object OBJ and the camera 22. Here, the image indicated by the image data IMG_3D, which is generated by the camera 22 whose exposure time is set to the first exposure time, is darker overall than the image indicated by the image data IMG_3D, which is generated by the camera 22 whose exposure time is set to the second exposure time. As a result, in a case where the re-imaging condition is satisfied in the image indicated by the image data IMG_3D, which is generated by the camera 22 whose exposure time is set to the first exposure time, it is likely that the re-imaging condition is also satisfied in the image indicated by the image data IMG_3D, which is generated by the camera 22 whose exposure time is set to the second exposure time. This is because it is likely that a bright image is also blown out to white in a case where a dark image is blown out to white. Therefore, in a case where the first re-imaging condition is used, the robot control unit 316 can determine whether or not the camera 22 should re-image the object OBJ so as to surely generate the image data IMG_3D that can prevent the deterioration of the accuracy of the surrounding object model SM to prevent the deterioration of the accuracy of the interference determination by determining whether or not the camera 22 should re-image the object OBJ based on the image data IMG_3D indicating the darker (preferably, the darkest) image.

Alternatively, in a case where the first re-imaging condition that "the ratio of the number of pixels whose brightness values are lower than the predetermined lower brightness value to the total number of pixels included in the object image area is equal to or larger than the predetermined ratio" is used as the re-imaging condition as described above, the robot control unit 316 may determine whether or not the camera 22 should re-image the object OBJ based on the image data IMG_3D, which is generated by the camera 22 whose exposure time is set to the second exposure time, of the plurality of image data IMG_3D that are used to generate the merged three-dimensional position data WSDc before changing the relative positional relationship between the object OBJ and the camera 22. Namely, the robot control unit 316 may determine whether or not the camera 22 should re-image the object OBJ based on the image data IMG_3D, which is generated by the camera 22 whose exposure time is set to a longer exposure time (preferably, the longest exposure time), of the plurality of image data IMG_3D that are used to generate the merged three-dimensional position data WSDc before changing the relative positional relationship between the object OBJ and the camera 22. Here, the image indicated by the image data IMG_3D, which is generated by the camera 22 whose exposure time is set to the second exposure time, is brighter overall than the image indicated by the image data IMG_3D, which is generated by the camera 22 whose exposure time is set to the first exposure time. As a result, in a case where the re-imaging condition is satisfied in the image indicated by the image data IMG_3D, which is generated by the camera 22 whose exposure time is set to the second exposure time, it is likely that the re-imaging condition is also satisfied in the image indicated by the image data IMG_3D, which is generated by the camera 22 whose exposure time is set to the first exposure time. This is because it is likely that a dark image is also blocked up shadow in a case where a bright image is blocked up shadow. Therefore, in a case where the second re-imaging condition is used, the robot control unit 316 can determine whether or not the camera 22 should re-image the object OBJ so as to surely generate the image data IMG_3D that can prevent the deterioration of the accuracy of the surrounding object model SM to prevent the deterioration of the accuracy of the interference determination by determining whether or not the camera 22 should re-image the object OBJ based on the image data IMG_3D indicating the brighter (preferably, the brightest) image.

Note that, the robot control unit 316 may determine whether or not the camera 22 should re-image the object OBJ based on image data IMG_3D that is different from the plurality of image data IMG_3D that are used to generate the merged three-dimensional position data WSDc in determining whether or not the camera 22 should re-image the object OBJ after generating the merged three-dimensional position data WSDc. Even in this case, the robot control unit 316 may determine whether or not the camera 22 should re-image the object OBJ based on the image data IMG_3D indicating the darker (preferably, the darkest) image in a case where the first re-imaging condition is used. For example, the robot control unit 316 may determine whether or not the camera 22 should re-image the object OBJ based on the image data IMG_3D, which is generated by the camera 22 imaging the object OBJ on which the projection light having the lower light intensity (preferably, the lowest light intensity) is projected. For example, the robot control unit 316 may determine whether or not the camera 22 should re-image the object OBJ based on the image data IMG_3D, which is generated by the camera 22 whose exposure time is set to the shorter exposure time (preferably, the shortest exposure time). On the other hand, the robot control unit 316 may determine whether or not the camera 22 should re-image the object OBJ based on the image data IMG_3D indicating the brighter (preferably, the brightest) image in a case where the second re-imaging condition is used. For example, the robot control unit 316 may determine whether or not the camera 22 should re-image the object OBJ based on the image data IMG_3D, which is generated by the camera 22 imaging the object OBJ on which the projection light having the higher light intensity (preferably, the highest light intensity) is projected. For example, the robot control unit 316 may determine whether or not the camera 22 should re-image the object OBJ based on the image data IMG_3D, which is generated by the camera 22 whose exposure time is set to the longer exposure time (preferably, the longest exposure time).

In a case where the merged three-dimensional position data WSDc is generated based on the plurality of image data IMG_3D as described in the first modified example of the fine movement operation described above, the robot control unit 316 may determine whether or not the camera 22 should re-image the object OBJ before generating the merged three-dimensional position data WSDc. For example, the robot control unit 316 may determine whether or not the camera 22 should re-image the object OBJ based on at least one of the plurality of image data IMG_3D. The robot control unit 316 may generate the merged three-dimensional position data WSDc based on the plurality of image data IMG_3D after it is determined that the camera 22 may not re-image the object OBJ (namely, it is determined that the image data IMG_3D from which the object OBJ is detectable and at least one of the position and the pose of the object OBJ is calculatable is generated).

In a case where the merged three-dimensional position data WSDc is generated based on the plurality of image data IMG_3D after it is determined that the camera 22 may not re-image the object OBJ, at least one image data IMG_3D that is used to determine whether or not the camera 22 should re-image the object OBJ may be the same as at least one of the plurality of image data IMG_3D that is used to generate the merged three-dimensional position data WSDc. Alternatively, at least one image data IMG_3D that is used to determine whether or not the camera 22 should re-image the object OBJ may be different from at least one of the plurality of image data IMG_3D that is used to generate the merged three-dimensional position data WSDc. In this case, the camera 22 may generate at least one of the plurality of image data IMG_3D, which is used to generate the merged three-dimensional position data WSDc, by newly imaging the plurality of objects OBJ at least once after it is determined that the camera 22 may not re-image the object OBJ based on the image data IMG_3D.

Note that the robot control unit 316 determines whether or not the camera 22 should re-image the object OBJ (especially, the target object OBJ_tgt) based on single image data IMG_3D in the above-described description. However, the robot control unit 316 may determine whether or not the camera 22 should re-image the object OBJ (especially, the target object OBJ_tgt) based on a plurality of image data IMG_2D. For example, the robot control unit 316 may acquire a plurality of images generated by the same monocular camera (for example, a right monocular camera or a left monocular camera of the stereo camera 22) from the plurality of image data IMG_3D, respectively, merge the plurality of images into a single image, extract the object image area from the merged image, and determine whether or not the extracted object image area satisfies the re-imaging condition. Alternatively, the robot control unit 316 may extract a plurality of object image areas from the plurality of images, respectively, and determine whether or not the plurality of extracted object image areas satisfy the re-imaging condition. In this case, the robot control unit 316 may determine that the camera 22 should re-image the object OBJ in a case where at least one of the plurality of object image areas satisfies the re-imaging condition. The robot control unit 316 may determine that the camera 22 should re-image the object OBJ in a case where all of the object image areas satisfy the re-imaging condition.

Note that the control apparatus 3 may generate the movement path MRr by performing an operation that is the same as the second modified example of the fine movement operation even in a case where the rough movement operation is performed. Specifically, in a case where the rough movement operation is performed (namely, a movement path MRr is generated) by using at least one of the image data IMG_2D and IMG_3D, the control apparatus 3 may generate the movement path MRr by performing the operation that is the same as the second modified example of the fine movement operation.

### (6-1-3) Third Modified Example of Fine Movement Operation

In the first modified example of fine movement operation, the control apparatus 3 (especially, the robot control unit 316) generates the plurality of three-dimensional position data WSD (typically, the point cloud data) based on the plurality of image data IMG_3D, generate single merged three-dimensional position data WSDc by merging the plurality of three-dimensional position data WSD (typically, the point cloud data), and generates the three-dimensional model of the non-target object OBJ_ntgt as the surrounding object model SM based on the merged three-dimensional position data WSDc. As a result, the robot control unit 316 can determine with high accuracy whether or not the interference of at least one of the end effector 4, the robot 1, and the surrounding object (especially, the non-target object OBJ_ntgt) occurs by performing the above-described interference determination using the surrounding object model SM generated from the merged three-dimensional position data WSDc. Therefore, in the below-described description, an operation for generating the plurality of three-dimensional position data WSD (typically, the point cloud data) based on the plurality of image data IMG_3D, generating the single merged three-dimensional position data WSDc by merging the plurality of three-dimensional position data WSD (typically, the point cloud data), and generating the three-dimensional model of the non-target object OBJ_ntgt as the surrounding object model SM based on the merged three-dimensional position data WSDc in the first modified example of the fine movement operation is referred to as a first high accuracy interference determination operation for convenience of description.

Similarly, in the second modified example of the fine movement operation, the control apparatus 3 (especially, the robot control unit 316) determines whether or not the camera 22 should re-image the object OBJ based on the image data IMG_3D, changes the relative positional relationship between the object OBJ and the camera 22 in a case where it is determined that the camera 22 should re-image the object OBJ, and then controls the camera 22 to re-image the object OBJ. then controls the camera 22 to take a picture of the object OBJ again. As a result, the robot control unit 316 can determine with high accuracy whether or not the interference of at least one of the end effector 4, the robot 1, and the surrounding object (especially, the non-target objects OBJ_ntgt) occurs. Therefore, in the below-described description, for convenience of description, in the second modified example of the fine movement operation, an operation for determining whether or not the camera 22 should re-image the object OBJ based on the image data IMG_3D, changing the relative positional relationship between the object OBJ and the camera 22 in a case where it is determined that the camera 22 should re-image the object OBJ, and then controlling the camera 22 to re-image the object OBJ in the second modified example of the fine movement operation is referred to as a second high accuracy interference determination operation.

In a third modified example of the fine movement operation, the robot control unit 316 may perform the first high accuracy interference determination operation in a case where a predetermined execution condition is satisfied. On the other hand, the robot control unit 316 may not perform the first high accuracy interference determination operation in a case where the predetermined execution condition is not satisfied. In this case, the robot control unit 316 may not acquire the plurality of image data IMG_3D, merge the plurality of three-dimensional position data WSD (typically, the point cloud data) to generate the single merged three-dimensional position data WSDc, and generate the three-dimensional model SM of the non-target object OBJ_ntgt based on the merged three-dimensional position data WSDc in order to generate the movement path MRf. Namely, the robot control unit 316 may generate the movement path MRr based on at least one of the image data IMG_2D and IMG_3D without acquiring the plurality of image data IMG_3D. Note that the operation for generating the movement path MRf based on at least one of image data IMG_2D and IMG_3D has been already described in describing the operation from the step S32 to the step S34 in FIG. 6, so a detailed thereof is omitted, however, an example is briefly described below. For example, the robot control unit 316 may calculate at least one of the position and the pose of the target object OBJ_tgt by performing the matching processing using at least one of the image data IMG_2D and IMG_3D, and generate the movement path MRf based on the calculated result of at least one of the position and the pose of the target object OBJ_tgt and at least one of the end effector model EM, the robot model RM, and the surrounding object model SM. Here, the robot control unit 316 may use at least one of the image data IMG_2D and IMG_3D newly generated by the imaging apparatus 2 to generate the movement path MRf. Alternatively, the robot control unit 316 may use at least one of the image data IMG_2D and IMG_3D generated by the imaging apparatus 2 to determine whether or not the predetermined execution condition, which should be satisfied in a case where the first high accuracy interference determination operation is performed as described below, is satisfied. Moreover, in a case where the non-target object OBJ_ntgt is captured in the image indicated by the image data IMG_3D, the robot control unit 316 may generate the movement path MRf based on not only the calculated result of at least one of the position and the pose of the target object OBJ_tgt and at least one of the end effector model EM, the robot model RM, and the surrounding object model SM, but also the image data IMG_3D as described in the third modified example of the path generation processing. For example, the robot control unit 316 may calculate at least one of the position and the pose of the surrounding object based on the image data IMG_3D, set at least one of the position and the pose of the surrounding object model SM based on the calculated result of at least one of the position and the pose of the surrounding object, and then generate the movement path MRf satisfying the condition that the interference of at least one of the end effector model EM, the robot model RM, and the surrounding object models SM does not occur. For example, the robot control unit 316 may generate the point cloud model of the surrounding object based on the image data IMG_3D, and generate the movement path MRf by using the generated point cloud model of the surrounding object as the surrounding object model SM. As a result, a time required to generate the movement path MRf is reduced, compared to a case where the first high accuracy interference determination operation is always performed to generate the movement path MRf. Namely, a throughput for generating the movement path MRf is improved.

Similarly, in the third modified example of the fine movement operation, the robot control unit 316 may perform the second high accuracy interference determination operation in a case where the predetermined execution condition is satisfied. On the other hand, the robot control unit 316 may not perform the second high accuracy interference determination operation in a case where the predetermined execution condition is not satisfied. In this case, the camera 22 may not re-image the object OBJ. As a result, the time required to generate the movement path MRf is reduced, compared to a case where the second high accuracy interference determination operation is always performed to generate the movement path MRf. Namely, the throughput for generating the movement path MRf is improved.

The predetermined execution condition may include a condition related to an index value that is calculated based on at least one of image data IMG_2D and IMG_3D generated by the imaging apparatus 2 imaging the target object OBJ_tgt before the first and second high accuracy interference determination operations are performed. In this case, the robot control unit 316 may calculate the index value based on at least one of the image data IMG_2D and IMG_3D generated by the imaging apparatus 2 imaging the target object OBJ_tgt before the first and second high accuracy interference determination operations are performed, and determine whether or not the predetermined execution condition is satisfied based on the index value.

The matching similarity, which is calculated by the matching processing using at least one of the image data IMG_2D and IMG_3D, is one example of the index value. Especially, the matching similarity of the target object OBJ_tgt, which is calculated by the matching processing using at least one of the image data IMG_2D and IMG_3D, is one example of the index value. In this case, the robot control unit 316 may use the matching similarity calculated by the 2D matching processing as the index value. The robot control unit 316 may use the matching similarity calculated by the 3D matching processing as the index value. The robot control unit 316 may use the matching similarity that is calculated based on the matching similarity calculated by the 2D matching processing and the matching similarity calculated by the 3D matching processing as the index value. At least one of an average value and a center value of the matching similarity calculated by the 2D matching processing and the matching similarity calculated by the 3D matching processing is one example of the matching similarity that is calculated based on the matching similarity calculated by the 2D matching processing and the matching similarity calculated by the 3D matching processing.

Here, it is expected to be more likely that a large part of the target object OBJ_tgt is captured in the image indicated by at least one of the image data IMG_2D and IMG_3D as the matching similarity is higher. Namely, it is expected that a ratio of a non-exposed part of the target object OBJ_tgt, which is hidden by an object (typically, the non-target object OBJ_ntgt) around the target object OBJ_tgt, to the entire target object OBJ_tgt is smaller. In other words, it is expected to be more likely that the non-target object OBJ_ntgt does not overlap with the target object OBJ_tgt or that a degree of an overlap between the target object OBJ_tgt and the non-target object OBJ_ntgt is small. As a result, it is expected to be less likely that the non-target object OBJ_ntgt, which cannot be accurately detected by the matching processing, exists around the target object OBJ_tgt. Namely, it is expected to be less likely that the non-target object OBJ_ntgt, which cannot be accurately detected by the matching processing, is positioned around the target object OBJ_tgt in an arrangement aspect that interferes with the end effector 4. Therefore, in this case, even in a case where the first and second high accuracy interference determination operations are not performed, it is likely that the robot control unit 316 can generate the movement path MRr satisfying the condition that the interference of at least one of the end effector 4, the robot 1, and the surrounding object does not occur.

Therefore, in a case where the matching similarity is used as the index value, the robot control unit 316 may use a condition "the index value (namely, the matching similarity) is lower than a predetermined first execution determination threshold value" as the execution condition. Note that the first execution determination threshold value is typically larger than the matching determination threshold value described above. However, the first execution determination threshold value may not be larger than the matching determination threshold value. In this case, the robot control unit 316 may perform at least one of the first and second high accuracy interference determination operations in a case where the matching similarity is lower than the predetermined first execution determination threshold value. On the other hand, the robot control unit 316 may not perform the first and second high accuracy interference determination operations in a case where the matching similarity is higher than the predetermined first execution determination threshold value. As a result, the robot control unit 316 can properly perform at least one of the first and second high accuracy interference determination operations in a situation where it is desirable to perform at least one of the first and second high accuracy interference determination operations because the matching similarity is low. As a result, the robot control unit 316 can properly generate the movement path MRf satisfying the condition that the interference of at least one of the end effector 4, the robot 1, and the surrounding object does not occur. On the other hand, the robot control unit 316 does not perform at least one of the first and second high accuracy interference determination operations in a situation where there is no high necessity to perform at least one of the first and second high accuracy interference determination operations because the matching similarity is high. As a result, the throughput for generating the movement path MRf is improved as described above.

A data loss amount, which indicates an amount of a loss of data related to the object OBJ in the three-dimensional position data WSD generated based on the image data IMG_3D is another example of the index value. Especially, a data loss amount, which indicates an amount of a loss of data related to the target object OBJ_tgt in the three-dimensional position data WSD generated based on the image data IMG_3D is another example of the index value. For example, a point cloud loss amount, which indicates a degree of a loss of the point cloud of the target object OBJ_tgt in the point cloud generated as the three-dimensional position data WSD, is one example of the data loss amount. The point cloud loss amount may be an index value that is proportional to a size of an area of the target object OBJ_tgt whose three-dimensional position is not indicated by the three-dimensional position data WSD. Namely, the point cloud loss amount may be an index value that is proportional to the size of the area of the target object OBJ_tgt whose three-dimensional position cannot be calculated based on the image data IMG_3D. The point cloud loss amount may be an index value that is proportional to an amount of data of the three-dimensional position of the target object OBJ_tgt that is missing from the three-dimensional position data WSD. For example, a depth loss amount, which indicates a degree of a loss of the depth of the target object OBJ_tgt in the image indicated by the depth image data generated as the three-dimensional position data WSD, is one example of the data loss amount. The depth loss amount may be an index value that is proportional to a size (for example, the number of pixels) of an area of the target object OBJ_tgt whose three-dimensional position (the depth in this case) is not indicated by the three-dimensional position data WSD. Namely, the point cloud loss amount may be an index value that is proportional to the size of the area of the target object OBJ_tgt whose three-dimensional position (the depth) cannot be calculated based on the image data IMG_3D. The depth loss amount may be an index value that is proportional to an amount of data of the three-dimensional position (the depth) of the target object OBJ_tgt that is missing from the three-dimensional position data WSD.

Here, it is expected to be more likely that a large part of the target object OBJ_tgt is captured in the image indicated by at least one of the image data IMG_2D and IMG_3D as the data loss amount is smaller. Namely, it is expected that the ratio of the non-exposed part of the target object OBJ_tgt, which is hidden by the object (typically, the non-target object OBJ_ntgt) around the target object OBJ_tgt, to the entire target object OBJ_tgt is smaller. In other words, it is expected to be more likely that the non-target object OBJ_ntgt does not overlap with the target object OBJ_tgt or that the degree of the overlap between the target object OBJ_tgt and the non-target object OBJ_ntgt is small. As a result, it is expected to be less likely that the non-target object OBJ_ntgt, which cannot be accurately detected by the matching processing, exists around the target object OBJ_tgt. Namely, it is expected to be less likely that the non-target object OBJ_ntgt, which cannot be accurately detected by the matching processing, is positioned around the target object OBJ_tgt in an arrangement aspect that interferes with the end effector 4. Therefore, in this case, even in a case where the first and second high accuracy interference determination operations are not performed, it is likely that the robot control unit 316 can generate the movement path MRr satisfying the condition that the interference of at least one of the end effector 4, the robot 1, and the surrounding object does not occur.

Therefore, in a case where the data loss amount is used as the index value, the robot control unit 316 may use a condition "the index value (namely, the data loss amount) is larger than a predetermined second execution determination threshold value" as the execution condition. In this case, the robot control unit 316 may perform at least one of the first and second high accuracy interference determination operations in a case where the data loss amount is larger than the predetermined second execution determination threshold value. On the other hand, the robot control unit 316 may not perform the first and second high accuracy interference determination operations in a case where the data loss amount is smaller than the predetermined second execution determination threshold value. As a result, the robot control unit 316 can properly perform at least one of the first and second high accuracy interference determination operations in a situation where it is desirable to perform at least one of the first and second high accuracy interference determination operations because the data loss amount is large. As a result, the robot control unit 316 can properly generate the movement path MRf satisfying the condition that the interference of at least one of the end effector 4, the robot 1, and the surrounding object does not occur. On the other hand, the robot control unit 316 does not perform at least one of the first and second high accuracy interference determination operations in a situation where there is no high necessity to perform at least one of the first and second high accuracy interference determination operations because the data loss amount is large. As a result, the throughput for generating the movement path MRf is improved as described above.

Note that the control apparatus 3 may generate the movement path MRr by performing the first high accuracy interference determination operation (namely, the operation that is the same as the first modified example of the fine movement operation) even in a case where the rough movement operation is performed, as described above. In this case, even in a case where the rough movement operation is performed, the control apparatus 3 may perform the first high accuracy interference determination operation in a case where predetermined execution condition is satisfied. On the other hand, even in a case where rough movement operation is performed, the control apparatus 3 may not perform the first high accuracy interference determination operation in a case where the predetermined execution condition is not satisfied.

Similarly, the control apparatus 3 may generate the movement path MRr by performing the second high accuracy interference determination operation (namely, the operation that is the same as the second modified example of the fine movement operation) even in a case where the rough movement operation is performed, as described above. In this case, even in a case where the rough movement operation is performed, the control apparatus 3 may perform the second high accuracy interference determination operation in a case where predetermined execution condition is satisfied. On the other hand, even in a case where rough movement operation is performed, the control apparatus 3 may not perform the second high accuracy interference determination operation in a case where the predetermined execution condition is not satisfied.

### (6-1-4) Fourth Modified Example of Fine Movement Operation

### (6-1-4-1) Base of Fourth Modified Example of Fine Movement Operation

As described above, the control apparatus 3 (especially, the robot control unit 316) performs the fine movement operation to generate the movement path MRf satisfying the condition that the interference of at least one of the end effector model EM and the surrounding object model SM (furthermore, the interference of the robot model RM if necessary, the same applies in a fourth modified example) does not occur. Namely, the control apparatus 3 (especially, the robot control unit 316) generates the movement path MRf satisfying the condition that the interference of at least one of the end effector 4 and the surrounding object (furthermore, the interference of the robot 1 if necessary, the same applies in the fourth modified example) does not occur.

Here, in a case where the end effector 4 performs the holding process for holding the object OBJ as described above, a possibility that the interference of the end effector 4 that is holding the object OBJ occurs is higher than a possibility of the interference of the end effector 4 that is not holding the object OBJ occurs. This is because the interference of the end effector 4 includes not only the interference of the end effector 4 itself but also an interference of the object OBJ that is being held by the end effector 4 in a case where the end effector 4 holds the object OBJ,. The interference of the object OBJ that is being held by the end effector 4 may include at least one of an interference between the object OBJ that is being held by the end effector 4 and the robot 1, and an interference between the object OBJ that is being held by the end effector 4 and the surrounding object.

Similarly, in a case where the end effector 4 performs the releasing process for releasing the object OBJ, a possibility that the interference of the end effector 4 that has not released the object OBJ (namely, that is holding the object OBJ) occurs is higher than a possibility that the interference of the end effector 4 that has released the object OBJ (namely, that is not holding the object OBJ) occurs. The reason for this is the same as that in a case where the end effector 4 performs the holding process.

Therefore, in a case where the control apparatus 3 generates the movement path MRf of the tool center point TCP in a case where the end effector 4 is holding the object OBJ without using the object model OM that is the three-dimensional model of the object OBJ held by the end effector 4, there is a possibility that the interference of the end effector 4 (especially, interference of the object OBJ that is being held by the end effector 4), which moves in accordance with the movement path MRf generated so as to satisfy the condition that the interference of the end effector model EM does not occur, actually occurs.

Therefore, in the fourth modified example, the control apparatus 3 (especially, the robot control unit 316) may generate the movement path MRf based on not only the end effector model EM and the surrounding object model SM but also the object model OM based on the three-dimensional model of the object OBJ that is being held by the end effector 4. Here, in the fourth modified example of the fine movement operation, the object model OM based on the three-dimensional model of the object OBJ that is being held by the end effector 4 may mean the object model OM that is aligned with the end effector model EM as described later. Namely, the object model OM based on the three-dimensional model of the object OBJ that is being held by the end effector 4 may mean the object model OM positioned at at least one of a predetermined position and a predetermined pose with respect to the end effector model EM, as described later. Therefore, the object model OM based on the three-dimensional model of the object OBJ that is being held by the end effector 4 may be regarded as the object model OM based on the three-dimensional model of the object OBJ positioned with respect to the end effector model EM. On the other hand, the object model OM that is the three-dimensional model of the object OBJ that is not being held by the end effector 4 may not necessarily be aligned with the end effector model EM. Therefore, in order to distinguish the object model OM, which is the three-dimensional model of the object OBJ that is being not held by the end effector 4, and the object model OM, which is based on the three-dimensional model of the object OBJ that is being held by the end effector 4, the object model OM based on the three-dimensional model of the object OBJ that is being held by the end effector 4 is referred to as a "held object model HOM" in the fourth modified example of the fine movement operation. Furthermore, in order to distinguish the object OBJ that is not being held by the end effector 4 and the object OBJ that is being held by the end effector 4, the object OBJ that is being held by the end effector 4 is referred to as a "held object HOBJ" as necessary in the fourth modified example of the fine movement operation. In this case, the control apparatus 3 (especially, the robot control unit 316) may generate the movement path MRf based on the end effector model EM, the surrounding object model SM, the held object model HOM, and at least one of the image data IMG_2D and IMG_3D by performing the fine movement operation.

Note that the control apparatus 3 (especially, the path generation unit 315) that performs the rough movement operation instead of the fine movement operation also generates the movement path MRr satisfying the condition that the interference of at least one of the end effector model EM and the surrounding object model SM does not occur, as with the control apparatus 3 (especially, the robot control unit 316) that performs the fine movement operation. Namely, the control apparatus 3 (especially, the path generation unit 315) generates the movement path MRr satisfying the condition that the interference of at least one of the end effector 4 and the surrounding object does not occur. Even in this case, in a case where the control apparatus 3 generates the movement path MRf of the tool center point TCP in a case where the end effector 4 is holding the held object HOBJ without using the held object model HOM, there is a possibility that the interference of the end effector 4 (especially, interference of the held object HOBJ that is being held by the end effector 4), which moves in accordance with the movement path MRf generated so as to satisfy the condition that the interference of the end effector model EM does not occur, actually occurs, in the same way as in a case where the movement path MRf is generated. Therefore, even in a case where the movement path MRr is generated, the control apparatus 3 (especially, the path generation unit 315) may generate the movement path MRr based on not only the end effector model EM and the surrounding object model SM but also the held object model HOM. Namely, the control apparatus 3 (especially, the path generation unit 315) may generate the movement path MRr based on the end effector model EM, the surrounding object model SM, and the held object model HOM by performing the rough movement operation. Therefore, although a below-described description is a description of the fourth modified example of the fine movement operation, it actually corresponds to the description of the modified example of the fine movement operation that generates the movement path MRf using the held object model HOM and the modified example of the rough movement operation that generates the movement path MRr using the held object model HOM.

### (6-1-4-2) Generation Method of Movement paths MRf and MRr Using Held Object Model HOM

The control apparatus 3 may generate at least one of the movement paths MRf and MRr satisfying the condition that the interference of at least one of the end effector model EM, the held object model HOM, and the surrounding object model SM does not occur. Namely, the control apparatus 3 may generate at least one of the movement paths MRf and MRr based on a determination result of the interference of at least one of the end effector model EM, the held object model HOM, and the surrounding object model SM.

Here, as described above, in order to determine whether interference occurs, the control apparatus 3 positions the end effector model EM and the surrounding object model SM (furthermore, the robot model RM if necessary, the same applies in the fourth modified example below) in the virtual space and generates the movement path MRr and MRf that do not cause the interference of at least one of the end effector model EM and the surrounding object model SM by moving the end effector model EM in the virtual space in accordance with the movement of the end effector 4 (furthermore, the movement of the robot 1 if necessary, the same applies in the fourth modified example below) assuming that the robot 1 is driven. In a case where the held object model HOM is used, the control apparatus 3 may position the held object model HOM in the virtual space in addition to the end effector model EM and the surrounding object model SM. Furthermore, the held object HOBJ that is being held by the end effector 4 moves when the end effector 4 moves, and therefore, the control apparatus 3 may generate the movement path MRr and MRf that do not cause the interference of at least one of the end effector model EM, the surrounding object model SM, and the held object model HOM by moving the end effector model EM and the held object model HOM in the virtual space in accordance with the movement of the end effector 4 assuming that the robot 1 is driven. Namely, the control apparatus 3 may generate the movement paths MRr and MRf that do not cause the interference of at least one of the end effector model EM, the surrounding object model SM, and the held object model HOM by moving the end effector model EM and the held object model HOM integrally in the virtual space in accordance with the movement of the end effector 4 assuming that the robot 1 is driven.

In order to position the held object model HOM in the virtual space, the control apparatus 3 may position the held object model HOM in the virtual space so that the held object model HOM is positioned at a predetermined position with respect to the end effector model EM. Namely, the control apparatus 3 may position the held object model HOM in the virtual space so that a positional relationship between the end effector model EM and the held object model HOM is a predetermined positional relationship.

Typically, the predetermined positional relationship may include a positional relationship between the end effector 4 and the held object HOBJ that is actually being held by the end effector 4 in a situation where the end effector 4 is actually holding the held object HOBJ. The predetermined positional relationship may include a positional relationship between the end effector 4 and the held object HOBJ that is assumed to be held by the end effector 4 assuming that the end effector 4 is holding the held object HOBJ even though the end effector 4 is not actually holding the held object HOBJ. In this case, the control apparatus 3 may position the held object model HOM based on information related to the positional relationship between the end effector 4 and the held object HOBJ.

The control apparatus 3 may use the process position / pose information PAI set by the process position / pose setting unit 313 as the information related to the positional relationship between the end effector 4 and the held object HOBJ. Specifically, as described above, the process position / pose information PAI is the information that is usable to calculate the position (namely, the process target position PTP described above) at which the end effector 4 should be positioned when the end effector 4 performs the predetermined process on the object OBJ. Especially, the process position / pose information PAI indicates the position of the end effector 4 with respect to the object OBJ when the end effector 4 performs the predetermined process on the object OBJ. Therefore, the process position / pose information PAI corresponding to the holding process for holding the object OBJ indicates the position of the end effector 4 with respect to the object OBJ (namely, the positional relationship between the object OBJ and the end effector 4) when the end effector 4 holds the object OBJ. Therefore, the process position / pose information PAI is usable as the information related to the positional relationship between the end effector 4 and the held object OBJ. In this case, the control apparatus 3 may position the held object model HOM so that the positional relationship between the end effector model EM and the held object model HOM in the virtual space is the same as the positional relationship between the end effector 4 and the object OBJ indicated by the process position / pose information PAI.

However, there is a possibility that the position / pose setting coordinate system (namely, the coordinate system of the three-dimensional space SP3 described above) in which the process position / pose information PAI indicates the positional relationship between the end effector 4 and the object OBJ is not the same as the coordinate system of the virtual space. In this case, the control apparatus 3 may transform the positional relationship indicated by the process position / pose information PAI to the positional relationship in the coordinate system of the virtual space in which the held object model HOM is positioned by using a transformation matrix for transforming a three-dimensional coordinate in the position / pose setting coordinate system to a three-dimensional coordinate in the coordinate system of the virtual space in which the held object model HOM is positioned, and position the held object model HOM so that the positional relationship between the end effector model EM and the held object model HOM in the virtual space is the same as the positional relationship acquired by the transformation.

The control apparatus 3 may use the calculated result of the position of the object OBJ calculated by performing the matching processing based on at least one of the image data IMG_2D and the image data IMG_3D as the information related to the positional relationship between the end effector 4 and the held object HOBJ. For example, the imaging apparatus 2 may generate at least one of the image data IMG_2D and IMG_3D by imaging the object OBJ (namely, the held object HOBJ) that is being held by the end effector 4 after the end effector 4 holds the object OBJ. Then, the control apparatus 3 may calculate the position of the object OBJ that is being held by the end effector 4 (namely, the held object HOBJ) based on at least one of the image data IMG_2D and IMG_3D. On the other hand, since the control apparatus 3 controls the robot 1 to move the end effector 4, the position (namely, the current position) of the end effector 4 is known to the control apparatus 3. Therefore, the control apparatus 3 may calculate the positional relationship between the end effector 4 and the held object HOBJ based on the calculated result of the position of the object OBJ that is being held by the end effector 4 (namely, the held object HOBJ) and information related to the position of the end effector 4 which is known to the control apparatus 3. Alternatively, depending on the angle of view of the imaging apparatus 2, there is a possibility that the imaging apparatus 2 cannot image the object OBJ (namely, the held object HOBJ) that is being held by the end effector 4 after the end effector 4 holds the object OBJ. In this case, for example, the imaging apparatus 2 may generate at least one of the image data IMG_2D and IMG_3D by imaging the object OBJ that should be held by the end effector 4 (namely, the object OBJ that will become the held object HOBJ in the future) before the end effector 4 holds the object OBJ. As one example, the imaging apparatus 2 may image the object OBJ that should be held by the end effector 4 in a period during which the end effector 4 moves in accordance with the movement path MRr illustrated in FIG. 3(a) to FIG. 3(d). As one example, the imaging apparatus 2 may image the object OBJ that should be held by the end effector 4 before the end effector 4 starts moving in accordance with the movement path MRf illustrated in FIG. 3(a) to FIG. 3(d). As one example, the imaging apparatus 2 may image the object OBJ that should be held by the end effector 4 in a period during which the end effector 4 moves in accordance with the movement path MRf illustrated in FIG. 3(a) to FIG. 3(d). Then, the control apparatus 3 may calculate the position of the object OBJ held by the end effector 4 (namely, the held object HOBJ) based on at least one of the image data IMG_2D and IMG_3D. On the other hand, since the control apparatus 3 controls the robot 1 to move the end effector 4, the position of the end effector 4 at a timing at which the end effector 4 holds the object OBJ (namely, a future position of the end effector 4) is known to the control apparatus 3. Therefore, the control apparatus 3 may calculate the positional relationship between the end effector 4 and the held object HOBJ based on the calculated result of the position of the object OBJ that should be held by the end effector 4 and information related to the future position of the end effector 4 that is known to the control apparatus 3. Then, the control apparatus 3 may position the held object model HOM so that the positional relationship between the end effector model EM and the held object model HOM in the virtual space is the same as the positional relationship calculated from at least one of the image data IMG_2D and IMG_3D.

In order to position the held object model HOM in the virtual space, the control apparatus 3 may position the held object model HOM in the virtual space so that the held object model HOM is positioned with a predetermined pose with respect to the end effector model EM. Namely, the control apparatus 3 may position the held object model HOM in the virtual space so that a postural relationship between the end effector model EM and the held object model HOM is a predetermined postural relationship.

Typically, the predetermined postural relationship may include a postural relationship between the end effector 4 and the held object HOBJ that is actually being held by the end effector 4 in a situation where the end effector 4 is actually holding the held object HOBJ. The predetermined postural relationship may include a postural relationship between the end effector 4 and the held object HOBJ that is assumed to be held by the end effector 4 assuming that the end effector 4 is holding the held object HOBJ even though the end effector 4 is not actually holding the held object HOBJ. In this case, the control apparatus 3 may position the held object model HOM based on information related to the postural relationship between the end effector 4 and the held object HOBJ.

The control apparatus 3 may use the process position / pose information PAI set by the process position / pose setting unit 313 as the information related to the postural relationship between the end effector 4 and the held object HOBJ. Specifically, as described above, the process position / pose information PAI is the information that is usable to calculate the pose (namely, the process target pose PTA described above) with which the end effector 4 should be positioned when the end effector 4 performs the predetermined process on the object OBJ. Especially, the process position / pose information PAI indicates the pose of the end effector 4 with respect to the object OBJ when the end effector 4 performs the predetermined process on the object OBJ. Therefore, the process position / pose information PAI corresponding to the holding process for holding the object OBJ indicates the pose of the end effector 4 with respect to the object OBJ (namely, the postural relationship between the object OBJ and the end effector 4) when the end effector 4 holds the object OBJ. Therefore, the process position / pose information PAI is usable as the information related to the postural relationship between the end effector 4 and the held object OBJ. In this case, the control apparatus 3 may position the held object model HOM so that the postural relationship between the end effector model EM and the held object model HOM in the virtual space is the same as the postural relationship between the end effector 4 and the object OBJ indicated by the process position / pose information PAI.

However, there is a possibility that the position / pose setting coordinate system (namely, the coordinate system of the three-dimensional space SP3 described above) in which the process position / pose information PAI indicates the postural relationship between the end effector 4 and the object OBJ is not the same as the coordinate system of the virtual space. In this case, the control apparatus 3 may transform the postural relationship indicated by the process position / pose information PAI to the postural relationship in the coordinate system of the virtual space in which the held object model HOM is positioned by using the transformation matrix for transforming the three-dimensional coordinate in the position / pose setting coordinate system to the three-dimensional coordinate in the coordinate system of the virtual space in which the held object model HOM is positioned, and position the held object model HOM so that the postural relationship between the end effector model EM and the held object model HOM in the virtual space is the same as the postural relationship acquired by the transformation.

The control apparatus 3 may use the calculated result of the pose of the object OBJ calculated by performing the matching processing based on at least one of the image data IMG_2D and the image data IMG_3D as the information related to the postural relationship between the end effector 4 and the held object HOBJ. For example, the imaging apparatus 2 may generate at least one of the image data IMG_2D and IMG_3D by imaging the object OBJ (namely, the held object HOBJ) that is being held by the end effector 4 after the end effector 4 holds the object OBJ. Then, the control apparatus 3 may calculate the pose of the object OBJ that is being held by the end effector 4 (namely, the held object HOBJ) based on at least one of the image data IMG_2D and IMG_3D. On the other hand, since the control apparatus 3 controls the robot 1 to move the end effector 4, the pose (namely, the current pose) of the end effector 4 is known to the control apparatus 3. Therefore, the control apparatus 3 may calculate the postural relationship between the end effector 4 and the held object HOBJ based on the calculated result of the pose of the object OBJ that is being held by the end effector 4 (namely, the held object HOBJ) and information related to the pose of the end effector 4 which is known to the control apparatus 3. Alternatively, depending on the angle of view of the imaging apparatus 2, there is a possibility that the imaging apparatus 2 cannot image the object OBJ (namely, the held object HOBJ) that is being held by the end effector 4 after the end effector 4 holds the object OBJ. In this case, for example, the imaging apparatus 2 may generate at least one of the image data IMG_2D and IMG_3D by imaging the object OBJ that should be held by the end effector 4 (namely, the object OBJ that will become the held object HOBJ in the future) before the end effector 4 holds the object OBJ. As one example, the imaging apparatus 2 may image the object OBJ that should be held by the end effector 4 in a period during which the end effector 4 moves in accordance with the movement path MRr illustrated in FIG. 3(a) to FIG. 3(d). As one example, the imaging apparatus 2 may image the object OBJ that should be held by the end effector 4 before the end effector 4 starts moving in accordance with the movement path MRf illustrated in FIG. 3(a) to FIG. 3(d). As one example, the imaging apparatus 2 may image the object OBJ that should be held by the end effector 4 in a period during which the end effector 4 moves in accordance with the movement path MRf illustrated in FIG. 3(a) to FIG. 3(d). Then, the control apparatus 3 may calculate the pose of the object OBJ held by the end effector 4 (namely, the held object HOBJ) based on at least one of the image data IMG_2D and IMG_3D. On the other hand, since the control apparatus 3 controls the robot 1 to move the end effector 4, the pose of the end effector 4 at a timing at which the end effector 4 holds the object OBJ (namely, a future pose of the end effector 4) is known to the control apparatus 3. Therefore, the control apparatus 3 may calculate the postural relationship between the end effector 4 and the held object HOBJ based on the calculated result of the pose of the object OBJ that should be held by the end effector 4 and information related to the future pose of the end effector 4 that is known to the control apparatus 3. Then, the control apparatus 3 may position the held object model HOM so that the postural relationship between the end effector model EM and the held object model HOM in the virtual space is the same as the postural relationship calculated from at least one of the image data IMG_2D and IMG_3D.

Note that the end effector 4 is usually in contact with the object OBJ in a case where the end effector 4 is holding the object OBJ. On the other hand, in a case where the held object model HOM is aligned with the end effector model EM, the end effector model EM may be in contact with or may not be in contact with the held object model HOM. This is because, it is possible to perform the interference determination of at least one of the end effector model EM, the held object model HOM, and the surrounding object model SM as long as the held object model HOM is aligned with the end effector model EM. Therefore, a state in which "the positional relationship between the end effector model EM and the held object model HOM in the virtual space is the same as the positional relationship between the end effector 4 and the held object HOBJ that is being held by the end effector 4" may include not only a state in which "the positional relationship between the end effector model EM and the held object model HOM in the virtual space is completely the same as the positional relationship between end effector 4 and the held object HOBJ that is being held by the end effector 4" but also a state in which "the positional relationship between the end effector model EM and the held object model HOBJ in the virtual space is not completely same as the positional relationship between end effector 4 and the held object HOBJ that is being held by the end effector 4, but a difference between them is so small that they may be considered to be substantially the same as each other". A state in which "the postural relationship between the end effector model EM and the held object model HOM in the virtual space is the same as the postural relationship between the end effector 4 and the held object HOBJ that is being held by the end effector 4" may include not only a state in which "the postural relationship between the end effector model EM and the held object model HOM in the virtual space is completely the same as the postural relationship between end effector 4 and the held object HOBJ that is being held by the end effector 4" but also a state in which "the postural relationship between the end effector model EM and the held object model HOBJ in the virtual space is not completely same as the postural relationship between end effector 4 and the held object HOBJ that is being held by the end effector 4, but a difference between them is so small that they may be considered to be substantially the same as each other".

Especially in the fourth modified example, the control apparatus 3 may generate at least one of the movement paths MRf and MRr based on the held object model HOM to generate at least one of the movement paths MRf and MRr of the tool center point TCP in a case where the end effector 4 is holding the object OBJ. On the other hand, the control apparatus 3 may generate at least one of the movement paths MRf and MRr without using the held object model HOM to generate at least one of the movement paths MRf and MRr of the tool center point TCP in a case where the end effector 4 is not holding the object OBJ. However, the control apparatus 3 may generate at least one of the movement paths MRf and MRr based on the held object model HOM to generate at least one of the movement paths MRf and MRr of the tool center point TCP in a case where the end effector 4 is not holding the object OBJ.

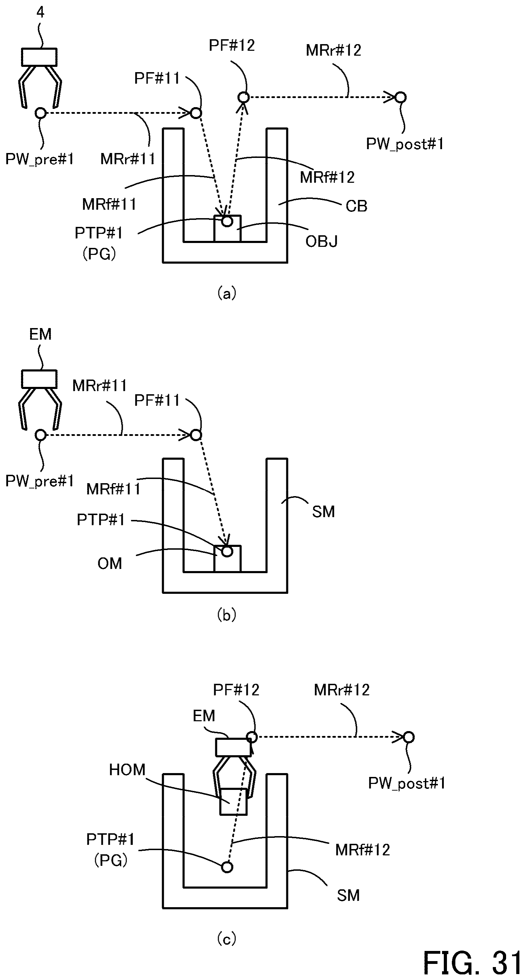

For example, FIG. 31(a) illustrates the movement path of the end effector 4 (specifically, the movement path of the tool center point TCP) in a case where the end effector 4 performs the holding process. As illustrated in FIG. 31(a), in a case where the end effector 4 performs the holding process, the tool center point TCP moves along a movement path MRr#11 from a pre-waiting position PW_pre#1 to a fine approach position PF#11, moves along a movement path MRf#11 from a fine approach position PF#11 to a process target position PTP#1 (the holding target position PG), moves along a movement path MRf#12 from the process target position PTP#1 (the holding target position PG) to a fine approach position PF#12, and moves along a movement path MRr#12 from the fine approach position PF#12 to a post-holding position PW_post#1. Note that the fine approach position PF#12 may be a position that is the same as or a position that is different from the fine approach position PF#11.

In this case, the end effector 4 does not hold the object OBJ in a period during which the tool center point TCP moves along the movement path MRr#11. Therefore, as illustrated in FIG. 31(b), the control apparatus 3 may generate the movement path MRr#11 based on the end effector model EM and the surrounding object model SM without using the held object model HOM. As a result, compared to a case where the movement path MRr#11 is generated by using the held object model HOM, it is more likely that the control apparatus 3 can generate the shorter movement path MRr#11. Therefore, a movement time of the end effector 4 moving in accordance with the movement path MRr#11 is reduced.

Furthermore, the end effector 4 does not hold the object OBJ in a period during which the tool center point TCP moves along the movement path MRf#11. Therefore, as illustrated in FIG. 31(b), the control apparatus 3 may generate at least one of the movement path MRf#11 based on the end effector model EM and the surrounding object model SM without using the held object model HOM. As a result, compared to a case where the movement path MRf#11 is generated by using the held object model HOM, it is more likely that the control apparatus 3 can generate the shorter movement path MRf#11. Therefore, a movement time of the end effector 4 moving in accordance with the movement path MRf#11 is reduced. Note that the end effector model EM used to generate the movement path MRf#11 may be the same as or may be different from the end effector model EM used to generate the movement path MRr#11. The surrounding object model SM used to generate the movement path MRf#11 may be the same as or may be different from the surrounding object model SM used to generate the movement path MRr#11.

On the other hand, the end effector 4 is holding the object OBJ in a period during which the tool center point TCP moves along the movement path MRr#12. Therefore, as illustrated in FIG. 31(c), the control apparatus 3 may generate the movement path MRr#12 based on the object model HOM (namely, the object model OM aligned with the end effector model EM) in addition to the end effector model EM and the surrounding object model SM. As a result, compared to a case where the movement path MRr#12 is generated without using the held object model HOM, it is possible to generate the movement path MRr#12 by which it is less likely that the interference of the end effector 4 (especially, interference of the object OBJ that is being held by the end effector 4) occurs. Note that the end effector model EM used to generate the movement path MRr#12 may be the same as or may be different from the end effector model EM used to generate at least one of the movement paths MRr#11 and MRf#11. The surrounding object model SM used to generate the movement path MRr#12 may be the same as or may be different from the surrounding object model SM used to generate at least one of the movement paths MRr#11 and MRf#11.

Furthermore, the end effector 4 is holding the object OBJ in a period during which the tool center point TCP moves along the movement path MRf#12. Therefore, as illustrated in FIG. 31(c), the control apparatus 3 may generate the movement path MRf#12 based on the object model HOM (namely, the object model OM aligned with the end effector model EM) in addition to the end effector model EM and the surrounding object model SM. As a result, compared to a case where the movement path MRf#12 is generated without using the held object model HOM, it is possible to generate the movement path MRf#12 by which it is less likely that the interference of the end effector 4 (especially, interference of the object OBJ that is being held by the end effector 4) occurs. Note that the end effector model EM used to generate the movement path MRf#12 may be the same as or may be different from the end effector model EM used to generate at least one of the movement paths MRr#11, MRr#11, and MRr#12. The surrounding object model SM used to generate the movement path MRf#12 may be the same as or may be different from the surrounding object model SM used to generate at least one of the movement paths MRr#11, MRr#11, and MRr#12. The held object model HOM used to generate the movement path MRf#12 may be the same as or may be different from the held object model HOM used to generate the movement path MRr#12.

Note that the movement path MRf#11 generated without using the held object model HOM and the movement path MRf#12 generated using the held object model HOM may be the same movement path or may be different movement paths in a case where the fine approach position PF#11 and the fine approach position PF#12 are the same position.

For example, FIG. 32(a) illustrates the movement path of the end effector 4 (specifically, the movement path of the tool center point TCP) in a case where the end effector 4 performs the releasing process. As illustrated in FIG. 32(a), in a case where the end effector 4 performs the releasing process, the tool center point TCP moves along a movement path MRr#21 from a pre-waiting position PW_pre#2 to a fine approach position PF#21, moves along a movement path MRf#21 from a fine approach position PF#21 to a process target position PTP#2 (the releasing target position PR), moves along a movement path MRf#22 from the process target position PTP#2 (the releasing target position PR) to a fine approach position PF#22, and moves along a movement path MRr#22 from the fine approach position PF#22 to a post-holding position PW_post#2. Note that the fine approach position PF#22 may be a position that is the same as or a position that is different from the fine approach position PF#21. In a case where the releasing process is performed following the holding process, the pre-waiting position PW_pre#2 in a case where the releasing process is performed may be the same as or may be different from the post-waiting position PW_post#1 in a case where the hooding process is performed. In a case where the releasing process is performed following the holding process, the post-waiting position PW_post#2 in a case where the releasing process is performed may be the same as or may be different from the pre-waiting position PW_pre#1 in a case where the hooding process is performed.

In this case, the end effector 4 is holding the object OBJ in a period during which the tool center point TCP moves along the movement path MRr#21. Therefore, as illustrated in FIG. 32(b), the control apparatus 3 may generate the movement path MRr#21 based on the object model HOM (namely, the object model OM aligned with the end effector model EM) in addition to the end effector model EM and the surrounding object model SM. As a result, compared to a case where the movement path MRr#21 is generated without using the held object model HOM, it is possible to generate the movement path MRr#21 by which it is less likely that the interference of the end effector 4 (especially, interference of the object OBJ that is being held by the end effector 4) occurs.

Furthermore, the end effector 4 is holding the object OBJ in a period during which the tool center point TCP moves along the movement path MRf#21. Therefore, as illustrated in FIG. 32(b), the control apparatus 3 may generate the movement path MRf#21 based on the object model HOM (namely, the object model OM aligned with the end effector model EM) in addition to the end effector model EM and the surrounding object model SM. As a result, compared to a case where the movement path MRf#21 is generated without using the held object model HOM, it is possible to generate the movement path MRf#21 by which it is less likely that the interference of the end effector 4 (especially, interference of the object OBJ that is being held by the end effector 4) occurs. Note that the end effector model EM used to generate the movement path MRf#21 may be the same as or may be different from the end effector model EM used to generate the movement path MRr#21. The surrounding object model SM used to generate the movement path MRf#21 may be the same as or may be different from the surrounding object model SM used to generate the movement path MRr#21. The held object model HOM used to generate the movement path MRf#21 may be the same as or may be different from the held object model HOM used to generate the movement path MRr#21.

On the other hand, the end effector 4 does not hold the object OBJ in a period during which the tool center point TCP moves along the movement path MRr#22. Therefore, as illustrated in FIG. 32(c), the control apparatus 3 may generate the movement path MRr#22 based on the end effector model EM and the surrounding object model SM without using the held object model HOM. As a result, compared to a case where the movement path MRr#22 is generated by using the held object model HOM, it is more likely that the control apparatus 3 can generate the shorter movement path MRr#22. Therefore, a movement time of the end effector 4 moving in accordance with the movement path MRr#22 is reduced. Note that the end effector model EM used to generate the movement path MRr#22 may be the same as or may be different from the end effector model EM used to generate at least one of the movement paths MRr#21 and MRf#21. The surrounding object model SM used to generate the movement path MRr#22 may be the same as or may be different from the surrounding object model SM used to generate at least one of the movement paths MRr#21 and MRf#21.

Furthermore, the end effector 4 does not hold the object OBJ in a period during which the tool center point TCP moves along the movement path MRf#22. Therefore, as illustrated in FIG. 32(c), the control apparatus 3 may generate the movement path MRf based on the end effector model EM and the surrounding object model SM without using the held object model HOM. As a result, compared to a case where the movement path MRf#22 is generated by using the held object model HOM, it is more likely that the control apparatus 3 can generate the shorter movement path MRf#22. Therefore, a movement time of the end effector 4 moving in accordance with the movement path MRf#22 is reduced. Note that the end effector model EM used to generate the movement path MRf#22 may be the same as or may be different from the end effector model EM used to generate at least one of the movement paths MRr#21, MRf#21 and MRr#22. The surrounding object model SM used to generate the movement path MRr#22 may be the same as or may be different from the surrounding object model SM used to generate at least one of the movement paths MRr#21, MRf#21 and MRr#22.

Note that the movement path MRf#21 generated without using the held object model HOM and the movement path MRf#22 generated using the held object model HOM may be the same movement path or may be different movement paths in a case where the fine approach position PF#21 and the fine approach position PF#22 are the same position.

### (6-1-4-3) Generation Timing of Movement paths MRf and MRr Using Held Object Model HOM

The control apparatus 3 may generate, after the end effector 4 performs the predetermined process on the object OBJ, at least a part of the movement path MRf along which the tool center point TCP moves after the end effector 4 performs the predetermined process on the object OBJ. Alternatively, the control apparatus 3 may generate, before the end effector 4 performs the predetermined process on the object OBJ, at least a part of the movement path MRf along which the tool center point TCP moves after the end effector 4 performs the predetermined process on the object OBJ.

As described in the third modified example of the path generation process, in a case where the movement path MRr is generated after the robot 1 actually starts moving (namely, after the end effector 4 starts moving) by performing the processing from the step S31 to the step S37 in FIG. 6, the control apparatus 3 may generate, after the end effector 4 performs the predetermined process on the object OBJ, at least a part of the movement path MRr along which the tool center point TCP moves after the end effector 4 performs the predetermined process on the object OBJ. Alternatively, the control apparatus 3 may generate, before the end effector 4 performs the predetermined process on the object OBJ, at least a part of the movement path MRr along which the tool center point TCP moves after the end effector 4 performs the predetermined process on the object OBJ.

Note that a timing for generating the movement path MRf will be described in the below-described description in order to omit a redundant description. However, the movement path MRr may be generated at a timing that is the same as the timing for generating the movement path MRf described below.

### (6-1-4-3-1) Generation of Movement path MRf After End Effect Holds Held Object HOBJ

For example, in a case where the end effector 4 performs the holding process as described above, the control apparatus 3 may generate, after the end effector 4 holds the object OBJ, at least one of the movement path MRf, along which the tool center point TCP moves after the end effector 4 holds the object OBJ, based on the held object model HOM. In the example illustrated in FIG. 31(a), the control apparatus 3 may generate at least one of the movement path MRf#12 based on the held object model HOM after the tool center point TCP is positioned at the holding target position PG.

As one example, the control apparatus 3 may generate at least a part of the movement path MRf#12 based on the held object model HOM after the tool center point TCP has finished moving along the movement path MRf#11. The control apparatus 3 may generate at least a part of the movement path MRf#12 based on the held object model HOM after the end effector 4 has finished moving in accordance with the movement path MRf#11. Namely, the control apparatus 3 may generate at least a part of the movement path MRf#12 based on the held object model HOM after the movement based on the movement path MRf#11.

As one example, the control apparatus 3 may generate at least a part of the movement path MRf#12 based on the held object model HOM after the tool center point TCP has finished moving along the movement path MRf#11 and before the tool center point TCP starts moving along the movement path MRf#12. The control apparatus 3 may generate at least a part of the movement path MRf#12 based on the held object model HOM after the end effector 4 has finished moving in accordance with the movement path MRf#11 and before the end effector 4 starts moving in accordance with the movement path MRf#12. Namely, the control apparatus 3 may generate at least a part of the movement path MRf#12 based on the held object model HOM after the movement based on the movement path MRf#11 and before the movement based on the movement path MRf#12.

### (6-1-4-3-2) Generation of Movement path MRf Before End Effect Holds Held Object HOBJ

For example, in a case where the end effector 4 performs the holding process as described above, the control apparatus 3 may generate, before the end effector 4 holds the object OBJ, at least a part of the movement path MRf along which the tool center point TCP moves after the end effector 4 holds the object OBJ, based on the held object model HOM. In the example illustrated in FIG. 31(a), the control apparatus 3 may generate at least a part of the movement path MRf#12 based on the held object model HOM before the tool center point TCP reaches the holding target position PG. Specifically, for example, the control apparatus 3 may generate all of the movement path MRf#12 based on the held object model HOM before the tool center point TCP reaches the holding target position PG. Alternatively, for example, the control apparatus 3 may generate a part of the movement path MRf#12 based on the held object model HOM before the tool center point TCP reaches the holding target position PG, and generate another part of the movement path MRf#12 based on the held object model HOM after the tool center point TCP reaches the holding target position PG.

As one example, the control apparatus 3 may generate at least a part of the movement path MRf#12 based on the held object model HOM before the tool center point TCP starts moving along the movement path MRf#11. The control apparatus 3 may generate at least a part of the movement path MRf#12 based on the held object model HOM before the end effector 4 starts moving in accordance with the movement path MRf#11. Namely, the control apparatus 3 may generate at least a part of the movement path MRf#12 based on the held object model HOM before the movement based on the movement path MRf#11 is started.

As one example, the control apparatus 3 may generate at least a part of the movement path MRf#12 based on the held object model HOM after the tool center point TCP starts moving along the movement path MRf#11. The control apparatus 3 may generate at least a part of the movement path MRf#12 based on the held object model HOM after the end effector 4 starts moving along the movement path MRf#11. Namely, the control apparatus 3 may generate at least a part of the movement path MRf#12 based on the held object model HOM after the movement based on the movement path MRf#11 is started.

As one example, the control apparatus 3 may generate at least a part of the movement path MRf#12 based on the held object model HOM in a period during which the tool center point TCP moves along the movement path MRf#11. The control apparatus 3 may generate at least a part of the movement path MRf#12 based on the held object model HOM in a period during which the end effector 4 moves in accordance with the movement path MRf#11. Namely, the control apparatus 3 may generate at least a part of the movement path MRf#12 based on the held object model HOM during the movement based on the movement path MRf#11.

As one example, the control apparatus 3 may generate at least a part of the movement path MRf#12 based on the held object model HOM before the tool center point TCP start moving along the movement path MRr#11. The control apparatus 3 may generate at least a part of the movement path MRf#12 based on the held object model HOM before the end effector 4 starts moving in accordance with the movement path MRr#11. Namely, the control apparatus 3 may generate at least a part of the movement path MRf#12 based on the held object model HOM before the movement based on the movement path MRr#11 is started.

As one example, the control apparatus 3 may generate at least a part of the movement path MRf#12 based on the held object model HOM after the tool center point TCP starts moving along the movement path MRr#11. The control apparatus 3 may generate at least a part of the movement path MRf#12 based on the held object model HOM after the end effector 4 starts moving along the movement path MRe#11. Namely, the control apparatus 3 may generate at least a part of the movement path MRf#12 based on the held object model HOM after the movement based on the movement path MRr#11 is started.

As one example, the control apparatus 3 may generate at least a part of the movement path MRf#12 based on the held object model HOM in a period during which the tool center point TCP moves along the movement path MRr#11. The control apparatus 3 may generate at least a part of the movement path MRf#12 based on the held object model HOM in a period during which the end effector 4 moves in accordance with the movement path MRr#11. Namely, the control apparatus 3 may generate at least a part of the movement path MRf#12 based on the held object model HOM during the movement based on the movement path MRr#11.

Note that the control apparatus 3 uses at least one of the image data IMG_2D and IMG_3D, which is generated by the imaging apparatus 2 imaging the object OBJ before the end effector 4 holds the object OBJ, in order to generate at least a part of the movement path MRf#11 before the end effector 4 holds the object OBJ. In this case, the control apparatus 3 may generate the movement path MRf#12 by using at least one of the image data IMG_2D and IMG_3D used to generate the movement path MRf#11. Namely, the imaging apparatus 2 may not newly image the object OBJ in order to generate the movement path MRf#12. In this case, a timing at which the control apparatus 3 generates the movement path MRf#11 by using at least one of the image data IMG_2D and IMG_3D and a timing at which the control apparatus 3 generates the movement path MRf#12 by using at least one of the same image data IMG_2D and IMG_3D may be the same timing or may be different timings.

Moreover, even in a case where both the movement path MRf#11 and MRf#12 are generated without using the held object model HOM, the control apparatus 3 may use at least one of the image data IMG_2D and IMG_3D, which is generated by the imaging apparatus 2 imaging the object OBJ before the end effector 4 holds the object OBJ, in order to generate at least a part of the movement path MRf#11 before the end effector 4 holds the object OBJ. Furthermore, the control apparatus 3 may generate the movement path MRf#12 by using at least one of the image data IMG_2D and IMG_3D used to generate the movement path MRf#11. Namely, the imaging apparatus 2 may not newly image the object OBJ in order to generate the movement path MRf#12. In this case, the timing at which the control apparatus 3 generates the movement path MRf#11 by using at least one of the image data IMG_2D and IMG_3D and the timing at which the control apparatus 3 generates the movement path MRf#12 by using at least one of the same image data IMG_2D and IMG_3D may be the same timing or may be different timings.

### (6-1-4-4) Expansion Of Held Object Model HOM

Even in the fourth modified example of the fine movement operation, the control apparatus 3 may generate at least one of the movement paths MRr and MRf by using the expansion end effector model EM_ex instead of the end effector model EM as described in the second modified example of the path generation processing (FIG. 26 to FIG. 29). For example, the control apparatus 3 may generate at least one of the movement paths MRr and MRf of the tool center point TCP in a case where the end effector 4 is holding the object OBJ by using the expansion end effector model EM_ex instead of the end effector model EM. For example, the control apparatus 3 may generate at least one of the movement paths MRr and MRf of the tool center point TCP in a case where the end effector 4 is not holding the object OBJ by using the expansion end effector model EM_ex instead of the end effector model EM. Note that the expansion end effector model EM_ex has been already described in the second modified example of the path generation process, so a detailed description thereof is omitted.

Even in the fourth modified example of the fine movement operation, the control apparatus 3 may generate at least one of the movement paths MRr and MRf by using the expansion robot model instead of the robot model RM as described in the second modified example of the path generation processing (FIG. 26 to FIG. 29). For example, the control apparatus 3 may generate at least one of the movement paths MRr and MRf of the tool center point TCP in a case where the end effector 4 is holding the object OBJ by using the expansion robot model instead of the robot model RM. For example, the control apparatus 3 may generate at least one of the movement paths MRr and MRf of the tool center point TCP in a case where the end effector 4 is not holding the object OBJ by using the expansion robot model instead of the robot model RM. Note that the expansion robot model has been already described in the second modified example of the path generation process, so a detailed description thereof is omitted.

Even in the fourth modified example of the fine movement operation, the control apparatus 3 may generate at least one of the movement paths MRr and MRf by using the expansion surrounding object model instead of the surrounding object model SM as described in the second modified example of the path generation processing (FIG. 26 to FIG. 29). For example, the control apparatus 3 may generate at least one of the movement paths MRr and MRf of the tool center point TCP in a case where the end effector 4 is holding the object OBJ by using the expansion surrounding object model instead of the surrounding object model SM. For example, the control apparatus 3 may generate at least one of the movement paths MRr and MRf of the tool center point TCP in a case where the end effector 4 is not holding the object OBJ by using the expansion surrounding object model instead of the surrounding object model SM. Note that the expansion surrounding object model has been already described in the second modified example of the path generation process, so a detailed description thereof is omitted.

In the fourth modified example of the fine movement operation, the control apparatus 3 may generate at least one of the movement paths MRr and MRf by using an expansion held object model, which is generated by expanding the held object model, HOM instead of the held object model HOM. Note that a processing for expanding the held object model HOM may be the same as the processing for expanding the end effector model EM described in the second modified example of the path generation processing (FIG. 26 to FIG. 29). Therefore, a detailed description of the processing for expanding the held object model HOM is omitted, but one example thereof will be described below. Note that each of the held object model HOM and the expansion held object model may be regarded as a three-dimensional model based on the three-dimensional model of the object OBJ that is being held by the end effector 4.

The expansion of the held object model HOM may mean an increase of a volume of at least a part of the held object model HOM. In this case, the expansion held object model may be regarded as a three-dimensional model that is obtained by increasing the volume of at least a part of the held object model HOM. The expansion of the held object model HOM may mean moving each part of the surface of the held object model HOM along a desired expansion direction. The expansion of the held object model HOM may mean moving each part of the surface of the held object model HOM by a desired expansion amount.

Note that the volume of the held object model HOM may literally mean the volume of the held object model HOM whose interior is filled in a case where the held object model HOM is a solid model that is a three-dimensional model representing the object OBJ as an object whose interior is filled. On the other hand, in a case where the held object model HOM is a surface model that is a three-dimensional model representing the object OBJ by using surfaces corresponding to at least a part of the surface of the object OBJ, the volume of the held object model HOM may mean a volume of a space surrounded by the surfaces represented by the held object model HOM. In this case, "moving each part of the surface along a desired expansion direction" described above may be considered to be equivalent to increasing the volume of the held object model HOM that is the surface model.

In a case where the expansion held object model is used, the control apparatus 3 may generate at least one of the movement paths MRr and MRf satisfying a condition that the interference of at least one of the end effector model EM, the expansion held object model, and the surrounding object model SM does not occur. As a result, the control apparatus 3 can reduce the possibility that the interference of the object OBJ that is being held by the end effector 4 occurs.

The expansion amount of the expansion held object model may be set by the user as at least a part of the path generation condition that is used to generate a part of the entire movement path along which the tool center point TCP should move. In this case, the control apparatus 3 may control the display apparatus 35 to display a display screen that is operable by the user to set the expansion amount of the expansion held object model. In this case, the user may input an instruction for setting the expansion amount of the expansion held object model to the control apparatus 3 by using the input apparatus 34 through the display screen displayed on the display apparatus 35. Alternatively, the expansion amount of the expansion held object model may be set by the control apparatus 3 (for example, at least one of the path generation unit 315 and the robot control unit 316).

The expansion amount of the extended object model that is used to generate the movement path MRr may be different from the expansion amount of the extended object model that is used to generate the movement path MRf. However, the expansion amount of the extended object model that is used to generate the movement path MRr may be the same as the expansion amount of the extended object model that is used to generate the movement path MRf.

In the example illustrated in FIG. 31(a), the expansion amount of the expansion held object model that is used to generate the movement path MRr#11 may be different from the expansion amount of the expansion held object model that is used to generate the movement path MRf#11. The expansion amount of the expansion held object model that is used to generate the movement path MRr#11 may be different from the expansion amount of the expansion held object model that is used to generate the movement path MRf#12. The expansion amount of the expansion held object model that is used to generate the movement path MRr#12 may be different from the expansion amount of the expansion held object model that is used to generate the movement path MRf#11. The expansion amount of the expansion held object model that is used to generate the movement path MRr#12 may be different from the expansion amount of the expansion held object model that is used to generate the movement path MRf#12. However, the expansion amount of the expansion held object model that is used to generate the movement path MRr#11 may be the same as the expansion amount of the expansion held object model that is used to generate the movement path MRf#11. The expansion amount of the expansion held object model that is used to generate the movement path MRr#11 may be the same as the expansion amount of the expansion held object model that is used to generate the movement path MRf#12. The expansion amount of the expansion held object model that is used to generate the movement path MRr#12 may be the same as the expansion amount of the expansion held object model that is used to generate the movement path MRf#11. The expansion amount of the expansion held object model that is used to generate the movement path MRr#12 may be the same as the expansion amount of the expansion held object model that is used to generate the movement path MRf#12.

In the example illustrated in FIG. 32(a), the expansion amount of the expansion held object model that is used to generate the movement path MRr#21 may be different from the expansion amount of the expansion held object model that is used to generate the movement path MRf#21. The expansion amount of the expansion held object model that is used to generate the movement path MRr#21 may be different from the expansion amount of the expansion held object model that is used to generate the movement path MRf#22. The expansion amount of the expansion held object model that is used to generate the movement path MRr#22 may be different from the expansion amount of the expansion held object model that is used to generate the movement path MRf#21. The expansion amount of the expansion held object model that is used to generate the movement path MRr#22 may be different from the expansion amount of the expansion held object model that is used to generate the movement path MRf#22. However, the expansion amount of the expansion held object model that is used to generate the movement path MRr#21 may be the same as the expansion amount of the expansion held object model that is used to generate the movement path MRf#21. The expansion amount of the expansion held object model that is used to generate the movement path MRr#21 may be the same as the expansion amount of the expansion held object model that is used to generate the movement path MRf#22. The expansion amount of the expansion held object model that is used to generate the movement path MRr#22 may be the same as the expansion amount of the expansion held object model that is used to generate the movement path MRf#21. The expansion amount of the expansion held object model that is used to generate the movement path MRr#22 may be the same as the expansion amount of the expansion held object model that is used to generate the movement path MRf#22.

As one example of the expansion amount of the extended object model, the expansion amount of the extended object model that is used to generate the movement path MRr may be larger than the expansion amount of the extended object model that is used to generate the movement path MRf. The control apparatus 3 can properly prevent the occurrence of the interference of the end effector 4 moving in accordance with the movement path MRr (including the interference of the object OBJ that is being held by the end effector 4).

Conversely, it can be said that the control apparatus 3 generates the movement path MRr by using an expansion held object model whose expansion amount is large in order to preferentially prevent the occurrence of the interference of the end effector 4 moving in accordance with the movement path MRr (including the interference of the object OBJ that is being held by the end effector 4).

For example, FIG. 31(b) and FIG. 32(b) illustrate an example in which each of the movement paths MRr#11 and MR#21 is a movement path from the outside of the container box CB to the inside of the container box CB. In this case, the control apparatus 3 may generate each of the movement paths MRr#11 and MR#21 by using the expansion held object model whose expansion amount is larger in order to preferentially prevent the occurrence of the interference between the container box CB and the end effector 4 moving in accordance with each of the movement paths MRr#11 and MR#21. Note that each of the movement paths MRr#11 and MR#21 may be regarded as a movement path that crosses the side wall of the container box CB. Each of the movement paths MRr#11 and MR#21 may be regarded as a movement path that crosses over the side wall of the container box CB. Each of the movement paths MRr#11 and MR#21 may be regarded as a movement path from the space adjacent to the side wall of the container box CB outside the container box CB to the space adjacent to the side wall of the container box CB inside the container box CB through the space above the side wall of the container box CB.

For example, FIG. 31(c) and FIG. 32(c) illustrate an example in which each of the movement paths MRr#12 and MR#22 is a movement path from the inside of the container box CB to the outside of the container box CB. In this case, the control apparatus 3 may generate each of the movement paths MRr#12 and MR#22 by using the expansion held object model whose expansion amount is larger in order to preferentially prevent the occurrence of the interference between the container box CB and the end effector 4 moving in accordance with each of the movement paths MRr#12 and MR#22. Note that each of the movement paths MRr#12 and MR#22 may be regarded as a movement path that crosses the side wall of the container box CB. Each of the movement paths MRr#12 and MR#22 may be regarded as a movement path that crosses over the side wall of the container box CB. Each of the movement paths MRr#12 and MR#22 may be regarded as a movement path from the space adjacent to the side wall of the container box CB outside the container box CB to the space adjacent to the side wall of the container box CB inside the container box CB through the space above the side wall of the container box CB.

As one example of the expansion amount of the extended object model, the expansion amount of the extended object model that is used to generate the movement path MRf may be smaller than the expansion amount of the extended object model that is used to generate the movement path MRr. In this case, the control apparatus 3 can properly ensure the opportunity that the movement path MRf, which satisfies the condition that the interference of the end effector 4 (especially, the interference of the object OBJ that is being held by the end effector 4) does not occur, can be generated. Note that the expansion amount of the expanded held object model may be zero. In this case, the held object model HOM is used as the expanded held object model.

Note that the control apparatus 3 uses the expansion held object model that is generated by expanding the held object model HOM in the above-described description. Here, expanding the held object model HOM may be considered to be one example of changing the held object model HOM. Therefore, the control apparatus 3 may use a changed held object model that is generated by changing the held object model HOM in addition to or instead of the expansion held object model. For example, the control apparatus 3 may use the changed held object model that is generated by changing a size of the held object model HOM. For example, the control apparatus 3 may use the changed held object model that is generated by changing a shape of the held object model HOM.

As one example, there is a possibility that the shape of end effector 4 that has not yet performed the predetermined process on the object OBJ may be different from the shape of end effector 4 that has already performed the predetermined process on the object OBJ. For example, in a case where the hand gripper, which is one example of the end effector 4 that performs the holding process, is used, there is a possibility that a shape of the hand gripper that has not yet held the object OBJ may be different from a shape of the hand gripper that has already held the object OBJ. This is because the finger members or the claw members of the hand gripper that has not yet held the object OBJ are opened but the finger members or the claw members of the hand gripper that has already held the object OBJ are closed. In this case, the control apparatus 3 may change a change amount (for example, the expansion amount) of the held object model HOM based on a difference in the shape of the end effector 4. For example, in order to generate at least one of the movement paths MRr and MRf of the tool center point TCP in a case where the end effector 4 has not yet performed the predetermined process on the object OBJ, the control apparatus 3 may set the change amount of the held object model HOM to be a first change amount so that the changed end effector model has a three-dimensional shape of the end effector 4 that has not yet performed the predetermined process on the object OBJ. For example, in order to generate at least one of the movement paths MRr and MRf of the tool center point TCP in a case where the end effector 4 has already performed the predetermined process on the object OBJ, the control apparatus 3 may set the change amount of the held object model HOM to be a second change amount that is different from the first change amount so that the changed end effector model has a three-dimensional shape of the end effector 4 that has already performed the predetermined process on the object OBJ.

### (6-1-4-5) Use Of At Least One Of Image Data IMG 2D and IMG 3D Generated By Imaging Non-Target Object OBJ ntgt

Even in the fourth modified example of the fine movement operation, the control apparatus 3 may generate at least a part of the movement path MRf based on at least one of the image data IMG_2D and IMG_3D generated by the imaging apparatus 2 imaging at least the non-target object OBJ_ntgt as described in the third modified example of the path generation processing. Namely, the control apparatus 3 may generate at least a part of the movement path MRf based on at least one of the image data IMG_2D and IMG_3D generated by the imaging apparatus 2 imaging at least the non-target object OBJ _ntgt, the end effector model EM, the surrounding object model SM, and the held object model HOM.

Note that a method of generating the movement path MRf based on at least one of the image data IMG_2D and IMG_3D generated by the imaging apparatus 2 imaging at least the non-target object OBJ_ntgt in the fourth modified example of the fine movement operation may be the same as a method of generating the movement path MRf based on at least one of the image data IMG_2D and IMG_3D generated by the imaging apparatus 2 imaging at least the non-target object OBJ_ntgt in the third modified example of the path generation processing. However, in the below-description, one example of the method for generating the movement path MRf based on at least one of image data IMG_2D and IMG_3D generated by imaging apparatus 2 imaging at least non-target object OBJ_ntgt in the fourth modified example of the fine movement operation will be described.

As described above, in a case where the plurality of objects OBJ are captured in the image indicated by each of the image data IMG_2D and IMG_3D, one object OBJ of the plurality of objects OBJ may be selected as the target object OBJ_tgt on which the end effector 4 should perform the predetermined process, and at least one object OBJ, which is different from the target object OBJ_tgt, of the plurality of objects OBJ may be used as the non-target object OBJ_ntgt that is regarded as the surrounding object.

In a case where the movement path MRf is generated, the control apparatus 3 may adjust at least one of the position and the pose of the surrounding object model SM (specifically, the non-target object model OM_ntgt that is the three-dimensional model of at least one non-target object OBJ_ntgt) in the predetermined virtual space based on the calculated result of at least one of the position and the pose of at least one non-target object OBJ_ntgt (namely, the surrounding object). Namely, the control apparatus may generate at least a part of the movement path MRf based on the calculated result of at least one of the position and the pose of at least one non-target object OBJ_ntgt (namely, the surrounding object), the end effector model EM, the surrounding object model SM, and the held object model HOM. Specifically, the control apparatus 3 may calculate at least one of the position and the pose of the non-target object OBJ_ntgt together with at least one of the position and the pose of the target object OBJ_tgt in selecting the target object OBJ_tgt. Alternatively, the control apparatus 3 may newly acquire at least one of the image data IMG_2D and IMG_3D generated by the imaging apparatus 2 imaging at least one non-target object OBJ_ntgt, and calculate at least one of the position and the pose of the non-target object OBJ_ntgt based on at least one of the image data IMG_2D and IMG_3D newly acquired after selecting the target object OBJ_tgt and calculating at least one of the position and the pose of the target object OBJ_tgt. Note that the target object OBJ_tgt may be captured or may not be captured in the image indicated by at least one of the image data IMG_2D and IMG_3D that is used to calculate at least one of the position and the pose of the non-target object OBJ_ntgt. Whole of one or more non-target objects OBJ_ntgt that are not selected as the target object OBJ_tgt may be captured or a part of the plurality of non-target objects OBJ_ntgt that are not selected as the target objects OBJ_tgt may be captured in the image indicated by at least one of the image data IMG_2D and IMG_3D that is used to calculate at least one of the position and the pose of the non-target object OBJ_ntgt. Then, the control apparatus 3 may adjust at least one of the position and the pose of the non-target object model OM_ntgt in the predetermined virtual space based on at least one of the position and the pose of at least one non-target object OBJ_ntgt. For example, the control apparatus 3 may adjust the position of the non-target object model OM_ntgt in the predetermined virtual space so that the position of the non-target object model OM_ntgt in the predetermined virtual space becomes a position that is set based on the position of at least one non-target object OBJ_ntgt. For example, the control apparatus 3 may adjust the position of the non-target object model OM_ntgt in the predetermined virtual space so that the position of the non-target object model OM_ntgt in the predetermined virtual space becomes a position that is calculated by transforming the position of at least one non-target object OBJ_ntgt to a position in the predetermined virtual space. Namely, the control apparatus 3 may position the non-target object model OM_ntgt in the predetermined virtual space at a position that is set based on the position of at least one non-target object OBJ_ntgt. For example, the control apparatus 3 may adjust the pose of the non-target object model OM_ntgt in the predetermined virtual space so that the pose of the non-target object model OM_ntgt in the predetermined virtual space becomes a pose that is set based on the position of at least one non-target object OBJ_ntgt. For example, the control apparatus 3 may adjust the pose of the non-target object model OM_ntgt in the predetermined virtual space so that the pose of the non-target object model OM_ntgt in the predetermined virtual space becomes a pose that is calculated by transforming the pose of at least one non-target object OBJ_ntgt to a pose in the predetermined virtual space. Namely, the control apparatus 3 may position the non-target object model OM_ntgt in the predetermined virtual space in a pose that is set based on the pose of at least one non-target object OBJ_ntgt. Then, as described above, the control apparatus 3 may generate the movement path MRf so that the interference of at least one of the end effector model EM, the held object model, and at least one non-target object model OM_ntgt does not occur. As a result, the control apparatus 3 can generate the movement path MRf satisfying the condition that the interference of at least one of the end effector 4, the held object HOBJ, and the non-target object OBJ_ntgt does not occur.

Alternatively, in a case where the movement path MRf is generated, the control apparatus 3 may generate the point cloud model (alternatively, another type of three-dimensional model such as a polygon model, a mesh model, a solid model, or the like, the same applies in the fourth modified example of the fine movement operation) of at least one non-target object OBJ_ntgt based on the image data IMG_3D generated by imaging at least one non-target object OBJ_ntgt. Note that the target object OBJ_tgt may be captured or may not be captured in the image indicated by the image data IMG_3D that is used to generate the point cloud model of the non-target object OBJ_ntgt. Whole of one or more non-target objects OBJ_ntgt that are not selected as the target object OBJ_tgt may be captured or a part of the plurality of non-target objects OBJ_ntgt that are not selected as the target objects OBJ_tgt may be captured in the image indicated by the image data IMG_3D that is used to generate the point cloud model of the non-target object OBJ_ntgt. In a case where the target object OBJ_tgt is captured in the image indicated by the image data IMG_3D, the control apparatus 3 may generate the point cloud model of the target object OBJ_tgt and the non-target objects OBJ_ntgt based on the image data IMG_3D, and remove the model part corresponding to the target object OBJ_tgt from the generated point cloud model. Alternatively, the control apparatus 3 may perform, on the image data IMG_3D, the cropping processing for extracting the image part in which the non-target objects OBJ_ntgt is captured from the image indicated by the image data IMG_3D, and generate the point cloud model of the non-target object OBJ_ntgt based on the image data IMG_3D on which the cropping processing has been performed. Then, the control apparatus 3 may use the generated point cloud model of at least one non-target object OBJ_ntgt as at least one non-target object model OM_ntgt. Then, as described above, the control apparatus 3 may generate the movement path MRf so that the interference of at least one of the end effector model EM, the held object model, and at least one non-target object model OM_ntgt does not occur. As a result, the control apparatus 3 can generate the movement path MRf satisfying the condition that the interference of at least one of the end effector 4, the held object HOBJ, and the non-target object OBJ_ntgt does not occur.

In a case where the movement path MRf along which the tool center point TCP moves after the end effector 4 performs the predetermined process on the object OBJ is generated, the imaging apparatus 2 may image at least the non-target object OBJ_ntgt after the end effector 4 performs the predetermined process on the object OBJ. For example, in the example illustrated in FIG. 31(a), the imaging apparatus 2 may image at least the non-target object OBJ_ntgt after the end effector 4 holds the object OBJ in order to generate the movement path MRf#12.

In a case where the movement path MRf along which the tool center point TCP moves after the end effector 4 performs the predetermined process on the object OBJ is generated, the imaging apparatus 2 may image at least the non-target object OBJ_ntgt before the end effector 4 performs the predetermined process on the object OBJ. For example, in the example illustrated in FIG. 31(a), the imaging apparatus 2 may image at least the non-target object OBJ_ntgt before the end effector 4 holds the object OBJ in order to generate the movement path MRf#12.

### (6-1-5) Fifth Modified Example of Fine Movement Operation

As described above, the control apparatus 3 (especially, the robot control unit 316) may perform the 3D matching processing using three-dimensional position data WSD and the three-dimensional model data indicating the three-dimensional model that is the reference for the object OBJ as one example of the matching processing for calculating at least one of the position and the pose of the object OBJ. In a fifth modified example of the fine movement operation, the control apparatus 3 may generate other three-dimensional model, which is at least a part of the three-dimensional model, from the three-dimensional model indicated by the three-dimensional model data, and perform the 3D matching processing using the generated other three-dimensional model. Note that the three-dimensional model indicated by the three-dimensional model data is referred to as an original model OTM, and other three-dimensional model that is generated from the original model and that is at least a part of the original model is referred to as a partial model PTM for convenience of description in the below-described description. Note that the original model OTM may be the three-dimensional model indicated by the three-dimensional model data itself, or may not be the three-dimensional model indicated by the three-dimensional model data itself. For example, the original model OTM may be a three-dimensional model whose shape is slightly different from that of the three-dimensional model indicated by the three-dimensional model data.

The control apparatus 3 may extract at least a part of the original model OTM from the original model OTM to generate the partial model PTM corresponding to at least a part of the extracted original model OTM. Especially, the control apparatus 3 may generate the partial model PTM by extracting at least a part of the original model OTM from the original model OTM based on an instruction from the user. Namely, the control apparatus 3 may generate the partial model PTM based on the instruction from the user for extracting at least a part of the original model OTM as the partial model PTM. In other words, the control apparatus 3 may generate the partial model PTM based on the instruction from the user for generating the partial model

### PTM.

The user may input model generation information, which is related to the instruction from the user for generating the partial model PTM, to the control apparatus 3 by using the input apparatus 34. For example, the control apparatus 3 may display a model generation screen 3560 that is operable by the user to generate the partial model PTM on the display apparatus 35. Specifically, the display signal generation unit 317 of the control apparatus 3 may generate a display signal for displaying the model generation screen 3560 on the display apparatus 35. Then, the display signal output unit 318 may output the display signal generated by the display signal generation unit 317 to the display apparatus 35. As a result, the display apparatus 35 may display the model generation screen 3560 based on the display signal acquired from the display signal output unit 318.

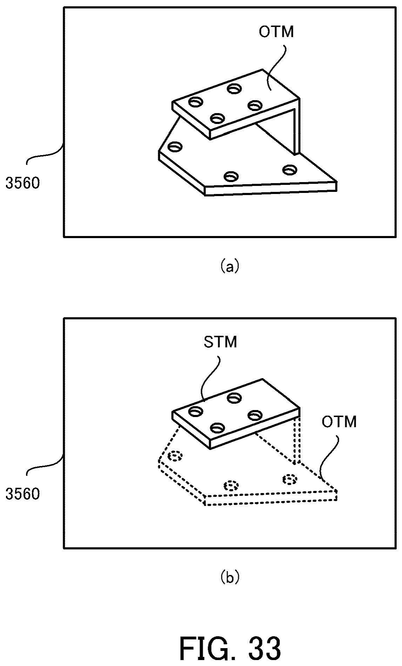

One example of the model generation screen 3560 is illustrated in FIG. 33(a) to FIG. 33(b). As illustrated in FIG. 33(a) and FIG. 33(b), the original model OTM may be displayed on the model generation screen 3560. The user may input the instruction (the model generation information) for generating the partial model PTM by using the original model OTM displayed on the model generation screen 3560 to the control apparatus 3 on the model generation screen 3560.

As illustrated in FIG. 33(b), for example, the user may input, to the control apparatus 3, an instruction for selecting at least a part of the original model OTM displayed on the model generation screen 3560 as a selection model STM. Note that the selection model STM of the original model OTM that is selected by the user is illustrated by a solid line and a model part of the original model OTM that is not selected by the user is illustrated by a broken line in FIG. 33(b). Furthermore, the user may input, to the control apparatus 3, an instruction for designating the selection model STM, which is selected by the user, as a model part that should be included in the partial model PTM. In this case, the control apparatus 3 may extract the model part of the original model OTM that is selected by the user to generate the partial model PTM including at least a part of the original model OTM extracted. Alternatively, the user may input, to the control apparatus 3, an instruction for designating the selection model STM, which is selected by the user, as a model part that should not be included in the partial model PTM. In this case, the control apparatus 3 may extract the model part of the original model OTM that is not selected by the user to generate the partial model PTM including at least a part of the original model OTM extracted.

Note that generating the partial model PTM from the original model OTM may be considered to be equivalent to editing the original model OTM to generate the partial model PTM as illustrated in FIG. 33(a) to FIG. 33(b). In this case, the model generation screen 3560 may be referred to as a model editing screen. The model generation information related to the instruction from the user for generating the partial model PTM may be referred to as model editing information related to the instruction from the user for editing the original model OTM.

After the partial model PTM is generated, the control apparatus 3 may perform the 3D matching processing using the three-dimensional position data WSD and the partial model PTM in addition to or instead of performing the 3D matching processing using the three-dimensional position data WSD and the original model OTM. In this case, it is likely that the control apparatus 3 can properly detect (recognize) one object OBJ on which the end effector 4 should perform the predetermined process by performing the 3D matching processing especially in a case where the three-dimensional position data WSD indicates the three-dimensional position of each of the plurality of objects OBJ (especially, the plurality of objects OBJ that are at least partially overlapped). Namely, the control apparatus 3 can properly detect (recognize) one object OBJ on which the end effector 4 should perform the predetermined process by performing the 3D matching processing in a case where the plurality of objects OBJ (especially, the plurality of objects OBJ that are at least partially overlapped) are captured in the image indicated by image data IMG_3D.

This is because the one object OBJ which is not hidden by other object OBJ is captured in the image indicated by the image data IMG_3D in a case where other object OBJ is overlapped on the one object OBJ on which the end effector 4 should perform the predetermined process and other object OBJ. Therefore, in this case, the control apparatus 3 can detect (recognize) the one object OBJ on which the end effector 4 should perform the predetermined process by performing the 3D matching processing using the original model OTM that is the three-dimensional model of the object OBJ (typically, the three-dimensional model of the entire object OBJ). On the other hand, in a case where other object OBJ is overlapped on the one object OBJ on which the end effector 4 should perform the predetermined process and other object OBJ, there is a possibility that the one object OBJ which is partially hidden by other object OBJ is captured in the image indicated by the image data IMG_3D. There is a possibility that a part of the one object OBJ that is not hidden by other object OBJ captured but other part of the object OBJ that is hidden by other object OBJ is not captured in the image indicated by the image data IMG_3D. As a result, there is a possibility that the three-dimensional position data WSD generated from this image data IMG_3D indicate the three-dimensional position of a part of the one object OBJ that is not hidden by other object OBJ but does not indicate the three-dimensional position of other part of the one object OBJ that is hidden by other object OBJ. Namely, there is a possibility that the three-dimensional position data WSD generated from this image data IMG_3D indicate the three-dimensional shape of a part of the one object OBJ that is not hidden by other object OBJ but does not indicate the three-dimensional shape of other part of the one object OBJ that is hidden by other object OBJ. In this case, there is a possibility that the control apparatus cannot detect (recognize) the one object OBJ on which the end effector 4 should perform the predetermined process even if the control apparatus 3 performs the 3D matching processing using the original model OTM that is the three-dimensional model of the object OBJ (typically, the three-dimensional model of the entire object OBJ). This is because the original model OTM indicates the three-dimensional shape of the entire object OBJ but the three-dimensional position data WSD indicates the three-dimensional shape of a part of the object OBJ, and therefore, the control apparatus 3 cannot detect (recognize) the object OBJ even if the control apparatus performs the 3D matching processing using the original model OTM in a case where the three-dimensional shape of the entire object OBJ indicated by the original model OTM is greatly different from the three-dimensional shape of a part of the object OBJ indicated by the three-dimensional position data WSD.

On the other hand, in the fifth modified example of the fine movement operation, the control apparatus 3 may perform the 3D matching processing using the partial model PTM that is the three-dimensional model of a part of the object OBJ. In this case, the partial model PTM may be a three-dimensional model that is at least partially the same as a three-dimensional model of a part of the one object OBJ that is not hidden by other object OBJ. The partial model PTM may be a three-dimensional model that is at least partially included in a three-dimensional model of the one object OBJ that is not hidden by other object OBJ. Conversely, the user may input, to the control apparatus 3, the instruction for generating the partial model PTM based on a tendency of an overlapping of the plurality of objects OBJ so that the partial model PTM is the three-dimensional model that is at least partially the same as the three-dimensional model of a part of the one object OBJ that is not hidden by other object OBJ. The user may input, to the control apparatus 3, the instruction for generating the partial model PTM based on a tendency of an overlapping of the plurality of objects OBJ so that the partial model PTM is the three-dimensional model that is at least partially included in the three-dimensional model of the one object OBJ that is not hidden by other object OBJ. As a result, even in a case where other object OBJ is overlapped on the one object OBJ (especially, a part of the one object OBJ is hidden by other object OBJ), the control apparatus 3 can detect (recognize) the one object OBJ by performing the 3D matching processing using the partial model PTM.

Considering a technical effect of the fifth modified example of the fine movement operation, the imaging apparatus 2 may image the plurality of objects OBJ (at least two or more objects OBJ of the plurality of objects OBJ contained in the placing apparatus T) and the control apparatus 3 may perform the fifth modified example of the fine movement operation in a situation where the plurality of objects OBJ (the workpieces W) are contained in the placing apparatus T (for example, the container box CB or the pallet PLT). Especially, the control apparatus 3 may perform the fifth modified example of the fine movement operation in a situation where the imaging apparatus 2 images the plurality of objects OBJ that are at least partially overlapped.

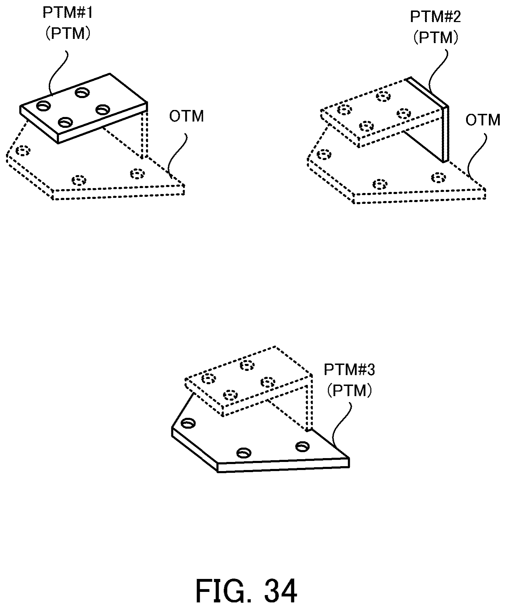

The control apparatus 3 may generate a plurality of partial models PTM as illustrated in FIG. 34. Especially, the control apparatus 3 may generate the plurality of partial models PTM that are different from each other. Namely, the control apparatus 3 may generate the plurality of partial models PTM that are a plurality of three-dimensional models that are at least partially different from each other. For example, the control apparatus 3 may generate a first partial model PTM corresponding to a first model part of the original model OTM and a second partial model PTM corresponding to a first model part of the original model OTM that is at least partially different from the first model part. In other words, for example, the control apparatus 3 may generate the first partial model PTM indicating a three-dimensional shape of a first object part of the object OBJ and the second partial model PTM indicating a three-dimensional shape of a second object part that is at least partially different from the first object part. Note that FIG. 34 illustrates an example in which the control apparatus 3 generates three partial models PTM (specifically, a partial model PTM #1, a partial model PTM #2, and a partial model PTM #3).

In a case where the plurality of partial models PTM are generated, the control apparatus 3 may select one partial model PTM, which is likely to be able to properly detect (recognize) one object OBJ on which the end effector 4 should perform the predetermined process, from the plurality of partial models PTM based on the tendency of the overlapping of the plurality of objects OBJ, and perform the 3D matching processing using the selected one partial model PTM. As a result, compared to a case where a single partial model PTM is used, it is more likely that the control apparatus 3 can properly detect (recognize) one object OBJ on which the end effector 4 should perform the predetermined process.

The control apparatus 3 may assign a priority to each of the plurality of partial models PTM. Namely, the control apparatus 3 may generate the plurality of partial models PTM to each of which the priority is assigned. The priority indicates a priority to use the partial model PTM for the matching processing (in this case, the 3D matching processing).

The control apparatus 3 may assign the priority to each of the plurality of partial models PTM based on priority information related to an instruction from the user for assigning the priority to each of the plurality of partial models PTM. Namely, the control apparatus 3 may assign the priority to each of the plurality of partial models PTM based on the instruction from the user. In this case, the user may input the priority information to the control apparatus 3 by using the input apparatus 34. For example, the control apparatus 3 may display a display screen that is operable by the user to assign (in other words, set) the priority on the display apparatus 35. Specifically, the display signal generation unit 317 of the control apparatus 3 may generate a display signal for displaying the display screen that is operable by the user to assign (in other words, set) the priority on the display apparatus 35. Then, the display signal output unit 318 may output the display signal generated by the display signal generation unit 317 to the display apparatus 35. As a result, the display apparatus 35 may display the display screen that is operable by the user to assign (in other words, set) the priority based on the display signal acquired from the display signal output unit 318.

The control apparatus 3 may assign the priority to each of the plurality of partial models PTM without using the priority information related to the instruction from the user for assigning the priority to each of the plurality of partial models PTM. Namely, the control apparatus 3 may assign the priority to each of the plurality of partial models PTM independently of the instruction from the user. For example, the control apparatus 3 may assign the priority to each of the plurality of partial models PTM based on a predetermined rule for assigning the priority.

In a case where the priority is assigned to each of the plurality of partial models PTM, the control apparatus 3 may select one partial model PTM, whose priority is the highest, from the plurality of partial models PTM and perform the 3D matching processing using the selected partial model PTM. Alternatively, the control apparatus 3 may select one partial model PTM, whose priority is higher than a predetermined level, from the plurality of partial models PTM, and perform the 3D matching processing using the selected partial model PTM.

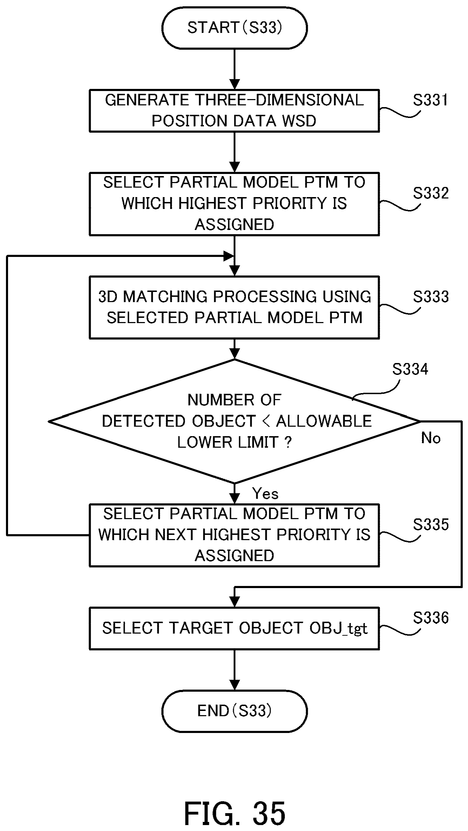

Next, with reference to FIG. 35, one example of the matching processing using the plurality of partial models PTM to each of which the priority is assigned will be described. FIG. 35 is a flowchart that illustrates a flow of one example of the matching processing using the plurality of partial models PTM to each of which the priority is assigned. Note that an operation illustrated in FIG. 35 corresponds to one example of the operation for calculating at least one of the position and the pose of the object OBJ at the step S33 in FIG. 6.

As illustrated in FIG. 35, the control apparatus 3 (especially, the robot control unit 316) generates the three-dimensional position data WSD based on the image data IMG_3D (a step S331) after acquiring the image data IMG_3D at the step S32 in FIG. 6.

Then, the robot control unit 316 selects one partial model PTM whose priority is the highest from the plurality of partial models PTM (a step S332). Namely, the robot control unit 316 selects one to which the highest priority is assigned from the plurality of partial models PTM (the step S332). Then, the robot control unit 316 performs the 3D matching processing using the one partial model PTM selected at the step S332 (a step S333). As a result, the robot control unit 316 detects at least one object OBJ, selects one object OBJ from the at least one detected object OBJ as the target object OBJ_tgt on which the end effector 4 should perform the predetermined process, and calculates at least one of the position and the pose of the selected target object OBJ_tgt.

After the matching processing at the step S333 is completed or in a period during which the matching processing at the step S333 is performed, the robot control unit 316 determines whether or not the number of objects OBJ detected by the matching processing at the step S333 is smaller than a predetermined allowable lower limit value (a step S334). The predetermined allowable lower limit value may be set by the user or may be automatically set by the control apparatus 3. The predetermined allowable lower limit value may be a fixed value (namely, a value that is not changeable) or a value that is changeable.

In a case where it is determined as a result of the determination at the step S334 that the number of objects OBJ detected by the matching processing at the step S333 is smaller than the predetermined allowable lower limit value (the step S334: Yes), it is assumed that the sufficient number of objects OBJ cannot be detected in a situation where the imaging apparatus 2 images the plurality of objects OBJ that are at least partially overlapped. Namely, there is a possibility that the partial model PTM used for the matching processing is not a proper partial model PTM for the purpose of detecting the sufficient number of objects OBJ. In this case, compared to a case where the sufficient number of objects OBJ can be detected, it is more likely that the objects OBJ detected by the matching processing do not include one object OBJ on which the end effector 4 should perform the predetermined process (namely, one object OBJ that is desired to be selected as the target object OBJ_tgt). In this case, if other object OBJ, which is different from the one object OBJ that is desired to be selected as the target object OBJ_tgt, is selected as the target object OBJ_tgt based on the result (for example, the matching similarity) of the matching processing performed so far, there is a possibility that it is found that the target object OBJ_tgt is not the one object OBJ that is desired to be selected as the target object OBJ_tgt after the end effector 4 has actually moved closer to the target object OBJ_tgt. For example, there is a possibility that it is found that the end effector 4 cannot perform the predetermined process on the target object OBJ_tgt after the end effector 4 has actually moved closer to the target object OBJ_tgt. As a result, the control apparatus 3 needs to re-perform the matching processing after actually moving the end effector 4. Therefore, there is a possibility that the time required for the end effector 4 to complete the predetermined process (so-called tact time or throughput) deteriorates.

Therefore, the robot control unit 316 re-performs the 3D matching processing before selecting the target object OBJ_tgt based on the result (for example, the matching similarity) of the matching processing performed so far. Specifically, the robot control unit 316 selects one partial model PTM whose priority is the next highest from the plurality of partial models PTM (the step S334). Namely, the robot control unit 316 selects one partial model PTM to which the next highest priority is assigned from the plurality of partial models PTM (a step S335). Then, the robot control unit 316 performs the 3D matching processing using the one partial model PTM selected at the step S335 (the step S333).

On the other hand, in a case where it is determined as a result of the determination at the step S334 that the number of objects OBJ detected by the matching processing at the step S333 is not smaller than the predetermined allowable lower limit value (the step S334: No), it is assumed that the sufficient number of objects OBJ can be detected in a situation where the imaging apparatus 2 images the plurality of objects OBJ that are at least partially overlapped. Namely, there is a possibility that the partial model PTM used for the matching processing is a proper partial model PTM for the purpose of detecting the sufficient number of objects OBJ. In this case, compared to a case where the sufficient number of objects OBJ cannot be detected, it is more likely that the objects OBJ detected by the matching processing include one object OBJ on which the end effector 4 should perform the predetermined process (namely, one object OBJ that is desired to be selected as the target object OBJ_tgt). Therefore, in this case, the robot control unit 316 may not re-perform the 3D matching processing. Namely, the robot control unit 316 may not perform the 3D matching processing using the partial model PTM whose priority is the next highest.

Namely, the robot control unit 316 alternately performs a processing for selecting the partial model PTM in descending order of the priority and the 3D matching processing using the selected partial model PTM until the sufficient number of objects OBJ are detected by the matching processing (namely, until it is determined that the number of objects OBJ detected by the matching processing is not smaller than the allowable lower limit value). As a result, the control apparatus 3 can re-perform the matching processing before actually moving the end effector 4 closer to the target object OBJ_tgt. Therefore, the time required for the end effector 4 to complete the predetermined process (so-called tact time or throughput) is improved compared to a case where the matching processing is re-performed after the end effector 4 has actually moved closer to the target object OBJ_tgt.

The three-dimensional position data WSD that is used in the 3D matching processing using the partial model PTM to which a first priority is assigned may be the same as the three-dimensional position data WSD that is used in the 3D matching processing using the partial model PTM to which a second priority, which is different from the first priority, is assigned. In this case, the camera 22 may not re-image the object OBJ after the 3D matching processing using the partial model PTM to which the first priority is assigned is performed. Alternatively, the three-dimensional position data WSD that is used in the 3D matching processing using the partial model PTM to which the first priority is assigned may be different from the three-dimensional position data WSD that is used in the 3D matching processing using the partial model PTM to which the second priority is assigned. In this case, the camera 22 may generate new image data IMG_3D by re-imaging the object OBJ after the 3D matching processing using the partial model PTM to which the first priority is assigned is performed. Then, the robot control unit 316 may generate new three-dimensional position data WSD based on the new image data IMG_3D, and perform the 3D matching processing using the newly generated three-dimensional position data WSD and the partial model PTM to which the second priority is assigned.

Note that the robot control unit 316 may re-perform the 3D matching processing even in a case where the result of the 3D matching processing performed at the step S333 is unsuccessful. Specifically, the robot control unit 316 may select one partial model PTM whose priority is the next highest from the plurality of partial models PTM (the step S334). The 3D matching processing using the selected partial model PTM may be performed (the step S335). A state in which "the result of the 3D matching processing is unsuccessful" may include a state in which "at least one of the position and the pose of the object OBJ cannot be calculated by the 3D matching process". The state in which "the result of the 3D matching processing is unsuccessful" may include a state in which "all of the position and the pose of the object OBJ cannot be calculated by the 3D matching processing". The state in which "the result of the 3D matching processing is unsuccessful" may include a state in which "at least one of the position and the pose of the object OBJ can be calculated by the 3D matching processing, but an accuracy of the calculated result of at least one of the calculated result of the position and the pose of the object OBJ is low". The state in which "the accuracy of the calculated result of at least one of the calculated result of the position and the pose of the object OBJ is low" may include a state in which "the matching similarity of the object OBJ for which at least one of the position and the pose is calculated is lower than a preset threshold value". The state in which "the result of the 3D matching processing is unsuccessful" may include a state in which "the object OBJ cannot be detected by the 3D matching processing". The state in which "the object OBJ cannot be detected by the 3D matching processing" may include a state in which "the object OBJ whose matching similarity is higher than the above-described matching determination threshold value cannot be detected by the 3D matching processing". Note that a state in which "the number of objects OBJ detected by the matching processing is smaller than the predetermined allowable lower limit value" used at the step S334 may be regarded as one example of the state in which "the result of the 3D matching processing is unsuccessful". This is because there is a possibility that the result of the 3D matching processing is not proper, and therefore there is a possibility that the sufficient number of objects OBJ are not detected by the 3D matching processing. Note that a state in which the result of the 3D matching processing is not unsuccessful may be regarded as a state in which the result of the 3D matching processing is successful. The same applies to the 2D matching processing.

The state in which "the number of objects OBJ detected by the 3D matching processing is smaller than the predetermined allowable lower limit value" may include a state in which "the number of objects OBJ whose results of the 3D matching processing are successful is smaller than the predetermined allowable lower limit value". "The objects OBJ whose result of the 3D matching processing is successful" may include "the objects OBJ for which at least one of the position and the pose can be calculated by the 3D matching processing". "The objects OBJ whose result of the 3D matching processing is successful" may include "the objects OBJ for which all of the position and the pose can be calculated by the 3D matching processing". "The objects OBJ whose result of the 3D matching processing is successful" may include "the object OBJ satisfying a condition that the accuracy of the calculated result of at least one of the position and the pose is high". A state in which "the accuracy of the calculated result of at least one of the position and the pose of the object OBJ is high" may include a state in which "the matching similarity of the object OBJ for which at least one of the position and the pose is calculated is higher than a predetermined threshold value". "The objects OBJ whose result of the 3D matching processing is successful" may include "the object OBJ whose matching similarity is higher than the above-described matching determination threshold value".

Note that the fifth modified example of the fine movement operation may be performed in a situation where the plurality of objects OBJ are captured in the image indicated by the image data IMG_3D, because it is determined at the step S334 whether or not the number of objects OBJ detected by the 3D matching processing is smaller than the predetermined allowable lower limit value.

Then, after it is determined that the number of objects OBJ detected by the matching processing is not smaller than the allowable lower limit value (the step S334: No), the robot control unit 316 selects, as the target object OBJ_tgt, one object OBJ on which the end effector 4 should perform the predetermined process from the object OBJ detected by the matching processing (a step S336). The robot control unit 316 selects as the target object OBJ_tgt based on the detected result (for example, the matching similarity) of the object OBJ by the matching processing (the step S336).

Here, in a case where the plurality of matching processing are performed using the plurality of partial models PTM to which different priorities are assigned, respectively, the robot control unit 316 may select the target object OBJ_tgt based on the result of the plurality of matching processing performed using the plurality of partial models PTM, respectively. For example, there is a possibility that the same object OBJ is detected by at least two of the plurality of matching processing. In this case, the robot control unit 316 may use a priority result (for example, the matching similarity) of the object OBJ by one matching processing operation using the partial model PTM whose priority is higher than that of other matching processing among the plurality of matching processing. Namely, the robot control unit 316 may not use the priority result (for example, the matching similarity) of the object OBJ by one matching processing using the partial model PTM whose priority is lower than that of other matching processing among the plurality of matching processing. However, the robot control unit 316 may use the priority result (for example, the matching similarity) of the object OBJ by one matching processing using the partial model PTM whose priority is lower than that of other matching processing among the plurality of matching processing.

As one example, in a case where a first object OBJ #1 and a second object OBJ #2 are detected by a first matching processing using a first partial model PTM to which a first priority is assigned and not only the first object OBJ #1 and the second object OBJ #2 but also a third object OBJ #3 is detected by a second matching processing using a second partial model PTM to which a second priority, which is lower than the first priority, is assigned, the robot control unit 316 may select the target object OBJ_tgt by using the detected result of the first object OBJ #1 and the second object OBJ #2 by the first matching processing and the detected result of the third object OBJ #3 by the second matching processing. the detection result of the third object OBJ#3 by the second matching processing. Namely, the robot control unit 316 may not use the detected result of the first object OBJ#1 and the second object OBJ#2 by the second matching processing in order to select the target object OBJ_tgt. However, the robot control unit 316 may use the detected result of the first object OBJ#1 and the second object OBJ#2 by the second matching processing in order to select the target object OBJ_tgt.

Note that the operation for selecting the target object OBJ_tgt based on the detected result of the object OBJ by the matching processing (for example, the matching similarity) has been already described in describing the step S33 in FIG. 6, so a detailed description thereof is omitted.

Note that the control apparatus 3 generates the partial model PTM that is the three-dimensional model from the original model OTM that is the three-dimensional model, and performs the 3D matching processing using the partial model PTM. However, the control apparatus 3 may generate the partial model PTM that is a two-dimensional model from the original model OTM that is the three-dimensional model, and perform the 2D matching processing using the generated partial model PTM. For example, the control apparatus 3 may convert the original model OTM, which is the three-dimensional model, to a two-dimensional model, generate the partial model PTM, which is another two-dimensional model, from the two-dimensional model, and perform the 2D matching processing using the generated partial model

### PTM.

As one example, the control apparatus 3 may convert the original model OTM, which is the three-dimensional model, to the two-dimensional model. For example, the control apparatus 3 may virtually project at least a part of the original model OTM on a virtual plane to generate a model corresponding to a projection pattern on the virtual plane as the two-dimensional model by. Then, the control apparatus 3 may generate the partial model PT, which is another two-dimensional model, from the two-dimensional model generated by the conversion. For example, the control apparatus 3 may extract a part of the generated two-dimensional model to generate the extracted two-dimensional model as the partial model PTM. In a case where the plurality of partial models PTM are generated as described above, the control apparatus 3 may repeat a processing for extracting a part of the generated two-dimensional model to generate a plurality of extracted two-dimensional models as the plurality of partial models PTM, respectively. Then, the control apparatus 3 may perform the 2D matching processing using the generated partial model PTM.

Alternatively, as another example, the control apparatus 3 may generate the plurality of two-dimensional models by virtually projecting at least a part of the original model OTM on a virtual plane, which intersects a plurality of different directions, from the plurality of different directions in a case where the plurality of partial models PTM are generated as described above. Then, the control apparatus 3 may generate the plurality of partial models PTM, which are the plurality of different two-dimensional models, by generating at least one partial model PTM for each of the plurality of two-dimensional models generated by the conversion.

Moreover, the control apparatus 3 may calculate at least one of the position and the pose of the object OBJ by performing both the 3D matching processing using the partial model PTM that is the three-dimensional model and the 2D matching processing using the partial model PTM that is the two-dimensional model. Note that the operation for calculating at least one of the position and the pose of the object OBJ by performing both the 3D matching processing and the 2D matching processing has been already described in describing the step S33 in FIG. 6 as the operation for calculating at least one of the position and the pose of the object OBJ using both the image data IMG_2D and the three-dimensional position data WSD, so the detailed thereof is omitted.

Note that the control apparatus 3 may generate the movement path MRr by performing an operation that is the same as the fifth modified example of the fine movement operation even in a case where the rough movement operation is performed. Specifically, the control apparatus 3 may generate the movement path MRr by performing the operation that is the same as the fifth modified example of the fine movement operation in a case where the rough movement operation including the matching processing is performed (namely, the movement path MRr is generated based on the result of the matching processing). Namely, the control apparatus 3 may generate the movement path MRr by performing the matching processing using the partial model PTM.

### (6-2) Modified Example of Robot 1

In the above description, the end effector 4 (for example, the hand gripper) that performs at least one of the holding process and the releasing process is attached to the robot arm 12. However, the end effector 4 is not limited to an apparatus that performs at least one of the holding process and the releasing process, but may be an apparatus that performs another process on the object OBJ.

As one example, a processing apparatus for processing the object OBJ may be attached to the robot arm 12 as one example of the end effector 4. The processing apparatus may perform at least one of an additive manufacturing for adding a new build object to the object OBJ, a subtractive manufacturing for removing a part of the object OBJ, a welding processing for jointing two objects OBJ, and a cutting processing for cutting the object OBJ. The processing apparatus may process the object OBJ by using a tool. In this case, the processing apparatus including the tool may be attached to the robot arm 12. Alternatively, the processing apparatus may process the object OBJ by irradiating the object OBJ with an energy beam (for example, light, electromagnetic wave, and charged particle beam). In this case, the processing apparatus including an irradiation apparatus that irradiates the object OBJ with the energy beam may be attached to the robot arm 12.

Note that the tool center point TCP of the end effector 4 that is used as the movement point MP described above may mean a point of the tool (for example, a tip of the tool) that contacts the object OBJ (for example, the workpiece W) in a case where the processing apparatus including the tool is attached to the robot arm 12 as the end effector 4. In a case where the processing apparatus including the irradiation apparatus is attached to the robot arm 12 as the end effector 4, the tool center point TCP of the end effector 4 that is used as the movement point MP described above may mean a condensed position of the energy beam. In a case where the processing apparatus is attached to the robot arm 12 as the end effector 4, the process target position PTP described above may mean a position at which the processing apparatus processes the object OBJ. Namely, the process target position PTP may mean a position satisfying a condition that the processing apparatus processes the object OBJ in a situation where the tool center point TCP is positioned at the process target position PTP.

The processing apparatus that is one example of the end effector 4 may perform soldering processing for soldering a component to the object OBJ. The processing apparatus may solder the component to the object OBJ by using a soldering copper. In this case, the processing apparatus including the soldering copper may be attached to the robot arm 12. Alternatively, the processing apparatus may solder the component to the object OBJ by irradiating the solder with an energy beam (for example, light, electromagnetic wave, and charged particle beam). In this case, the processing apparatus including an irradiation apparatus that irradiates the object OBJ with the energy beam may be attached to the robot arm 12.

Note that the tool center point TCP of the end effector 4 that is used as the movement point MP described above may mean a point of the soldering copper (for example, a tip of the soldering copper) that contacts the object OBJ (for example, the workpiece W) in a case where the processing apparatus including the soldering copper is attached to the robot arm 12 as the end effector 4. In a case where the processing apparatus including the irradiation apparatus is attached to the robot arm 12 as the end effector 4, the tool center point TCP of the end effector 4 that is used as the movement point MP described above may mean a condensed position of the energy beam.

As another example, a measurement apparatus for measuring the object OBJ may be attached to the robot arm 12 as one example of the end effector 4. The measurement apparatus may be configured to measure a characteristic of the object OBJ. At least one of the shape of the object OBJ, a size of the object OBJ, and a temperature of the object OBJ is one example of the characteristic of the object OBJ. The measurement apparatus may measure the object OBJ by using a touch probe. In this case, the measurement apparatus including the touch probe may be attached to the robot arm 12. Alternatively, the measurement apparatus may measure the object OBJ by irradiating the object OBJ with an energy beam (for example, light, electromagnetic wave, and charged particle beam). In this case, the measurement apparatus including an irradiation apparatus that irradiates the object OBJ with the energy beam may be attached to the robot arm 12.

Note that the tool center point TCP of the end effector 4 that is used as the movement point MP described above may mean a point of the touch probe (for example, a tip of the touch probe) that contacts the object OBJ (for example, the workpiece W) in a case where the measurement apparatus including the touch probe is attached to the robot arm 12 as the end effector 4. In a case where the measurement apparatus including the irradiation apparatus is attached to the robot arm 12 as the end effector 4, the tool center point TCP of the end effector 4 that is used as the movement point MP described above may mean a condensed position of the energy beam. In a case where the measurement apparatus is attached to the robot arm 12 as the end effector 4, the process target position PTP described above may mean a position at which the measurement apparatus measures the object OBJ. Namely, the process target position PTP may mean a position satisfying a condition that the measurement apparatus measures the object OBJ in a situation where the tool center point TCP is positioned at the process target position PTP.

In a case where at least one of the processing apparatus and the measurement apparatus is attached to the robot arm 12 as one example of the end effector 4, the control apparatus 3 may generate a control signal for controlling an operation of at least one of the processing apparatus and the measurement apparatus. For example, the control apparatus 3 may generate the control signal for controlling a rotation of the tool of the processing apparatus. For example, the control apparatus 3 may generate, as robot control signal, the control signal for controlling an irradiation aspect of the energy beam by the irradiation apparatus of at least one of the processing apparatus and the measurement apparatus. The irradiation aspect of the energy beam may include at least one of an intensity of the energy beam, an irradiation position of the energy beam, an irradiation timing of the energy beam, and an irradiation time of the energy beam.

As another example, a discharging apparatus may be attached to the robot arm 12 as one example of the end effector 4. For example, the discharging apparatus may discharge a discharging material including at least one of an adhesive material, a seal material, a paint material, and a solder. The discharging apparatus may discharge the discharging material toward the object OBJ. For example, the control apparatus 3 may generate, as the robot control signal, a control signal for controlling at least one of ON / OFF of discharging of the discharging material from the discharging apparatus. For example, the control apparatus 3 may generate, as the robot control signal, a control signal for controlling an discharged amount of the discharging material from the discharging apparatus. Note that the discharging apparatus may be referred to as a processing apparatus, because it can be said that discharging at least one of the adhesive material, the seal material, the paint material, and the solder to the object OBJ is processing the object OBJ.

Note that the tool center point TCP of the end effector 4 that is used as the movement point MP described above may mean a point of the discharge apparatus from which the discharging material is discharged (for example, a discharge port of the discharging material) in a case where the measurement apparatus including the discharging apparatus is attached to the robot arm 12 as the end effector 4. In a case where the discharging apparatus is attached to the robot arm 12 as the end effector 4, the process target position PTP described above may mean a position at which the discharging apparatus discharges the discharging material toward the object OBJ. Namely, the process target position PTP may mean a position satisfying a condition that the discharging apparatus discharges the discharging material toward the object OBJ in a situation where the tool center point TCP is positioned at the process target position PTP.

### (6-3) Modified Example of Imaging Apparatus 2

In the above-described description, the imaging apparatus 2 includes the camera 22 and the projection apparatus 23 to generate the image data IMG_3D. However, the imaging apparatus 2 may not include the projection apparatus 23 to generate the image data IMG_3D. This is because the camera 22 is the stereo camera as described above and it is possible to generate the three-dimensional position data WSD, which indicates the three-dimensional position of each of the plurality of points of the object OBJ, from the two image data IMG_3D generated by the two imaging elements of the stereo camera, respectively. In this case, the control apparatus 3 may calculate a parallax by performing the well-known matching for each part (for example, each pixel) of the images indicated by the two image data, respectively, included in the image data IMG_3D, and generate the three-dimensional position data WSD by using the well-known method based on the principle of triangulation using the calculated parallax.

The camera 22 may not be the stereo camera. For example, the camera 22 may be a monocular camera that images the object OBJ by using a single imaging element. Even in this case, the object OBJ on which the projection pattern is projected is captured in the image indicated by the image data IMG_3D. In this case, the shape of the projection pattern in the image indicated by the image data IMG_3D reflects the three-dimensional shape of the object OBJ on which the projection pattern is projected. Therefore, even in a case where the camera 22 is not the stereo camera, the control apparatus 3 can generate the three-dimensional position data WSD by a well-known processing based on the projection pattern that is captured in the image indicated by the image data IMG_3D.

The imaging apparatus 2 may include either one of the cameras 21 and 22 (namely, a single imaging apparatus) and the projection apparatus 23. In this case, the image data generated by the single imaging apparatus imaging the object OBJ in a period during which the projection apparatus 23 does not project the desired projection pattern on the object OBJ may be used as the image data IMG_2D. On the other hand, the image data generated by the single imaging apparatus imaging the object OBJ in a period during which the projection apparatus 23 projects the desired projection pattern on the object OBJ may be used as the image data IMG_3D.

The imaging apparatus 2 may include the camera 22 that is the stereo camera, but may not include the camera 21. In this case, the image data generated by either one of the two monocular cameras of the camera 22 imaging the object OBJ may be used as the image data IMG_2D. On the other hand, the image data indicating the two images respectively generated by both of the two monocular cameras of the camera 22 imaging the object OBJ may be used as the image data IMG_3D.

In the above-described description, both of the cameras 21 and 22 are attached to the robot 1 (especially, the robot arm 12). However, at least one of the cameras 21 and 22 may be attached to a part that is different from the robot 1 (especially, the robot arm 12). For example, at least one of the cameras 21 and 22 may be positioned on a ceiling of a building in which the robot system SYS is positioned.

In the above-described description, the imaging apparatus 2 is attached to the robot 1 including the robot arm 12. However, the imaging apparatus 2 may be attached to a robot that does not include the robot arm 12. For example, the imaging apparatus 2 may be attached to the robot 1 including a support apparatus that is configured to suspend the imaging apparatus 2 from a position above the object OBJ. In this case, the imaging apparatus 2 may be attached to the support apparatus. The support apparatus may include a plurality of leg members extending upwardly from the support surface S and a beam member connecting the plurality of leg members through upper ends of the leg members or parts near them. For example, the robot 1 may be configured to move the support apparatus.

### (6-4) Modified Example of Control Apparatus 3

In the above-described description, the control apparatus 3 (especially, the robot control unit 316) generates the three-dimensional position data WSD from the image data IMG_3D. However, an apparatus different from the control apparatus 3 may generate the three-dimensional position data WSD from the image data IMG_3D. For example, the imaging apparatus 2 that generates the image data IMG_3D may generate the three-dimensional position data WSD from the image data IMG_3D. In this case, the control apparatus 3 may acquire the three-dimensional position data WSD from the apparatus different from the control apparatus 3. The control apparatus 3 may calculate at least one of the position and the pose of the object OBJ by using the three-dimensional position data WSD acquired from the apparatus different from the control apparatus 3.

The control apparatus 3 (alternatively, the robot system SYS) may be considered to perform a robot control method that controls the robot 1 based on the movement paths MRr and MRf. The control apparatus 3 (alternatively, the robot system SYS) may be considered to perform a process method that performs the predetermined process on the object OBJ with the end effector 4 based on the movement paths MRr and MRf. The control apparatus 3 (alternatively, robot system SYS) may be considered to perform a transport method that transports the object OBJ held by the end effector 4 based on the movement paths MRr and MRf.

### (7) Supplementary Note

Regarding the above-described example embodiment, below described Supplementary notes are further disclosed.

### [Supplementary Note A1]

A computing apparatus including:
a signal generation unit that generates a display signal for displaying, on a display apparatus, a movement trajectory of a movement point moving due to a driving of a robot in a case where the robot is driven, without moving the robot; and
an output unit that outputs the display signal generated by the signal generation unit to the display apparatus.

### [Supplementary Note A2]

The computing apparatus according to the Supplementary Note A1, wherein
the robot includes a robot arm.

### [Supplementary Note A3]

The computing apparatus according to the Supplementary Note A1 or A2, wherein
the signal generation unit generates the display signal for displaying, on the display apparatus, the movement trajectory of the movement point moving due to the driving of the robot based on movement path information, without moving the robot based on the movement path information that is generated in advance.

### [Supplementary Note A4]

The computing apparatus according to the Supplementary Note A3 further including a path generation unit that generates the movement path information without moving the robot..

### [Supplementary Note A5]

The computing apparatus according to the Supplementary Note A4, wherein
the path generation unit generates the movement path information based on generation instruction information that is input through a display screen on the display apparatus and that is related to an instruction from a user for generating the movement path information.

### [Supplementary Note A6]

The computing apparatus according to the Supplementary Note A5, wherein
the generation instruction information includes: position information of a movement start point; position information of a movement end point; and model information, and
the model information includes robot model information indicating a robot model that is a three-dimensional model of the robot.

### [Supplementary Note A7]

The computing apparatus according to the Supplementary Note A6, wherein
the model information includes end effector model information indicating an end effector model that is a three-dimensional model of an end effector attachable to the robot.

### [Supplementary Note A8]

The computing apparatus according to the Supplementary Note A6 or A7, wherein
the model information includes object model information indicating an object model that is a three-dimensional model of a first object positioned around the robot.

### [Supplementary Note A9]

The computing apparatus according to any one of Appendices A1 to A8, wherein
the display signal includes a signal for displaying, on the display apparatus, a robot model that is a three-dimensional model of the robot together with a display object indicating the movement path.

### [Supplementary Note A10]

The computing apparatus according to the Supplementary Note A9, wherein
the display signal includes a signal for displaying, on the display apparatus, an end effector model that is a three-dimensional model of an end effector attached to the robot.

### [Supplementary Note A11]

The computing apparatus according to the Supplementary Note A9 or A10, wherein
the display signal includes a signal for displaying, on the display apparatus, an object model that is a three-dimensional model of a first object positioned around the robot.

### [Supplementary Note A12]

A display method including:
generating a display signal for displaying, on a display apparatus, a movement trajectory of a movement point moving due to a driving of a robot in a case where the robot is driven, without moving the robot; and
outputting the generated display signal to the display apparatus.

### [Supplementary Note A13]

The display method according to the Supplementary Note A12, wherein
the robot includes a robot arm.

### [Supplementary Note A14]

The display method according to the Supplementary Note A12 or A13, wherein
the generating the display signal includes generating the display signal for displaying, on the display apparatus, the movement trajectory of the movement point moving due to the driving of the robot based on movement path information, without moving the robot based on the movement path information that is generated in advance.

### [Supplementary Note A15]

The display method according to any one of the Supplementary Notes A12 to A14, wherein
the outputting the display signal includes outputting the generated display signal to the display apparatus in a state where the robot is stopped.

### [Supplementary Note A16]

The display method according to the Supplementary Note A14, wherein
the state where the robot is stopped includes a state before the robot is driven.

### [Supplementary Note A17]

The display method according to the Supplementary Note A15 or A16, wherein
the state where the robot is stopped includes a state where the robot is stopped after being driven.

### [Supplementary Note A18]

The display method according to any one of the Supplementary Notes A14 to A17, wherein
the display method further includes generating the movement path information without moving the robot.

### [Supplementary Note A19]

The display method according to the Supplementary Note A18, wherein
the generating the movement path includes generating the movement path information based on generation instruction information that is input through a display screen on the display apparatus and that is related to an instruction from a user for generating the movement path information.

### [Supplementary Note A20]

The display method according to the Supplementary Note A19, wherein
the generation instruction information includes: position information of a movement start point; position information of a movement end point; and model information, and
the model information includes robot model information indicating a robot model that is a three-dimensional model of the robot.

### [Supplementary Note A21]

The display method according to the Supplementary Note A20, wherein
the model information includes end effector model information indicating an end effector model that is a three-dimensional model of an end effector attachable to the robot.

### [Supplementary Note A22]

The display method according to the Supplementary Note A20 or A21, wherein
the model information includes object model information indicating an object model that is a three-dimensional model of a first object positioned around the robot.

### [Supplementary Note A23]

The display method according to any one of the Supplementary Notes A12 to A22, wherein
the movement point is at least one point of the robot.

### [Supplementary Note A24]

The display method according to any one of the Supplementary Notes A12 to A23, wherein
an end effector is attachable to the robot, and
the movement point is at least one point of the end effector attached to the robot.

### [Supplementary Note A25]

The display method according to any one of the Supplementary Notes A12 to A24, wherein
the movement point is a tool center point of the robot.

### [Supplementary Note A26]

The display method according to any one of the Supplementary Notes A12 to A25, wherein
the display signal includes a signal for displaying, on the display apparatus, a robot model that is a three-dimensional model of the robot together with a display object indicating the movement path.

### [Supplementary Note A27]

The display method according to the Supplementary Note A26, wherein
the display signal includes a signal for displaying, on the display apparatus, an end effector model that is a three-dimensional model of an end effector attached to the robot.

### [Supplementary Note A28]

The display method according to the Supplementary Note A26 or A27, wherein
the display signal includes a signal for displaying, on the display apparatus, an object model that is a three-dimensional model of a first object positioned around the robot.

### [Supplementary Note A29]

The display method according to any one of the Supplementary Notes A12 to A28, wherein
the display signal includes a signal for displaying, on the display apparatus, a waypoint through which the movement point passes on the movement trajectory together with the movement trajectory.

### [Supplementary Note A30]

The display method according to any one of the Supplementary Notes A12 to A29, wherein
the display signal includes a signal for displaying, on the display apparatus, at least one of a movement start point of the movement point and a movement end point of the movement point together with the movement trajectory.

### [Supplementary Note A31]

The display method according to any one of the Supplementary Notes A12 to A30, wherein
the display signal includes a signal for displaying, on the display apparatus, interference information related to an interference between a second object and at least one of at least a part of the robot and at least a part of an end effector attached to the robot together with the movement trajectory.

### [Supplementary Note A32]

The display method according to the Supplementary Note A31, wherein
the second object includes a first object positioned around the robot.

### [Supplementary Note A33]

The display method according to the Supplementary Note A31 or A32, wherein
the second object includes at least another part of the robot.

### [Supplementary Note A34]

The display method according to any one of the Supplementary Notes A31 to A33, wherein
the interference information includes information whether or not at least one of at least a part of the robot and at least a part of the end effector interferes with the second object.

### [Supplementary Note A35]

The display method according to any one of the Supplementary Notes A31 to A34, wherein
the interference information includes at least one information of information related to the second object that interferes with at least one of at least a part of the robot and at least a part of the end effector and information related to at least one of at least a part of the robot and at least a part of the end effector that interferes with the second object.

### [Supplementary Note A36]

The display method according to the Supplementary Note A35, wherein
the information related to the second object includes information related to a position of the second object that interferes with at least one of at least a part of the robot and at least a part of the end effector, and
the information related to at least one of at least a part of the robot and at least a part of the end effector that interferes with the second object includes information related to a position of at least one of at least a part of the robot and at least a part of the end effector that interferes with the second object.

### [Supplementary Note A37]

The display method according to any one of the Supplementary Notes A31 to A36, wherein
the display signal includes a signal for displaying, on the display apparatus, a first model part and a second model part so that a display aspect of the first model part of at least one of a robot model, which is a three-dimensional model of the robot, and an end effector model, which is a three-dimensional model of the end effector, is different from a display aspect of the second model part, which is different from the first model part, of at least one of the robot model and the end effector model, the first model part corresponds to at least one of a part of the robot and a part of the end effector that interferes with the second object.

### [Supplementary Note A38]

The display method according to any one of the Supplementary Notes A31 to A37, wherein
the display signal includes a signal for displaying, on the display apparatus, a third model part and a fourth model part so that a display aspect of the third model part of an object model that is a three-dimensional model of a first object positioned around the robot, is different from a display aspect of the fourth model part, which is different from the third model part, of the object model, the third model part corresponds to a part of the first object that interferes with at least one of the robot and the end effector.

### [Supplementary Note A39]

The display method according to any one of the Supplementary Notes A31 to A38, wherein
the second object includes at least another part of the robot, and
the display signal includes a signal for displaying, on the display apparatus, a fifth model part and a sixth model part so that a display aspect of the fifth model part of at least one of a robot model, which is a three-dimensional model of the robot, and an end effector model, which is a three-dimensional model of the end effector, is different from a display aspect of the sixth model part, which is different from the fifth model part, of at least one of the robot model and the end effector model, the fifth model part corresponds to the at least another part of the robot and at least one of a part of the robot and a part of the end effector that interferes with the at least another part of the robot.

### [Supplementary Note A40]

The display method according to any one of the Supplementary Notes A37 to A39, wherein
the display aspect includes a display color.

### [Supplementary Note A41]

The display method according to any one of the Supplementary Notes A31 to A40, wherein
the display method further includes determining, based on a robot model that is a three-dimensional model of the robot, an end effector model that is a three-dimensional model of the end effector, and an object model that is a three-dimensional model of a first object positioned around the robot, whether or not at least a part of the second object interferes with at least one of at least a part of the robot and at least a part of the end effector moving in accordance with the movement trajectory, and
the generating the display signal includes generating the signal for displaying, on the display apparatus, the interference information based on a result of the determination whether or not at least a part of the second object interferes with at least one of at least a part of the robot and at least a part of the end effector.

### [Supplementary Note A42]

The display method according to any one of the Supplementary Notes A31 to A41,
the display method further includes determining, based on a robot model that is a three-dimensional model of the robot, an end effector model that is a three-dimensional model of the end effector, and an object model that is a three-dimensional model of a first object positioned around the robot, whether or not at least a part of the second object interferes with at least one of at least a part of the robot and at least a part of the end effector moving along a movement path indicated by movement path information that is generated in advance, and
the generating the display signal includes generating the signal for displaying, on the display apparatus, the interference information based on a result of the determination whether or not at least a part of the second object interferes with at least one of at least a part of the robot and at least a part of the end effector.

### [Supplementary Note A43]

The display method according to any one of the Supplementary Notes A31 to A42, wherein
the interference includes a state in which the second object is in contact with at least one of at least a part of the robot and at least a part of the end effector or a state in which a distance between the second object and at least one of at least a part of the robot and at least a part of the end effector attached to the robot is equal to or shorter than a predetermined value.

### [Supplementary Note A44]

The display method according to any one of the Supplementary Notes A18 to A43, wherein
the generating the movement path includes changing the movement path information based on change instruction information that is input through a display screen on the display apparatus and that is related to an instruction from a user for changing the movement path information

### [Supplementary Note A45]

The display method according to the Supplementary Note A44, wherein
the change instruction information includes at least one information of information related to an instruction for changing a position of the movement start point, information related to an instruction for changing a position of the movement end point, and information related to an instruction for changing a position of a waypoint through which the movement point passes on the movement trajectory.

### [Supplementary Note A46]

The display method according to the Supplementary Note A44 or A45, wherein
the change instruction information includes position pose change information related to a change of at least one of a position and a pose of a model, and
the position pose information includes at least one information of information related to a change of at least one of a position and a pose of a robot model that is a three-dimensional model of the robot, information related to a change of at least one of a position and a pose of an end effector model that is a three-dimensional model of an end effector attachable to the robot, and information related to a change of at least one of a position and a pose of an object model that is a three-dimensional model of a first object positioned around the robot.

### [Supplementary Note A47]

The display method according to any one of the Supplementary Notes A44 to A46, wherein
the change instruction information includes information related to a change of a type of a model, and
the information related to the change of the type of the model includes at least one information of information related to a change of a type of a robot model that is a three-dimensional model of the robot, information related to a change of a type of an end effector model that is a three-dimensional model of an end effector attachable to the robot, and information related to a change of a type of an object model that is a three-dimensional model of a first object positioned around the robot.

### [Supplementary Note A48]

The display method according to any one of the Supplementary Notes A12 to A47, wherein
the display method further includes generating a robot control signal for controlling the robot based on movement path information, which is generated in advance, after the display apparatus displays the movement trajectory based on the display signal, and
the robot moves based on the robot control signal.

### [Supplementary Note A49]

The display method according to any one of the Supplementary Notes A12 to A48, wherein
the generating the display signal includes generating the display signal for displaying, on the display apparatus, the movement trajectory of the movement point moving due to the driving of the robot based on movement path information, without moving the robot based on the movement path information that is generated in advance, and
a path indicated by the movement path information and a path indicated by the movement trajectory is the same path.

### [Supplementary Note A50]

A computer program that allows a computer to execute the display method according to any one of the Supplementary Notes A12 to A49.

### [Supplementary Note A51]

A recording medium on which the computer program according to the Supplementary Note A50 is recorded.

### [Supplementary Note A52]

A robot system including:
the computing apparatus according to any one of the Supplementary Notes A1 to A11; and
the robot.

### [Supplementary Note A53]

The robot system according to the Supplementary Note A52 further including an end effector attached to the robot.

### [Supplementary Note A54]

An imaging system including:
the computing apparatus according to any one of the Supplementary Notes A1 to A11; and
an imaging apparatus attached to the robot.

### [Supplementary Note B1]

A computing apparatus that generates a movement path of a movement point moving due to a driving of a robot to which an end effector for performing a process on a target object is attached, wherein
the computing apparatus generates a second movement path of the movement point moving due to the driving of the robot to which a second end effector is attached as the end effector based on a first movement path of the movement point moving due to the driving of the robot to which a first end effector is attached as the end effector and a three-dimensional model of the second end effector that is different from the first end effector.

### [Supplementary Note B2]

The computing apparatus according to the Supplementary Note B1, wherein
the robot includes a robot arm.

### [Supplementary Note B3]

The computing apparatus according to the Supplementary Note B1 or B2, wherein
the computing apparatus generates the second movement path based on a three-dimensional model of the robot, the first movement path, and the three-dimensional model of the second end effector.

### [Supplementary Note B4]

The computing apparatus according to any one of the Supplementary Notes B1 to B3, wherein
the computing apparatus generates the second movement path based on a three-dimensional model of a surrounding object positioned around the robot, the first movement path, and the three-dimensional model of the second end effector.

### [Supplementary Note B5]

The computing apparatus according to the Supplementary Note B3 or B4, wherein
the computing apparatus generates the second movement path based on a three-dimensional model of the first end effector, the first movement path, and the three-dimensional model of the second end effector.

### [Supplementary Note B6]

The computing apparatus according to the Supplementary Note B5, wherein
the computing apparatus generates the second movement path based on the three-dimensional model of the robot, the three-dimensional model of the first end effector, the first movement path, and the three-dimensional model of the second end effector.

### [Supplementary Note B7]

The computing apparatus according to the Supplementary Note B5 or B6, wherein
the computing apparatus generates the second movement path based on a three-dimensional model of a surrounding object positioned around the robot, the three-dimensional model of the first end effector, the first movement path, and the three-dimensional model of the second end effector.

### [Supplementary Note B8]

A path generation method that generates a movement path of a movement point moving due to a driving of a robot to which an end effector for performing a process on a target object is attached, wherein
the path generation method includes generating a second movement path of the movement point moving due to the driving of the robot to which a second end effector is attached as the end effector based on a first movement path of the movement point moving due to the driving of the robot to which a first end effector is attached as the end effector and a three-dimensional model of the second end effector that is different from the first end effector.

### [Supplementary Note B9]

The path generation method according to the Supplementary Note B8, wherein
the robot includes a robot arm.

### [Supplementary Note B 10]

The path generation method according to the Supplementary Note B8 or B9, wherein
the generating the second movement path includes generating the second movement path based on a three-dimensional model of the robot, the first movement path, and the three-dimensional model of the second end effector.

### [Supplementary Note B11]

The path generation method according to any one of the Supplementary Notes B8 to B10, wherein
the generating the second movement path includes generating the second movement path based on a three-dimensional model of a surrounding object positioned around the robot, the first movement path, and the three-dimensional model of the second end effector.

### [Supplementary Note B 12]

The path generation method according to the Supplementary Note B8 or B9, wherein
the generating the second movement path includes generating the second movement path based on a three-dimensional model of the first end effector, the first movement path, and the three-dimensional model of the second end effector.

### [Supplementary Note B13]

The path generation method according to the Supplementary Note B12, wherein
the generating the second movement path includes generating the second movement path based on the three-dimensional model of the robot, the three-dimensional model of the first end effector, the first movement path, and the three-dimensional model of the second end effector.

### [Supplementary Note B 14]

The path generation method according to the Supplementary Note B12 or B13, wherein
the generating the second movement path includes generating the second movement path based on a three-dimensional model of a surrounding object positioned around the robot, the three-dimensional model of the first end effector, the first movement path, and the three-dimensional model of the second end effector.

### [Supplementary Note B15]

The path generation method according to any one of the Supplementary Notes B8 to B14, wherein
the generating the second movement path includes, in a case where it is estimated that the second end effector, which moves in accordance with a first part that is at least a part of the first movement path, interferes with at least one of the robot and a surrounding object positioned around the robot, modifying the first part to generate the second movement path including the modified first part.

### [Supplementary Note B16]

The path generation method according to any one of the Supplementary Notes B8 to B15, wherein
the generating the second movement path includes, in a case where it is estimated that the second end effector, which moves in accordance with a second part that is at least a part of the first movement path, does not interfere with at least one of the robot and a surrounding object positioned around the robot, generating the second movement path including the unmodified second part without modifying the second part.

### [Supplementary Note B17]

The path generation method according to any one of the Supplementary Notes B8 to B16, wherein
the generating the second movement path includes generating the second movement path after the end effector attached to the robot is replaced from the first end effector to the second end effector in a period during which the first end effector attached to the robot moves in accordance with the first movement path.

### [Supplementary Note B18]

The path generation method according to the Supplementary Note B17, wherein
the generating the second movement path includes modifying at least a part of a third part of the first movement path along which the movement point moving due to a movement of the first end effector has not yet moved to generate the second movement path including the modified third part after the end effector attached to the robot is replaced from the first end effector to the second end effector

### [Supplementary Note B19]

The path generation method according to the Supplementary Note B17 or B18, wherein
the generating the second movement path includes generating the second movement path without modifying at least a part of a fourth part of the first movement path along which the movement point moving due to a movement of the first end effector has already moved after the end effector attached to the robot is replaced from the first end effector to the second end effector.

### [Supplementary Note B20]

The path generation method according to any one of the Supplementary Notes B8 to B19, wherein
the generating the second movement path includes generating the second movement path based on the first movement path and the three-dimensional model of the second end effector after the first end effector finishes moving in accordance with the first movement path and then the end effector attached to the robot is replaced from the first end effector to the second end effector.

### [Supplementary Note B21]

The path generation method according to any one of the Supplementary Notes B8 to B20, wherein
the generating the second movement path includes generating the second movement path based on the first movement path and the three-dimensional model of the second end effector before the end effector attached to the robot is replaced from the first end effector to the second end effector.

### [Supplementary Note B22]

The path generation method according to any one of the Supplementary Notes B8 to B21, wherein
the generating the second movement path includes generating the second movement path based on the first movement path and the three-dimensional model of the second end effector before the first end effector starts moving.

### [Supplementary Note B23]

The path generation method according to any one of the Supplementary Notes B8 to B22, wherein
the generating the first movement path includes generating the first movement path based on a three-dimensional model of the first end effector, a three-dimensional model of the robot, and a three-dimensional model of a surrounding object positioned around the robot.

### [Supplementary Note B24]

A computer program that allows a computer to execute the path generation method according to any one of the Supplementary Notes B8 to B23.

### [Supplementary Note B25]

A recording medium on which the computer program according to the Supplementary Note B24 is recorded.

### [Supplementary Note B26]

A robot system including:
the computing apparatus according to any one of the Supplementary Notes B1 to B7; and
the robot.

### [Supplementary Note B27]

The robot system according to the Supplementary Note B26 further including an end effector attached to the robot.

### [Supplementary Note B28]

An imaging system including:
the computing apparatus according to any one of the Supplementary Notes B1 to B7; and
an imaging apparatus attached to the robot.

### [Supplementary Note C1]

A computing apparatus that is used to set a process target position of an object by an end effector that performs a process on an object, wherein
the computing apparatus includes:
a signal generation unit that generates a display signal for a display on a display apparatus so that at least one of an object model, which is a three-dimensional model of the object, and an end effector model, which is a three-dimensional model of the end effector, moves based on instruction information related to an instruction from a user on a display screen including the object model and the end effector model in order to set the process target position; and
an output unit that outputs the display signal generated by the signal generation unit to the display apparatus, and
the signal generation unit generates the display signal for the display on the display apparatus so that at least one of the object model and the end effector model moves along at least both a first axis and a second axis that intersects the first axis based on the instruction information.

### [Supplementary Note C2]

The computing apparatus according to the Supplementary Note C1, wherein
the signal generation unit generates the display signal for the display on the display apparatus so that the object model moves on the display screen based on the instruction information.

### [Supplementary Note C3]

The computing apparatus according to the Supplementary Note C1 or C2, wherein
the signal generation unit generates the display signal for the display on the display apparatus so that the end effector model moves on the display screen based on the instruction information.

### [Supplementary Note C4]

The computing apparatus according to any one of the Supplementary Notes C1 to C3, wherein
the instruction information includes: first instruction information for moving at least one of the object model and the end effector model along at least both the first and second axes; and second instruction information for moving at least one of the object model and the end effector model along one of the first and second axes;
the signal generation unit generates, as the display signal, a first display signal for the display on the display apparatus so that at least one of the object model and the end effector model moves along at least both the first and second axes based on the first instruction information,
the output unit outputs the first display signal to the display apparatus,
the signal generation unit generates, as the display signal, a second display signal for the display on the display apparatus so that at least one of the object model and the end effector model moves along one of the first and second axes based on the second instruction information after the first display signal is output to the display apparatus, and
the output unit outputs the second display signal to the display apparatus.

### [Supplementary Note C5]

The computing apparatus according to any one of the Supplementary Notes C1 to C4, wherein
the instruction information includes: first instruction information for moving the object model along at least both the first and second axes; and second instruction information for moving the object model along one of the first and second axes;
the signal generation unit generates, as the display signal, a first display signal for the display on the display apparatus so that the object model moves along at least both the first and second axes based on the first instruction information,
the output unit outputs the first display signal to the display apparatus,
the signal generation unit generates, as the display signal, a second display signal for the display on the display apparatus so that the object model moves along one of the first and second axes based on the second instruction information after the first display signal is output to the display apparatus, and
the output unit outputs the second display signal to the display apparatus.

### [Supplementary Note C6]

The computing apparatus according to any one of the Supplementary Notes C1 to C5, wherein
the instruction information includes: first instruction information for moving the end effector model along at least both the first and second axes; and second instruction information for moving the end effector model along one of the first and second axes;
the signal generation unit generates, as the display signal, a first display signal for the display on the display apparatus so that the end effector model moves along at least both the first and second axes based on the first instruction information,
the output unit outputs the first display signal to the display apparatus,
the signal generation unit generates, as the display signal, a second display signal for the display on the display apparatus so that the end effector model moves along one of the first and second axes based on the second instruction information after the first display signal is output to the display apparatus, and
the output unit outputs the second display signal to the display apparatus.

### [Supplementary Note C7]

The computing apparatus according to any one of the Supplementary Notes C1 to C6, further including a setting unit that sets the process target position of the object by the end effector based on a positional relationship between the object model and the end effector model after at least one of the object model and the end effector model moves based on the instruction information.

### [Supplementary Note C8]

The computing apparatus according to the Supplementary Note C7, wherein
the end effector is a first end effector, and
the setting unit sets a process target position of the object by a second end effector that is different from the first end effector based on the set process target position of the object by the first end effector and information related to a difference between a shape of the first end effector and a shape of the second end effector.

### [Supplementary Note C9]

The computing apparatus according to the Supplementary Note C8, wherein
the information related to the difference between the shape of the first end effector and
the shape of the second end effector includes information related to a difference between a total length of the first end effector and a total length of the second end effector.

### [Supplementary Note C10]

The computing apparatus according to the Supplementary Note C8 or C9, wherein
the information related to the difference between the shape of the first end effector and the shape of the second end effector includes information related to a difference between a width of the first end effector and a width of the second end effector.

### [Supplementary Note C11]

The computing apparatus according to any one of the Supplementary Notes C8 to C10, wherein
the information related to the difference between the shape of the first end effector and the shape of the second end effector includes information related to a difference between a position of a tool center point of the first end effector and a position of a tool center point of the second end effector.

### [Supplementary Note C12]

The computing apparatus according to any one of the Supplementary Notes C7 to C11, wherein
the object is a first object, and
the setting unit sets a process target position of a second object that is different from the first object by the end effector based on the set process target position of the first object by the end effector and information related to a difference between a shape of the first object and a shape of the second object.

### [Supplementary Note C13]

The computing apparatus according to the Supplementary Note C12, wherein
the information related to the difference between the shape of the first object and the shape of the second object includes information related to a difference between a total length of the first object and a total length of the second object.

### [Supplementary Note C14]

The computing apparatus according to the Supplementary Note C12 or C13, wherein
the information related to the difference between the shape of the first object and the shape of the second object includes information related to a difference between a width of the first object and a width of the second object.

### [Supplementary Note C15]

The computing apparatus according to any one of the Supplementary Notes C12 to C14, wherein
the information related to the difference between the shape of the first object and the shape of the second object includes information related to a difference between a reference position of the first object and a reference position of the second object.

### [Supplementary Note C16]

A computing apparatus that is used to set a process target position of an object by an end effector that performs a process on an object, wherein
the computing apparatus includes:
a signal generation unit that generates a display signal for a display on a display apparatus so that at least one of an object model, which is a three-dimensional model of the object, and an end effector model, which is a three-dimensional model of the end effector, rotates based on instruction information related to an instruction from a user on a display screen including the object model and the end effector model in order to set the process target position; and
an output unit that outputs the display signal generated by the signal generation unit to the display apparatus, and
the signal generation unit generates the display signal for the display on the display apparatus so that at least one of the object model and the end effector model rotates around at least both a rotational axis along a fourth axis and a rotational axis along a fifth axis that intersects the fourth axis based on the instruction information.

### [Supplementary Note C17]

The computing apparatus according to the Supplementary Note C16, wherein
the signal generation unit generates the display signal for the display on the display apparatus so that the object model rotates on the display screen based on the instruction information.

### [Supplementary Note C18]

The computing apparatus according to the Supplementary Note C16 or C17, wherein
the signal generation unit generates the display signal for the display on the display apparatus so that the end effector model rotates on the display screen based on the instruction information.

### [Supplementary Note C19]

The computing apparatus according to any one of the Supplementary Notes C16 to C18, wherein
the instruction information includes: first instruction information for rotating at least one of the object model and the end effector model around at least both the rotational axis along the fourth axis and the rotational axis along the fifth axis; and second instruction information for rotating at least one of the object model and the end effector model around one of the rotational axis along the fourth axis and the rotational axis along the fifth axis;
the signal generation unit generates, as the display signal, a first display signal for the display on the display apparatus so that at least one of the object model and the end effector model rotates around at least both the rotational axis along the fourth axis and the rotational axis along the fifth axis based on the first instruction information,
the output unit outputs the first display signal to the display apparatus,
the signal generation unit generates, as the display signal, a second display signal for the display on the display apparatus so that at least one of the object model and the end effector model rotates around one of the rotational axis along the fourth axis and the rotational axis along the fifth axis based on the second instruction information after the first display signal is output to the display apparatus, and
the output unit outputs the second display signal to the display apparatus.

### [Supplementary Note C20]

The computing apparatus according to any one of the Supplementary Notes C16 to C19, wherein
the instruction information includes: first instruction information for rotating the object model around at least both the rotational axis along the fourth axis and the rotational axis along the fifth axis; and second instruction information for rotating the object model around one of the rotational axis along the fourth axis and the rotational axis along the fifth axis;
the signal generation unit generates, as the display signal, a first display signal for the display on the display apparatus so that the object model rotates around at least both the rotational axis along the fourth axis and the rotational axis along the fifth axis based on the first instruction information,
the output unit outputs the first display signal to the display apparatus,
the signal generation unit generates, as the display signal, a second display signal for the display on the display apparatus so that the object model rotates around one of the rotational axis along the fourth axis and the rotational axis along the fifth axis based on the second instruction information after the first display signal is output to the display apparatus, and
the output unit outputs the second display signal to the display apparatus.

### [Supplementary Note C21]

The computing apparatus according to any one of the Supplementary Notes C16 to C20, wherein
the instruction information includes: first instruction information for rotating the end effector model around at least both the rotational axis along the fourth axis and the rotational axis along the fifth axis; and second instruction information for rotating the end effector model around one of the rotational axis along the fourth axis and the rotational axis along the fifth axis;
the signal generation unit generates, as the display signal, a first display signal for the display on the display apparatus so that the end effector model rotates around at least both the rotational axis along the fourth axis and the rotational axis along the fifth axis based on the first instruction information,
the output unit outputs the first display signal to the display apparatus,
the signal generation unit generates, as the display signal, a second display signal for the display on the display apparatus so that the end effector model rotates around one of the rotational axis along the fourth axis and the rotational axis along the fifth axis based on the second instruction information after the first display signal is output to the display apparatus, and
the output unit outputs the second display signal to the display apparatus.

### [Supplementary Note C22]

The computing apparatus according to any one of the Supplementary Notes C16 to C21, further including a setting unit that sets the process target position of the object by the end effector based on a positional relationship between the object model and the end effector model after at least one of the object model and the end effector model moves and / or rotates based on the instruction information.

### [Supplementary Note C23]

The computing apparatus according to the Supplementary Note C22, wherein
the end effector is a first end effector, and
the setting unit sets a process target position of the object by a second end effector that is different from the first end effector based on the set process target position of the object by the first end effector and information related to a difference between a shape of the first end effector and a shape of the second end effector.

### [Supplementary Note C24]

The computing apparatus according to the Supplementary Note C23, wherein
the information related to the difference between the shape of the first end effector and the shape of the second end effector includes information related to a difference between a total length of the first end effector and a total length of the second end effector.

### [Supplementary Note C25]

The computing apparatus according to the Supplementary Note C23 or C24, wherein
the information related to the difference between the shape of the first end effector and the shape of the second end effector includes information related to a difference between a width of the first end effector and a width of the second end effector.

### [Supplementary Note C26]

The computing apparatus according to any one of the Supplementary Notes C23 to C25, wherein
the information related to the difference between the shape of the first end effector and the shape of the second end effector includes information related to a difference between a position of a tool center point of the first end effector and a position of a tool center point of the second end effector.

### [Supplementary Note C27]

The computing apparatus according to any one of the Supplementary Notes C22 to C26, wherein
the object is a first object, and
the setting unit sets a process target position of a second object that is different from the first object by the end effector based on the set process target position of the first object by the end effector and information related to a difference between a shape of the first object and a shape of the second object.

### [Supplementary Note C28]

The computing apparatus according to the Supplementary Note C27, wherein
the information related to the difference between the shape of the first object and the shape of the second object includes information related to a difference between a total length of the first object and a total length of the second object.

### [Supplementary Note C29]

The computing apparatus according to the Supplementary Note C27 or C28, wherein
the information related to the difference between the shape of the first object and the shape of the second object includes information related to a difference between a width of the first object and a width of the second object.

### [Supplementary Note C30]

The computing apparatus according to any one of the Supplementary Notes C27 to C29, wherein
the information related to the difference between the shape of the first object and the shape of the second object includes information related to a difference between a reference position of the first object and a reference position of the second object.

### [Supplementary Note C31]

A display method that is used to set a process target position of an object by an end effector that performs a process on an object, wherein
the display method includes:
generating a display signal for a display on a display apparatus so that at least one of an object model, which is a three-dimensional model of the object, and an end effector model, which is a three-dimensional model of the end effector, moves based on instruction information related to an instruction from a user on a display screen including the object model and the end effector model in order to set the process target position; and
outputting the generated display signal to the display apparatus, and
the generating includes generating the display signal for the display on the display apparatus so that at least one of the object model and the end effector model moves along at least both a first axis and a second axis that intersects the first axis based on the instruction information.

### [Supplementary Note C32]

The display method according to the Supplementary Note C31, wherein
the generating the display signal includes generating the display signal for the display on the display apparatus so that the object model moves on the display screen based on the instruction information.

### [Supplementary Note C33]

The display method according to the Supplementary Note C31 or C32, wherein
the generating the display signal includes generating the display signal for the display on the display apparatus so that the end effector model moves on the display screen based on the instruction information.

### [Supplementary Note C34]

The display method according to any one of the Supplementary Notes C31 to C33, wherein
the generating the display signal includes generating the display signal for the display on the display apparatus so that at least one of the object model and the end effector model moves along at least an inclination direction that is inclined with respect to both the first and second axes based on the instruction information.

### [Supplementary Note C35]

The display method according to any one of the Supplementary Notes C31 to C34, wherein
the generating the display signal includes generating the display signal for the display on the display apparatus so that at least one of the object model and the end effector model moves along all of the first axis, the second axis, and a third axis that intersects the first and second axes based on the instruction information.

### [Supplementary Note C36]

The display method according to the Supplementary Note C35, wherein
the generating the display signal includes generating the display signal for the display on the display apparatus so that at least one of the object model and the end effector model moves along at least an inclination direction that is inclined with respect to all of the first to third axes.

### [Supplementary Note C37]

The display method according to any one of the Supplementary Notes C31 to C3, wherein
the instruction information includes: first instruction information for moving at least one of the object model and the end effector model along at least both the first and second axes; and second instruction information for moving at least one of the object model and the end effector model along one of the first and second axes;
the generating the display signal includes generating, as the display signal, a first display signal for the display on the display apparatus so that at least one of the object model and the end effector model moves along at least both the first and second axes based on the first instruction information,
the outputting the display signal includes outputting the first display signal to the display apparatus,
the generating the display signal includes generating, as the display signal, a second display signal for the display on the display apparatus so that at least one of the object model and the end effector model moves along one of the first and second axes based on the second instruction information after the first display signal is output to the display apparatus, and
the outputting the display signal includes outputting the second display signal to the display apparatus.

### [Supplementary Note C38]

The display method according to any one of the Supplementary Notes C31 to C37, wherein
the instruction information includes: first instruction information for moving the object model along at least both the first and second axes; and second instruction information for moving the object model along one of the first and second axes;
the generating the display signal includes generating, as the display signal, a first display signal for the display on the display apparatus so that the object model moves along at least both the first and second axes based on the first instruction information,
the outputting the display signal includes outputting the first display signal to the display apparatus,
the generating the display signal includes generating, as the display signal, a second display signal for the display on the display apparatus so that the object model moves along one of the first and second axes based on the second instruction information after the first display signal is output to the display apparatus, and
the outputting the display signal includes outputting the second display signal to the display apparatus.

### [Supplementary Note C39]

The display method according to any one of the Supplementary Notes C31 to C38, wherein
the instruction information includes: first instruction information for moving the end effector model along at least both the first and second axes; and second instruction information for moving the end effector model along one of the first and second axes;
the generating the display signal includes generating, as the display signal, a first display signal for the display on the display apparatus so that the end effector model moves along at least both the first and second axes based on the first instruction information,
the outputting the display signal includes outputting the first display signal to the display apparatus,
the generating the display signal includes generating, as the display signal, a second display signal for the display on the display apparatus so that the end effector model moves along one of the first and second axes based on the second instruction information after the first display signal is output to the display apparatus, and
the outputting the display signal includes outputting the second display signal to the display apparatus.

### [Supplementary Note C40]

The display method according to any one of the Supplementary Notes C35 to C39, wherein
the first instruction information includes information related to the instruction from the user for moving at least one of the object model and the end effector model by a first movement distance, and
the second instruction information includes information related to the instruction from the user for moving at least one of the object model and the end effector model by a second movement distance that is shorter than the first movement distance.

### [Supplementary Note C41]

The display method according to any one of the Supplementary Notes C31 to C40 further including setting the process target position of the object by the end effector based on a positional relationship between the object model and the end effector model after at least one of the object model and the end effector model moves based on the instruction information.

### [Supplementary Note C42]

The display method according to the Supplementary Note C41, wherein
the end effector is a first end effector, and
the setting the process target position includes setting a process target position of the object by a second end effector that is different from the first end effector based on the set process target position of the object by the first end effector and information related to a difference between a shape of the first end effector and a shape of the second end effector.

### [Supplementary Note C43]

The display method according to the Supplementary Note C42, wherein
the information related to the difference between the shape of the first end effector and the shape of the second end effector includes information related to a difference between a total length of the first end effector and a total length of the second end effector.

### [Supplementary Note C44]

The display method according to the Supplementary Note C42 or C43, wherein
the information related to the difference between the shape of the first end effector and the shape of the second end effector includes information related to a difference between a width of the first end effector and a width of the second end effector.

### [Supplementary Note C45]

The display method according to any one of the Supplementary Notes C42 to C44, wherein
the information related to the difference between the shape of the first end effector and the shape of the second end effector includes information related to a difference between a position of a tool center point of the first end effector and a position of a tool center point of the second end effector.

### [Supplementary Note C46]

The display method according to any one of the Supplementary Notes C41 to C45, wherein the object is a first object, and
the setting the process target position includes setting a process target position of a second object that is different from the first object by the end effector based on the set process target position of the first object by the end effector and information related to a difference between a shape of the first object and a shape of the second object.

### [Supplementary Note C47]

The display method according to the Supplementary Note C46, wherein
the information related to the difference between the shape of the first object and the shape of the second object includes information related to a difference between a total length of the first object and a total length of the second object.

### [Supplementary Note C48]

The display method according to the Supplementary Note C46 or C47, wherein
the information related to the difference between the shape of the first object and the shape of the second object includes information related to a difference between a width of the first object and a width of the second object.

### [Supplementary Note C49]

The display method according to any one of the Supplementary Notes C46 to C48, wherein
the information related to the difference between the shape of the first object and the shape of the second object includes information related to a difference between a reference position of the first object and a reference position of the second object.

### [Supplementary Note C50]

The display method according to any one of the Supplementary Notes C41 to C49, wherein
the end effector includes a holding apparatus that holds the object, and
the setting the process target position includes setting, as the process target position, a holding target position of the object by the holding apparatus.

### [Supplementary Note C51]

A display method that is used to set a process target position of an object by an end effector that performs a process on an object, wherein
the display method includes:
generating a display signal for a display on a display apparatus so that at least one of an object model, which is a three-dimensional model of the object, and an end effector model, which is a three-dimensional model of the end effector, rotates based on instruction information related to an instruction from a user on a display screen including the object model and the end effector model in order to set the process target position; and
outputting the generated display signal to the display apparatus, and
the generating includes generating the display signal for the display on the display apparatus so that at least one of the object model and the end effector model rotates around at least both a rotational axis along a fourth axis and a rotational axis along a fifth axis that intersects the fourth axis based on the instruction information.

### [Supplementary Note C52]

The display method according to the Supplementary Note C51, wherein
the generating the display signal includes generating the display signal for the display on the display apparatus so that the object model rotates on the display screen based on the instruction information.

### [Supplementary Note C53]

The display method according to the Supplementary Note C51 or C52, wherein
the generating the display signal includes generating the display signal for the display on the display apparatus so that the end effector model rotates on the display screen based on the instruction information.

### [Supplementary Note C54]

The display method according to any one of the Supplementary Notes C51 to C53, wherein
the generating the display signal includes generating the display signal for the display on the display apparatus so that at least one of the object model and the end effector model rotates around at least a rotational axis along an inclination direction that is inclined with respect to both the fourth and fifth axes based on the instruction information.

### [Supplementary Note C55]

The display method according to any one of the Supplementary Notes C51 to C54, wherein
the generating the display signal includes generating the display signal for the display on the display apparatus so that at least one of the object model and the end effector model rotates around all of the rotational axis along the fourth axis, the rotational axis along the fifth axis, and a rotational axis along a sixth axis that intersects the fourth and fifth axes based on the instruction information.

### [Supplementary Note C56]

The display method according to the Supplementary Note C55, wherein
the generating the display signal includes generating the display signal for the display on the display apparatus so that at least one of the object model and the end effector model rotates around at least a rotational axis along an inclination direction that is inclined with respect to all of the fourth to sixth axes based on the instruction information.

### [Supplementary Note C37]

The display method according to any one of the Supplementary Notes C31 to C3, wherein
the instruction information includes: first instruction information for rotating at least one of the object model and the end effector model around at least both the rotational axis along the fourth axis and the rotational axis along the fifth axis; and second instruction information for rotating at least one of the object model and the end effector model around one of the rotational axis along the fourth axis and the rotational axis along the fifth axis;
the signal generation unit generates, as the display signal, a first display signal for the display on the display apparatus so that at least one of the object model and the end effector model rotates around at least both the rotational axis along the fourth axis and the rotational axis along the fifth axis based on the first instruction information,
the output unit outputs the first display signal to the display apparatus,
the signal generation unit generates, as the display signal, a second display signal for the display on the display apparatus so that at least one of the object model and the end effector model rotates around one of the rotational axis along the fourth axis and the rotational axis along the fifth axis based on the second instruction information after the first display signal is output to the display apparatus, and
the output unit outputs the second display signal to the display apparatus.

### [Supplementary Note C58]

The display method according to any one of the Supplementary Notes C51 to C57, wherein
the instruction information includes: first instruction information for rotating the object model around at least both the rotational axis along the fourth axis and the rotational axis along the fifth axis; and second instruction information for rotating the object model around one of the rotational axis along the fourth axis and the rotational axis along the fifth axis;
the signal generation unit generates, as the display signal, a first display signal for the display on the display apparatus so that the object model rotates around at least both the rotational axis along the fourth axis and the rotational axis along the fifth axis based on the first instruction information,
the output unit outputs the first display signal to the display apparatus,
the signal generation unit generates, as the display signal, a second display signal for the display on the display apparatus so that the object model rotates around one of the rotational axis along the fourth axis and the rotational axis along the fifth axis based on the second instruction information after the first display signal is output to the display apparatus, and
the output unit outputs the second display signal to the display apparatus.

### [Supplementary Note C59]

The display method according to any one of the Supplementary Notes C51 to C58, wherein
the instruction information includes: first instruction information for rotating the end effector model around at least both the rotational axis along the fourth axis and the rotational axis along the fifth axis; and second instruction information for rotating the end effector model around one of the rotational axis along the fourth axis and the rotational axis along the fifth axis;
the signal generation unit generates, as the display signal, a first display signal for the display on the display apparatus so that the end effector model rotates around at least both the rotational axis along the fourth axis and the rotational axis along the fifth axis based on the first instruction information,
the output unit outputs the first display signal to the display apparatus,
the signal generation unit generates, as the display signal, a second display signal for the display on the display apparatus so that the end effector model rotates around one of the rotational axis along the fourth axis and the rotational axis along the fifth axis based on the second instruction information after the first display signal is output to the display apparatus, and
the output unit outputs the second display signal to the display apparatus.

### [Supplementary Note C60]

The display method according to any one of the Supplementary Notes C55 to C59, wherein
the first instruction information includes information related to the instruction from the user for rotating at least one of the object model and the end effector model by a first rotational amount, and
the second instruction information includes information related to the instruction from the user for rotating at least one of the object model and the end effector model by a second rotational amount that is smaller than first rotational amount.

### [Supplementary Note C61]

The display method according to any one of the Supplementary Notes C51 to C60, wherein
the display method further includes setting the process target position of the object by the end effector based on a positional relationship between the object model and the end effector model after at least one of the object model and the end effector model rotates based on the instruction information.

### [Supplementary Note C62]

The display method according to the Supplementary Note C61, wherein
the end effector is a first end effector, and
the setting the process target position includes setting a process target position of the object by a second end effector that is different from the first end effector based on the set process target position of the object by the first end effector and information related to a difference between a shape of the first end effector and a shape of the second end effector.

### [Supplementary Note C63]

The display method according to the Supplementary Note C62, wherein
the information related to the difference between the shape of the first end effector and the shape of the second end effector includes information related to a difference between a total length of the first end effector and a total length of the second end effector.

### [Supplementary Note C64]

The display method according to the Supplementary Note C62 or C63, wherein
the information related to the difference between the shape of the first end effector and the shape of the second end effector includes information related to a difference between a width of the first end effector and a width of the second end effector.

### [Supplementary Note C65]

The display method according to any one of the Supplementary Notes C62 to C64, wherein
the information related to the difference between the shape of the first end effector and the shape of the second end effector includes information related to a difference between a position of a tool center point of the first end effector and a position of a tool center point of the second end effector.

### [Supplementary Note C66]

The display method according to any one of the Supplementary Notes C61 to C65, wherein
the object is a first object, and
the setting the process target position includes setting a process target position of a second object that is different from the first object by the end effector based on the set process target position of the first object by the end effector and information related to a difference between a shape of the first object and a shape of the second object.

### [Supplementary Note C67]

The display method according to the Supplementary Note C66, wherein
the information related to the difference between the shape of the first object and the shape of the second object includes information related to a difference between a total length of the first object and a total length of the second object.

### [Supplementary Note C68]

The display method according to the Supplementary Note C66 or C67, wherein
the information related to the difference between the shape of the first object and the shape of the second object includes information related to a difference between a width of the first object and a width of the second object.

### [Supplementary Note C69]

The display method according to any one of the Supplementary Notes C66 to C68, wherein
the information related to the difference between the shape of the first object and the shape of the second object includes information related to a difference between a reference position of the first object and a reference position of the second object.

### [Supplementary Note C70]

The display method according to any one of the Supplementary Notes C61 to C69, wherein
the end effector includes a holding apparatus that holds the object, and
the setting the process target position includes setting, as the process target position, a holding target position of the object by the holding apparatus.

### [Supplementary Note C71]

A computer program that allows a computer to execute the display method according to any one of the Supplementary Notes C31 to C70.

### [Supplementary Note C72]

A recording medium on which the computer program according to the Supplementary Note C71 is recorded.

### [Supplementary Note C73]

A robot system including:
the computing apparatus according to any one of the Supplementary Notes C1 to C30; and
the robot.

### [Supplementary Note C74]

The robot system according to the Supplementary Note C73 further including the end effector attached to the robot.

### [Supplementary Note C75]

An imaging system including:
the computing apparatus according to any one of the Supplementary Notes C1 to C30; and
an imaging apparatus attached to the robot.

### [Supplementary Note D1]

A computing apparatus that is used for a calibration of an imaging apparatus attached to a robot, wherein
the computing apparatus includes:
a signal generation unit that generates a display signal for displaying, on a display apparatus, information related to an accuracy of the calibration of the imaging apparatus that is generated based on image data generated by the imaging apparatus attached to the robot imaging a reference member; and
an output unit that outputs the display signal generated by the signal generation unit to the display apparatus.

### [Supplementary Note D2]

The computing apparatus according to the Supplementary Note D1, wherein
the robot includes a robot arm.

### [Supplementary Note D3]

The computing apparatus according to the Supplementary Note D1 or D2, further comprising: a computing unit that generates the information related to the accuracy of the calibration based on image data generated by the imaging apparatus attached to the robot imaging the reference member.

### [Supplementary Note D4]

The computing apparatus according to the Supplementary Note D3, wherein
the imaging apparatus generates a plurality of image data by imaging the reference member in each of different positional relationships between the reference member and the imaging apparatus, and
the computing unit performs a first calibration, which is the calibration based on at least one first image data of the plurality of image data, and a second calibration, which is the calibration based on at least one second image data of the plurality of image data that is different from the at least one first image data, and generates the information related to the accuracy of the calibration based on a result of the first calibration and a result of the second calibration.

### [Supplementary Note D5]

The computing apparatus according to the Supplementary Note D4, wherein
the computing unit calculates, as a calibration error, an error between the result of the first calibration and the result of the second calibration, and generates the information related to the accuracy of the calibration based on the calculated calibration error.

### [Supplementary Note D6]

The computing apparatus according to the Supplementary Note D5, wherein
the computing unit:
performs a unit calibration including the first and second calibration a plurality of times while changing the at least one first image data that is used for the first calibration and the at least one second image data that is used for the second calibration;
calculates a plurality of calibration errors that correspond to the plurality of unit calibrations, respectively, by calculating the calibration error each time the unit calibration is performed; and
generates the information related to the accuracy of the calibration based on the plurality of calibration errors.

### [Supplementary Note D7]

The computing apparatus according to the Supplementary Note D6, wherein
the computation unit generates an average value of the plurality of calibration errors as the information related to the accuracy of the calibration.

### [Supplementary Note D8]

The computing apparatus according to the Supplementary Note D6 or D7, wherein
the computing unit excludes, from the plurality of image data, at least one image data of the at least one first image data and the at least one second image data that are used by the unit calibration used to calculate one calibration error, which is larger than a predetermined threshold value, of the plurality of calibration errors, and performs the unit calibration by using the plurality of image data from which the at least one image data of the at least one first image data and the at least one second image data has been excluded.

### [Supplementary Note D9]

The computing apparatus according to any one of the Supplementary Notes D6 to D8, wherein
the computation unit replaces at least one image data of the at least one first image data and the at least one second image data that are used by the unit calibration used to calculate one calibration error, which is larger than a predetermined threshold value, of the plurality of calibration errors with third image data, and performs the unit calibration by using the plurality of image data in which the at least one image data of the at least one first image data and the at least one second image data has been replaced with the third image data.

### [Supplementary Note D10]

A display method that is used for a calibration of an imaging apparatus attached to a robot, wherein
the display method includes:
generating a display signal for displaying, on a display apparatus, information related to an accuracy of the calibration of the imaging apparatus that is generated based on image data generated by the imaging apparatus attached to the robot imaging a reference member; and
outputting the generated display signal to the display apparatus.

### [Supplementary Note D11]

The display method according to the Supplementary Note D10, wherein
the robot includes a robot arm.

### [Supplementary Note D12]

The display method according to the Supplementary Note D10 or D11, wherein
the information related to the accuracy of the calibration include information related to an accuracy of a transformation from one coordinate system of a robot coordinate system, which is a coordinate system of the robot, and an imaging coordinate system, which is a coordinate system of the imaging apparatus, to the other one coordinate system.

### [Supplementary Note D13]

The display method according to any one of the Supplementary Notes D10 to D12, wherein
the imaging apparatus generates a plurality of image data by imaging the reference member in each of different positional relationships between the reference member and the imaging apparatus, and
the generating the display signal includes generating the display signal for displaying, on the display apparatus, the information related to the accuracy of the calibration that is generated based on the plurality of image data.

### [Supplementary Note D14]

The display method according to any one of the Supplementary Notes D10 to D13, wherein
the display signal includes a signal for displaying, on the display apparatus, an image indicated by the image data together with the information related to the accuracy of the calibration.

### [Supplementary Note D15]

The display method according to any one of the Supplementary Notes D10 to D14, wherein
each of the plurality of image data are generated at different times, respectively,
the generating the display signal includes generating the display signal for displaying, on the display apparatus, the information related to the accuracy of the calibration that is generated based on at least one image data, which is generated prior to the image data generated at a predetermined time, of the plurality of image data, and
the outputting the display signal includes outputting the display signal to the display apparatus before the predetermined time.

### [Supplementary Note D16]

The display method according to any one of the Supplementary Notes D10 to D14, wherein
the display method further includes generating the information related to the accuracy of the calibration, based on image data generated by the imaging apparatus attached to the robot imaging the reference member.

### [Supplementary Note D17]

The display method according to the Supplementary Note D16, wherein
the imaging apparatus generates a plurality of image data by imaging the reference member in each of different positional relationships between the reference member and the imaging apparatus, and
the generating the information related to the accuracy of the calibration includes performing a first calibration, which is the calibration based on at least one first image data of the plurality of image data, and a second calibration, which is the calibration based on at least one second image data of the plurality of image data that is different from the at least one first image data, and generating the information related to the accuracy of the calibration based on a result of the first calibration and a result of the second calibration.

### [Supplementary Note D18]

The display method according to the Supplementary Note D17, wherein
the generating the information related to the accuracy of the calibration includes calculating, as a calibration error, an error between the result of the first calibration and the result of the second calibration, and generating the information related to the accuracy of the calibration based on the calculated calibration error.

### [Supplementary Note D19]

The display method according to the Supplementary Note D18, wherein
the generating the information related to the accuracy of the calibration includes:
performing a unit calibration including the first and second calibration a plurality of times while changing the at least one first image data that is used for the first calibration and the at least one second image data that is used for the second calibration;
calculating a plurality of calibration errors that correspond to the plurality of unit calibrations, respectively, by calculating the calibration error each time the unit calibration is performed; and
generating the information related to the accuracy of the calibration based on the plurality of calibration errors.

### [Supplementary Note D20]

The display method according to the Supplementary Note D19, wherein
the generating the information related to the accuracy of the calibration includes calculating an average value of the plurality of calibration errors as the information related to the accuracy of the calibration.

### [Supplementary Note D21]

The display method according to the Supplementary Note D19 or D20, wherein
the generating the information related to the accuracy of the calibration includes:
excluding, from the plurality of image data, at least one image data of the at least one first image data and the at least one second image data that are used by the unit calibration used to calculate one calibration error, which is larger than a predetermined threshold value, of the plurality of calibration errors; and
performing the unit calibration by using the plurality of image data from which the at least one image data of the at least one first image data and the at least one second image data has been excluded.

### [Supplementary Note D22]

The display method according to any one of the Supplementary Notes D19 to D21, wherein
the generating the information related to the accuracy of the calibration includes:
replacing at least one image data of the at least one first image data and the at least one second image data that are used by the unit calibration used to calculate one calibration error, which is larger than a predetermined threshold value, of the plurality of calibration errors with third image data; and
performing the unit calibration by using the plurality of image data in which the at least one image data of the at least one first image data and the at least one second image data has been replaced with the third image data.

### [Supplementary Note D23]

The display method according to any one of the Supplementary Notes D17 to D22, wherein
the number of first image data used for the first calibration is smaller than the number of second image data used for the second calibration.

### [Supplementary Note D24]

The display method according to any one of the Supplementary Notes D17 to D23, wherein
the calibration is a processing for associating a robot coordinate system, which is a coordinate system of the robot, and an imaging coordinate system, which is a coordinate system of the imaging apparatus attached to the robot,
the generating the information related to the accuracy of the calibration includes:
   performing each of the first and second calibrations to generates at least one of a translational transformation matrix, which transforms a position in one of the robot coordinate system and the imaging coordinate system to a position in the other one of the robot coordinate system and the imaging coordinate system, and a rotational transformation matrix, which transforms a pose in one of the robot coordinate system and the imaging coordinate system to a pose in the other one of the robot coordinate system and the imaging coordinate system; and
   calculating, as the calibration error, at least one of a translational error, which is a difference between a transformed result by the translational transformation matrix calculated by the first calibration processing and a transformed result by the translational transformation matrix calculated by the second calibration processing, and a rotational error, which is a difference between a transformed result by the rotational transformation matrix calculated by the first calibration processing and a transformed result by the rotational transformation matrix calculated by the second calibration processing.

### [Supplementary Note D25]

A computer program that allows a computer to execute the display method according to any one of the Supplementary Notes D10 to D24.

### [Supplementary Note D26]

A recording medium on which the computer program according to the Supplementary Note D25 is recorded.

### [Supplementary Note D27]

A robot system including:
the computing apparatus according to any one of the Supplementary Notes D1 to D9; and
the robot.

### [Supplementary Note D28]

The robot system according to the Supplementary Note D27 further including an end effector attached to the robot.

### [Supplementary Note D29]

An imaging system including:
the computing apparatus according to any one of the Supplementary Notes D1 to D9; and
the imaging apparatus.

### [Supplementary Note E1]

A computing apparatus that generates a movement path of a movement point moving due to a driving of a robot to which an end effector, which performs a process on a target object, and an imaging apparatus are attached, wherein
the computing apparatus:
generates a first partial path that is a part of the movement path based on a first end effector model, which is obtained by expanding at least a part of a three-dimensional model of the end effector, and a first surrounding object model, which is a three-dimensional model of a first surrounding object positioned around the robot; and
generates a second partial path that is at least another part of the movement path based on a second end effector model, in which an expansion amount of the three-dimensional model of the end effector is different from that of the first end effector model and an imaged result by the imaging apparatus.

### [Supplementary Note E2]

The computing apparatus according to the Supplementary Note E1, wherein
the computing apparatus generates the second partial path based on the second end effector model, a second surrounding object model that is a three-dimensional model of a second surrounding object positioned around the robot, and the imaged result by the imaging apparatus.

### [Supplementary Note E3]

The computing apparatus according to the Supplementary Note E1 or E2, wherein
the computing apparatus generates the second partial path based on the second end effector model, a robot model that is a three-dimensional model of the robot, a second surrounding object model that is a three-dimensional model of a second surrounding object positioned around the robot, and the imaged result by the imaging apparatus.

### [Supplementary Note E4]

The computing apparatus according to any one of the Supplementary Notes E1 to E3, wherein
the computing apparatus generates the second partial path based on the second end effector model and target object image data that is the imaged result and that is acquired by the imaging apparatus imaging the target object.

### [Supplementary Note E5]

The computing apparatus according to the Supplementary Note E4, wherein
the target object image data is acquired by the imaging apparatus imaging the target object during a relative movement of the imaging apparatus and the target object.

### [Supplementary Note E6]

The computing apparatus according to the Supplementary Note E4 or E5, wherein
the target object image data is acquired by the imaging apparatus imaging the target object in a period during which the imaging apparatus moves in accordance with the generated first partial path.

### [Supplementary Note E7]

The computing apparatus according to any one of the Supplementary Notes E4 to E6, wherein
the computing apparatus generates the second partial path based on the second end effector model and the target object image data in a period during which the imaging apparatus moves in accordance with the generated first partial path.

### [Supplementary Note E8]

The computing apparatus according to any one of the Supplementary Notes E4 to E7, wherein
the computing apparatus:
calculates at least one of a position and a pose of the target object based on the target image data; and
generates the second partial path based on the second end effector model and at least one of the position and the pose of the target object.

### [Supplementary Note E9]

The computing apparatus according to the Supplementary Note E8, wherein
the computing apparatus calculates at least one of the position and the pose of the target object by a matching processing based on the target image data and a target object model that is a two-dimensional model of the target object.

### [Supplementary Note E10]

The computing apparatus according to the Supplementary Note E9, wherein
the target object model includes a model of an edge of at least a part of the target object.

### [Supplementary Note E11]

The computing apparatus according to any one of the Supplementary Notes E8 to E10, wherein
the computing apparatus calculates at least one of the position and the pose of the target object by a matching processing based on the target image data and a target object model that is a three-dimensional model of the target object.

### [Supplementary Note E12]

The computing apparatus according to any one of the Supplementary Notes E8 to E11, wherein
the computing apparatus generates the second partial path based on a target object model, which is a three-dimensional model of the target object at least one of a position and a pose of which is determined based on at least one of the calculated position and pose of the target object, and the second end effector model.

### [Supplementary Note E13]

A path generation method that generates a movement path of a movement point moving due to a driving of a robot to which an end effector, which performs a process on a target object, and an imaging apparatus are attached, wherein
the path generation method includes:
generating a first partial path that is a part of the movement path based on a first end effector model, which is obtained by expanding at least a part of a three-dimensional model of the end effector, and a first surrounding object model, which is a three-dimensional model of a first surrounding object positioned around the robot; and
generating a second partial path that is at least another part of the movement path based on a second end effector model, in which an expansion amount of the three-dimensional model of the end effector is different from that of the first end effector model, a second surrounding object model, which is a three-dimensional model of a second surrounding object positioned around the robot, and an imaged result by the imaging apparatus.

### [Supplementary Note E14]

The path generation method according to the Supplementary Note E13, wherein
the generating the second partial path includes generating the second partial path based on the second end effector model, a second surrounding object model that is a three-dimensional model of a second surrounding object positioned around the robot, and the imaged result by the imaging apparatus.

### [Supplementary Note E15]

The path generation method according to the Supplementary Note E13 or E14, wherein
the first end effector model is a model that is obtained by increasing a volume of at least a part of the three-dimensional model of the end effector, and
the second end effector model is a model in which an increased amount of the volume of at least a part of the three-dimensional model of the end effector is different from that of the first end effector model.

### [Supplementary Note E16]

The path generation method according to any one of the Supplementary Notes E13 to E15, wherein
the generating the second partial path includes generating the second partial path based on the second end effector model and target object image data that is the imaged result and that is acquired by the imaging apparatus imaging the target object.

### [Supplementary Note E17]

The path generation method according to the Supplementary Note E16, wherein
the target object image data is acquired by the imaging apparatus imaging the target object during a relative movement of the imaging apparatus and the target object.

### [Supplementary Note E18]

The path generation method according to the Supplementary Note E16 or E17, wherein
the target object image data is acquired by the imaging apparatus imaging the target object in a period during which the imaging apparatus moves in accordance with the generated first partial path.

### [Supplementary Note E19]

The path generation method according to any one of the Supplementary Notes E16 to E18, wherein
the generating the second partial path includes generating the second partial path based on the second end effector model and the target object image data in a period during which the imaging apparatus moves in accordance with the generated first partial path.

### [Supplementary Note E20]

The path generation method according to any one of the Supplementary Notes E16 to E18, wherein
the generating the second partial path includes:
calculating at least one of a position and a pose of the target object based on the target object image data; and
generating the second partial path based on the second end effector model and at least one of the position and the pose of the target object.

### [Supplementary Note E21]

The path generation method according to the Supplementary Note E20, wherein
the path generation method further includes calculating at least one of the position and the pose of the target object by a matching processing based on the target image data and a target object model that is a three-dimensional model of the target object.

### [Supplementary Note E22]

The path generation method according to the Supplementary Note E20 or E21, wherein
the generating the second partial path includes generating the second partial path based on a target object model, which is a three-dimensional model of the target object at least one of a position and a pose of which is determined based on at least one of the calculated position and pose of the target object, and the second end effector model.

### [Supplementary Note E23]

The path generation method according to any one of the Supplementary Notes E13 to E22, wherein
the second partial path is a path to a process target position that is a position at which the end effector performs the process on the target object, and
an expansion amount of the second end effector model relative to the three-dimensional model of the end effector is smaller than an expansion amount of the first end effector model relative to the three-dimensional model of the end effector.

### [Supplementary Note E24]

The path generation method according to any one of the Supplementary Notes E13 to E23, wherein
the first partial path is a path from a movement start position of the end effector to a first access position at which the end effector is closer to the target object than the movement start position, and
the second partial path is a path from the first access position to a second access position at which the end effector is closer to the target object than the first access position.

### [Supplementary Note E25]

The path generation method according to the Supplementary Note E24, wherein
the second access position is a process target position that is a position at which the end effector performs the process on the target object.

### [Supplementary Note E26]

The path generation method according to the Supplementary Note E24, wherein
the movement path includes a third partial path that is at least a partial path of the movement path and that is different from the first partial path and the second partial path,
the third partial path is a path from the second access position to a process target position that is a position at which the end effector performs the process on the target object, and
the path generation method further includes generating the third partial path based on the imaged result by the imaging apparatus.

### [Supplementary Note E27]

The path generation method according to any one of the Supplementary Notes E13 to E26, wherein
the second end effector model is a three-dimensional model of the end effector.

### [Supplementary Note E28]

The path generation method according to any one of the Supplementary Notes E13 to E27, wherein
the movement path is a path to a process target position that is a position at which the end effector performs the process on the target object,
the path generation method generates the movement path based on a path generation condition that is set for each partial path, and
the path generation condition includes an expansion amount of the first end effector model relative to the three-dimensional model of the end effector and an expansion amount of the second end effector model relative to the three-dimensional model of the end effector.

### [Supplementary Note E29]

The path generation method according to the Supplementary Note E28, wherein
the path generation condition is input by a user through a display screen on a display apparatus.

### [Supplementary Note E30]

The path generation method according to any one of the Supplementary Notes E13 to E29:
generates the first partial path based on a result of an interference determination between the first end effector model and the first surrounding object model; and
generate the second partial path based on a result of an interference determination between the second end effector model and a second surrounding object model, which is a three-dimensional model of a second surrounding object positioned around the robot, and the imaged result by the imaging apparatus.

### [Supplementary Note E31]

The path generation method according to any one of the Supplementary Notes E13 to E30, wherein
the generating the first partial path includes generating at least a part of the first partial path before the end effector starts moving based on the first partial path, and
the generating the second partial path includes generating the second partial path after the end effector starts moving based on the first partial path.

### [Supplementary Note E32]

The path generation method according to the Supplementary Note E31, wherein
the generating the first partial path includes generating the first partial path before the end effector starts moving based on the first partial path.

### [Supplementary Note E33]

The path generation method according to any one of the Supplementary Notes E13 to E32, wherein
the generating the first partial path is generating at least a part of the first partial path based on the first end effector model, the first surrounding object model, and the imaged result by the imaging apparatus.

### [Supplementary Note E34]

The path generation method according to any one of the Supplementary Notes E13 to E33, wherein
the generating the first partial path includes:
calculating at least one of a position and a pose of the first surrounding object based on first surrounding object image data that is the imaged result and that is acquired by the imaging apparatus imaging the first surrounding object; and
generating the first partial path based on the first end effector model and the first surrounding object model at least one of a position and a pose of which is determined based on at least one of the calculated position and pose of the first surrounding object.

### [Supplementary Note E35]

The path generation method according to any one of the Supplementary Notes E13 to E31, wherein
the generating the first partial path includes:
generates a part of the first partial path based on the first end effector model, the first surrounding object model, and image data that is the imaged result and that is acquired by imaging the first surrounding object before the end effector starts moving based on the first partial path; and
generating another part of the first partial path based on the first end effector model, the first surrounding object model, and image data that is the imaged result and that is acquired by the imaging apparatus imaging the first surrounding object after the end effector starts moving based on the first partial path.

### [Supplementary Note E36]

The path generation method according to any one of the Supplementary Notes E13 to E37, wherein
the generating the second partial path includes generating the second partial path based on the second end effector model, a second surrounding object model that is a three-dimensional model of a second surrounding object positioned around the robot, and second surrounding object image data that is the imaged result and that is acquired by the imaging apparatus imaging the second surrounding object.

### [Supplementary Note E37]

The path generation method according to the Supplementary Note E36, wherein
the generating the second partial path includes:
calculating at least one of a position and a pose of the second surrounding object based on the second surrounding object image data; and
generating the second partial path based on the second end effector model and the second surrounding object model at least one of a position and a pose of which is determined based on at least one of the calculated position and pose of the second surrounding object.

### [Supplementary Note E38]

The path generation method according to any one of the Supplementary Notes E16 to E22, wherein
a target object group including a plurality of target objects is positioned, and
the target object image data is acquired by the imaging apparatus imaging the target object group.

### [Supplementary Note E39]

The path generation method according to the Supplementary Note E38, wherein
the generating the second partial path includes:
determining one target object, on which the end effector performs the process, from the target object group based on the target object image data; and
generating the second partial path based on at least one of a position and a pose of the determined one target object, the second end effector model, and a second surrounding object model that is a three-dimensional model of a second surrounding object positioned around the robot.

### [Supplementary Note E40]

The path generation method according to the Supplementary Note E39, wherein
the path generation method further includes determining the one target object based on the target object image data and a target object model that is a three-dimensional model of the target object.

### [Supplementary Note E41]

The path generation method according to the Supplementary Note E39 or E40, wherein
the path generation method further includes calculating at least one of a position and a pose of the one target object based on the target object image data and a target object model that is a three-dimensional model of the target object.

### [Supplementary Note E42]

The path generation method according to any one of the Supplementary Notes E39 to E41, wherein
the generating the second partial path is generating the second partial path based on: a three-dimensional position of each of a plurality of points of at least one target object remaining in the target object group from which the one target object is excluded, or at least one of a position and a pose of the at least one target object; at least one of a position and a pose of the one target object; the second end effector model; and the second surrounding object model.

### [Supplementary Note E43]

The path generation method according to any one of the Supplementary Notes E39 to E42, wherein
the target object image data is first target object image data,
the generating the second partial path includes:
   based on second target object image data that is acquired as the imaged result by the imaging apparatus imaging the target object group or at least one target object remaining in the target object group from which the one target object is excluded, generating three-dimensional position data indicating a three-dimensional position of each of a plurality of points of each target object in the target object group or the at least one target object; and
   generating the second partial path based on the generated three-dimensional position data, at least one of a position and a pose of the one target object, the second end effector model, and the second surrounding object model.

### [Supplementary Note E44]

The path generation method according to the Supplementary Note E43, wherein
the second target object image data includes a plurality of image data that are acquired by the imaging apparatus imaging the target object group or at least one target object remaining in the target object group from which the one target object is excluded a plurality of times.

### [Supplementary Note E45]

The path generation method according to the Supplementary Note E43 or E44, wherein
the imaging apparatus includes a projection apparatus that is configured to emit projection light, and
the second target object image data includes: image data that is acquired by the imaging apparatus imaging, at least once, the target object group or at least one target object remaining in the target object group from which the one target object is excluded on which the projection light having a first light intensity is irradiated from the projection apparatus; and image data that is acquired by the imaging apparatus imaging, at least once, the target object group or at least one target object remaining in the target object group from which the one target object is excluded on which the projection light having a second light intensity, which is different from the first light intensity, is irradiated from the projection apparatus.

### [Supplementary Note E46]

The path generation method according to the Supplementary Note E44 or E45, wherein
the path generation method includes generating the three-dimensional position data by combining three-dimensional position information, which is calculated based on each image data included in the second target object image data, of each of the plurality of points of each target object of the target object group or the at least one target object.

### [Supplementary Note E47]

The path generation method according to any one of the Supplementary Notes E44 to E45, wherein
the generating the second partial path includes generating the second partial path based on: a result of an interference determination, which is based on the second end effector model, the three-dimensional position data, and the second surrounding object model; and at least one of a position and a pose of the one target object.

### [Supplementary Note E48]

The path generation method according to any one of the Supplementary Notes E43 to E47, wherein
the second surrounding object includes the at least one target object remaining in the target object group from which the one target object is excluded,
the second surrounding object model is a model based on the three-dimensional position data, and
the generating the second partial path includes generating the second partial path based on a result of an interference determination between the second end effector model and the second surrounding object model, and at least one of a position and a pose of the one target object.

### [Supplementary Note E49]

The path generation method according to the Supplementary Note E48, wherein
the model based on the three-dimensional position data is a point cloud model or a mesh model.

### [Supplementary Note E50]

The path generation method according to any one of the Supplementary Notes E43 to E49, wherein
the first target object image data is the second target object image data.

### [Supplementary Note E51]

The path generation method according to any one of the Supplementary Notes E39 to E42, wherein
the generating the second partial path includes generating the second partial path based on at least one of a position and a pose of at least one target object remaining in the target object group from which the one target object is excluded, at least one of a position and a pose of the one target object, the second end effector model, and the second surrounding object model.

### [Supplementary Note E52]

The path generation method according to the Supplementary Note E51, wherein
the second surrounding object includes the at least one target object remaining in the target object group from which the one target object is excluded,
the second surrounding object model includes a target object model, which is a three-dimensional model of the target object at least one of a position and a pose of which is determined based on at least one of the calculated position and pose of the at least one target object, and
the generating the second partial path includes generating the second partial path based on a result of an interference determination between the second end effector model and the second surrounding object model, and at least one of a position and a pose of the one target object.

### [Supplementary Note E53]

The path generation method according to any one of the Supplementary Notes E38 to E52, wherein
the second surrounding object model includes a three-dimensional model of a container that is the second surrounding object and that contains at least the target object group.

### [Supplementary Note E54]

The path generation method according to the Supplementary Note E53, wherein
each target object of the target object group is contained in the container at an irregular position and with an irregular pose.

### [Supplementary Note E55]

The path generation method according to the Supplementary Note E53 or E54, wherein
the first partial path is a path from an outside of the container to an inside of the container.

### [Supplementary Note E56]

The path generation method according to any one of the Supplementary Notes E53 to E55, wherein
the first partial path is a path that crosses a side wall of the container.

### [Supplementary Note E57]

The path generation method according to any one of the Supplementary Notes E53 to E56, wherein
the first partial path is a path that passes through a side wall of the container.

### [Supplementary Note E58]

The path generation method according to any one of the Supplementary Notes E53 to E57, wherein
the first partial path is a path from a space adjacent to a side wall of the container outside the container to a space adjacent to the side wall inside the container through a space above the side wall.

### [Supplementary Note E59]

The path generation method according to any one of the Supplementary Notes E13 to E58, wherein
the first surrounding object and the second surrounding object are at least partially common.

### [Supplementary Note E60]

The path generation method according to any one of the Supplementary Notes E13 to E59, wherein
the imaging apparatus includes at least one of a monocular camera and a stereo camera including two monocular cameras that are different from the monocular camera.

### [Supplementary Note E61]

The path generation method according to any one of the Supplementary Notes E13 to E60, wherein
the process is a holding, and
the end effector is a holding apparatus that is configured to hold the target object.

### [Supplementary Note E62]

The path generation method according to any one of the Supplementary Notes E13 to E58, wherein
the path generation method further includes generating a control signal for controlling the robot based on the generated first partial path and second partial path.

### [Supplementary Note E63]

The path generation method according to any one of the Supplementary Notes E13 to E62, wherein
the process is a holding process,
the end effector is a holding apparatus that is configured to hold the target object,
the movement path includes a fourth partial path that is at least partial path of the movement path and that is different from the first partial path, and
the path generation method generates the fourth partial path based on a third end effector model, which is based on a three-dimensional model of the end effector, a target object model, which is based on a three-dimensional model of the target object positioned relative to the third end effector model, and a third surrounding object model, which is a three-dimensional model of a third surrounding object positioned around the robot.

### [Supplementary Note E64]

The path generation method according to the Supplementary Note E63, wherein
the target object model is a model based on the three-dimensional model of the target object that is positioned relative to the third end effector model at at least one of predetermined position and pose.

### [Supplementary Note E65]

The path generation method according to the Supplementary Note E63 or E64, wherein
the path generation method generates the fourth partial path based on a result of an interference determination between the third end effector model and the target object model, and the third surrounding object model.

### [Supplementary Note E66]

The path generation method according to any one of the Supplementary Notes E63 to E65, wherein
the fourth partial path is a path from a holding target position, at which the end effector performs the holding process on the target object, to a separated position that is separated from the holding target position.

### [Supplementary Note E67]

The path generation method according to the Supplementary Note E66, wherein
the path generation method generates the fourth partial path before the end effector holds the target object.

### [Supplementary Note E68]

The path generation method according to the Supplementary Note E66 or E67, wherein
the second partial path is a path to the holding target position at which the end effector performs the holding process on the target object, and
the path generation method generates the fourth partial path before starting a movement based on the second partial path or during the movement based on the second partial path.

### [Supplementary Note E69]

The path generation method according to any one of the Supplementary Notes E66 to E68, wherein
the path generation method generates the fourth partial path based on the third end effector model, the target object model, the third surrounding object model, and the imaged result by the imaging apparatus.

### [Supplementary Note E70]

The path generation method according to any one of the Supplementary Notes E66 to E69, wherein
a target object group, which includes a plurality of target objects including the target object on which the holding process is performed, is positioned,
the imaged result by the imaging apparatus is target object image data that is acquired by the imaging apparatus imaging the target object group,
the path generation method:
   generates the second partial path based on the target object image data, the second end effector model, and the second surrounding object model; and
   generates the fourth partial path based on the target object image data, the third end effector model, the target object model, and the third surrounding object model.

### [Supplementary Note E71]

The path generation method according to any one of the Supplementary Notes E63 to E70, wherein
the third end effector model is the second end effector model, and
the third surrounding object model is the second surrounding object model.

### [Supplementary Note E72]

A robot control method that controls the robot based on the first partial pat and the second partial path generated by the path generation method according to any one of the Supplementary Notes E13 to E71.

### [Supplementary Note E73]

A process method that performs a process on the target object by the end effector based on the first partial pat and the second partial path generated by the path generation method according to any one of the Supplementary Notes E13 to E71.

### [Supplementary Note E74]

A computer program that allows a computer to execute the path generation method according to any one of the Supplementary Notes E13 to E71.

### [Supplementary Note E75]

A recording medium on which the computer program according to the Supplementary Note E74 is recorded.

### [Supplementary Note E76]

A robot system including:
the computing apparatus according to any one of the Supplementary Notes E1 to E12; and
the robot.

### [Supplementary Note E77]

The robot system according to the Supplementary Note D27 further including the end effector attached to the robot.

### [Supplementary Note E78]

An imaging system including:
the computing apparatus according to any one of the Supplementary Notes E1 to E12; and
the imaging apparatus.

### [Supplementary Note F1]

A computing apparatus that generates a movement path of a movement point moving due to a driving of a robot to which an end effector, which performs a process on a target object, and an imaging apparatus are attached, wherein
the computing apparatus generates a second partial path that is at least another part of the movement path and that is closer to the target object than a first partial path, which is at least a part of the movement path, is based on based on an end effector model, which is a three-dimensional model of the end effector, and an imaged result by the imaging apparatus.

### [Supplementary Note F2]

The computing apparatus according to the Supplementary Note F1, wherein
the computing apparatus generates the second partial path based on the end effector model, a robot model that is a three-dimensional model of the robot, a surrounding object model that is a three-dimensional model of a surrounding object positioned around the robot, and the imaged result by the imaging apparatus.

### [Supplementary Note F3]

The computing apparatus according to the Supplementary Note F2, wherein
the computing apparatus generates the second partial path based on a result of an interference determination between the surrounding object model and at least one of the end effector model and the robot model.

### [Supplementary Note F4]

The computing apparatus according to any one of the Supplementary Notes F1 to F3, wherein
the computing apparatus generates the second partial path based on an expansion end effector model that is obtained by expanding at least a part of the three-dimensional model of the end effector.

### [Supplementary Note F5]

The computing apparatus according to the Supplementary Note F4, wherein
the computing apparatus generates the second partial path based on the expansion end effector model, a robot model that is a three-dimensional model of the robot, a surrounding object model that is a three-dimensional model of a surrounding object positioned around the robot, and the imaged result by the imaging apparatus.

### [Supplementary Note F6]

The computing apparatus according to the Supplementary Note F5, wherein
the computing apparatus generates the second partial path based on a result of an interference determination between the surrounding object model and at least one of the expansion end effector model and the robot model.

### [Supplementary Note F7]

The computing apparatus according to any one of the Supplementary Notes F4 to F6, wherein
the expansion end effector model is a second expansion end effector model, and
the computing apparatus generates the first partial path based on a first expansion end effector model that is obtained by expanding at least a part of the three-dimensional model of the end effector.

### [Supplementary Note F8]

The computing apparatus according to the Supplementary Note F7, wherein
the first expansion end effector model is a model that is obtained by increasing a volume of at least a part of the three-dimensional model of the end effector, and
the second expansion end effector model is a model in which an increased amount of the volume of at least a part of the three-dimensional model of the end effector is different from that of the first end effector model.

### [Supplementary Note F9]

The computing apparatus according to the Supplementary Note F7 or F8, wherein
an expansion amount of the second expansion end effector model relative to the three-dimensional model of the end effector is smaller than an expansion amount of the first expansion end effector model relative to the three-dimensional model of the end effector.

### [Supplementary Note F10]

The computing apparatus according to any one of the Supplementary Notes F7 to F9, wherein
the second expansion end effector model is the three-dimensional model of the end effector.

### [Supplementary Note F11]

The computing apparatus according to any one of the Supplementary Notes F1 to F9, wherein
the computing apparatus generates the second partial path based on an expansion surrounding object model that is obtained by expanding at least a part of a three-dimensional model of a surrounding object positioned around the robot.

### [Supplementary Note F12]

The computing apparatus according to the Supplementary Note F11, wherein
the expansion surrounding object model is a second expansion surrounding object model, and
the computing apparatus generates the first partial path based on a first expansion surrounding object model that is obtained by expanding at least a part of the three-dimensional model of the surrounding object.

### [Supplementary Note F13]

The computing apparatus according to the Supplementary Note F12, wherein
the first expansion surrounding object model is a model that is obtained by increasing a volume of at least a part of the three-dimensional model of the surrounding object, and
the second expansion surrounding object model is a model in which an increased amount of the volume of at least a part of the three-dimensional model of the surrounding object is different from that of the first surrounding object model.

### [Supplementary Note F14]

The computing apparatus according to the Supplementary Note F12 or F13, wherein
an expansion amount of the second expansion surrounding object model relative to the three-dimensional model of the surrounding object is smaller than an expansion amount of the first expansion surrounding object model relative to the three-dimensional model of the surrounding object.

### [Supplementary Note F15]

The computing apparatus according to any one of the Supplementary Notes F12 to F14, wherein
the second expansion surrounding object model is the three-dimensional model of the surrounding object.

### [Supplementary Note F16]

The computing apparatus according to any one of the Supplementary Notes F11 to F15, wherein
the computing apparatus generates the second partial path based on a result of an interference determination between the expansion surrounding object model and at least one of the end effector model and a robot model that is a three-dimensional model of the robot.

### [Supplementary Note F17]

The computing apparatus according to any one of the Supplementary Notes F11 to F15, which is dependent on any one of the Supplementary Notes F4 to F10, wherein
the computing apparatus generates the second partial path based on a result of an interference determination between the expansion surrounding object model and at least one of the expansion end effector model and a robot model that is a three-dimensional model of the robot.

### [Supplementary Note F18]

The computing apparatus according to any one of the Supplementary Notes F11 to F17, wherein
the computing apparatus generates the second partial path based on the end effector model and a target object image data that is the imaged result and that is acquired by the imaging apparatus imaging the target object.

### [Supplementary Note F19]

The computing apparatus according to any one of the Supplementary Notes F11 to F18, wherein
the second partial path is a path to a process target position that is a position at which the end effector performs the process on the target object.

### [Supplementary Note F20]

The computing apparatus according to any one of the Supplementary Notes F1 to F19, wherein
the first partial path is a path from a movement start position of the end effector to a first access position at which the end effector is closer to the target object than the movement start position, and
the second partial path is a path from the first access position to a second access position at which the end effector is closer to the target object than the first access position.

### [Supplementary Note F21]

The computing apparatus according to the Supplementary Note F20, wherein
the second access position is a process target position that is a position at which the end effector performs the process on the target object.

### [Supplementary Note F22]

The computing apparatus according to the Supplementary Note F20, wherein
the movement path includes a third partial path that is a part of the movement path and that is different from the first partial path and the second partial path,
the third partial path is a path from the second access position to a process target position that is a position at which the end effector performs the process on the target object, and
the computing apparatus generates the third partial path based on the imaged result by the imaging apparatus.

### [Supplementary Note F23]

A path generation method s that generates a movement path of a movement point moving due to a driving of a robot to which an end effector, which performs a process on a target object, and an imaging apparatus are attached, wherein
the path generation method includes generating a second partial path that is at least another part of the movement path and that is closer to the target object than a first partial path, which is at least a part of the movement path, is based on based on an end effector model, which is a three-dimensional model of the end effector, and an imaged result by the imaging apparatus.

### [Supplementary Note F24]

The path generation method according to the Supplementary Note F23, wherein
generating the second partial path includes generating the second partial path based on the end effector model, a robot model that is a three-dimensional model of the robot, a surrounding object model that is a three-dimensional model of a surrounding object positioned around the robot, and the imaged result by the imaging apparatus.

### [Supplementary Note F25]

The path generation method according to the Supplementary Note F24, wherein
the generating the second partial path includes generating the second partial path based on a result of an interference determination between the surrounding object model and at least one of the end effector model and the robot model.

### [Supplementary Note F26]

The path generation method according to any one of the Supplementary Notes F23 to F25, wherein
the generating the second partial path includes generating the second partial path based on an expansion end effector model that is obtained by expanding at least a part of the three-dimensional model of the end effector.

### [Supplementary Note F27]

The path generation method according to the Supplementary Note F26, wherein
the generating the second partial path includes generating the second partial path based on the expansion end effector model, a robot model that is a three-dimensional model of the robot, a surrounding object model that is a three-dimensional model of a surrounding object positioned around the robot, and the imaged result by the imaging apparatus.

### [Supplementary Note F28]

The path generation method according to the Supplementary Note F27, wherein
the generating the second partial path includes generating the second partial path based on a result of an interference determination between the surrounding object model and at least one of the expansion end effector model and the robot model.

### [Supplementary Note F29]

The path generation method according to any one of the Supplementary Notes F26 to F28, wherein
the expansion end effector model is a second expansion end effector model, and
the generating the second partial path includes generating the first partial path based on a first expansion end effector model that is obtained by expanding at least a part of the three-dimensional model of the end effector.

### [Supplementary Note F30]

The path generation method according to the Supplementary Note F29, wherein
the first expansion end effector model is a model that is obtained by increasing a volume of at least a part of the three-dimensional model of the end effector, and
the second expansion end effector model is a model in which an increased amount of the volume of at least a part of the three-dimensional model of the end effector is different from that of the first end effector model.

### [Supplementary Note F31]

The path generation method according to the Supplementary Note F29 or F30, wherein
an expansion amount of the second expansion end effector model relative to the three-dimensional model of the end effector is smaller than an expansion amount of the first expansion end effector model relative to the three-dimensional model of the end effector.

### [Supplementary Note F32]

The path generation method according to any one of the Supplementary Notes F29 to F31, wherein
the second expansion end effector model is the three-dimensional model of the end effector.

### [Supplementary Note F33]

The path generation method according to any one of the Supplementary Notes F23 to F32, wherein
the generating the second partial path includes generating the second partial path based on an expansion surrounding object model that is obtained by expanding at least a part of a three-dimensional model of a surrounding object positioned around the robot.

### [Supplementary Note F34]

The path generation method according to the Supplementary Note F33, wherein
the expansion surrounding object model is a second expansion surrounding object model, and
the path generation method further includes generating the first partial path based on a first expansion surrounding object model that is obtained by expanding at least a part of the three-dimensional model of the surrounding object.

### [Supplementary Note F35]

The path generation method according to the Supplementary Note F34, wherein
the first expansion surrounding object model is a model that is obtained by increasing a volume of at least a part of the three-dimensional model of the surrounding object, and
the second expansion surrounding object model is a model in which an increased amount of the volume of at least a part of the three-dimensional model of the surrounding object is different from that of the first surrounding object model.

### [Supplementary Note F36]

The path generation method according to the Supplementary Note F34 or F35, wherein
an expansion amount of the second expansion surrounding object model relative to the three-dimensional model of the surrounding object is smaller than an expansion amount of the first expansion surrounding object model relative to the three-dimensional model of the surrounding object.

### [Supplementary Note F37]

The path generation method according to any one of the Supplementary Notes F34 to F36, wherein
the second expansion surrounding object model is the three-dimensional model of the surrounding object.

### [Supplementary Note F38]

The path generation method according to any one of the Supplementary Notes F33 to F37, wherein
the generating the second partial path includes generating the second partial path based on a result of an interference determination between the expansion surrounding object model and at least one of the end effector model and a robot model that is a three-dimensional model of the robot.

### [Supplementary Note F39]

The path generation method according to any one of the Supplementary Notes F33 to F37, which is dependent on any one of the Supplementary Notes F26 to F32, wherein
the generating the second partial path includes generating the second partial path based on a result of an interference determination between the expansion surrounding object model and at least one of the expansion end effector model and a robot model that is a three-dimensional model of the robot.

### [Supplementary Note F40]

The path generation method according to any one of the Supplementary Notes F23 to F39, wherein
the generating the second partial path includes generating the second partial path based on the end effector model and target object image data that is the imaged result and that is acquired by the imaging apparatus imaging the target object.

### [Supplementary Note F41]

The path generation method according to any one of the Supplementary Notes F23 to F40, wherein
the second partial path is a path to a process target position that is a position at which the end effector performs the process on the target object.

### [Supplementary Note F42]

The path generation method according to any one of the Supplementary Notes F23 to F41, wherein
the first partial path is a path from a movement start position of the end effector to a first access position at which the end effector is closer to the target object than the movement start position, and
the second partial path is a path from the first access position to a second access position at which the end effector is closer to the target object than the first access position.

### [Supplementary Note F43]

The path generation method according to the Supplementary Note F42, wherein
the second access position is a process target position that is a position at which the end effector performs the process on the target object.

### [Supplementary Note F44]

The path generation method according to the Supplementary Note F42, wherein
the movement path includes a third partial path that is a part of the movement path and that is different from the first partial path and the second partial path,
the third partial path is a path from the second access position to a process target position that is a position at which the end effector performs the process on the target object, and
the path generation method further includes generating the third partial path based on the imaged result by the imaging apparatus.

### [Supplementary Note F45]

A computer program that allows a computer to execute the path generation method according to any one of the Supplementary Notes F23 to F44.

### [Supplementary Note F46]

A recording medium on which the computer program according to the Supplementary Note F46 is recorded.

### [Supplementary Note F47]

A robot system including:
the computing apparatus according to any one of the Supplementary Notes F1 to F22; and
the robot.

### [Supplementary Note F48]

The robot system according to the Supplementary Note F47 further including an end effector attached to the robot.

### [Supplementary Note F49]

An imaging system including:
the computing apparatus according to any one of the Supplementary Notes F1 to F22; and
the imaging apparatus.

### [Supplementary Note G1]

A computing apparatus that generates a movement path of a movement point moving due to a driving of a robot to which an end effector, which performs a process on a target object, and an imaging apparatus are attached, wherein
the movement path includes: a first partial path, which is a part of the movement path and which is to a process target position at which the process is performed on the target object, and a second partial path, which is at least another part of the movement path and which is from the process target position to a separated position that is separated from the process target position,
a plurality of the target objects including the target object on which the process is performed are positioned,
the computing apparatus:
   generates the first partial path based on a first end effector model, which is based on a three-dimensional model of the end effector, and an imaged result of the plurality of target objects by the imaging apparatus; and
   generates the second partial path based on a second end effector model, which is based on the three-dimensional model of the end effector, and the imaged result.

### [Supplementary Note G2]

The computing apparatus according to the Supplementary Note G1, wherein
the computing apparatus generates at least a part of the second partial path before a movement based on the first partial path.

### [Supplementary Note G3]

The computing apparatus according to the Supplementary Note G1 or G2, wherein
the computing apparatus generates the second partial path before a movement based on the first partial path.

### [Supplementary Note G4]

The computing apparatus according to any one of the Supplementary Notes G1 to G3, wherein
the computing apparatus generates at least a part of the second partial path during a movement based on the first partial path.

### [Supplementary Note G5]

The computing apparatus according to any one of the Supplementary Notes G1 to G4, wherein
the imaged result is target object image data that is acquired by the imaging apparatus imaging the plurality of target objects.

### [Supplementary Note G6]

The computing apparatus according to any one of the Supplementary Notes G1 to G5, wherein
each target object of the plurality of target objects is contained in a container at an irregular position and with an irregular pose.

### [Supplementary Note G7]

An imaging system including:
the computing apparatus according to any one of the Supplementary Notes G1 to G6; and
the imaging apparatus.

### [Supplementary Note H1]

A computing apparatus that generates a movement path of a movement point moving due to a driving of a robot to which an end effector, which is configured to hold a target object, is attached, wherein
the computing apparatus generates at least a part of the movement path based on an end effector model, which is based on a three-dimensional model of the end effector, a target object model, which is based on a three-dimensional model of the target object positioned relative to the end effector model, and a surrounding object model, which is a three-dimensional model of a surrounding object positioned around the robot.

### [Supplementary Note H2]

The computing apparatus according to the Supplementary Note H1, wherein
the target object model is a model that is positioned at relative to the end effector model at least one of predetermined position and pose.

### [Supplementary Note H3]

The computing apparatus according to the Supplementary Note H1 or H2, wherein
the target object model is a model based on a three-dimensional model of the target object held by the end effector.

### [Supplementary Note H4]

The computing apparatus according to any one of the Supplementary Notes H1 to H3, wherein
the computing apparatus generates at least a part of the movement path based on a result of an interference determination between the surrounding object model and the end effector model, and the target object model.

### [Supplementary Note H5]

The computing apparatus according to any one of the Supplementary Notes H1 to H4, wherein
the target object model is a model expanded from at least a part of the three-dimensional model of the target object being held by the end effector.

### [Supplementary Note H6]

The computing apparatus according to any one of the Supplementary Notes H1 to H5, wherein
the computing apparatus generates the target object model in which an expansion amount of at least a part of the three-dimensional model of the target object held by the end effector is changed, and generates at least a part of the movement path based on a result of an interference determination between the target object model whose expansion amount is changed and the surrounding object model.

### [Supplementary Note H7]

The computing apparatus according to the Supplementary Note H5 or H6, wherein
the computing apparatus generates at least a part of the movement path based on a path generation condition that is set for at least a part of the movement path, and
the path generation condition includes an expansion amount of the three-dimensional model of the target object held by the end effector.

### [Supplementary Note H8]

The computing apparatus according to any one of the Supplementary Notes H1 to H7, wherein
the target object model is a model that is obtained by increasing a volume of at least a part of the three-dimensional model of the target object held by the end effector.

### [Supplementary Note H9]

The computing apparatus according to any one of the Supplementary Notes H1 to H8, wherein
the target object model is the three-dimensional model of the target object held by the end effector.

### [Supplementary Note H10]

The computing apparatus according to any one of the Supplementary Notes H1 to H9, wherein
the end effector model is a model that is obtained by expanding at least a part of the three-dimensional model of the end effector.

### [Supplementary Note H11]

The computing apparatus according to any one of the Supplementary Notes H1 to H10, wherein
the computing apparatus generates the end effector model in which an expansion amount of at least a part of the three-dimensional model of the end effector is changed, and generates at least a part of the movement path based on a result of an interference determination between the end effector model whose expansion amount is changed and the surrounding object model.

### [Supplementary Note H12]

The computing apparatus according to the Supplementary Note H10 or H11, wherein
the computing apparatus generates at least a part of the movement path based on a path generation condition that is set for at least a part of the movement path, and
the path generation condition includes an expansion amount of the three-dimensional model of the end effector.

### [Supplementary Note H13]

The computing apparatus according to any one of the Supplementary Notes H1 to H12, wherein
the end effector model is a model that is obtained by increasing a volume of at least a part of the three-dimensional model of the end effector.

### [Supplementary Note H14]

The computing apparatus according to any one of the Supplementary Notes H1 to H13, wherein
the end effector model is the three-dimensional model of the end effector.

### [Supplementary Note H15]

The computing apparatus according to the Supplementary Note H7 or H12, wherein
the path generation condition is input by a user through a display screen on a display apparatus.

### [Supplementary Note H16]

The computing apparatus according to any one of the Supplementary Notes H1 to H15, wherein
an imaging apparatus is attached to the robot, and
the computing apparatus generates at least a part of the movement path based on the end effector model, the target object model, the surrounding object model, and an imaged result by the imaging apparatus.

### [Supplementary Note H17]

The computing apparatus according to any one of the Supplementary Notes H1 to H16, wherein
at least a part of the movement path includes a path from a holding target position, at which the end effector performs a holding process on the target object, to a separated position that is separated from the holding process position.

### [Supplementary Note H18]

The computing apparatus according to the Supplementary Note H16, wherein
an imaging apparatus is attached to the robot,
a target object group including a plurality of target objects is positioned in a space including the holding target position,
one target object of the target object group is held by the end effector, and
the computing apparatus generates at least a part of the movement path based on target object image data, which is acquired by the imaging apparatus imaging the target object group or at least one target object remaining in the target object group from which the one target object is excluded, the end effector model, the target object model, and the surrounding object model.

### [Supplementary Note H19]

The computing apparatus according to the Supplementary Note H18, wherein
the computing apparatus generates three-dimensional position data indicating a three-dimensional position of each of a plurality of points of each target object in the target object group or a three-dimensional position of each of a plurality of points of the at least one target object, based on the target object image data, and
the computing apparatus generates at least a part of the movement path based on the three-dimensional position data, the end effector model, the target object model, and the surrounding object model.

### [Supplementary Note H20]

The computing apparatus according to the Supplementary Note H19, wherein
the surrounding object includes the at least one target object remaining in the target object group from which the one target object is excluded,
the surrounding object model includes a model based on the three-dimensional position data, and
the computing apparatus generates at least a part of the movement path based on a result of an interference determination between the end effector model and the target object model, and the surrounding object model.

### [Supplementary Note H21]

The computing apparatus according to the Supplementary Note H20, wherein
the model based on the three-dimensional position data is a point cloud model or a mesh model.

### [Supplementary Note H22]

The computing apparatus according to the Supplementary Note H18, wherein
the computing apparatus:
calculates at least one of a position and a pose of the at least one target object based on the target object image data; and
generates at least a part of the movement path based on at least one of the calculated position and pose of the at least one target object, and on the end effector model, the target object model, and the surrounding object model.

### [Supplementary Note H23]

The computing apparatus according to the Supplementary Note H22, wherein
the surrounding object includes the at least one target object remaining in the target object group from which the one target object is excluded,
the surrounding object model includes the three-dimensional model of the target object at least one of a position and a pose of which is set based on at least one of the position and the pose of the at least one target object, and
the computing apparatus generates at least a part of the movement path based on a result of an interference determination between the end effector model and the target object model, and the surrounding object model.

### [Supplementary Note H24]

The computing apparatus according to any one of the Supplementary Notes H18 to H23, wherein
the target object image data is acquired by the imaging apparatus imaging the target object group or at least one target object remaining in the target object group from which the one target object is excluded, before the target object is held by the end effector.

### [Supplementary Note H25]

The computing apparatus according to any one of the Supplementary Notes H18 to H24, wherein
the surrounding object includes a container containing the target object group, and
the surrounding object model includes a three-dimensional model of the container.

### [Supplementary Note H26]

The computing apparatus according to the Supplementary Note H25, wherein
each of the plurality of target objects included in the target object group is in the container at an irregular position and with an irregular pose.

### [Supplementary Note H27]

The computing apparatus according to any one of the Supplementary Notes H1 to H26, wherein
at least a part of the movement path includes a path to a releasing target position at which the target object held by the end effector is released from the end effector.

### [Supplementary Note H28]

The computing apparatus according to any one of the Supplementary Notes H1 to H27, wherein
the computing apparatus generates a control signal for controlling the robot based on at least the generated part of the movement path.

### [Supplementary Note H29]

The computing apparatus according to any one of the Supplementary Notes H1 to H28, wherein
the end effector model is a first end effector model,
the target object model is a first target object model,
the surrounding object model is a first surrounding object model,
at least a part of the movement path is a first partial path,
the movement path includes the first partial path, which is a part of the movement path, and a second partial path, which is at least another part of the movement path, and
the computing apparatus:
   generates the first partial path based on the first end effector model, the first target object model, and the first surrounding object model; and
   generates the second partial path based on a second end effector model, which is based on a three-dimensional model of the end effector, a second target object model, which is based on a three-dimensional model of the target object held by the end effector, and a second surrounding object model, which is a three-dimensional model of a surrounding object positioned around the robot.

### [Supplementary Note H30]

The computing apparatus according to the Supplementary Note H29, wherein
at least one of the first target object model and the second target object model is a model that is obtained by expanding at least a part of the three-dimensional model of the target object held by the end effector.

### [Supplementary Note H31]

The computing apparatus according to the Supplementary Note H29 or H30, wherein
the first target object model and the second target object model are different in an expansion amount relative to the three-dimensional model of the target object held by the end effector.

### [Supplementary Note H32]

The computing apparatus according to any one of the Supplementary Notes H29 to H31, wherein
the computing apparatus generates the first partial path and the second partial path based on a path generation condition that is set for each partial path, and
the path generation condition includes an expansion amount of the first target object model relative to the three-dimensional model of the target object held by the end effector and an expansion amount of the second target object model relative to the three-dimensional model of the target object held by the end effector.

### [Supplementary Note H33]

The computing apparatus according to any one of the Supplementary Notes H29 to H32, wherein
the first target object model and the second target object model are different in an increased amount of a volume relative to the three-dimensional model of the target object held by the end effector.

### [Supplementary Note H34]

The computing apparatus according to any one of the Supplementary Notes H29 to H33, wherein
at least one of the first target object model and the second target object model is the three-dimensional model of the target object held by the end effector.

### [Supplementary Note H35]

The computing apparatus according to any one of the Supplementary Notes H29 to H34, wherein
at least one of the first end effector model and the second end effector model is a model that is obtained by expanding at least a part of the three-dimensional model of the end effector.

### [Supplementary Note H35]

The computing apparatus according to any one of the Supplementary Notes H29 to H35, wherein
the first end effector model and the second end effector model are different in an expansion amount relative to the three-dimensional model of the end effector.

### [Supplementary Note H37]

The computing apparatus according to any one of the Supplementary Notes H29 to H36, wherein
the computing apparatus generates the first partial path and the second partial path based on a path generation condition that is set for each partial path, and
the path generation condition includes an expansion amount of the first end effector model relative to the three-dimensional model of the end effector and an expansion amount of the second end effector model relative to the three-dimensional model of the end effector.

### [Supplementary Note H38]

The computing apparatus according to any one of the Supplementary Notes H29 to H37, wherein
the first end effector model and the second end effector model are different in an increased amount of a volume relative to the three-dimensional model of the end effector.

### [Supplementary Note H39]

The computing apparatus according to any one of the Supplementary Notes H29 to H38, wherein
at least one of the first end effector model and the second end effector model is the three-dimensional model of the end effector.

### [Supplementary Note H40]

The computing apparatus according to any one of the Supplementary Notes H29 to H39, wherein
the first partial path is a path from a holding target position, at which the end effector performs a holding process on the target object, to a first separated position that is separated from the holding target position, and
the second partial path is a path from the first separated position to a second separated position that is further separated from the holding target position.

### [Supplementary Note H41]

The computing apparatus according to any one of the Supplementary Notes H29 to H40, wherein
an imaging apparatus is attached to the robot,
a target object group including a plurality of target objects is positioned in a space including the holding target position,
one target object of the target object group is held by the end effector, and
the computing apparatus:
   generates the first partial path based on target object image data, which is acquired by the imaging apparatus imaging the target object group or at least one target object remaining in the target object group from which the one target object is excluded, the first end effector model, the first target object model, and the first surrounding object model; and
   generates the second partial path based on the second end effector model, the second target object model, and the second surrounding object model.

### [Supplementary Note H42]

The computing apparatus according to the Supplementary Note H41, wherein
the second target object model is a model that is obtained by expanding at least a part of the three-dimensional model of the target object held by the end effector, and
the first target object model and the second target object model are different in an expansion amount relative to the three-dimensional model of the target object held by the end effector.

### [Supplementary Note H43]

The computing apparatus according to the Supplementary Note H41 or H42, wherein
the first target object model is the three-dimensional model of the target object held by the end effector.

### [Supplementary Note H44]

The computing apparatus according to any one of the Supplementary Notes H41 to H43, wherein
the second end effector model is a model that is obtained by expanding at least a part of the three-dimensional model of the end effector, and
the first end effector model and the second end effector model are different in an expansion amount relative to the three-dimensional model of the end effector.

### [Supplementary Note H45]

The computing apparatus according to any one of the Supplementary Notes H41 to H44, wherein
the first end effector model is the three-dimensional model of the end effector.

### [Supplementary Note H46]

The computing apparatus according to any one of the Supplementary Notes H41 to H45, wherein
the target object image data is acquired by the imaging apparatus imaging the target object group or at least one target object remaining in the target object group from which the one target object is excluded, before the target object is held by the end effector.

### [Supplementary Note H47]

The computing apparatus according to any one of the Supplementary Notes H41 to H46, wherein
the computing apparatus generates three-dimensional position data indicating a three-dimensional position of each of a plurality of points of each target object in the target object group or a three-dimensional position of each of a plurality of points of the at least one target object, based on the target object image data, and
the computing apparatus generates the first partial path based on the three-dimensional position data, the first end effector model, the first target object model, and the first surrounding object model.

### [Supplementary Note H48]

The computing apparatus according to the Supplementary Note H47, wherein
the first surrounding object includes the at least one target object remaining in the target object group from which the one target object is excluded,
the first surrounding object model includes a model based on the three-dimensional position data, and
the computing apparatus generates the first partial path based on a result of an interference determination between the first end effector model and the first target object model, and the first surrounding object model.

### [Supplementary Note H49]

The computing apparatus according to the Supplementary Note H48, wherein
the model based on the three-dimensional position data is a point cloud model or a mesh model.

### [Supplementary Note H50]

The computing apparatus according to any one of the Supplementary Notes H41 to H46, wherein
the computing apparatus:
calculates a position and a pose of the at least one target object based on the target object image data; and
generates the first partial path based on the calculated position and pose of the at least one target object, the end effector model, the target object model, and the surrounding object model.

### [Supplementary Note H51]

The computing apparatus according to the Supplementary Note H50, wherein
the first surrounding object includes the at least one target object remaining in the target object group from which the one target object is excluded,
the first surrounding object model includes the three-dimensional model of the target object at least one of a position and a pose of which is set based on the position and the pose of the at least one target object, and
the computing apparatus generates the first partial path based on a result of an interference determination between the first end effector model and the first target object model, and the first surrounding object model.

### [Supplementary Note H52]

The computing apparatus according to any one of the Supplementary Notes H41 to H51, wherein
at least one of the first surrounding object and the second surrounding object includes a container containing the target object group, and
at least one of the first surrounding object model and the second surrounding object model includes a three-dimensional model of the container.

### [Supplementary Note H53]

The computing apparatus according to the Supplementary Note H52, wherein
each of the plurality of target objects included in the target object group is in the container at an irregular position and with an irregular pose.

### [Supplementary Note H54]

The computing apparatus according to the Supplementary Note H52 or H53, wherein
the second partial path is a path from an inside of the container to an outside of the container.

### [Supplementary Note H55]

The path generation method according to any one of the Supplementary Notes H52 to H54, wherein
the first partial path is a path that crosses a side wall of the container.

### [Supplementary Note H56]

The path generation method according to any one of the Supplementary Notes H52 to H55, wherein
the first partial path is a path that passes through a side wall of the container.

### [Supplementary Note H57]

The path generation method according to any one of the Supplementary Notes H52 to H56, wherein
the first partial path is a path from a space adjacent to a side wall of the container inside the container to a space adjacent to the side wall outside the container through a space above the side wall.

### [Supplementary Note H58]

The computing apparatus according to any one of the Supplementary Notes H29 to H57, wherein
the second separated position of the second partial path is a releasing target position at which the target object held by the end effector is released from the end effector.

### [Supplementary Note H59]

The computing apparatus according to any one of the Supplementary Notes H28 to H58, wherein
the computing apparatus outputs a control signal for controlling the robot based on the generated first partial path and second partial path.

### [Supplementary Note H60]

A robot control method that controls the robot based on at least a part of the movement path generated by the computing apparatus according to any one of the Supplementary Notes H1 to H59.

### [Supplementary Note H61]

A transport method that transport the target object held by the end effector based on at least a part of the movement path generated by the computing apparatus according to any one of the Supplementary Notes H1 to H59.

### [Supplementary Note H62]

A robot control method that controls the robot based on the first partial path and the second partial path generated by the computing apparatus according to any one of the Supplementary Notes H29 to H59.

### [Supplementary Note H63]

A transport method that transport the target object held by the end effector based on the first partial path and the second partial path generated by the computing apparatus according to any one of the Supplementary Notes H29 to H59.

### [Supplementary Note H64]

An imaging system including:
the computing apparatus according to any one of the Supplementary Notes H1 to H59; and
an imaging apparatus attached to the robot.

### [Supplementary Note I1]

A computing apparatus that controls a robot, wherein
the computing apparatus:
generates a partial model, which is a three-dimensional model of at least a part of a target object, from an original model, which is a three-dimensional model of the target object on which an end effector performs a predetermined process;
calculates at least one of a position and a pose of the target object by performing a matching processing based on the partial model and target object image data that is acquired by an imaging apparatus imaging the target object; and
generates the control signal based on a calculated result of at least one of the position and the pose of the target object.

### [Supplementary Note I2]

The computing apparatus according to the Supplementary Note I1, wherein
the computing apparatus generates the partial model by extracting a part of the original model as the partial model from the original model.

### [Supplementary Note I3]

The computing apparatus according to the Supplementary Note I1 or I2, wherein
the computing apparatus generates the partial model from the original model based on model generation information related to an instruction from a user for generating the partial model.

### [Supplementary Note I4]

The computing apparatus according to the Supplementary Note I3, wherein
the model generation information includes information related to an instruction for designating a part of the original model as a model part that should be included in the partial model.

### [Supplementary Note I5]

The computing apparatus according to the Supplementary Note I3 or I4, wherein
the model generation information includes information related to an instruction for designating a part of the original model as a model portion that should not be included in the partial model.

### [Supplementary Note I6]

The computing apparatus according to any one of the Supplementary Notes I1 to I5, wherein
the computing apparatus generates a plurality of partial models that are different from each other.

### [Supplementary Note I7]

The computing apparatus according to the Supplementary Note I6, wherein
the plurality of partial models include one partial model, which is a three-dimensional model of a first part of the target object, and another partial model, which is a three-dimensional model of a second part of the target object that is at least partially different from the first part.

### [Supplementary Note I8]

The computing apparatus according to the Supplementary Note I6 or I7, wherein
the computing apparatus generates the plurality of partial models to each of which a priority is assigned.

### [Supplementary Note I9]

The computing apparatus according to the Supplementary Note I8, wherein
the priority includes a priority to use the partial model for the matching processing.

### [Supplementary Note I10]

The computing apparatus according to the Supplementary Note I8 or I9, wherein
the computing apparatus assigns the priority to each of the plurality of partial models based on priority information related to an instruction from a user for assigning the priority to each of the plurality of partial models.

### [Supplementary Note I11]

The computing apparatus according to any one of the Supplementary Notes I8 to I10, wherein
the computing apparatus calculates at least one of the position and the pose of the target object by performing the matching processing using a first partial model, to which a first priority is assigned, of the plurality of partial models, and a matching processing using a second partial model, to which a second priority different from the first priority is assigned, of the plurality of partial models.

### [Supplementary Note I12]

The computing apparatus according to any one of the Supplementary Notes I8 to I11, wherein
the computing apparatus calculates at least one of the position and the pose of the target object by performing the matching processing using a second partial model, to which a second priority different from a first priority is assigned, of the plurality of partial models in a case where a result of the matching processing using a first partial model, to which the first priority is assigned, of the plurality of partial models is unsuccessful.

### [Supplementary Note I13]

The computing apparatus according to the Supplementary Note I11 or I12, wherein
the computing apparatus performs the matching processing using the second partial model in a case where the number of target objects whose result of the matching processing using the first partial model is successful is smaller than an allowable lower limit value.

### [Supplementary Note I14]

The computing apparatus according to any one of the Supplementary Notes I11 to I13, wherein
the computing apparatus does not perform the matching processing using the second partial model in a case where the number of target objects whose result of the matching processing using the first partial model is successful is not smaller than an allowable lower limit value.

### [Supplementary Note I15]

The computing apparatus according to any one of the Supplementary Notes I11 to I14, wherein
a plurality of target objects are positioned, and
the computing apparatus selects one target object on which the end effector should perform the predetermined process from the plurality of target objects, based on the result of the matching processing using the first partial model and the result of the matching processing using the second partial model, and generates the control signal based on the calculated result of at least one of the position and the pose of the one target object.

### [Supplementary Note I16]

The computing apparatus according to any one of the Supplementary Notes I11 to I15, wherein
the computing apparatus selects, as one target object on which the end effector should perform the predetermined process, one target object of the target object whose result of the matching processing using the first partial model is successful and the target object whose result of the matching processing using the second partial model is successful and whose result of the matching processing using the first partial model is unsuccessful, and generates the control signal based on the calculated result of at least one of the position and the pose of the one target object.

### [Supplementary Note I17]

The computing apparatus according to any one of the Supplementary Notes I11 to I16, wherein
the first priority is higher than the second priority.

### [Supplementary Note I18]

The computing apparatus according to any one of the Supplementary Notes I1 to I17, wherein
the original model is the three-dimensional model of the target object.

### [Supplementary Note I19]

The computing apparatus according to any one of the Supplementary Notes I1 to I18, wherein
the end effector is attached to the robot.

### [Supplementary Note I20]

The computing apparatus according to the Supplementary Note I19, wherein
the control signal is a signal for controlling the robot so that the end effector approaches the target object.

### [Supplementary Note I21]

The computing apparatus according to any one of the Supplementary Notes I1 to I20, wherein
the imaging apparatus is attached to the robot.

### [Supplementary Note I22]

A robot control method that controls a robot, wherein
the robot control method includes:
generating a partial model, which is a three-dimensional model of at least a part of a target object, from an original model, which is a three-dimensional model of the target object on which an end effector performs a predetermined process;
calculating at least one of a position and a pose of the target object by performing a matching processing based on the partial model and target object image data that is acquired by an imaging apparatus imaging the target object; and
generating the control signal based on a calculated result of at least one of the position and the pose of the target object.

### [Supplementary Note I23]

The robot control method according to the Supplementary Note I22, wherein
the generating the partial model includes generating the partial model by extracting a part of the original model as the partial model from the original model.

### [Supplementary Note I24]

The robot control method according to the Supplementary Note I22 or I23, wherein
the generating the partial model includes generating the partial model from the original model based on model generation information related to an instruction from a user for generating the partial model.

### [Supplementary Note I25]

The robot control method according to the Supplementary Note I24, wherein
the model generation information includes information related to an instruction for designating a part of the original model as a model part that should be included in the partial model.

### [Supplementary Note I26]

The robot control method according to the Supplementary Note I24 or I25, wherein
the model generation information includes information related to an instruction for designating a part of the original model as a model part that should not be included in the partial model.

### [Supplementary Note I27]

The robot control method according to any one of the Supplementary Notes I22 to I26, wherein
the generating the partial model includes generating a plurality of partial models that are different from each other.

### [Supplementary Note I28]

The robot control method according to the Supplementary Note I27, wherein
the plurality of partial models include one partial model, which is a three-dimensional model of a first part of the target object, and another partial model, which is a three-dimensional model of a second part of the target object that is at least partially different from the first part.

### [Supplementary Note I29]

The robot control method according to the Supplementary Note I27 or I28, wherein
the generating the partial model includes generating the plurality of partial models to each of which a priority is assigned.

### [Supplementary Note I30]

The robot control method according to the Supplementary Note I29, wherein
the priority includes a priority to use the partial model for the matching processing.

### [Supplementary Note I31]

The robot control method according to the Supplementary Note I29 or I30, wherein
the robot control method includes assigning the priority to each of the plurality of partial models based on priority information related to an instruction from a user for assigning the priority to each of the plurality of partial models.

### [Supplementary Note I32]

The robot control method according to any one of the Supplementary Notes I29 to I31, wherein
the calculating the at least one of the position and the pose of the target object is calculating at least one of the position and the pose of the target object by performing the matching processing using a first partial model, to which a first priority is assigned, of the plurality of partial models, and a matching processing using a second partial model, to which a second priority different from the first priority is assigned, of the plurality of partial models.

### [Supplementary Note I33]

The robot control method according to any one of the Supplementary Notes I29 to I32, wherein
the calculating the at least one of the position and the pose of the target object includes calculating at least one of the position and the pose of the target object by performing the matching processing using a second partial model, to which a second priority different from a first priority is assigned, of the plurality of partial models in a case where a result of the matching processing using a first partial model, to which a first priority is assigned, of the plurality of partial models is unsuccessful.

### [Supplementary Note I34]

The robot control method according to the Supplementary Note I32 or I33, wherein
the calculating the at least one of the position and the pose of the target object includes performing the matching processing using the second partial model in a case where the number of target objects whose result of the matching processing using the first partial model is successful is smaller than an allowable lower limit value.

### [Supplementary Note I35]

The robot control method according to any one of the Supplementary Notes I32 to I34, wherein
the calculating the at least one of the position and the pose of the target object includes not performing the matching processing using the second partial model in a case where the number of target objects whose result of the matching processing using the first partial model is successful is not smaller than an allowable lower limit value.

### [Supplementary Note I36]

The robot control method according to any one of the Supplementary Notes I32 to 35, wherein
a plurality of the target objects are positioned, and
the generating the control signal includes selecting one target object on which the end effector should perform the predetermined process from the plurality of target objects, based on the result of the matching processing using the first partial model and the result of the matching processing using the second partial model, and generating the control signal based on the calculated result of at least one of the position and the pose of the one target object.

### [Supplementary Note I37]

The robot control method according to any one of the Supplementary Notes I32 to I36, wherein
the generating the control signal includes selecting, as one target object on which the end effector should perform the predetermined process, one target object of the target object whose result of the matching processing using the first partial model is successful and the target object whose result of the matching processing using the second partial model is successful and whose result of the matching processing using the first partial model is unsuccessful, and generates the control signal based on the calculated result of at least one of the position and the pose of the one target object.

### [Supplementary Note I38]

The robot control method according to any one of the Supplementary Notes I32 to I37, wherein
the first priority is higher than the second priority.

### [Supplementary Note I39]

The robot control method according to any one of the Supplementary Notes I22 to I38, wherein
the original model is the three-dimensional model of the target object.

### [Supplementary Note I40]

The robot control method according to any one of the Supplementary Notes I22 to I39, wherein
the end effector is attached to the robot.

### [Supplementary Note I41]

The robot control method according to the Supplementary Note I40, wherein
the control signal is a signal for controlling the robot so that the end effector approaches the target object.

### [Supplementary Note I42]

The robot control method according to any one of the Supplementary Notes I22 to I41, wherein
the imaging apparatus is attached to the robot.

### [Supplementary Note I43]

A computer program that allows a computer to execute the robot control method according to any one of the Supplementary Notes I22 to 141.

### [Supplementary Note I44]

A recording medium on which the computer program according to the Supplementary Note I43 is recorded.

### [Supplementary Note I45]

A robot system including:
the computing apparatus according to any one of the Supplementary Notes I1 to I22; and
a robot to which the end effector is attachable.

### [Supplementary Note I46]

The robot system according to the Supplementary Note I45 further including the end effector attached to the robot.

### [Supplementary Note I47]

An imaging system including:
the computing apparatus according to any one of the Supplementary Notes I1 to I22; and
the imaging apparatus.

### [Supplementary Note J1]

A computing apparatus includes:
a computing unit that performs a matching processing based on a target object model, which is a model of a target object that is a candidate on which an end effector performs a process, and image data, which is acquired by imaging at least a plurality of target objects and which includes the plurality of the target objects;
a signal generation unit that generates a display signal for displaying, on a display apparatus, a process performed object, which is at least one of the plurality of target objects and on which the end effector performs the process, and at least other one of the plurality of target objects in different display aspects, based on a result of the matching processing; and
an output unit that outputs the display signal generated by the signal generation unit to the display apparatus.

### [Supplementary Note J2]

The computing apparatus according to the Supplementary Note J1, wherein
the signal generation unit generates the display signal for displaying, on the display apparatus, the process performed object and the at least other one in the different display aspects, together with three-dimensional position information of each of a plurality of points of the process performed object.

### [Supplementary Note J3]

The computing apparatus according to the Supplementary Note J1 or J2, wherein
the signal generation unit generates the display signal for displaying, on the display apparatus, the process performed object and the at least other one in the different display aspects, together with three-dimensional position information of each of a plurality of points of the process performed object and three-dimensional position information of each of a plurality of points of the at least the other one.

### [Supplementary Note J4]

The computing apparatus according to the Supplementary Note J1 or J2, wherein
the three-dimensional position information is point cloud information, and
the signal generation unit generates the display signal for displaying, on the display apparatus, a model of the process performed object and a model of the at least other one in different display aspects, together with the three-dimensional position information.

### [Supplementary Note J5] J

The computing apparatus according to any one of the Supplementary Notes J1 to J4, wherein
the target object model is a three-dimensional model of the target object,
the computing unit performs the matching processing based on the target object model and three-dimensional position data that is generated from the image data and that indicates a three-dimensional position of each of a plurality of points of each of the plurality of target objects, and
the three-dimensional position information is information based on the three-dimensional position data.

### [Supplementary Note J6]

The computing apparatus according to any one of the Supplementary Notes J1 to J5, wherein
the target object model is a three-dimensional model of the target object, and
the computing unit performs the matching processing based on the target object model and three-dimensional position data that is generated from the image data and that indicates a three-dimensional position of each of a plurality of points of each of the plurality of target objects.

### [Supplementary Note J7]

The computing apparatus according to any one of the Supplementary Notes J1 to J6, wherein
the computing unit selects the process performed object from the plurality of target objects based on the result of the matching processing, and generates the display signal for displaying, on the display apparatus, the selected process performed object and the at least other one in the different display aspects.

### [Supplementary Note J8]

The computing apparatus according to any one of the Supplementary Notes J1 to J6, wherein
the computing unit generates the display signal based on a result of a determination whether or not at least a part of the end effector interferes with at least a part of an object, and the result of the matching processing.

### [Supplementary Note J9]

The computing apparatus according to any one of the Supplementary Notes J1 to J8, wherein
the computing unit selects the process performed object from the plurality of target objects based on the result of the determination result and the result of the matching processing, and generates the display signal for displaying, on the display apparatus, the selected process performed object and the at least other one in the different display aspects.

### [Supplementary Note J10]

The computing apparatus according to any one of the Supplementary Notes J1 to J9, wherein
the signal generation unit generates the display signal for displaying, on the display apparatus, the process performed object and the at least other one in the different display aspects, together with an end effector model that is a model of the end effector.

### [Supplementary Note J11]

The computing apparatus according to any one of the Supplementary Notes J1 to J10, wherein
the end effector is attached to a robot, and
the signal generation unit generates the display signal for displaying, on the display apparatus, the process performed object and the at least other one in the different display aspects, together with a surrounding object model, which is a model of a surrounding object that is different from the target object and that is positioned around the robot.

### [Supplementary Note J12]

The computing apparatus according to any one of the Supplementary Notes J1 to J11, wherein
the display aspect includes a display color.

### [Supplementary Note J13]

The computing apparatus according to any one of the Supplementary Notes J1 to J12, wherein
the process performed object is one target object of the plurality of target objects.

### [Supplementary Note J14]

A display method includes:
performing a matching processing based on a target object model, which is a model of a target object that is a candidate on which an end effector performs a process, and image data, which is acquired by imaging at least a plurality of target objects and which includes the plurality of the target objects;
generating a display signal for displaying, on a display apparatus, a process performed object, which is at least one of the plurality of target objects and on which the end effector performs the process, and at least other one of the plurality of target objects in different display aspects, based on a result of the matching processing; and
outputting the generated display signal to the display apparatus.

### [Supplementary Note J15]

The display method according to the Supplementary Note J14, wherein
the generating the display signal includes generating the display signal for displaying, on the display apparatus, the process performed object and the at least other one in the different display aspects, together with three-dimensional position information of each of a plurality of points of the process performed object.

### [Supplementary Note J16]

The display method according to the Supplementary Note J14 or J15, wherein
the generating the display signal includes generating the display signal for displaying, on the display apparatus, the process performed object and the at least other one in the different display aspects, together with three-dimensional position information of each of a plurality of points of the process performed object and three-dimensional position information of each of a plurality of points of the at least the other one.

### [Supplementary Note J17]

The display method according to the Supplementary Note J14 or J15, wherein
the three-dimensional position information is point cloud information, and
the generating the display signal includes generating the display signal for displaying, on the display apparatus, a model of the process performed object and a model of the at least other one in different display aspects, together with the three-dimensional position information.

### [Supplementary Note J18]

The display method according to any one of the Supplementary Notes J14 to J17, wherein
the target object model is a three-dimensional model of the target object,
the performing the matching processing includes performing the matching processing based on the target object model and three-dimensional position data that is generated from the image data and that indicates a three-dimensional position of each of a plurality of points of each of the plurality of target objects, and
the three-dimensional position information is information based on the three-dimensional position data.

### [Supplementary Note J19]

The display method according to any one of the Supplementary Notes J14 to J18, wherein
the target object model is a three-dimensional model of the target object, and
the performing the matching processing includes performing the matching processing based on the target object model and three-dimensional position data that is generated from the image data and that indicates a three-dimensional position of each of a plurality of points of each of the plurality of target objects.

### [Supplementary Note J20]

The display method according to any one of the Supplementary Notes J14 to J19, wherein
the generating the display signal includes selecting the process performed object from the plurality of target objects based on the result of the matching processing, and generates the display signal for displaying, on the display apparatus, the selected process performed object and the at least other one in the different display aspects.

### [Supplementary Note J21]

The display method according to any one of the Supplementary Notes J14 to J19, wherein
the generating the display signal includes generating the display signal based on a result of a determination whether or not at least a part of the end effector interferes with at least a part of an object, and the result of the matching processing.

### [Supplementary Note J22]

The display method according to any one of the Supplementary Notes J14 to J21, wherein
the generating the display signal includes selecting the process performed object from the plurality of target objects based on the result of the determination result and the result of the matching processing, and generating the display signal for displaying, on the display apparatus, the selected process performed object and the at least other one in the different display aspects.

### [Supplementary Note J23]

The display method according to any one of the Supplementary Notes J14 to J22, wherein
the generating the display signal includes generating the display signal for displaying, on the display apparatus, the process performed object and the at least other one in the different display aspects, together with an end effector model that is a model of the end effector.

### [Supplementary Note J24]

The display method according to any one of the Supplementary Notes J14 to J23, wherein
the end effector is attached to a robot, and
the generating the display signal includes generating the display signal for displaying, on the display apparatus, the process performed object and the at least other one in the different display aspects, together with a surrounding object model, which is a model of a surrounding object that is different from the target object and that is positioned around the robot.

### [Supplementary Note J25]

The display method according to any one of the Supplementary Notes J14 to J24, wherein
the display aspect includes a display color.

### [Supplementary Note J26]

The display method according to any one of the Supplementary Notes J14 to J25, wherein
the process performed object is one target object of the plurality of target objects.

### [Supplementary Note J27]

A computer program that allows a computer to execute the display method according to any one of the Supplementary Notes J14 to J26.

### [Supplementary Note J28]

A recording medium on which the computer program according to the Supplementary Note J27 is recorded.

### [Supplementary Note J29]

A robot system including:
the computing apparatus according to any one of the Supplementary Notes J1 to J13; and

a robot to which the end effector is attachable.

### [Supplementary Note J30]

The robot system according to the Supplementary Note J29 further including the end effector attached to the robot.

### [Supplementary Note J31]

An imaging system including:
the computing apparatus according to any one of the Supplementary Notes J1 to J13; and
an imaging apparatus attached to the robot.

### [Supplementary Note K1]

A computing apparatus that generates a movement path of a movement point moving due to a driving of a robot to which an end effector for performing a process on a target object is attached, wherein
the computing apparatus generates the movement path based on a plurality of image data, which is acquired by an imaging apparatus imaging at least one object positioned around the target object a plurality of times, and an end effector model, which is a model of the end effector.

### [Supplementary Note K2]

The computing apparatus according to the Supplementary Note K1, wherein
the at least one object is a plurality of objects positioned around the target object.

### [Supplementary Note K3]

The computing apparatus according to the Supplementary Note K1 or K2, wherein
the plurality of image data are acquired by the imaging apparatus imaging the target object and the at least one object a plurality of times.

### [Supplementary Note K4]

The computing apparatus according to any one of the Supplementary Notes K1 to K3, wherein
the imaging apparatus includes a stereo camera including two monocular cameras, and
the plurality of image data are a plurality of stereo image data.

### [Supplementary Note K5]

The computing apparatus according to any one of the Supplementary Notes K1 to K4, wherein
the imaging apparatus includes a projection apparatus that is configured to emit projection light, and
the plurality of image data include: at least one image data that is acquired by the imaging apparatus imaging, at least once, the at least one object on which the projection light having a first light intensity is irradiated from the projection apparatus; and at least one image data that is acquired by the imaging apparatus imaging, at least once, the at least one object on which the projection light having a second light intensity,

### [Supplementary Note K6]

The computing apparatus according to any one of the Supplementary Notes K1 to K5, wherein
the plurality of image data include: at least one image data that is acquired by the imaging apparatus imaging, at least once, the at least one object with a first exposure time; and at least one image data that is acquired by the imaging apparatus imaging, at least once, the at least one object with a second exposure time different from the first exposure time.

### [Supplementary Note K7]

The computing apparatus according to any one of the Supplementary Notes K1 to K6, wherein
the computing apparatus generates the movement path based on respective three-dimensional position data, which indicating a three-dimensional position of each of a plurality of points of at least a part of the at least one object that is calculated based on each image data of the plurality of image data, and the end effector model.

### [Supplementary Note K8]

The computing apparatus according to any one of the Supplementary Notes K1 to K7, wherein
the computing apparatus generates the movement path based on combined three-dimensional position data, which is generated by combining respective three-dimensional position data, which indicating a three-dimensional position of each of a plurality of points of at least a part of the at least one object that is calculated based on each image data of the plurality of image data, and the end effector model.

### [Supplementary Note K9]

The computing apparatus according to any one of the Supplementary Notes K1 to K8, wherein
the computing apparatus generates the movement path based on at least one of a position and a pose of the target object, the plurality of image data, and the end effector model.

### [Supplementary Note K10]

The computing apparatus according to any one of the Supplementary Notes K1 to K9, wherein
the computing apparatus determines whether or not the at least one object interferes with the end effector based on at least one of a position and a pose of the target object, the plurality of image data, and the end effector model, and generates the movement path based on a result of an interference determination.

### [Supplementary Note K11]

The computing apparatus according to any one of the Supplementary Notes K1 to K10, wherein
the plurality of image data are a first image data group,
the computing apparatus:
   determines whether or not the at least one object interferes with the end effector based on at least one of a position and a pose of the target object, which is calculated based on at least one second image data including the target object, and the first image data group; and
   generates the movement path based on a of an interference determination.

### [Supplementary Note K12]

The computing apparatus according to the Supplementary Note K11, wherein
the plurality of image data are acquired by the imaging apparatus imaging the target object and the at least one object a plurality of times, and
the at least one second image data includes at least one image data of the first image data group.

### [Supplementary Note K13]

The computing apparatus according to the Supplementary Note K11 or K12, wherein
the at least one second image data is data that is different from the first image data group and includes at least one image data that is acquired by the imaging apparatus imaging the target object at least once.

### [Supplementary Note K14]

The computing apparatus according to any one of the Supplementary Notes K1 to K13, wherein
the plurality of image data is a first image data group,
the computing apparatus determines whether or not a positional relationship between the imaging apparatus and at least one of the target object and the at least one object should be changed based on third image data including at least one of the target object and the at least one object.

### [Supplementary Note K15]

The computing apparatus according to the Supplementary Note K14, wherein
in a case where it is determined that the positional relationship should be changed, the computing apparatus generates the movement path based on the first image data group, which is acquired by the imaging apparatus imaging the at least one object a plurality of times after the positional relationship is changed, and the end effector model.

### [Supplementary Note K16]

The computing apparatus according to the Supplementary Note K14 or K15, wherein
the third image data is image data that is acquired by the imaging apparatus imaging at least one of the target object and the at least one object before the positional relationship is changed.

### [Supplementary Note K17]

The computing apparatus according to any one of the Supplementary Notes K14 to K16, wherein
the imaging apparatus includes a monocular camera, and
the third image data is image data that is acquired by the monocular camera imaging at least one of the target object and the at least one object.

### [Supplementary Note K18]

The computing apparatus according to any one of the Supplementary Notes K14 to K17, wherein
the imaging apparatus includes a projection apparatus that is configured to emit projection light, and
the third image data is image data that is acquired by the imaging apparatus imaging at least one of the target object and the at least one object, on which the projection light is irradiated from the projection apparatus, before the positional relationship is changed.

### [Supplementary Note K19]

The computing apparatus according to any one of the Supplementary Notes K14 to K18, wherein
the third image data is one image data of the plurality of image data.

### [Supplementary Note K20]

The computing apparatus according to the Supplementary Note K19, wherein
the plurality of image data are acquired by the imaging apparatus imaging the target object and the at least one object a plurality of times before the positional relationship is changed.

### [Supplementary Note K21]

The computing apparatus according to the Supplementary Note K19 or K20, wherein
the imaging apparatus includes a projection apparatus that is configured to emit projection light,
the plurality of image data include: at least one image data that is acquired by the imaging apparatus imaging, at least once, at least one of the target object and the at least one object on which the projection light having a first light intensity is irradiated from the projection apparatus; and at least one image data that is acquired by the imaging apparatus imaging, at least once, at least one of the target object and the at least one object on which the projection light having a second light intensity higher than the first light intensity is irradiated from the projection apparatus, before the positional relationship is changed, and
the third image data is image data that is acquired by the imaging apparatus imaging at least one of the target object and the at least one object on which the projection light having the first light intensity is irradiated from the projection apparatus, before the positional relationship is changed.

### [Supplementary Note K22]

The computing apparatus according to any one of the Supplementary Notes K14 to K21, wherein
the computing apparatus determines whether or not the positional relationship should be changed based on brightness values of a plurality of pixels included in a third image indicated by the third image data.

### [Supplementary Note K23]

The computing apparatus according to the Supplementary Note K22, wherein
the computing apparatus determines whether or not the positional relationship should be changed based on brightness values of a plurality of pixels included in an area, which includes at least one of the target object and the at least one object, of the third image.

### [Supplementary Note K24]

The computing apparatus according to the Supplementary Note K23, wherein
the computing apparatus determines whether or not the positional relationship should be changed based on the number of pixels, which have brightness values falling outside a threshold value, of the plurality of pixels included in the area.

### [Supplementary Note K25]

The computing apparatus according to the Supplementary Note K23 or K24, wherein
the computing apparatus determines whether or not the positional relationship should be changed based on the number of pixels, which have brightness values higher than a threshold value, of the plurality of pixels included in the area.

### [Supplementary Note K26]

The computing apparatus according to any one of the Supplementary Notes K1 to K25, wherein
the computing apparatus determines whether or not the imaging apparatus should image the at least one object to acquire the plurality of image data, based on image data acquired by the imaging apparatus imaging the target object before the imaging apparatus images the at least one object a plurality of times to acquire the plurality of image data.

### [Supplementary Note K27]

The computing apparatus according to the Supplementary Note K13, wherein
the computing apparatus determines whether or not the imaging apparatus should image the at least one object a plurality of times to acquire the first image data group, based on the second image data acquired by the imaging apparatus imaging the target object at least once before the imaging apparatus images the at least one object a plurality of times to acquire the first image data group.

### [Supplementary Note K28]

The computing apparatus according to the Supplementary Note K27, wherein
the computing apparatus determines whether or not the imaging apparatus should image the at least one object a plurality of times to acquire the first image data group, based on a result of a matching processing based on a target object model that is a model of the target object and the second image data.

### [Supplementary Note K29]

The computing apparatus according to the Supplementary Note K27 or K28, wherein the imaging apparatus includes a stereo camera including two monocular cameras,
the second image data is stereo image data, and
the computing apparatus determines whether or not the imaging apparatus should image the at least one object a plurality of times to acquire the first image data group, based on a size of an area, in which a three-dimensional position cannot be calculated based on the stereo image data, of the target object.

### [Supplementary Note K30]

The computing apparatus according to any one of the Supplementary Notes K27 to K29, wherein
in a case where it is determined that the imaging apparatus should image the at least one object a plurality of times to acquire the first image data group, the computing apparatus generates the movement path based on the first image data group generated by the imaging apparatus imaging the at least one object a plurality of times, and the end effector model.

### [Supplementary Note K31]

The computing apparatus according to any one of the Supplementary Notes K27 to K30, wherein
the second image data is acquired by the imaging apparatus imaging the target object and the at least one object at least once, and
in a case where it is determined that the imaging apparatus is not to image the at least one object a plurality of times to acquire the first image data group, the computing apparatus generates the movement path based on the second image data and the end effector model.

### [Supplementary Note K32]

The computing apparatus according to any one of the Supplementary Notes K14 to K25, wherein
the computing apparatus generates a control signal for driving the robot so as to change the positional relationship in a case where it is determined that the positional relationship should be changed as a result of a determination whether or not the positional relationship should be changed.

### [Supplementary Note K33]

The computing apparatus according to the Supplementary Note K5, K18, or K21, wherein
the projection light is pattern light.

### [Supplementary Note K34]

The computing apparatus according to any one of the Supplementary Notes K1 to K33, wherein
the movement path is a path to a process target position at which the end effector performs the process on the target object.

### [Supplementary Note K35]

The computing apparatus according to any one of the Supplementary Notes K1 to K34, wherein
the at least one object includes an object that is a candidate on which the end effector performs the process.

### [Supplementary Note K36]

The computing apparatus according to any one of the Supplementary Notes K1 to K35, wherein
the imaging apparatus includes: a monocular camera; and a stereo camera having two monocular cameras that are different from the monocular camera.

### [Supplementary Note K37]

The computing apparatus according to any one of the Supplementary Notes K1 to K35, wherein
the imaging apparatus includes a stereo camera including two monocular cameras.

### [Supplementary Note K38]

The computing apparatus according to any one of the Supplementary Notes K1 to K37, wherein
the imaging apparatus is attached to the robot.

### [Supplementary Note K39]

The computing apparatus according to the Supplementary Note K38, wherein
the imaging apparatus moves due to a driving of the robot.

### [Supplementary Note K40]

The computing apparatus according to any one of the Supplementary Notes K1 to K37, wherein
the imaging apparatus is attached to a member different from the robot.

### [Supplementary Note K41]

The computing apparatus according to the Supplementary Note K40, wherein
the imaging apparatus does not move due to a driving of the robot.

### [Supplementary Note K42]

The computing apparatus according to any one of the Supplementary Notes K1 to K41, wherein
the computing apparatus generates a control signal for controlling the robot based on the generated movement path.

### [Supplementary Note K43]

A path generation method that generates a movement path of a movement point moving due to a driving of a robot to which an end effector for performing a process on a target object is attached, wherein
the movement path generation method generates the movement path based on a plurality of image data, which is acquired by an imaging apparatus imaging at least one object positioned around the target object a plurality of times, and an end effector model, which is a model of the end effector.

### [Supplementary Note K44]

The path generation method according to the Supplementary Note K43, wherein
the at least one object is a plurality of objects positioned around the target object.

### [Supplementary Note K45]

The path generation method according to the Supplementary Note K43 or K44, wherein
the plurality of image data are acquired by the imaging apparatus imaging the target object and the at least one object a plurality of times.

### [Supplementary Note K46]

The path generation method according to any one of the Supplementary Notes K43 to K45, wherein
the imaging apparatus includes a stereo camera including two monocular cameras, and
the plurality of image data are a plurality of stereo image data.

### [Supplementary Note K47]

The path generation method according to any one of the Supplementary Notes K43 to K46, wherein
the imaging apparatus includes a projection apparatus that is configured to emit projection light, and
the plurality of image data include: at least one image data that is acquired by the imaging apparatus imaging, at least once, the at least one object on which the projection light having a first light intensity is irradiated from the projection apparatus; and at least one image data that is acquired by the imaging apparatus imaging, at least once, the at least one object on which the projection light having a second light intensity,

### [Supplementary Note K48]

The path generation method according to any one of the Supplementary Notes K43 to K47, wherein
the plurality of image data include: at least one image data that is acquired by the imaging apparatus imaging, at least once, the at least one object with a first exposure time; and at least one image data that is acquired by the imaging apparatus imaging, at least once, the at least one object with a second exposure time different from the first exposure time.

### [Supplementary Note K49]

The path generation method according to any one of the Supplementary Notes K43 to K48, wherein
the path generation method generates the movement path based on respective three-dimensional position data, which indicating a three-dimensional position of each of a plurality of points of at least a part of the at least one object that is calculated based on each image data of the plurality of image data, and the end effector model.

### [Supplementary Note K50]

The path generation method according to any one of the Supplementary Notes K43 to K49, wherein
the path generation method generates the movement path based on combined three-dimensional position data, which is generated by combining respective three-dimensional position data, which indicating a three-dimensional position of each of a plurality of points of at least a part of the at least one object that is calculated based on each image data of the plurality of image data, and the end effector model.

### [Supplementary Note K51]

The path generation method according to any one of the Supplementary Notes K43 to K50, wherein
the path generation method generates the movement path based on at least one of a position and a pose of the target object, the plurality of image data, and the end effector model.

### [Supplementary Note K52]

The path generation method according to any one of the Supplementary Notes K43 to K51, wherein
the path generation method determines whether or not the at least one object interferes with the end effector based on at least one of a position and a pose of the target object, the plurality of image data, and the end effector model, and generates the movement path based on a result of an interference determination.

### [Supplementary Note K53]

The path generation method according to any one of the Supplementary Notes K43 to K52, wherein
the plurality of image data are a first image data group,
the path generation method:
   determines whether or not the at least one object interferes with the end effector based on at least one of a position and a pose of the target object, which is calculated based on at least one second image data including the target object, and the first image data group; and
   generates the movement path based on a of an interference determination.

### [Supplementary Note K54]

The path generation method according to the Supplementary Note K53, wherein
the plurality of image data are acquired by the imaging apparatus imaging the target object and the at least one object a plurality of times, and
the at least one second image data includes at least one image data of the first image data group.

### [Supplementary Note K55]

The path generation method according to the Supplementary Note K53 or K54, wherein
the at least one second image data is data that is different from the first image data group and includes at least one image data that is acquired by the imaging apparatus imaging the target object at least once.

### [Supplementary Note K56]

The path generation method according to any one of the Supplementary Notes K43 to K55, wherein
the plurality of image data is a first image data group,
the path generation method determines whether or not a positional relationship between the imaging apparatus and at least one of the target object and the at least one object should be changed based on third image data including at least one of the target object and the at least one object.

### [Supplementary Note K57]

The path generation method according to the Supplementary Note K56, wherein
in a case where it is determined that the positional relationship should be changed, the path generation method generates the movement path based on the first image data group, which is acquired by the imaging apparatus imaging the at least one object a plurality of times after the positional relationship is changed, and the end effector model.

### [Supplementary Note K58]

The path generation method according to the Supplementary Note K56 or K57, wherein
the third image data is image data that is acquired by the imaging apparatus imaging at least one of the target object and the at least one object before the positional relationship is changed.

### [Supplementary Note K59]

The path generation method according to any one of the Supplementary Notes K56 to K58, wherein
the imaging apparatus includes a monocular camera, and
the third image data is image data that is acquired by the monocular camera imaging at least one of the target object and the at least one object.

### [Supplementary Note K60]

The path generation method according to any one of the Supplementary Notes K56 to K59, wherein
the imaging apparatus includes a projection apparatus that is configured to emit projection light, and
the third image data is image data that is acquired by the imaging apparatus imaging at least one of the target object and the at least one object, on which the projection light is irradiated from the projection apparatus, before the positional relationship is changed.

### [Supplementary Note K61]

The path generation method according to any one of the Supplementary Notes K56 to K60, wherein
the third image data is one image data of the plurality of image data.

### [Supplementary Note K62]

The path generation method according to the Supplementary Note K61, wherein
the plurality of image data are acquired by the imaging apparatus imaging the target object and the at least one object a plurality of times before the positional relationship is changed.

### [Supplementary Note K63]

The path generation method according to the Supplementary Note K61 or K62, wherein
the imaging apparatus includes a projection apparatus that is configured to emit projection light,
the plurality of image data include: at least one image data that is acquired by the imaging apparatus imaging, at least once, at least one of the target object and the at least one object on which the projection light having a first light intensity is irradiated from the projection apparatus; and at least one image data that is acquired by the imaging apparatus imaging, at least once, at least one of the target object and the at least one object on which the projection light having a second light intensity higher than the first light intensity is irradiated from the projection apparatus, before the positional relationship is changed, and
the third image data is image data that is acquired by the imaging apparatus imaging at least one of the target object and the at least one object on which the projection light having the first light intensity is irradiated from the projection apparatus, before the positional relationship is changed.

### [Supplementary Note K64]

The path generation method according to any one of the Supplementary Notes K56 to K63, wherein
the path generation method determines whether or not the positional relationship should be changed based on brightness values of a plurality of pixels included in a third image indicated by the third image data.

### [Supplementary Note K65]

The path generation method according to the Supplementary Note K64, wherein
the path generation method determines whether or not the positional relationship should be changed based on brightness values of a plurality of pixels included in an area, which includes at least one of the target object and the at least one object, of the third image.

### [Supplementary Note K66]

The path generation method according to the Supplementary Note K65, wherein
the path generation method determines whether or not the positional relationship should be changed based on the number of pixels, which have brightness values falling outside a threshold value, of the plurality of pixels included in the area.

### [Supplementary Note K67]

The path generation method according to the Supplementary Note K65 or K66, wherein
the path generation method determines whether or not the positional relationship should be changed based on the number of pixels, which have brightness values higher than a threshold value, of the plurality of pixels included in the area.

### [Supplementary Note K68]

The path generation method according to any one of the Supplementary Notes K43 to K67, wherein
the path generation method determines whether or not the imaging apparatus should image the at least one object to acquire the plurality of image data, based on image data acquired by the imaging apparatus imaging the target object before the imaging apparatus images the at least one object a plurality of times to acquire the plurality of image data.

### [Supplementary Note K69]

The path generation method according to the Supplementary Note K55, wherein
the path generation method determines whether or not the imaging apparatus should image the at least one object a plurality of times to acquire the first image data group, based on the second image data acquired by the imaging apparatus imaging the target object at least once before the imaging apparatus images the at least one object a plurality of times to acquire the first image data group.

### [Supplementary Note K70]

The path generation method according to the Supplementary Note K69, wherein
the path generation method determines whether or not the imaging apparatus should image the at least one object a plurality of times to acquire the first image data group, based on a result of a matching processing based on a target object model that is a model of the target object and the second image data.

### [Supplementary Note K71]

The path generation method according to the Supplementary Note K69 or K70, wherein
the imaging apparatus includes a stereo camera including two monocular cameras,
the second image data is stereo image data, and
the imaging apparatus includes a stereo camera having two monocular cameras, and
the path generation method determines whether or not the imaging apparatus should image the at least one object a plurality of times to acquire the first image data group, based on a size of an area, in which a three-dimensional position cannot be calculated based on the stereo image data, of the target object..

### [Supplementary Note K72]

The path generation method according to any one of the Supplementary Notes K69 to K71, wherein
in a case where it is determined that the imaging apparatus should image the at least one object a plurality of times to acquire the first image data group, the path generation method generates the movement path based on the first image data group generated by the imaging apparatus imaging the at least one object a plurality of times, and the end effector model.

### [Supplementary Note K73]

The path generation method according to any one of the Supplementary Notes K69 to K72, wherein
the second image data is acquired by the imaging apparatus imaging the target object and the at least one object at least once, and
in a case where it is determined that the imaging apparatus is not to image the at least one object a plurality of times to acquire the first image data group, the path generation method generates the movement path based on the second image data and the end effector model.

### [Supplementary Note K74]

The path generation method according to any one of the Supplementary Notes K56 to K67, wherein
the path generation method generates a control signal for driving the robot so as to change the positional relationship in a case where it is determined that the positional relationship should be changed as a result of a determination whether or not the positional relationship should be changed.

### [Supplementary Note K75]

The path generation method according to the Supplementary Note K47, K60, or K63, wherein
the projection light is pattern light.

### [Supplementary Note K76]

The path generation method according to any one of the Supplementary Notes K43 to K75, wherein
the movement path is a path to a process target position at which the end effector performs the process on the target object.

### [Supplementary Note K77]

The path generation method according to any one of the Supplementary Notes K43 to K76, wherein
the at least one object includes an object that is a candidate on which the end effector performs the process.

### [Supplementary Note K78]

The path generation method according to any one of the Supplementary Notes K43 to K77, wherein
the imaging apparatus includes: a monocular camera; and a stereo camera having two monocular cameras that are different from the monocular camera.

### [Supplementary Note K79]

The path generation method according to any one of the Supplementary Notes K43 to K77, wherein
the imaging apparatus includes a stereo camera including two monocular cameras.

### [Supplementary Note K80]

The path generation method according to any one of the Supplementary Notes K43 to K79, wherein
the imaging apparatus is attached to the robot.

### [Supplementary Note K81]

The path generation method according to the Supplementary Note K80, wherein
the imaging apparatus moves due to a driving of the robot.

### [Supplementary Note K82]

The path generation method according to any one of the Supplementary Notes K43 to K79, wherein
the imaging apparatus is attached to a member different from the robot.

### [Supplementary Note K83]

The path generation method according to the Supplementary Note K82, wherein
the imaging apparatus does not move due to a driving of the robot.

### [Supplementary Note K84]

The path generation method according to any one of the Supplementary Notes K43 to K83, wherein
the path generation method generates a control signal for controlling the robot based on the generated movement path.

### [Supplementary Note K85]

A computer program that allows a computer to execute the path generation method according to any one of the Supplementary Notes K42 to K84.

### [Supplementary Note K86]

A recording medium on which the computer program according to the Supplementary Note K85 is recorded.

### [Supplementary Note K87]

An imaging system including:
the computing apparatus according to any one of the Supplementary Notes K1 to K42; and
the imaging apparatus.

### [Supplementary Note K88]

A robot system including:
the computing apparatus according to any one of the Supplementary Notes K1 to K42; and
the robot.

### [Supplementary Note K89]

The robot system according to the Supplementary Note K88 further including the end effector.

### [Supplementary Note L1]

A computing apparatus that generates a movement path of a movement point moving due to a driving of a robot to which an end effector for performing a process on a target object is attached, wherein
the computing apparatus generates the movement path based on a result of determining whether or not a positional relationship between an imaging apparatus and at least one of the target object and at least one object should be changed based on image data that is acquired by the imaging apparatus attached to the robot imaging at least one of the target object and the at least one object positioned around the target object.

### [Supplementary Note L2]

The computing apparatus according to the Supplementary Note L1, wherein
the at least one object is a plurality of objects positioned around the target object.

### [Supplementary Note L3]

The computing apparatus according to any one of the Supplementary Note L1 or L2, wherein
the computing apparatus determines whether or not the positional relationship should be changed based on brightness values of a plurality of pixels included in an image indicated by the image data.

### [Supplementary Note L4]

The computing apparatus according to the Supplementary Note L4, wherein
the computing apparatus determines whether or not the positional relationship should be changed based on brightness values of a plurality of pixels included in an area, which includes at least one of the target object and the at least one object, of the image.

### [Supplementary Note L5]

The computing apparatus according to the Supplementary Note L4, wherein
the computing apparatus determines whether or not the positional relationship should be changed based on the number of pixels, which have brightness values falling outside a threshold value, of the plurality of pixels included in the area.

### [Supplementary Note L6]

The computing apparatus according to the Supplementary Note L4 or L5, wherein
the computing apparatus determines whether or not the positional relationship should be changed based on the number of pixels, which have brightness values higher than a threshold value, of the plurality of pixels included in the area.

### [Supplementary Note L7]

The computing apparatus according to any one of the Supplementary Notes L1 to L6, wherein
the imaging apparatus includes a projection apparatus that is configured to emit projection light, and
the image data is acquired by the imaging apparatus imaging at least one of the target object and the at least one object on which the projection light is irradiated from the projection apparatus.

### [Supplementary Note L8]

The computing apparatus according to any one of the Supplementary Notes L1 to L7, wherein
the imaging apparatus includes a monocular camera, and
the image data is acquired by the monocular camera imaging at least one of the target object and the at least one object.

### [Supplementary Note L9]

The computing apparatus according to any one of the Supplementary Notes L1 to L8, wherein
the image data is first image data,
in a case where it is determined that the positional relationship should be changed as a result of a determination whether or not the positional relationship should be changed, the computing apparatus generates the movement path based on second image data, which is acquired by the imaging apparatus imaging at least one object positioned around the target object after the positional relationship is changed, and an end effector model that is a model of the end effector.

### [Supplementary Note L10]

The computing apparatus according to any one of the Supplementary Note L9, wherein
the computing apparatus:
determines whether or not the at least one object interferes with the end effector interfere based on at least one of a position and a pose of the target object, the second image data, and the end effector model that is the model of the end effector; and
generates the movement path based on a result of an interference determination.

### [Supplementary Note L11]

The computing apparatus according to any one of the Supplementary Note L10, wherein
at least one of the position and the pose of the target object is calculated based on third image data that is acquired by the imaging apparatus imaging the target object.

### [Supplementary Note L12]

The computing apparatus according to the Supplementary Note L11, wherein
the third image data is the second image data.

### [Supplementary Note L13]

The computing apparatus according to any one of the Supplementary Notes L1 to L12, wherein
the computing apparatus generates a control signal for driving the robot so as to change the positional relationship in a case where it is determined that the positional relationship should be changed as a result of a determination whether or not the positional relationship should be changed.

### [Supplementary Note L14]

The computing apparatus according to any one of the Supplementary Notes L1 to L13, wherein
the movement path is a path to a process target position at which the end effector performs the process on the target object.

### [Supplementary Note L15]

The computing apparatus according to any one of the Supplementary Notes L1 to L14, wherein
the at least one object includes an object that is a candidate on which the end effector performs the process.

### [Supplementary Note L16]

The computing apparatus according to any one of the Supplementary Notes L1 to L15, wherein
the imaging apparatus includes: a monocular camera; and a stereo camera having two monocular cameras that are different from the monocular camera.

### [Supplementary Note L17]

The computing apparatus according to any one of the Supplementary Notes L1 to L15, wherein
the imaging apparatus includes a stereo camera including two monocular cameras.

### [Supplementary Note L18]

The computing apparatus according to any one of the Supplementary Notes L1 to L17, wherein
the imaging apparatus moves due to a driving of the robot.

### [Supplementary Note L19]

The computing apparatus according to any one of the Supplementary Notes L1 to L18, wherein
the computing apparatus generates a control signal for controlling the robot based on the generated movement path.

### [Supplementary Note L20]

A path generation that generates a movement path of a movement point moving due to a driving of a robot to which an end effector for performing a process on a target object is attached, wherein
the path generation method includes:
determining, based on image data that is acquired by an imaging apparatus attached to the robot imaging at least one of the target object and at least one object positioned around the target object, whether or not a positional relationship between the imaging apparatus and at least one of the target object and the at least one object should be changed; and
generates the movement path based on a result of determining whether or not the positional relationship between the imaging apparatus and at least one of the target object and the at least one object should be changed.

### [Supplementary Note L21]

The path generation method according to the Supplementary Note L20, wherein
the at least one object is a plurality of objects positioned around the target object.

### [Supplementary Note L22]

The path generation method according to any one of the Supplementary Note L20 or L21, wherein
the path generation method includes determining whether or not the positional relationship should be changed based on brightness values of a plurality of pixels included in an image indicated by the image data.

### [Supplementary Note L23]

The path generation method according to the Supplementary Note L22, wherein
the path generation method includes determining whether or not the positional relationship should be changed based on brightness values of a plurality of pixels included in an area, which includes at least one of the target object and the at least one object, of the image.

### [Supplementary Note L24]

The path generation method according to the Supplementary Note L23, wherein
the path generation method includes determining whether or not the positional relationship should be changed based on the number of pixels, which have brightness values falling outside a threshold value, of the plurality of pixels included in the area.

### [Supplementary Note L25]

The path generation method according to the Supplementary Note L23 or L24, wherein
the path generation method includes determining whether or not the positional relationship should be changed based on the number of pixels, which have brightness values higher than a threshold value, of the plurality of pixels included in the area.

### [Supplementary Note L26]

The path generation method according to any one of the Supplementary Notes L20 to L25, wherein
the imaging apparatus includes a projection apparatus capable of irradiating the imaging apparatus includes a projection apparatus that is configured to emit projection light, and
the image data is acquired by the imaging apparatus imaging at least one of the target object and the at least one object on which the projection light is irradiated from the projection apparatus.

### [Supplementary Note L27]

The path generation method according to any one of the Supplementary Notes L20 to L26, wherein
the imaging apparatus includes a monocular camera, and
the image data is acquired by the monocular camera imaging at least one of the target object and the at least one object.

### [Supplementary Note L28]

The path generation method according to any one of the Supplementary Notes L20 to L27, wherein
the image data is first image data,
the computing apparatus includes generating the movement path based on second image data, which is acquired by the imaging apparatus imaging at least one object positioned around the target object after the positional relationship is changed, and an end effector model that is a model of the end effector in a case where it is determined that the positional relationship should be changed as a result of a determination whether or not the positional relationship should be changed.

### [Supplementary Note L29]

The path generation method according to any one of the Supplementary Note L28, wherein
the path generation method includes:
determining whether or not the at least one object interferes with the end effector interfere based on at least one of a position and a pose of the target object, the second image data, and the end effector model that is the model of the end effector; and
generating the movement path based on a result of an interference determination.

### [Supplementary Note L30]

The path generation method according to any one of the Supplementary Note L29, wherein
at least one of the position and the pose of the target object is calculated based on third image data that is acquired by the imaging apparatus imaging the target object.

### [Supplementary Note L31]

The path generation method according to the Supplementary Note L30, wherein
the third image data is the second image data.

### [Supplementary Note L32]

The path generation method according to any one of the Supplementary Notes L20 to L31, wherein
the path generation method includes generating a control signal for driving the robot so as to change the positional relationship in a case where it is determined that the positional relationship should be changed as a result of a determination whether or not the positional relationship should be changed.

### [Supplementary Note L33]

The path generation method according to any one of the Supplementary Notes L20 to L32, wherein
the movement path is a path to a process target position at which the end effector performs the process on the target object.

### [Supplementary Note L34]

The path generation method according to any one of the Supplementary Notes L20 to L33, wherein
the at least one object includes an object that is a candidate on which the end effector performs the process.

### [Supplementary Note L35]

The path generation method according to any one of the Supplementary Notes L20 to L33, wherein
the imaging apparatus includes: a monocular camera; and a stereo camera having two monocular cameras that are different from the monocular camera.

### [Supplementary Note L36]

The path generation method according to any one of the Supplementary Notes L20 to L33, wherein
the imaging apparatus includes a stereo camera including two monocular cameras.

### [Supplementary Note L37]

The path generation method according to any one of the Supplementary Notes L20 to L36, wherein
the imaging apparatus moves due to a driving of the robot.

### [Supplementary Note L38]

The path generation method according to any one of the Supplementary Notes L20 to L37, wherein
the path generation method generates a control signal for controlling the robot based on the generated movement path.

### [Supplementary Note L39]

A computer program that allows a computer to execute the path generation method according to any one of the Supplementary Notes L20 to L38.

### [Supplementary Note L40]

A recording medium on which the computer program according to the Supplementary Note L39 is recorded.

### [Supplementary Note L41]

An imaging system including:
the computing apparatus according to any one of the Supplementary Notes L1 to L19; and
the imaging apparatus.

### [Supplementary Note L42]

A robot system including:
the computing apparatus according to any one of the Supplementary Notes L1 to L19; and
the robot.

### [Supplementary Note L43]

The robot system according to the Supplementary Note L42 further including the end effector.

### [Supplementary Note M1]

A computing apparatus that is used to set a process target position of an object by an end effector that performs a process on the object, wherein
the computing apparatus sets a process target position of the object by a second end effector that is different from the first end effector based on the set process target position of the object by the first end effector and information related to a difference between a shape of the first end effector and a shape of the second end effector.

### [Supplementary Note M2]

A setting method that is used to set a process target position of an object by an end effector that performs a process on the object, wherein
the setting method includes:
setting the process target position of the object by a first end effector; and
setting a process target position of the object by a second end effector that is different from the first end effector based on information related to a difference between a shape of the first end effector and a shape of the second end effector.

### [Supplementary Note M3]

A computer program that allows a computer to execute the setting method according to the Supplementary Note M2.

### [Supplementary Note M4]

A recording medium on which the computer program according to the Supplementary Note M3 is recorded.

### [Supplementary Note N1]

A computing apparatus that is used to set a process target position of an object by an end effector that performs a process on the object, wherein
the computing apparatus sets a process target position of the object by the end effector based on the set process target position of a first object by the end effector and information related to a difference between a shape of the first object and a shape of a second object that is different from the first object.

### [Supplementary Note N2]

A setting method that is used to set a process target position of an object by an end effector that performs a process on the object, wherein
the setting method includes:
setting the process target position of a first object by the end effector; and
setting a process target position of a second object that is different from the first object by the end effector based on information related to a difference between a shape of the first object and a shape of the second object.

### [Supplementary Note N3]

A computer program that allows a computer to execute the setting method according to the Supplementary Note N2.

### [Supplementary Note N4]

A recording medium on which the computer program according to the Supplementary Note N3 is recorded.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a computing apparatus, a display method, a path generation method, a computer program, and a recording medium, which involve such changes, are also intended to be within the technical scope of the present invention.

### Description of Reference Codes

- SYS: robot system
- 1: robot
- 12: robot arm
- 13: robot control apparatus
- 2: imaging apparatus
- 21, 22: camera
- 23: projection apparatus
- 3: control apparatus
- 31: computing apparatus
- 312: calibration unit
- 314: process position pose setting unit
- 315: path generation unit
- 316: robot control unit
- 317: display signal generation unit
- 318: display signal output unit
- 35: display apparatus
- 4: end effector
- OBJ: object
- W: workpiece
- T: placing apparatus
- IMG_2D, IMG_3D: image data
- WSD: three-dimensional position data
- EM: end effector model
- RM: robot model
- SM: surrounding object model
- OM: object model
- TCP: tool center point
- MBP: movement base point
- MP: movement point

## Claims

1. A computing apparatus comprising:
a signal generation unit that generates a display signal for displaying, on a display apparatus, a movement trajectory of a movement point moving due to a driving of a robot in a case where the robot is driven, without moving the robot; and
an output unit that outputs the display signal generated by the signal generation unit to the display apparatus.

2. The computing apparatus according to claim 1, wherein
the signal generation unit generates the display signal for displaying, on the display apparatus, the movement trajectory of the movement point moving due to the driving of the robot based on movement path information, without moving the robot based on the movement path information that is generated in advance.

3. The computing apparatus according to claim 1 or 2, wherein
the output unit outputs the display signal generated by the signal generation unit to the display apparatus in a state where the robot is stopped.

4. The computing apparatus according to claim 3, wherein
the state where the robot is stopped includes a state before the robot is driven.

5. The computing apparatus according to claim 3 or 4, wherein
the state where the robot is stopped includes a state where the robot is stopped after being driven.

6. The computing apparatus according to any one of claims 2 to 5, wherein
the computing apparatus further comprises a path generation unit that generates the movement path information without moving the robot.

7. The computing apparatus according to claim 6, wherein
the path generation unit generates the movement path information based on generation instruction information that is input through a display screen on the display apparatus and that is related to an instruction from a user for generating the movement path information.

8. The computing apparatus according to claim 7, wherein
the generation instruction information includes: position information of a movement start point; position information of a movement end point; and model information, and
the model information includes: robot model information indicating a robot model that is a three-dimensional model of the robot; end effector model information indicating an end effector model that is a three-dimensional model of an end effector attachable to the robot; and object model information indicating an object model that is a three-dimensional model of a first object positioned around the robot.

9. The computing apparatus according to any one of claims 1 to 8, wherein
the movement point is at least one point of the robot.

10. The computing apparatus according to any one of claims 1 to 9, wherein
an end effector is attachable to the robot, and
the movement point is at least one point of the end effector attached to the robot.

11. The computing apparatus according to any one of claims 1 to 10, wherein
the movement point is a tool center point of the robot.

12. The computing apparatus according to any one of claims 1 to 11, wherein
the display signal includes a signal for displaying, on the display apparatus, a robot model that is a three-dimensional model of the robot, an end effector model that is a three-dimensional model of an end effector attached to the robot, and an object model that is a three-dimensional model of a first object positioned around the robot, together with a display object indicating the movement path.

13. The computing apparatus according to any one of claims 1 to 12, wherein
the display signal includes a signal for displaying, on the display apparatus, a waypoint through which the movement point passes on the movement trajectory together with the movement trajectory.

14. The computing apparatus according to any one of claims 1 to 13, wherein
the display signal includes a signal for displaying, on the display apparatus, at least one of a movement start point of the movement point and a movement end point of the movement point together with the movement trajectory.

15. The computing apparatus according to any one of claims 1 to 14, wherein
the display signal includes a signal for displaying, on the display apparatus, interference information related to an interference between a second object and at least one of at least a part of the robot and at least a part of an end effector attached to the robot together with the movement trajectory.

16. The computing apparatus according to claim 15, wherein
the second object includes a first object positioned around the robot.

17. The computing apparatus according to claim 15 or 16, wherein
the second object includes at least another part of the robot.

18. The computing apparatus according to any one of claims 15 to 17, wherein
the interference information includes information whether or not at least one of at least a part of the robot and at least a part of the end effector interferes with the second object.

19. The computing apparatus according to any one of claims 15 to 18, wherein
the interference information includes at least one information of information related to the second object that interferes with at least one of at least a part of the robot and at least a part of the end effector and information related to at least one of at least a part of the robot and at least a part of the end effector that interferes with the second object.

20. The computing apparatus according to claim 19, wherein
the information related to the second object includes information related to a position of the second object that interferes with at least one of at least a part of the robot and at least a part of the end effector, and
the information related to at least one of at least a part of the robot and at least a part of the end effector that interferes with the second object includes information related to a position of at least one of at least a part of the robot and at least a part of the end effector that interferes with the second object.

21. The computing apparatus according to any one of claims 15 to 20, wherein
the display signal includes a signal for displaying, on the display apparatus, a first model part and a second model part so that a display aspect of the first model part of at least one of a robot model, which is a three-dimensional model of the robot, and an end effector model, which is a three-dimensional model of the end effector, is different from a display aspect of the second model part, which is different from the first model part, of at least one of the robot model and the end effector model, the first model part corresponds to at least one of a part of the robot and a part of the end effector that interferes with the second object.

22. The computing apparatus according to any one of claims 15 to 21, wherein
the display signal includes a signal for displaying, on the display apparatus, a third model part and a fourth model part so that a display aspect of the third model part of an object model that is a three-dimensional model of a first object positioned around the robot, is different from a display aspect of the fourth model part, which is different from the third model part, of the object model, the third model part corresponds to a part of the first object that interferes with at least one of the robot and the end effector.

23. The computing apparatus according to any one of claims 15 to 22, wherein
the second object includes at least another part of the robot, and
the display signal includes a signal for displaying, on the display apparatus, a fifth model part and a sixth model part so that a display aspect of the fifth model part of at least one of a robot model, which is a three-dimensional model of the robot, and an end effector model, which is a three-dimensional model of the end effector, is different from a display aspect of the sixth model part, which is different from the fifth model part, of at least one of the robot model and the end effector model, the fifth model part corresponds to the at least another part of the robot and at least one of a part of the robot and a part of the end effector that interferes with the at least another part of the robot.

24. The computing apparatus according to any one of claims 21 to 23, wherein
the display aspect includes a display color.

25. The computing apparatus according to any one of claims 15 to 24, wherein
the computing apparatus further comprises a path generation unit that determines, based on a robot model that is a three-dimensional model of the robot, an end effector model that is a three-dimensional model of the end effector, and an object model that is a three-dimensional model of a first object positioned around the robot, whether or not at least a part of the second object interferes with at least one of at least a part of the robot and at least a part of the end effector moving in accordance with the movement trajectory, and
the signal generation unit generates the signal for displaying, on the display apparatus, the interference information based on a determination result by the path generation unit.

26. The computing apparatus according to any one of claims 15 to 25, wherein
the computing apparatus further comprises a path generation unit that determines, based on a robot model that is a three-dimensional model of the robot, an end effector model that is a three-dimensional model of the end effector, and an object model that is a three-dimensional model of a first object positioned around the robot, whether or not at least a part of the second object interferes with at least one of at least a part of the robot and at least a part of the end effector moving along a movement path indicated by movement path information that is generated in advance, and
the signal generation unit generates the signal for displaying, on the display apparatus, the interference information based on a determination result by the path generation unit.

27. The computing apparatus according to any one of claims 15 to 26, wherein
the interference includes a state in which the second object is in contact with at least one of at least a part of the robot and at least a part of the end effector or a state in which a distance between the second object and at least one of at least a part of the robot and at least a part of the end effector attached to the robot is equal to or shorter than a predetermined value.

28. The computing apparatus according to any one of claims 6 to 27, wherein
the path generation unit changes the movement path information based on change instruction information that is input through a display screen on the display apparatus and that is related to an instruction from a user for changing the movement path information.

29. The computing apparatus according to claim 28, wherein
the change instruction information includes at least one information of information related to an instruction for changing a position of the movement start point, information related to an instruction for changing a position of the movement end point, and information related to an instruction for changing a position of a waypoint through which the movement point passes on the movement trajectory.

30. The computing apparatus according to claim 28 or 29, wherein
the change instruction information includes position pose change information related to a change of at least one of a position and a pose of a model, and
the position pose information includes at least one information of information related to a change of at least one of a position and a pose of a robot model that is a three-dimensional model of the robot, information related to a change of at least one of a position and a pose of an end effector model that is a three-dimensional model of an end effector attachable to the robot, and information related to a change of at least one of a position and a pose of an object model that is a three-dimensional model of a first object positioned around the robot.

31. The computing apparatus according to any one of claims 28 to 30, wherein
the change instruction information includes information related to a change of a type of a model, and
the information related to the change of the type of the model includes at least one information of information related to a change of a type of a robot model that is a three-dimensional model of the robot, information related to a change of a type of an end effector model that is a three-dimensional model of an end effector attachable to the robot, and information related to a change of a type of an object model that is a three-dimensional model of a first object positioned around the robot.

32. The computing apparatus according to any one of claims 1 to 31 further comprising a control unit that generates a robot control signal for controlling the robot based on movement path information, which is generated in advance, after the display apparatus displays the movement trajectory based on the display signal, wherein
the robot moves based on the robot control signal.

33. The computing apparatus according to any one of claims 1 to 32, wherein
the signal generation unit generates the display signal for displaying, on the display apparatus, the movement trajectory of the movement point moving due to the driving of the robot based on movement path information, without moving the robot based on the movement path information that is generated in advance, and
a path indicated by the movement path information and a path indicated by the movement trajectory is the same path.

34. A computing apparatus that generates a movement path of a movement point moving due to a driving of a robot to which an end effector for performing a process on a target object is attached, wherein
the computing apparatus generates a second movement path of the movement point moving due to the driving of the robot to which a second end effector is attached as the end effector based on a first movement path of the movement point moving due to the driving of the robot to which a first end effector is attached as the end effector and a three-dimensional model of the second end effector that is different from the first end effector.

35. The computing apparatus according to claim 34, wherein
the computing apparatus generates the second movement path based on a three-dimensional model of the robot, a three-dimensional model of a surrounding object positioned around the robot, and the three-dimensional model of the second end effector.

36. The computing apparatus according to claim 34, wherein
the computing apparatus generates the second movement path based on a three-dimensional model of the first end effector, the first movement path, and the three-dimensional model of the second end effector.

37. The computing apparatus according to claim 36, wherein
the computing apparatus generates the second movement path based on a three-dimensional model of the robot, a three-dimensional model of a surrounding object positioned around the robot, the three-dimensional model of the first end effector, the first movement path, and the three-dimensional model of the second end effector.

38. The computing apparatus according to any one of claims 34 to 37, wherein
in a case where it is estimated that the second end effector, which moves in accordance with a first part that is at least a part of the first movement path, interferes with at least one of the robot and a surrounding object positioned around the robot, the computing apparatus modifies the first part to generate the second movement path including the modified first part.

39. The computing apparatus according to any one of claims 34 to 38, wherein
in a case where it is estimated that the second end effector, which moves in accordance with a second part that is at least a part of the first movement path, does not interfere with at least one of the robot and a surrounding object positioned around the robot, the computing apparatus does not modify the second part to generates the second movement path including the unmodified second part.

40. The computing apparatus according to any one of claims 34 to 39, wherein
the computing apparatus generates the second movement path after the end effector attached to the robot is replaced from the first end effector to the second end effector in a period during which the first end effector attached to the robot moves in accordance with the first movement path.

41. The computing apparatus according to claim 40, wherein
the computing apparatus modifies at least a part of a third part of the first movement path along which the movement point moving due to a movement of the first end effector has not yet moved to generate the second movement path including the modified third part after the end effector attached to the robot is replaced from the first end effector to the second end effector.

42. The computing apparatus according to claim 40 or 41, wherein
the computing apparatus generates the second movement path without modifying at least a part of a fourth part of the first movement path along which the movement point moving due to a movement of the first end effector has already moved after the end effector attached to the robot is replaced from the first end effector to the second end effector.

43. The computing apparatus according to any one of claims 34 to 42, wherein
the computing apparatus generates the second movement path based on the first movement path and the three-dimensional model of the second end effector after the first end effector finishes moving in accordance with the first movement path and then the end effector attached to the robot is replaced from the first end effector to the second end effector.

44. The computing apparatus according to any one of claims 34 to 43, wherein
the computing apparatus generates the second movement path based on the first movement path and the three-dimensional model of the second end effector before the end effector attached to the robot is replaced from the first end effector to the second end effector.

45. The computing apparatus according to any one of claims 34 to 44, wherein
the computing apparatus generates the second movement path based on the first movement path and the three-dimensional model of the second end effector before the first end effector starts moving.

46. The computing apparatus according to any one of claims 34 to 45, wherein
the computing apparatus generates the first movement path based on a three-dimensional model of the first end effector, a three-dimensional model of the robot, and a three-dimensional model of a surrounding object positioned around the robot.

47. A computing apparatus that is used to set a process target position of an object by an end effector that performs a process on an object, wherein
the computing apparatus comprises:
a signal generation unit that generates a display signal for a display on a display apparatus so that at least one of an object model, which is a three-dimensional model of the object, and an end effector model, which is a three-dimensional model of the end effector, moves and / or rotates based on instruction information related to an instruction from a user on a display screen including the object model and the end effector model in order to set the process target position; and
an output unit that outputs the display signal generated by the signal generation unit to the display apparatus, and
the signal generation unit generates the display signal for the display on the display apparatus so that at least one of the object model and the end effector model moves along at least both a first axis and a second axis that intersects the first axis and / or at least one of the object model and the end effector model rotates around at least both a rotational axis along a fourth axis and a rotational axis along a fifth axis that intersects the fourth axis based on the instruction information.

48. The computing apparatus according to claim 47, wherein
the signal generation unit generates the display signal for the display on the display apparatus so that at least one of the object model and the end effector model moves along at least an inclination direction that is inclined with respect to both the first and second axes and / or at least one of the object model and the end effector model rotates around at least a rotational axis along an inclination direction that is inclined with respect to both the fourth and fifth axes based on the instruction information.

49. The computing apparatus according to claim 47 or 48, wherein
the signal generation unit generates the display signal for the display on the display apparatus so that at least one of the object model and the end effector model moves along all of the first axis, the second axis, and a third axis that intersects the first and second axes and / or at least one of the object model and the end effector model rotates around all of the rotational axis along the fourth axis, the rotational axis along the fifth axis, and a rotational axis along a sixth axis that intersects the fourth and fifth axes based on the instruction information.

50. The computing apparatus according to claim 49, wherein
the signal generation unit generates the display signal for the display on the display apparatus so that at least one of the object model and the end effector model moves along at least an inclination direction that is inclined with respect to all of the first to third axes and / or at least one of the object model and the end effector model rotates around at least a rotational axis along an inclination direction that is inclined with respect to all of the fourth to sixth axes based on the instruction information.

51. The computing apparatus according to any one of claims 47 to 50, wherein
the instruction information includes: first instruction information for moving at least one of the object model and the end effector model along at least both the first and second axes and / or rotating at least one of the object model and the end effector model around at least both the rotational axis along the fourth axis and the rotational axis along the fifth axis; and second instruction information for moving at least one of the object model and the end effector model along one of the first and second axes and / or rotating at least one of the object model and the end effector model around one of the rotational axis along the fourth axis and the rotational axis along the fifth axis;
the signal generation unit generates, as the display signal, a first display signal for the display on the display apparatus so that at least one of the object model and the end effector model moves along at least both the first and second axes and / or at least one of the object model and the end effector model rotates around at least both the rotational axis along the fourth axis and the rotational axis along the fifth axis based on the first instruction information,
the output unit outputs the first display signal to the display apparatus,
the signal generation unit generates, as the display signal, a second display signal for the display on the display apparatus so that at least one of the object model and the end effector model moves along one of the first and second axes and / or at least one of the object model and the end effector model rotates around one of the rotational axis along the fourth axis and the rotational axis along the fifth axis based on the second instruction information after the first display signal is output to the display apparatus, and
the output unit outputs the second display signal to the display apparatus.

52. The computing apparatus according to claim 51, wherein
the first instruction information includes information related to the instruction from the user for moving at least one of the object model and the end effector model by a first movement distance and / or rotating at least one of the object model and the end effector model by a first rotational amount, and
the second instruction information includes information related to the instruction from the user for moving at least one of the object model and the end effector model by a second movement distance that is shorter than the first movement distance and / or rotating at least one of the object model and the end effector model by a second rotational amount that is smaller than first rotational amount.

53. The computing apparatus according to any one of claims 47 to 52 further comprising a setting unit that sets the process target position of the object by the end effector based on a positional relationship between the object model and the end effector model after at least one of the object model and the end effector model moves and / or rotates based on the instruction information.

54. The computing apparatus according to claim 53, wherein
the end effector is a first end effector, and
the setting unit sets a process target position of the object by a second end effector that is different from the first end effector based on the set process target position of the object by the first end effector and information related to a difference between a shape of the first end effector and a shape of the second end effector.

55. The computing apparatus according to claim 53 or 54, wherein
the object is a first object, and
the setting unit sets a process target position of a second object that is different from the first object by the end effector based on the set process target position of the first object by the end effector and information related to a difference between a shape of the first object and a shape of the second object.

56. The computing apparatus according to any one of claims 53 to 55, wherein
the end effector includes a holding apparatus that holds the object, and
the setting unit sets, as the process target position, a holding target position of the object by the holding apparatus.

57. A computing apparatus that is used for a calibration of an imaging apparatus attached to a robot, wherein
the computing apparatus comprises:
a signal generation unit that generates a display signal for displaying, on a display apparatus, information related to an accuracy of the calibration of the imaging apparatus that is generated based on image data generated by the imaging apparatus attached to the robot imaging a reference member; and
an output unit that outputs the display signal generated by the signal generation unit to the display apparatus.

58. The computing apparatus according to claim 57, wherein
the information related to the accuracy of the calibration include information related to an accuracy of a transformation from one coordinate system of a robot coordinate system, which is a coordinate system of the robot, and an imaging coordinate system, which is a coordinate system of the imaging apparatus, to the other one coordinate system.

59. The computing apparatus according to claim 57 or 58, wherein
the imaging apparatus generates a plurality of image data by imaging the reference member in each of different positional relationships between the reference member and the imaging apparatus, and
the signal generation unit generates the display signal for displaying, on the display apparatus, the information related to the accuracy of the calibration that is generated based on the plurality of image data.

60. The computing apparatus according to any one of claims 57 to 59, wherein
the display signal includes a signal for displaying, on the display apparatus, an image indicated by the image data together with the information related to the accuracy of the calibration.

61. The computing apparatus according to any one of claims 57 to 60, wherein
each of the plurality of image data are generated at different times, respectively,
the signal generation unit generates the display signal for displaying, on the display apparatus, the information related to the accuracy of the calibration that is generated based on at least one image data, which is generated prior to the image data generated at a predetermined time, of the plurality of image data, and
the output unit outputs the display signal to the display apparatus before the predetermined time.

62. The computing apparatus according to any one of claims 57 to 61 further comprising a computing unit that generates the information related to the accuracy of the calibration based on image data generated by the imaging apparatus attached to the robot imaging the reference member.

63. The computing apparatus according to claim 62, wherein
the imaging apparatus generates a plurality of image data by imaging the reference member in each of different positional relationships between the reference member and the imaging apparatus, and
the computing unit performs a first calibration, which is the calibration based on at least one first image data of the plurality of image data, and a second calibration, which is the calibration based on at least one second image data of the plurality of image data that is different from the at least one first image data, and generates the information related to the accuracy of the calibration based on a result of the first calibration and a result of the second calibration.

64. The computing apparatus according to claim 63, wherein
the computing unit calculates, as a calibration error, an error between the result of the first calibration and the result of the second calibration, and generates the information related to the accuracy of the calibration based on the calculated calibration error.

65. The computing apparatus according to claim 64, wherein
the computing unit:
performs a unit calibration including the first and second calibration a plurality of times while changing the at least one first image data that is used for the first calibration and the at least one second image data that is used for the second calibration;
calculates a plurality of calibration errors that correspond to the plurality of unit calibrations, respectively, by calculating the calibration error each time the unit calibration is performed; and
generates the information related to the accuracy of the calibration based on the plurality of calibration errors.

66. The computing apparatus according to claim 65, wherein
the computing unit calculates an average value of the plurality of calibration errors as the information related to the accuracy of the calibration.

67. The computing apparatus according to claim 65 or 66, wherein
the computing unit excludes, from the plurality of image data, at least one image data of the at least one first image data and the at least one second image data that are used by the unit calibration used to calculate one calibration error, which is larger than a predetermined threshold value, of the plurality of calibration errors, and performs the unit calibration by using the plurality of image data from which the at least one image data of the at least one first image data and the at least one second image data has been excluded.

68. The computing apparatus according to any one of claims 63 to 67, wherein
the number of first image data used for the first calibration is smaller than the number of second image data used for the second calibration.

69. The computing apparatus according to any one of claims 63 to 68, wherein
the calibration is a processing for associating a robot coordinate system, which is a coordinate system of the robot, and an imaging coordinate system, which is a coordinate system of the imaging apparatus attached to the robot,
the computing unit:
performs each of the first and second calibrations to generates at least one of a translational transformation matrix, which transforms a position in one of the robot coordinate system and the imaging coordinate system to a position in the other one of the robot coordinate system and the imaging coordinate system, and a rotational transformation matrix, which transforms a pose in one of the robot coordinate system and the imaging coordinate system to a pose in the other one of the robot coordinate system and the imaging coordinate system; and
calculates, as the calibration error, at least one of a translational error, which is a difference between a transformed result by the translational transformation matrix calculated by the first calibration processing and a transformed result by the translational transformation matrix calculated by the second calibration processing, and a rotational error, which is a difference between a transformed result by the rotational transformation matrix calculated by the first calibration processing and a transformed result by the rotational transformation matrix calculated by the second calibration processing.

70. A computing apparatus that generates a movement path of a movement point moving due to a driving of a robot to which an end effector, which performs a process on a target object, and an imaging apparatus are attached, wherein
the computing apparatus:
generates a first partial path that is a part of the movement path based on a first end effector model, which is obtained by expanding at least a part of a three-dimensional model of the end effector, and a first surrounding object model, which is a three-dimensional model of a first surrounding object positioned around the robot; and
generates a second partial path that is at least another part of the movement path based on a second end effector model, in which an expansion amount of the three-dimensional model of the end effector is different from that of the first end effector model, a second surrounding object model, which is a three-dimensional model of a second surrounding object positioned around the robot, and an imaged result by the imaging apparatus.

71. The computing apparatus according to claim 70, wherein
the first end effector model is a model that is obtained by increasing a volume of at least a part of the three-dimensional model of the end effector, and
the second end effector model is a model in which an increased amount of the volume of at least a part of the three-dimensional model of the end effector is different from that of the first end effector model.

72. The computing apparatus according to claim 70 or 71, wherein
the computing apparatus generates the second partial path based on the second end effector model, the second surrounding object model, and target object image data that is the imaged result and that is acquired by the imaging apparatus imaging the target object.

73. The computing apparatus according to claim 72, wherein
the target object image data is acquired by the imaging apparatus imaging the target object during a relative movement of the imaging apparatus and the target object.

74. The computing apparatus according to claim 72 or 73, wherein
the target object image data is acquired by the imaging apparatus imaging the target object in a period during which the imaging apparatus moves in accordance with the generated first partial path.

75. The computing apparatus according to any one of claims 72 to 74, wherein
the computing apparatus generates the second partial path based on the second end effector model, the second surrounding object model, and the target object image data in a period during which the imaging apparatus moves in accordance with the generated first partial path.

76. The computing apparatus according to any one of claims 72 to 75, wherein
the computing apparatus:
calculates at least one of a position and a pose of the target object based on the target image data; and
generates the second partial path based on the second end effector model, the second surrounding object model, and at least one of the position and the pose of the target object.

77. The computing apparatus according to claim 76, wherein
the computing apparatus calculates at least one of the position and the pose of the target object by a matching processing based on the target image data and a target object model that is a three-dimensional model of the target object.

78. The computing apparatus according to claim 76 or 77, wherein
the computing apparatus generates the second partial path based on a target object model, which is a three-dimensional model of the target object at least one of a position and a pose of which is set based on at least one of the calculated position and pose of the target object, the second end effector model, and the second surrounding object model.

79. The computing apparatus according to any one of claims 70 to 78, wherein
the second partial path is a path to a process target position that is a position at which the end effector performs the process on the target object, and
an expansion amount of the second end effector model relative to the three-dimensional model of the end effector is smaller than an expansion amount of the first end effector model relative to the three-dimensional model of the end effector.

80. The computing apparatus according to any one of claims 70 to 79, wherein
the first partial path is a path from a movement start position of the end effector to a first access position at which the end effector is closer to the target object than the movement start position, and
the second partial path is a path from the first access position to a second access position at which the end effector is closer to the target object than the first access position.

81. The computing apparatus according to claim 80, wherein
the second access position is a process target position that is a position at which the end effector performs the process on the target object.

82. The computing apparatus according to claim 80, wherein
the movement path includes a third partial path that is at least a partial path of the movement path and that is different from the first partial path and the second partial path,
the third partial path is a path from the second access position to a process target position that is a position at which the end effector performs the process on the target object, and
the computing apparatus generates the third partial path based on the imaged result by the imaging apparatus.

83. The computing apparatus according to any one of claims 70 to 82, wherein
the second end effector model is a three-dimensional model of the end effector.

84. The computing apparatus according to any one of claims 70 to 83, wherein
the movement path is a path to a process target position that is a position at which the end effector performs the process on the target object,
the computing apparatus generates the movement path based on a path generation condition that is set for each partial path, and
the path generation condition includes an expansion amount of the first end effector model relative to the three-dimensional model of the end effector and an expansion amount of the second end effector model relative to the three-dimensional model of the end effector.

85. The computing apparatus according to claim 84, wherein
the path generation condition is input by a user through a display screen on a display apparatus.

86. The computing apparatus according to any one of claims 70 to 85:
generates the first partial path based on a result of an interference determination between the first end effector model and the first surrounding object model; and
generate the second partial path based on a result of an interference determination between the second end effector model and the second surrounding object model and the imaged result by the imaging apparatus.

87. The computing apparatus according to any one of claims 70 to 86, wherein
the computing apparatus:
generates at least a part of the first partial path before the end effector starts moving based on the first partial path, and
generates the second partial path after the end effector starts moving based on the first partial path.

88. The computing apparatus according to claim 87, wherein
the computing apparatus generates the first partial path before the end effector starts moving based on the first partial path, and

89. The computing apparatus according to any one of claims 70 to 88, wherein
the computing apparatus generates at least a part of the first partial path based on the first end effector model, the first surrounding object model, and the imaged result by the imaging apparatus.

90. The computing apparatus according to any one of claims 70 to 89, wherein
the computing apparatus:
calculates at least one of a position and a pose of the first surrounding object based on first surrounding object image data that is the imaged result and that is acquired by the imaging apparatus imaging the first surrounding object; and
generates the first partial path based on the first end effector model and the first surrounding object model at least one of a position and a pose of which is determined based on at least one of the calculated position and pose of the first surrounding object.

91. The computing apparatus according to any one of claims 70 to 87, wherein
the computing apparatus:
generates a part of the first partial path based on the first end effector model, the first surrounding object model, and image data that is the imaged result and that is acquired by imaging the first surrounding object before the end effector starts moving based on the first partial path, and
generates another part of the first partial path based on the first end effector model, the first surrounding object model, and image data that is the imaged result and that is acquired by the imaging apparatus imaging the first surrounding object after the end effector starts moving based on the first partial path.

92. The computing apparatus according to any one of claims 70 to 91, wherein
the computing apparatus generates the second partial path based on the second end effector model, the second surrounding object model, and second surrounding object image data that is the imaged result and that is acquired by the imaging apparatus imaging the second surrounding object.

93. The computing apparatus according to claim 92, wherein
the computing apparatus:
calculates at least one of a position and a pose of the second surrounding object based on the second surrounding object image data; and
generates the second partial path based on the second end effector model and the second surrounding object model at least one of a position and a pose of which is determined based on at least one of the calculated position and pose of the second surrounding object.

94. The computing apparatus according to any one of claims 72 to 78, wherein
a target object group including a plurality of target objects is positioned, and
the target object image data is acquired by the imaging apparatus imaging the target object group.

95. The computing apparatus according to claim 94, wherein
the computing apparatus:
determines one target object, on which the end effector performs the process, from the target object group based on the target object image data; and
generates the second partial path based on at least one of a position and a pose of the determined one target object, the second end effector model, and the second surrounding object model.

96. The computing apparatus according to claim 95, wherein
the computing apparatus determines the one target object based on the target object image data and a target object model that is a three-dimensional model of the target object.

97. The computing apparatus according to claim 95 or 96, wherein
the computing apparatus calculates at least one of a position and a pose of the one target object based on the target object image data and a target object model that is a three-dimensional model of the target object.

98. The computing apparatus according to any one of claims 95 to 97, wherein
the computing apparatus generates the second partial path based on: a three-dimensional position of each of a plurality of points of at least one target object remaining in the target object group from which the one target object is excluded, or at least one of a position and a pose of the at least one target object; at least one of a position and a pose of the one target object; the second end effector model; and the second surrounding object model.

99. The computing apparatus according to any one of claims 95 to 98, wherein
the target object image data is first target object image data,
the computing apparatus:
based on second target object image data that is acquired as the imaged result by the imaging apparatus imaging the target object group or at least one target object remaining in the target object group from which the one target object is excluded, generates three-dimensional position data indicating a three-dimensional position of each of a plurality of points of each target object in the target object group or the at least one target object; and
generates the second partial path based on the generated three-dimensional position data, at least one of a position and a pose of the one target object, the second end effector model, and the second surrounding object model.

100. The computing apparatus according to claim 99, wherein
the second target object image data includes a plurality of image data that are acquired by the imaging apparatus imaging the target object group or at least one target object remaining in the target object group from which the one target object is excluded a plurality of times.

101. The computing apparatus according to claim 99 or 100, wherein
the imaging apparatus includes a projection apparatus that is configured to emit projection light, and
the second target object image data includes: image data that is acquired by the imaging apparatus imaging, at least once, the target object group or at least one target object remaining in the target object group from which the one target object is excluded on which the projection light having a first light intensity is irradiated from the projection apparatus; and image data that is acquired by the imaging apparatus imaging, at least once, the target object group or at least one target object remaining in the target object group from which the one target object is excluded on which the projection light having a second light intensity, which is different from the first light intensity, is irradiated from the projection apparatus.

102. The computing apparatus according to claim 100 or 101, wherein
the computing apparatus generates the three-dimensional position data by combining three-dimensional position information, which is calculated based on each image data included in the second target object image data, of each of the plurality of points of each target object of the target object group or the at least one target object.

103. The computing apparatus according to any one of claims 99 to 102, wherein
the computing apparatus generates the second partial path based on: a result of an interference determination, which is based on the second end effector model, the three-dimensional position data, and the second surrounding object model; and at least one of a position and a pose of the one target object.

104. The computing apparatus according to any one of claims 99 to 103, wherein
the second surrounding object includes the at least one target object remaining in the target object group from which the one target object is excluded,
the second surrounding object model is a model based on the three-dimensional position data, and
the computing apparatus generates the second partial path based on a result of an interference determination between the second end effector model and the second surrounding object model, and at least one of a position and a pose of the one target object.

105. The computing apparatus according to claim 104, wherein
the model based on the three-dimensional position data is a point cloud model or a mesh model.

106. The computing apparatus according to any one of claims 99 to 105, wherein
the first target object image data is the second target object image data.

107. The computing apparatus according to any one of claims 95 to 98, wherein
the computing apparatus generates the second partial path based on at least one of a position and a pose of at least one target object remaining in the target object group from which the one target object is excluded, at least one of a position and a pose of the one target object, the second end effector model, and the second surrounding object model.

108. The computing apparatus according to claim 107, wherein
the second surrounding object includes the at least one target object remaining in the target object group from which the one target object is excluded,
the second surrounding object model includes a target object model, which is a three-dimensional model of the target object at least one of a position and a pose of which is determined based on at least one of the calculated position and pose of the at least one target object, and
the computing apparatus generates the second partial path based on a result of an interference determination between the second end effector model and the second surrounding object model, and at least one of a position and a pose of the one target object.

109. The computing apparatus according to any one of claims 94 to 108, wherein
the second surrounding object model includes a three-dimensional model of a container that is the second surrounding object and that contains at least the target object group.

110. The computing apparatus according to claim 109, wherein
each target object of the target object group is contained in the container at an irregular position and with an irregular pose.

111. The computing apparatus according to claim 109 or 110, wherein
the first partial path is a path from an outside of the container to an inside of the container.

112. The computing apparatus according to any one of claims 70 to 111, wherein
the first surrounding object and the second surrounding object are at least partially common.

113. The computing apparatus according to any one of claims 70 to 112, wherein
the imaging apparatus includes at least one of a monocular camera and a stereo camera including two monocular cameras that are different from the monocular camera.

114. The computing apparatus according to any one of claims 70 to 113, wherein
the process is a holding process, and
the end effector is a holding apparatus that is configured to hold the target object.

115. The computing apparatus according to any one of claims 70 to 114, wherein
the computing apparatus generates a control signal for controlling the robot based on the generated first partial path and second partial path.

116. A robot control method that controls the robot based on the first partial path and the second partial path generated by the computing apparatus according to any one of claims 70 to 115.

117. A process method that performs the process on the target object with the end effector based on the first partial path and the second partial path generated by the computing apparatus according to any one of claims 70 to 115.

118. The computing apparatus according to any one of claims 70 to 115, wherein
the process is a holding process,
the end effector is configured to hold the target object,
the movement path includes a fourth partial path that is at least partial path of the movement path and that is different from the first partial path, and
the computing apparatus generates the fourth partial path based on a third end effector model, which is based on a three-dimensional model of the end effector, a target object model, which is based on a three-dimensional model of the target object positioned relative to the third end effector model, and a third surrounding object model, which is a three-dimensional model of a third surrounding object positioned around the robot.

119. The computing apparatus according to claim 118, wherein
the target object model is a model based on the three-dimensional model of the target object that is positioned relative to the third end effector model at at least one of predetermined position and pose.

120. The computing apparatus according to claim 118 or 119, wherein
the computing apparatus generates the fourth partial path based on a result of an interference determination between the third end effector model and the target object model, and the third surrounding object model.

121. The computing apparatus according to any one of claims 118 to 120, wherein
the fourth partial path is a path from a holding target position, at which an end effector performs the holding process on the target object, to a separated position that is separated from the holding target position.

122. The computing apparatus according to claim 121, wherein
the computing apparatus generates the fourth partial path before the end effector holds the target object.

123. The computing apparatus according to claim 121 or 122, wherein
the second partial path is a path to the holding target position at which the end effector performs the holding process on the target object, and
the computing apparatus generates the fourth partial path before starting a movement based on the second partial path or during the movement based on the second partial path.

124. The computing apparatus according to any one of claims 121 to 123, wherein
the computing apparatus generates the fourth partial path based on the third end effector model, the target object model, the third surrounding object model, and the imaged result by the imaging apparatus.

125. The computing apparatus according to any one of claims 121 to 124, wherein
a target object group, which includes a plurality of target objects including the target object on which the holding process is performed, is positioned,
the imaged result by the imaging apparatus is target object image data that is acquired by the imaging apparatus imaging the target object group,
the computing apparatus:
generates the second partial path based on the target object image data, the second end effector model, and the second surrounding object model; and
generates the fourth partial path based on the target object image data, the third end effector model, the target object model, and the third surrounding object model.

126. The computing apparatus according to any one of claims 118 to 125, wherein
the third end effector model is the second end effector model, and
the third surrounding object model is the second surrounding object model.

127. A computing apparatus that generates a movement path of a movement point moving due to a driving of a robot to which an end effector, which is configured to hold a target object, is attached, wherein
the computing apparatus generates at least a part of the movement path based on an end effector model, which is based on a three-dimensional model of the end effector, a target object model, which is based on a three-dimensional model of the target object held by the end effector, and a surrounding object model, which is a three-dimensional model of a surrounding object positioned around the robot.

128. The computing apparatus according to claim 127, wherein
the computing apparatus generates at least a part of the movement path based on a result of an interference determination between the end effector model and the target object model, and the surrounding object model.

129. The computing apparatus according to claim 127 or 128, wherein
the target object model is a model that is obtained by expanding at least a part of the three-dimensional model of the target object held by the end effector.

130. The computing apparatus according to any one of claims 127 to 129, wherein
the computing apparatus generates the target object model in which an expansion amount of at least a part of the three-dimensional model of the target object held by the end effector is changed, and generates at least a part of the movement path based on a result of an interference determination between the target object model whose expansion amount is changed and the surrounding object model.

131. The computing apparatus according to claim 120 or 130, wherein
the computing apparatus generates at least a part of the movement path based on a path generation condition that is set for at least a part of the movement path, and
the path generation condition includes an expansion amount of the three-dimensional model of the target object held by the end effector.

132. The computing apparatus according to any one of claims 127 to 131, wherein
the target object model is a model that is obtained by increasing a volume of at least a part of the three-dimensional model of the target object held by the end effector.

133. The computing apparatus according to any one of claims 127 to 132, wherein
the target object model is the three-dimensional model of the target object held by the end effector.

134. The computing apparatus according to any one of claims 127 to 133, wherein
the end effector model is a model that is obtained by expanding at least a part of the three-dimensional model of the end effector.

135. The computing apparatus according to any one of claims 127 to 134, wherein
the computing apparatus generates the end effector model in which an expansion amount of at least a part of the three-dimensional model of the end effector is changed, and generates at least a part of the movement path based on a result of an interference determination between the end effector model whose expansion amount is changed and the surrounding object model.

136. The computing apparatus according to claim 134 or 135, wherein
the computing apparatus generates at least a part of the movement path based on a path generation condition that is set for at least a part of the movement path, and
the path generation condition includes an expansion amount of the three-dimensional model of the end effector.

137. The computing apparatus according to any one of claims 127 to 136, wherein
the end effector model is a model that is obtained by increasing a volume of at least a part of the three-dimensional model of the end effector.

138. The computing apparatus according to any one of claims 127 to 137, wherein
the end effector model is the three-dimensional model of the end effector.

139. The computing apparatus according to claim 131 or 136, wherein
the path generation condition is input by a user through a display screen on a display apparatus.

140. The computing apparatus according to any one of claims 127 to 139, wherein
an imaging apparatus is attached to the robot, and
the computing apparatus generates at least a part of the movement path based on the end effector model, the target object model, the surrounding object model, and an imaged result by the imaging apparatus.

141. The computing apparatus according to any one of claims 127 to 140, wherein
at least a part of the movement path includes a path from a holding target position, at which the end effector performs a holding process on the target object, to a separated position that is separated from the holding process position.

142. The computing apparatus according to claim 141, wherein
an imaging apparatus is attached to the robot,
a target object group including a plurality of target objects is positioned in a space including the holding target position,
one target object of the target object group is held by the end effector, and
the computing apparatus generates at least a part of the movement path based on target object image data, which is acquired by the imaging apparatus imaging the target object group or at least one target object remaining in the target object group from which the one target object is excluded, the end effector model, the target object model, and the surrounding object model.

143. The computing apparatus according to claim 142, wherein
the computing apparatus generates three-dimensional position data indicating a three-dimensional position of each of a plurality of points of each target object in the target object group or a three-dimensional position of each of a plurality of points of the at least one target object, based on the target object image data, and
the computing apparatus generates at least a part of the movement path based on the three-dimensional position data, the end effector model, the target object model, and the surrounding object model.

144. The computing apparatus according to claim 143, wherein
the surrounding object includes the at least one target object remaining in the target object group from which the one target object is excluded,
the surrounding object model includes a model based on the three-dimensional position data, and
the computing apparatus generates at least a part of the movement path based on a result of an interference determination between the end effector model and the target object model, and the surrounding object model.

145. The computing apparatus according to claim 144, wherein
the model based on the three-dimensional position data is a point cloud model or a mesh model.

146. The computing apparatus according to claim 142, wherein
the computing apparatus:
calculates at least one of a position and a pose of the at least one target object based on the target object image data; and
generates at least a part of the movement path based on at least one of the calculated position and pose of the at least one target object, and on the end effector model, the target object model, and the surrounding object model.

147. The computing apparatus according to claim 146, wherein
the surrounding object includes the at least one target object remaining in the target object group from which the one target object is excluded,
the surrounding object model includes the three-dimensional model of the target object at least one of a position and a pose of which is set based on at least one of the position and the pose of the at least one target object, and
the computing apparatus generates at least a part of the movement path based on a result of an interference determination between the end effector model and the target object model, and the surrounding object model.

148. The computing apparatus according to any one of claims 142 to 147, wherein
the target object image data is acquired by the imaging apparatus imaging the target object group or at least one target object remaining in the target object group from which the one target object is excluded, before the target object is held by the end effector.

149. The computing apparatus according to any one of claims 142 to 148, wherein
the surrounding object includes a container containing the target object group, and
the surrounding object model includes a three-dimensional model of the container.

150. The computing apparatus according to claim 149, wherein
each of the plurality of target objects included in the target object group is in the container at an irregular position and with an irregular pose.

151. The computing apparatus according to any one of claims 127 to 150, wherein
at least a part of the movement path includes a path to a releasing target position at which the target object held by the end effector is released from the end effector.

152. The computing apparatus according to any one of claims 127 to 151, wherein
the computing apparatus generates a control signal for controlling the robot based on at least the generated part of the movement path.

153. The computing apparatus according to any one of claims 127 to 152, wherein
the end effector model is a first end effector model,
the target object model is a first target object model,
the surrounding object model is a first surrounding object model,
at least a part of the movement path is a first partial path,
the movement path includes the first partial path, which is a part of the movement path, and a second partial path, which is at least another part of the movement path, and
the computing apparatus:
generates the first partial path based on the first end effector model, the first target object model, and the first surrounding object model; and
generates the second partial path based on a second end effector model, which is based on a three-dimensional model of the end effector, a second target object model, which is based on a three-dimensional model of the target object held by the end effector, and a second surrounding object model, which is a three-dimensional model of a surrounding object positioned around the robot.

154. The computing apparatus according to claim 153, wherein
at least one of the first target object model and the second target object model is a model that is obtained by expanding at least a part of the three-dimensional model of the target object held by the end effector.

155. The computing apparatus according to claim 153 or 154, wherein
the first target object model and the second target object model are different in an expansion amount relative to the three-dimensional model of the target object held by the end effector.

156. The computing apparatus according to any one of claims 153 to 155, wherein
the computing apparatus generates the first partial path and the second partial path based on a path generation condition that is set for each partial path, and
the path generation condition includes an expansion amount of the first target object model relative to the three-dimensional model of the target object held by the end effector and an expansion amount of the second target object model relative to the three-dimensional model of the target object held by the end effector.

157. The computing apparatus according to any one of claims 153 to 156, wherein
the first target object model and the second target object model are different in an increased amount of a volume relative to the three-dimensional model of the target object held by the end effector.

158. The computing apparatus according to any one of claims 153 to 157, wherein
at least one of the first target object model and the second target object model is the three-dimensional model of the target object held by the end effector.

159. The computing apparatus according to any one of claims 153 to 158, wherein
at least one of the first end effector model and the second end effector model is a model that is obtained by expanding at least a part of the three-dimensional model of the end effector.

160. The computing apparatus according to any one of claims 153 to 159, wherein
the first end effector model and the second end effector model are different in an expansion amount relative to the three-dimensional model of the end effector.

161. The computing apparatus according to any one of claims 153 to 160, wherein
the computing apparatus generates the first partial path and the second partial path based on a path generation condition that is set for each partial path, and
the path generation condition includes an expansion amount of the first end effector model relative to the three-dimensional model of the end effector and an expansion amount of the second end effector model relative to the three-dimensional model of the end effector.

162. The computing apparatus according to any one of claims 153 to 161, wherein
the first end effector model and the second end effector model are different in an increased amount of a volume relative to the three-dimensional model of the end effector.

163. The computing apparatus according to any one of claims 153 to 162, wherein
at least one of the first end effector model and the second end effector model is the three-dimensional model of the end effector.

164. The computing apparatus according to any one of claims 153 to 163, wherein
the first partial path is a path from a holding target position, at which the end effector performs a holding process on the target object, to a first separated position that is separated from the holding target position, and
the second partial path is a path from the first separated position to a second separated position that is further separated from the holding target position.

165. The computing apparatus according to any one of claims 153 to 164, wherein
an imaging apparatus is attached to the robot,
a target object group including a plurality of target objects is positioned in a space including the holding target position,
one target object of the target object group is held by the end effector, and
the computing apparatus:
generates the first partial path based on target object image data, which is acquired by the imaging apparatus imaging the target object group or at least one target object remaining in the target object group from which the one target object is excluded, the first end effector model, the first target object model, and the first surrounding object model; and
generates the second partial path based on the second end effector model, the second target object model, and the second surrounding object model.

166. The computing apparatus according to claim 165, wherein
the second target object model is a model that is obtained by expanding at least a part of the three-dimensional model of the target object held by the end effector, and
the first target object model and the second target object model are different in an expansion amount relative to the three-dimensional model of the target object held by the end effector.

167. The computing apparatus according to claim 165 or 166, wherein
the first target object model is the three-dimensional model of the target object held by the end effector.

168. The computing apparatus according to any one of claims 165 to 167, wherein
the second end effector model is a model that is obtained by expanding at least a part of the three-dimensional model of the end effector, and
the first end effector model and the second end effector model are different in an expansion amount relative to the three-dimensional model of the end effector.

169. The computing apparatus according to any one of claims 167 to 168, wherein
the first end effector model is the three-dimensional model of the end effector.

170. The computing apparatus according to any one of claims 165 to 169, wherein
the target object image data is acquired by the imaging apparatus imaging the target object group or at least one target object remaining in the target object group from which the one target object is excluded, before the target object is held by the end effector.

171. The computing apparatus according to any one of claims 165 to 170, wherein
the computing apparatus generates three-dimensional position data indicating a three-dimensional position of each of a plurality of points of each target object in the target object group or a three-dimensional position of each of a plurality of points of the at least one target object, based on the target object image data, and
the computing apparatus generates the first partial path based on the three-dimensional position data, the first end effector model, the first target object model, and the first surrounding object model.

172. The computing apparatus according to claim 171, wherein
the first surrounding object includes the at least one target object remaining in the target object group from which the one target object is excluded,
the first surrounding object model includes a model based on the three-dimensional position data, and
the computing apparatus generates the first partial path based on a result of an interference determination between the first end effector model and the first target object model, and the first surrounding object model.

173. The computing apparatus according to claim 172, wherein
the model based on the three-dimensional position data is a point cloud model or a mesh model.

174. The computing apparatus according to any one of claims 165 to 170, wherein
the computing apparatus:
calculates a position and a pose of the at least one target object based on the target object image data; and
generates the first partial path based on the calculated position and pose of the at least one target object, the end effector model, the target object model, and the surrounding object model.

175. The computing apparatus according to claim 174, wherein
the first surrounding object includes the at least one target object remaining in the target object group from which the one target object is excluded,
the first surrounding object model includes the three-dimensional model of the target object at least one of a position and a pose of which is set based on the position and the pose of the at least one target object, and
the computing apparatus generates the first partial path based on a result of an interference determination between the first end effector model and the first target object model, and the first surrounding object model.

176. The computing apparatus according to any one of claims 165 to 175, wherein
at least one of the first surrounding object and the second surrounding object includes a container containing the target object group, and
at least one of the first surrounding object model and the second surrounding object model includes a three-dimensional model of the container.

177. The computing apparatus according to claim 176, wherein
each of the plurality of target objects included in the target object group is in the container at an irregular position and with an irregular pose.

178. The computing apparatus according to claim 176 or 177, wherein
the second partial path is a path from an inside of the container to an outside of the container.

179. The computing apparatus according to any one of claims 153 to 178, wherein
the second separated position of the second partial path is a releasing target position at which the target object held by the end effector is released from the end effector.

180. The computing apparatus according to any one of claims 152 to 179, wherein
the computing apparatus outputs a control signal for controlling the robot based on the generated first partial path and second partial path.

181. A computing apparatus that controls a robot to which an end effector, which performs a process on a target object, and an imaging apparatus are attached, wherein
the computing apparatus:
generates a partial model, which is a three-dimensional model of at least a part of the target object, from an original model, which is a three-dimensional model of the target object;
calculates at least one of a position and a pose of the target object by performing a matching processing based on the partial model and target object image data that is acquired by the imaging apparatus imaging the target object; and
generates the control signal based on a calculated result of at least one of the position and the pose of the target object.

182. The computing apparatus according to claim 181, wherein
the computing apparatus generates the partial model by extracting a part of the original model as the partial model from the original model.

183. The computing apparatus according to claim 181 or 182, wherein
the computing apparatus generates the partial model from the original model based on model generation information related to an instruction from a user for generating the partial model.

184. The computing apparatus according to claim 183, wherein
the model generation information includes information related to an instruction for designating a part of the original model as a model part that should be included in the partial model.

185. The computing apparatus according to claim 183 or 184, wherein
the model generation information includes information related to an instruction for designating a part of the original model as a model part that should not be included in the partial model.

186. The computing apparatus according to any one of claims 181 to 185, wherein
the computing apparatus generates a plurality of partial models that are different from each other.

187. The computing apparatus according to claim 186, wherein
the plurality of partial models include one partial model, which is a three-dimensional model of a first part of the target object, and another partial model, which is a three-dimensional model of a second part of the target object that is at least partially different from the first part.

188. The computing apparatus according to claim 186 or 187, wherein
the computing apparatus generates the plurality of partial models to each of which a priority is assigned.

189. The computing apparatus according to claim 188, wherein
the priority includes a priority to use the partial model for the matching processing.

190. The computing apparatus according to claim 188 or 189, wherein
the computing apparatus assigns the priority to each of the plurality of partial models based on priority information related to an instruction from a user for assigning the priority to each of the plurality of partial models.

191. The computing apparatus according to any one of claims 188 to 190, wherein
the computing apparatus calculates at least one of the position and the pose of the target object by performing the matching processing using a first partial model, to which a first priority is assigned, of the plurality of partial models, and a matching processing using a second partial model, to which a second priority different from the first priority is assigned, of the plurality of partial models.

192. The computing apparatus according to any one of claims 188 to 191, wherein,
the computing apparatus calculates at least one of the position and the pose of the target object by performing the matching processing using the second partial model, to which the second priority different from the first priority is assigned, of the plurality of partial models in a case where a result of the matching processing using the first partial model, to which the first priority is assigned, of the plurality of partial models is unsuccessful.

193. The computing apparatus according to claim 191 or 192, wherein
the computing apparatus performs the matching processing using the second partial model in a case where the number of target objects whose result of the matching processing using the first partial model is successful is smaller than an allowable lower limit value.

194. The computing apparatus according to any one of claims 191 to 193, wherein
the computing apparatus does not perform the matching processing using the second partial model in a case where the number of target objects whose result of the matching processing using the first partial model is successful is not smaller than an allowable lower limit value.

195. The computing apparatus according to any one of claims 191 to 194, wherein
a plurality of target objects are positioned, and
the computing apparatus selects one target object on which the end effector should perform the predetermined process from the plurality of target objects, based on the result of the matching processing using the first partial model and the result of the matching processing using the second partial model, and generates the control signal based on the calculated result of at least one of the position and the pose of the one target object.

196. The computing apparatus according to any one of claims 191 to 195, wherein
the computing apparatus selects, as one target object on which the end effector should perform the predetermined process, one target object of the target object whose result of the matching processing using the first partial model is successful and the target object whose result of the matching processing using the second partial model is successful and whose result of the matching processing using the first partial model is unsuccessful, and generates the control signal based on the calculated result of at least one of the position and the pose of the one target object.

197. The computing apparatus according to any one of claims 191 to 196, wherein
the first priority is higher than the second priority.

198. The computing apparatus according to any one of claims 181 to 197, wherein
the original model is the three-dimensional model of the target object.

199. The computing apparatus according to any one of claims 181 to 198, wherein
the end effector is attached to the robot.

200. The computing apparatus according to claim 199, wherein
the control signal is a signal for controlling the robot so that the end effector approaches the target object.

201. The computing apparatus according to any one of claims 181 to 200, wherein
the imaging apparatus is attached to the robot.

202. A display method comprising:
generating a display signal for displaying, on a display apparatus, a movement trajectory of a movement point moving due to a driving of a robot in a case where the robot is driven, without moving the robot; and
outputting the generated display signal to the display apparatus.

203. A computer program that allows a computer to execute the display method according to claim 202.

204. A recording medium on which the computer program according to claim 203 is recorded.

205. A path generation method that generates a movement path of a movement point moving due to a driving of a robot to which an end effector for performing a process on a target object is attached, wherein
the path generation method comprises generating a second movement path of the movement point moving due to the driving of the robot to which a second end effector is attached as the end effector based on a first movement path of the movement point moving due to the driving of the robot to which a first end effector is attached as the end effector and a three-dimensional model of the second end effector that is different from the first end effector.

206. A computer program that allows a computer to execute the path generation method according to claim 205.

207. A recording medium on which the computer program according to claim 206 is recorded.

208. A display method that is used to set a process target position of an object by an end effector that performs a process on an object, wherein
the display method comprises:
generating a display signal for a display on a display apparatus so that at least one of an object model, which is a three-dimensional model of the object, and an end effector model, which is a three-dimensional model of the end effector, moves and / or rotates based on instruction information related to an instruction from a user on a display screen including the object model and the end effector model in order to set the process target position; and
outputting the generated display signal to the display apparatus, and
the generating includes generating the display signal for the display on the display apparatus so that at least one of the object model and the end effector model moves along at least both a first axis and a second axis that intersects the first axis and / or at least one of the object model and the end effector model rotates around at least both a rotational axis along a fourth axis and a rotational axis along a fifth axis that intersects the fourth axis based on the instruction information.

209. A computer program that allows a computer to execute the display method according to claim 208.

210. A recording medium on which the computer program according to claim 209 is recorded.

211. A display method that is used for a calibration of an imaging apparatus attached to a robot, wherein
the display method comprises:
generating a display signal for displaying, on a display apparatus, information related to an accuracy of the calibration of the imaging apparatus that is generated based on image data generated by the imaging apparatus attached to the robot imaging a reference member; and
outputting the generated display signal to the display apparatus.

212. A computer program that allows a computer to execute the display method according to claim 211.

213. A recording medium on which the computer program according to claim 212 is recorded.

214. A path generation method that generates a movement path of a movement point moving due to a driving of a robot to which an end effector, which performs a process on a target object, and an imaging apparatus are attached, wherein
the path generation method comprises:
generating a first partial path that is a part of the movement path based on a first end effector model, which is obtained by expanding at least a part of a three-dimensional model of the end effector, and a first surrounding object model, which is a three-dimensional model of a first surrounding object positioned around the robot; and
generating a second partial path that is at least another part of the movement path based on a second end effector model, in which an expansion amount of the three-dimensional model of the end effector is different from that of the first end effector model, a second surrounding object model, which is a three-dimensional model of a second surrounding object positioned around the robot, and an imaged result by the imaging apparatus.

215. A computer program that allows a computer to execute the path generation method according to claim 214.

216. A recording medium on which the computer program according to claim 215 is recorded.

217. A robot control method that controls the robot based on at least a part of the movement path generated by the computing apparatus according to any one of claims 127 to 180.

218. A transportation method that transports the target object held by the end effector based on at least a part of the movement path generated by the computing apparatus according to any one of claims 127 to 180.

219. A robot control method that controls the robot based on the first partial path and the second partial path generated by the computing apparatus according to any one of claims 153 to 180.

220. A transportation method that transports the target object held by the end effector based on the first partial path and the second partial path generated by the computing apparatus according to any one of claims 153 to 180.

221. A robot control method that controls a robot to which an end effector, which performs a process on a target object, and an imaging apparatus are attached, wherein
the robot control method comprises:
generating a partial model, which is a three-dimensional model of at least a part of the target object, from an original model, which is a three-dimensional model of the target object;
calculating at least one of a position and a pose of the target object by performing a matching processing based on the partial model and target object image data that is acquired by the imaging apparatus imaging the target object; and
generating the control signal based on a calculated result of at least one of the position and the pose of the target object.

222. A computer program that allows a computer to execute the robot control method according to claim 221.

223. A recording medium on which the computer program according to claim 222 is recorded.
